(19) Europäisches Patentamt
European Patent Office
Office européen des brevets

(11) EP 4 617 343 A1

(12) EUROPEAN PATENT APPLICATION

(43) Date of publication:
**17.09.2025 Bulletin 2025/38**

(21) Application number: **25162255.1**

(22) Date of filing: **07.03.2025**

(51) International Patent Classification (IPC):
***C09K 19/34*** *(2006.01)* ***C09K 19/06*** *(2006.01)*
***C09K 19/04*** *(2006.01)* ***C09K 19/30*** *(2006.01)*
***C09K 19/12*** *(2006.01)*

(52) Cooperative Patent Classification (CPC):
**C09K 19/3402;** C09K 19/062; C09K 19/3066; C09K 19/3098; C09K 19/3491; C09K 2019/0448; C09K 2019/123; C09K 2019/3004; C09K 2019/3009; C09K 2019/301; C09K 2019/3016; C09K 2019/3027; C09K 2019/3036; C09K 2019/3422

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.03.2024 PCT/CN2024/080938**

(71) Applicant: **Merck Patent GmbH**
**64293 Darmstadt (DE)**

(72) Inventors:
- **Laut, Sven Christian**
  **64293 Darmstadt (DE)**
- **Lee, Hee-Kyu**
  **SHANGHAI, 201206 (CN)**
- **Yang, Minghui**
  **SHANGHAI, 201206 (CN)**
- **Engel, Martin**
  **64293 Darmstadt (DE)**

(74) Representative: **Merck Patent Association**
**Merck Patent GmbH**
**64271 Darmstadt (DE)**

# (54) LIQUID-CRYSTAL MEDIUM

(57) The present invention relates to a liquid-crystal (LC) medium or liquid-crystal (LC) materials based on a mixture of polar compounds, to its use for optical, electro-optical and electronic purposes, in particular in LC displays, especially in LC displays of the vertically aligned mode and/or the fringe-field switching mode, to an LC display of the vertically aligned mode and/or the fringe-field switching mode comprising the LC medium, especially an energy-efficient LC display and to a process of manufacturing the LC display.

EP 4 617 343 A1

## Description

The present invention relates to a liquid-crystal (LC) medium or LC material based on a mixture of polar compounds, to its use for optical, electro-optical and electronic purposes, in particular in LC displays, especially in LC displays of the vertically aligned mode and/or the fringe-field switching mode, to an LC display of the vertically aligned mode and/or the fringe-field switching mode comprising the LC medium, especially an energy-saving LC display, to a process of preparing the LC medium, and to a process of manufacturing the LC display.

One of the liquid-crystal display (LCD) modes used at present is the TN ("twisted nematic") mode. However, TN LCDs have the disadvantage of a strong viewing-angle dependence of the contrast.

In addition, so-called VA ("vertically aligned") displays are known which have a broader viewing angle. The LC cell of a VA display contains a layer of an LC medium between two transparent electrodes, where the LC medium usually has a negative dielectric anisotropy. In the switched-off state, the molecules of the LC layer are aligned perpendicular to the electrode surfaces (homeotropically) or have a tilted homeotropic alignment. On application of an electrical voltage to the two electrodes, a realignment of the LC molecules parallel to the electrode surfaces takes place.

Also known are so-called IPS ("in-plane switching") displays, which contain an LC layer between two substrates, where the two electrodes are arranged on only one of the two substrates and preferably have intermeshed, comb-shaped structures. On application of a voltage to the electrodes, an electric field which has a significant component parallel to the LC layer is thereby generated between them. This causes realignment of the LC molecules in the layer plane.

Furthermore, so-called FFS ("fringe-field switching") displays have been reported (see, inter alia, S.H. Jung et al., Jpn. J. Appl. Phys., Volume 43, No. 3, 2004, 1028), which contain two electrodes on the same substrate, one of which is structured in a comb-shaped manner and the other is unstructured. A strong, so-called "fringe field" is thereby generated, i.e., a strong electric field close to the edge of the electrodes, and, throughout the cell, an electric field which has both a strong vertical component and also a strong horizontal component. FFS displays have a low viewing-angle dependence of the contrast. FFS displays usually contain an LC medium with positive dielectric anisotropy, and an alignment layer, usually of polyimide, which provides planar alignment to the molecules of the LC medium.

FFS displays can be operated as active-matrix or passive-matrix displays. In the case of active-matrix displays, individual pixels are usually addressed by integrated, non-linear active elements, such as, for example, transistors (for example thin-film transistors ("TFTs")), while in the case of passive-matrix displays, individual pixels are usually addressed by the multiplex method, as known from the prior art.

Furthermore, FFS displays have been disclosed (see S.H. Lee et al., Appl. Phys. Lett. 73(20), 1998, 2882-2883 and S.H. Lee et al., Liquid Crystals 39(9), 2012, 1141-1148), which have similar electrode design and layer thickness as FFS displays but comprise a layer of an LC medium with negative dielectric anisotropy instead of an LC medium with positive dielectric anisotropy. The LC medium with negative dielectric anisotropy shows a more favorable director orientation that has less tilt and more twist orientation compared to the LC medium with positive dielectric anisotropy, as a result of which these displays have a higher transmission. The displays further comprise an alignment layer, preferably of polyimide provided on at least one of the substrates that is in contact with the LC medium and induces planar alignment of the LC molecules of the LC medium. These displays are also known as "Ultra Brightness FFS (UB-FFS)" mode displays. These displays require an LC medium with high reliability.

In VA displays of the more recent type, uniform alignment of the LC molecules is restricted to a plurality of relatively small domains within the LC cell. Disclinations may exist between these domains, also known as tilt domains. VA displays having tilt domains have, compared with conventional VA displays, a greater viewing-angle independence of the contrast and the grey shades. In addition, displays of this type are simpler to produce since additional treatment of the electrode surface for uniform alignment of the molecules in the switched-on state, such as, for example, by rubbing, is no longer necessary. Instead, the preferential direction of the tilt or pretilt angle is controlled by a special design of the electrodes.

In so-called MVA ("multidomain vertical alignment") displays, this is usually achieved by the electrodes having protrusions which cause a local pretilt. As a consequence, the LC molecules are aligned parallel to the electrode surfaces in different directions in different, defined regions of the cell on application of a voltage. "Controlled" switching is thereby achieved, and the formation of interfering disclination lines is prevented. Although this arrangement improves the viewing angle of the display, it results, however, in a reduction in its transparency to light. A further development of MVA uses protrusions on only one electrode side, while the opposite electrode has slits, which improves the transparency to light. The slitted electrodes generate an inhomogeneous electric field in the LC cell on application of a voltage, meaning that controlled switching is still achieved. For further improvement of the transparency to light, the separations between the slits and protrusions can be increased, but this in turn results in a lengthening of the response times. In so-called PVA ("patterned VA") displays, protrusions are rendered completely superfluous in that both electrodes are structured by means of slits on the opposite sides, which results in increased contrast and improved transparency to light but is technologically difficult and makes the display more sensitive to mechanical influences ("tapping", etc.). For many applications, such as, for example, monitors and especially TV screens, however, a shortening of the response times and

an improvement in the contrast and luminance (transmission) of the display are demanded.

A further development are displays of the so-called PS ("polymer sustained") or PSA ("polymer sustained alignment") type, for which the term "polymer stabilised" is also occasionally used. In these, a small amount (for example 0.3% by weight, typically < 1% by weight) of one or more polymerisable, compound(s), preferably polymerisable monomeric compound(s), is added to the LC medium and, after filling the LC medium into the display, is polymerised, or crosslinked in situ, usually by UV photopolymerisation, optionally while a voltage is applied to the electrodes of the display. The polymerisation is carried out at a temperature where the LC medium exhibits a liquid crystal phase, usually at room temperature. The addition of polymerisable mesogenic or liquid-crystalline compounds, also known as reactive mesogens or "RMs", to the LC mixture has proven particularly suitable.

In the meantime, the PS(A) principle is being used in various conventional LC display modes. Thus, for example, PS-VA, PS-OCB, PS-IPS, PS-FFS, PS-UB-FFS and PS-TN displays are known. The polymerisation of the RMs preferably takes place with an applied voltage in the case of PS-VA and PS-OCB displays, and with or without, preferably without, an applied voltage in the case of PS-IPS displays. As can be demonstrated in test cells, the PS(A) method results in a pretilt in the cell. In the case of PS-VA displays, the pretilt has a positive effect on response times. For PS-VA displays, a standard MVA or PVA pixel and electrode layout can be used. In addition, however, it is also possible, for example, to manage with only one structured electrode side and no protrusions, which significantly simplifies production and at the same time results in very good contrast and in very good transparency to light.

PS-VA displays are described, for example, in EP 1 170 626 A2, US 6,861,107, US 7,169,449, US 2004/0191428 A1, US 2006/0066793 A1, and US 2006/0103804 A1.

In particular for monitor and especially TV applications, optimisation of the response times, but also of the contrast and luminance (thus also transmission) of the LC display continues to be demanded. The PSA method can provide significant advantages here. In particular in the case of PS-VA, PS-IPS and PS-FFS displays, a shortening of the response times, which correlate with a measurable pretilt in test cells, can be achieved without significant adverse effects on other parameters.

Another problem observed in prior art is that the use of conventional LC media in LC displays, including but not limited to displays of the PSA type, often leads to the occurrence of mura in the display, especially when the LC medium is filled in the display cell manufactured using the one drop filling (ODF) method. This phenomenon is also known as "ODF mura". It is therefore desirable to provide LC media which lead to reduced ODF mura.

One display trend is to achieve the fastest possible response time to have the best motion picture quality. In this respect, media with negative dielectric anisotropy have an intrinsic disadvantage compared to LC media with positive dielectric anisotropy. On the other hand, mixtures with negative dielectric anisotropy enable a higher transmittance in standard FFS cell layouts and therefore its use has a positive impact on the power consumption and the environment. There is a need in the art to achieve both, fast response time and higher transmittance. Especially for use in mobile devices there is great demand for displays with high transmission, which enable the use of less intensive backlight, which, therefore, leads to longer battery lifetime, hence, more sustainable products. Alternatively, displays with higher brightness can be achieved having improved contrast especially under ambient light. Also, the popularity of 8K and gaming monitors leads to an increased need for LC display panels having higher refresh rates and thus for LC media having faster response times.

Another important display trend is to achieve high contrast ratio. Contrast ratio is described by the ratio between the bright and the dark state of the display. In LCD especially in IPS/FFS technology the dark state is strongly impacted by the scattering parameter and has therefore a big impact on the contrast ratio. To improve the contrast ratio and to reduce the scattering parameter LC mixtures with high elastic constants are necessary. Here, current LC singles and LC mixtures are limited in achieving extremely high elastic constants.

Therefore, new materials need to be found to increase the contrast ratio of future displays even further.

There is thus still a great demand for VA, FFS or PSA displays, and LC media optionally comprising polymerisable compounds for use in VA, FFS or PSA displays, which do not show the drawbacks as described above, or only do so to a small extent, and have improved properties.

It is therefore an object of the present invention to provide improved LC media for use in FFS-, VA-, or IPS displays, which do not exhibit the disadvantages described above or only do so to a small extent and have improved properties. A further object of the invention is to provide FFS-, VA-, and IPS- displays with good transmission, high reliability, a VHR value especially after backlight exposure, a high specific resistance, a large working-temperature range, short response times even at low temperatures, a low threshold voltage, a multiplicity of grey levels, high contrast and a broad viewing angle, and reduced image sticking.

The contrast ratio is defined as the ratio of the luminance of the brightest shade (white) to that of the darkest shade (black) that the system is capable of producing, i.e., the transmittane (white level) to the scattering parameter (dark level). The contrast ratio can be significantly improved by the lower scattering parameter (high $K_{avg}$ and low $\Delta n$). Therefore, a LC mixture having high $K_{avg}$ and low $\Delta n$ is very effective to achieve a high contrast ratio display. A further object of the present invention is to provide LC mixtures with a very high clearing point, a favourably high average elastic constant $K_{avg}$ and

relatively low birefringence $\Delta n$, while still keeping a relatively low rotational viscosity $\gamma_1$.

It was found that one or more of these objects could be achieved by providing an LC medium as disclosed and claimed hereinafter.

Surprisingly, it has now been found that liquid crystalline media with a very high clearing point, a favourably high average elastic constant $K_{avg}$, a relatively low birefringence $\Delta n$, and a relatively low rotational viscosity $\gamma_1$ can be realized which do not exhibit the drawbacks of the materials of the prior art or at least do exhibit them to a significantly lesser degree by using liquid crystalline media comprising a compound of formula I.

The invention relates to a liquid crystal medium comprising the compound of the formula I

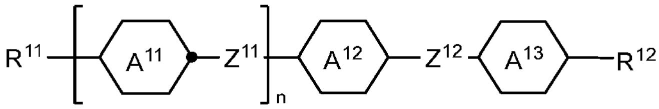 I

in which

$R^{11}$ and $R^{12}$ identically or differently, denote H, straight chain alkyl or alkoxy having 1 to 15 C atoms, straight chain alkenyl or alkenyloxy having 2 to 15 C atoms or branched alkyl, alkoxy, alkenyl, alkenyloxy each having 3 to 15 C atoms, where one or more $CH_2$ groups in these radicals may each be replaced, independently of one another, by

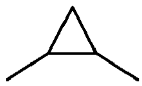,

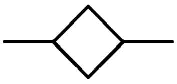, 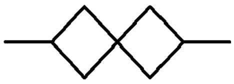, 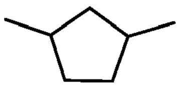, 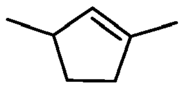, 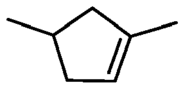,

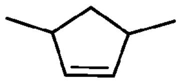

-CH=CH-, -C≡C-, $-CF_2O-$, $-OCF_2-$, -O-, -CO-O- or -O-CO- in such a way that O atoms are not linked directly to one another, and in which one or more H atoms may be replaced by halogen,

n denotes 0, 1, or 2, preferably 1,

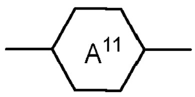, 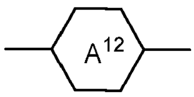, and 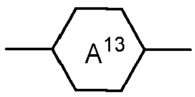

each independently denote a group selected from the following formulae:

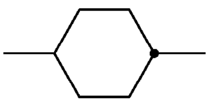, 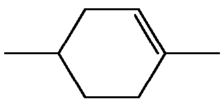, 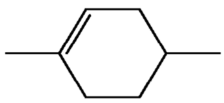, 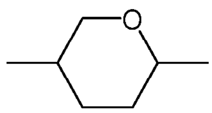,

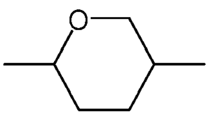, 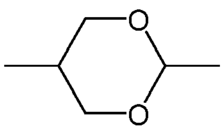, 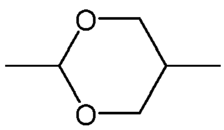, 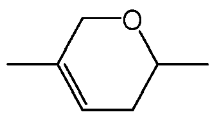,

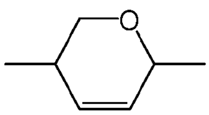

wherein at least one of

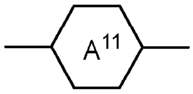, 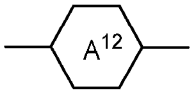, and 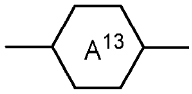

is

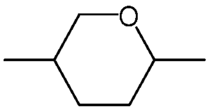, or 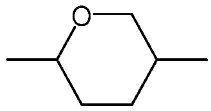,

or

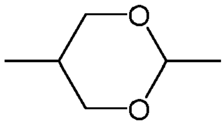, or 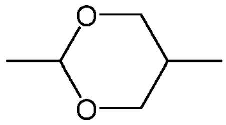,

$Z^{11}$ and $Z^{12}$ each independently denote a single bond, $-CH_2CH_2-$, $-CH_2-$, $-OCH_2-$, $-CH_2O-$, - O-, -CO-O-, -O-CO-, $-CF_2O-$, $-OCF_2-$, -CH=CH-, -CF=CF-, or -C≡C-,

in a case where n is 2, the two

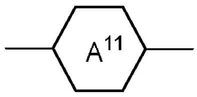

may be the same as or different from each other, and in a case where n is 2, the two $Z^{11}$ may be the same as or different from each other.

The invention further relates to an LC display comprising the liquid crystal medium as described above and below, in particular a VA, IPS, FFS, PS-VA, PS-IPS, PS-FFS, UB-FFS or $UV^2A$ display.

The invention furthermore relates to the use of the liquid crystal medium as described above and below in a VA, IPS, FFS, PS-VA, PS-IPS, PS-FFS, UB-FFS or $UV^2A$ display.

The invention furthermore relates to a process for preparing an LC medium as described above and below, comprising the steps of mixing one or more compounds of formula I with one or more compounds of formulae II, III and/or IIIA, and optionally with further LC compounds and/or additives.

The invention furthermore relates to a process for manufacturing an LC display as described above and below, comprising the steps of filling or otherwise providing an LC medium as described above and below between the substrates of the display.

The LC medium according to the present invention allow to achieve one or more of the following advantageous effects:

- a very high clearing point,
- a favourably high average elastic constant $K_{avg}$ that equals to $(K_1+K_2+K_3)/3$, which contributes to a low scattering parameter,
- a relatively low birefringence, which in combination with the high average elastic constant contribute to a high contrast ratio,
- a relatively low viscosity which enables fast response times,
- a low threshold voltage which is useful to reduce the driving voltage and enable energy-saving displays,
- enable an LC panel production process which is time- and cost-effective and energy saving.

The LC media according to the present invention show one or more of the following advantageous properties when used in LC displays:

- a very high clearing point,

- a high contrast ratio,
- high transmittance,
- a reduced rotational viscosity,
- fast response times,
- a low threshold voltage which is useful to enable energy-saving displays.

The compounds of the formula I are preferably selected from the compounds of the formulae I-1 to I-12

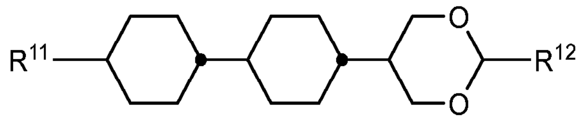

I-1

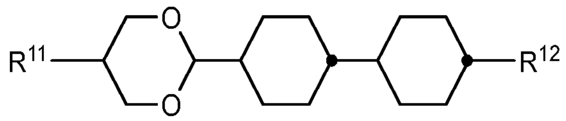

I-2

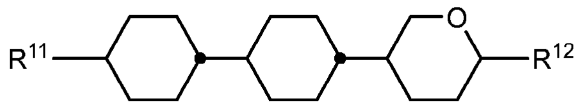

I-3

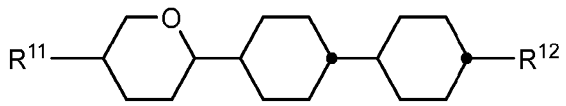

I-4

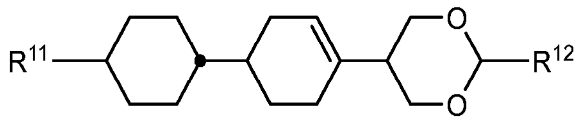

I-5

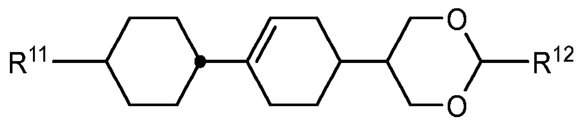

I-6

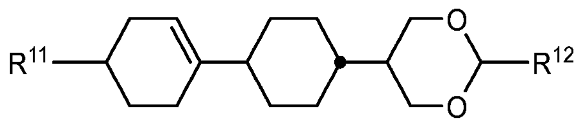

I-7

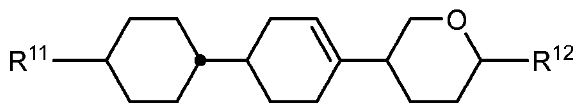

I-8

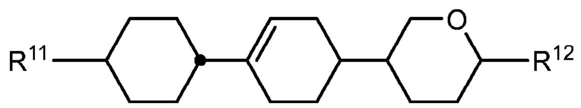

I-9

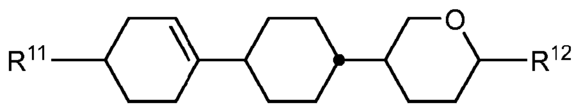

I-10

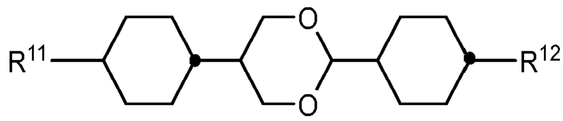

I-11

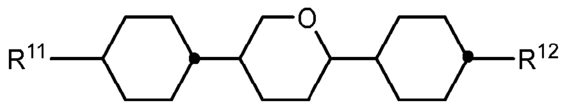

I-12

in which $R^{11}$ and $R^{12}$ have the meanings defined above for formula I and preferably denote straight chain alkyl having 1 to 7 C atoms, or straight chain alkenyl having 2 to 15 C atoms where one or more $CH_2$ groups in these radicals may each be replaced, independently of one another, by

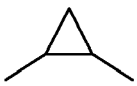 , 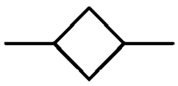 , 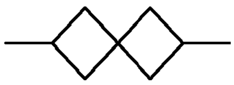 , 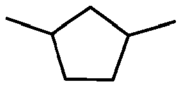 , 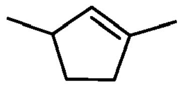 , 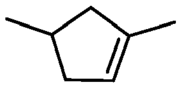 , or 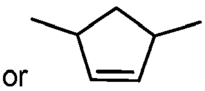 .

More preferably the medium according to the invention comprises one or more compounds of the formula I-1, very preferably selected from the compounds of the formulae I-1-1 to I-1-37

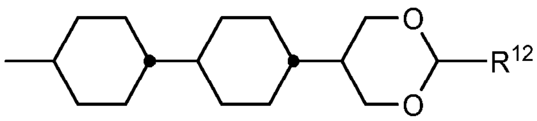

I-1-1

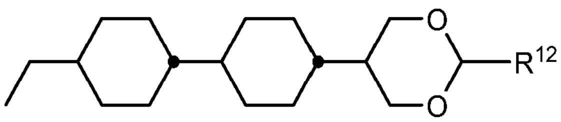

I-1-2

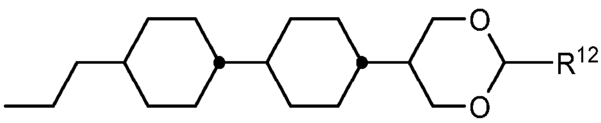

I-1-3

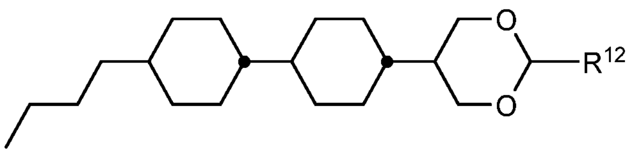

I-1-4

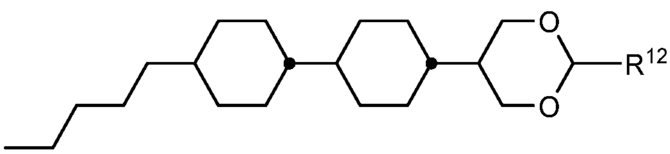

I-1-5

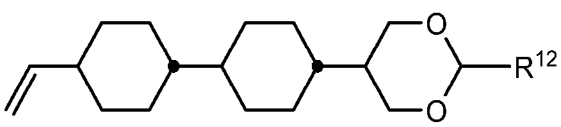

I-1-6

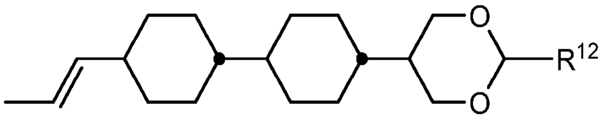
I-1-7

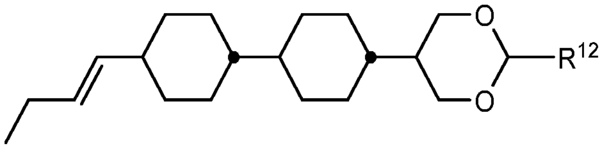
I-1-8

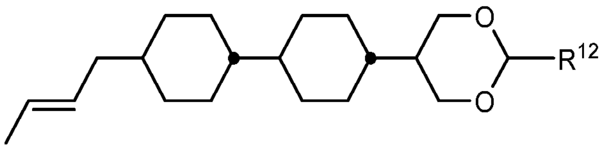
I-1-9

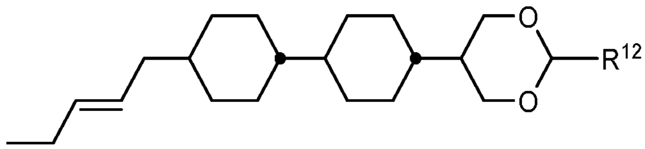
I-1-10

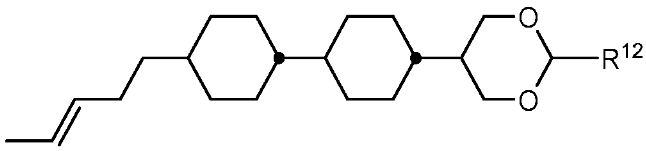
I-1-11

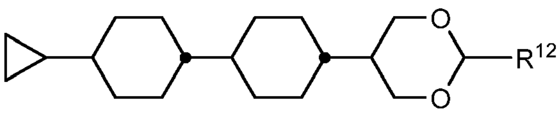
I-1-12

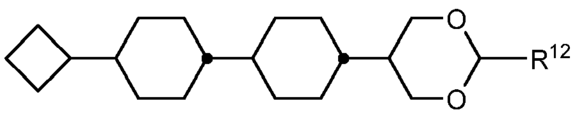
I-1-13

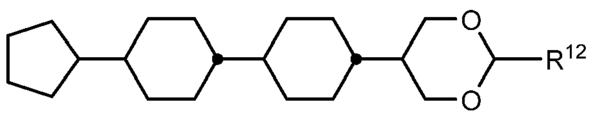
I-1-14

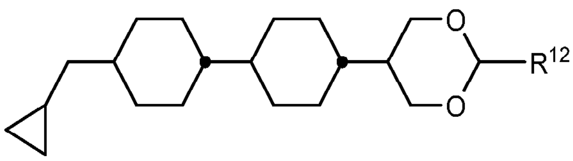
I-1-15

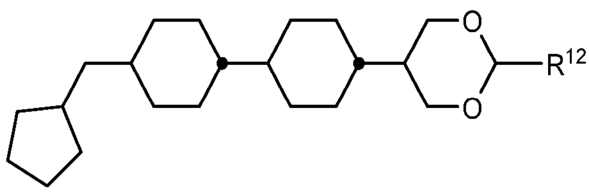
I-1-16

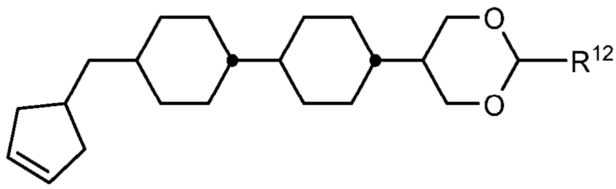

I-1-17

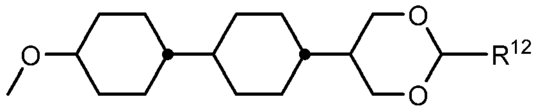

I-1-18

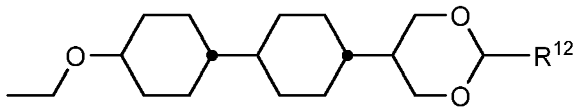

I-1-19

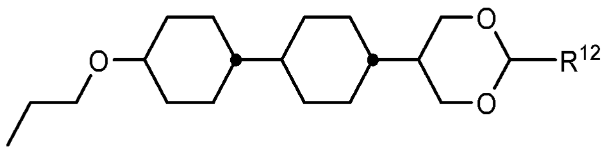

I-1-20

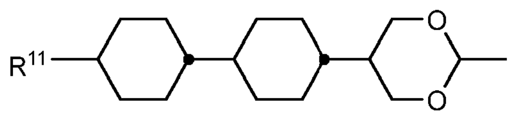

I-1-21

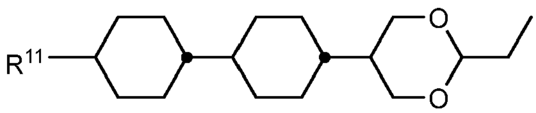

I-1-22

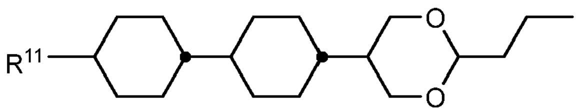

I-1-23

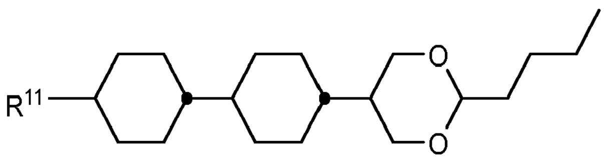

I-1-24

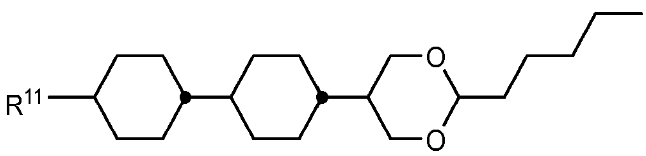

I-1-25

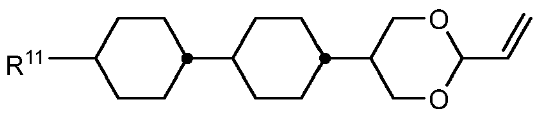

I-1-26

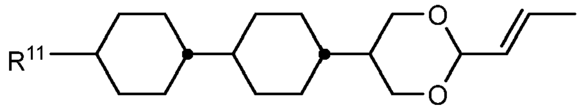

I-1-27

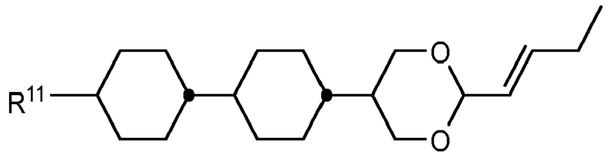

I-1-28

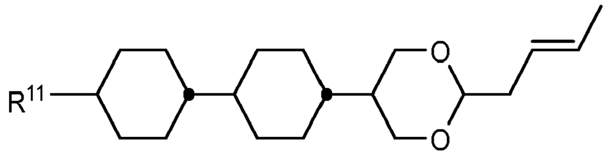

I-1-29

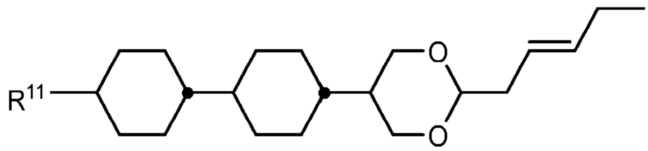

I-1-30

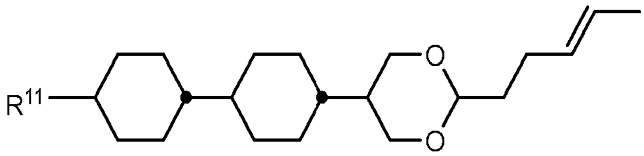

I-1-31

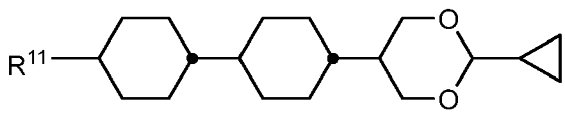

I-1-32

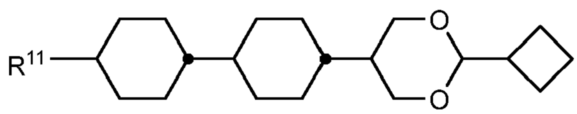

I-1-33

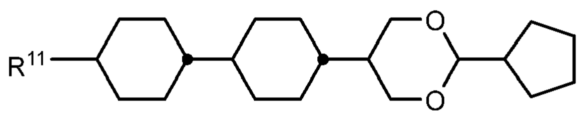

I-1-34

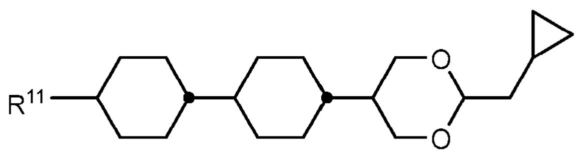

I-1-35

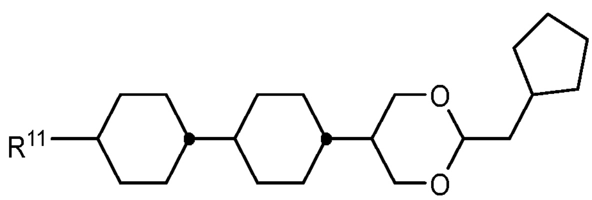

I-1-36

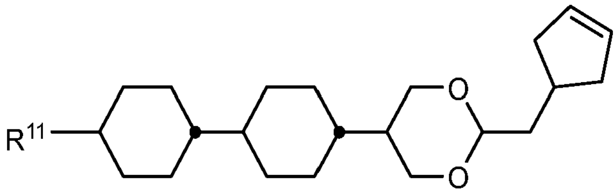

I-1-37

in which $R^{11}$ and $R^{12}$ denote straight chain alkyl having 1 to 7 C atoms or straight chain alkenyl having 2 to 7 C atoms.

More preferably the medium according to the invention comprises one or more compounds of the formula I-2, very preferably selected from the compounds of the formulae I-2-1 to I-2-37:

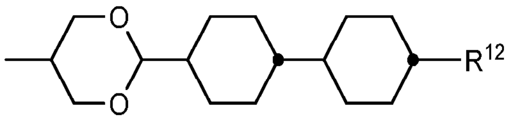

I-2-1

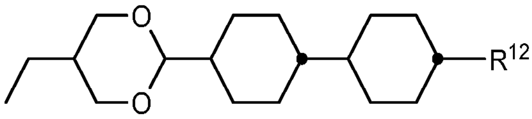

I-2-2

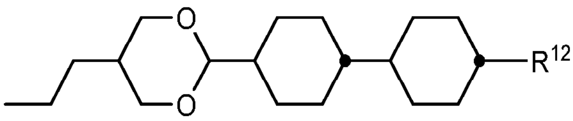

I-2-3

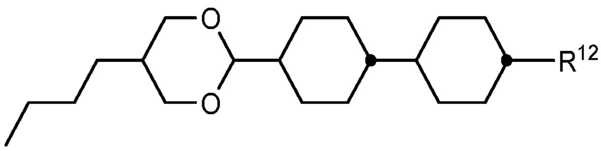

I-2-4

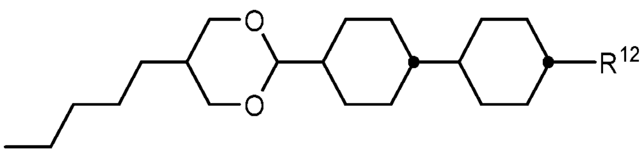

I-2-5

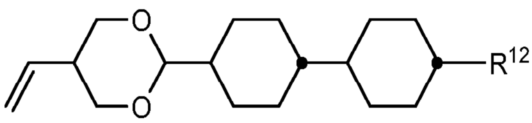

I-2-6

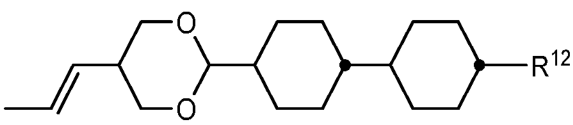

I-2-7

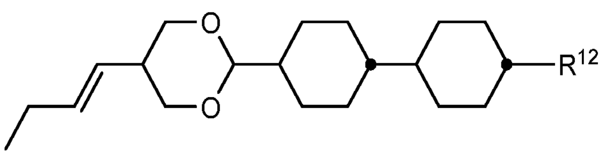

I-2-8

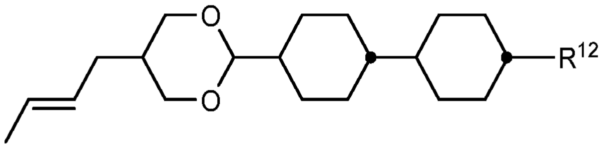

I-2-9

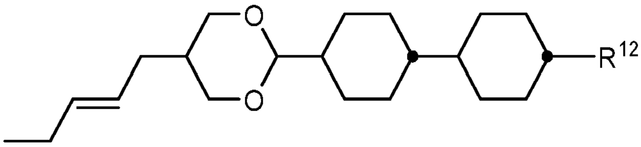

I-2-10

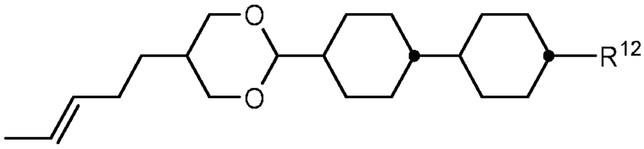

I-2-11

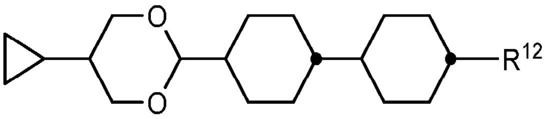

I-2-12

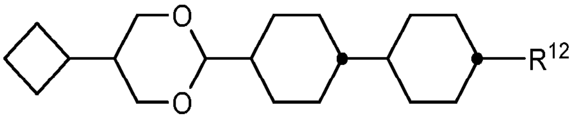

I-2-13

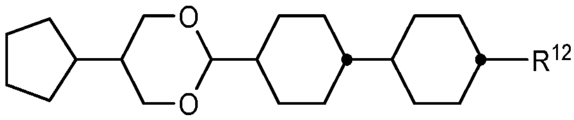

I-2-14

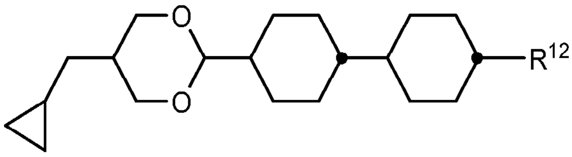

I-2-15

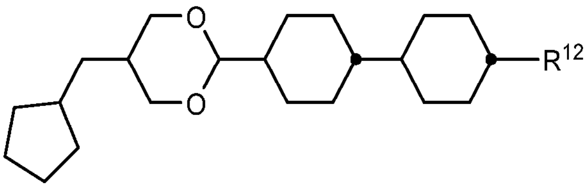

I-2-16

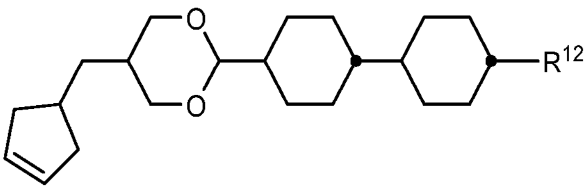

I-2-17

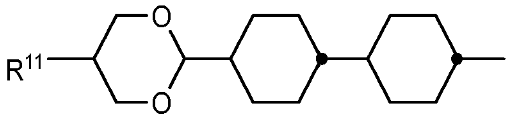
I-2-18

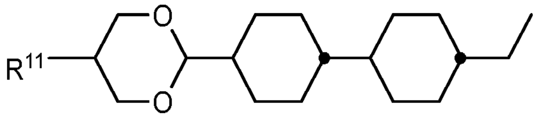
I-2-19

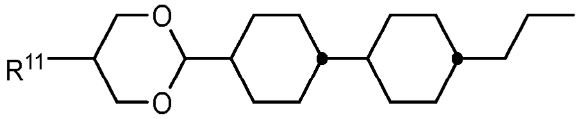
I-2-20

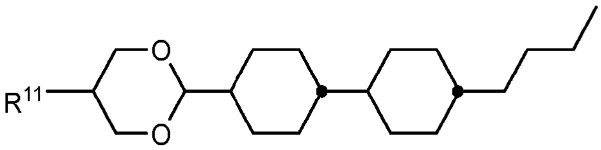
I-2-21

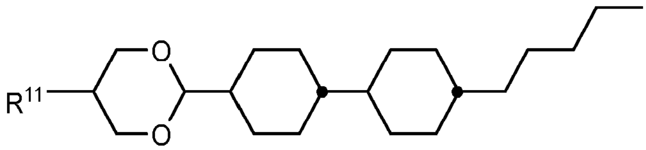
I-2-22

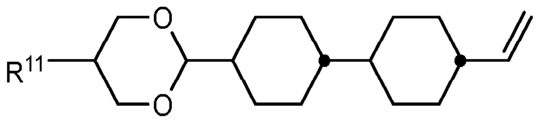
I-2-23

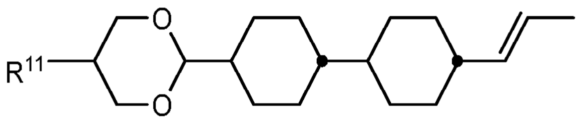
I-2-24

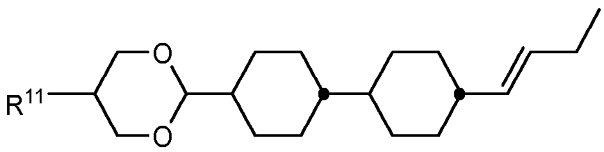
I-2-25

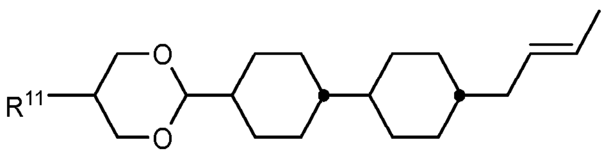
I-2-26

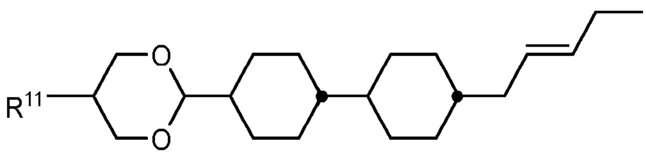
I-2-27

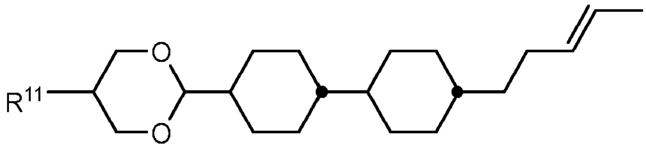

I-2-28

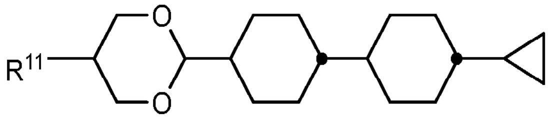

I-2-29

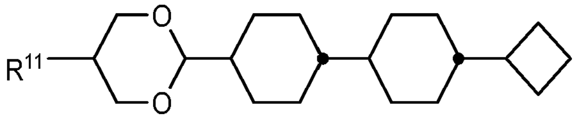

I-2-30

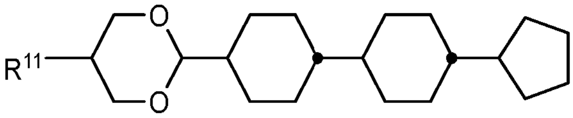

I-2-31

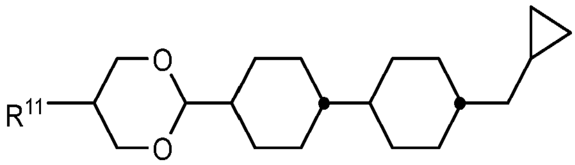

I-2-32

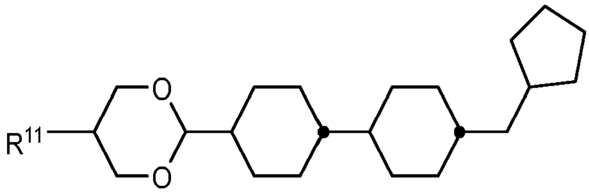

I-2-33

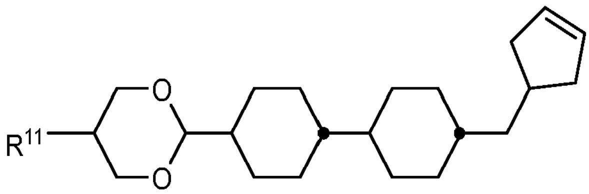

I-2-34

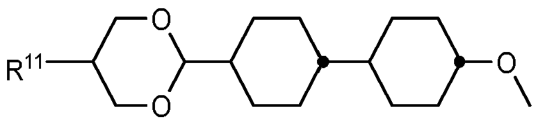

I-2-35

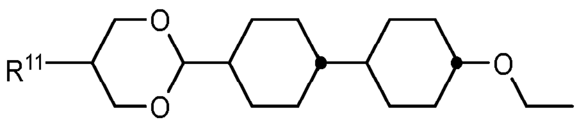

I-2-36

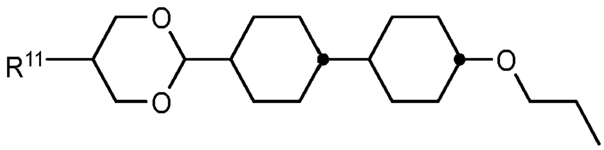

I-2-37

in which $R^{11}$ and $R^{12}$ denote straight chain alkyl having 1 to 7 C atoms or straight chain alkenyl having 2 to 7 C atoms.

The compounds of the formula I-3 are preferably selected from the compounds of the formulae I-3-1 to I-3-37:

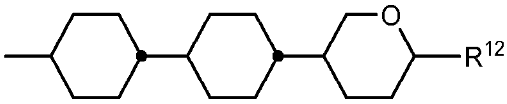

I-3-1

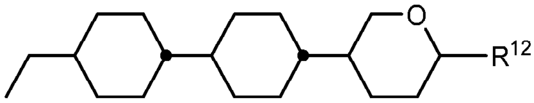

I-3-2

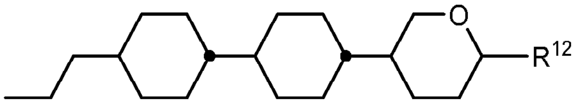

I-3-3

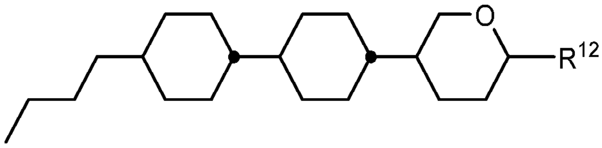

I-3-4

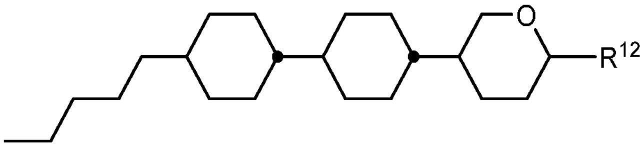

I-3-5

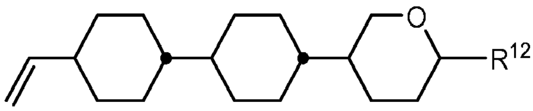

I-3-6

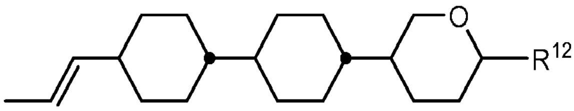

I-3-7

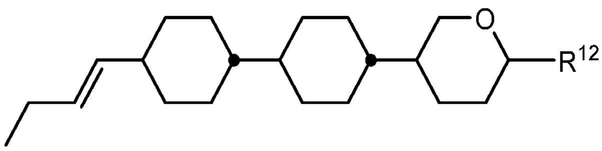

I-3-8

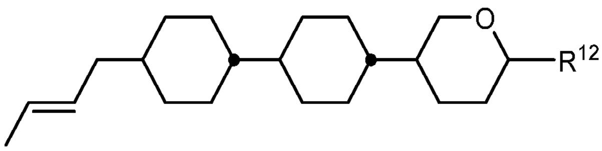

I-3-9

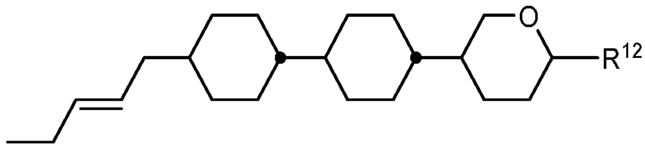
I-3-10

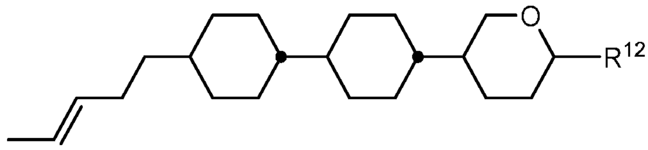
I-3-11

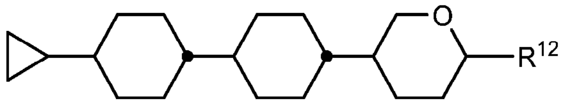
I-3-12

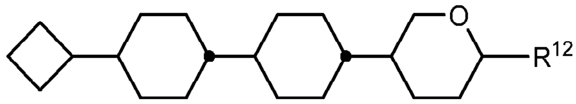
I-3-13

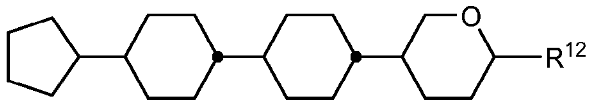
I-3-14

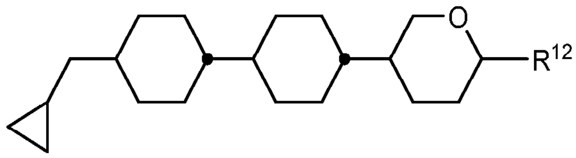
I-3-15

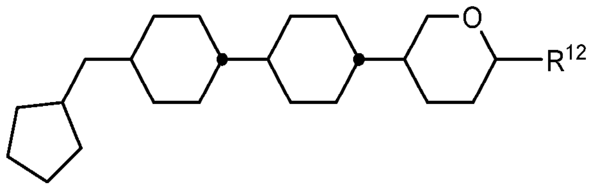
I-3-16

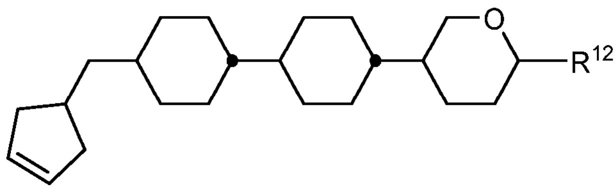
I-3-17

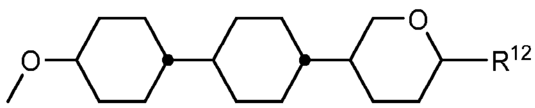
I-3-18

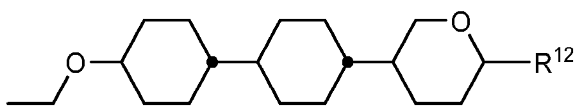
I-3-19

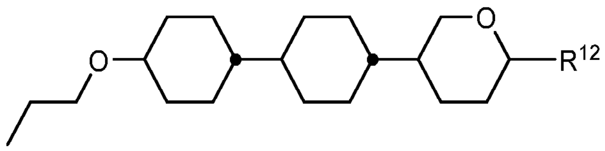

I-3-20

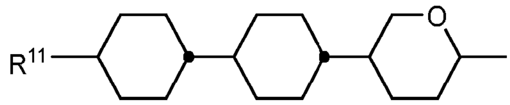

I-3-21

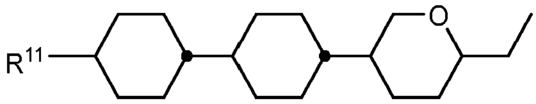

I-3-22

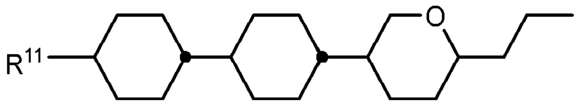

I-3-23

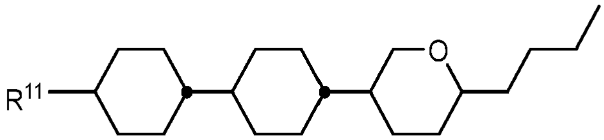

I-3-24

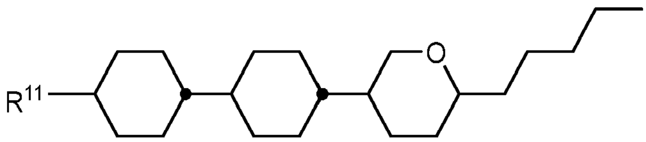

I-3-25

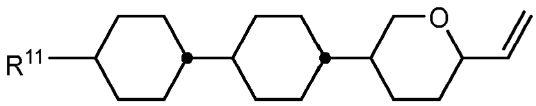

I-3-26

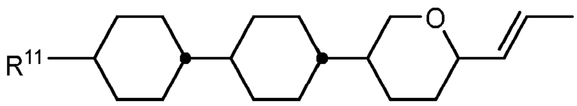

I-3-27

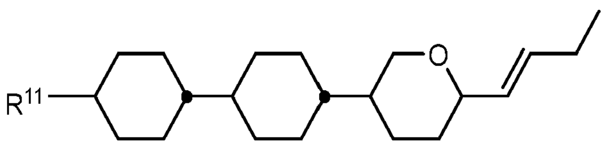

I-3-28

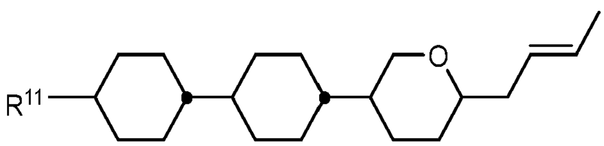

I-3-29

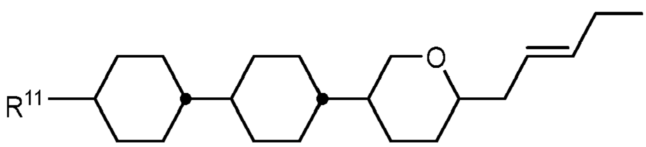

I-3-30

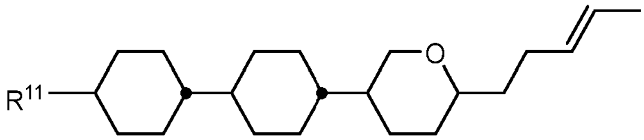

I-3-31

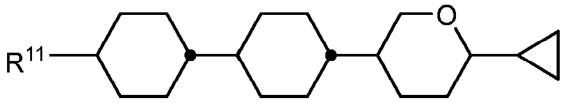

I-3-32

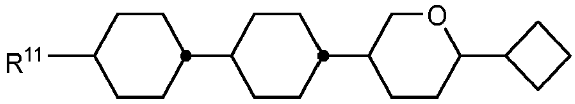

I-3-33

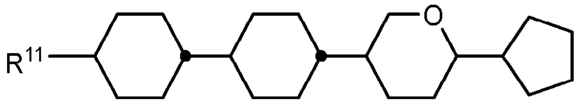

I-3-34

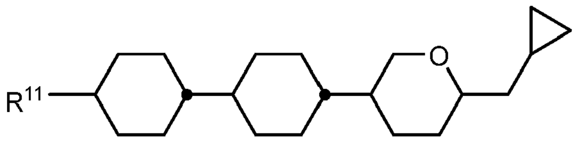

I-3-35

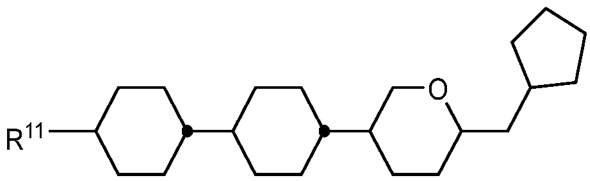

I-3-36

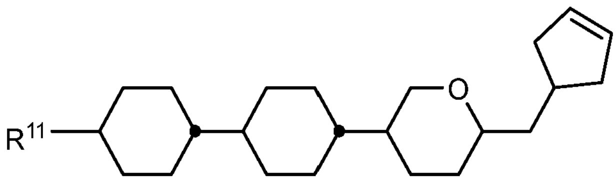

I-3-37

in which $R^{11}$ and $R^{12}$ denote straight chain alkyl having 1 to 7 C atoms or straight chain alkenyl having 2 to 7 C atoms.

More preferably the medium according to the invention comprises one or more compounds of the formula I-4, very preferably selected from the compounds of the formulae I-4-1 to I-4-37:

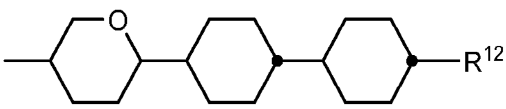

I-4-1

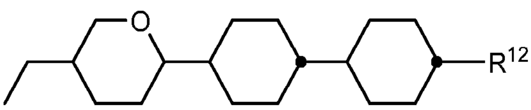

I-4-2

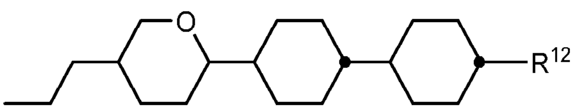

I-4-3

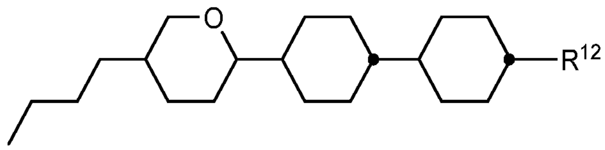

I-4-4

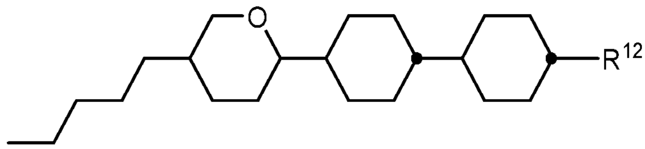

I-4-5

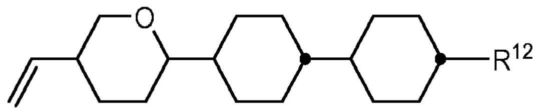

I-4-6

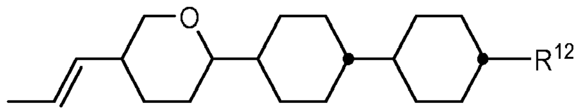

I-4-7

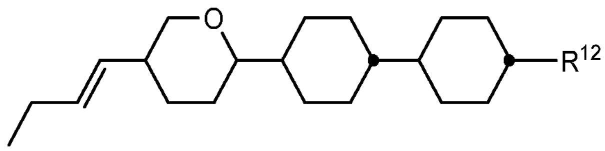

I-4-8

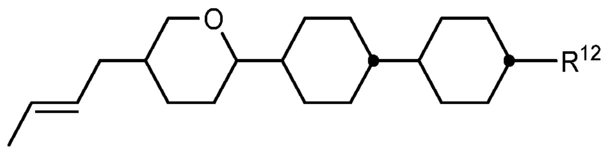

I-4-9

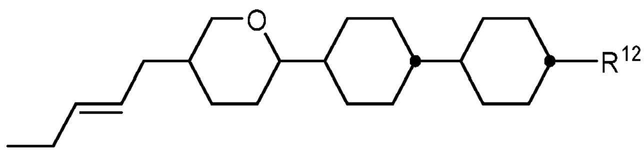

I-4-10

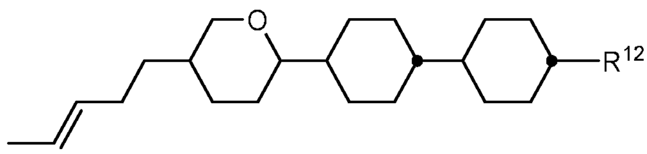

I-4-11

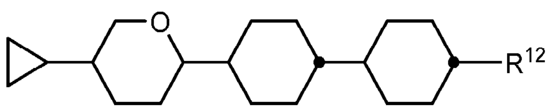

I-4-12

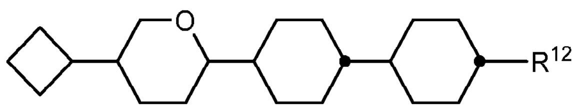

I-4-13

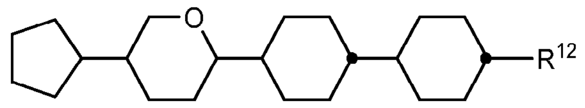

I-4-14

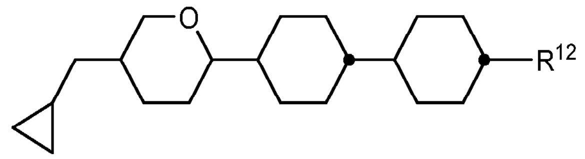

I-4-15

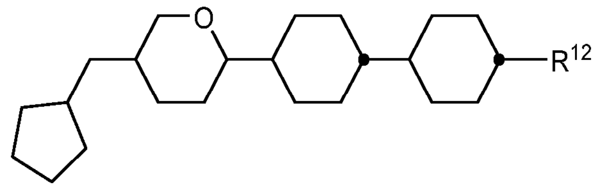

I-4-16

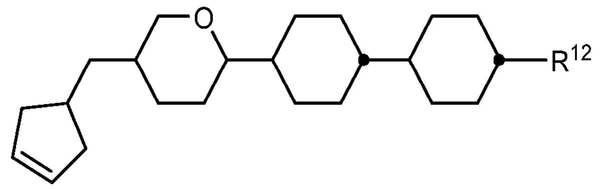

I-4-17

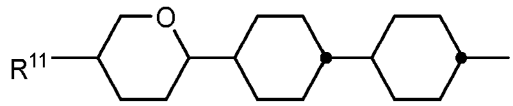

I-4-18

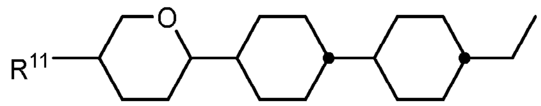

I-4-19

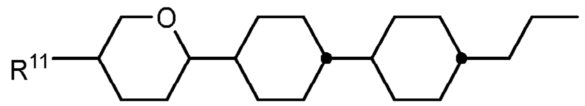

I-4-20

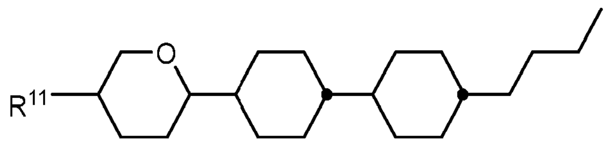

I-4-21

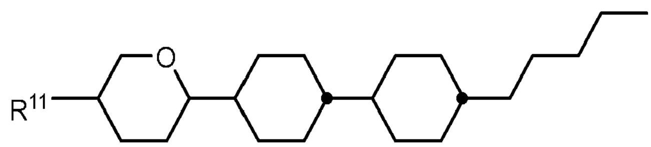

I-4-22

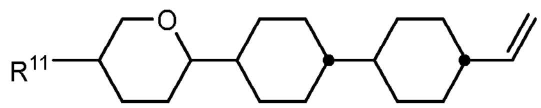

I-4-23

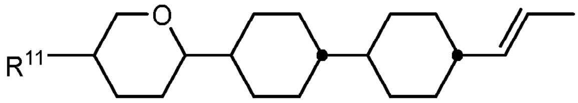

I-4-24

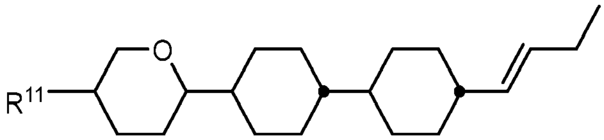

I-4-25

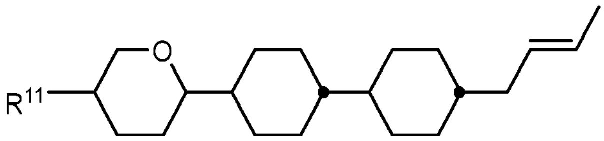

I-4-26

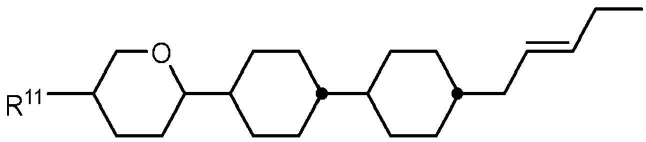

I-4-27

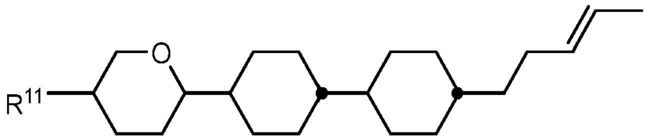

I-4-28

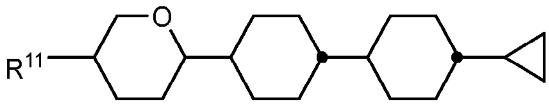

I-4-29

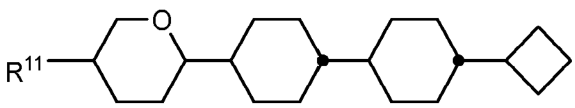

I-4-30

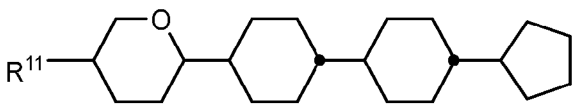

I-4-31

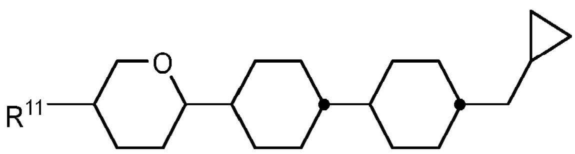

I-4-32

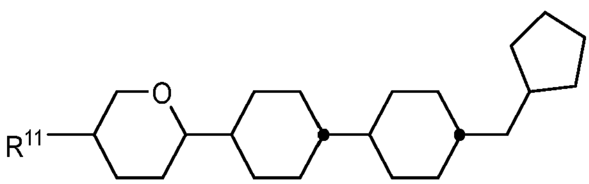

I-4-33

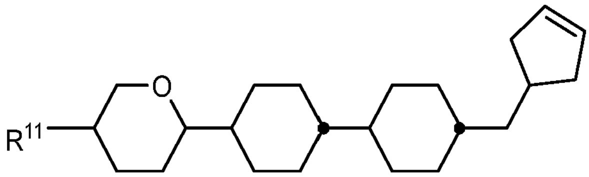

I-4-34

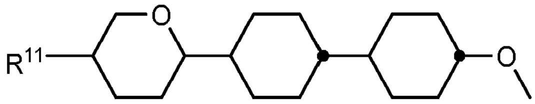

I-4-35

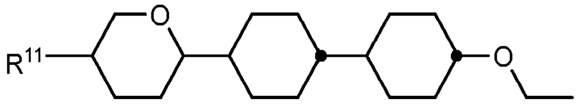

I-4-36

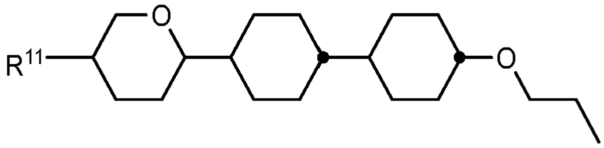

I-4-37

in which $R^{11}$ and $R^{12}$ denote straight chain alkyl having 1 to 7 C atoms or straight chain alkenyl having 2 to 7 C atoms.

More preferably the medium according to the invention comprises one or more compounds of the formula I-11, very preferably selected from the compounds of the formulae I-11-1 to I-11-20

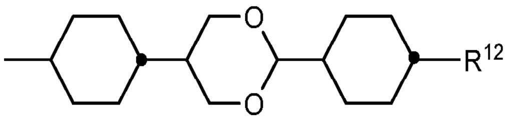

I-11-1

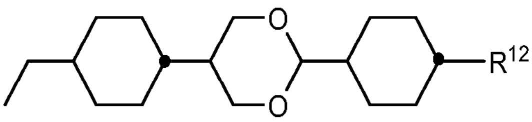

I-11-2

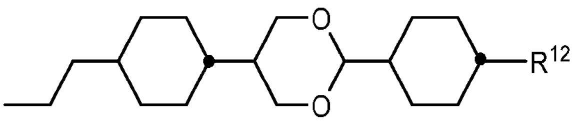

I-11-3

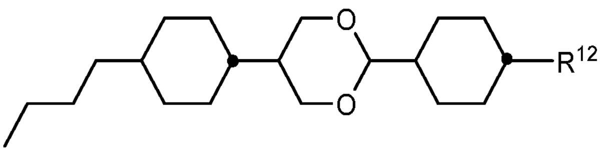

I-11-4

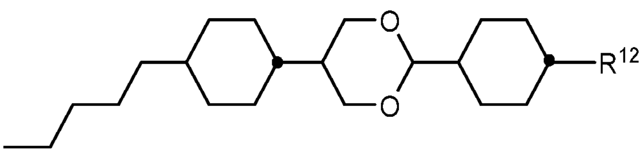

I-11-5

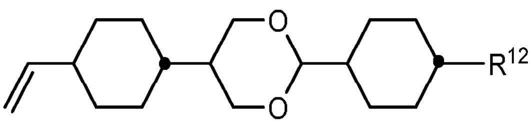

I-11-6

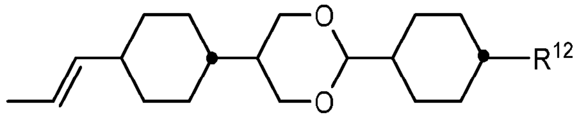

I-11-7

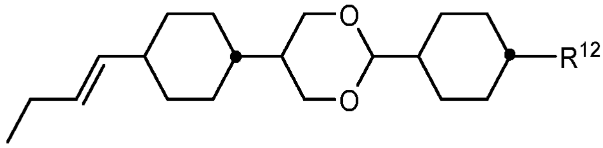

I-11-8

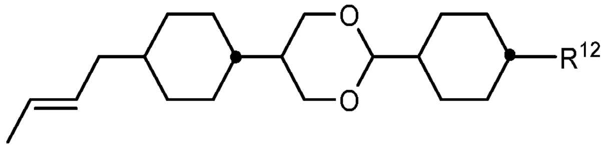

I-11-9

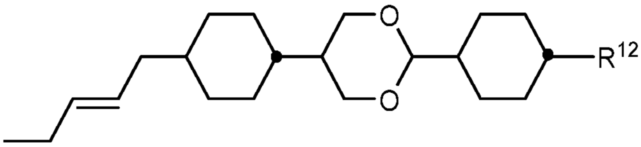

I-11-10

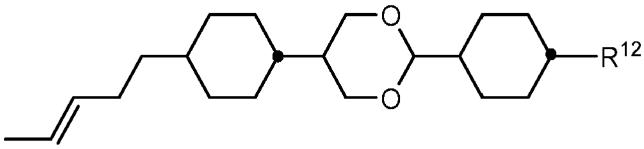

I-11-11

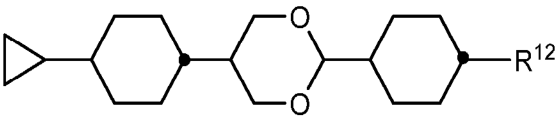

I-11-12

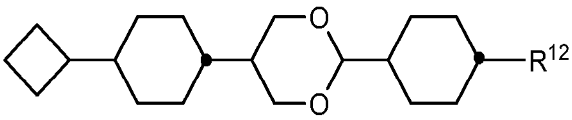

I-11-13

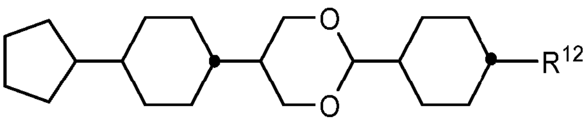

I-11-14

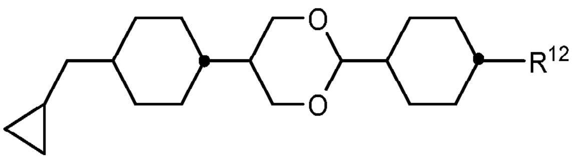

I-11-15

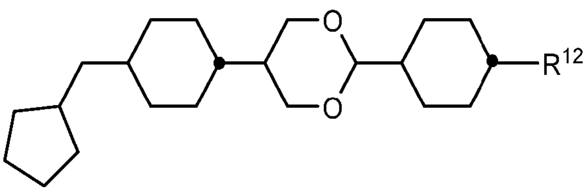

I-11-16

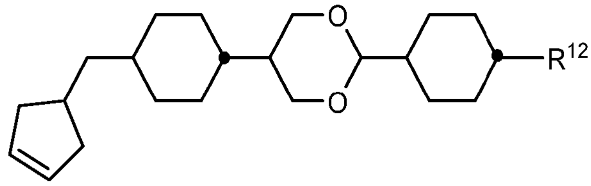

I-11-17

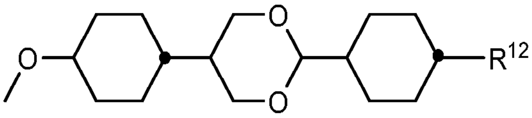

I-11-18

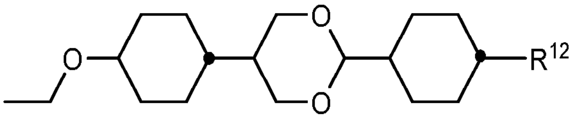

I-11-19

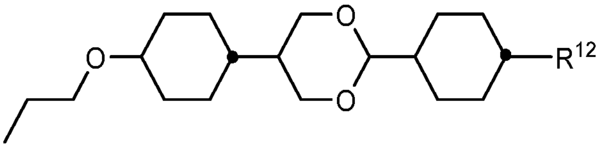

I-11-20

in which $R^{12}$ denotes straight chain alkyl having 1 to 7 C atoms or straight chain alkenyl having 2 to 7 C atoms.

More preferably the medium according to the invention comprises one or more compounds of the formula I-12, very preferably selected from the compounds of the formulae I-12-1 to I-12-20

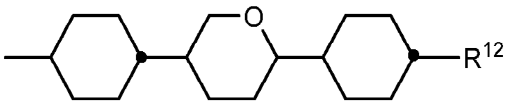

I-12-1

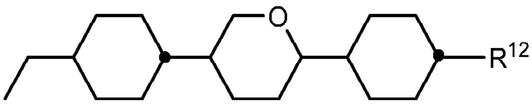

I-12-2

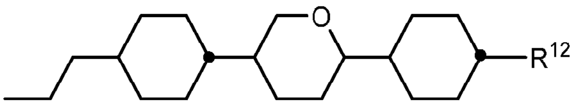

I-12-3

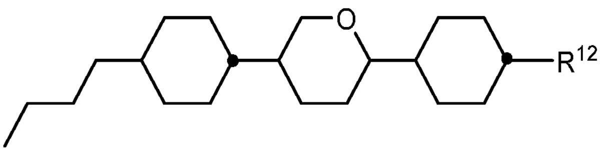

I-12-4

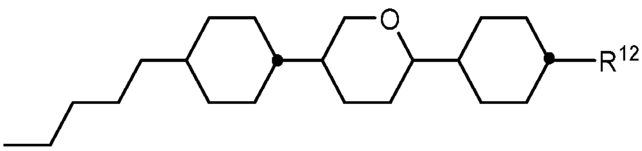

I-12-5

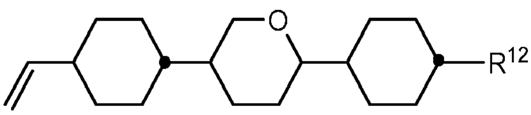

I-12-6

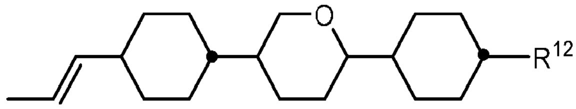

I-12-7

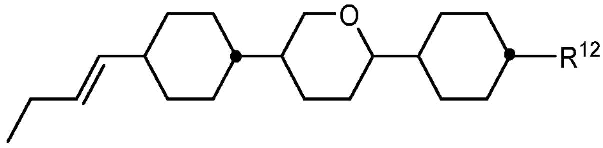

I-12-8

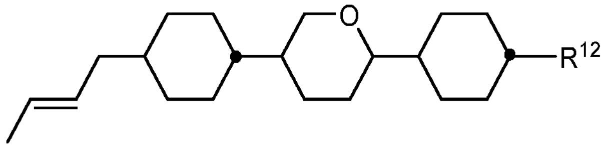

I-12-9

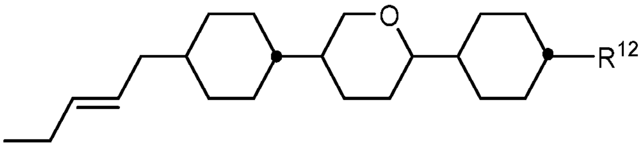

I-12-10

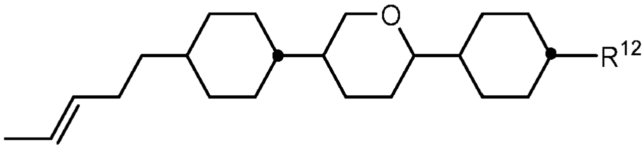

I-12-11

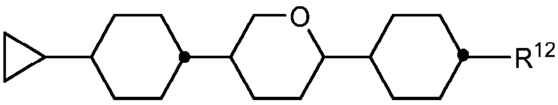

I-12-12

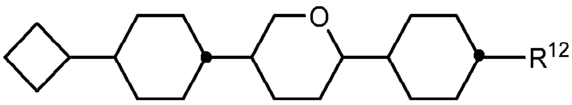

I-12-13

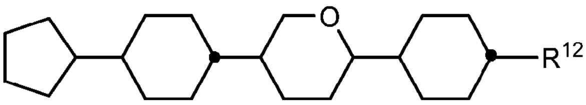

I-12-14

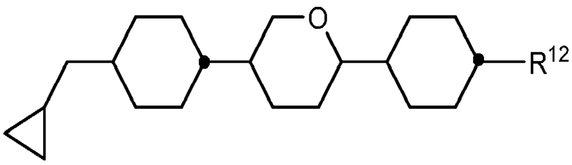

I-12-15

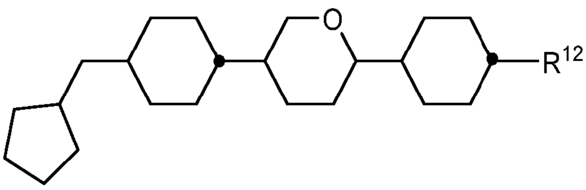

I-12-16

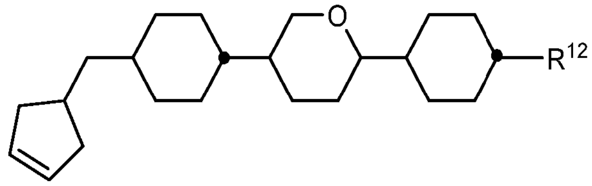

I-12-17

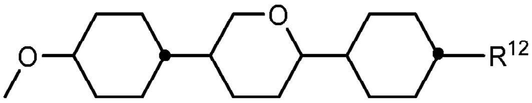

I-12-18

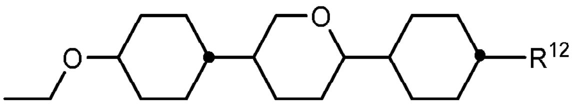

I-12-19

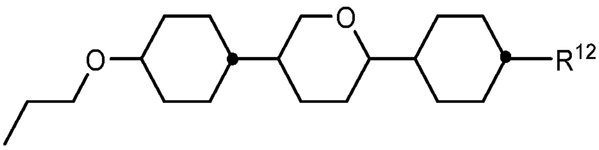

I-12-20

in which $R^{12}$ denotes straight chain alkyl having 1 to 7 C atoms or straight chain alkenyl having 2 to 7 C atoms.

The mixtures according to the present invention contain the compounds of formula I in a concentration range of 0.1% to 10%, preferably 1% to 9%, more preferably from 2% to 8%. Even every small concentration, e.g., less than 5% of the compounds of formula I shows a huge impact on the optical anisotropy $\Delta n$ value.

Further preferred embodiments of the LC medium according to the present invention are listed below, including any combination thereof:

Preferably the LC medium further comprises one or more compounds of formula II,

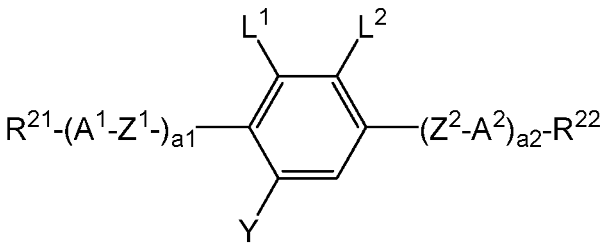

II

wherein the individual radicals, independently of each other and on each occurrence identically or differently, have the following meanings

$R^{21}$ and $R^{22}$ each independently denote straight chain, branched or cyclic alkyl or alkoxy having 1 to 15 C atoms, wherein one or more non-adjacent $CH_2$-groups are optionally replaced by -O-, -S-, -CO-, -CO-O-, -O-CO-, -O-CO-O-, $CR^0$=$CR^{00}$-, -C≡C-,

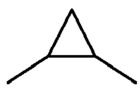

,

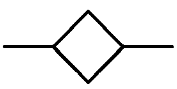

,

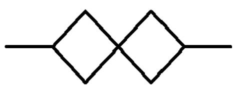

,

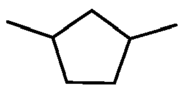

,

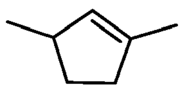

,

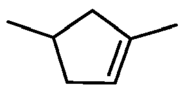

,

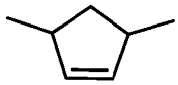

,

in such a manner that O- and/or S-atoms are not directly connected with each other, and wherein one or more H atoms are each optionally replaced by F, Cl, CN or $CF_3$, preferably alkyl or alkoxy having 1 to 6 C atoms,

$R^0$, $R^{00}$ each independently denote H or alkyl having 1 to 12 C atoms,

$A^1$ and $A^2$ each independently denote a group selected from the following formulae

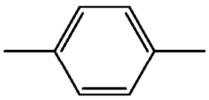

A1

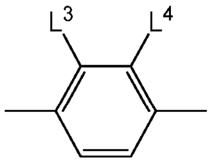

A2

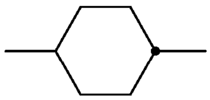

A3

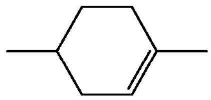

A4

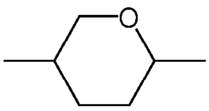

A5

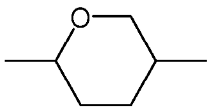

A6

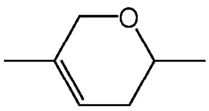

A7

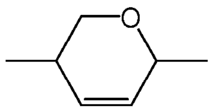

A8

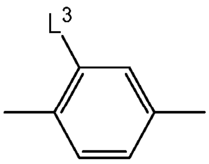

A9

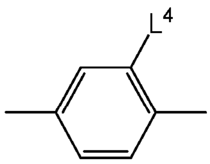

A10

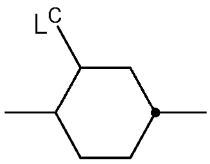

A11

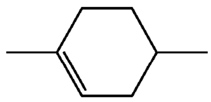

A12

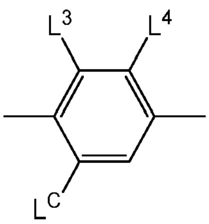

A13

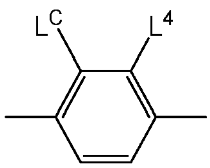

A14

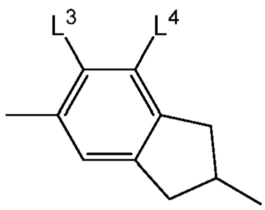

A15

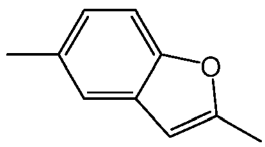

A16

preferably from formulae A1, A2, A3, A4, A5, A6, A9 and A10, very preferably from formulae A1, A2, A3, A4, A5, A9 and A10,

$Z^1$ and $Z^2$ each independently denote $-CH_2CH_2-$, -CH=CH-, $-CF_2O-$, $-OCF_2-$, $-CH_2O-$, $-OCH_2-$, -CO-O-, -O-CO-, $-C_2F_4-$, -CF=CF-, $-CH=CH-CH_2O-$ or a single bond, preferably a single bond,

$L^1$, $L^2$, $L^3$ and $L^4$ each independently denote F, Cl, $OCF_3$, $CF_3$, $CH_3$, $CH_2F$ or $CHF_2$, preferably F or Cl, very preferably F,

Y denotes H, F, Cl, $CF_3$, $CHF_2$ or $CH_3$, preferably H or $CH_3$, very preferably H,

$L^C$ independently denotes $CH_3$ or $OCH_3$, preferably $CH_3$,

a1 denotes 0, 1 or 2,

a2 denotes 0 or 1.

Preferably the LC medium comprises one or more compounds of formula II selected from the group consisting of compounds of the formulae IIA, IIB, IIC, IID, IIE, and IIF,

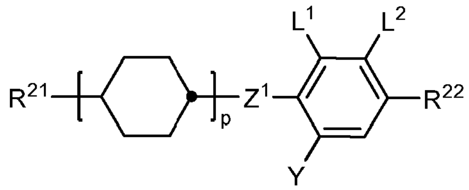

IIA

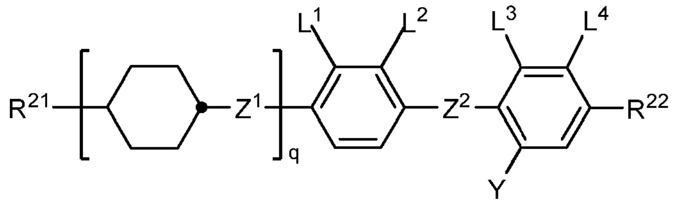

IIB

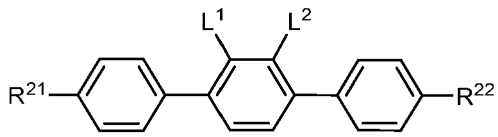

IIC

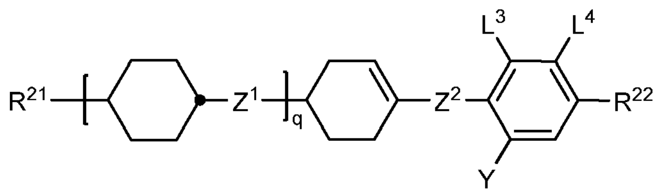

IID

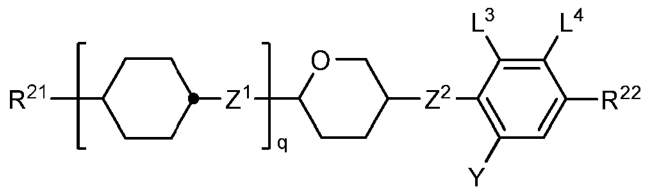

IIE

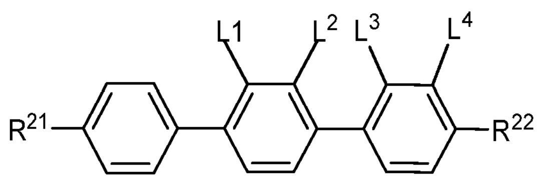

IIF

in which the individual radicals, on each occurrence identically or differently, and each, independently of one another, have the following meaning:

$R^{21}$, $R^{22}$ each independently denote H, an alkyl, alkoxy or alkenyl radical having up to 15 C atoms which is unsubstituted or monosubstituted by F, Cl, CN or $CF_3$ and where, in addition, one or more $CH_2$ groups in these radicals may be replaced by -O-, -S-,-C≡C-, $-CF_2O-$, - $OCF_2-$, -OC-O-, -O-CO-,

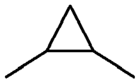, 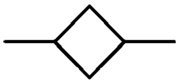, 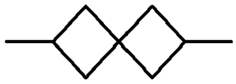, 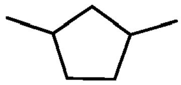,

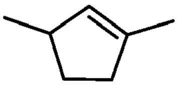, 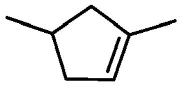, 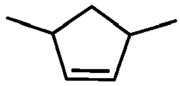,

in such a way that O- and/or S-atoms are not linked directly to one another,

$L^1$ to $L^4$ each independently denote H, F, Cl, $CF_3$ or $CHF_2$, wherein at least two of $L^1$ to $L^4$ denote F, Cl, $CF_3$ or $CHF_2$, preferably F,

Y denotes H, F, Cl, $CF_3$, $CHF_2$ or $CH_3$, preferably H or $CH_3$, particularly preferably H,

$Z^1$, $Z^2$ each independently denote a single bond, $-CH_2CH_2-$, -CH=CH-, $-CF_2O-$, $-OCF_2-$, - $CH_2O-$, $-OCH_2-$, -COO-, -OCO-, $-C_2F_4-$, -CF=CF-, $-CH=CHCH_2O$,

p denotes 0, 1 or 2, and

q denotes 0 or 1,

wherein formula IIC and formula IIF are not identical.

Preferred compounds of the formulae IIA, IIB, IIC, IID, IIE and IIF are those wherein $R^{22}$ denotes an alkyl or alkoxy radical having up to 15 C atoms, and very preferably denotes $(O)C_vH_{2v+1}$ wherein (O) is an oxygen atom or a single bond and v is 1, 2, 3, 4, 5 or 6.

Further preferred compounds of the formulae IIA, IIB, IIC, IID, IIE and IIF are those wherein $R^{21}$ or $R^{22}$ denotes or contains cycloalkyl or cycloalkoxy radical, preferably selected from the group consisting of

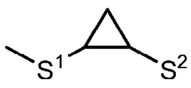, 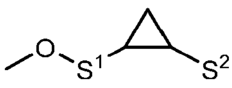, 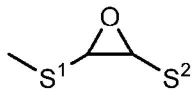, 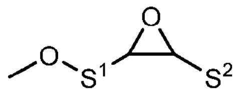,

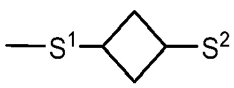, 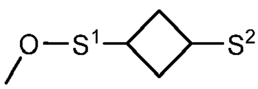, 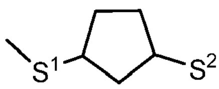, 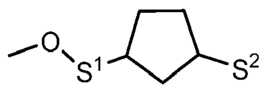,

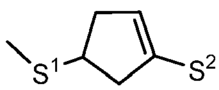, 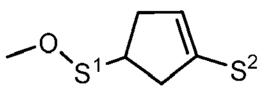, 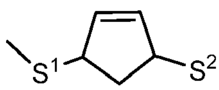, 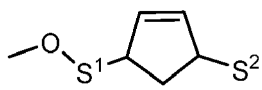,

wherein $S^1$ is $C_{1-12}$-alkylene or $C_{2-12}$-alkenylene and $S^2$ is H, $C_{1-12}$-alkyl or $C_{2-12}$-alkenyl, and very preferably are selected from the group consisting of

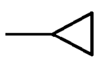, 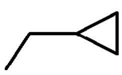, 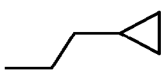, 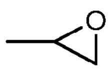, 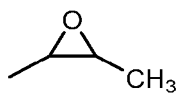,

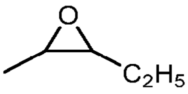, 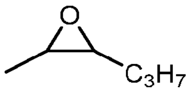, 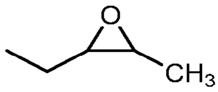, 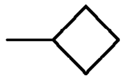, 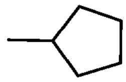,

,

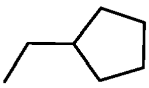, 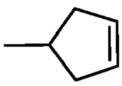, 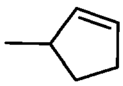, 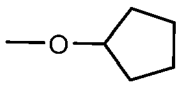, 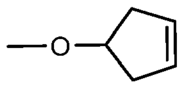

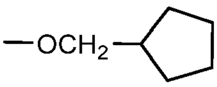, 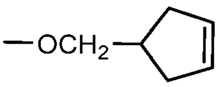, 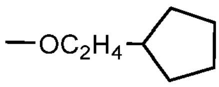, 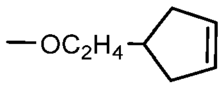.

Further preferred compounds of the formulae IIA, IIB, IIC, IID, IIE and IIF are indicated below.

In a preferred embodiment the LC medium comprises one or more compounds of the formula IIA selected from the group consisting of the following formulae:

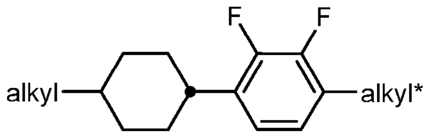 IIA-1

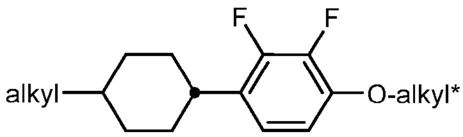 IIA-2

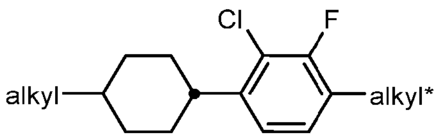 IIA-3

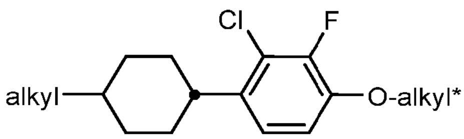 IIA-4

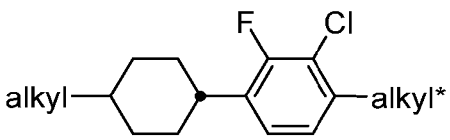 IIA-5

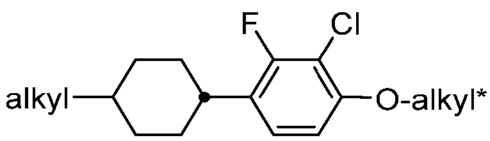 IIA-6

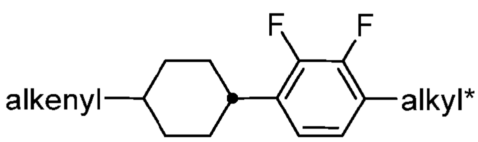 IIA-7

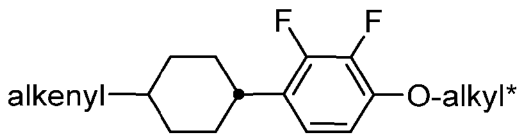

IIA-8

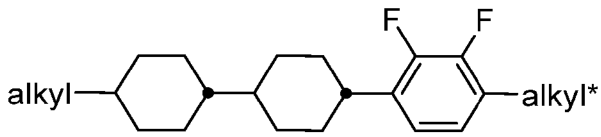

IIA-9

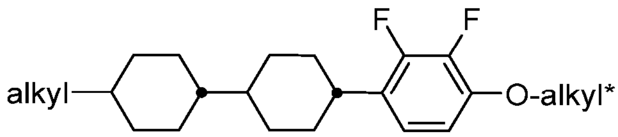

IIA-10

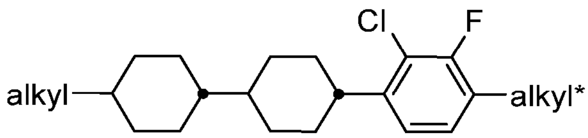

IIA-11

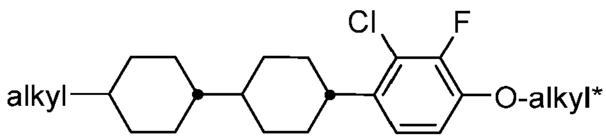

IIA-12

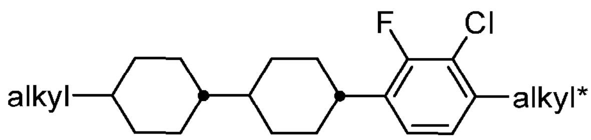

IIA-13

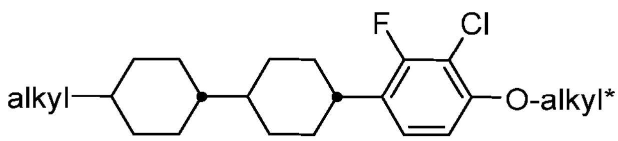

IIA-14

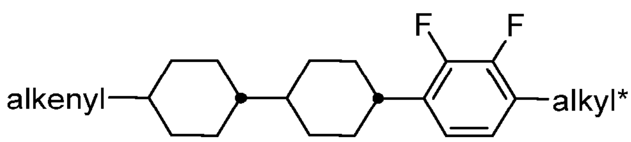

IIA-15

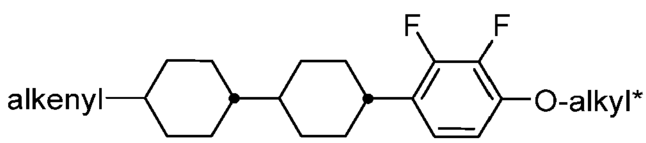

IIA-16

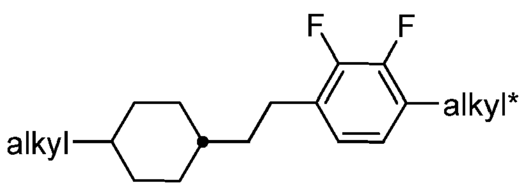

IIA-17

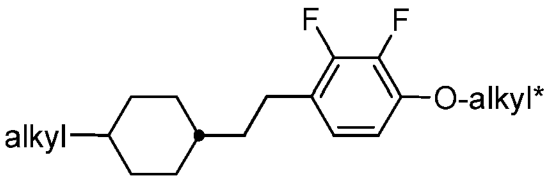

IIA-18

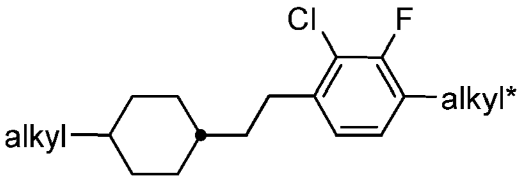

IIA-19

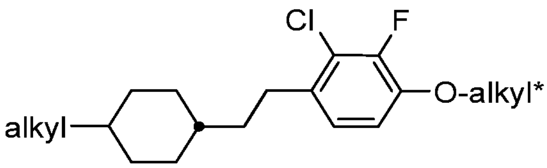

IIA-20

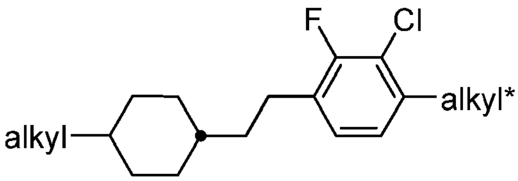

IIA-21

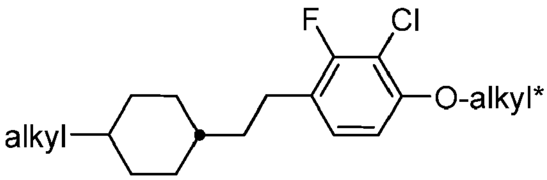

IIA-22

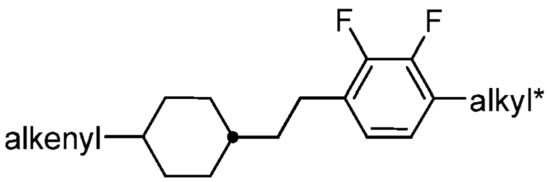

IIA-23

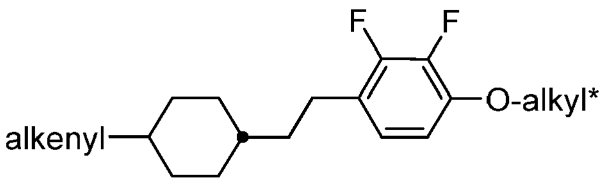

IIA-24

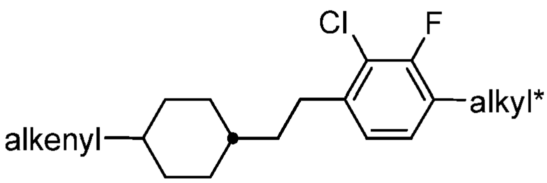

IIA-25

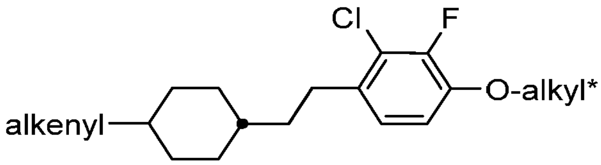

IIA-26

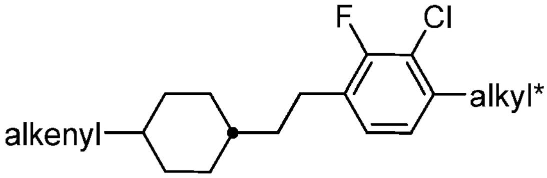

IIA-27

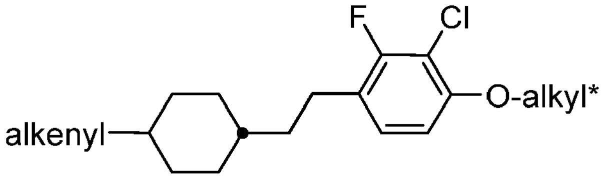

IIA-28

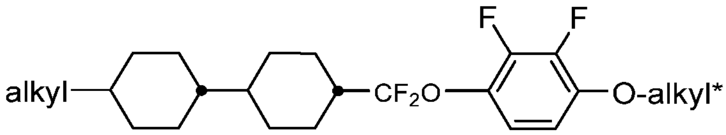

IIA-29

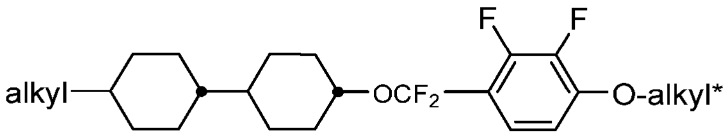

IIA-30

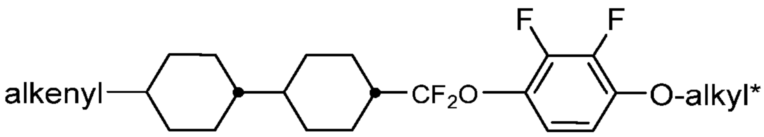

IIA-31

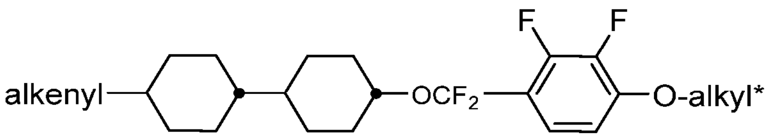

IIA-32

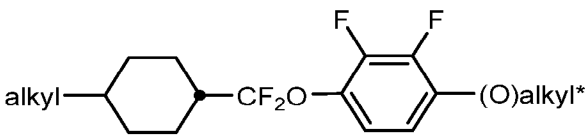

IIA-33

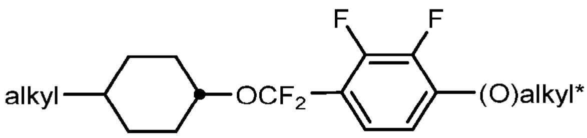

IIA-34

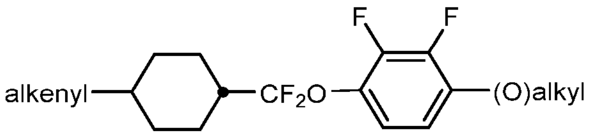

IIA-35

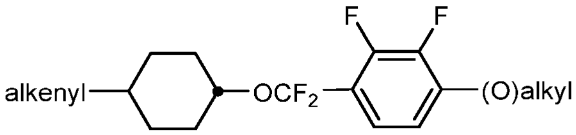

IIA-36

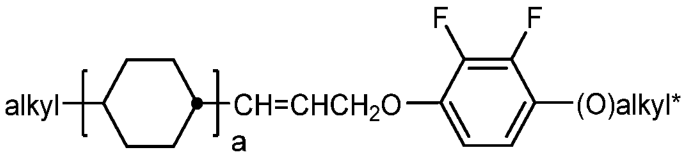

IIA-37

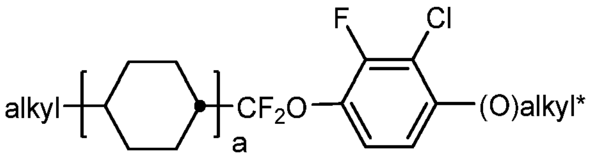

IIA-38

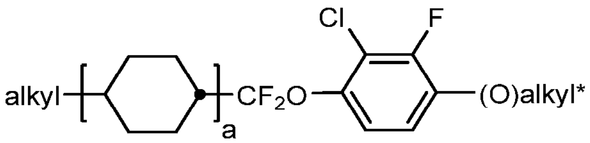

IIA-39

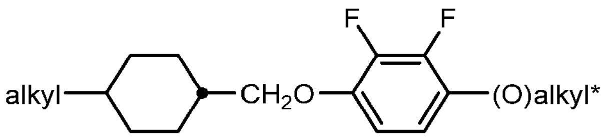

IIA-40

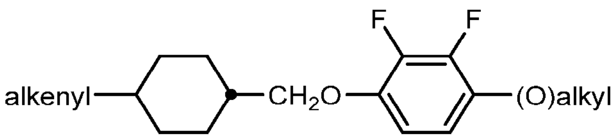

IIA-41

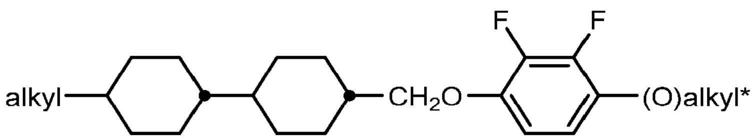

IIA-42

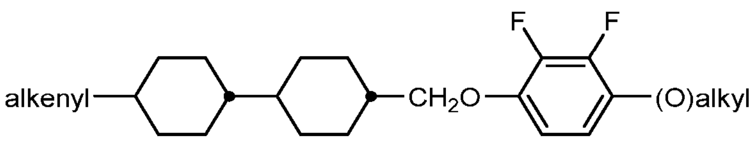

IIA-43

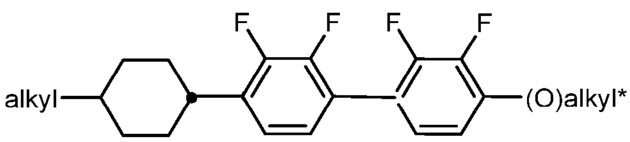

IIA-44

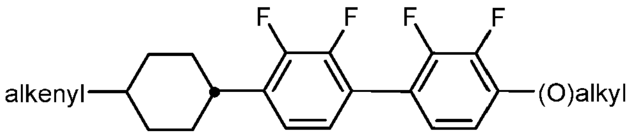

IIA-45

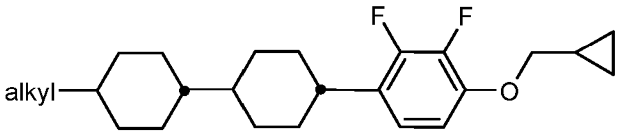

IIA-46

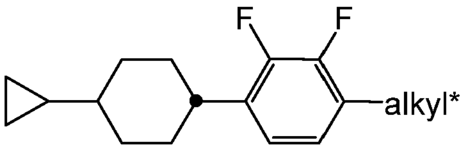

IIA-47

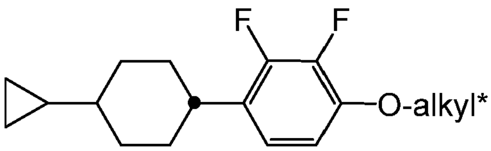

IIA-48

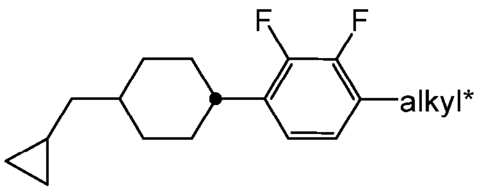

IIA-49

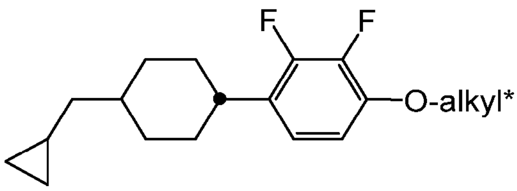

IIA-50

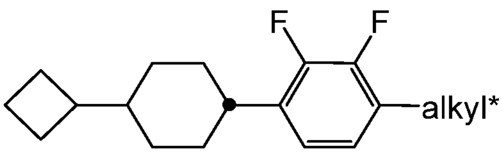

IIA-51

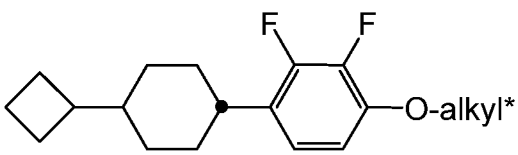

IIA-52

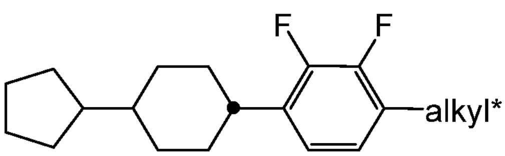

IIA-53

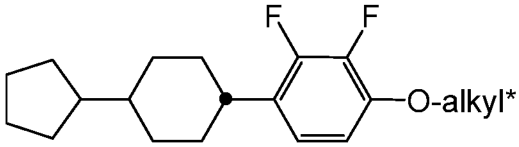

IIA-54

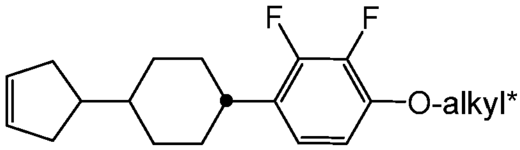

IIA-55

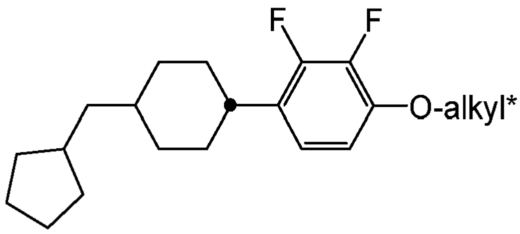

IIA-56

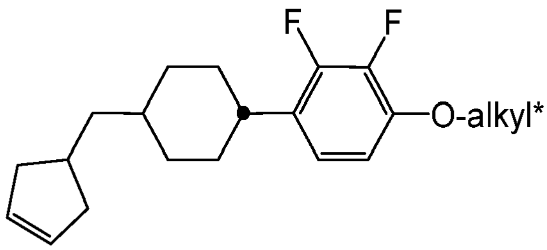

IIA-57

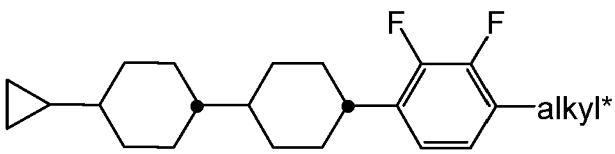

IIA-58

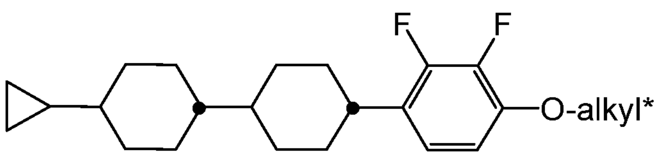

IIA-59

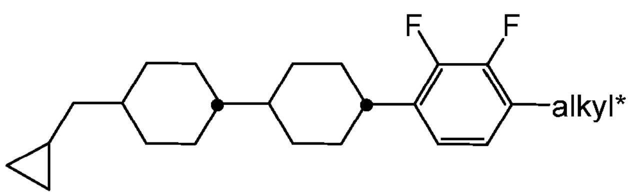

IIA-60

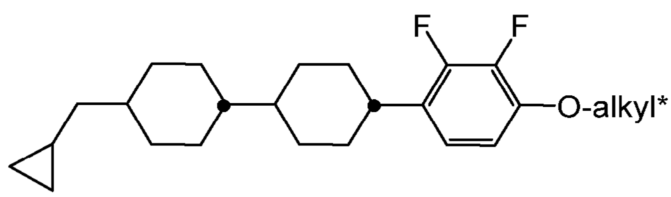

IIA-61

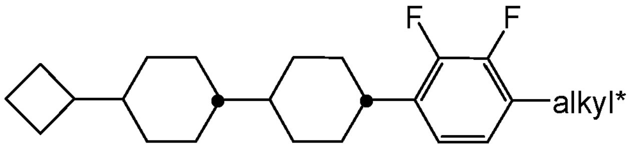

IIA-62

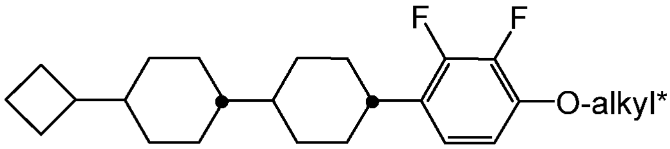

IIA-63

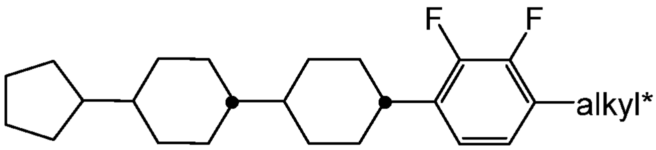

IIA-64

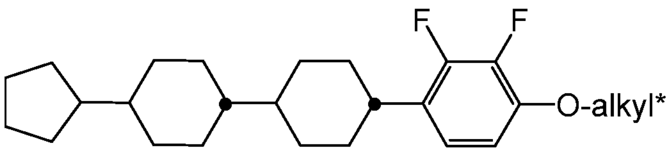

IIA-65

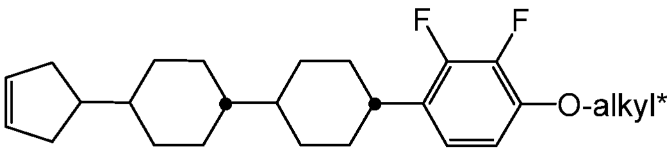

IIA-66

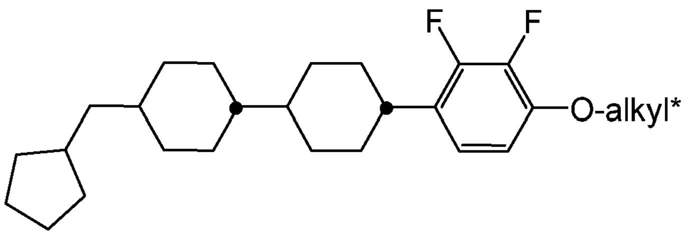

IIA-67

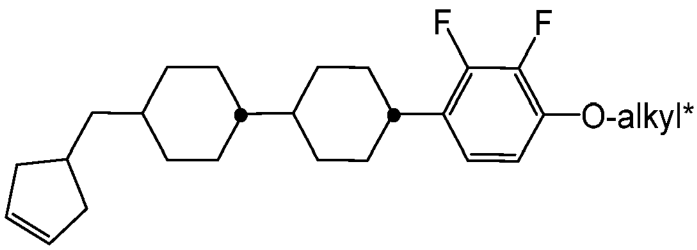

IIA-68

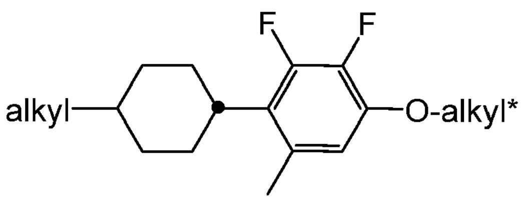

IIA-69

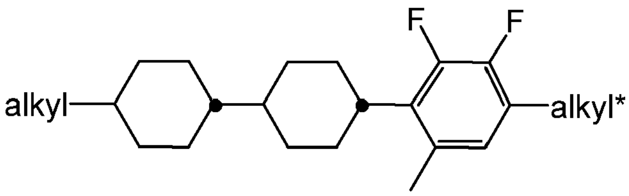

IIA-70

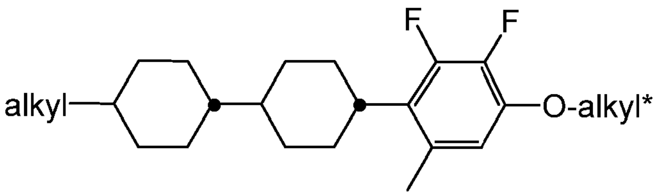

IIA-71

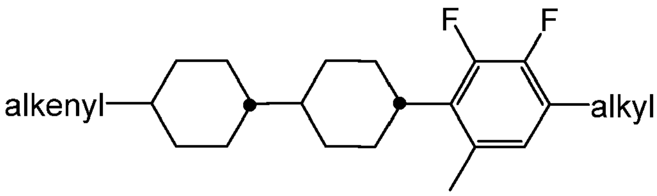

IIA-72

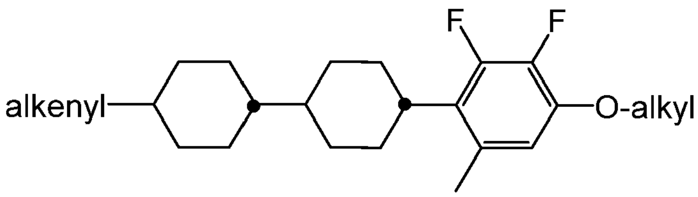

IIA-73

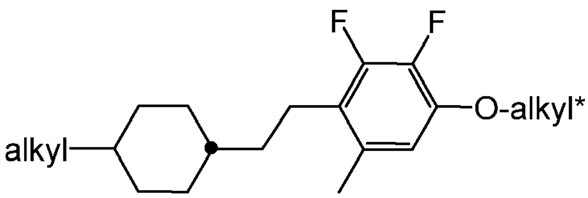

IIA-74

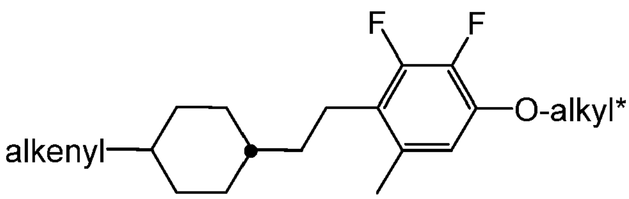

IIA-75

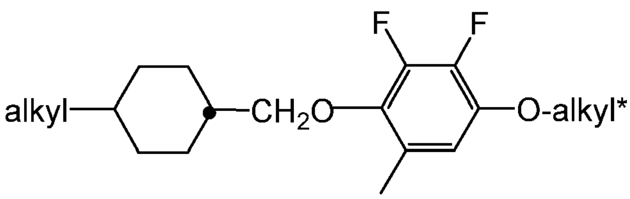

IIA-76

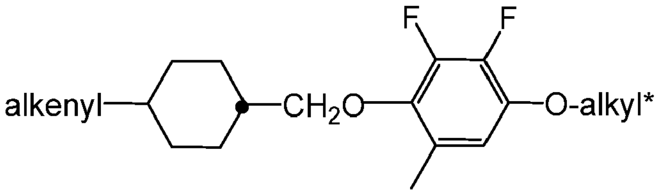

IIA-77

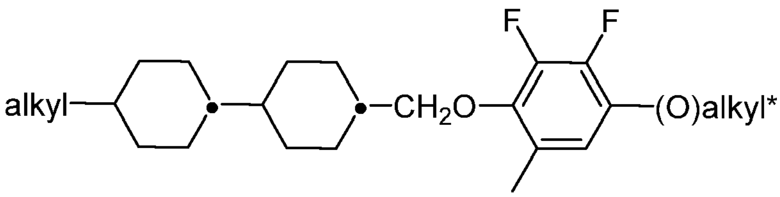

IIA-78

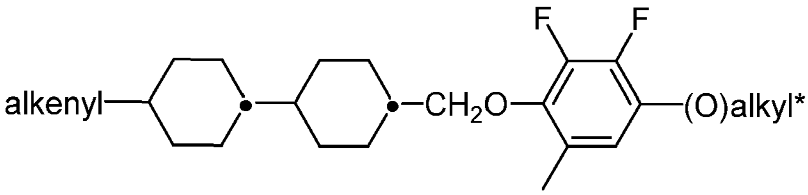

IIA-79

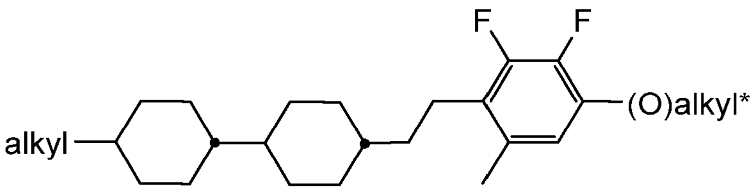

IIA-80

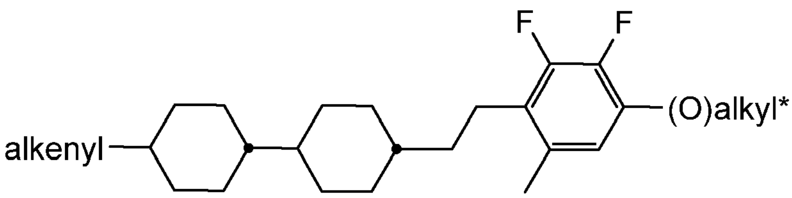

IIA-81

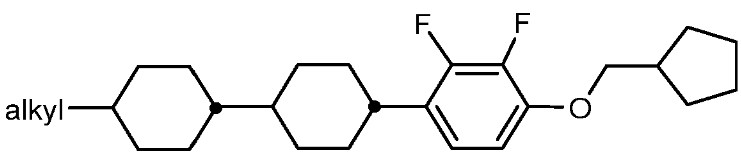

IIA-82

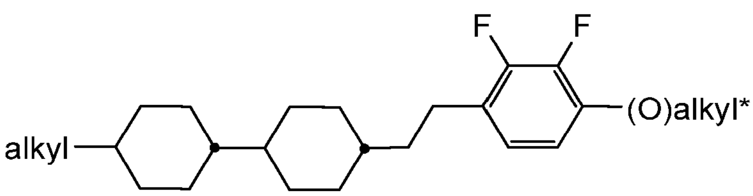

IIA-83

in which the index a denotes 1 or 2, alkyl and alkyl* each, independently of one another, denote a straight-chain or branched alkyl radical having 1-6 C atoms, alkenyl denotes a straight-chain or branched alkenyl radical having 2-6 C atoms, and (O) denotes an oxygen atom or a single bond, and alkenyl preferably denotes $CH_2$=CH-, $CH_2$=$CHCH_2CH_2$-, $CH_3$-CH=CH-, $CH_3$-$CH_2$-CH=CH-, $CH_3$-$(CH_2)_2$-CH=CH-, $CH_3$-$(CH_2)_3$-CH=CH- or $CH_3$-CH=CH-$(CH_2)_2$-.

Particularly preferred LC media according to the invention comprise one or more compounds selected from the group consisting of formulae IIA-2, IIA-8, IIA-9, IIA-10, IIA-16, IIA-18, IIA-40, IIA-41, IIA-42, IIA-43, IIA-69, IIA-71, and IIA-83.

Preferably, the LC medium comprises one or more compounds of the formula IIA-2 selected from the following subformulae:

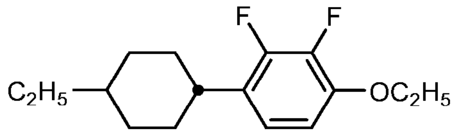
IIA-2-1

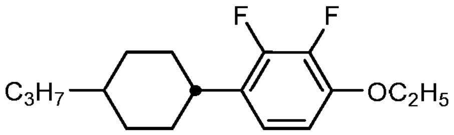
IIA-2-2

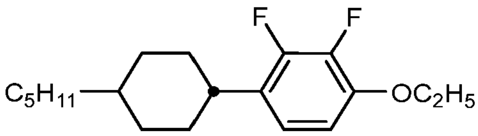
IIA-2-3

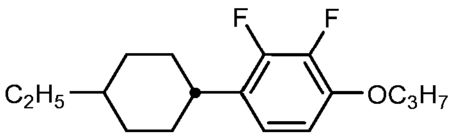
IIA-2-4

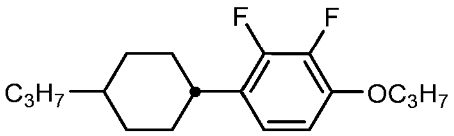
IIA-2-5

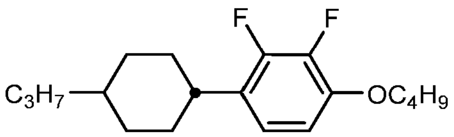
IIA-2-6

Alternatively, preferably in addition to the compounds of the formulae IIA-2-1 to IIA-2-6, the LC medium comprises one or more compounds of the following formulae:

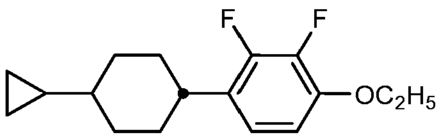
IIA-2a-1

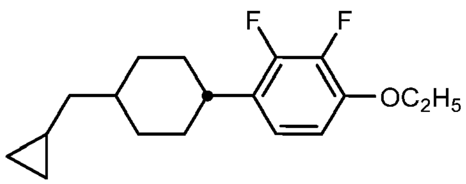
IIA-2a-2

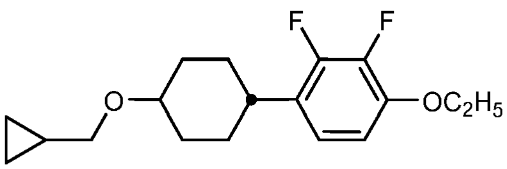
IIA-2a-3

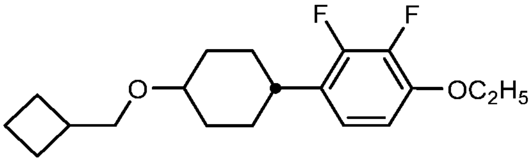

IIA-2a-4

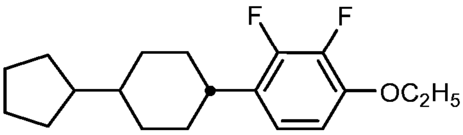

IIA-2a-5

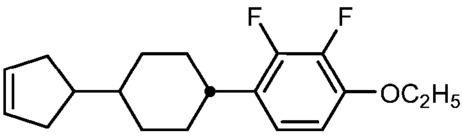

IIA-2a-6

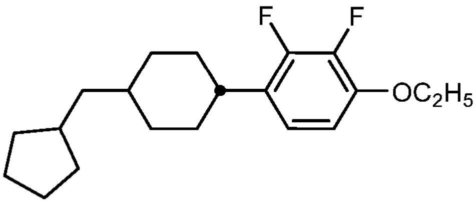

IIA-2a-7

Further preferably, the LC medium comprises one or more compounds of the formula IIA-10 selected from the following sub-formulae:

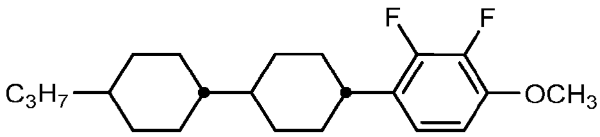

IIA-10-1

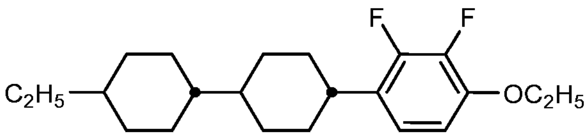

IIA-10-2

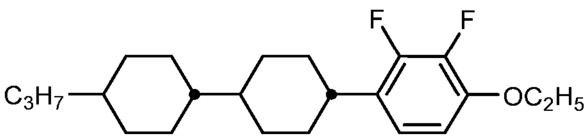

IIA-10-3

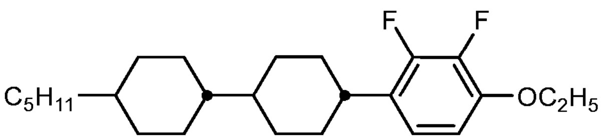

IIA-10-4

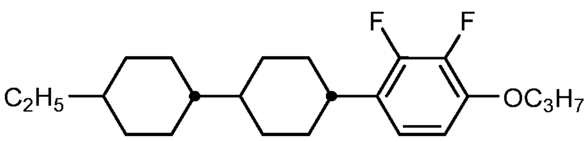

IIA-10-5

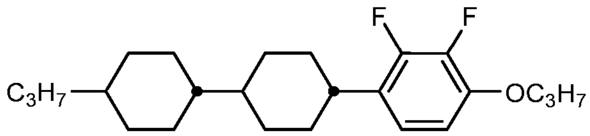

IIA-10-6

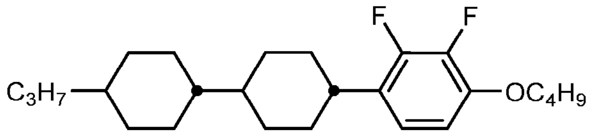

IIA-10-7

Alternatively, preferably in addition to the compounds of the formulae IIA-10-1 to IIA-10-7, the LC medium comprises one or more compounds of the following formulae:

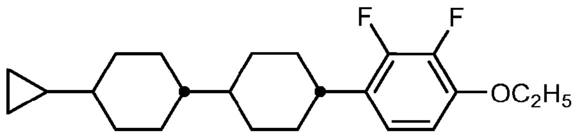

IIA-10a-1

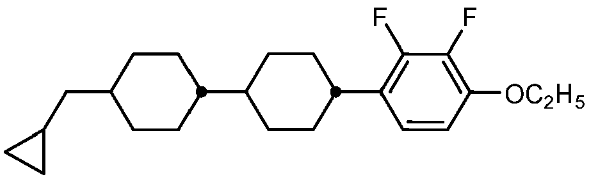

IIA-10a-2

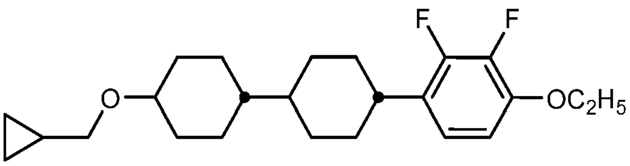

IIA-10a-3

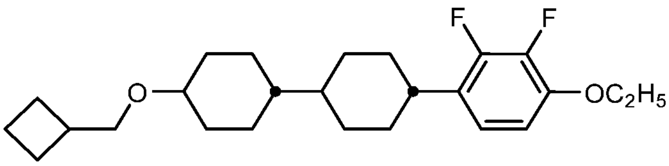

IIA-10a-4

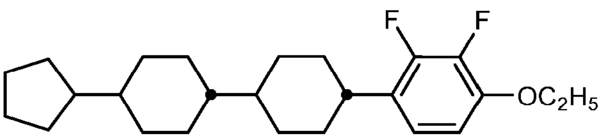

IIA-10a-5

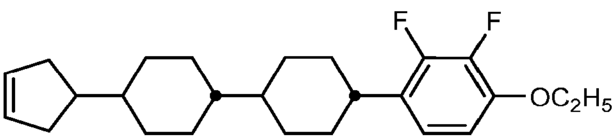

IIA-10a-6

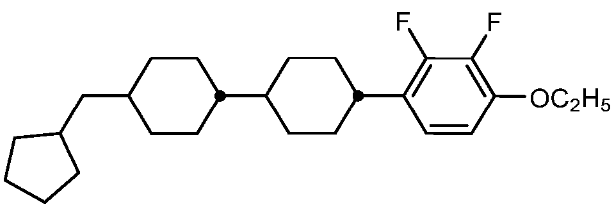

IIA-10a-7

Further preferably, the LC medium comprises one or more compounds of the formula IIA-16 selected from the following sub-formulae:

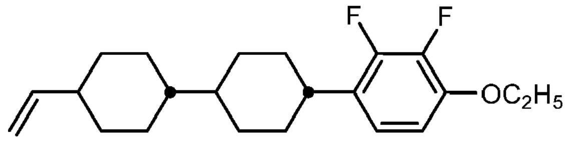

IIA-16-1

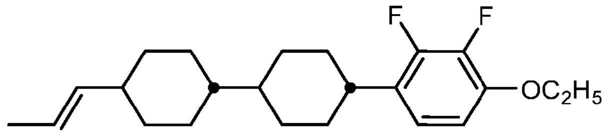

IIA-16-2

Further preferably, the LC medium comprises one or more compounds of the formula IIA-40 selected from the following sub-formulae:

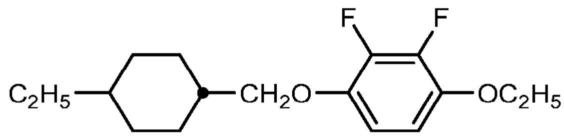

IIA-40-1

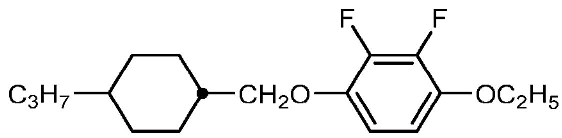

IIA-40-2

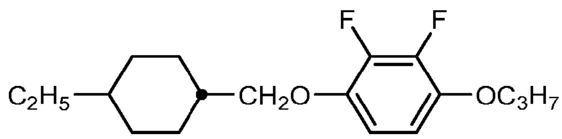

IIA-40-3

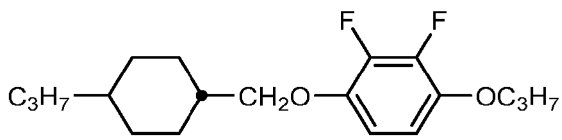

IIA-40-4

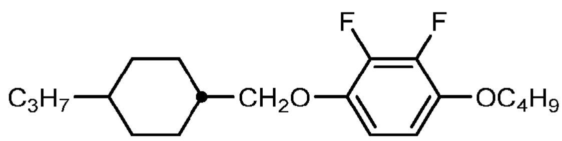

IIA-40-5

Alternatively, preferably in addition to the compounds of the formulae IIA-40-1 to IIA-40-5, the LC medium comprises one or more compounds of the following formulae:

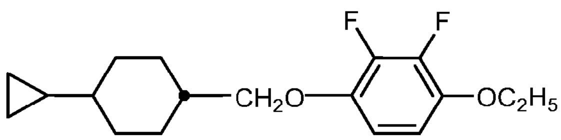

IIA-40a-1

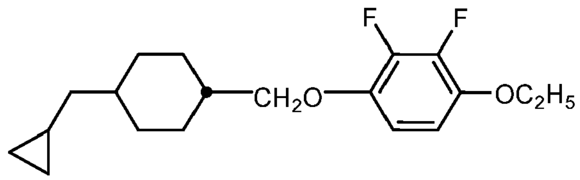

IIA-40a-2

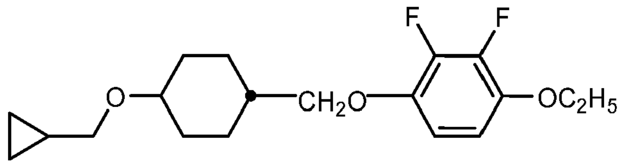

IIA-40a-3

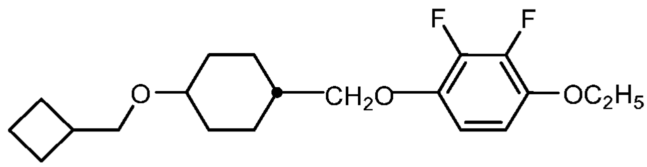

IIA-40a-4

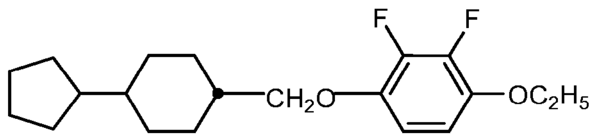

IIA-40a-5

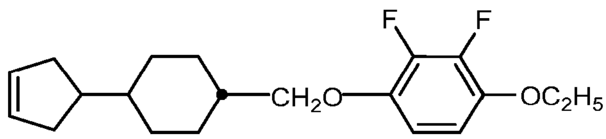

IIA-40a-6

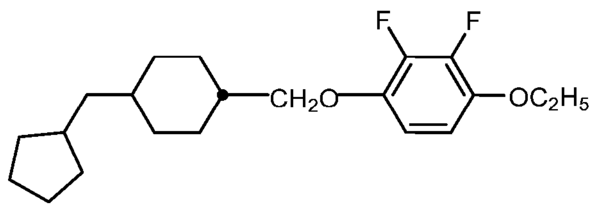

IIA-40a-7

Further preferably, the LC medium comprises one or more compounds of the formula IIA-42 selected from the following sub-formulae:

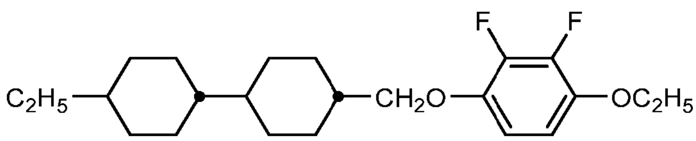

IIA-42-1

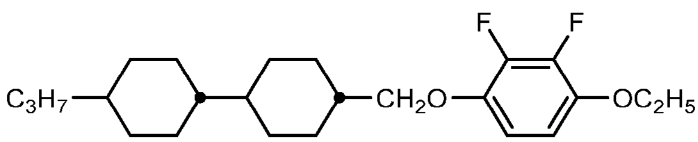

IIA-42-2

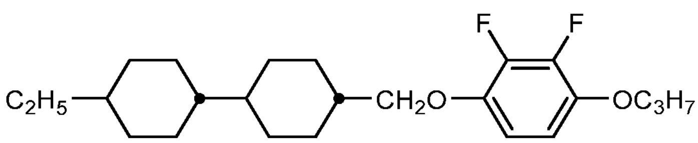

IIA-42-3

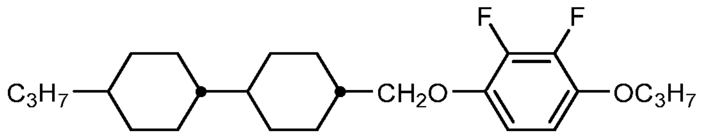

IIA-42-4

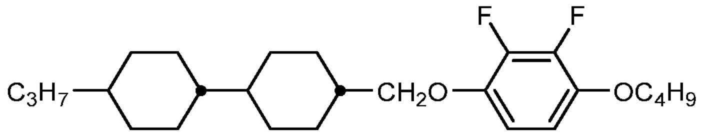

IIA-42-5

Further preferably, the LC medium comprises one or more compounds of the formula IIA-69 selected from the following subformulae:

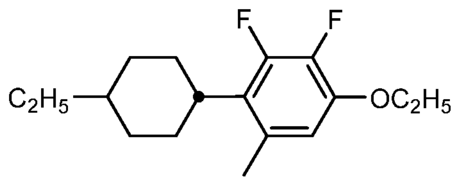

IIA-69-1

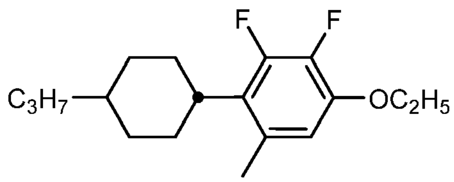

IIA-69-2

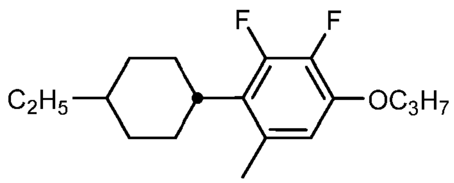

IIA-69-3

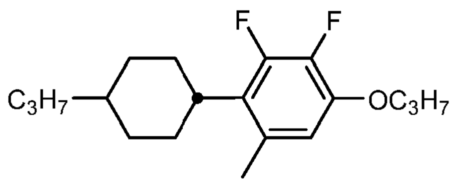

IIA-69-4

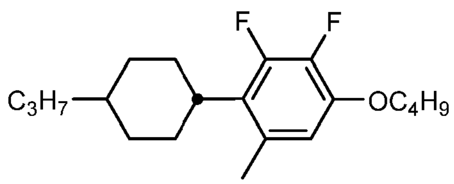

IIA-69-5

Further preferably, the LC medium comprises one or more compounds of the formula IIA-71 selected from the following sub-formulae:

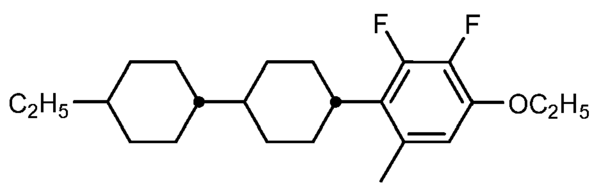

IIA-71-1

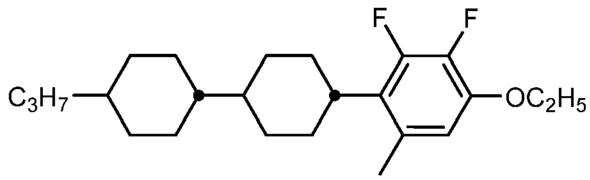

IIA-71-2

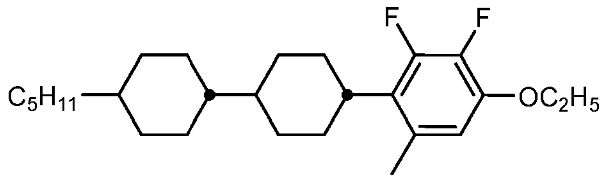

IIA-71-3

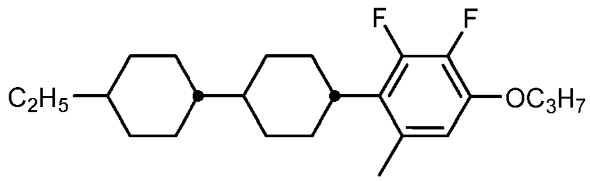

IIA-71-4

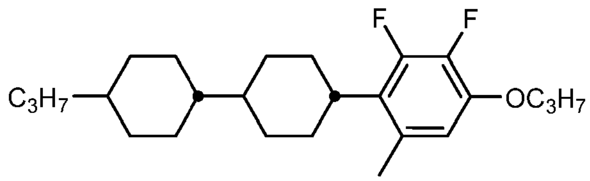

IIA-71-5

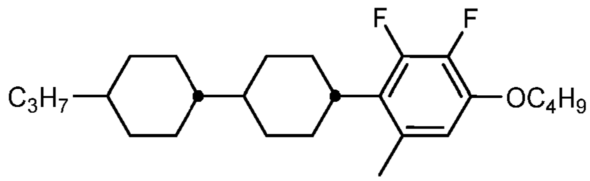

IIA-71-6

Further preferably, the LC medium comprises one or more compounds of the formula IIA-83 selected from the following sub-formulae:

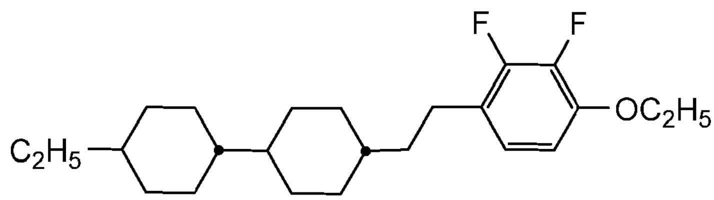

IIA-83-1

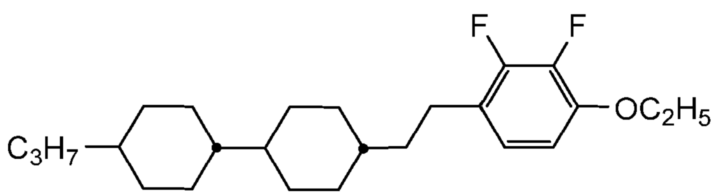

IIA-83-2

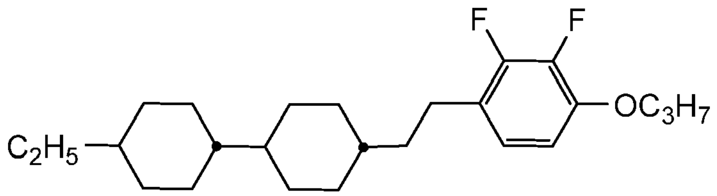

IIA-83-3

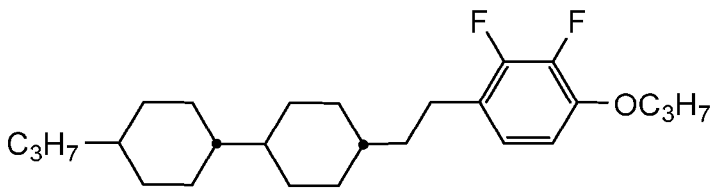

IIA-83-4

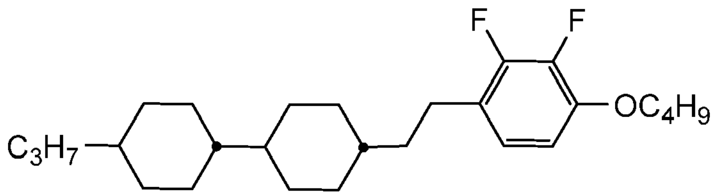

IIA-83-5

Preferred LC media additionally comprise one or more compounds of formula IIA-Y

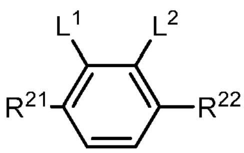

IIA-Y

in which $R^{21}$ and $R^{22}$ have one of the meanings given in formula IIA above, and $L^1$ and $L^2$, identically or differently, denote F or Cl.

Preferred compounds of the formula IIA-Y are selected from the group consisting of the following subformulae

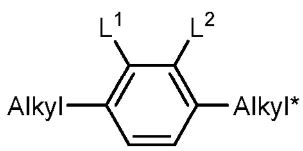

IIA-Y1

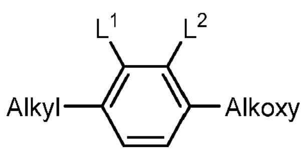

IIA-Y2

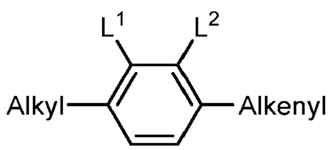

IIA-Y3

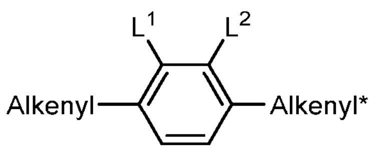

IIA-Y4

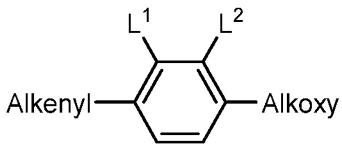

IIA-Y5

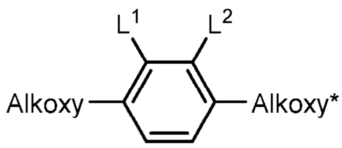

IIA-Y6

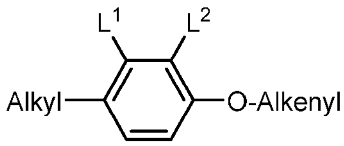

IIA-Y7

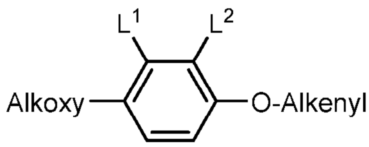

IIA-Y8

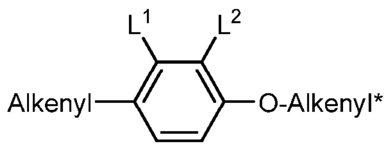

IIA-Y9

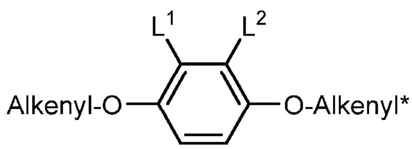

IIA-Y10

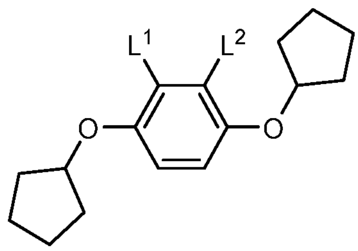

IIA-Y11

in which, Alkyl and Alkyl* each, independently of one another, denote a straight-chain or branched alkyl radical having 1-6 C atoms, Alkoxy denotes a straight-chain or branched alkoxy radical having 1-6 C atoms, Alkenyl and Alkenyl* each, independently of one another, denote a straight-chain or branched alkenyl radical having 2-6 C atoms, and O denotes an oxygen atom or a single bond. Alkenyl and Alkenyl* preferably denote $CH_2$=CH-, $CH_2$=$CHCH_2CH_2$-, $CH_3$-CH=CH-, $CH_3$-$CH_2$-CH=CH-, $CH_3$-$(CH_2)_2$-CH=CH-, $CH_3$-$(CH_2)_3$-CH=CH- or $CH_3$-CH=CH-$(CH_2)_2$-.

Particularly preferred compounds of the formula IIA-Y are selected from the group consisting of following subformulae:

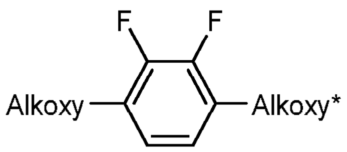

IIA-Y6a

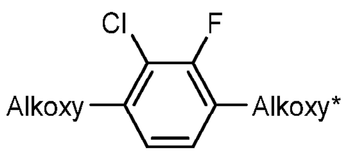

IIA-Y6b

in which Alkoxy and Alkoxy* have the meanings defined above and preferably denote methoxy, ethoxy, n-propyloxy, n-butyloxy or n-pentyloxy.

In another preferred embodiment the LC medium comprises one or more compounds of the formula IIB selected from the group consisting of formulae IIB-1 to IIB-35,

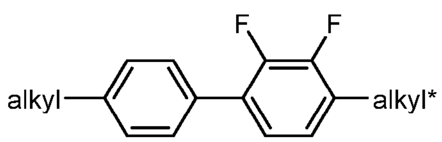

IIB-1

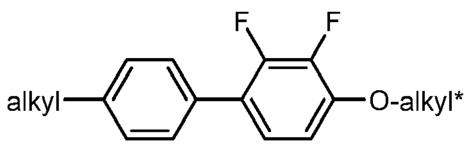

IIB-2

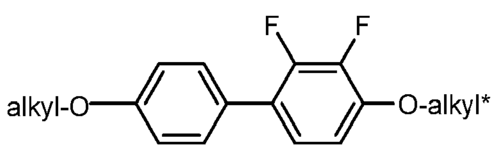

IIB-3

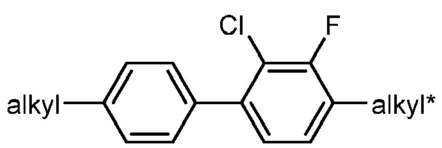

IIB-4

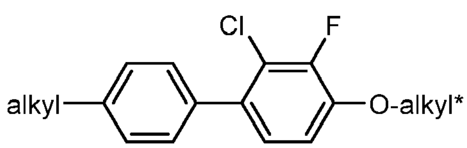

IIB-5

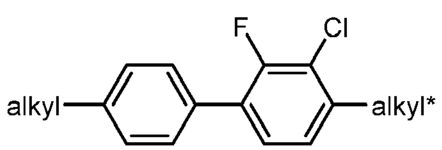

IIB-6

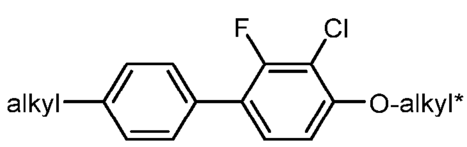

IIB-7

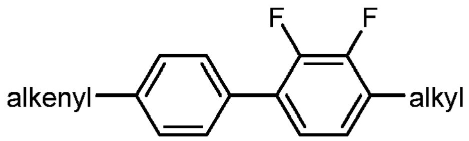

IIB-8

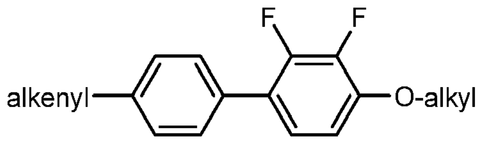

IIB-9

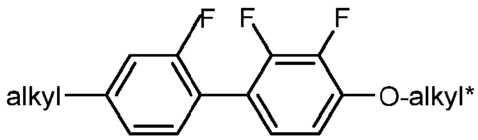

IIB-10

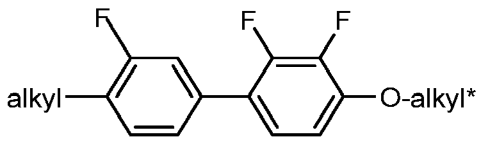

IIB-11

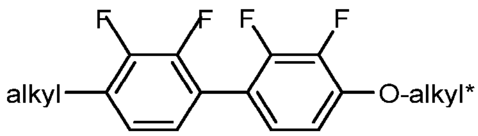

IIB-12

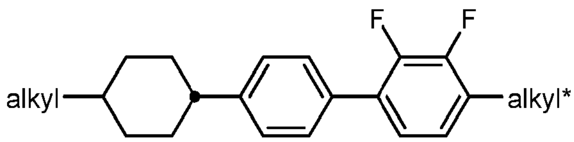

IIB-13

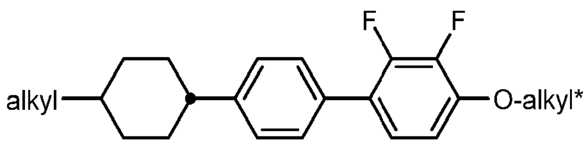

IIB-14

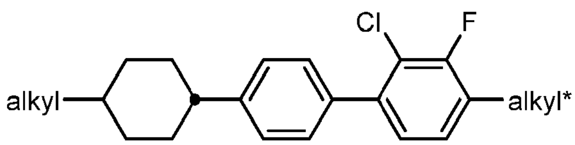

IIB-15

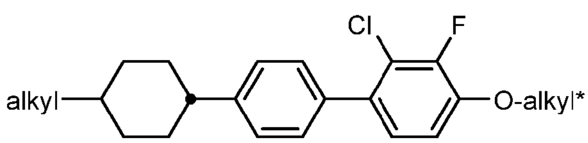

IIB-16

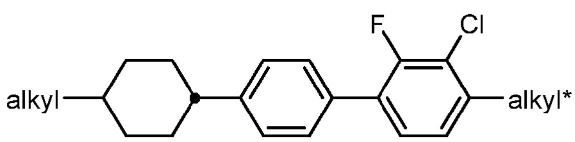

IIB-17

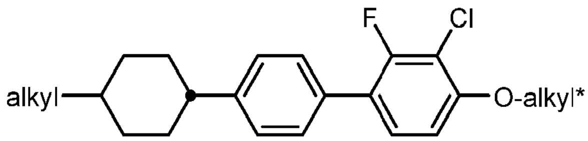

IIB-18

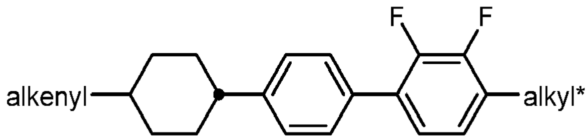

IIB-19

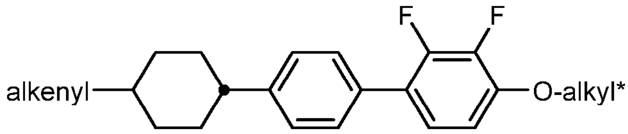

IIB-20

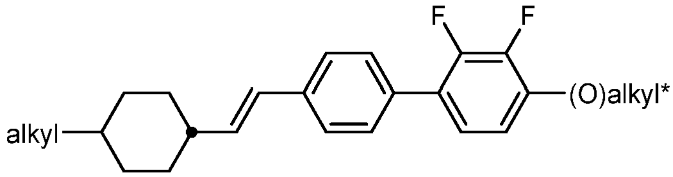

IIB-21

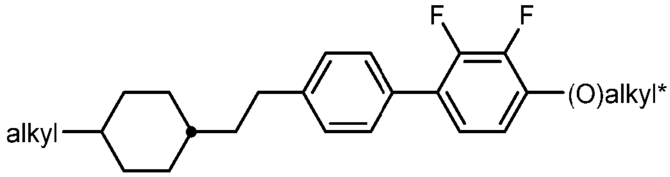

IIB-22

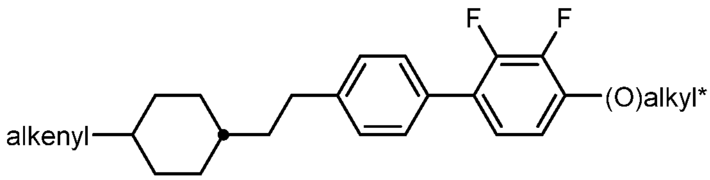

IIB-23

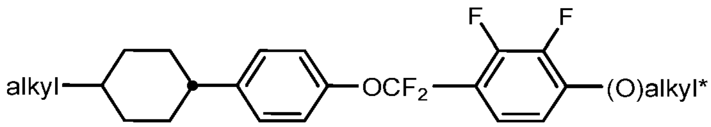

IIB-24

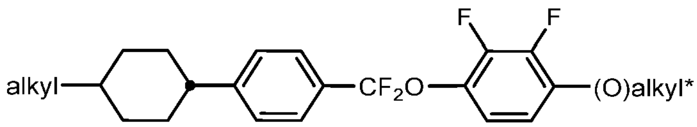

IIB-25

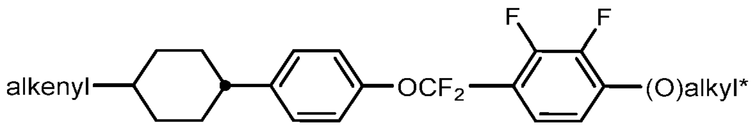

IIB-26

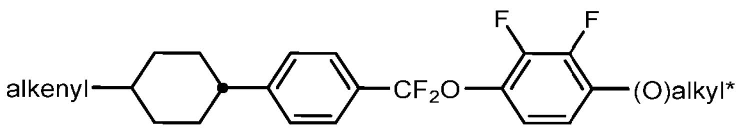

IIB-27

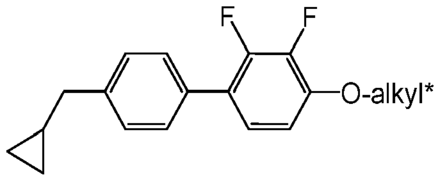

IIB-28

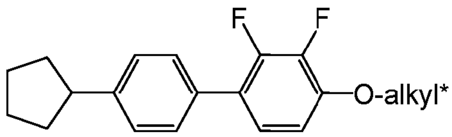

IIB-29

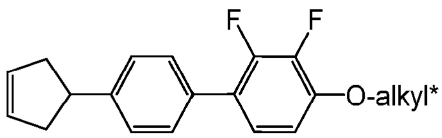

IIB-30

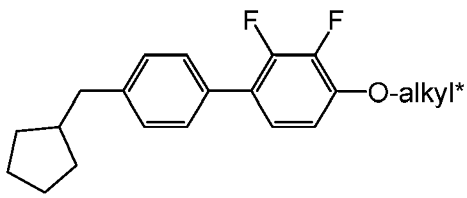

IIB-31

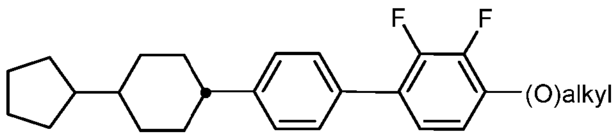

IIB-32

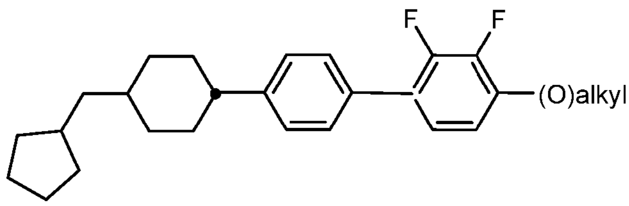

IIB-33

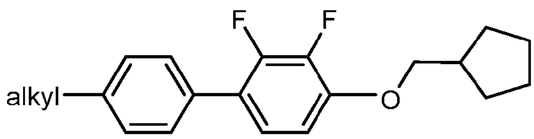

IIB-34

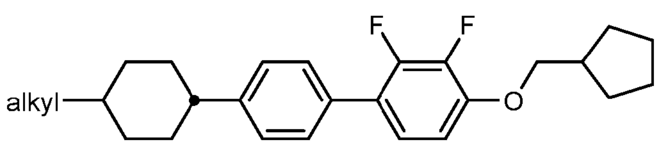

IIB-35

in which alkyl and alkyl* each, independently of one another, denote a straight-chain or branched alkyl radical having 1-6 C atoms, alkenyl denotes a straight-chain or branched alkenyl radical having 2-6 C atoms, and (O) denotes an oxygen atom

or a single bond, and alkenyl preferably denotes $CH_2$=CH-, $CH_2$=$CHCH_2CH_2$-, $CH_3$-CH=CH-, $CH_3$-$CH_2$-CH=CH-, $CH_3$-$(CH_2)_2$-CH=CH-, $CH_3$-$(CH_2)_3$-CH=CH- or $CH_3$-CH=CH-$(CH_2)_2$-.

Particularly preferred LC media according to the invention comprise one or more compounds selected from the group consisting of formulae IIB-2, IIB-14 and IIB-20.

Preferably, the LC medium comprises one or more compounds of the formula IIB-14 selected from the following sub-formulae:

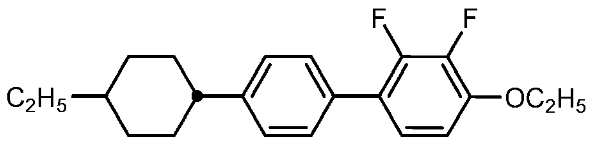

IIB-14-1

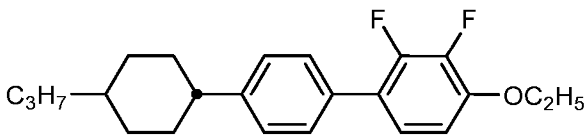

IIB-14-2

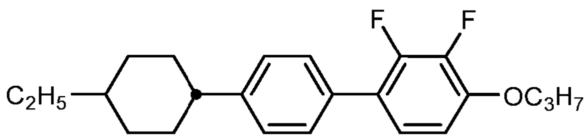

IIB-14-3

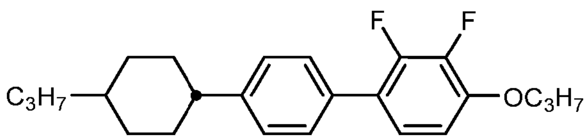

IIB-14-4

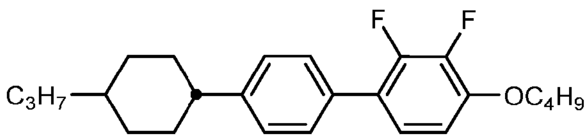

IIB-14-5

Alternatively, preferably in addition to the compounds of the formulae IIB-14-1 to IIB-14-5, the LC medium comprises one or more compounds of the formulae IIB-14a-1 to IIB-14a-5:

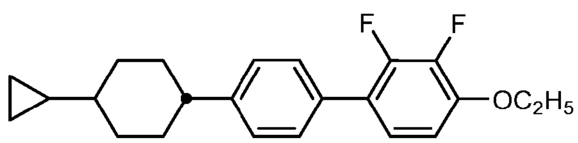

IIB-14a-1

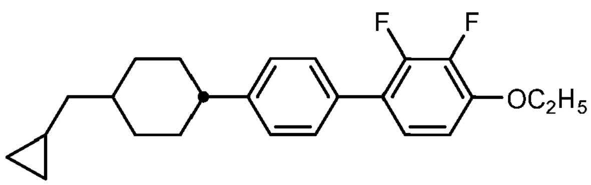

IIB-14a-2

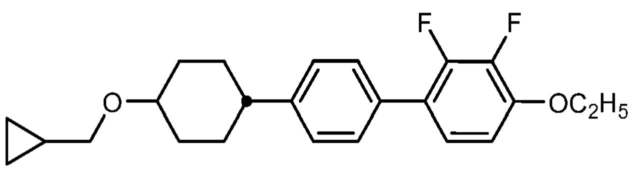

IIB-14a-3

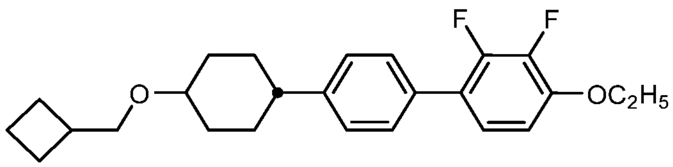

IIB-14a-4

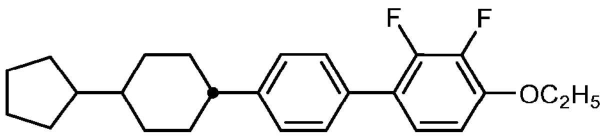

IIB-14a-5

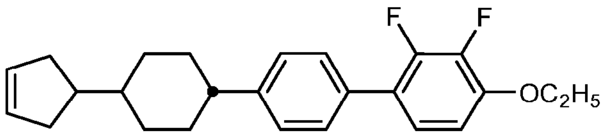

IIB-14a-6

Preferably, the LC medium comprises one or more compounds of the formula IIB-20 selected from the following sub-formulae:

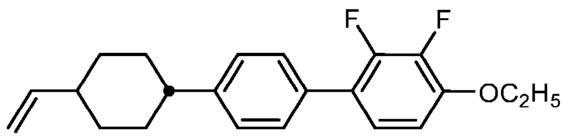

IIB-20-1

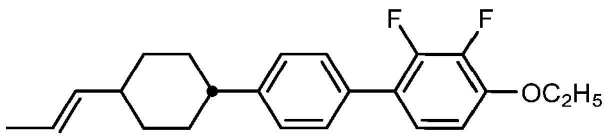

IIB-20-2

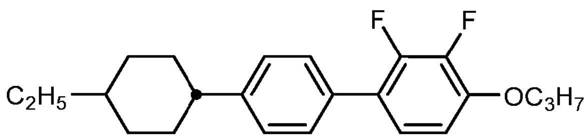

IIB-20-3

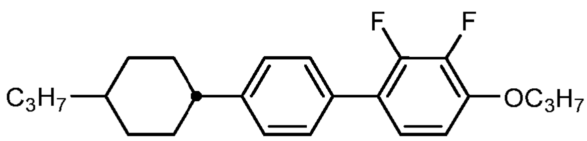

IIB-20-4

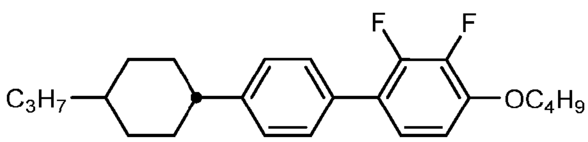

IIB-20-5

In another preferred embodiment the LC medium comprises one or more compounds of the formula IIC selected from the formula IIC-1,

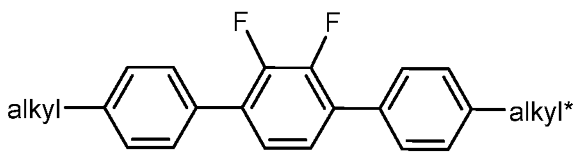

IIC-1

in which alkyl and alkyl* each, independently of one another, denote a straight-chain alkyl radical having 1-6 C atoms,

preferably in amounts of 0.5% to 5 % by weight, in particular 1% to 3 % by weight.

In another preferred embodiment the LC medium comprises one or more compounds of the formula IID selected from the group consisting of the following formulae,

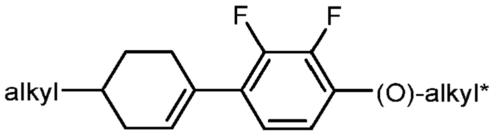

IID-1

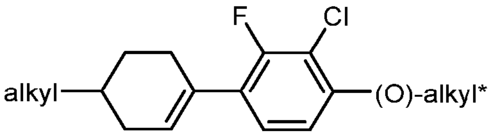

IID-2

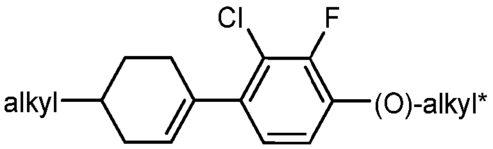

IID-3

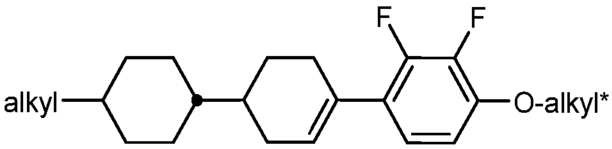

IID-4

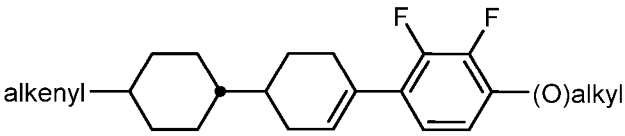

IID-5

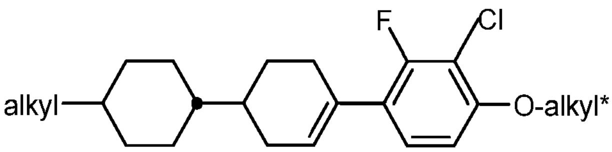

IID-6

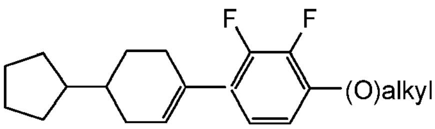

IID-7

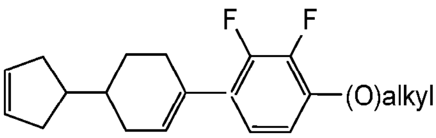

IID-8

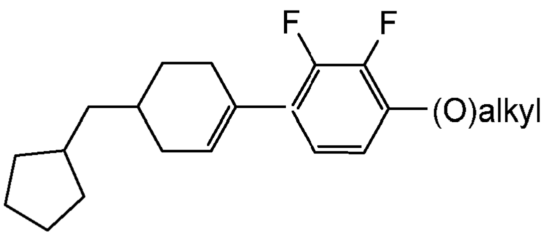

IID-9

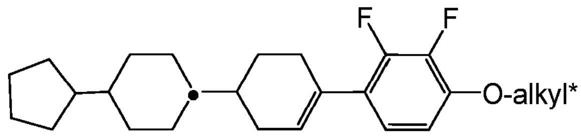
IID-10

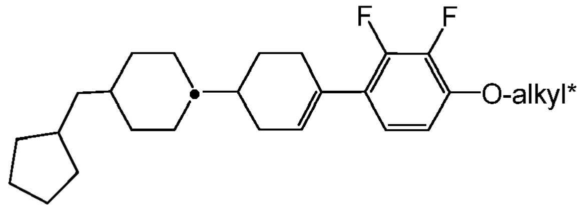
IID-11

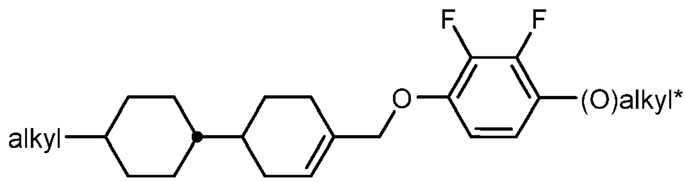
IID-12

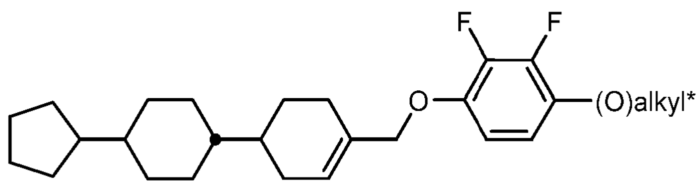
IID-13

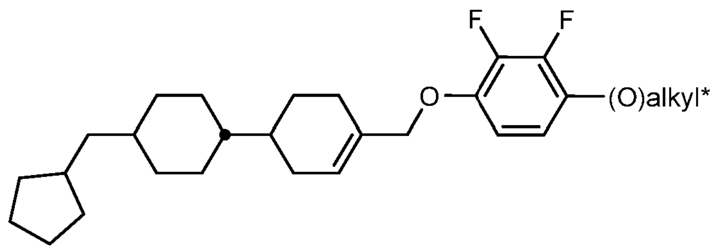
IID-14

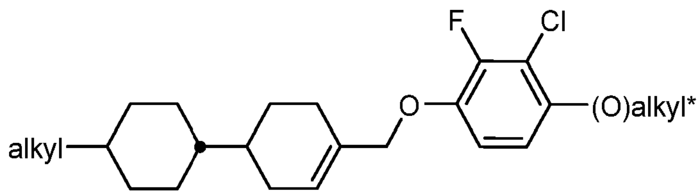
IID-15

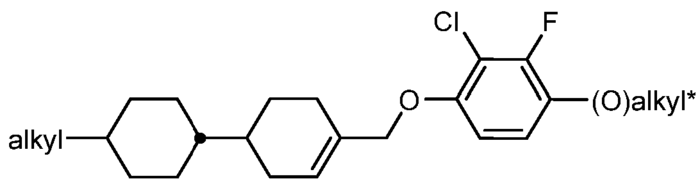
IID-16

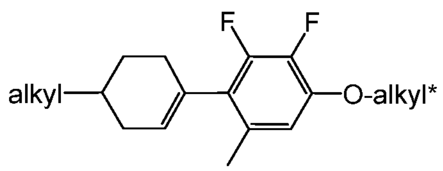
IID-17

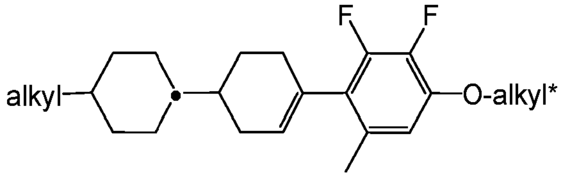

IID-18

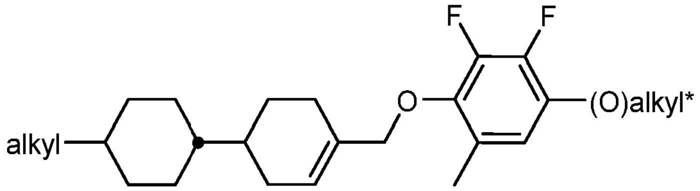

IID-19

in which alkyl and alkyl* each, independently of one another, denote a straight-chain or branched alkyl radical having 1-6 C atoms, alkenyl denotes a straight-chain or branched alkenyl radical having 2-6 C atoms, and (O) denotes an oxygen atom or a single bond, and alkenyl preferably denotes $CH_2$=CH-, $CH_2$=$CHCH_2CH_2$-, $CH_3$-CH=CH-, $CH_3$-$CH_2$-CH=CH-, $CH_3$-$(CH_2)_2$-CH=CH-, $CH_3$-$(CH_2)_3$-CH=CH- or $CH_3$-CH=CH-$(CH_2)_2$-.

Particularly preferred LC media according to the invention comprise one or more compounds of the formula IID-1, IID-4, IID-12, and/or IID-19.

Very preferred compounds of the formula IID are selected from the following subformulae of IID-1,

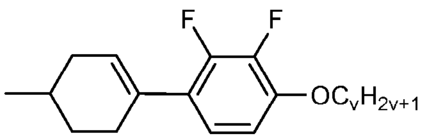

IID-1-1

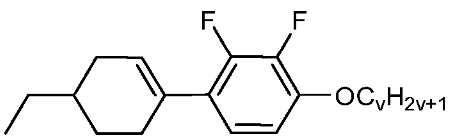

IID-1-2

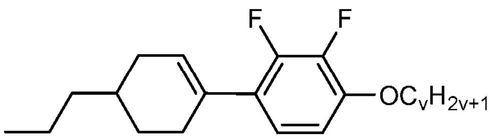

IID-1-3

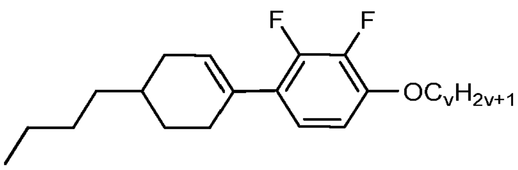

IID-1-4

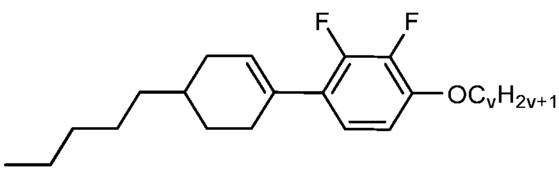

IID-1-5

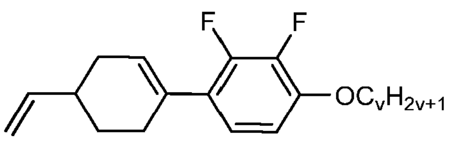

IID-1-6

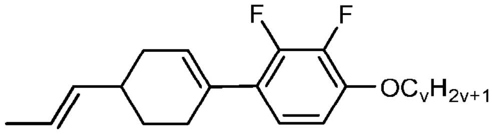

IID-1-7

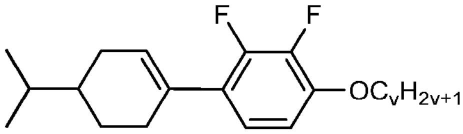

IID-1-8

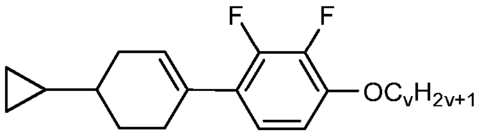

IID-1-9

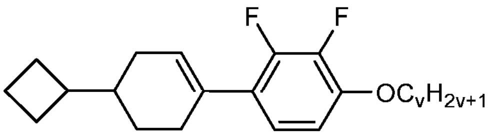

IID-1-10

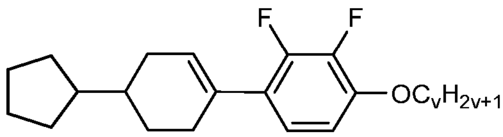

IID-1-11

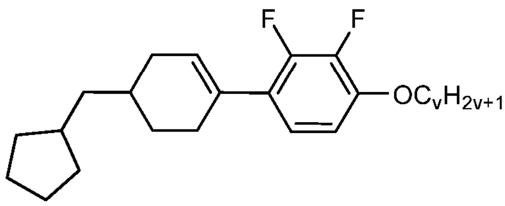

IID-1-12

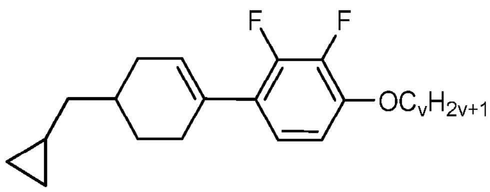

IID-1-13

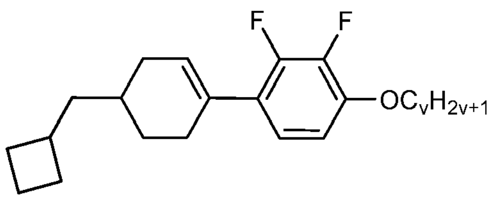

IID-1-14

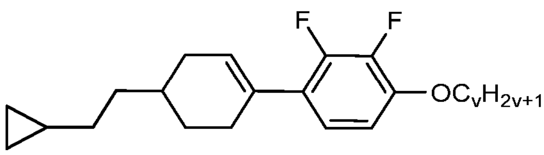

IID-1-15

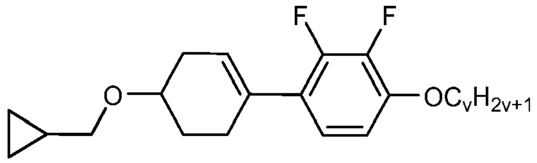
IID-1-16

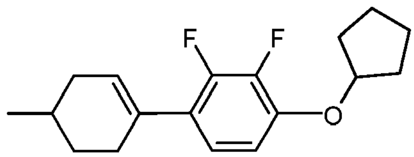
IID-1-17

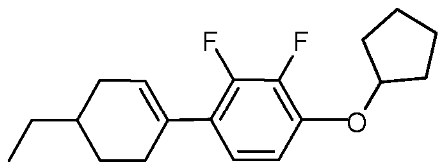
IID-1-18

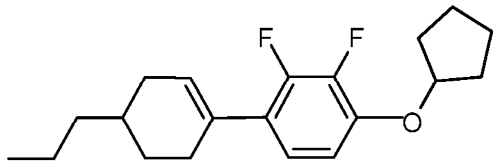
IID-1-19

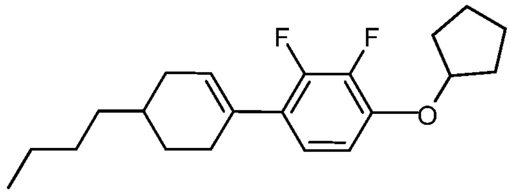
IID-1-20

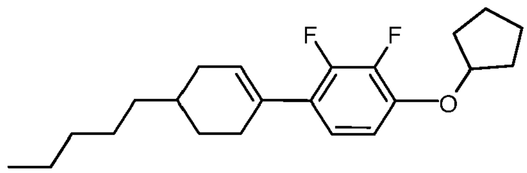
IID-1-21

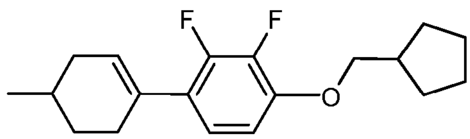
IID-1-22

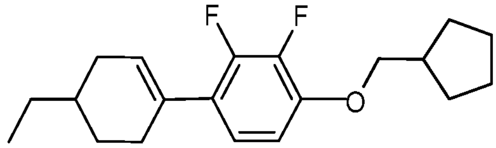
IID-1-23

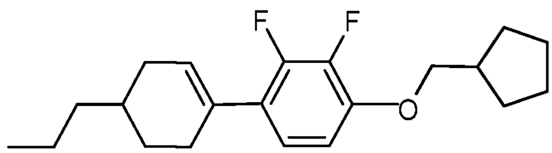
IID-1-24

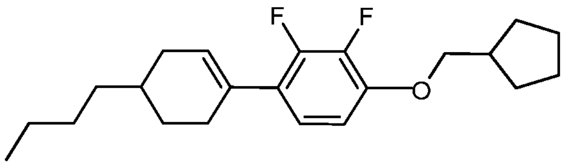

IID-1-25

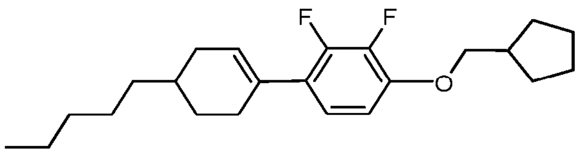

IID-1-26

wherein v is 1, 2, 3, 4, 5 or 6.

Very preferred compounds of the formula IID are selected from the following subformulae of IID-4,

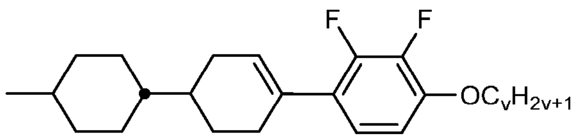

IID-4-1

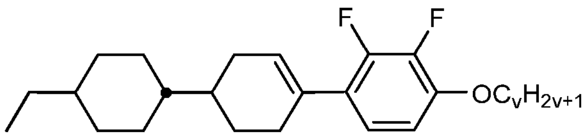

IID-4-2

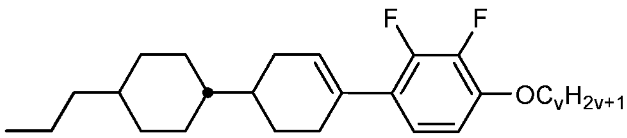

IID-4-3

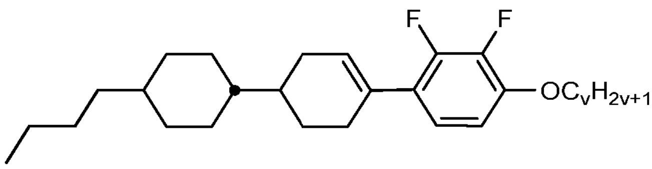

IID-4-4

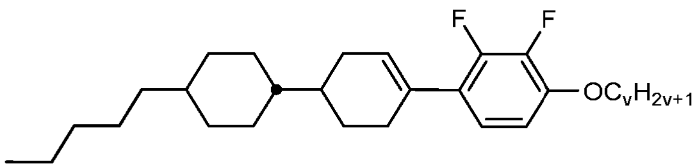

IID-4-5

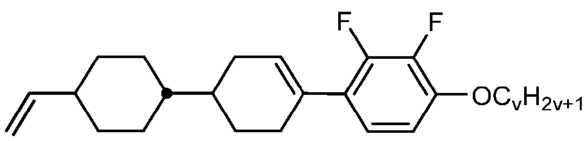

IID-4-6

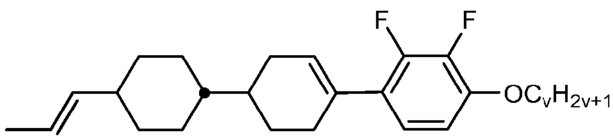

IID-4-7

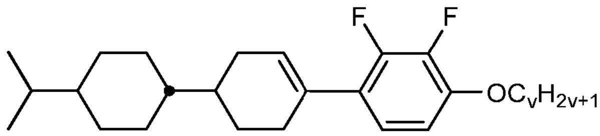

IID-4-8

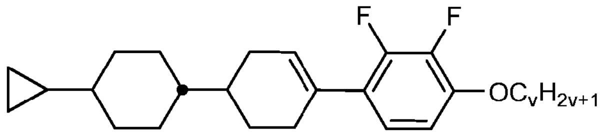

IID-4-9

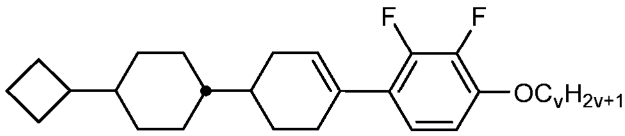

IID-4-10

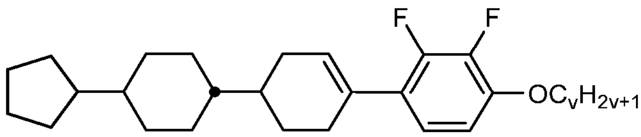

IID-4-11

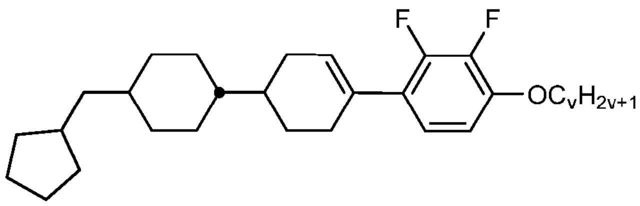

IID-4-12

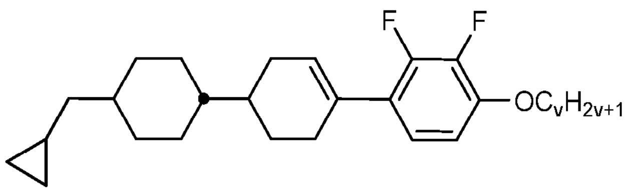

IID-4-13

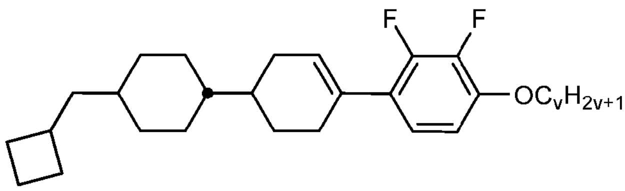

IID-4-14

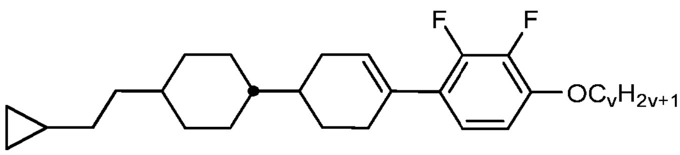

IID-4-15

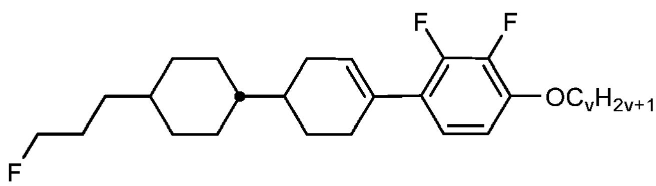

IID-4-16

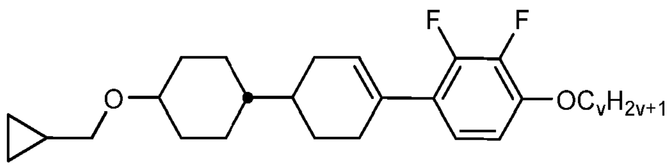

IID-4-17

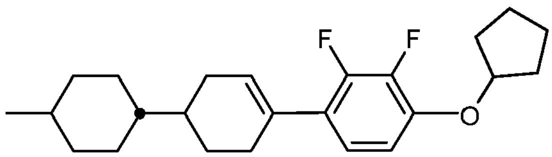

IID-4-18

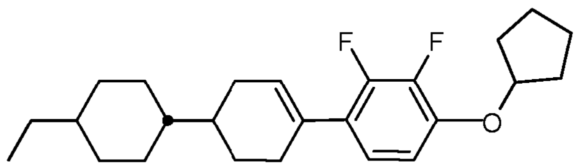

IID-4-19

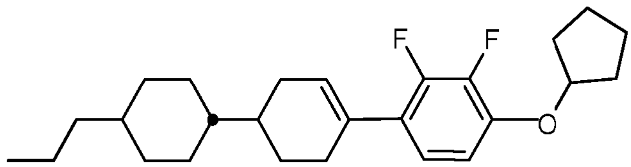

IID-4-20

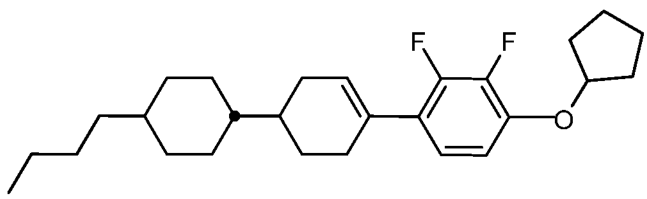

IID-4-21

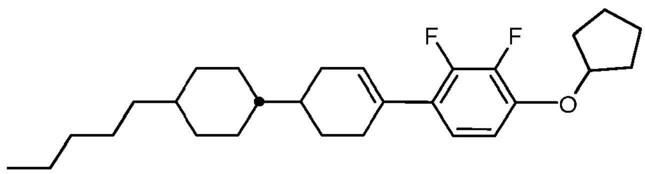

IID-4-22

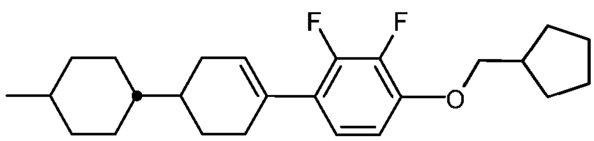

IID-4-23

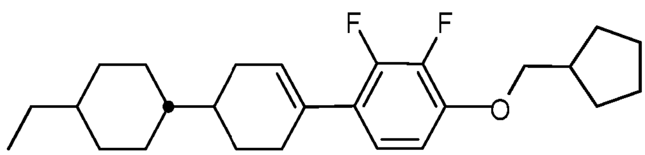

IID-4-24

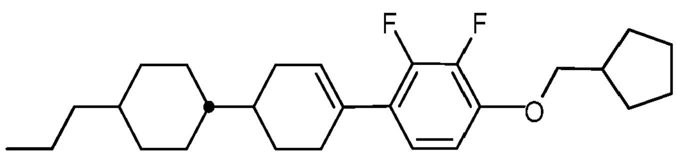

IID-4-25

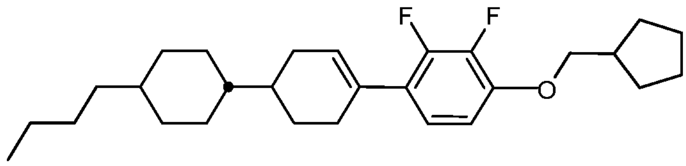

IID-4-26

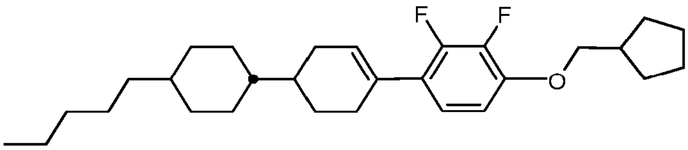

IID-4-27

wherein v is 1, 2, 3, 4, 5 or 6.

Very preferred compounds of the formula IID are selected from the following subformulae of IID-12,

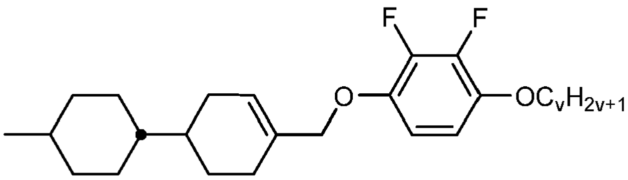

IID-12-1

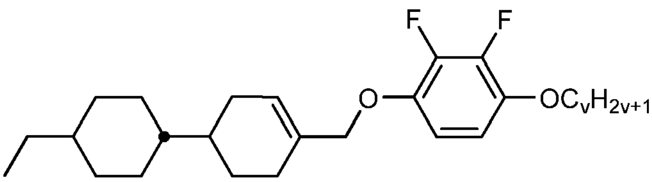

IID-12-2

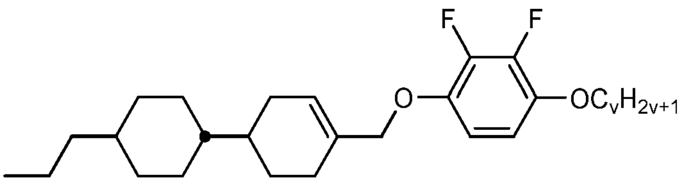

IID-12-3

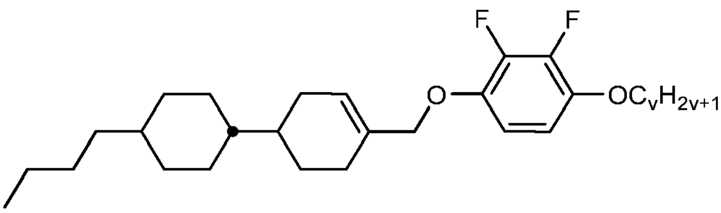

IID-12-4

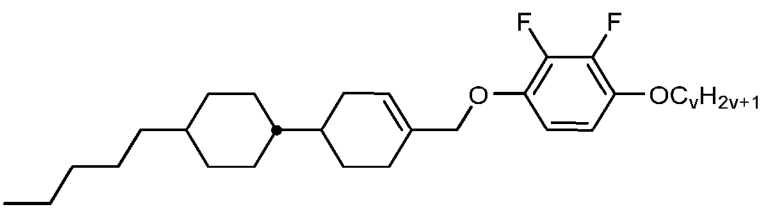

IID-12-5

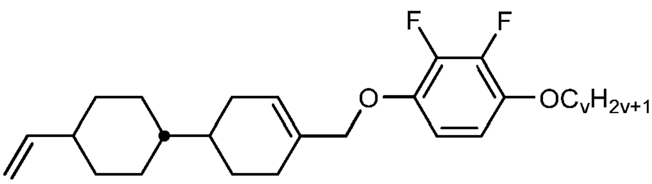

IID-12-6

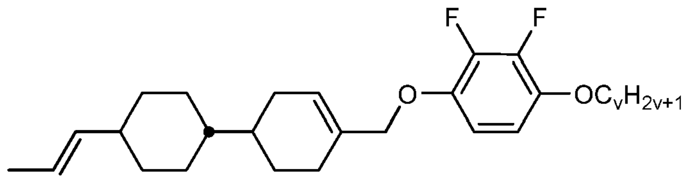

IID-12-7

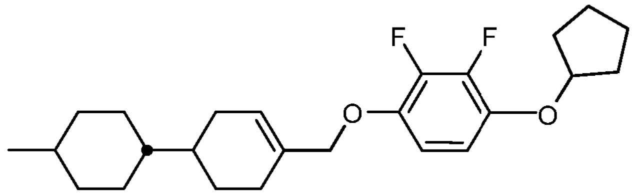

IID-12-8

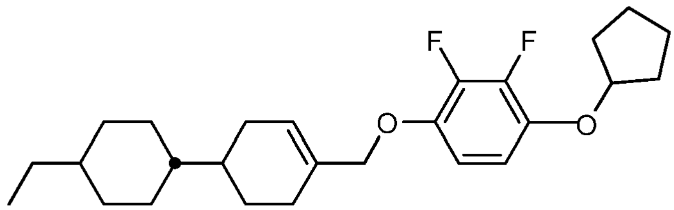

IID-12-9

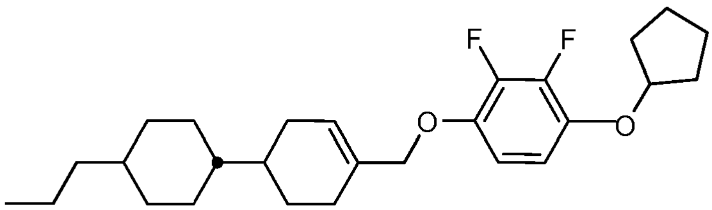

IID-12-10

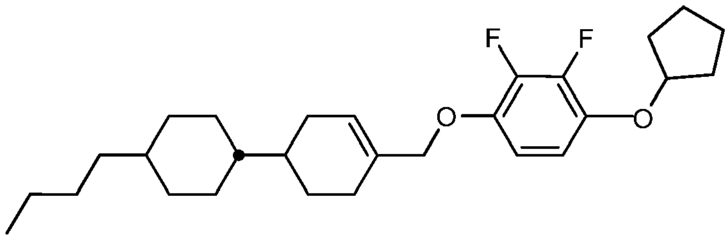

IID-12-11

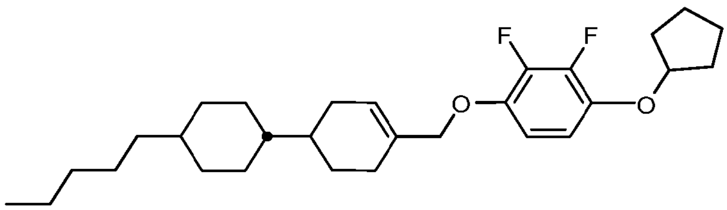

IID-12-12

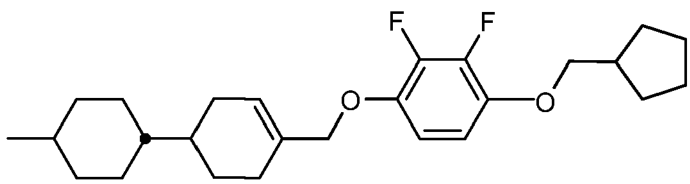

IID-12-13

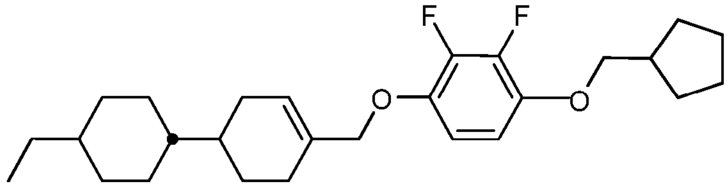

IID-12-14

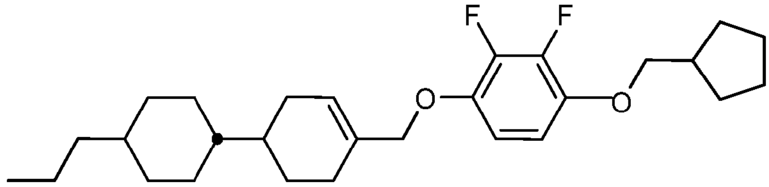

IID-12-15

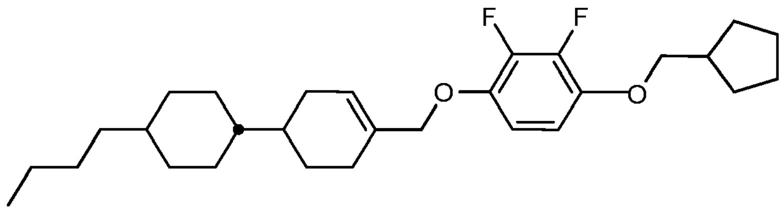

IID-12-16

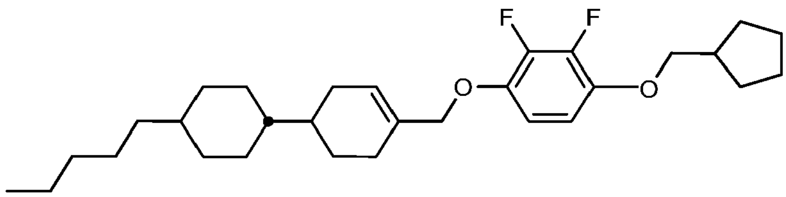

IID-12-17

wherein v is 1, 2, 3, 4, 5 or 6.

In a preferred embodiment, the LC medium comprises one or more compounds of formula IID-12a

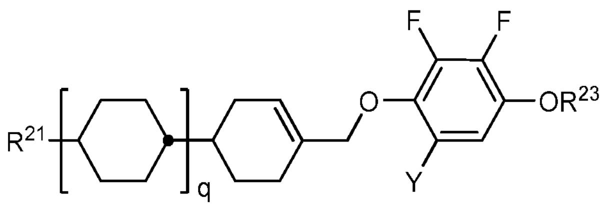

IID-12a

in which $R^{21}$, Y and q have the meanings given in formula IID, and $R^{23}$ is

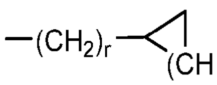

, in which r is 0, 1, 2, 3, 4, 5 or 6 and s is 1, 2 or 3.

Preferred compounds of formula IID-12a are the compounds IID-12a-1 to IID-12a-14:

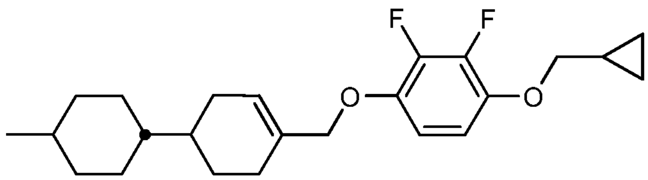

IID-12a-1

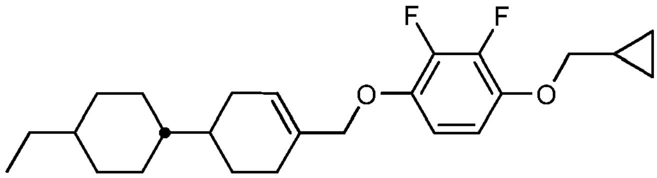

IID-12a-2

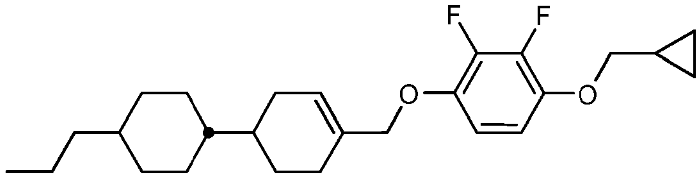

IID-12a-3

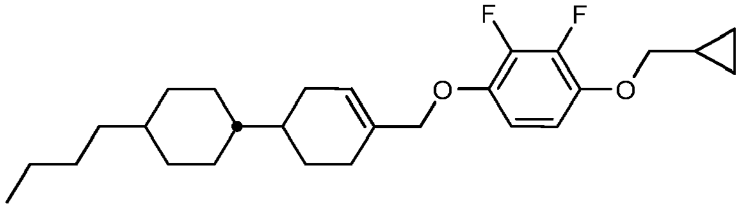

IID-12a-4

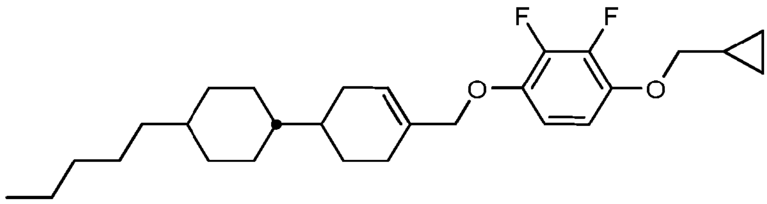

IID-12a-5

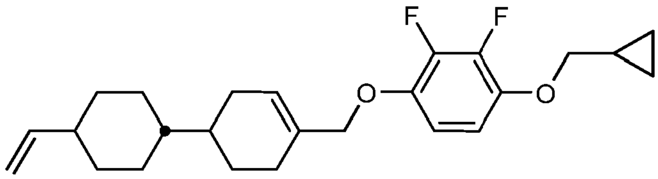

IID-12a-6

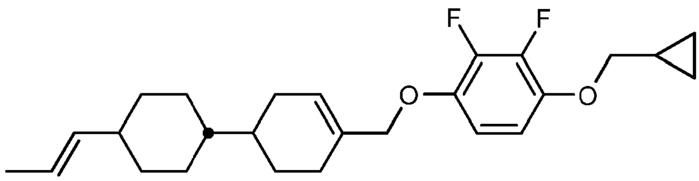

IID-12a-7

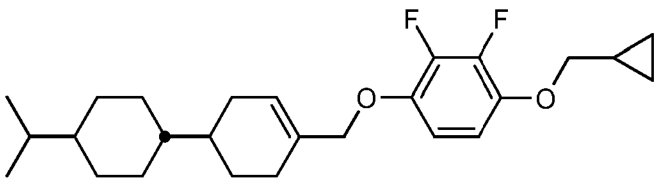

IID-12a-8

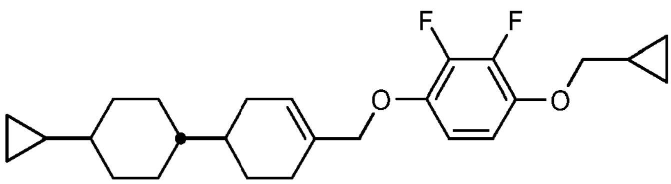

IID-12a-9

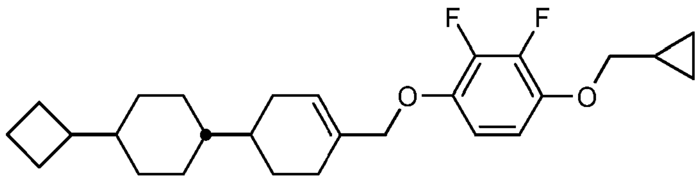

IID-12a-10

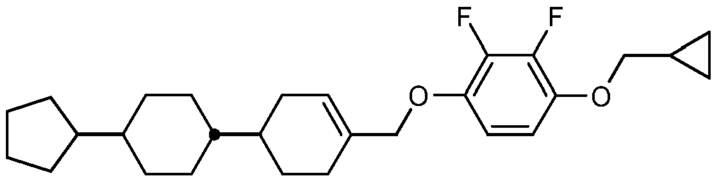

IID-12a-11

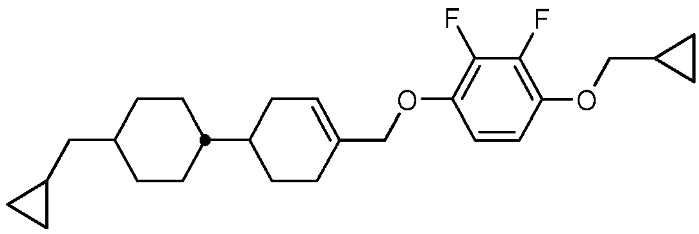

IID-12a-12

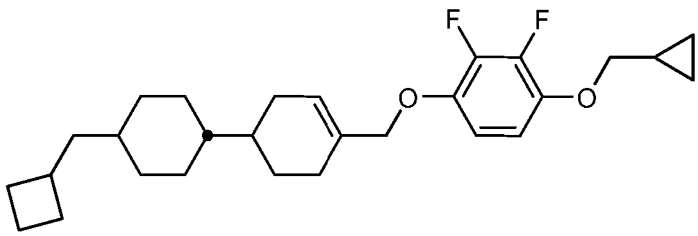

IID-12a-13

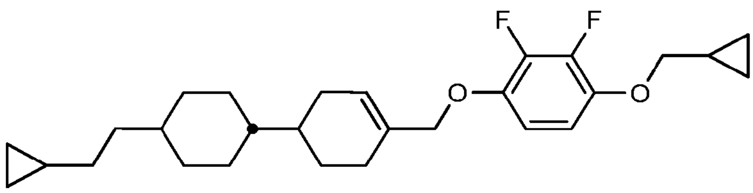

IID-12a-14

Very preferred compounds of the formula IID are selected from the following subformulae of IID-19,

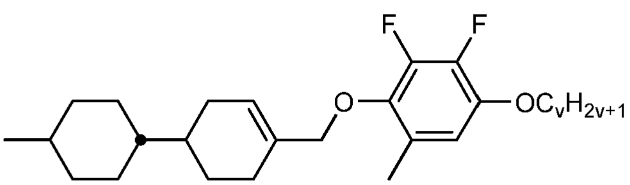

IID-19-1

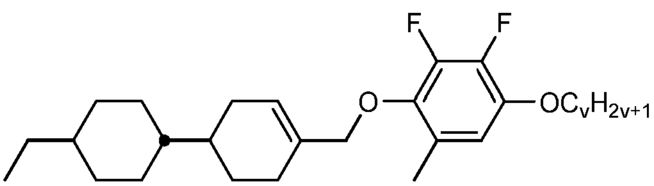

IID-19-2

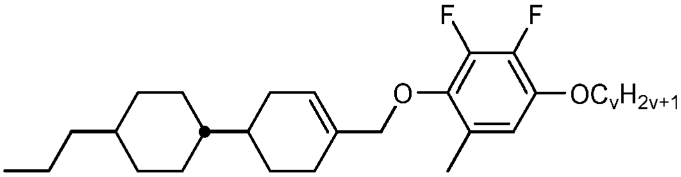

IID-19-3

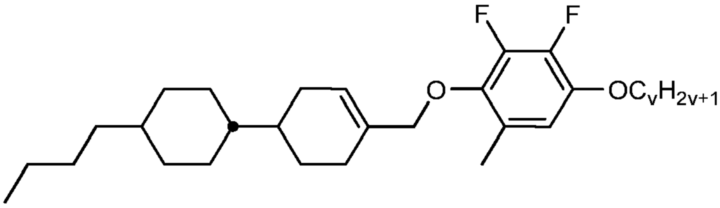

IID-19-4

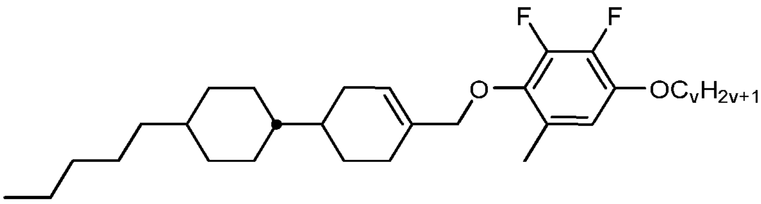

IID-19-5

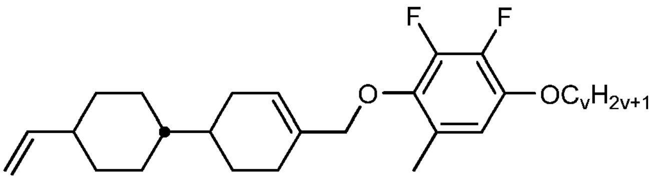

IID-19-6

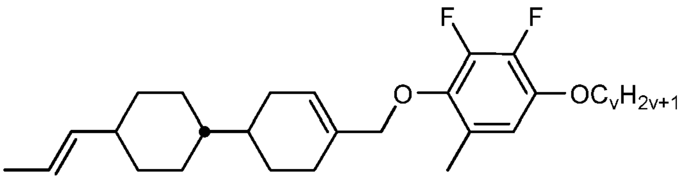

IID-19-7

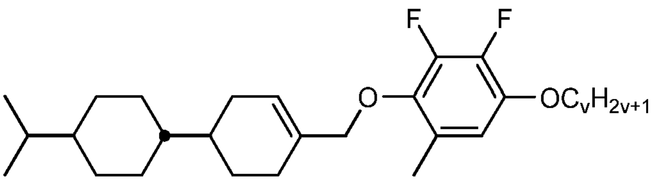

IID-19-8

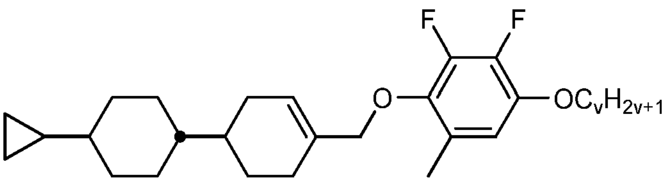

IID-19-9

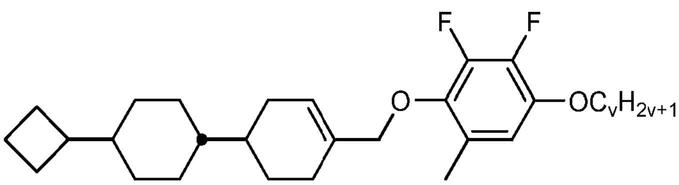

IID-19-10

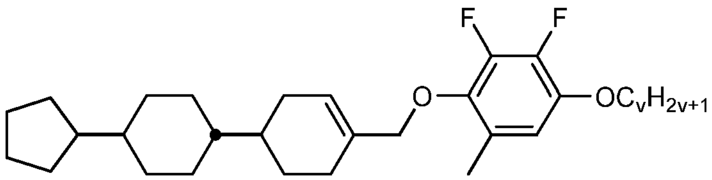

IID-19-11

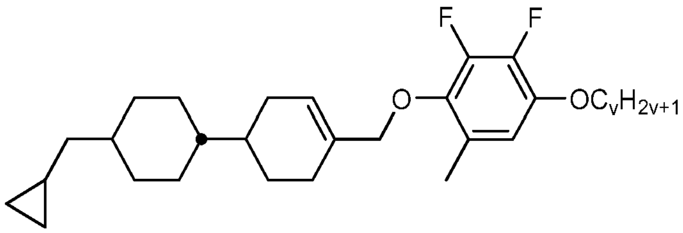

IID-19-12

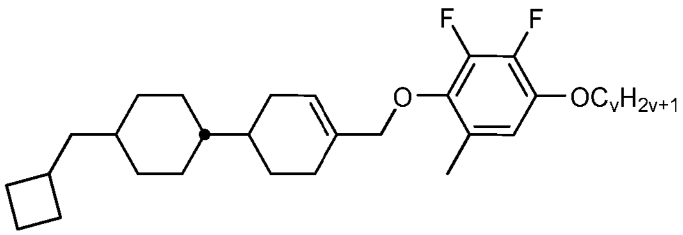

IID-19-13

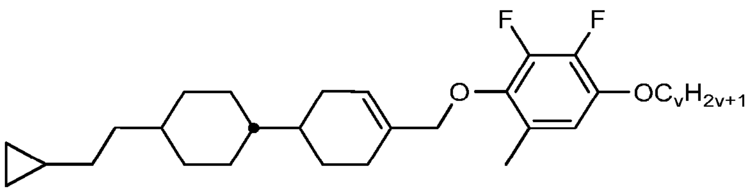

IID-19-14

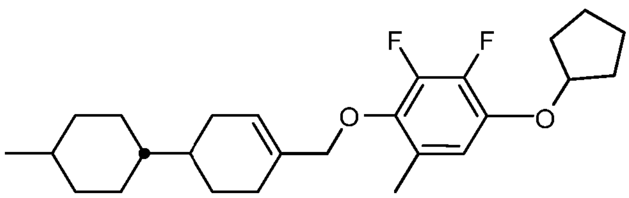

IID-19-15

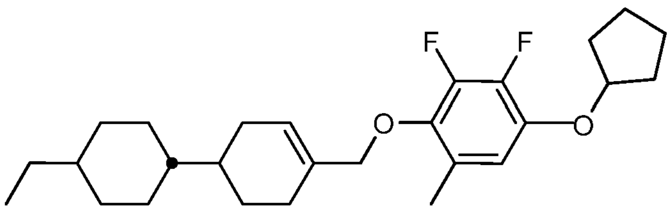

IID-19-16

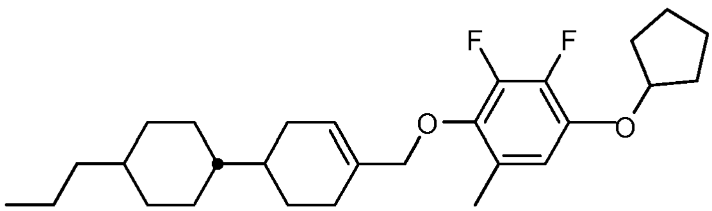

IID-19-17

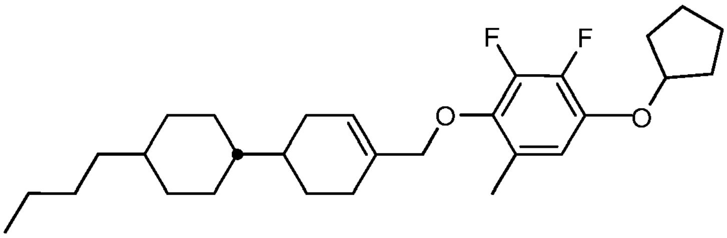

IID-19-18

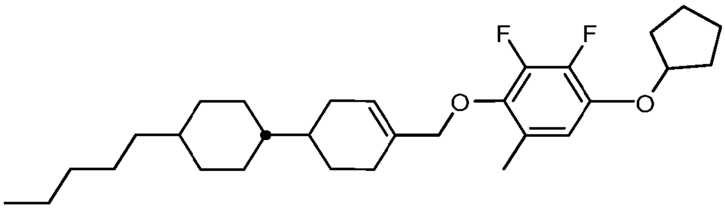

IID-19-19

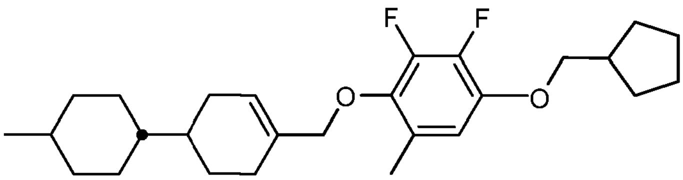

IID-19-20

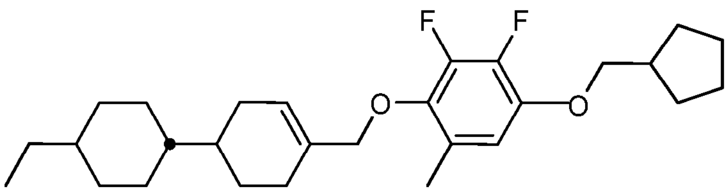

IID-19-21

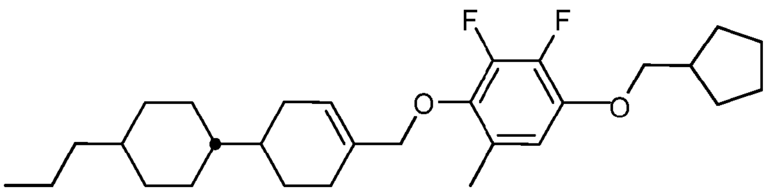

IID-19-22

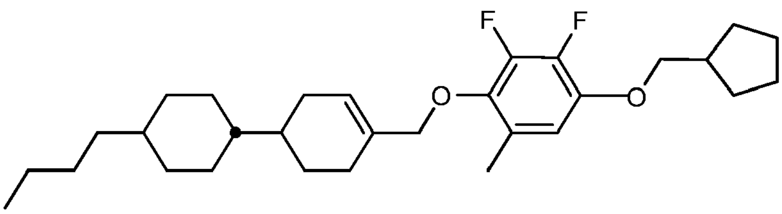

IID-19-23

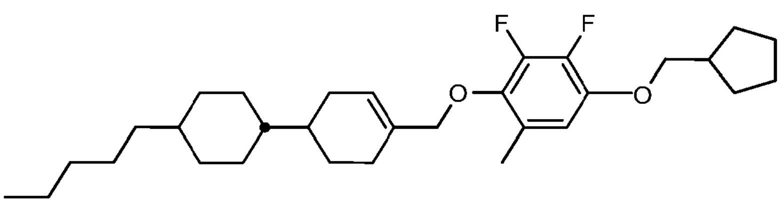

IID-19-24

wherein v is 1, 2, 3, 4, 5 or 6.

In a preferred embodiment the LC medium comprises one or more compounds of the formula IIE selected from the group consisting of the following formulae:

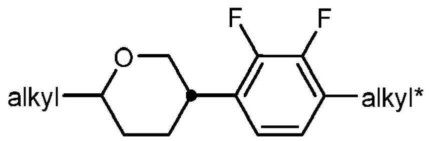

IIE-1

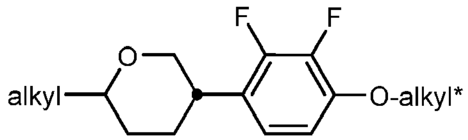

IIE-2

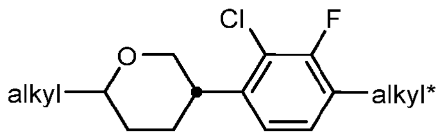

IIE-3

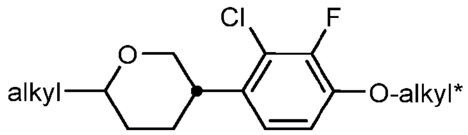

IIE-4

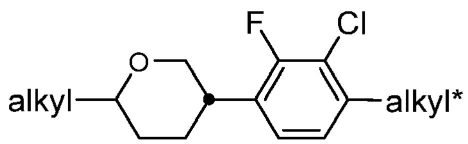

IIE-5

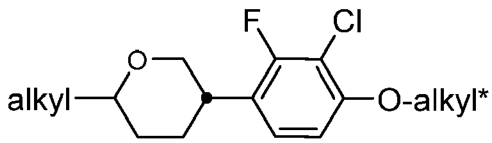

IIE-6

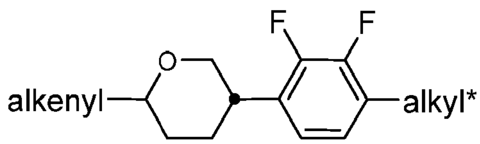

IIE-7

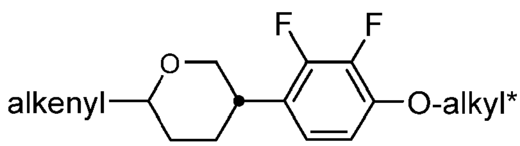

IIE-8

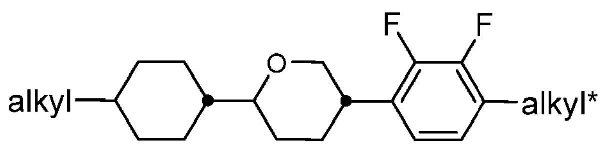

IIE-9

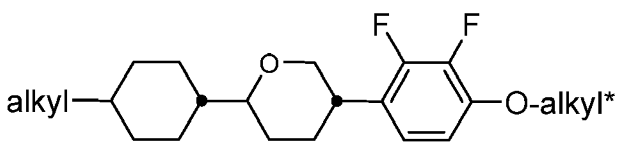

IIE-10

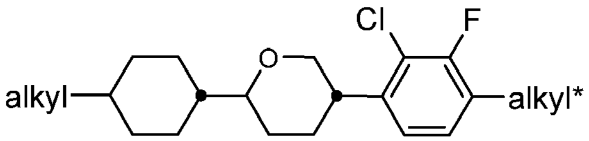

IIE-11

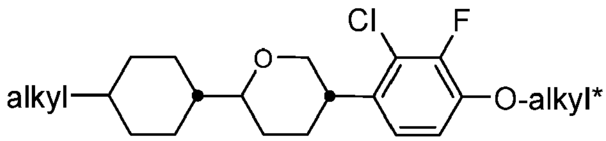

IIE-12

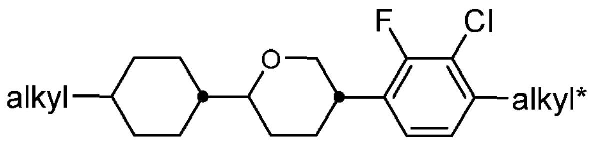

IIE-13

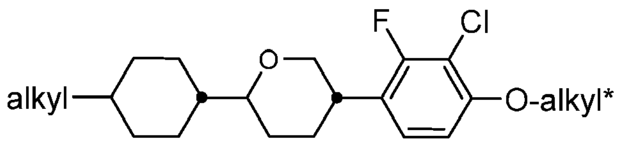

IIE-14

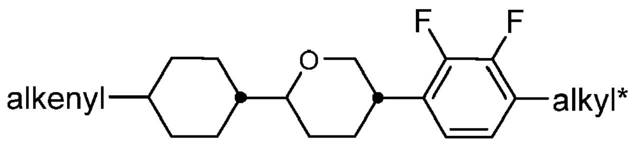

IIE-15

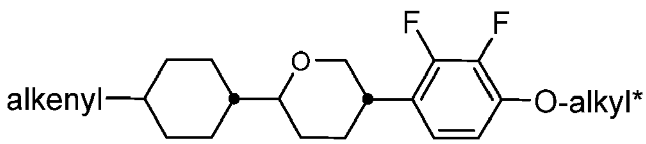

IIE-16

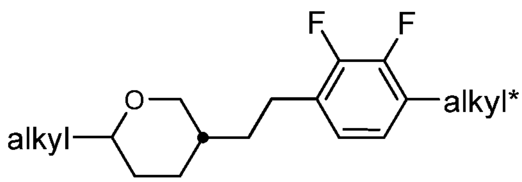

IIE-17

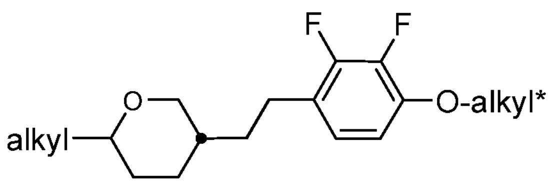

IIE-18

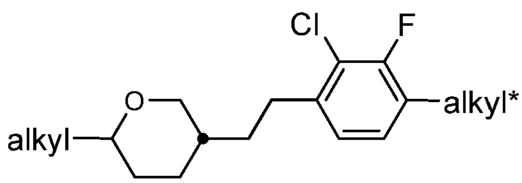

IIE-19

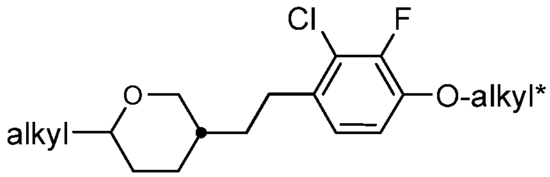

IIE-20

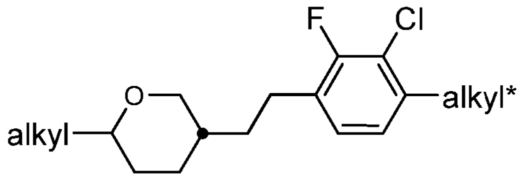

IIE-21

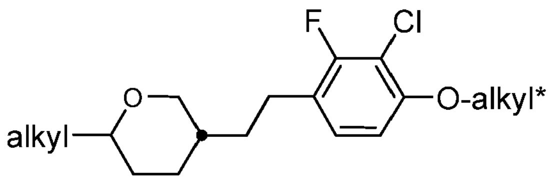

IIE-22

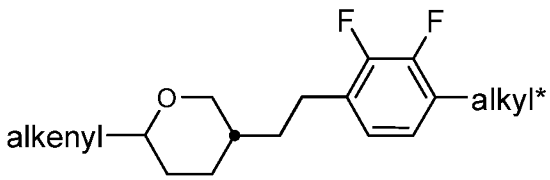

IIE-23

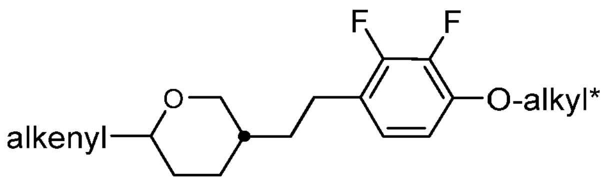

IIE-24

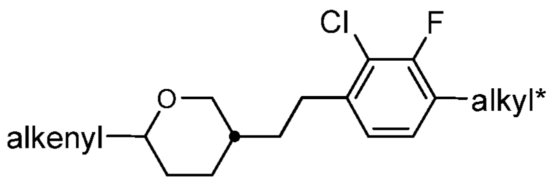

IIE-25

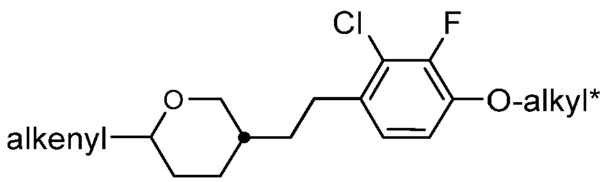

IIE-26

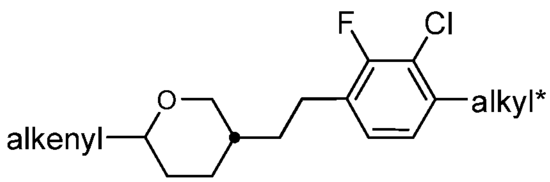

IIE-27

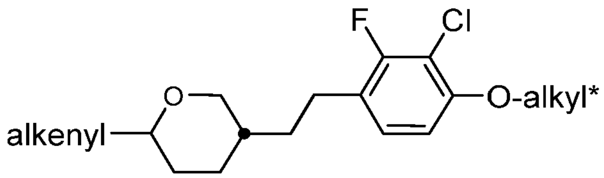

IIE-28

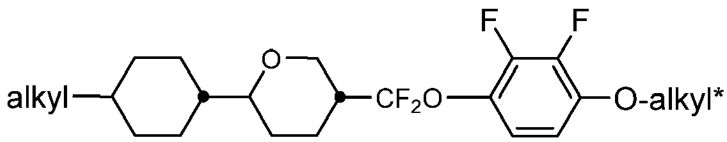

IIE-29

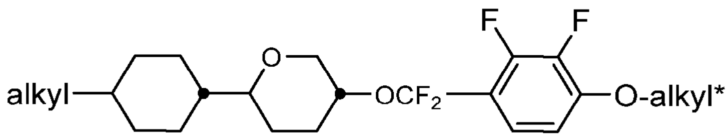

IIE-30

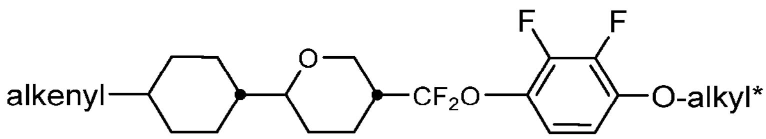

IIE-31

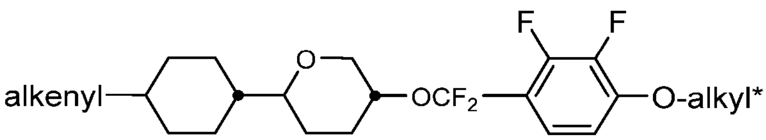

IIE-32

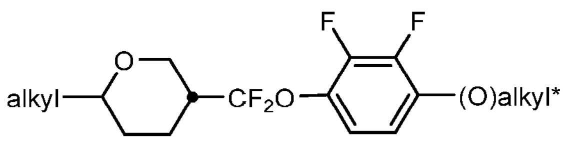

IIE-33

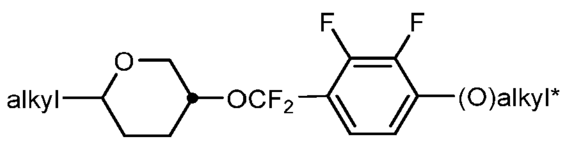

IIE-34

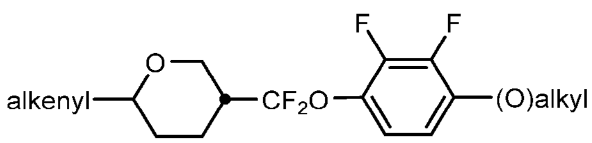

IIE-35

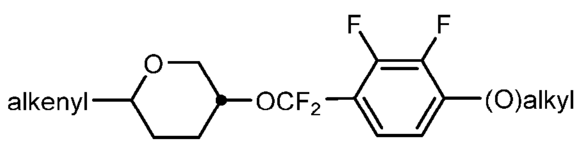

IIE-36

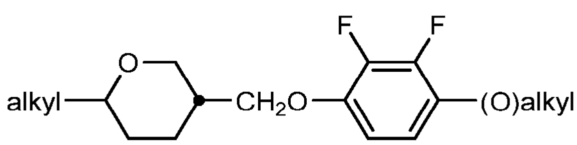

IIE-37

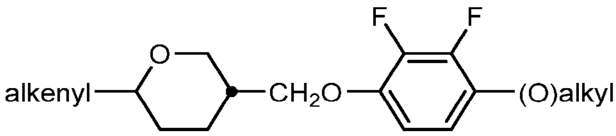

IIE-38

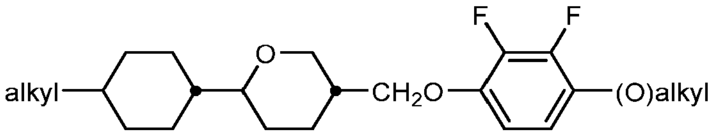

IIE-39

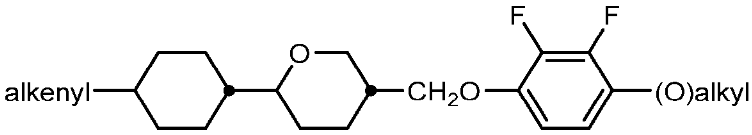

IIE-40

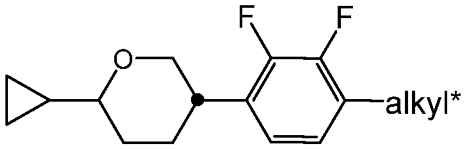

IIE-41

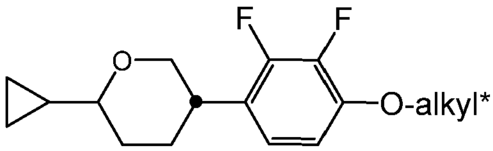

IIE-42

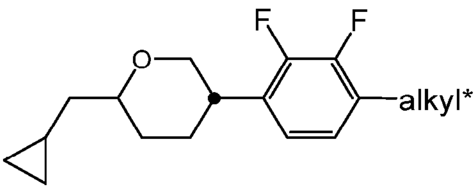

IIE-43

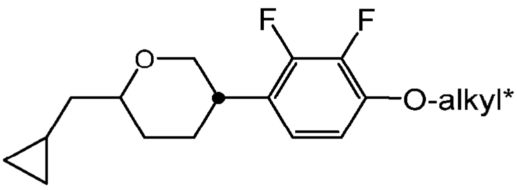

IIE-44

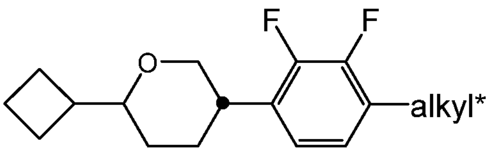

IIE-45

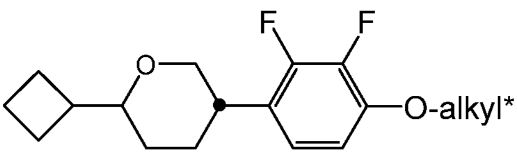

IIE-46

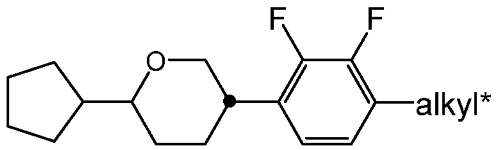

IIE-47

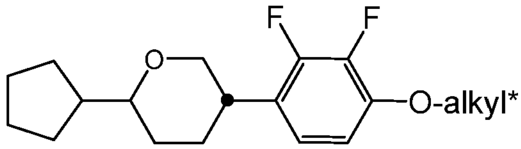

IIE-48

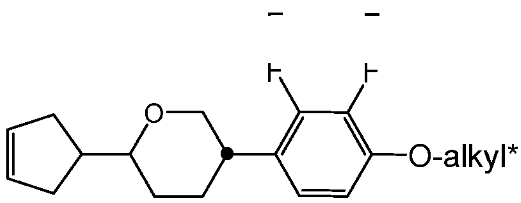

IIE-49

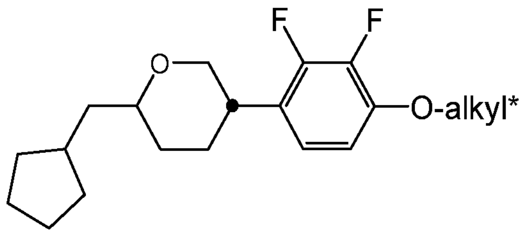

IIE-50

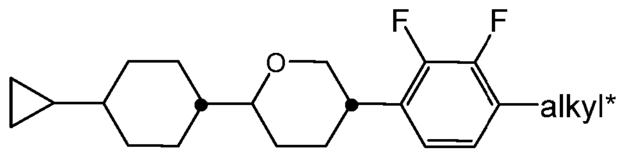

IIE-51

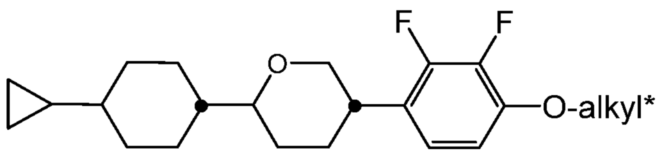

IIE-52

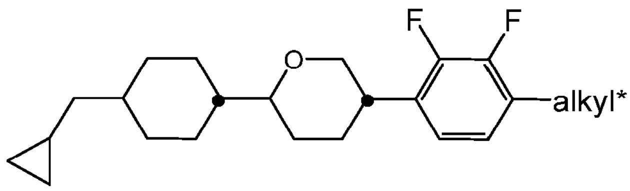

IIE-53

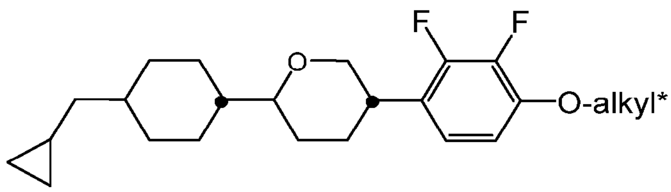

IIE-54

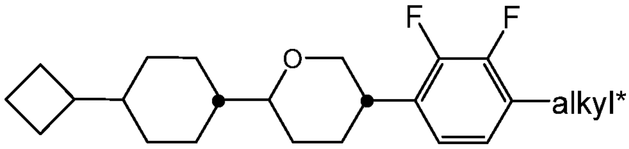

IIE-55

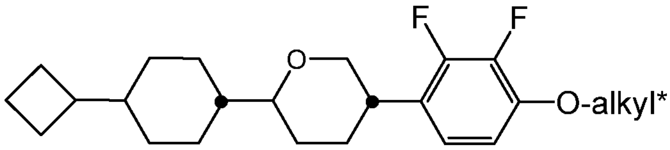

IIE-56

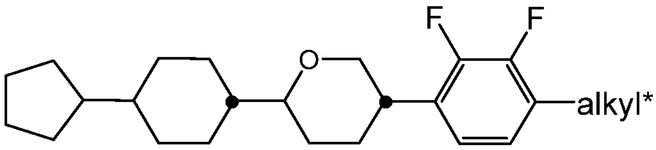

IIE-57

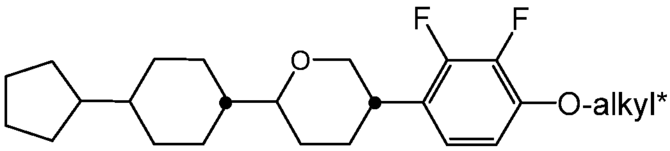

IIE-58

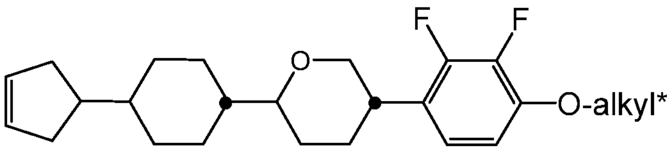

IIE-59

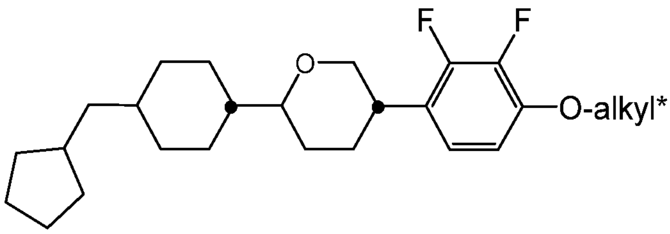

IIE-60

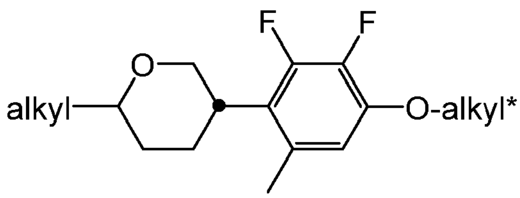

IIE-61

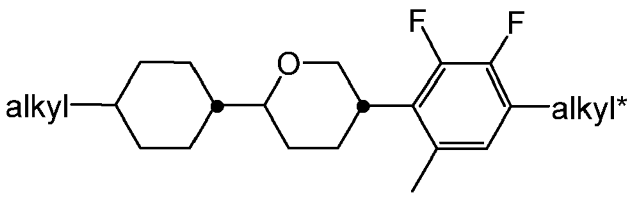

IIE-62

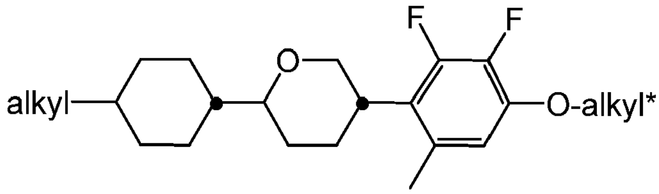

IIE-63

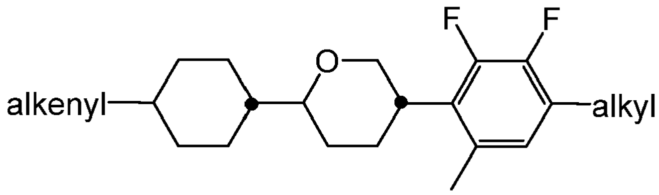

IIE-64

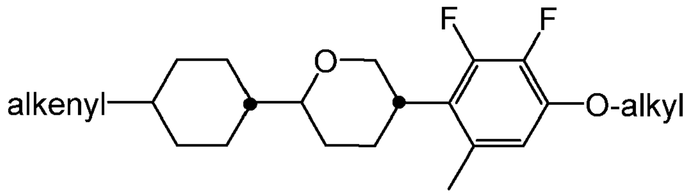

IIE-65

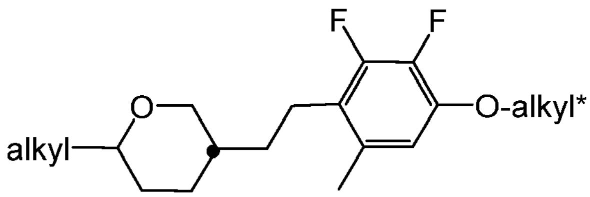

IIE-66

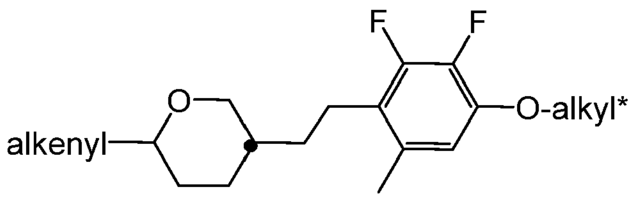

IIE-67

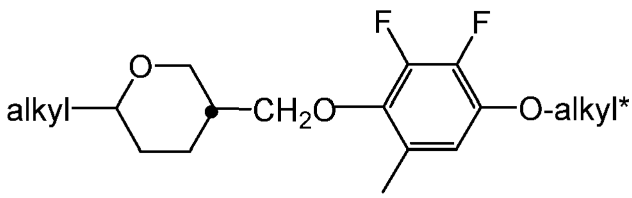

IIE-68

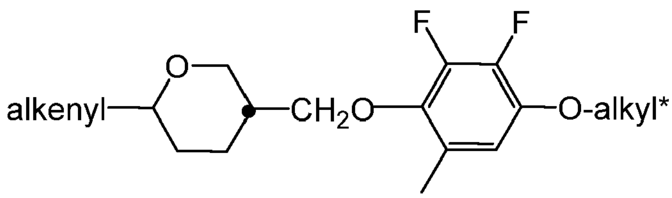

IIE-69

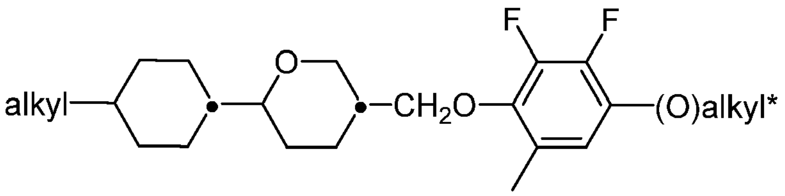

IIE-70

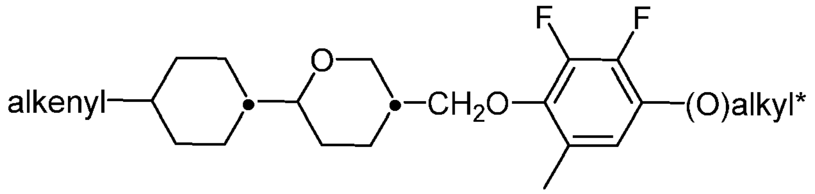

IIE-71

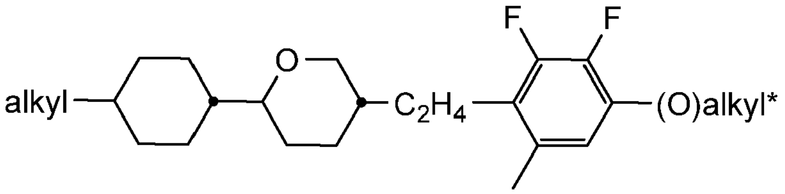

IIE-72

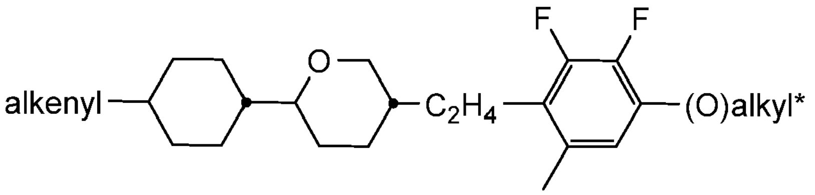

IIE-73

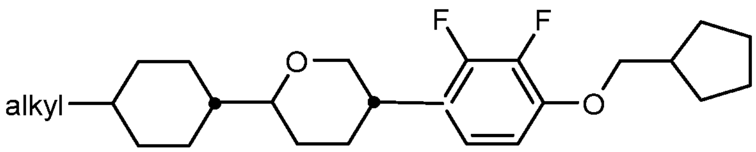

IIE-74

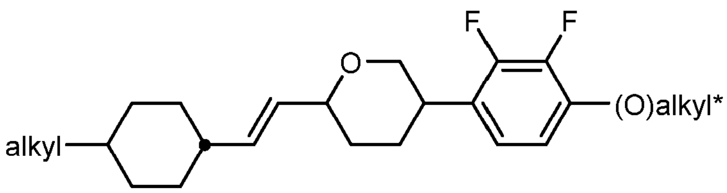

IIE-75

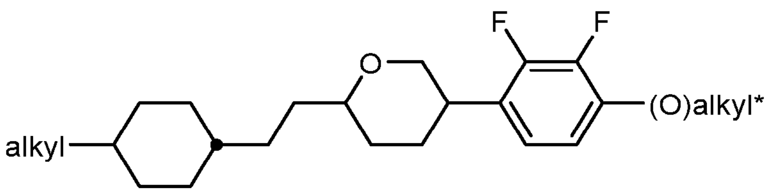

IIE-76

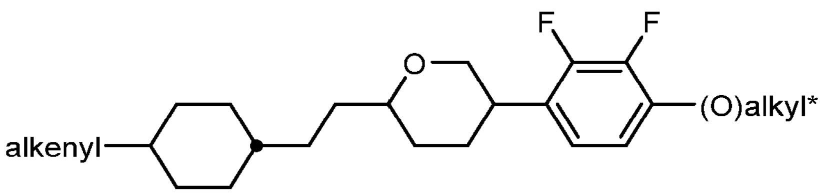

IIE-77

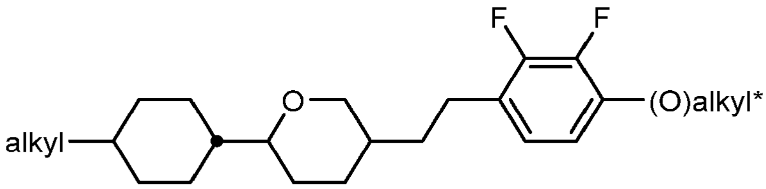

IIE-78

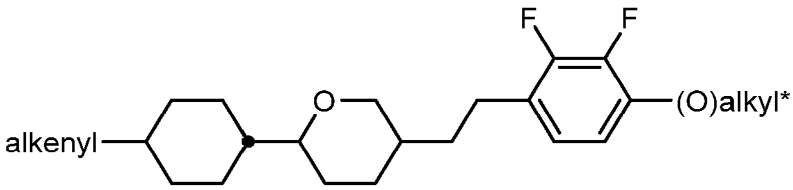

IIE-79

in which the index a denotes 1 or 2, alkyl and alkyl* each, independently of one another, denote a straight-chain alkyl radical having 1-6 C atoms, alkenyl denotes a straight-chain alkenyl radical having 2-6 C atoms, and (O) denotes an oxygen atom or a single bond, and alkenyl preferably denotes $CH_2$=CH-, $CH_2$=$CHCH_2CH_2$-, $CH_3$-CH=CH-, $CH_3$-$CH_2$-CH=CH-, $CH_3$-$(CH_2)_2$-CH=CH-, $CH_3$-$(CH_2)_3$-CH=CH- or $CH_3$-CH=CH-$(CH_2)_2$-.

Particularly preferred LC media according to the invention comprise one or more compounds selected from the group consisting of formulae IIE-2, IIE-8, IIE-10, IIE-16, IIE-18, IIE-37, IIE-38, IIE-39 and IIE-40.

Preferably, the LC medium comprises one or more compounds of the formula IIE-2 selected from the following sub-formulae:

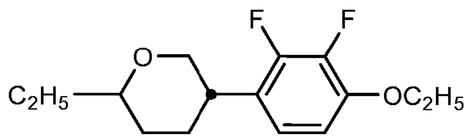

IIE-2-1

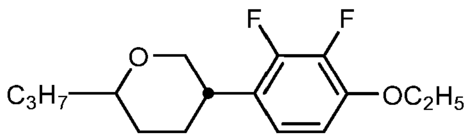

IIE-2-2

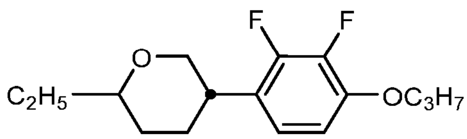

IIE-2-3

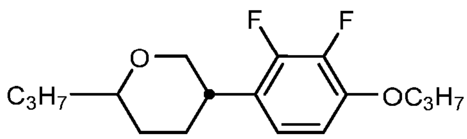

IIE-2-4

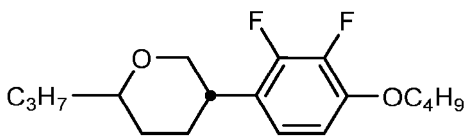

IIE-2-5

Preferably, the LC medium comprises one or more compounds of the formula IIE-10 selected from the following sub-formulae:

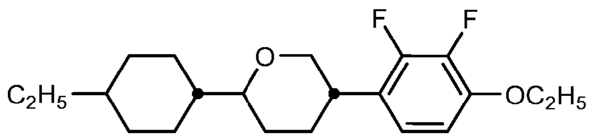

IIE-10-1

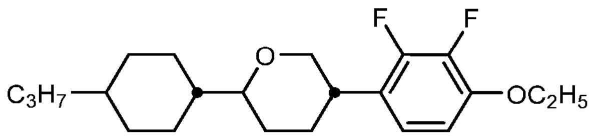

IIE-10-2

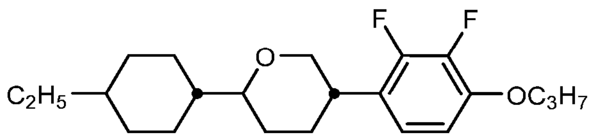

IIE-10-3

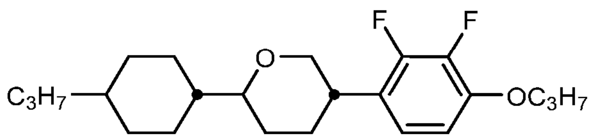

IIE-10-4

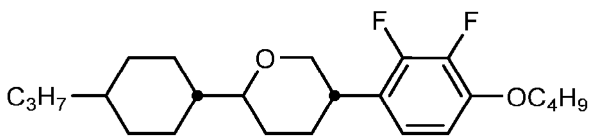

IIE-10-5

In another preferred embodiment the LC medium comprises one or more compounds of the formula IIF selected from the group consisting of the following formulae,

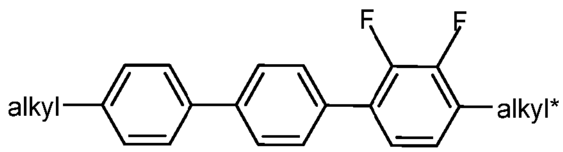

IIF-1

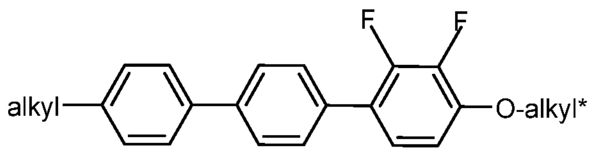

IIF-2

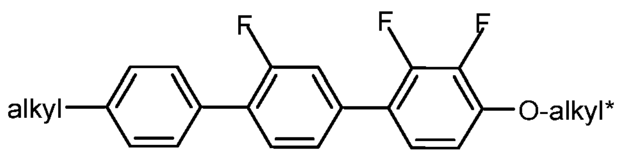

IIF-3

in which alkyl and alkyl* each, independently of one another, denote a straight-chain or branched alkyl radical having 1-6 C atoms.

Preferably, the LC medium comprises one or more compounds of the formula IIF-2 selected from the following sub-formulae:

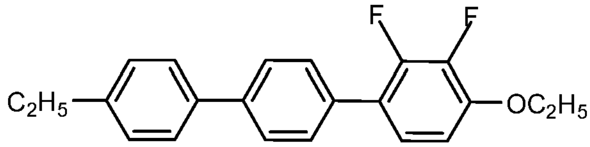

IIF-2-1

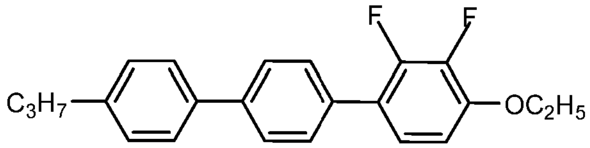

IIF-2-2

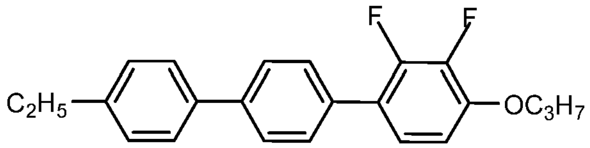

IIF-2-3

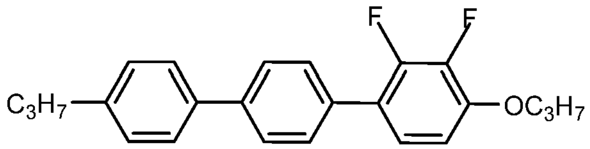

IIF-2-4

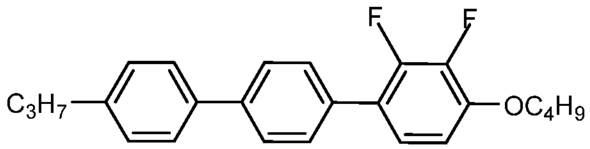

IIF-2-5

Preferably, the LC medium comprises one or more compounds of the formula IIF-3 selected from the following sub-formulae:

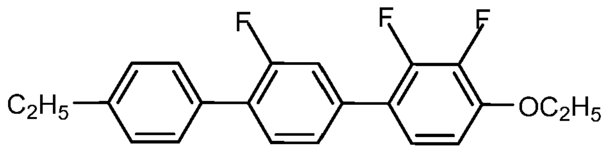

IIF-3-1

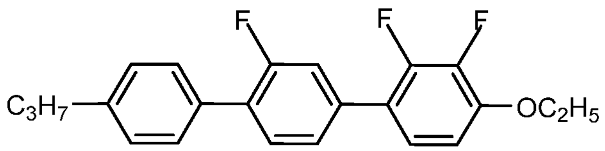

IIF-3-2

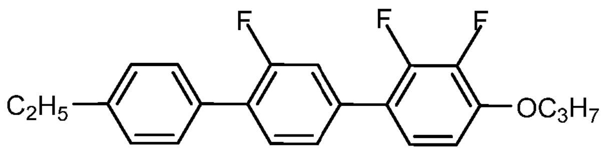

IIF-3-3

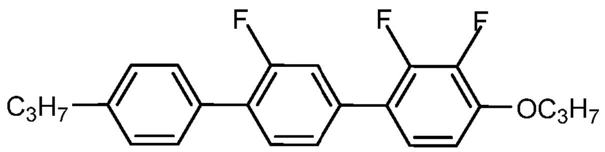

IIF-3-4

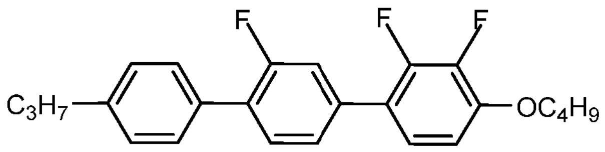

IIF-3-5

Particularly preferred LC media according to the invention comprise one or more compounds selected from the formulae IIA-2, IIA-8, IIA-9, IIA-10, IIA-16, II-18, IIA-40, IIA-41, IIA-42, IIA-43, IIA-69, IIA-71, IIA-83, IIB-2, IIB-10, IIB-16, IIC-1, and IID-1, IID-4, IID-12, IID-19, IIE-2, IIE-8, IIE-10, IIE-16, IIE-18, IIE-37, IIE-38, IIE-39, IIE-40, IIF-2, and IIF-3 or their subformulae.

The proportion of compounds of the formulae IIA and/or IIB in the mixture as a whole is 10 to 60% by weight, preferably 20 to 50% by weight.

The medium according to the invention preferably comprises one or more compounds selected from the group of compounds of formula III

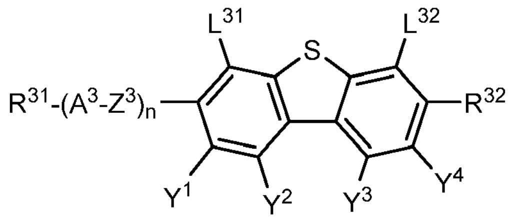

III

and/or formula IIIA

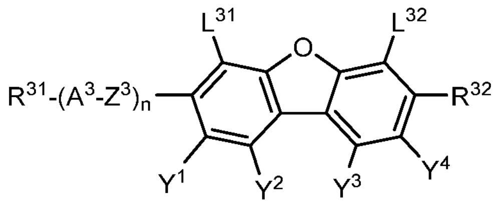

IIIA

and/or formula BC

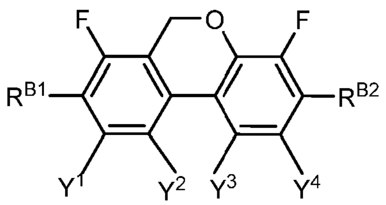

BC

and/or formula PH-1

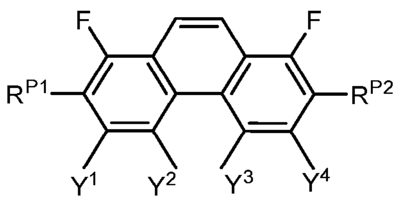

PH-1

in which

$R^{31}$, $R^{32}$, $R^{B1}$, $R^{B2}$, $R^{P1}$, and $R^{P2}$ each, independently of one another, denote H, an alkyl or alkoxy radical having 1 to 15 C atoms, preferably having 1 to 7 C atoms, where one or more $-CH_2-$ groups in these radicals may each be replaced, independently of one another, by

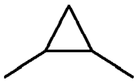, 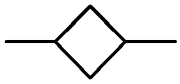, 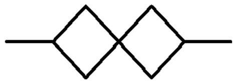, 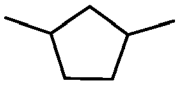, 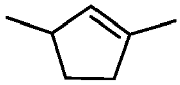, 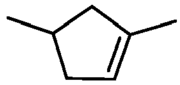,

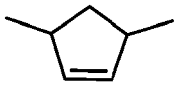,

-C≡C-, $-CF_2O-$, $-OCF_2-$, -CH=CH-, by -O-, -CO-O- or -O-CO- in such a way that O atoms are not linked directly to one another, and in which one or more H atoms may be replaced by halogen,
$A^3$ on each occurrence, independently of one another, denotes

a) a 1,4-cyclohexylene or 1,4-cyclohexenylene radical, in which one or two non-adjacent $CH_2$ groups may be replaced by -O- or -S-,
b) a 1,4-phenylene radical, in which one or two CH groups may be replaced by N, or
c) a radical selected from the group consisting of spiro[3.3]heptane-2,6-diyl, piperidine-1,4-diyl, 1,4-bicyclo[2.2.2]octylene, naphthalene-2,6-diyl, decahydronaphthalene-2,6-diyl, 1,2,3,4-tetrahydronaphthalene-2,6-diyl, phenanthrene-2,7-diyl and fluorene-2,7-diyl,
where the radicals a), b) and c) are optionally monosubstituted or polysubstituted by halogen atoms,

n denotes 0, 1 or 2,
$Z^3$ on each occurrence independently of one another denotes -CO-O-, -O-CO-, $-CF_2O-$ , $-OCF_2-$, $-CH_2O-$, $-OCH_2-$, $-CH_2-$, $-CH_2CH_2-$, $-(CH_2)_4-$, $-CH=CH-CH_2O-$, $-C_2F_4-$, $-CH_2CF_2-$, $-CF_2CH_2-$, -CF=CF-, -CH=CF-, -CF=CH-, -CH=CH-, -C≡C- or a single bond,
$L^{31}$ and $L^{32}$, each, independently of one another, denote F, Cl, $CF_3$ or $CHF_2$, and $Y^1$, $Y^2$, $Y^3$, $Y^4$, each, independently of one another, denote H, F, Cl, $CF_3$, $CHF_2$, $CH_3$ or $OCH_3$, preferably H, $CH_3$ or $OCH_3$, very preferably H, wherein H can be replaced by Deuterium.

Preferred compounds of formula III are those of formula III-1 to III-6:

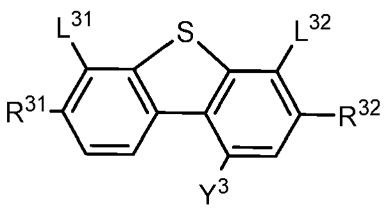

III-1

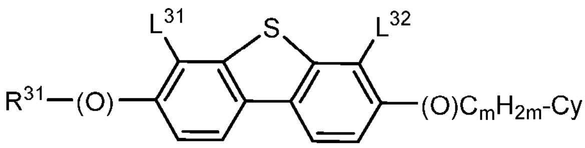

III-2

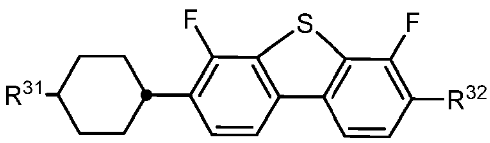

III-3

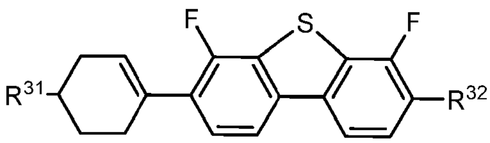

III-4

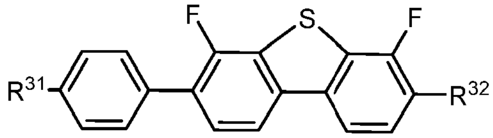

III-5

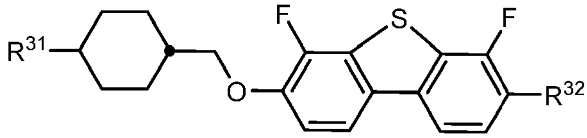

III-6

in which the occurring groups have the same meanings as given under formula III above and preferably

$R^{31}$ and $R^{32}$ each, independently of one another, denote an alkyl, alkenyl or alkoxy radical having up to 15 C atoms, preferably having 1 to 7 C atoms, more preferably one or both of them denote an alkoxy radical; or cyclic alkyl having 3 to 6 C atoms,
$R^{33}$ denotes alkyl or alkenyl having up to 7 C atoms or a group Cy-$C_nH_{2n+1}$-,
m and n identically or differently, denote 0, 1, 2, 3, 4, 5 or 6, preferably 1, 2 or 3, very preferably 1,
Cy denotes a cycloaliphatic group having 3, 4 or 5 ring atoms, which is optionally substituted with alkyl or alkenyl each having up to 3 C atoms, or with halogen or CN, and preferably denotes cyclopropyl, cyclobutyl, cyclopentyl or cyclopentenyl,
(O) denotes O or a single bond,
$L^{31}$ and $L^{32}$ each, independently of one another, denote F or Cl, preferably both denote F, and
$Y^3$ denotes H, F, Cl, $CF_3$, $CHF_2$, $CH_3$ or $OCH_3$, preferably H or $CH_3$.

In another preferred embodiment the LC medium comprises one or more compounds of the formula III-1 selected from the group of compounds of formulae III-1-1 to III-1-20, preferably of formula III-1-1 and III-1-11,

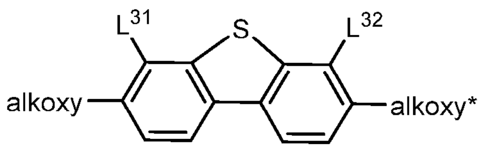

III-1-1

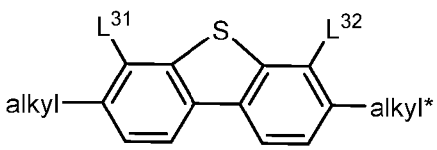

III-1-2

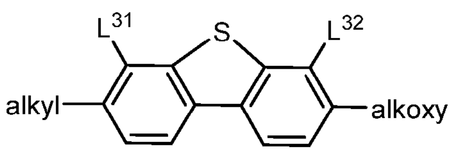

III-1-3

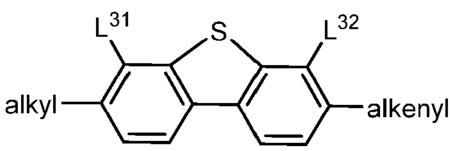

III-1-4

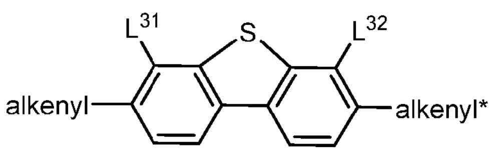

III-1-5

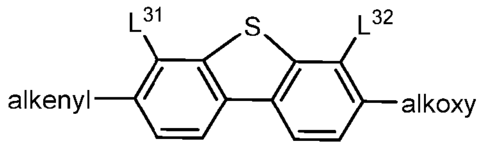

III-1-6

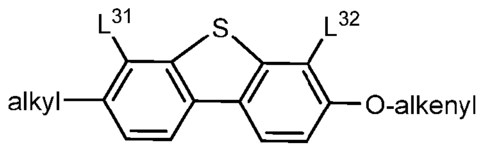

III-1-7

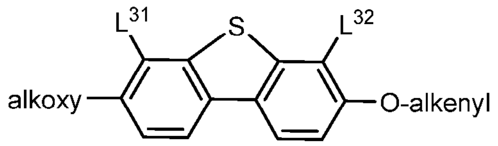

III-1-8

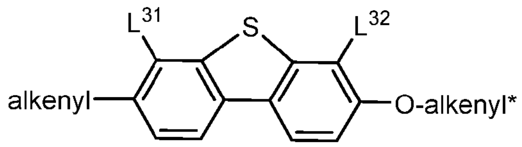

III-1-9

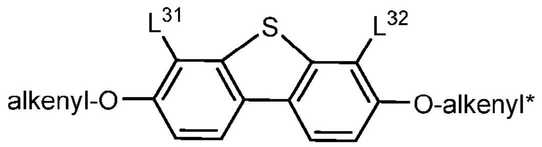

III-1-10

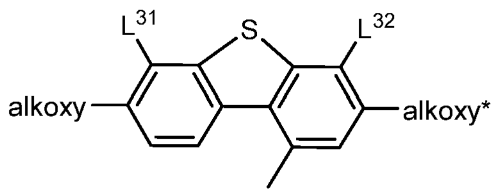

III-1-11

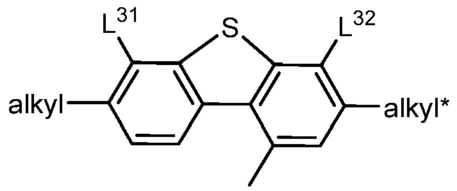

III-1-12

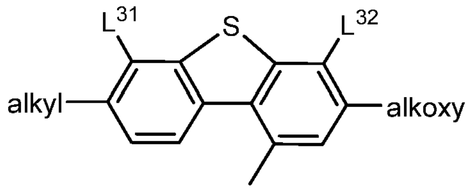

III-1-13

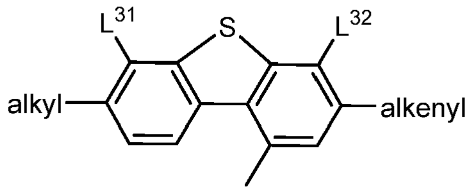

III-1-14

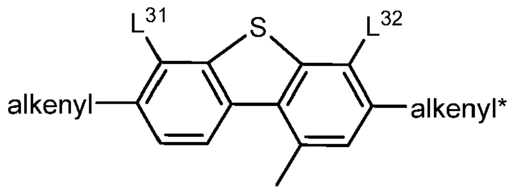

III-1-15

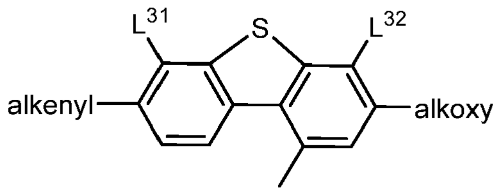

III-1-16

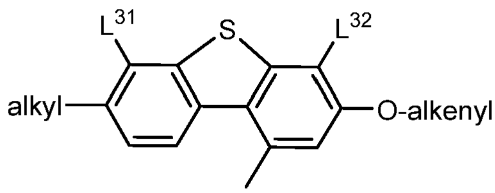

III-1-17

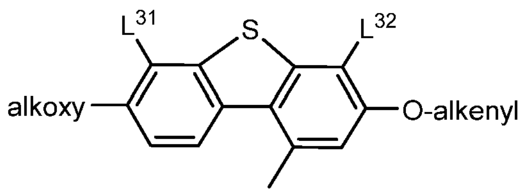

III-1-18

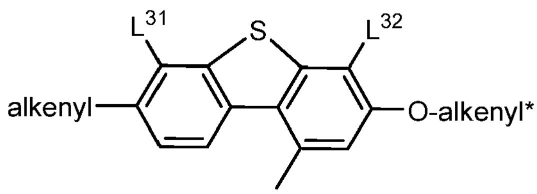

III-1-19

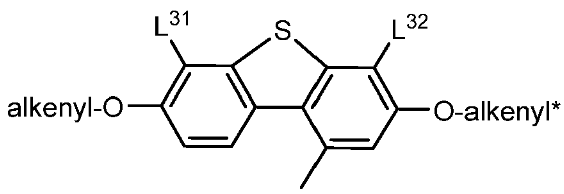

III-1-20

in which alkyl and alkyl* each, independently of one another, denote a straight-chain alkyl radical having 1-6 C atoms, alkenyl and alkenyl* each, independently of one another, denote a straight-chain alkenyl radical having 2-6 C atoms, alkoxy and alkoxy* each, independently of one another, denote a straight-chain alkoxy radical having 1-6 C atoms, and $L^{31}$ and $L^{32}$ each, independently of one another, denote F or Cl, preferably both F.

Very preferred compounds of formula III-1-1 are selected from the group consisting of the following subformulae,

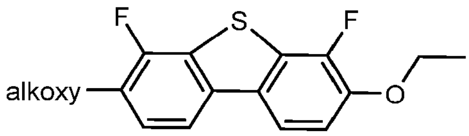

III-1-1-1

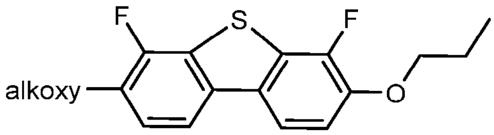

III-1-1-2

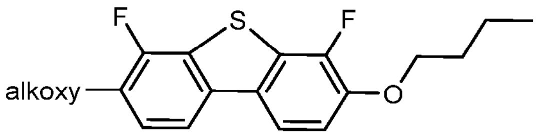

III-1-1-3

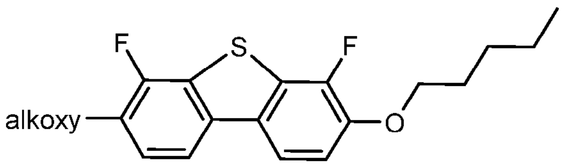

III-1-1-4

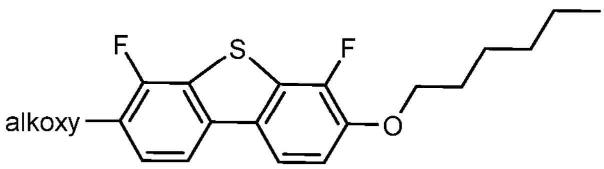

III-1-1-5

Very preferred compounds of formula III-1-11 are selected from the group consisting of the following sub-formulae,

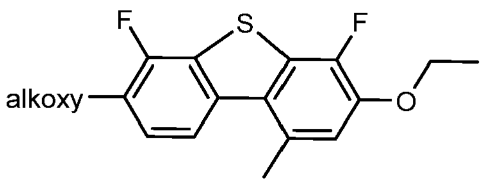

III-1-11-1

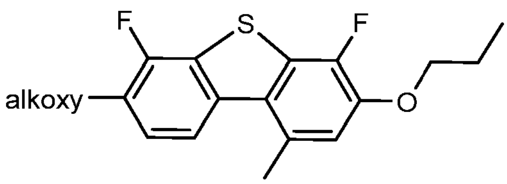

III-1-11-2

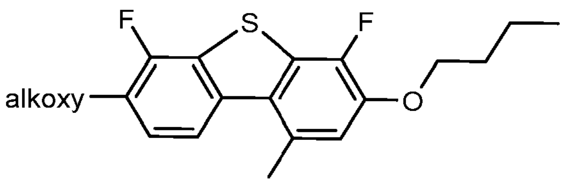

III-1-11-3

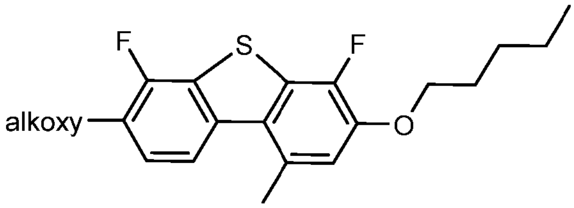

III-1-11-4

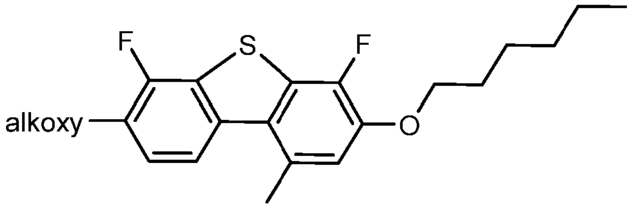

III-1-11-5

Very preferred compounds of the formula III-2 are the following,

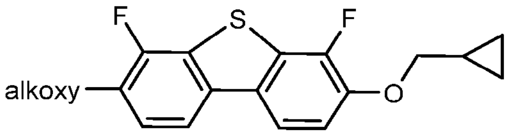

III-2-1

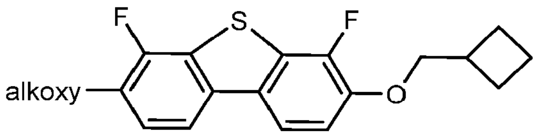

III-2-2

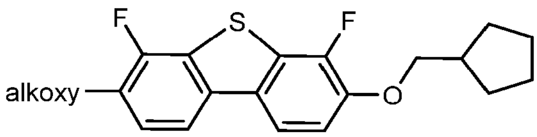

III-2-3

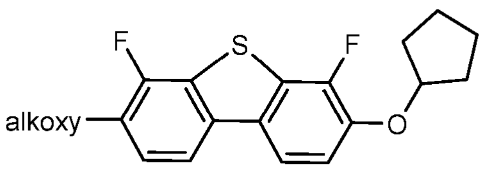

III-2-4

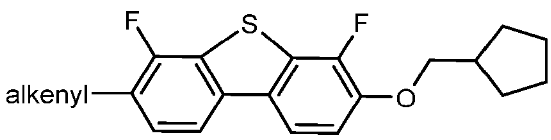

III-2-5

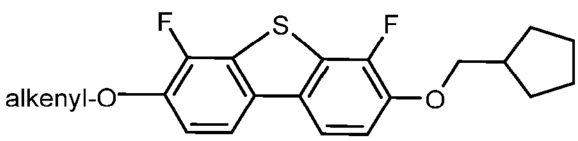

III-2-6

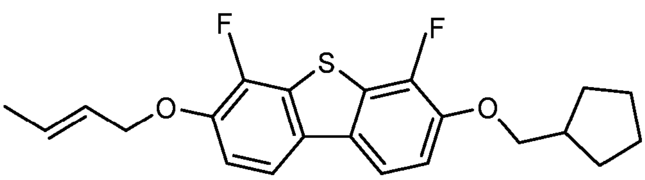

III-2-7

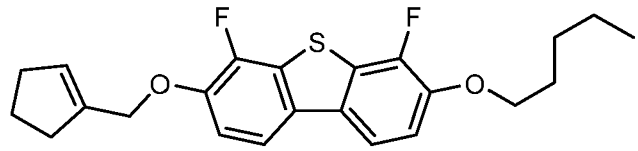

III-2-8

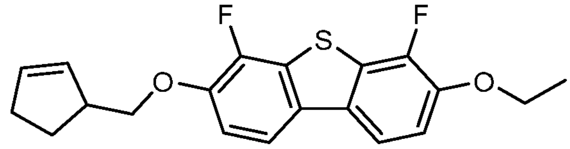

III-2-9

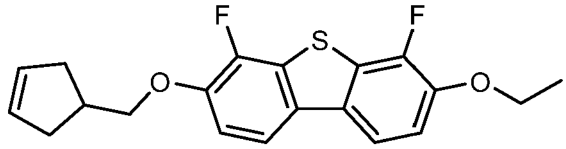

III-2-10

in which alkoxy denotes a straight-chain alkoxy radical having 1-6 C atoms, preferably ethoxy, propoxy, butoxy or pentoxy, very preferaby ethoxy or propoxy, and alkenyl denotes a straight-chain alkenyl radical having 2-6 C atoms.

Very preferred compounds of formula III-6 are selected from the group consisting of the following formulae,

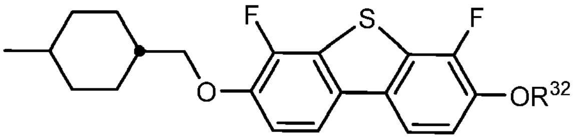

III-6-1

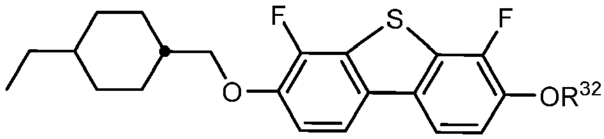

III-6-2

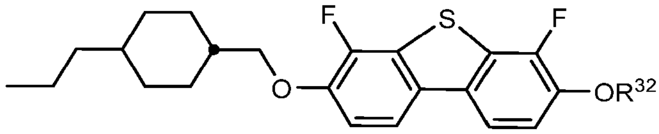

III-6-3

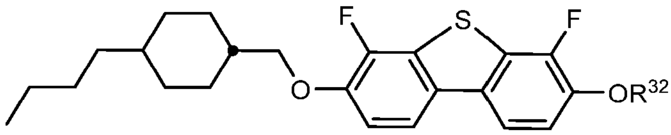

III-6-4

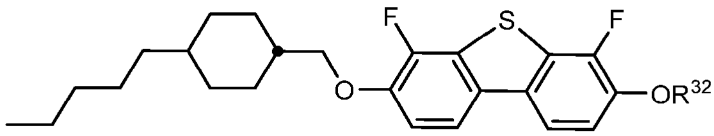

III-6-5

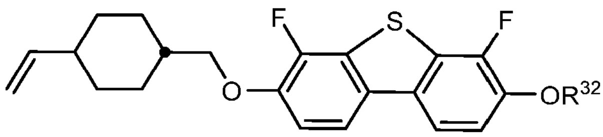

III-6-6

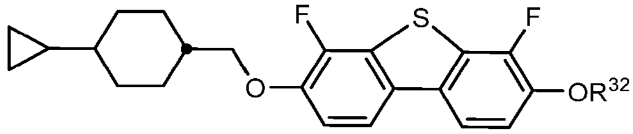

III-6-7

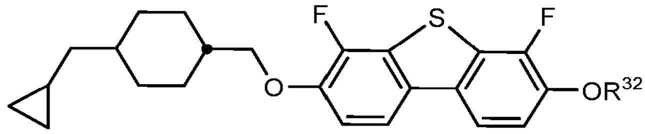

III-6-8

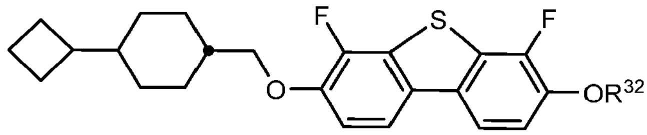

III-6-9

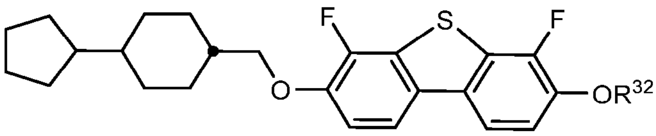

III-6-10

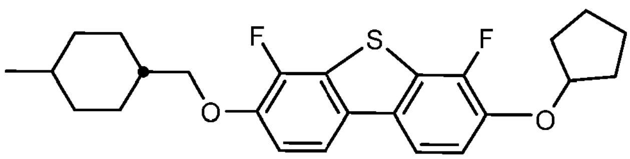

III-6-11

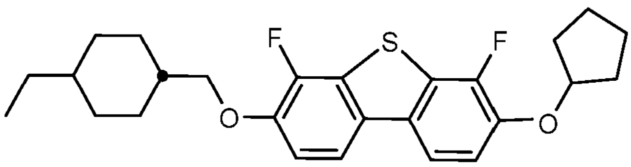

III-6-12

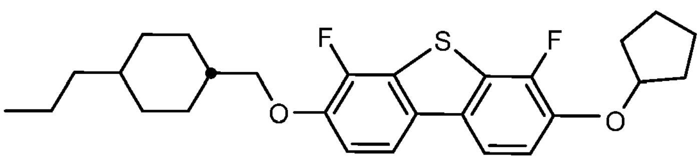

III-6-13

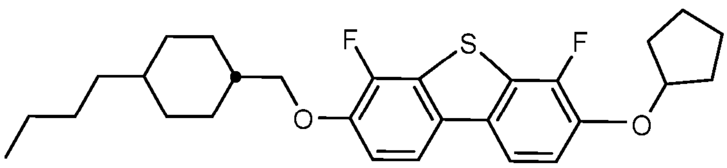

III-6-14

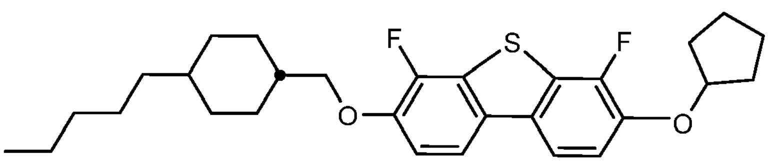

III-6-15

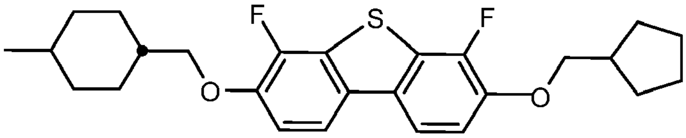

III-6-16

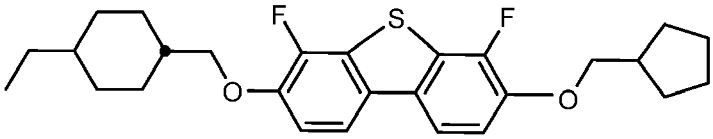

III-6-17

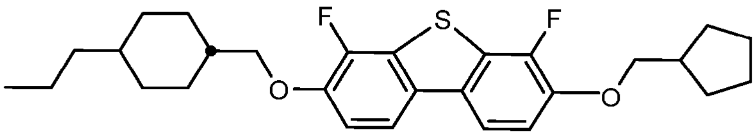

III-6-18

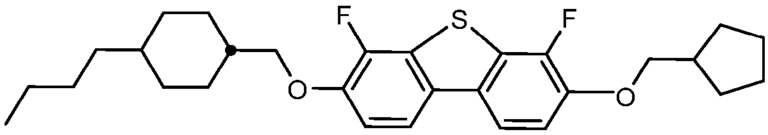

III-6-19

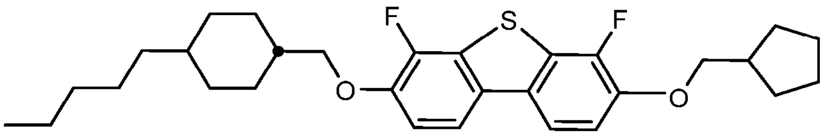

III-6-20

in which $R^{32}$ denotes alkyl having 1 to 7 C-atoms, preferably ethyl, n-propyl or n-butyl, or alternatively cyclopropylmethyl, cyclobutylmethyl or cyclopentylmethyl or alternatively - $(CH_2)_nF$ in which n is 2,3,4, or 5, preferably $C_2H_4F$.

Perferred compounds of formula III is III-1-1-3, III-1-1-4, III-1-1-5, III-2-7, as well as III-6-2, and the most perferred are compounds B(S)-2O-O4, B(S)-2O-O5, B(S)-2O-O6, B(S)-2O-O1(c5), B(S)-4O-O1(c5), B(S)-1V1O-O1(c5), B(S)-2O-O1(c3), B(S)-2O-O1(c4), and COB(S)-2-O4.

Preferably the LC medium further comprises one or more compounds of formula IIIA:

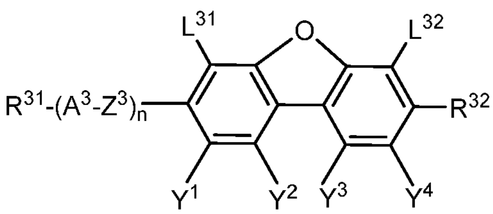

IIIA

in which $R^{31}$, $R^{32}$, $A^3$, $Z^3$, $L^{31}$, $L^{32}$, $Y^1$, $Y^2$, $Y^3$, $Y^4$, and n have the meanings given above for formula III.

In a preferred embodiment of the present invention the LC medium comprises one or more compounds of the formula IIIA-1:

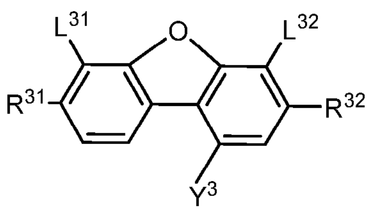

IIIA-1

in which the occurring groups have the same meanings as given under formula IIIA above and preferably

$R^{31}$ and $R^{32}$ each, independently of one another, an alkyl, alkenyl or alkoxy radical having up to 15 C atoms, preferably

having 1 to 7 C atoms, more preferably one or both of them denote an alkoxy radical, or cyclic alkyl having 3 to 6 C atoms, and

$L^{31}$ and $L^{32}$ each, independently of one another, denote F or Cl, preferably both denote F.

In another preferred embodiment the LC medium comprises one or more compounds of the formula IIIA-1 selected from the group of compounds of formulae IIIA-1-1 to IIIA-1-20, preferably of formulae IIIA-1-8 and IIIA-1-18,

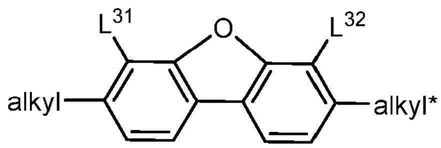

IIIA-1-1

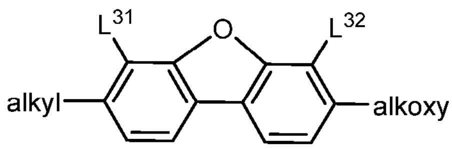

IIIA-1-2

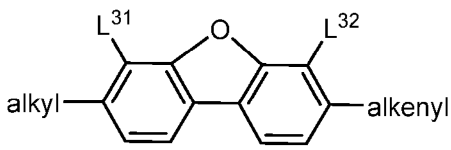

IIIA-1-3

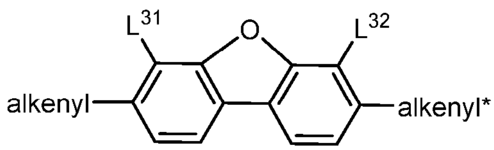

IIIA-1-4

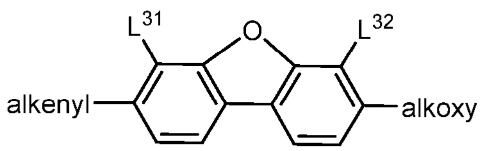

IIIA-1-5

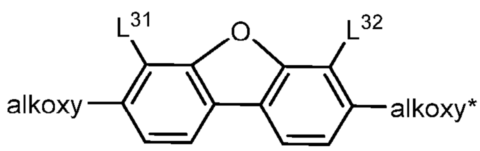

IIIA-1-6

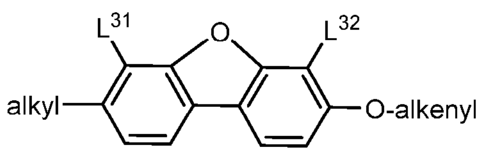

IIIA-1-7

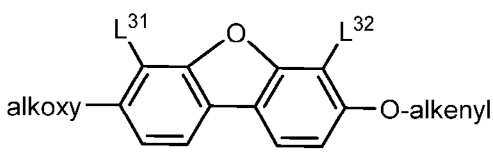

IIIA-1-8

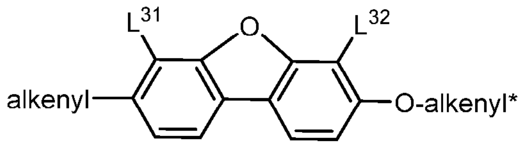

IIIA-1-9

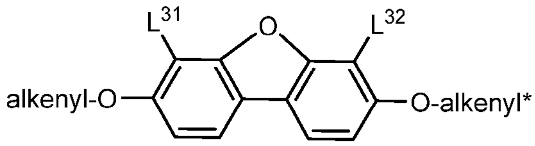

IIIA-1-10

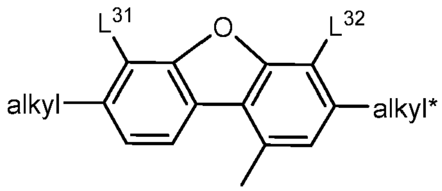

IIIA-1-11

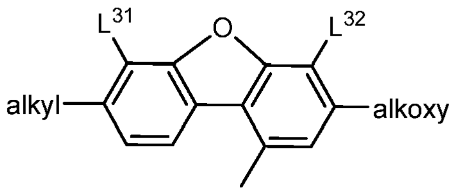

IIIA-1-12

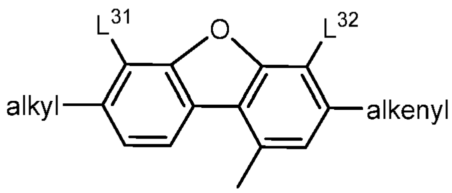

IIIA-1-13

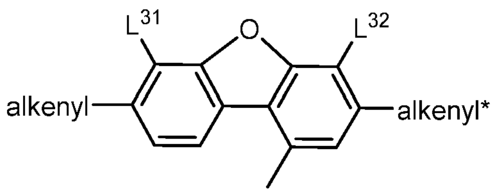

IIIA-1-14

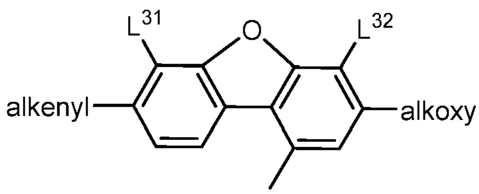

IIIA-1-15

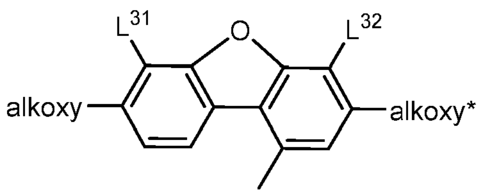

IIIA-1-16

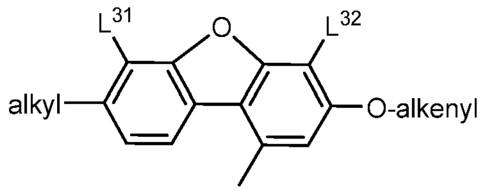

IIIA-1-17

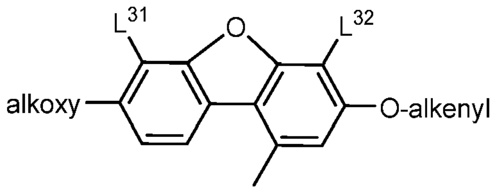

IIIA-1-18

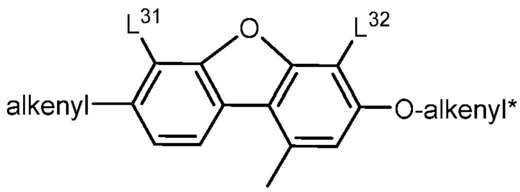

IIIA-1-19

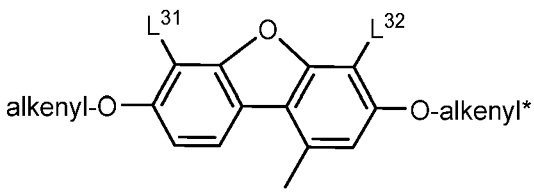

IIIA-1-20

in which alkyl and alkyl* each, independently of one another, denote a straight-chain alkyl radical having 1-6 C atoms, or , or cyclic alkyl having 3 to 6 C atoms, alkenyl and alkenyl* each, independently of one another, denote a straight-chain alkenyl radical having 2-6 C atoms, alkoxy and alkoxy* each, independently of one another, denote a straight-chain alkoxy radical having 1-6 C atoms, and $L^{31}$ and $L^{32}$ each, independently of one another, denote F or Cl, preferably both F.

Preferably, the LC medium comprises one or more compounds of the formula IIIA-1-8 selected from the following sub-formulae:

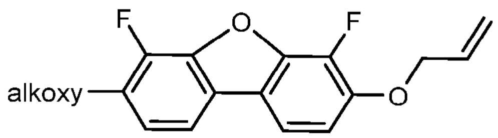

IIIA-1-8-1

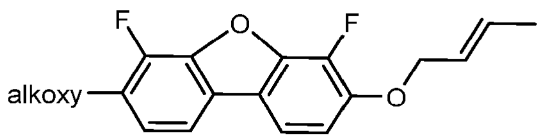

IIIA-1-8-2

Preferably, the LC medium comprises one or more compounds of the formula IIIA-1-18 selected from the following sub-formulae:

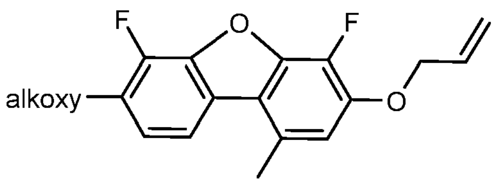

IIIA-1-18-1

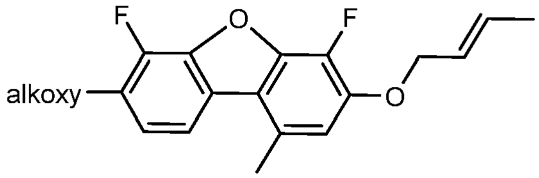

IIIA-1-18-2

In another preferred embodiment of the present invention the LC medium comprises one or more compounds of the formula IIIA-2

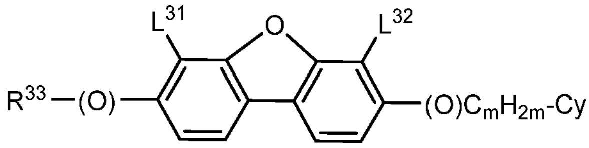

IIIA-2

in which $L^{31}$ and $L^{32}$ have the same meanings as given under formula IIIA, (O) denotes O or a single bond,

$R^{33}$ denotes alkyl or alkenyl having up to 7 C atoms or a group Cy-$C_nH_{2n+1}$-,

m and n are, identically or differently, 0, 1, 2, 3, 4, 5 or 6, preferably 1, 2 or 3, very preferably 1, and

Cy denotes a cycloaliphatic group having 3, 4 or 5 ring atoms, which is optionally substituted with alkyl or alkenyl each having up to 3 C atoms, or with halogen or CN, and preferably denotes cyclopropyl, cyclobutyl, cyclopentyl or cyclopentenyl.

The compounds of formula IIIA-2 are contained in the LC medium either alternatively or additionally to the compounds of formula III, preferably additionally.

Very preferred compounds of the formula IIIA-2 are the following,

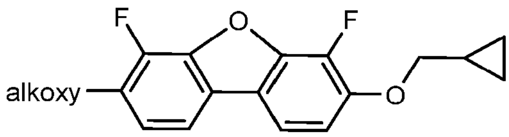

IIIA-2-1

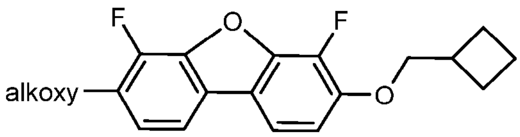

IIIA-2-2

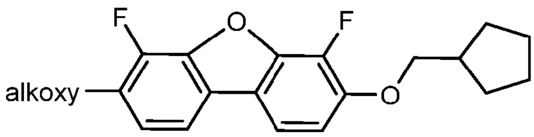

IIIA-2-3

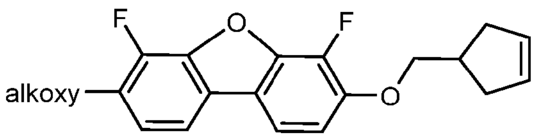

IIIA-2-4

in which alkoxy denotes a straight-chain alkoxy radical having 1-6 C atoms.

In another preferred embodiment the LC medium comprises one or more compounds of the formula IIIA selected from the group of compounds of formulae IIIA-3 to IIIA-5,

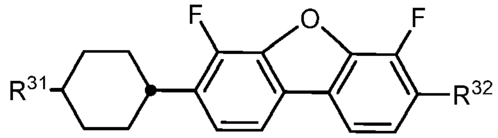

IIIA-3

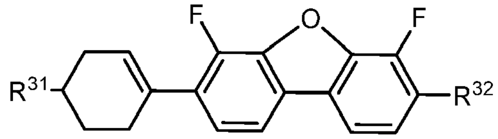

IIIA-4

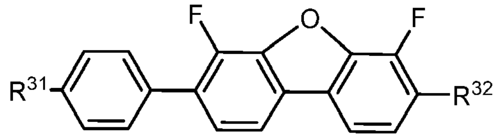

IIIA-5

in which the occurring groups have the same meanings as given under formula III, and $R^{31}$ preferably denotes straight-chain alkyl or cyclic alkyl and $R^{32}$ preferably denotes alkoxy each having 1 to 7 C atoms.

In a preferred embodiment of the present invention the LC medium comprises one or more compounds of the formula IIIA-6:

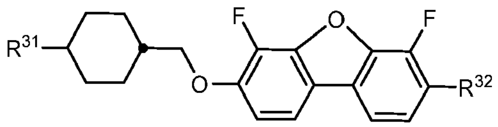

IIIA-6

in which the occurring groups have the same meanings as given under formula III and preferably

$R^{31}$ and $R^{32}$ each, independently of one another, an alkyl, alkenyl or alkoxy radical having up to 15 C atoms, preferably having 1 to 7 C atoms, more preferably one or both of them denote an alkoxy radical.

Very preferred compounds of formula IIIA-6 are selected from the group consisting of the following formulae,

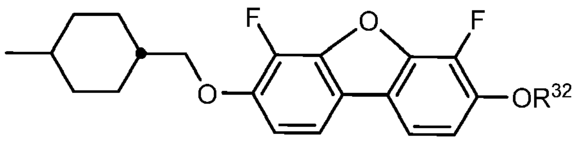

IIIA-6-1

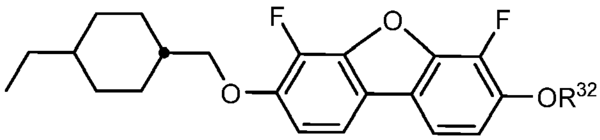

IIIA-6-2

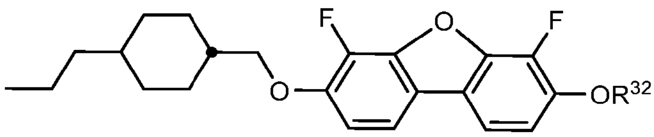

IIIA-6-3

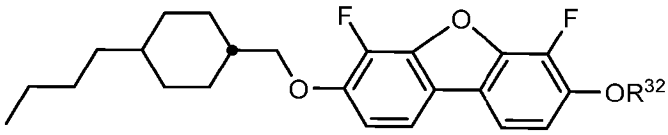

IIIA-6-4

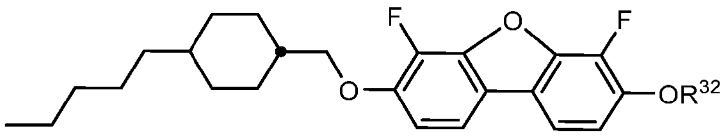

IIIA-6-5

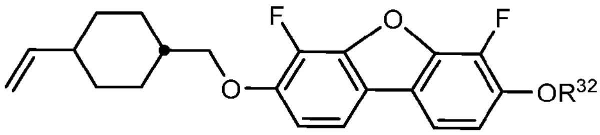

IIIA-6-6

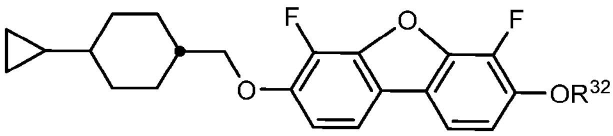

IIIA-6-7

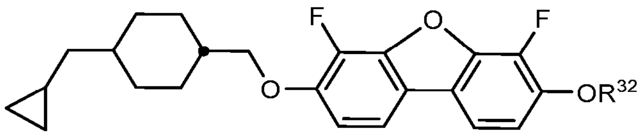

IIIA-6-8

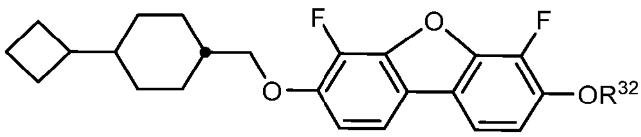

IIIA-6-9

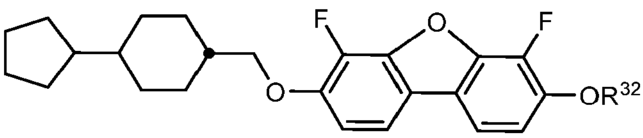

IIIA-6-10

in which $R^{32}$ denotes alkyl having 1 to 7 C-atoms, preferably ethyl, n-propyl or n-butyl, or alternatively cyclopropylmethyl, cyclobutylmethyl or cyclopentylmethyl or alternatively - $(CH_2)_nF$ in which n is 2,3,4, or 5, preferably $C_2H_4F$.

The LC medium of the present invention comprises one or more compounds selected from the group of the difluorodibenzochroman compounds of the formula BC, chromans of the formula CR, and fluorinated phenanthrenes of the formulae PH-1 and PH-2,

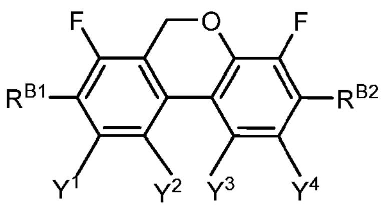

BC

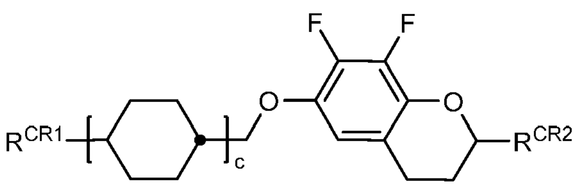

CR

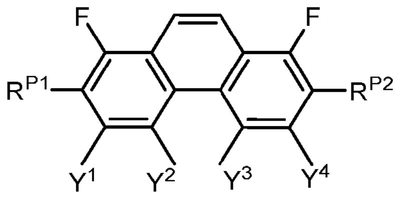

PH-1

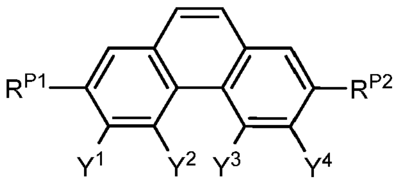

PH-2

in which

$R^{B1}$, $R^{B2}$, $R^{CR1}$ $R^{CR2}$ $R^{P1}$ $R^{P2}$ each, independently of one another, denote H, an alkyl or alkoxy radical having 1 to 15 C atoms, preferably having 1 to 7 C atoms, where one or more $-CH_2-$ groups in these radicals may each be replaced, independently of one another, by

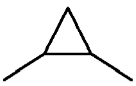, 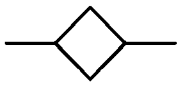, 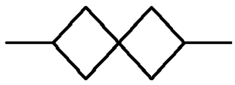, 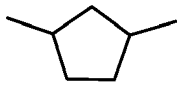, 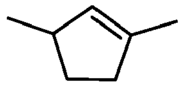, 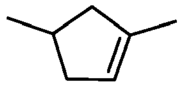,

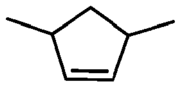,

-C≡C-, $-CF_2O-$, $-OCF_2-$, -CH=CH-, by -O-, -CO-O- or -O-CO- in such a way that O atoms are not linked directly to one another, and in which one or more H atoms may be replaced by halogen, $R^{81}$ and $R^{82}$ preferably, independently of one another, denote alkyl or alkoxy having 1 to 6 C atoms, or cyclic alkyl having 3 to 6 C atoms,

c is 0, 1 or 2, and

$Y^1$, $Y^2$, $Y^3$, $Y^4$, each, independently of one another, denote H, F, Cl, $CF_3$, $CHF_2$, $CH_3$ or $OCH_3$.

The LC medium according to the invention preferably comprises the compounds of the formulae BC, CR, PH-1, PH-2 in amounts of 3 to 20 % by weight, in particular in amounts of 3 to 15 % by weight.

Particularly preferred compounds of the formulae BC, CR and PH-1 are the compounds BC-1 to BC-7, CR-1 to CR-5, and BP-1 to BP-7

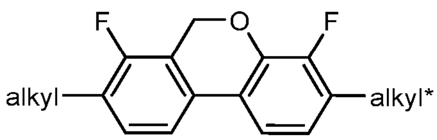

BC-1

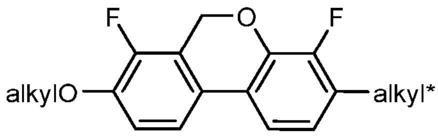

BC-2

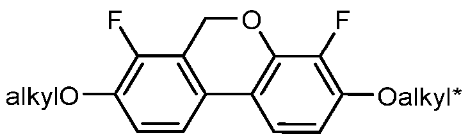

BC-3

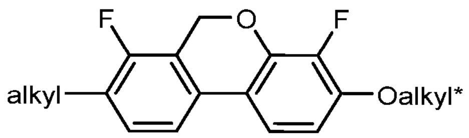

BC-4

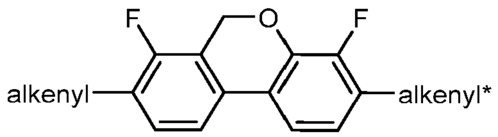

BC-5

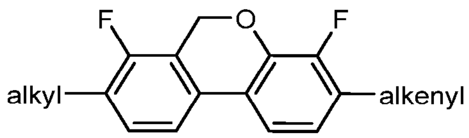

BC-6

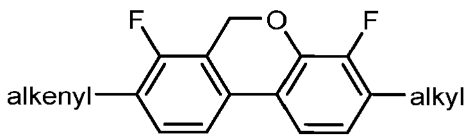

BC-7

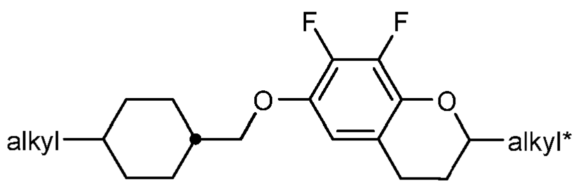

CR-1

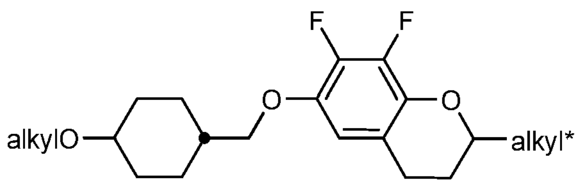

CR-2

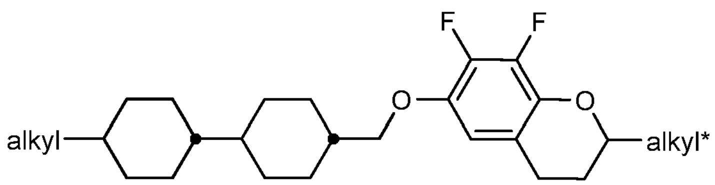

CR-3

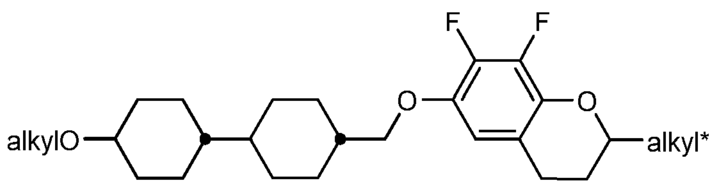

CR-4

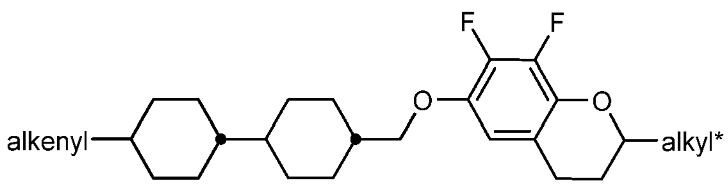

CR-5

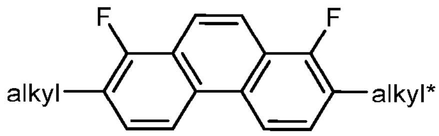

BP-1

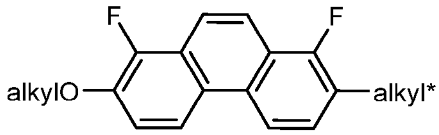

BP-2

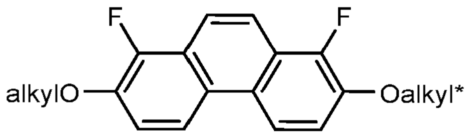

BP-3

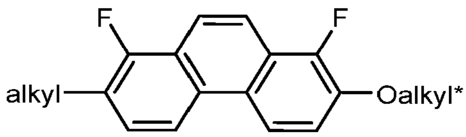

BP-4

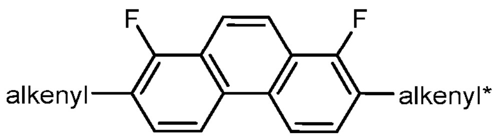

BP-5

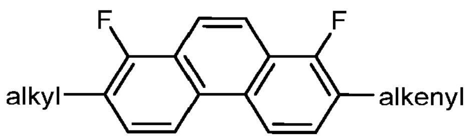

BP-6

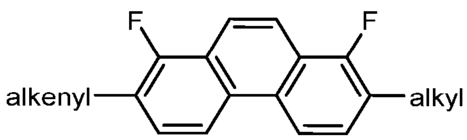

BP-7

in which

alkyl and alkyl* each, independently of one another, denote a straight-chain alkyl radical having 1 to 6 C atoms, or cyclic alkyl having 3 to 6 C atoms, and

alkenyl and alkenyl* each, independently of one another, denote a straight-chain alkenyl radical having 2 to 6 C atoms.

More preference is given to mixtures comprising one, two or three compounds of the formula BC-2, BC-3, BP-2 and/or BP-3, very preferably BP-2 and/or BP-3, in particular BP-3.

Particularly preferred compounds of the formula BC are the compounds B(A)-2O-O2, B(A)-(c5)1O-O2, and B(A)-(c4)1O-O2,

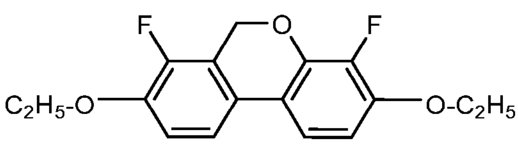

B(A)-2O-O2

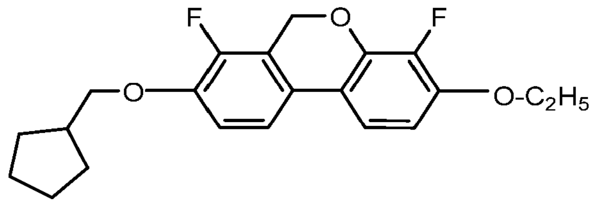

B(A)-(c5)1O-O2

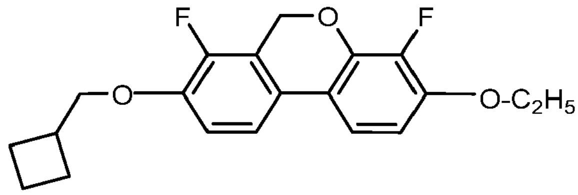

B(A)-(c4)1O-O2

Particularly preferred compounds of the formula PH-1 the compounds B(P)-2O-O3, B(P)-(c5)1O-O3, B(P)-(c5)1O-O2, B(P)-(c4)1O-O2, B(P)-2O-O4, and B(P)-(c5)1O-O4,

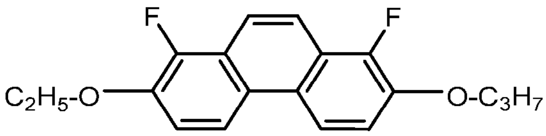

B(P)-2O-O3

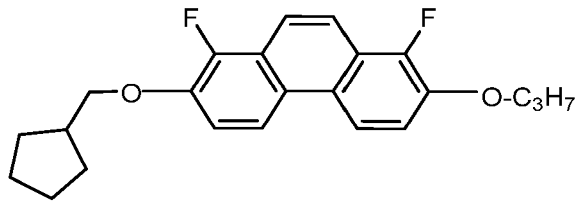

B(P)-(c5)1O-O3

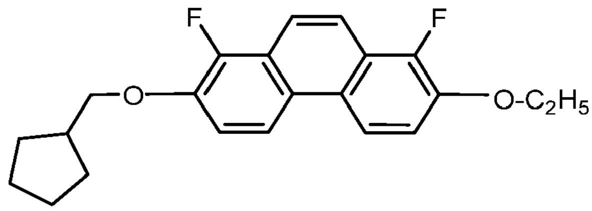

B(P)-(c5)1O-O2

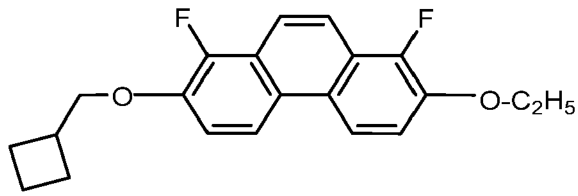

B(P)-(c4)1O-O2

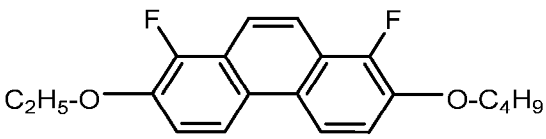

B(P)-2O-O4

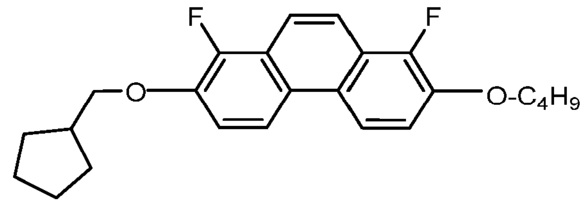

B(P)-(c5)1O-O4

In a preferred embodiment, the LC medium comprises one or more compounds of the formula IV,

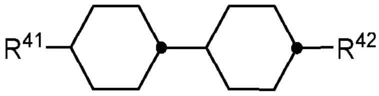

IV

in which

$R^{41}$ denotes an unsubstituted alkyl radical having 1 to 7 C atoms where, one or more $-CH_2$-groups in these radicals may each be replaced, independently of one another, by

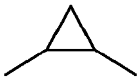

, 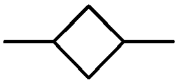 , 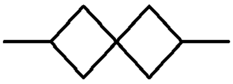 , 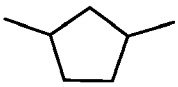 , 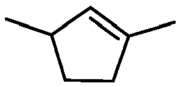 , 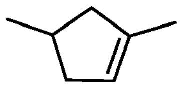 ,

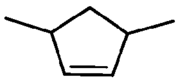

, -C≡C-, $-CF_2O-$, $-OCF_2-$, -CH=CH-, by -O-, -CO-O- or -O-CO- in such a way that O atoms are not linked directly to one another, and in which one or more H atoms may be replaced by halogen,
or an unsubstituted alkenyl radical having 2 to 7 C atoms, preferably an n-alkyl radical, particularly preferably having 2, 3, 4 or 5 C atoms, and
$R^{42}$ denotes an unsubstituted alkyl radical having 1 to 7 C atoms, or cyclic alkyl having 3 to 6 C atoms, or an unsubstituted alkoxy radical having 1 to 6 C atoms, both preferably having 2 to 5 C atoms, an unsubstituted alkenyl radical having 2 to 7 C atoms, preferably having 2, 3 or 4 C atoms, more preferably a vinyl radical or a 1-propenyl radical and in particular a vinyl radical.

The compounds of the formula IV are preferably selected from the group of the compounds of the formulae IV-1 to IV-4,

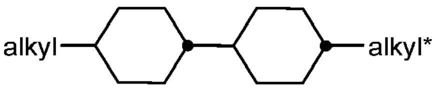

IV-1

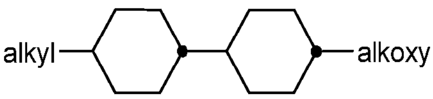

IV-2

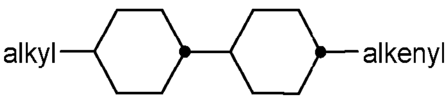

IV-3

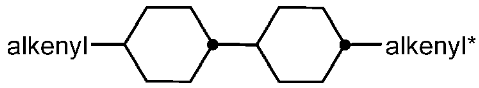

IV-4

in which

alkyl and alkyl*, independently of one another, denote alkyl radical having 1 to 7 C atoms, preferably having 2 to 5 C atoms,

alkenyl denotes an alkenyl radical having 2 to 5 C atoms, preferably having 2 to 4 C atoms, particularly preferably 2 C atoms,

alkenyl* denotes an alkenyl radical having 2 to 5 C atoms, preferably having 2 to 4 C atoms, particularly preferably having 2 to 3 C atoms, and

alkoxy denotes alkoxy having 1 to 5 C atoms, preferably having 2 to 4 C atoms.

Preferably, the LC medium comprises one or more compounds selected from the compounds of the formulae IV-1-1 to IV-1-14:

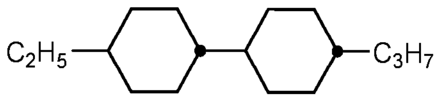

IV-1-1

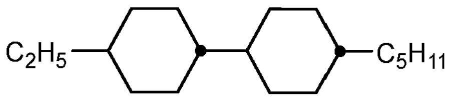

IV-1-2

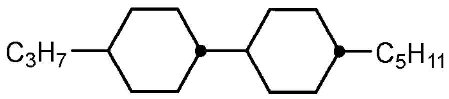

IV-1-3

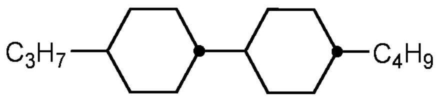

IV-1-4

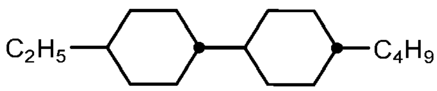

IV-1-5

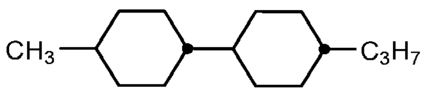

IV-1-6

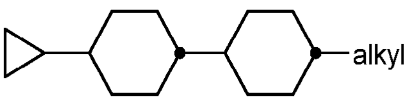

IV-1-7

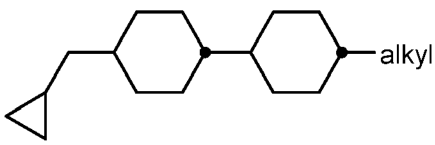

IV-1-8

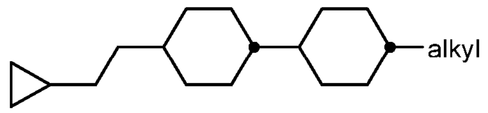

IV-1-9

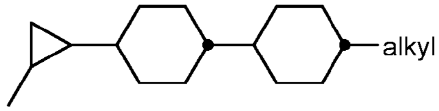

IV-1-10

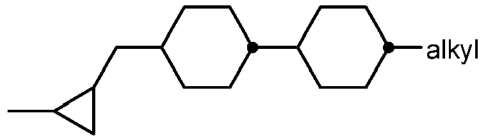

IV-1-11

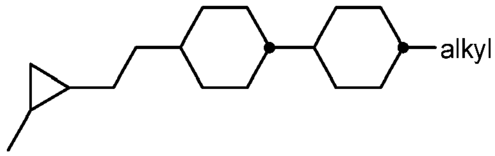

IV-1-12

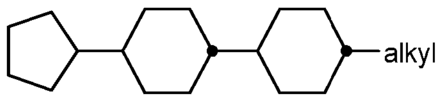

IV-1-13

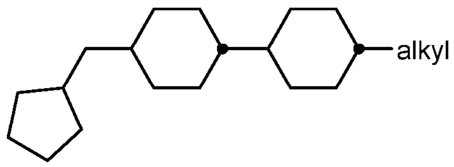

IV-1-14

in which alkyl denotes methyl, ethyl, n-propyl, isopropyl, n-butyl, isobutyl, or n-pentyl.

Very preferably, the LC medium according to the invention comprises one or more compounds of the formulae IV-2-1 and/or IV-2-2

IV-2-1

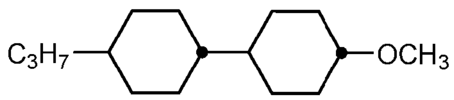

IV-2-2

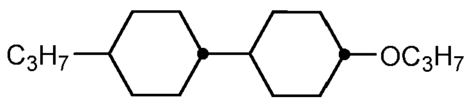

Very preferably, the LC medium according to the invention comprises a compound of formula IV-3, in particularly selected from the compounds of the formulae IV-3-1 to IV-3-9:

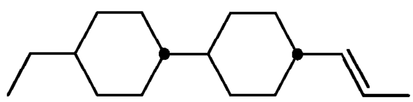

IV-3-1

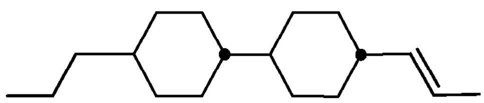

IV-3-2

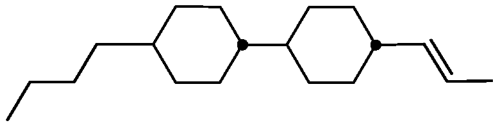

IV-3-3

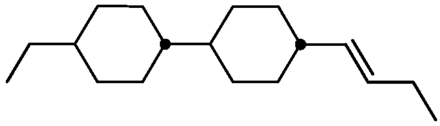

IV-3-4

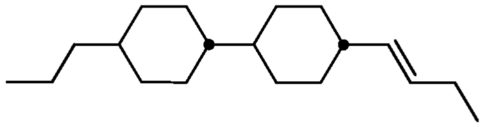

IV-3-5

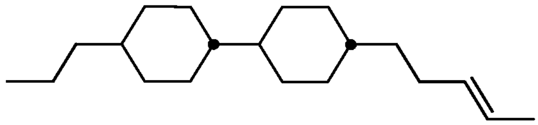

IV-3-6

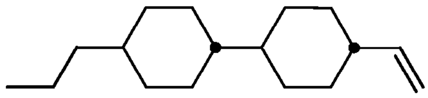

IV-3-7

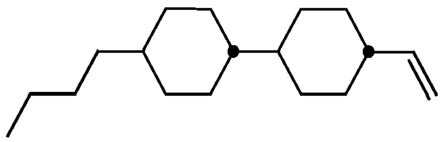

IV-3-8

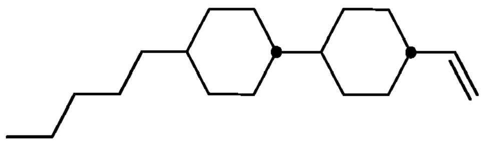

IV-3-9

The LC medium according to the invention preferably comprises one or more compounds CC-n-V and/or CC-n-Vm, in particular CC-3-V, CC-4-V, CC-3-V1 and/or CC-4-V1, preferably in a total concentration in the range of from 15 to 70 %, preferably from 25 to 55 %, very preferably from 30 to 50 %. CC-3-V is preferably used in concentrations of 5-60 %, in particularly 10-55 %. In a preferred embodiment, the LC medium contains CC-3-V and CC-3-V1 or CC-3-V and CC-4-V1.

In another preferred embodiment, the LC medium according to the invention comprises one or more compounds of formula IV-3 selected from the compounds of the formulae IV-3-10 to IV-3-25:

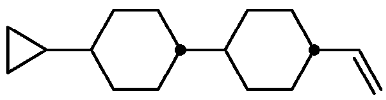

IV-3-10

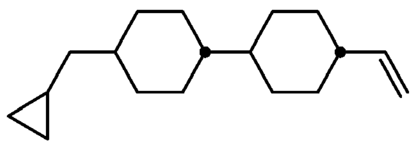

IV-3-11

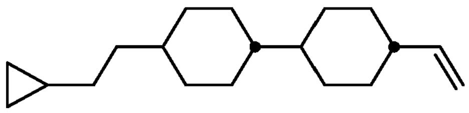

IV-3-12

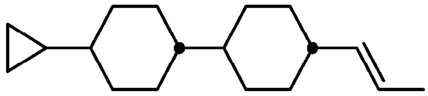

IV-3-13

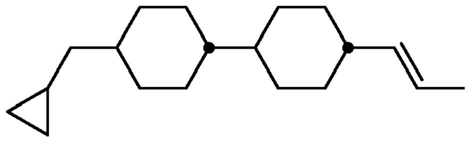

IV-3-14

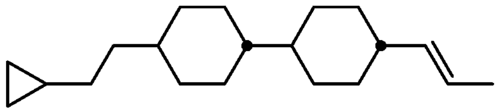

IV-3-15

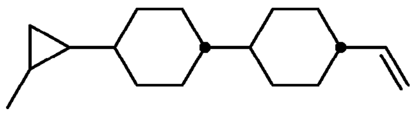

IV-3-16

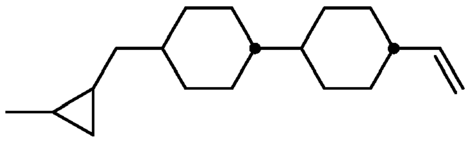

IV-3-17

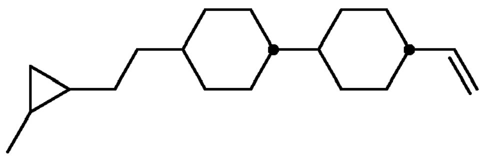

IV-3-18

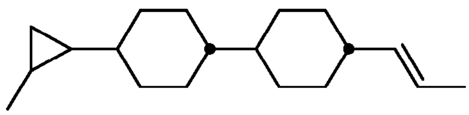

IV-3-19

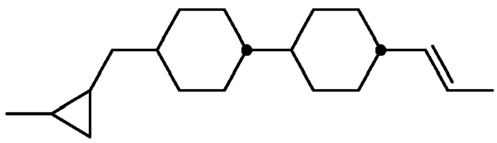

IV-3-20

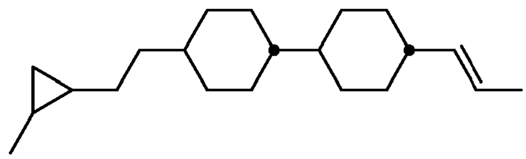

IV-3-21

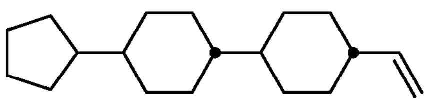

IV-3-22

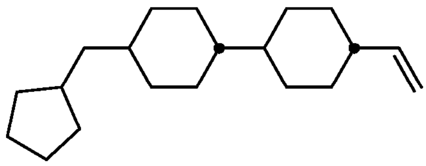

IV-3-23

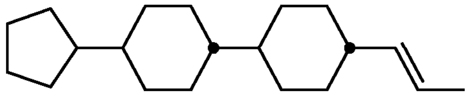

IV-3-24

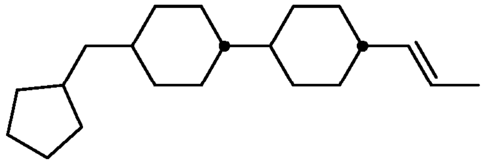

IV-3-25

Very preferably, the LC medium according to the invention comprises a compound of formula IV-4, in particular selected from the compounds of the following formulae:

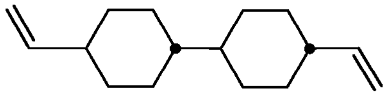

IV-4-1

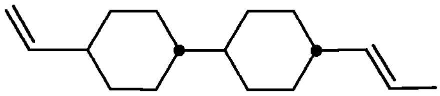

IV-4-2

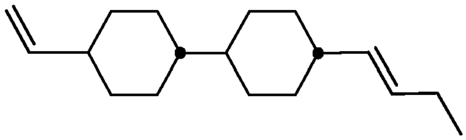

IV-4-3

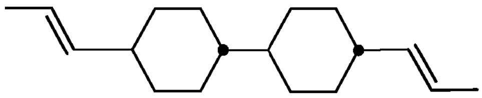

IV-4-4

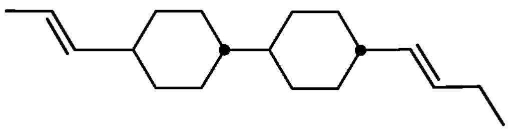

IV-4-5

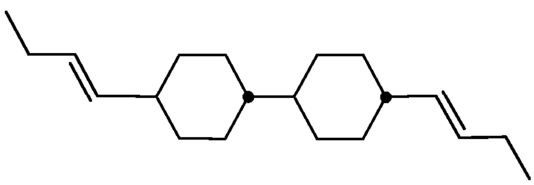

IV-4-6

In another preferred embodiment the LC medium comprises one or more compounds of formula IV-4 and its subformulae in which one or both of "alkenyl" and "alkenyl' " denote

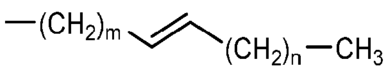,

in which m is 0, 1 or 2, and n is 0, 1 or 2, very preferably selected from compounds of formulae IV-4-3 to IV-4-6.

Very preferably, the LC medium according to the invention comprises one or more compounds of the formula IV-1 or its subformulae and/or one or more compounds of the formula IV-3 or its subformulae and/or one or more compounds of the formula IV-4 or its subformulae, where the total concentration of these compounds of the formula IV-1 is in the range from 1% to 30%.

The LC medium according to the invention preferably additionally comprises one or more compounds of the formula IVa,

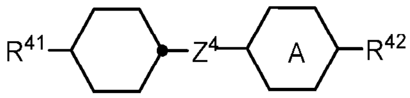

IVa

in which

$R^{41}$ and $R^{42}$ each, independently of one another, denote a straight-chain alkyl, alkoxy, alkenyl, alkoxyalkyl or alkoxy radical having up to 12 C atoms, or cyclic alkyl having 3 to 6 C atoms,

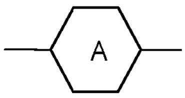

denote s

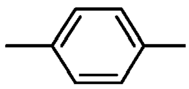
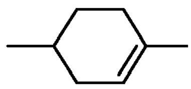
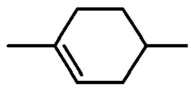

, , ,

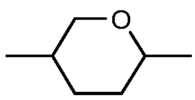
or
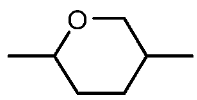

,

$Z^4$ denotes a single bond, $-CH_2CH_2-$, -CH=CH-, $-CF_2O-$, $-OCF_2-$, $-CH_2O-$, $-OCH_2-$, -COO-, - OCO-, $-C_2F_4-$, $-C_4H_8-$ or -CF=CF-.

Preferred compounds of the formula IVa are indicated below:

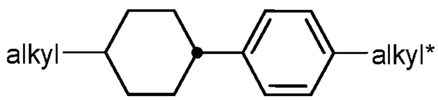

IVa-1

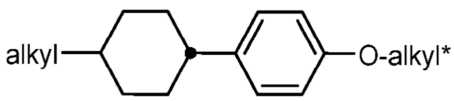

IVa-2

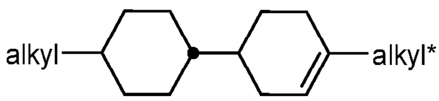

IVa-3

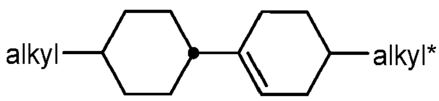

IVa-4

in which alkyl and alkyl* each, independently of one another, denote a straight-chain alkyl radical having 1 to 6 C atoms.

The LC medium according to the invention preferably comprises at least one compound of the formula IVa-1and/or formula IVa-2.

The proportion of compounds of the formula IVa in the mixture as a whole is preferably at least 5 % by weight.

Preferably, the medium comprises one or more compounds of formula IVb-1 to IVb-4, more preferably of the compounds of the formulae IVb-1 to IVb-5

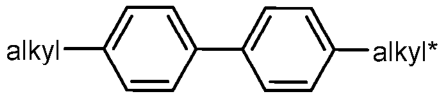

IVb-1

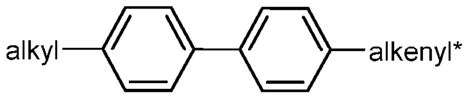

IVb-2

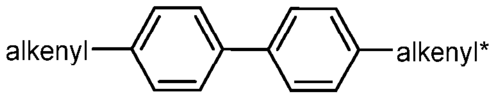

IVb-3

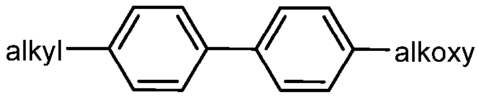

IVb-4

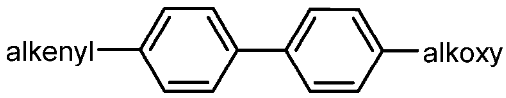

IVb-5

in which

alkyl and alkyl* each, independently of one another, denote a straight-chain alkyl radical having 1 to 6 C atoms, or cyclic alkyl having 3 to 6 C atoms, preferably alkyl denotes methyl, alkenyl and alkenyl* each, independently of one another, denote a straight-chain alkenyl radical having 2 to 6 C atoms,

and

alkoxy denotes a straight-chain alkoxy radical having 1-6 C atoms.

The proportion of the compounds of the formulae IV-1 to IV-3 in the mixture as a whole is preferably at least 3 % by weight, in particular ≥ 5 % by weight.

Of the compounds of the formulae IVa-1 to IVa-4, the compounds of the formula IVa-2 are particularly preferred.

Of the compounds of the formulae IVb-1 to IVb-3, the compounds of the formula IVb-2 are particularly preferred.

Particularly preferred biphenyls are

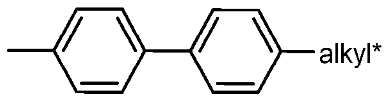

IVb-1-1

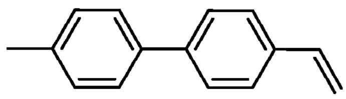

IVb-2-1

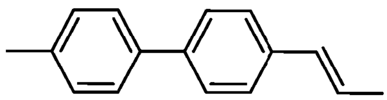

IVb-2-2

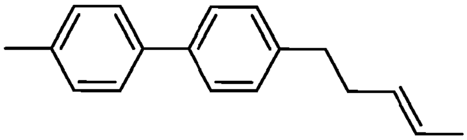

IVb-2-3

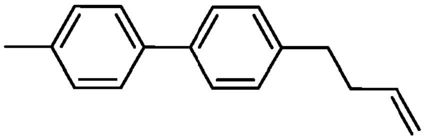

IVb-2-4

in which alkyl* denotes an alkyl radical having 1 to 6 C atoms and preferably denotes n-propyl.

The medium according to the invention particularly preferably comprises one or more compounds of the formulae IVb-1-1, IVb-2-3 and/or IVb-2-4.

In a preferred embodiment, the medium according to the invention comprises one or more compounds of formula V

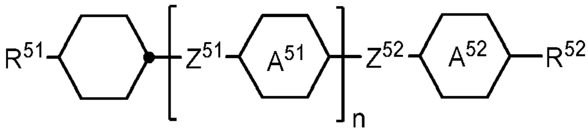

V

in which

$R^{51}$ and $R^{52}$ independently of one another, denote H, an alkyl, alkoxy or alkenyl radical having up to 15 C atoms which is unsubstituted, monosubstituted by F, Cl, CN or $CF_3$ or at least monosubstituted by halogen, where, in addition, one or more $CH_2$ groups in these radicals may be replaced by -O-, -S-,-C≡C-, $-CF_2O-$, $-OCF_2-$, -OC-O-, -O-CO-,

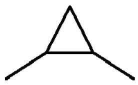,

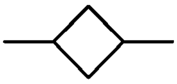, 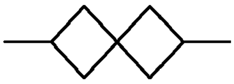, 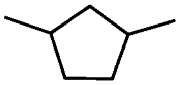, 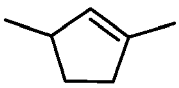, 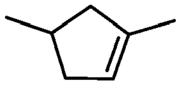,

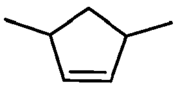,

in such a way that O atoms are not linked directly to one another, and preferably denote alkyl having 1 to 7 C atoms, preferably n-alkyl, particularly preferably n-alkyl having 1 to 5 C atoms, alkoxy having 1 to 6 C atoms, preferably n-alkoxy, particularly preferably n-alkoxy having 2 to 5 C atoms, alkoxyalkyl, alkenyl or alkenyloxy having 2 to 7 C atoms, preferably having 2 to 4 C atoms, preferably alkenyloxy,

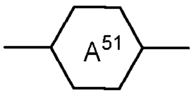 and 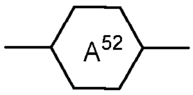,

identically or differently, denote

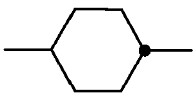,

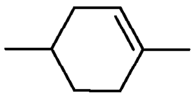 , 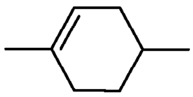 , 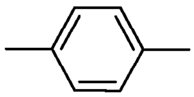 , 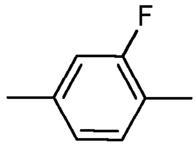 or 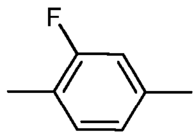 ,

$Z^{51}$, $Z^{52}$ each, independently of one another, denote $-CH_2-CH_2-$, $-CH_2-O-$, -CH=CH-, -C≡C-, -COO- or a single bond, preferably $-CH_2-CH_2-$, $-CH_2-O-$ or a single bond and particularly preferably a single bond, and
n is 1 or 2,
where the compounds of the formula CL are excluded.

The compounds of formula V are preferably selected from the compounds of the formulae V-1, V-2 and V-3:

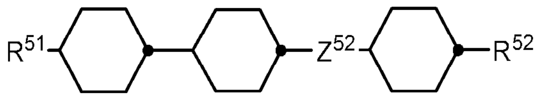

V-1

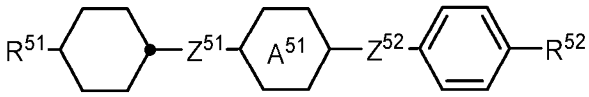

V-2

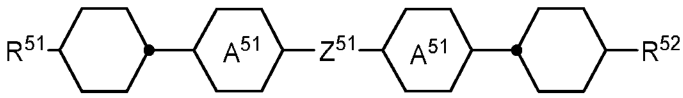

V-3

in which the groups occurring have the meanings given above for formula V.

The compounds of formula V-1 are preferably selected from the compounds of the formulae V-1-1 to V-1-8;

the compounds of formula V-2 are preferably selected from the compounds of the formulae V-2-1 to V-2-4; and the compounds of formula V-3 are preferably selected from the compounds of the formulae V-3-1 to V-3-4:

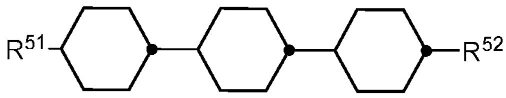

V-1-1

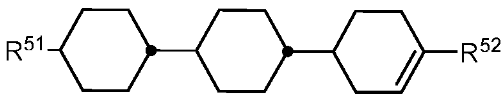

V-1-2

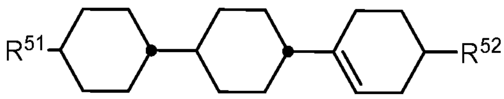

V-1-3

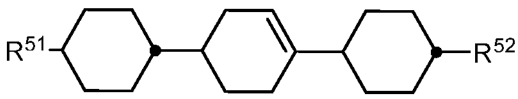

V-1-4

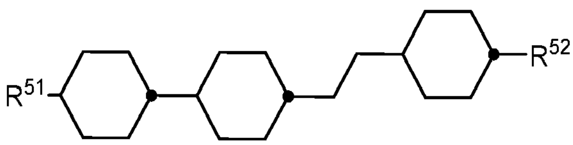

V-1-5

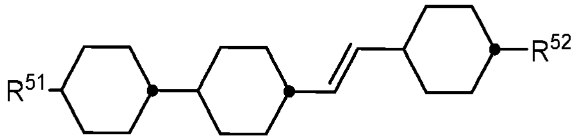

V-1-6

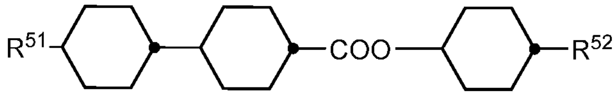

V-1-7

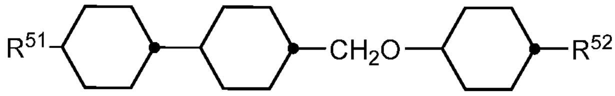

V-1-8

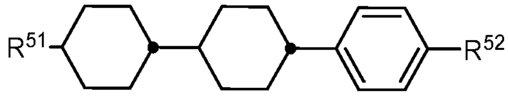

V-2-1

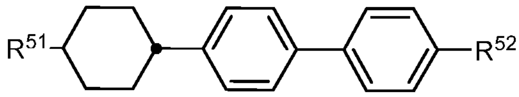

V-2-2

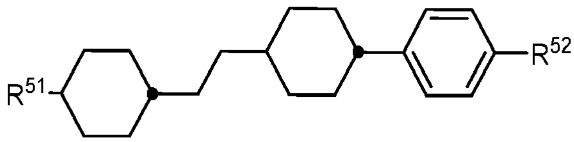

V-2-3

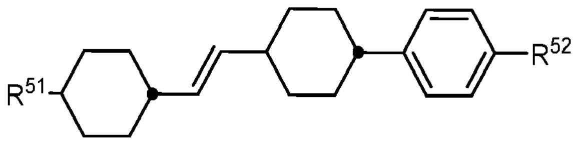

V-2-4

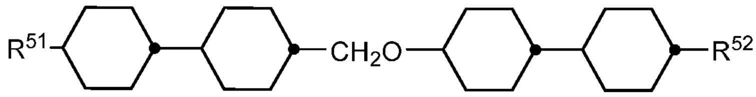

V-3-1

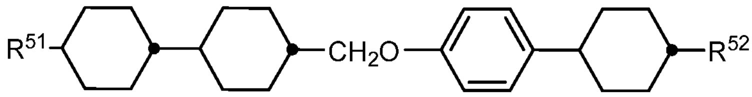

V-3-2

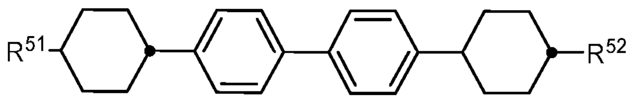

V-3-3

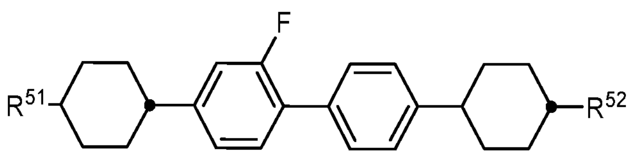

V-3-4

in which $R^{51}$ and $R^{52}$ have the meanings indicated for formula V above.
$R^{51}$ and $R^{52}$ preferably each, independently of one another, denote straight-chain alkyl having 1 to 7 C atoms or alkenyl having 2 to 7 C atoms.

Very preferred compounds of the formula V-1-1 are selected from the compounds of the formulae V-1-1-1 to V-1-1-28.

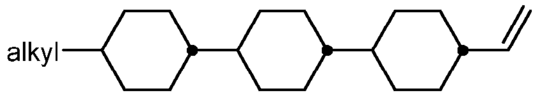
V-1-1-1

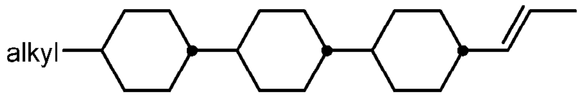
V-1-1-2

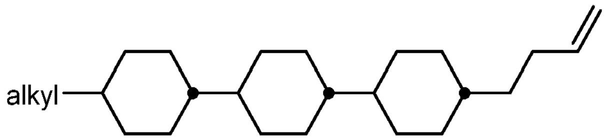
V-1-1-3

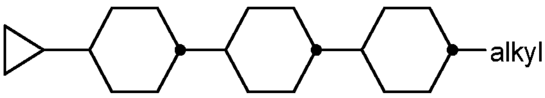
V-1-1-4

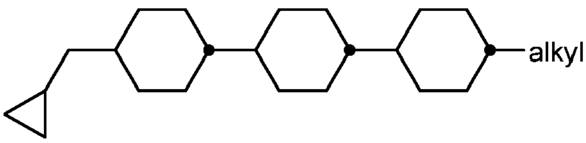
V-1-1-5

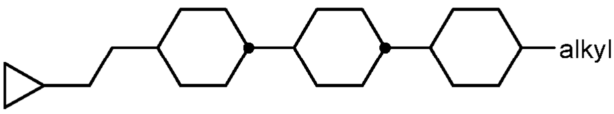
V-1-1-6

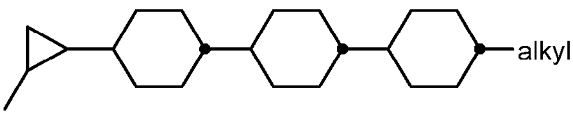
V-1-1-7

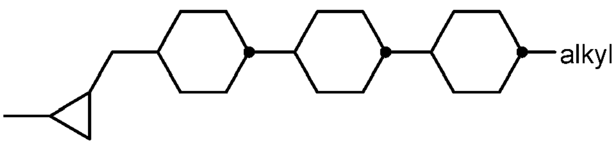
V-1-1-8

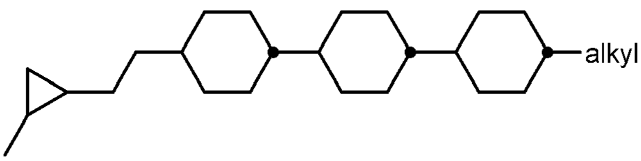
V-1-1-9

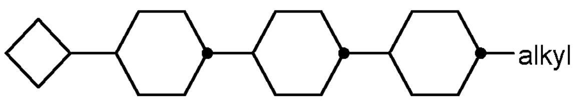
V-1-1-10

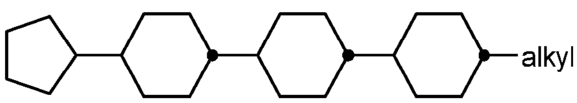
V-1-1-11

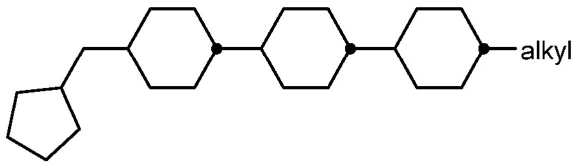

V-1-1-12

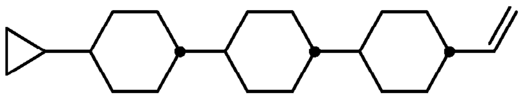

V-1-1-13

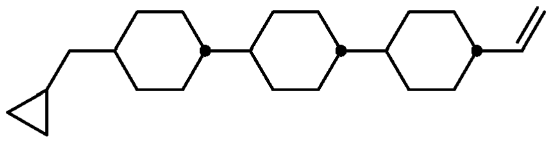

V-1-1-14

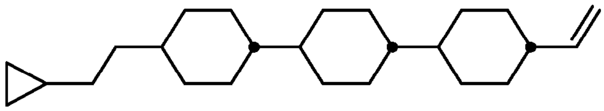

V-1-1-15

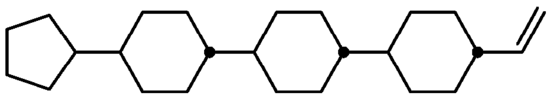

V-1-1-16

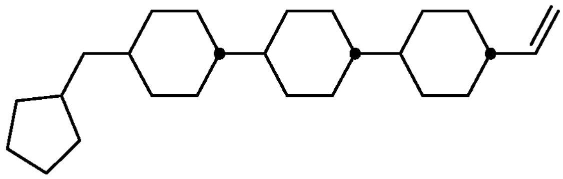

V-1-1-17

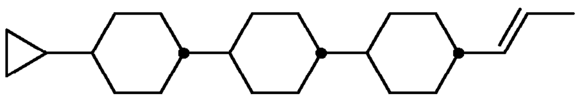

V-1-1-18

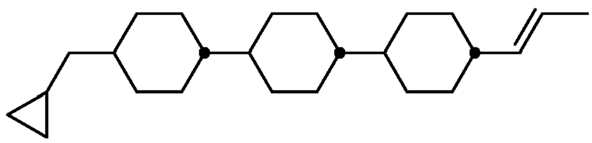

V-1-1-19

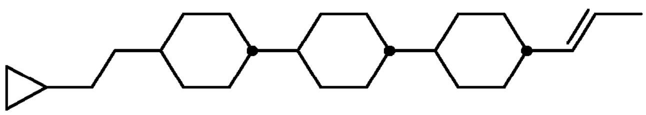

V-1-1-20

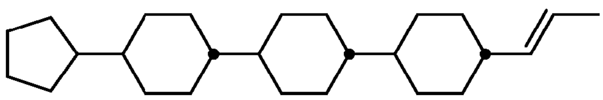

V-1-1-21

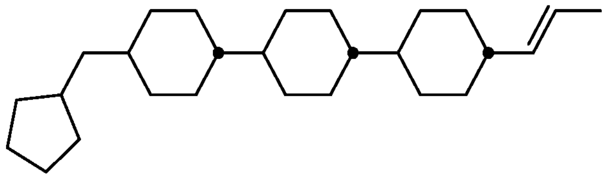

V-1-1-22

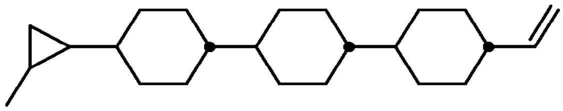

V-1-1-23

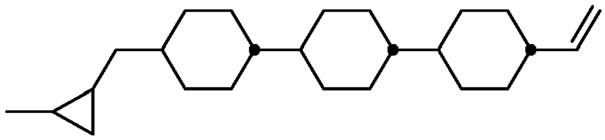

V-1-1-24

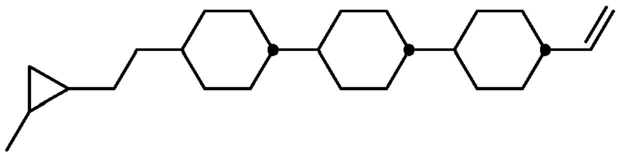

V-1-1-25

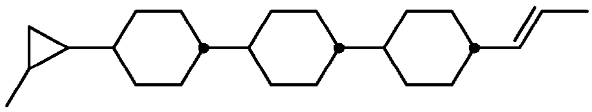

V-1-1-26

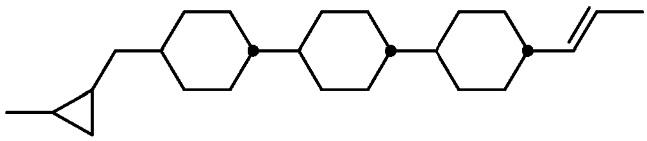

V-1-1-27

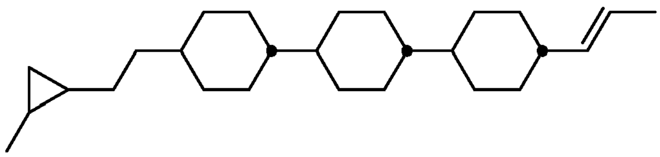

V-1-1-28

in which alkyl denotes ethyl, n-propyl, n-butyl or n-pentyl, preferably n-propyl.

Very preferred compounds of the formula V-2-1 are selected from the compounds of the formulae V-2-1-1 to V-2-1-7

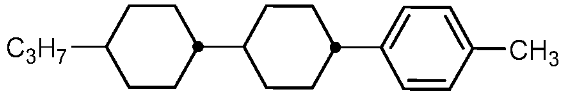

V-2-1-1

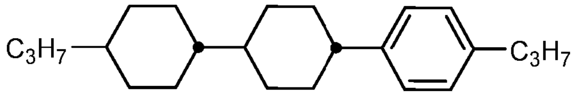

V-2-1-2

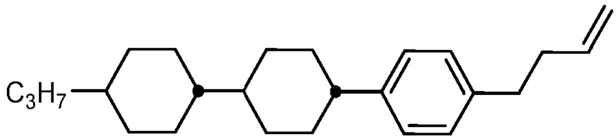

V-2-1-3

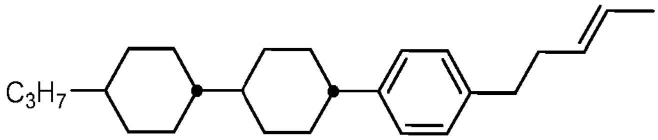

V-2-1-4

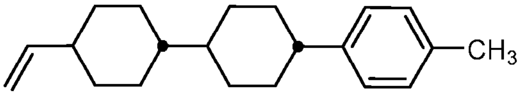

V-2-1-5

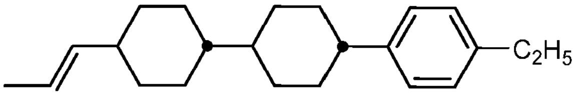

V-2-1-6

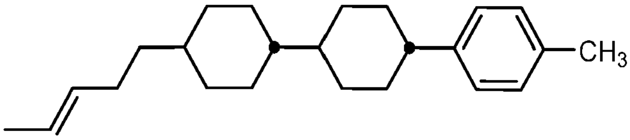

V-2-1-7

Very preferred compounds of the formula V-2-2 are selected from the compounds of the formulae V-2-2-1 to V-2-2-9

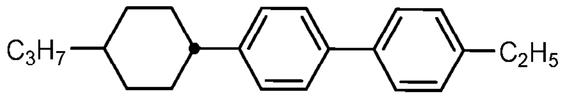

V-2-2-1

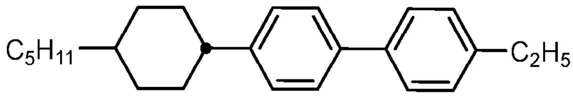

V-2-2-2

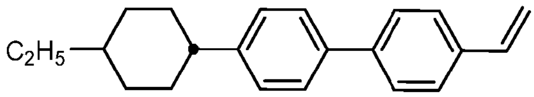

V-2-2-3

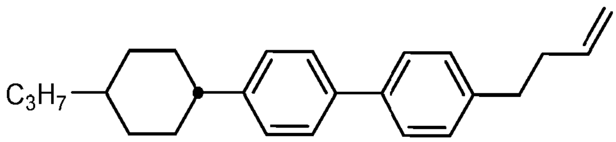

V-2-2-4

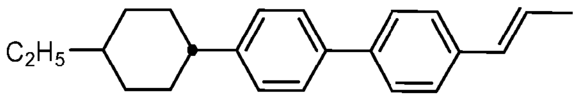

V-2-2-5

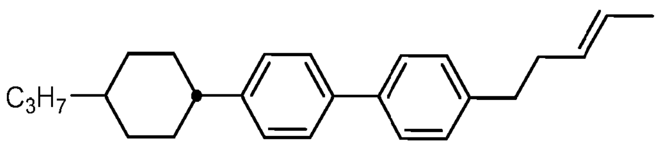

V-2-2-6

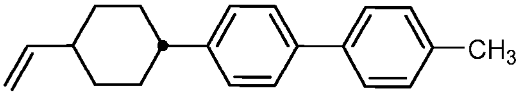

V-2-2-7

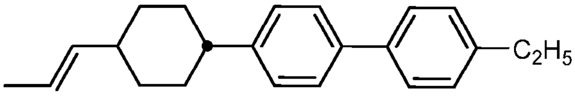

V-2-2-8

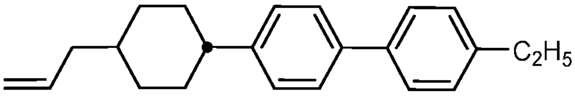

V-2-2-9

Preferably, the medium according to the invention comprises one or more compounds of the formula CL

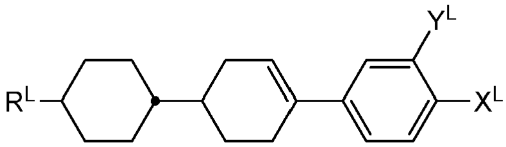

CL

in which

$R^L$ denotes H, a straight chain or branched alkyl or alkoxy radical having 1 to 15 C atoms, or a straight chain or branched alkenyl radical having 2 to 15 C atoms, where one or more $CH_2$ groups in these radicals may each be replaced, independently of one another, by

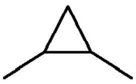 , 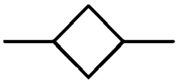 , 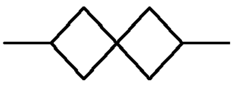 , 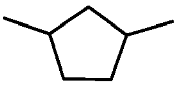 , 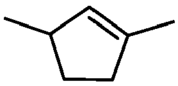 , 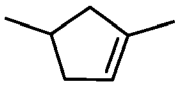 ,

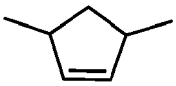 ,

-C≡C-, $-CF_2O-$, $-OCF_2-$, -CH=CH-, -O-, -CO-O- or -O-CO- in such a way that O atoms are not linked directly to one another, and in which, in addition, one or more H atoms may be replaced by halogen,

$X^L$ denotes F, Cl, CN, $CHF_2$, $CF_3$, $OCF_3$, or, identically or differently, has one of the meanings of $R^L$,

$Y^L$ denotes H, F, Cl or $CH_3$.

The compounds of formula CL are preferably selected form the group of compounds of the formulae CL-1, CL-2 and CL-3:

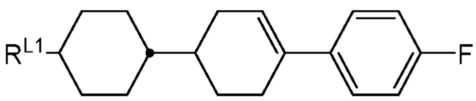

CL-1

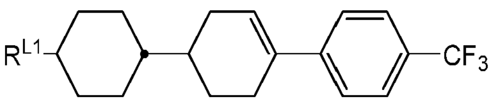

CL-2

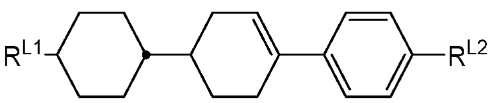

CL-3

in which

$R^{L1}$ and $R^{L2}$, identically or differently, have the meanings given above for $R^L$ and, preferably denote alkyl or alkenyl having 1 to 7 C atoms or 2 to 7 C atoms, respectively, in which a $CH_2$ group may be replaced by cyclopropane-1,2-diyl, and $R^{L2}$ alternatively denotes alkoxy having 1 to 5 C atoms.

Very preferred compounds of the formula CL are selected from the compounds of the formulae CL-3-1 to CL-3-18:

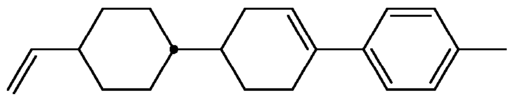

CL-3-1

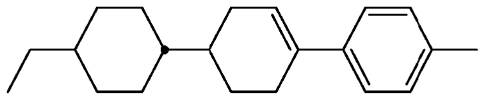

CL-3-2

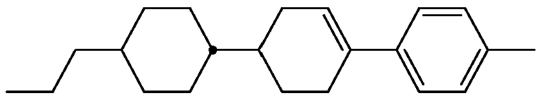

CL-3-3

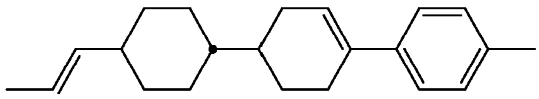

CL-3-4

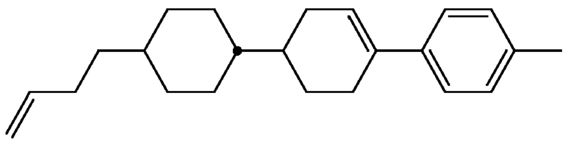

CL-3-5

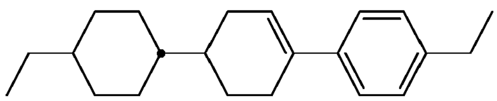

CL-3-6

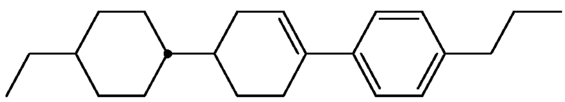

CL-3-7

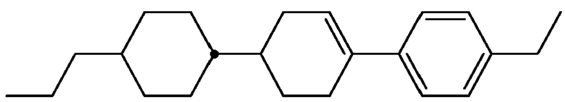

CL-3-8

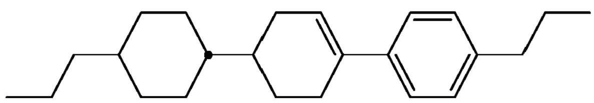

CL-3-9

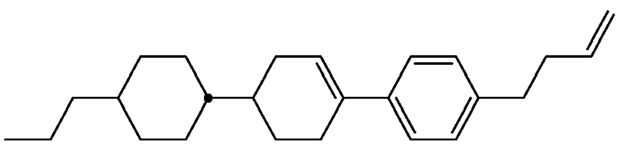

CL-3-10

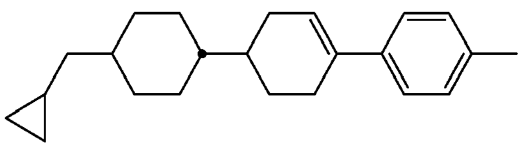

CL-3-11

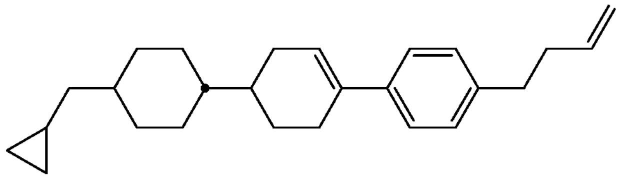

CL-3-12

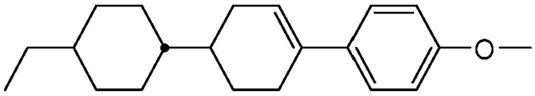

CL-3-13

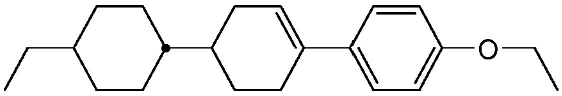

CL-3-14

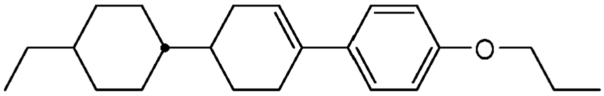

CL-3-15

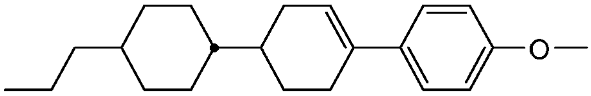

CL-3-16

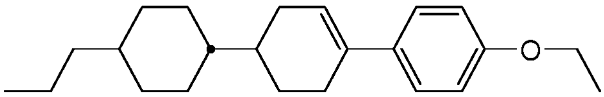

CL-3-17

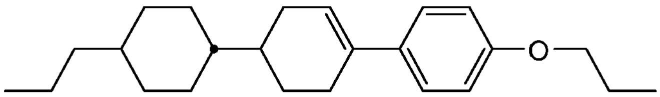

CL-3-18

In a particularly preferred embodiment, the medium according to the invention comprises the compound CL-3-1 or CL-3-3.

In a preferred embodiment of the present invention the LC medium additionally comprises one or more compounds of the formulae VI-1 to VI-21,

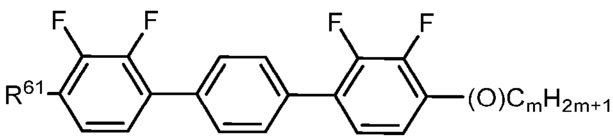

VI-1

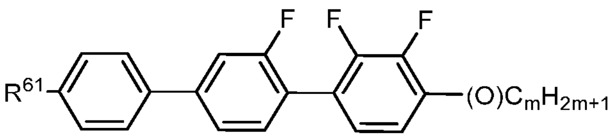

VI-2

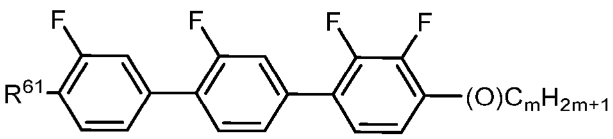

VI-3

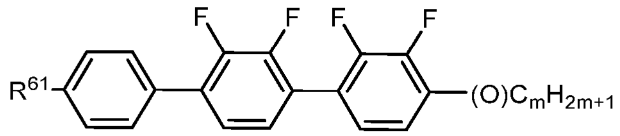

VI-4

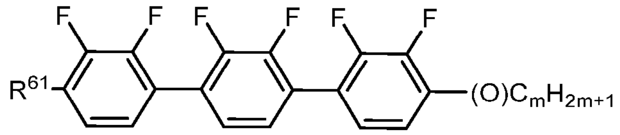

VI-5

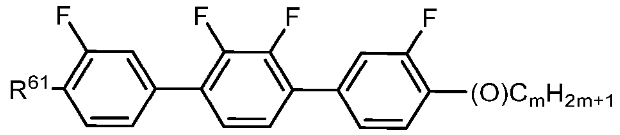

VI-6

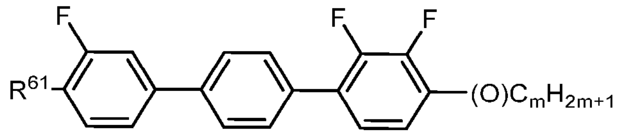

VI-7

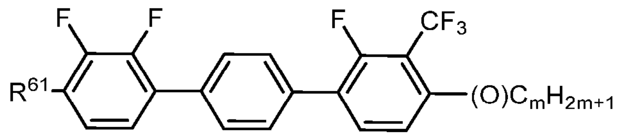

VI-8

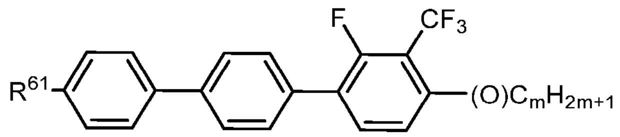

VI-9

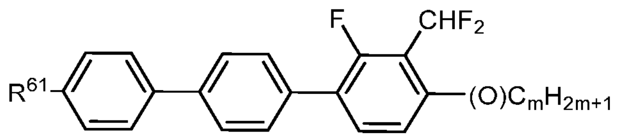

VI-10

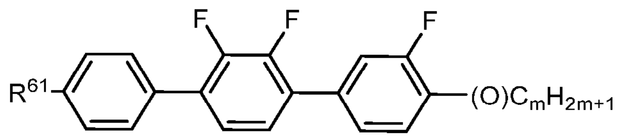

VI-11

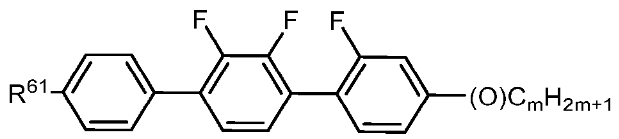

VI-12

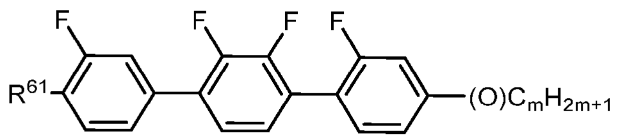

VI-13

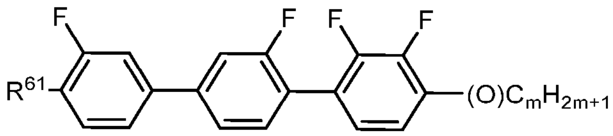

VI-14

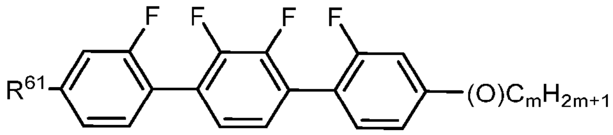

VI-15

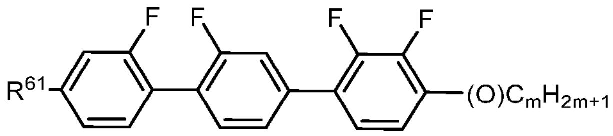

VI-16

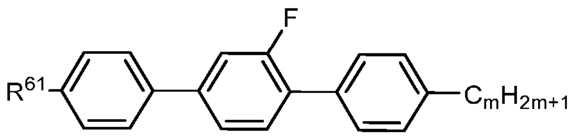

VI-17

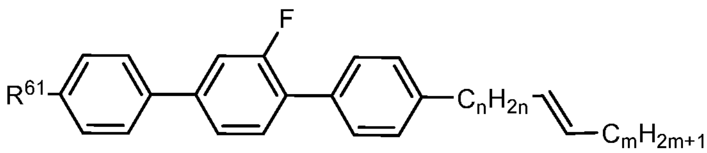

VI-18

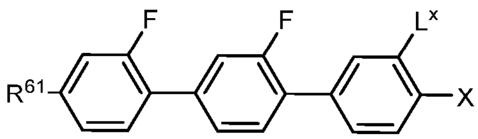

VI-19

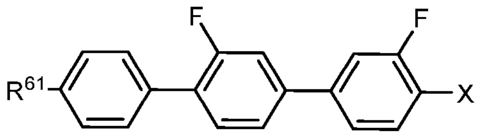

VI-20

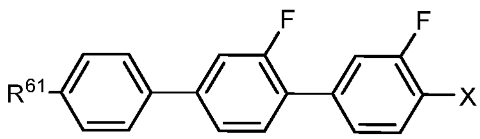

VI-21

in which

$R^{61}$ denotes a straight-chain alkyl or alkoxy radical having 1 to 6 C atoms, or cyclic alkyl having 3 to 6 C atoms, (O) denotes -O- or a single bond, X denotes F, Cl, $OCF_3$ or $OCHF_2$, $L^x$ denotes H or F, m is 0, 1, 2, 3, 4, 5 or 6 and n is 0, 1, 2, 3 or 4.

$R^{61}$ preferably denotes methyl, ethyl, propyl, butyl, pentyl, hexyl, methoxy, ethoxy, propoxy, butoxy, pentoxy.

X preferably denotes F or $OCH_3$, very preferably F.

The LC medium according to the invention preferably comprises the terphenyls of the formulae VI-1 to VI-21 in amounts of 2 to 30 % by weight, in particular 5 to 20 % by weight.

Particular preference is given to compounds of the formulae VI-2, VI-17, and VI-19 wherein X denotes F. In these

compounds, $R^{61}$ preferably denotes alkyl, furthermore alkoxy, each having 1 to 5 C atoms. In the compounds of the formula VI-17, $R^{61}$ preferably denotes alkyl or alkenyl, in particular alkyl. In the compounds of the formula VI-19, $R^{61}$ preferably denotes alkyl. In the compounds of the formulae VI-19 to VI-21, X preferably denotes F.

The terphenyls of formula VI-1 to VI-21 are preferably employed in the LC media according to the invention if the $\Delta n$ value of the mixture is to be $\geq 0.1$. Preferred LC media comprise 2 to 20 % by weight of one or more terphenyl compounds selected from the group of the compounds of formulae VI-1 to VI-21.

In a preferred embodiment of the present invention the LC medium additionally comprises one or more compounds of the formulae VIa-1 to VIa-15,

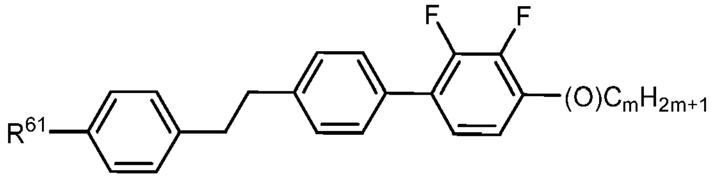

VIa-1

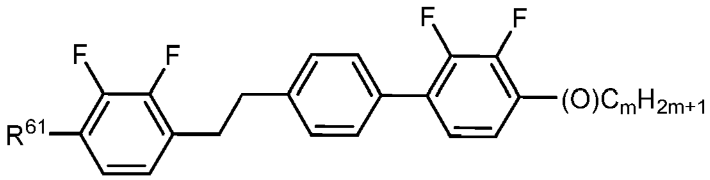

VIa-2

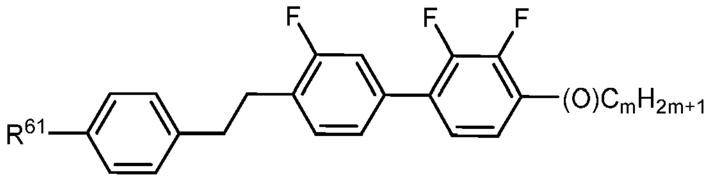

VIa-3

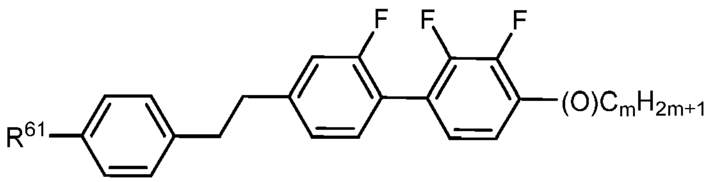

VIa-4

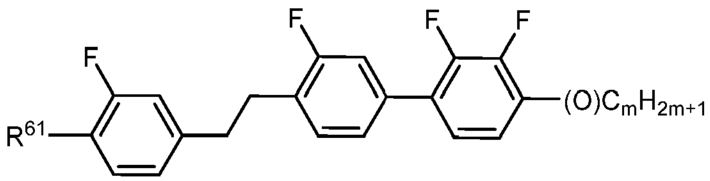

VIa-5

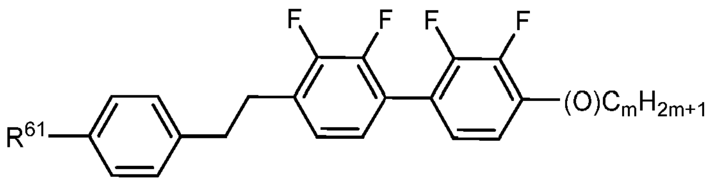

VIa-6

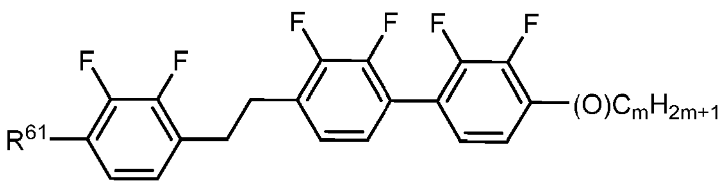

VIa-7

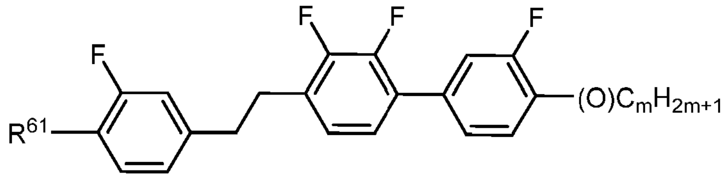

VIa-8

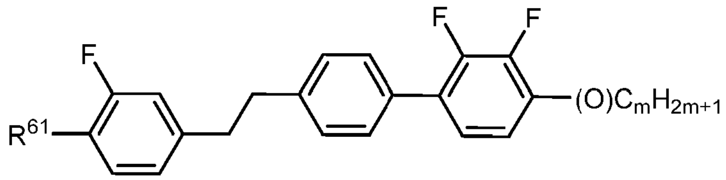

VIa-9

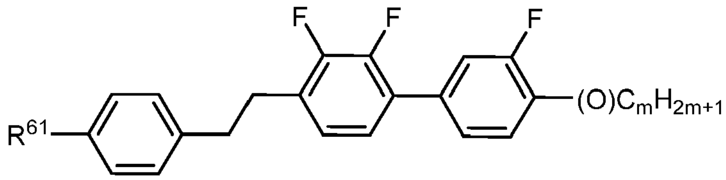

VIa-10

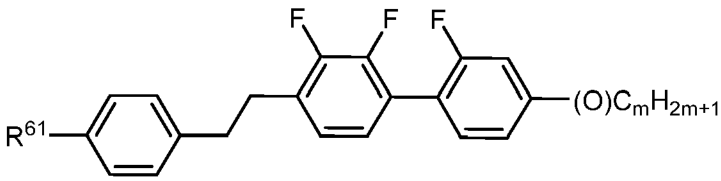

VIa-11

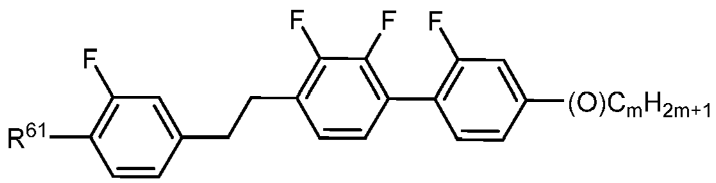

VIa-12

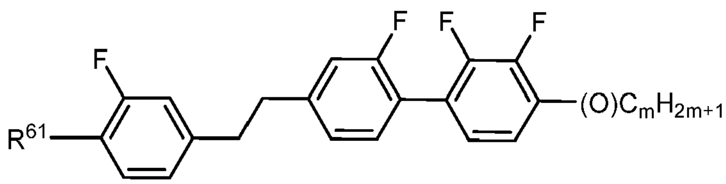

VIa-13

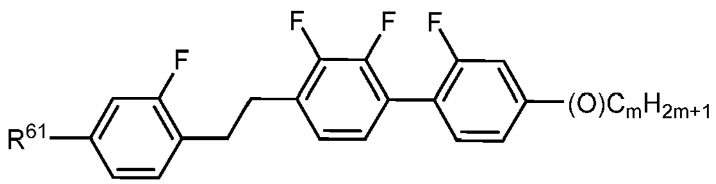

VIa-14

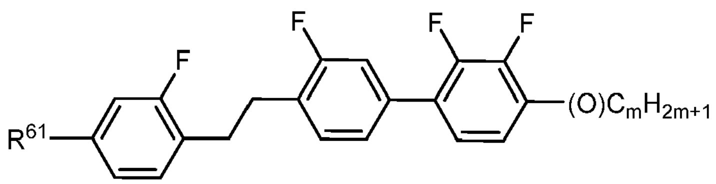

VIa-15

in which $R^{61}$ denotes a straight-chain alkyl or alkoxy radical having 1 to 6 C atoms, (O) denotes -O- or a single bond, and m is 0, 1, 2, 3, 4, 5 or 6 and n is 0, 1, 2, 3 or 4.

$R^{61}$ preferably denotes methyl, ethyl, propyl, butyl, pentyl, hexyl, methoxy, ethoxy, propoxy, butoxy, pentoxy.

In a preferred embodiment of the present invention the medium additionally comprises one or more compounds of the formulae VII-1 to VII-9

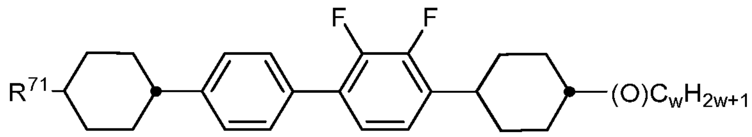

VII-1

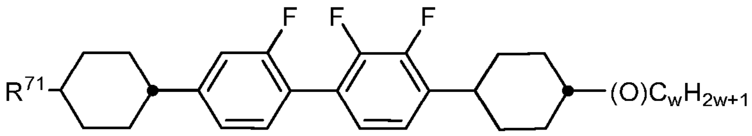

VII-2

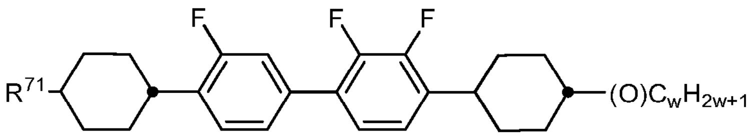

VII-3

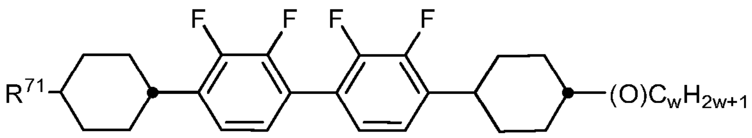

VII-4

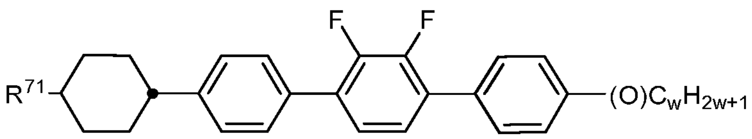

VII-5

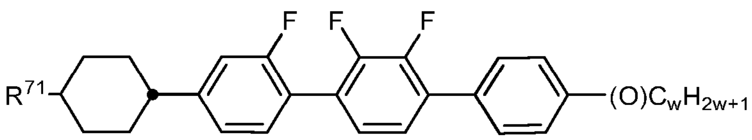

VII-6

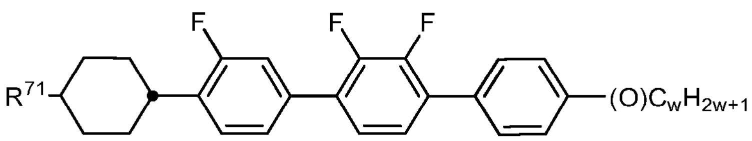

VII-7

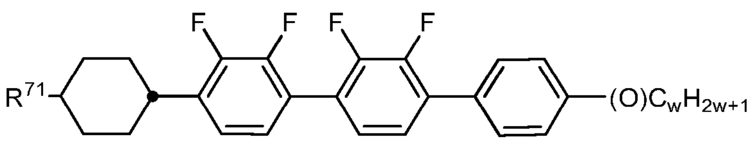

VII-8

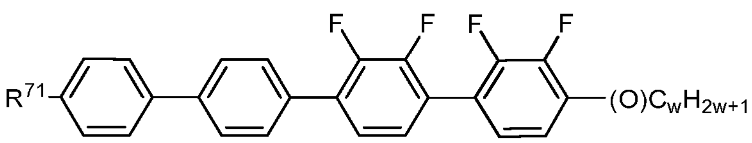

VII-9

in which

$R^{71}$ each, independently of one another, have one of the meanings indicated for $R^{21}$ in formula IIA, and w is an integer from 1 to 6.

Preferably, the medium according to the invention comprises one or more compounds of the formula VIII:

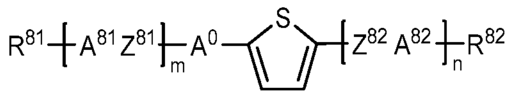

VIII

in which

$R^{81}$ and $R^{82}$, identically or differently, denote H, halogen, CN, SCN, straight chain alkyl or alkoxy having 1 to 15 C atoms, straight chain alkenyl or alkenyloxy having 2 to 15 C atoms or branched alkyl, alkoxy, alkenyl or alkenyloxy having 3 to 15 C atoms, where one or more $CH_2$ groups in these radicals may each be replaced, independently of one another, by

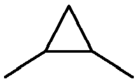, 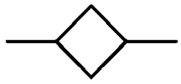, 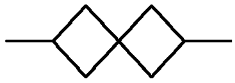, 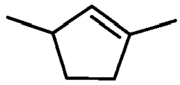, 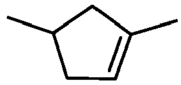, 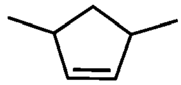,

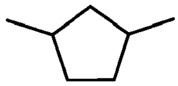,

-C≡C-, $-CF_2O-$, $-OCF_2-$, -CH=CH-, by -O-, -CO-O- or -O-CO- in such a way that O atoms are not linked directly to one another, and in which one or more H atoms may be replaced by halogen,

$A^0$, $A^{81}$, and $A^{82}$, each, independently of one another, denote phenylene-1,4-diyl, in which one or two CH groups may be replaced by N and one or more H atoms may be replaced by halogen, CN, $CH_3$, $CHF_2$, $CH_2F$, $CF_3$, $OCH_3$, $OCHF_2$ or $OCF_3$, cyclohexane-1,4-diyl, in which one or two non-adjacent $CH_2$ groups may be replaced, independently of one another, by O and/or S and one or more H atoms may be replaced by F, cyclohexene-1,4-diyl, bicyclo[1.1.1]pentane-1,3-diyl, bicyclo[2.2.2]octane-1,4-diyl, spiro[3.3]heptane-2,6-diyl, tetrahydropyran-2,5-diyl or 1,3-dioxane-2,5-diyl;

$Z^{81}$ and $Z^{82}$, each, independently of one another, denote $-CF_2O-$, $-OCF_2-$, $-CH_2O-$, $-OCH_2-$ , -CO-O-, -O-CO-, $-C_2H_4-$, $-C_2F_4$ , $-CF_2CH_2-$, $-CH_2CF_2-$, -CFHCFH-, $-CFHCH_2-$, - $CH_2CFH-$, $-CF_2CFH-$, $-CFHCF_2-$, -CH=CH-, -CF=CH-, -CH=CF-, -CF=CF-, -C≡C- or a single bond;

n denotes 0, 1, 2 or 3, preferably 0, 1 or 2, very preferably 0 or 1, particularly preferably 0; and

m denotes 0, 1, 2 or 3, preferably 0, 1 or 2, very preferably 1 or 2, in particular 1.

$A^{81}$ and $A^{82}$ in formula I preferably denote phenylene-1,4-diyl, which may also be mono- or polysubstituted by F, furthermore cyclohexane-1,4-diyl, cyclohexenylene-1,4-diyl, tetrahydropyran-2,5-diyl or 1,3-dioxane-2,5-diyl, very preferably phenylene-1,4-diyl which may also be mono- or polysubstituted by F, or cyclohexane-1,4-diyl.

$Z^{81}$ and $Z^{82}$ in formula VIII preferably denote $-CF_2O-$, $-OCF_2-$ or a single bond, very preferably a single bond.

$A^{81}$ and $A^{82}$ in formula VIII particularly preferably denote

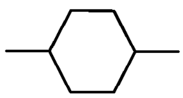, 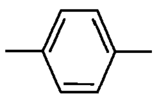,

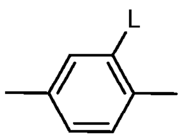, 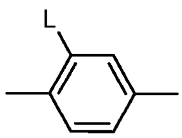, 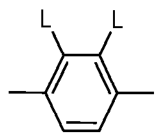 or 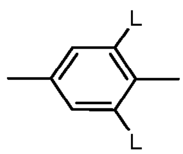

in which L denotes halogen, $CF_3$ or CN, preferably F.

Preference is furthermore given to compounds of the formula VIII in which $R^{81}$ and $R^{82}$ each, independently of one another, denote H, F, or alkyl, alkoxy, alkenyl or alkynyl having 1 to 8, preferably 1 to 5, C atoms, each of which is optionally substituted by halogen, in particular by F.

$R^{81}$ and $R^{82}$ preferably denote H, optionally fluorinated alkyl or alkoxy having 1 to 7 C atoms, optionally

fluorinated alkenyl or alkynyl having 2 to 7 C atoms, optionally fluorinated cycloalkyl having 3 to 12 C atoms.

Preferably, at least one of $R^{81}$ and $R^{82}$ is not H, particularly preferably both of $R^{81}$ and $R^{82}$ are not H. $R^{81}$ is very particularly preferably alkyl. $R^{82}$ is furthermore preferably H, alkyl or fluorine. Very particularly preferably, $R^{81}$ is alkyl and $R^{82}$ is H or alkyl. $R^{81}$, $R^{82}$ each, independently of one another, very particularly preferably denote unbranched alkyl having 1 to 5 C atoms. If $R^{81}$ and $R^{82}$ denote substituted alkyl, alkoxy, alkenyl or alkynyl, the total number of C atoms in the two groups $R^{81}$ and $R^{82}$ is preferably less than 10.

Preferred compounds of the formula VIII are selected from the compounds of the formula VIIIa

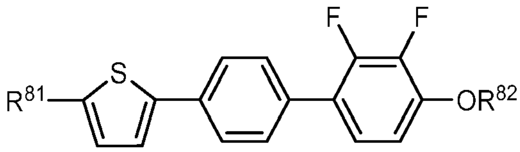

VIIIa

in which $R^{81}$ and $R^{82}$, identically or differently, denote straight chain alkyl having 1 to 15 C atoms, straight chain alkenyl having 2 to 15 C atoms or branched alkyl, or alkenyl having 3 to 15 C atoms, where one or more $CH_2$ groups in these radicals may each be replaced, independently of one another, by

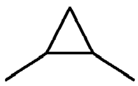 , 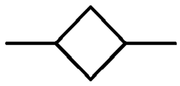 , 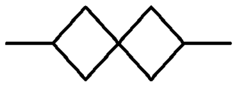 ,

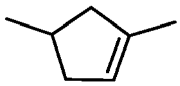 , 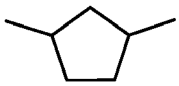 ,

and in which one or more H atoms may be replaced by fluorine, preferably both of $R^{81}$ and $R^{82}$ denote straight chain alkyl having 1 to 6 C atoms.

Very preferred compounds of the formula VIIIa are selected from the compounds of the formulae VIIIa-1 to VIIIa-35:

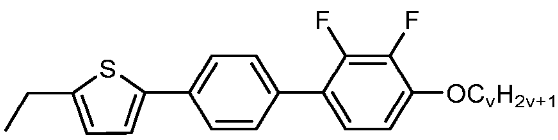

VIIIa-1

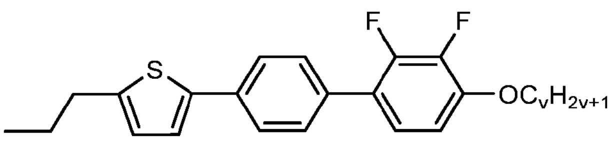

VIIIa-2

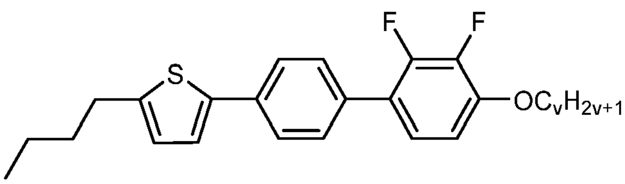

VIIIa-3

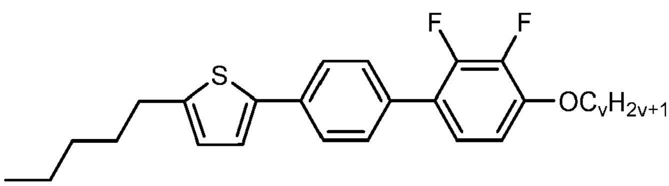

VIIIa-4

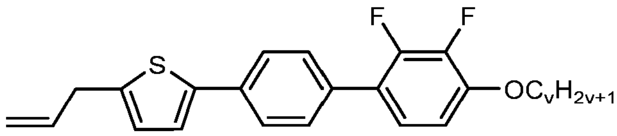

VIIIa-5

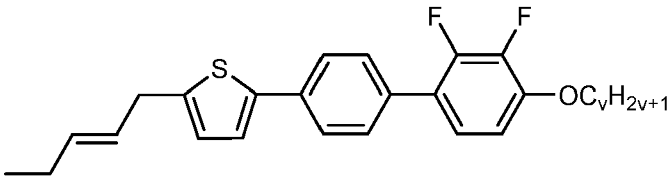

VIIIa-6

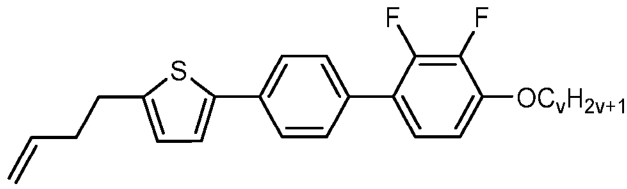

VIIIa-7

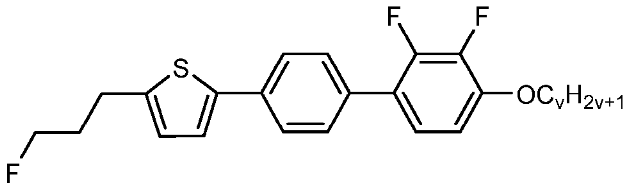

VIIIa-8

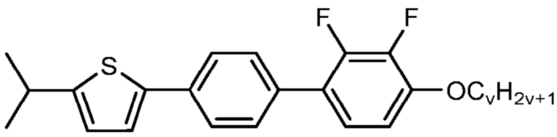

VIIIa-9

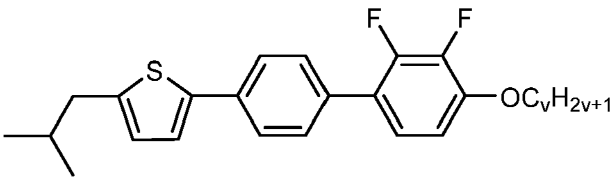

VIIIa-10

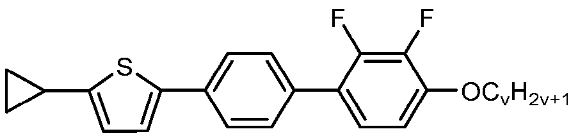

VIIIa-11

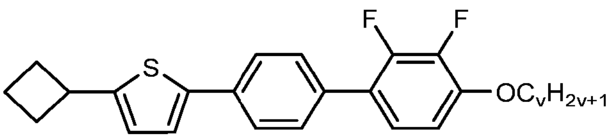

VIIIa-12

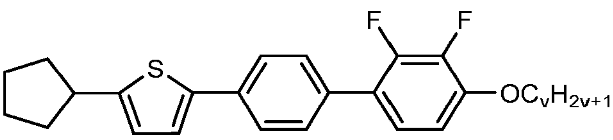

VIIIa-13

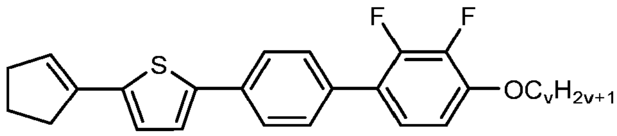

VIIIa-14

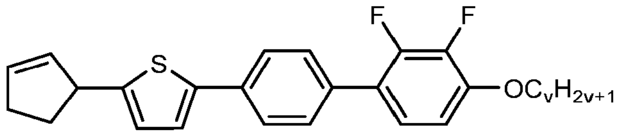

VIIIa-15

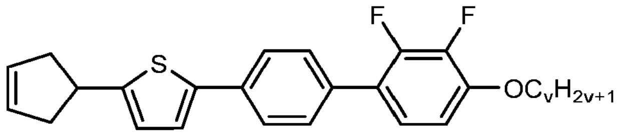

VIIIa-16

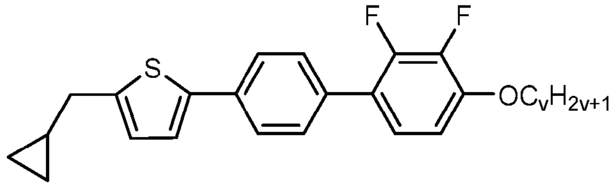

VIIIa-17

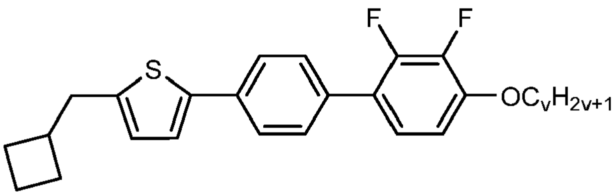

VIIIa-18

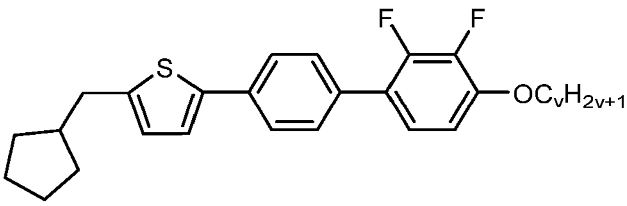

VIIIa-19

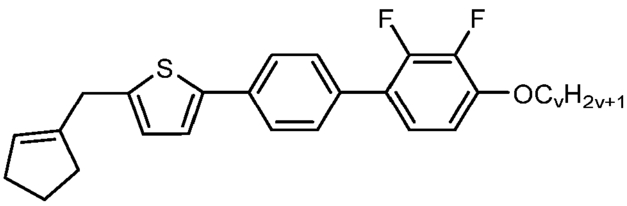

VIIIa-20

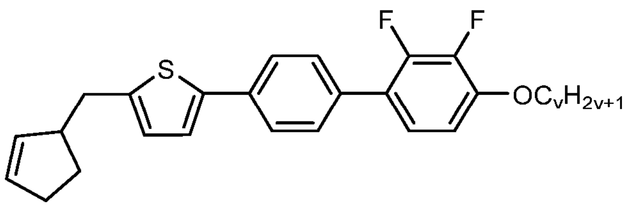

VIIIa-21

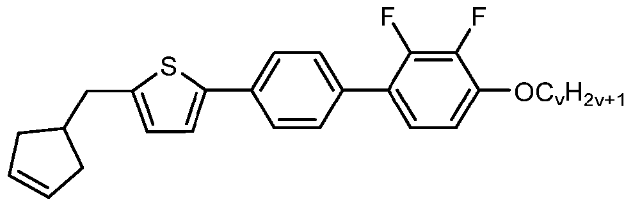

VIIIa-22

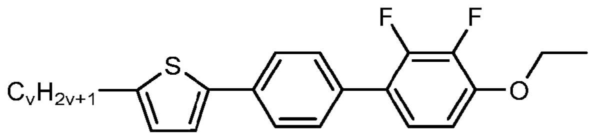

VIIIa-23

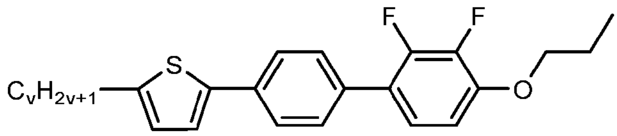

VIIIa-24

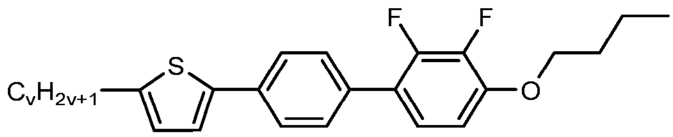

VIIIa-25

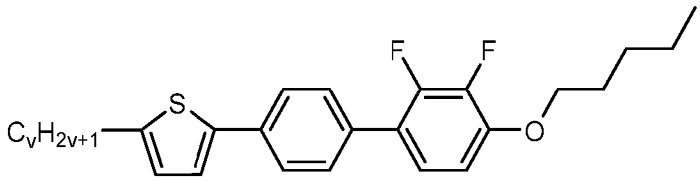

VIIIa-26

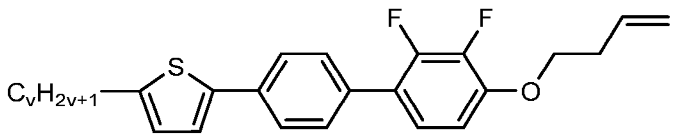

VIIIa-27

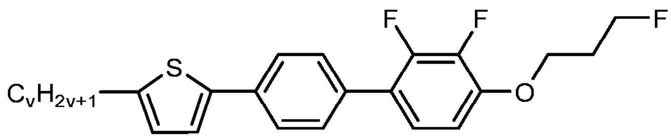

VIIIa-28

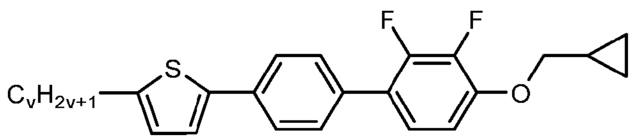

VIIIa-29

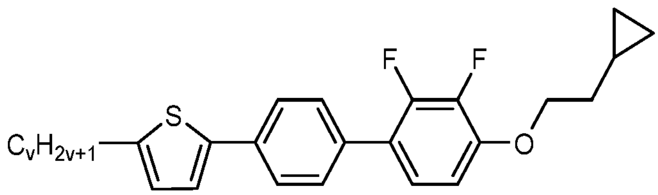

VIIIa-30

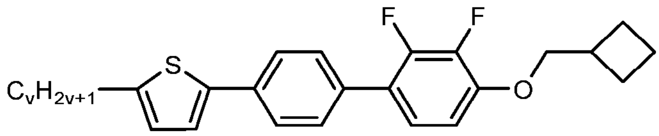

VIIIa-31

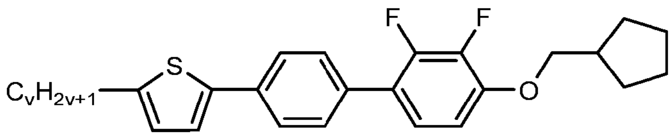

VIIIa-32

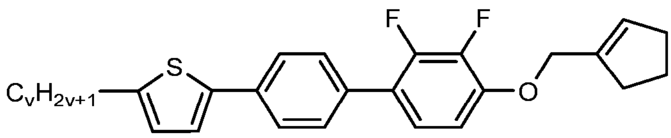

VIIIa-33

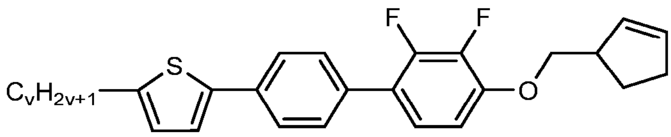

VIIIa-34

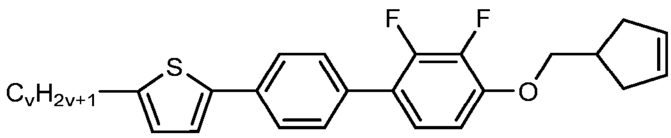

VIIIa-35

in which v is an integer from 1 to 6.

Further preferred compounds of the formula VIII are selected from the following sub-formulae:

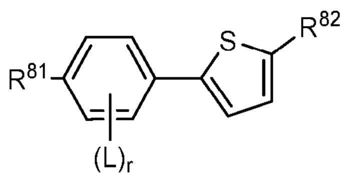

VIII-1

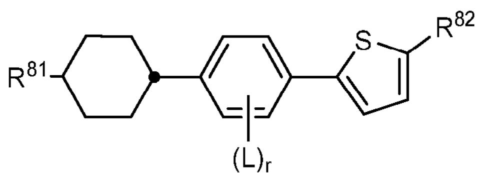

VIII-2

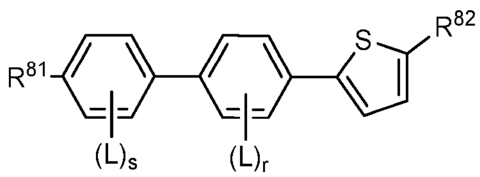

VIII-3

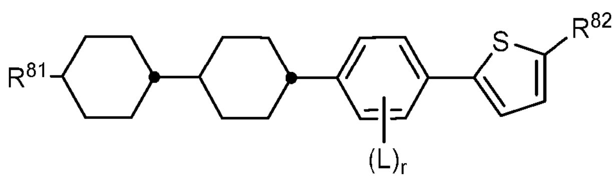

VIII-4

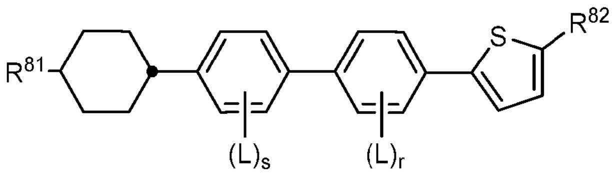

VIII-5

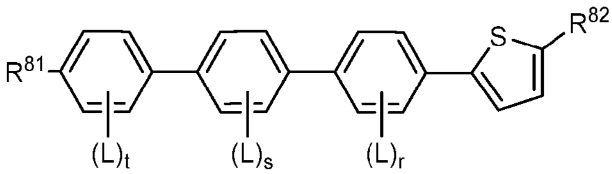

VIII-6

in which $R^{81}$, $R^{82}$ and L have the meanings indicated above, L preferably denotes F, and r, s and t independently are 0, 1, 2, 3, or 4. r preferably is 1 or 2, very preferably 2 and s and t independently are preferably 0 or 1, very preferably 0. $R^{81}$ and $R^{82}$ in particular independently denote n-alkyl having 1 to 5 C atoms.

In a very preferred embodiment, the compounds of the formulae VIII-1 to VIII-6 are selected from the compounds of the formula VIII-1a to VIII-6a, in particular of the formula VIII-3a:

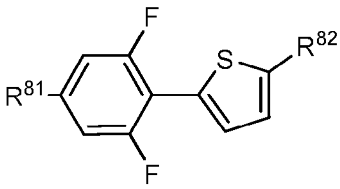

VIII-1a

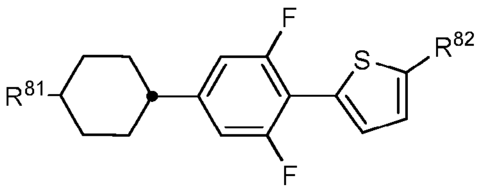

VIII-2a

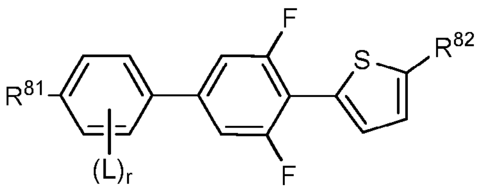

VIII-3a

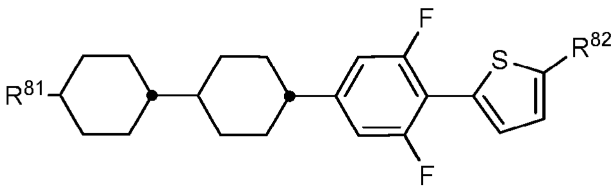

VIII-4a

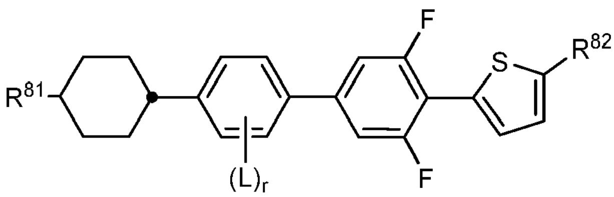

VIII-5a

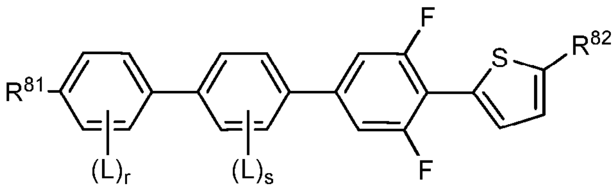

VIII-6a

in which $R^{81}$, $R^{82}$, r and s have the meanings defined above.

Very particularly preferably the medium comprises one or more compounds selected from the group of compounds of the formulae VIII-3a, VIII-3b, VIII-3c and VIII-3d:

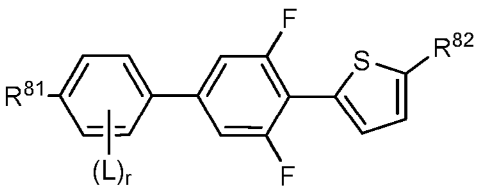

VIII-3a

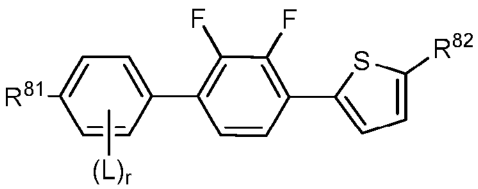

VIII-3b

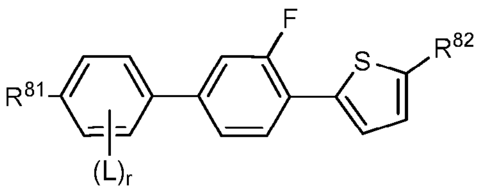

VIII-3c

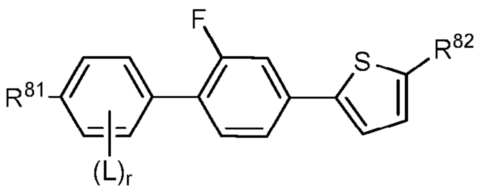

VIII-3d

in which $R^{81}$, $R^{82}$, L and r have the meanings defined above and preferably r is 0.

Most preferred compounds of formula VIII-3a include, in particular, one or more of the following:

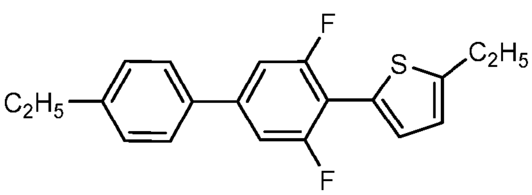

VIII-3a-1

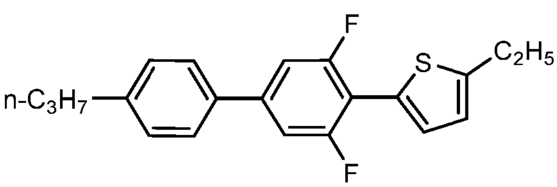

VIII-3a-2

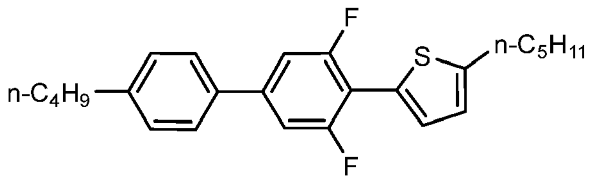

VIII-3a-3

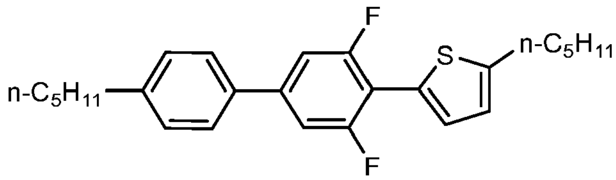

VIII-3a-4

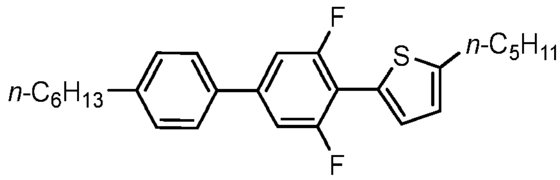

VIII-3a-5

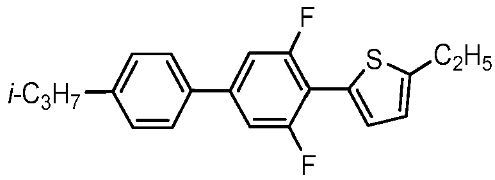

VIII-3a-6

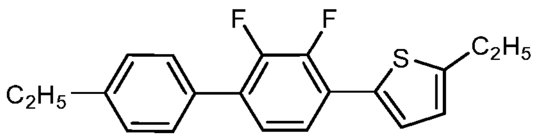

VIII-3b-1

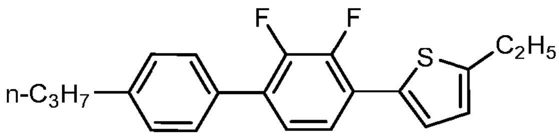

VIII-3b-2

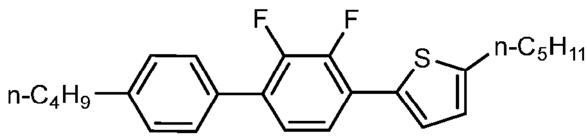

VIII-3b-3

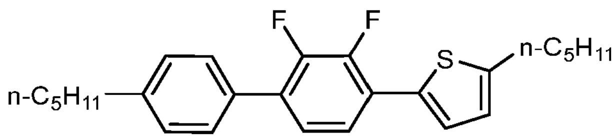

VIII-3b-4

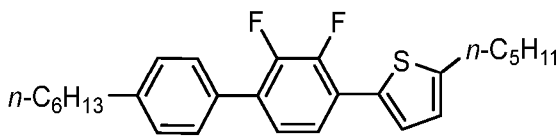

VIII-3b-5

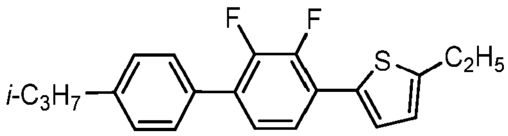

VIII-3b-6

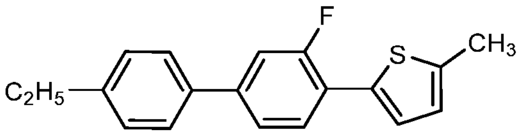

VIII-3c-1

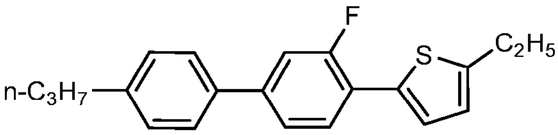

VIII-3c-2

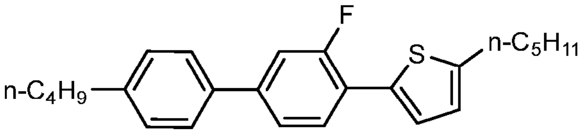

VIII-3c-3

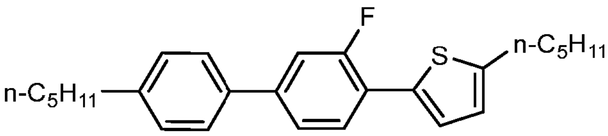

VIII-3c-4

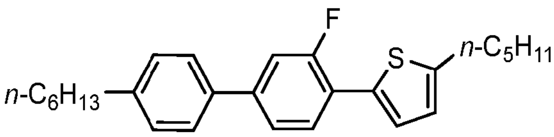

VIII-3c-5

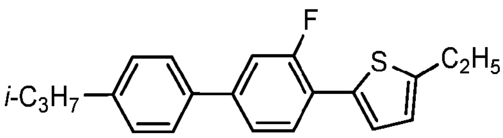

VIII-3c-6

Alternatively, or additionally, the following compounds of formula I can be used:

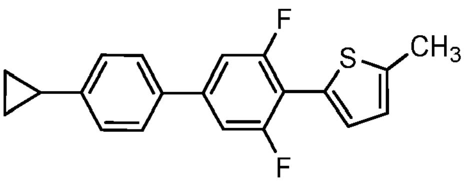

VIII-3a-7

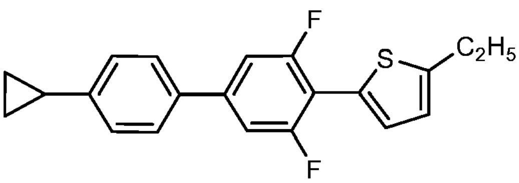

VIII-3a-8

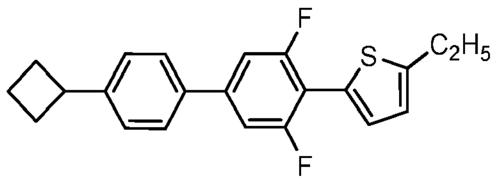

VIII-3a-9

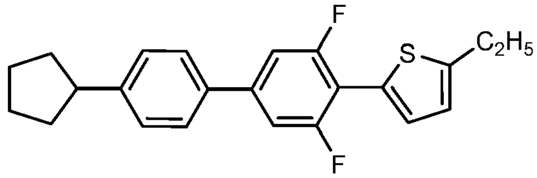

VIII-3a-10

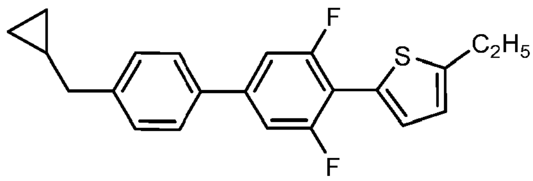

VIII-3a-11

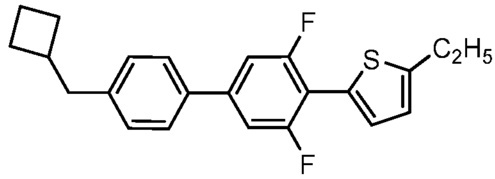

VIII-3a-12

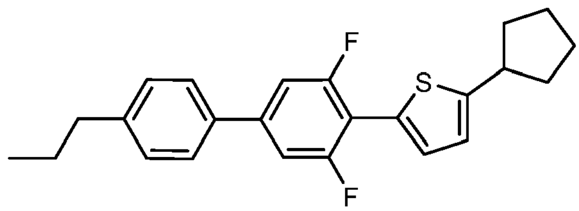

VIII-3a-13

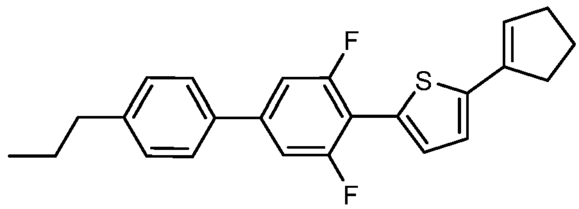

VIII-3a-14

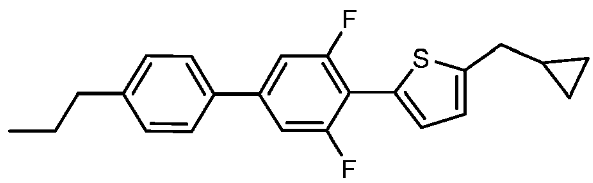

VIII-3a-15

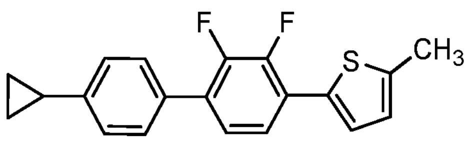

VIII-3b-7

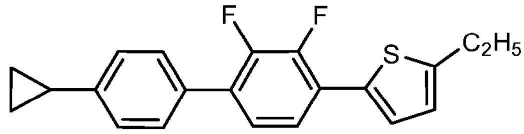

VIII-3b-8

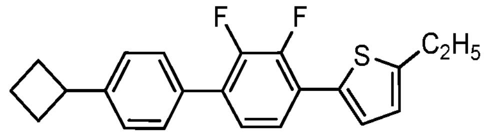

VIII-3b-9

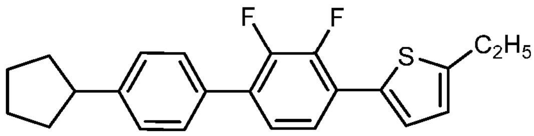

VIII-3b-10

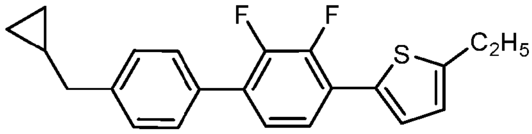

VIII-3b-11

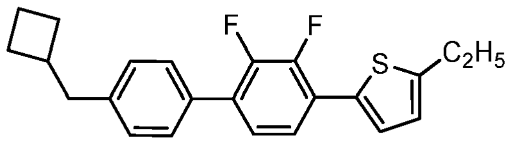

VIII-3b-12

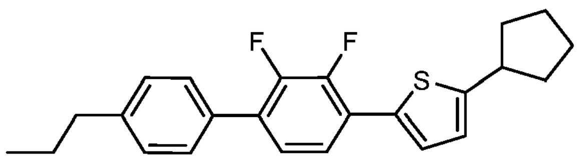

VIII-3b-13

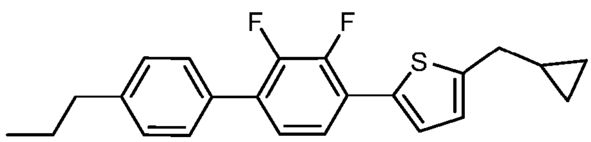

VIII-3b-14

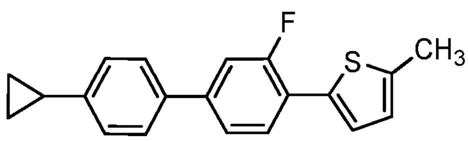

VIII-3c-7

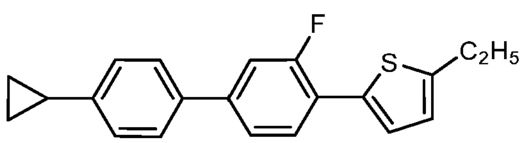

VIII-3c-8

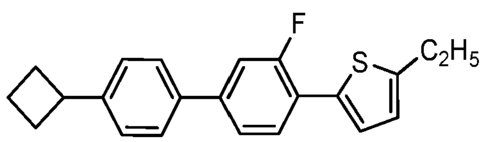

VIII-3c-9

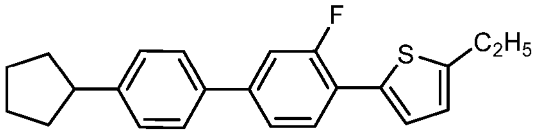

VIII-3c-10

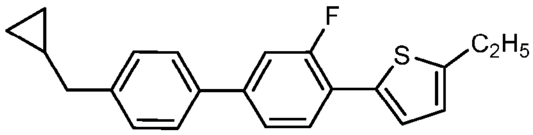

VIII-3c-11

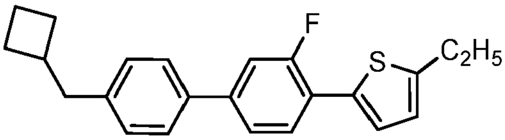

VIII-3c-12

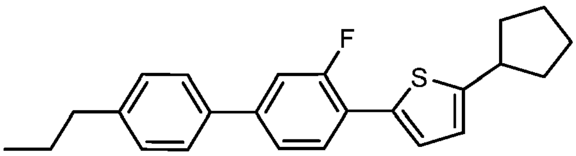

VIII-3c-13

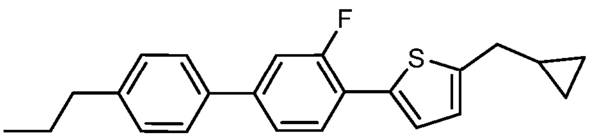

VIII-3c-14

In a preferred embodiment, the medium comprises one or more compounds of the formula IX

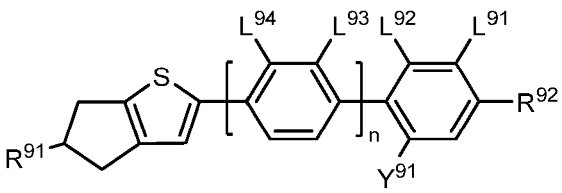

IX

in which

$R^{91}$ and $R^{92}$, identically or differently, denote H, halogen, straight chain alkyl or alkoxy having 1 to 15 C atoms, straight chain alkenyl or alkenyloxy having 2 to 15 C atoms or branched alkyl, alkoxy, alkenyl or alkenyloxy each having 3 to 15 C atoms, where one or more $CH_2$ groups in these radicals may each be replaced, independently of one another, by

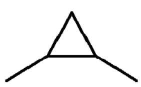

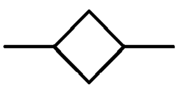 , 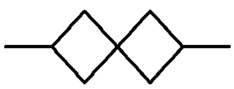 , 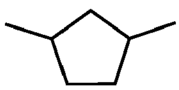 , 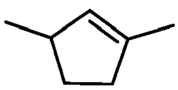 , 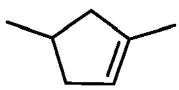 ,

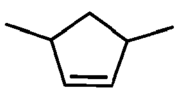 ,

-C≡C-, $-CF_2O-$, $-OCF_2-$, -CH=CH-, by -O-, -CO-O- or -O-CO- in such a way that O atoms are not linked directly to one another, and in which one or more H atoms may be replaced by halogen,

$L^{91}$ and $L^{92}$, each, independently of one another, denote F, Cl, $CF_3$ or $CHF_2$,
$L^{93}$ and $L^{94}$, each, independently of one another, denote H, F, Cl, $CF_3$ or $CHF_2$,
$Y^{91}$ denotes H, F, Cl, $CF_3$, $CHF_2$ or $CH_3$, preferably H or $CH_3$, and
n is 0 or 1.

Preference is given to LC media comprising the compounds of formula IX in which n is 0, Y denotes H or $CH_3$, more preferably H, and $L^{91}$ and $L^{92}$ denote F.

Very preferred compounds of the formula IX are selected from the compounds of the formulae IX-1 to IX-35

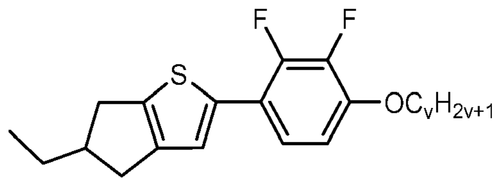

IX-1

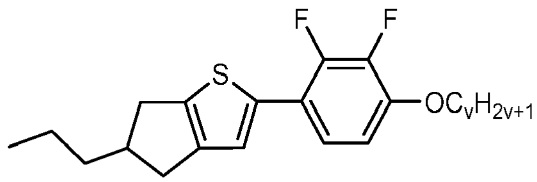

IX-2

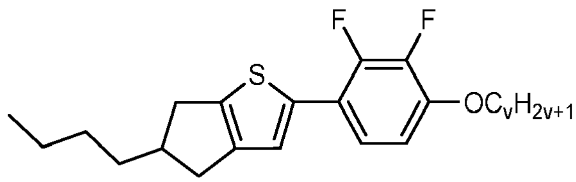

IX-3

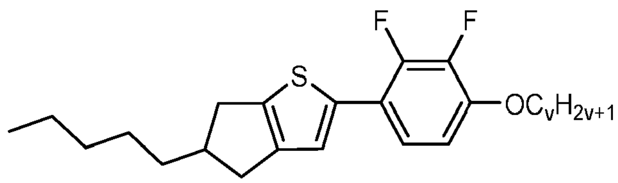

IX-4

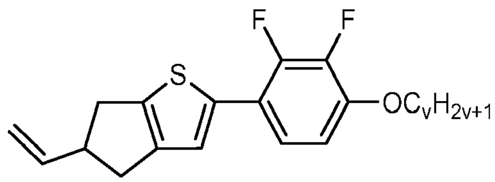

IX-5

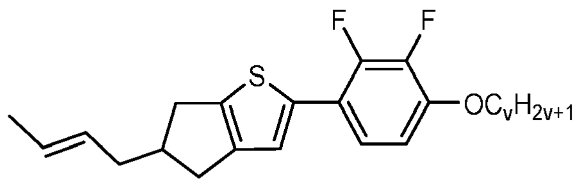

IX-6

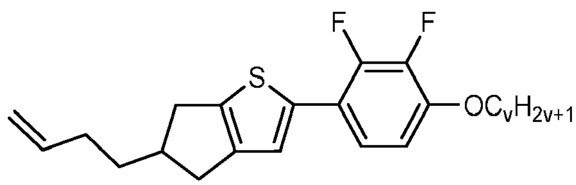

IX-7

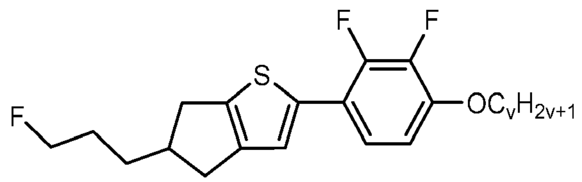

IX-8

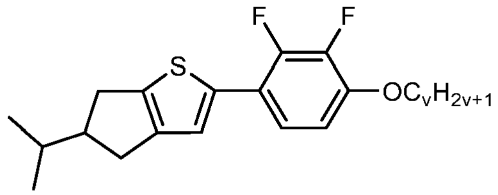

IX-9

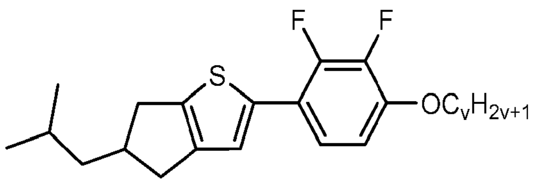

IX-10

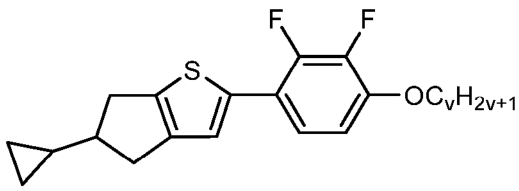

IX-11

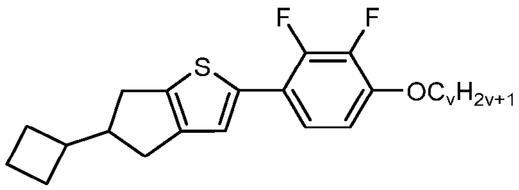

IX-12

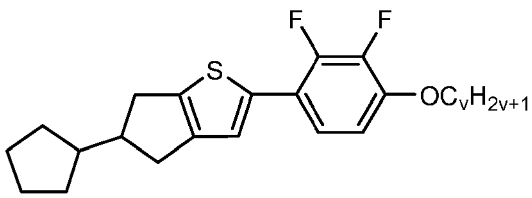

IX-13

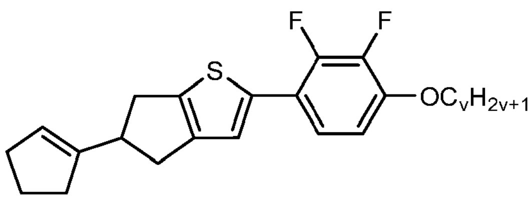

IX-14

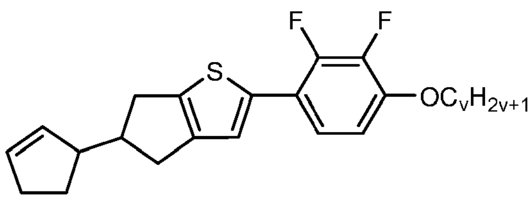

IX-15

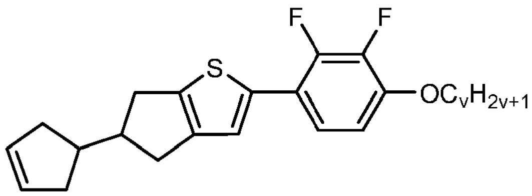

IX-16

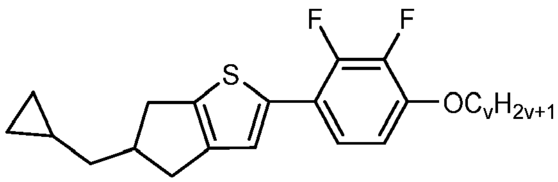

IX-17

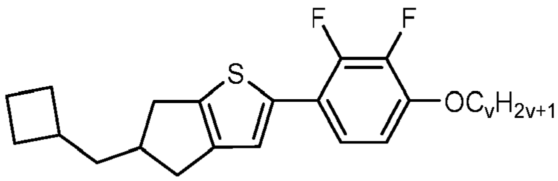

IX-18

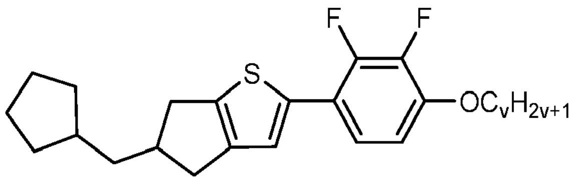

IX-19

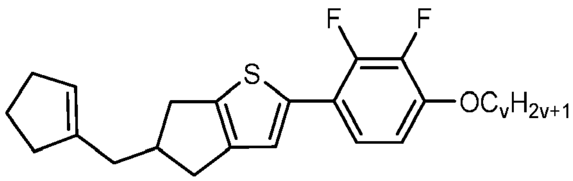

IX-20

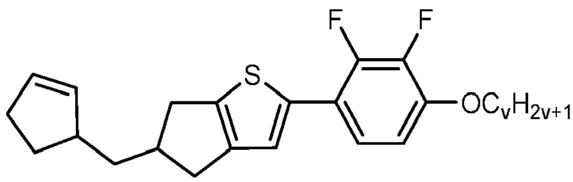

IX-21

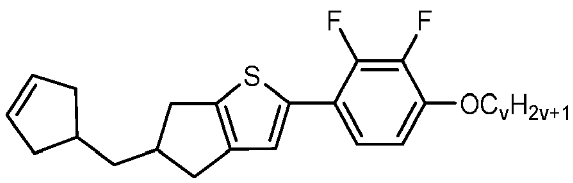

IX-22

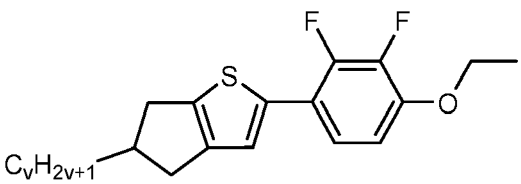

IX-23

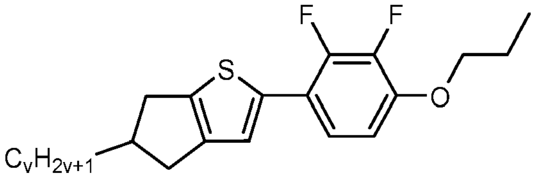

IX-24

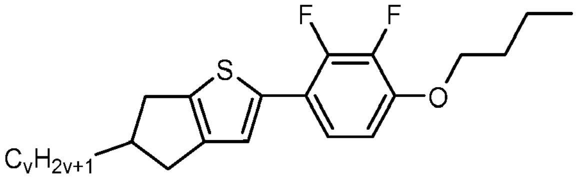

IX-25

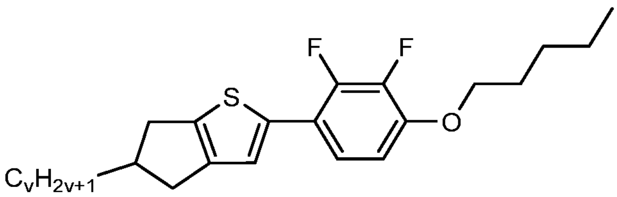

IX-26

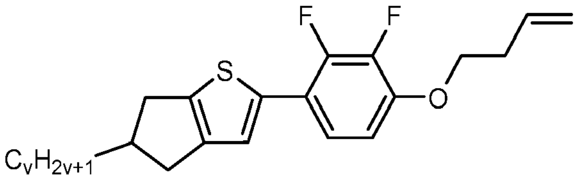

IX-27

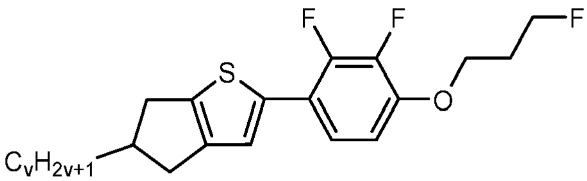

IX-28

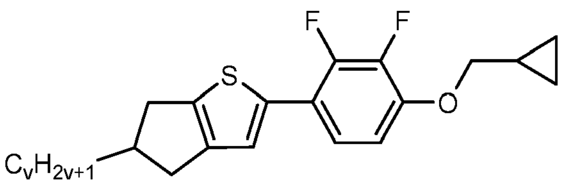

IX-29

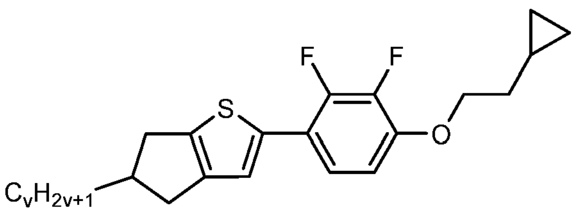

IX-30

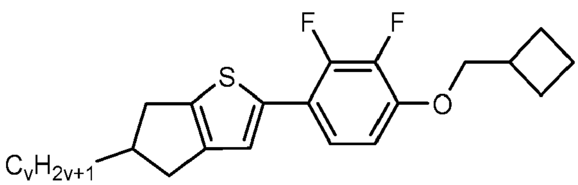

IX-31

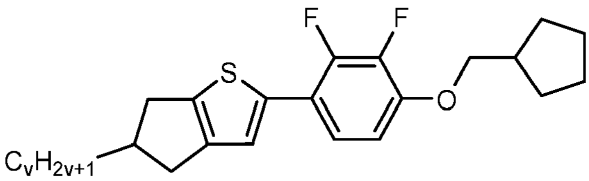

IX-32

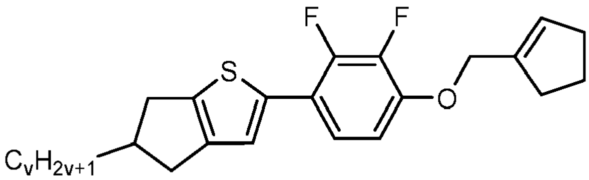

IX-33

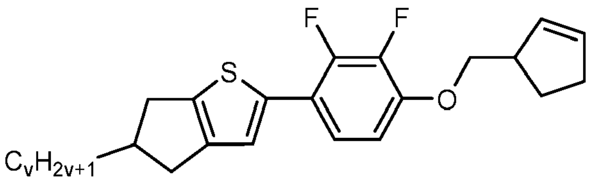

IX-34

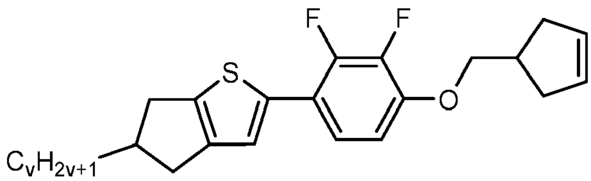

IX-35.

In a preferred embodiment of the present invention the medium comprises one or more compounds of the formula X

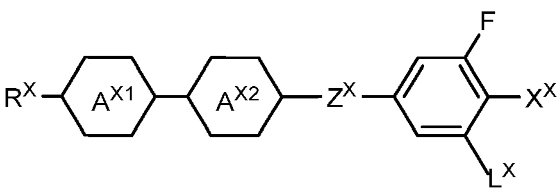

X

in which

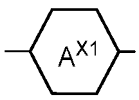

denotes

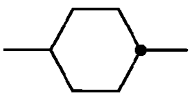

,

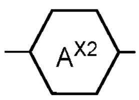

denotes

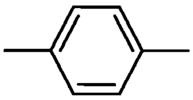, 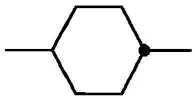, 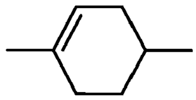, 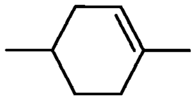

, or

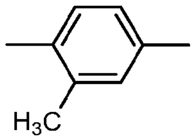,

$R^X$ denote a straight chain or branched alkyl or alkoxy radical having 1 to 15 C atoms, where one or more $CH_2$ groups in these radicals may each be replaced, independently of one another, by

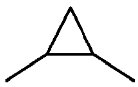,

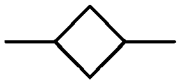, 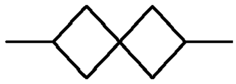, 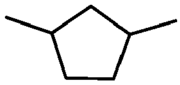, 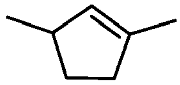,

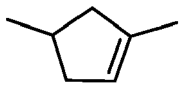, 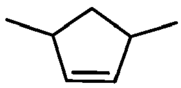,

-C≡C-, $-CF_2O-$, $-OCF_2-$, -CH=CH-, -O-, -CO-O- or -O-CO- in such a way that O atoms are not linked directly to one another, and in which, in addition, one or more H atoms may be replaced by halogen, preferably by F,

$X^X$ denotes F, Cl, CN, $SF_5$, SCN, NCS, a halogenated alkyl radical or a halogenated alkoxy radical each having 1 to 6 C atoms or a halogenated alkenyl radical or a halogenated alkenyloxy radical each having 2 to 6 C atoms,

$Z^X$ denotes $-C_2H_4-$, $-CH_2O-$, $CF_2O$, -CH=CH- or a single bond, and

$X^X$ denotes H or F.

In the compounds of formula X, $R^X$ denotes preferably alkyl with 1 to 6 C atoms or alkenyl with 2 to 6 C atoms which are preferably straight-chain.

In the compounds of formula X, $X^X$ is preferably F, Cl or a mono- or polyfluorinated alkyl or alkoxy radical having 1, 2 or 3 C atoms or a mono- or polyfluorinated alkenyl radical having 2 or 3 C atoms. $X^X$ is more preferably F, Cl, $CF_3$, $CHF_2$, $OCF_3$, $OCHF_2$, $OCFHCF_3$, $OCFHCHF_2$, $OCFHCHF_2$, $OCF_2CH_3$, $OCF_2CHF_2$, $OCF_2CHF_2$, $OCF_2CF_2CHF_2$, $OCF_2CF_2CHF_2$, $OCFHCF_2CF_3$, $OCFHCF_2CHF_2$, $OCF_2CF_2CF_3$, $OCF_2CF_2CClF_2$, $OCClFCF_2CF_3$, $OCH=CF_2$ or $CH=CF_2$, very preferably F or $OCF_3$, furthermore $CF_3$, $OCF=CF_2$, $OCHF_2$ or $OCH=CF_2$, very particularly preferably F, $OCF_3$ or $CF_3$, most preferably F.

Preferred compounds of formula X are selected from the following sub-formulae:

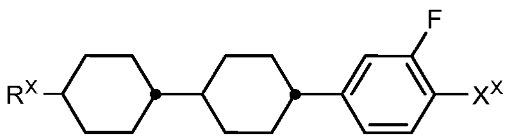

X1

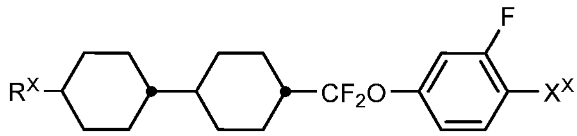

X2

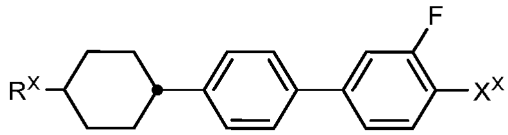

X3

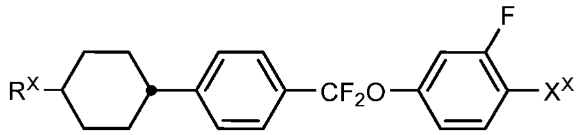

X4

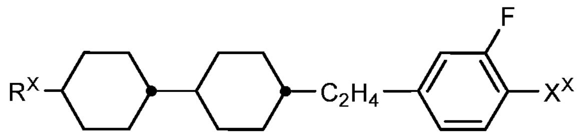

X5

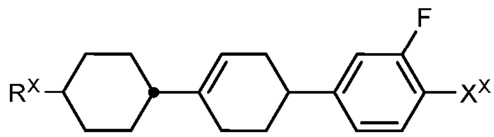

X6

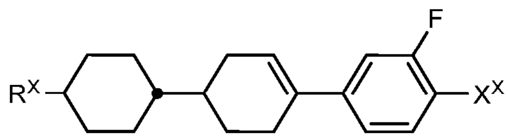

X7

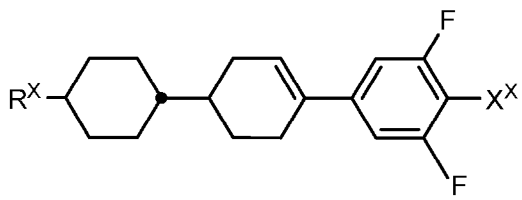

X8

in which $R^X$ has one of the meanings given in formula X and preferably denotes straight-chain alkyl having 1-6 C atoms, very preferably ethyl, propyl, or butyl, or straight-chain alkenyl with 2 to 6 C atoms very preferably vinyl or 1-propenyl, most preferably vinyl, and $X^X$ has one of the meanings given in formula X and preferably denotes F, $CF_3$ or $OCF_3$, very preferably F.

Very preferred compounds of formula X are selected from the following sub-formulae:

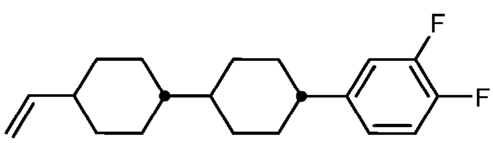

X1-1

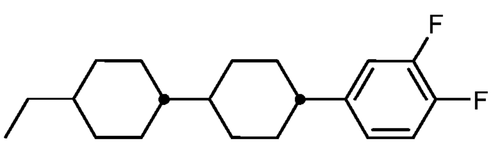

X1-2

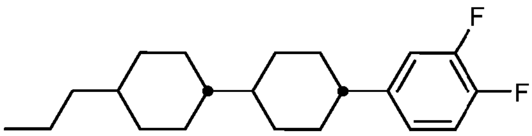

X1-3

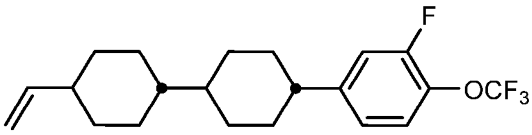

X1-4

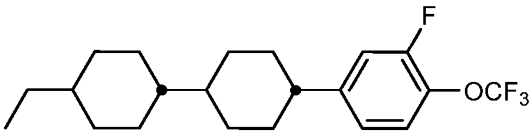

X1-5

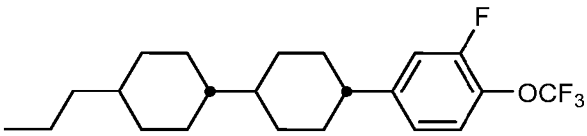

X1-6

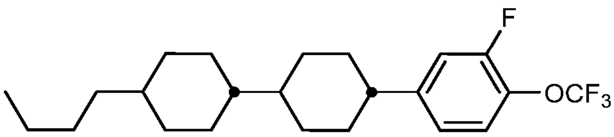

X1-7

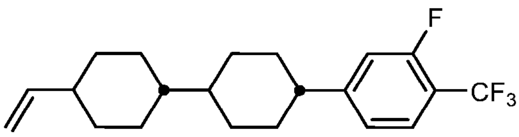

X1-8

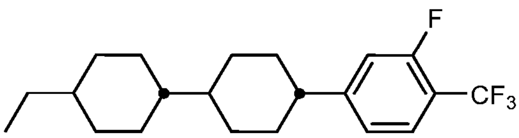

X1-9

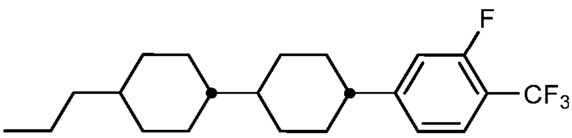

X1-10

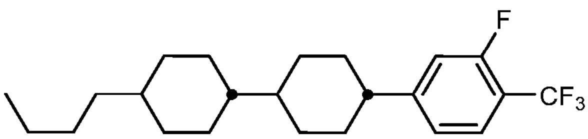

X1-11

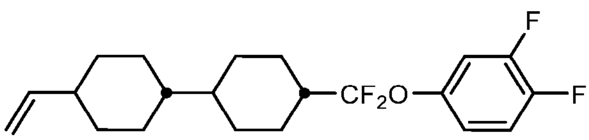

X2-1

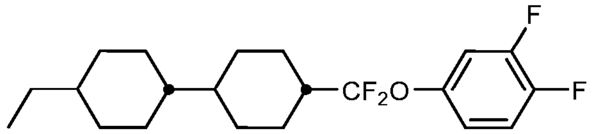

X2-2

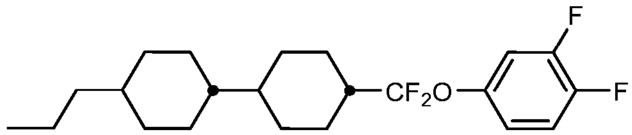

X2-3

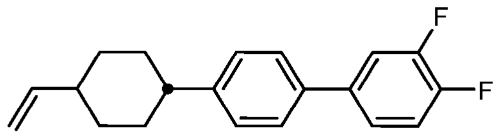

X3-1

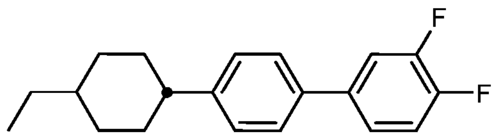

X3-2

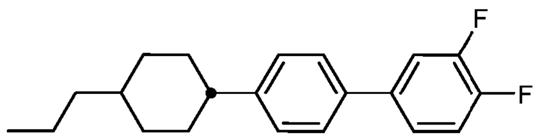

X3-3

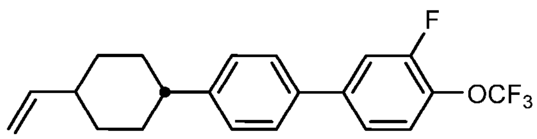

X3-4

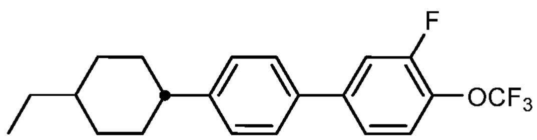

X3-5

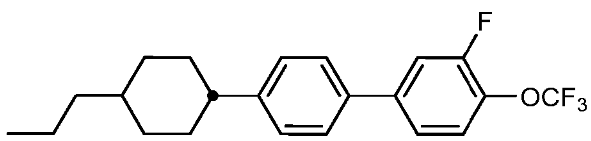

X3-6

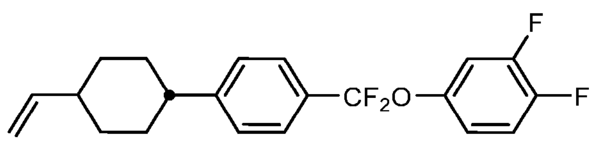

X4-1

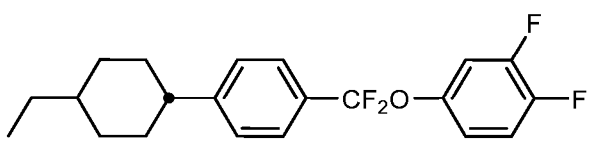

X4-2

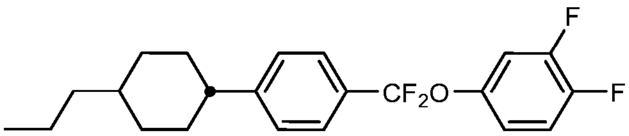

X4-3

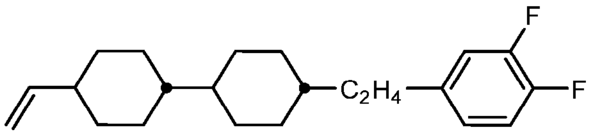

X5-1

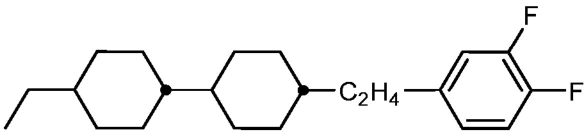

X5-2

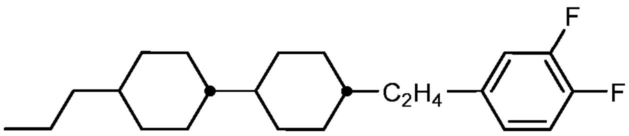

X5-3

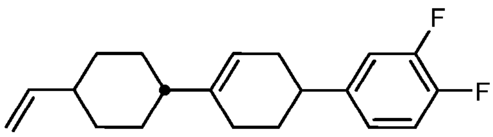

X6-1

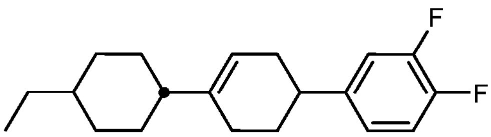

X6-2

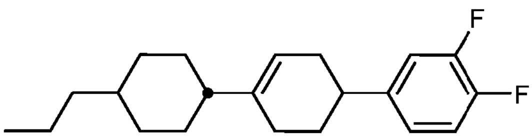

X6-3

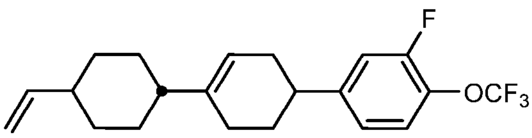

X6-4

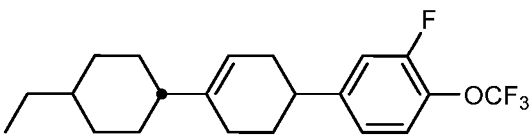

X6-5

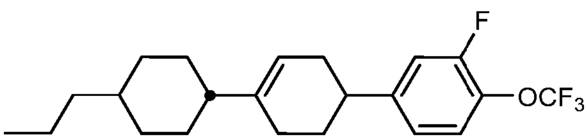

X6-6

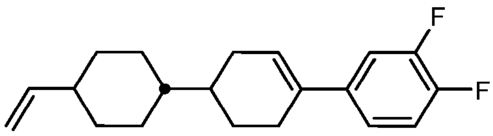

X7-1

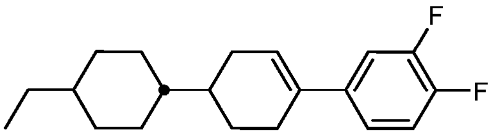

X7-2

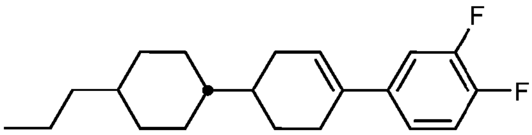

X7-3

Preferably the LC medium contains one or more compounds selected from the group consisting of the formulae X1-1, X1-3, X2-1 and X2-3.

Further preferred embodiments are listed below:

a) Liquid-crystalline medium comprising at least one compound of the formulae Z-1 to Z-8, preferably of the formulae Z-2, Z-4 and Z-6, very preferably Z-4

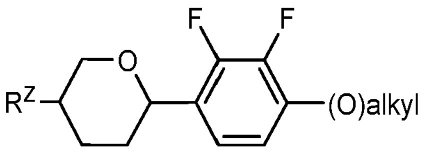

Z-1

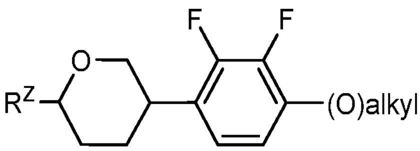

Z-2

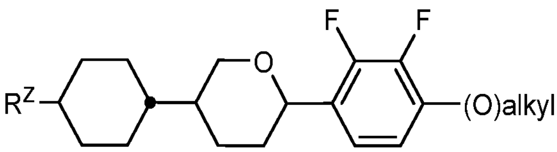

Z-3

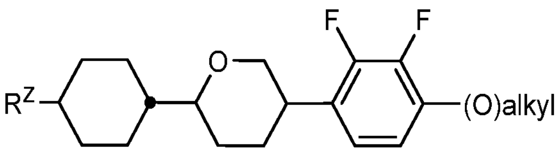

Z-4

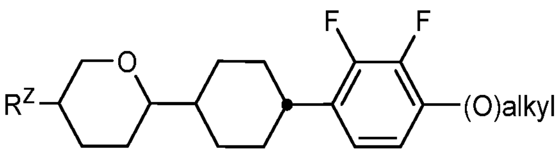

Z-5

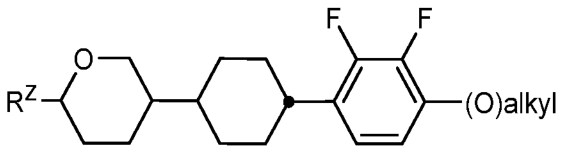

Z-6

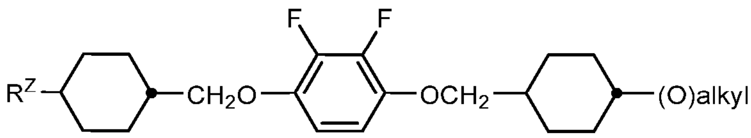

Z-7

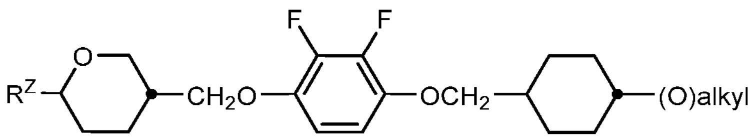

Z-8

in which $R^Z$ has the meaning of $R^{21}$ indicated above and preferably denotes alkyl having 1 to 7 C atoms or alkenyl having 2 to 7 C atoms,
(O) denotes O or a single bond and alkyl denotes alkyl having 1 to 7 C atoms.

b) Preferred liquid-crystalline media according to the invention comprise one or more substances which contain a tetrahydronaphthyl or naphthyl unit, such as, for example, the compounds of the formulae N-1 to N-5,

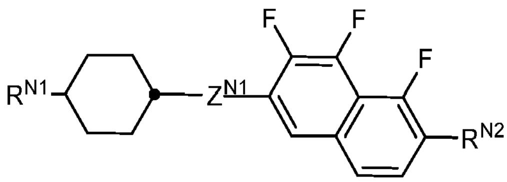

N-1

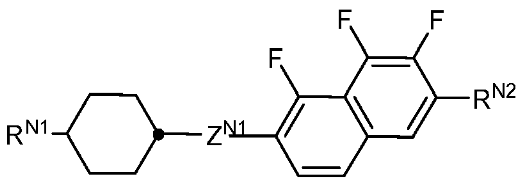

N-2

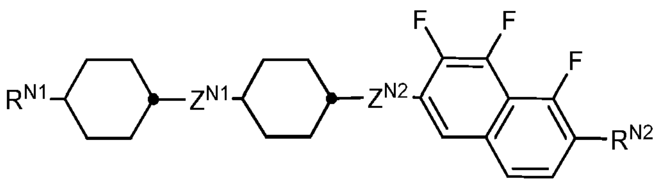

N-3

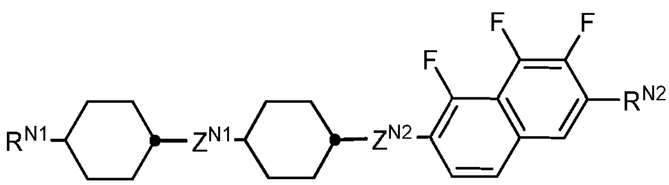

N-4

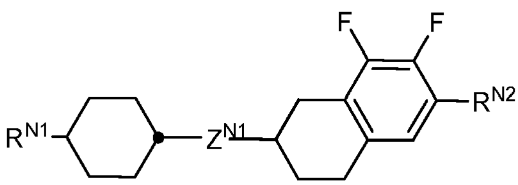

N-5

in which $R^{N1}$ and $R^{N2}$ each, independently of one another, have the meanings indicated for $R^{21}$, preferably denote straight-chain alkyl, straight-chain alkoxy or straight-chain alkenyl, and $Z^{N1}$ and $Z^{N2}$ each, independently of one another, denote $-C_2H_4-$, -CH=CH-, $-(CH_2)_4-$, - $(CH_2)_3O-$, $-O(CH_2)_3-$, $-CH=CHCH_2CH_2-$, $-CH_2CH_2CH=CH-$, $-CH_2O-$, $-OCH_2-$, -COO-, -OCO-, - $C_2F_4-$, -CF=CF-, -CF=CH-, -CH=CF-, $-CF_2O-$, $-OCF_2-$, $-CH_2-$ or a single bond.

c) Preferred mixtures comprise one or more indane compounds of the formula In,

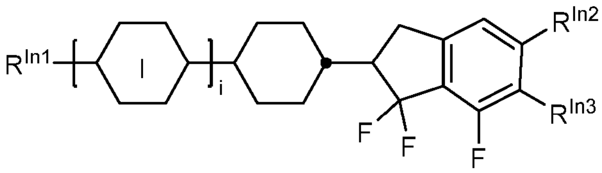

In

in which

$R^{In1}$, $R^{In2}$, and $R^{In3}$ each, independently of one another, denote a straight-chain alkyl, alkoxy, alkoxyalkyl or alkenyl radical having 1 to 6 C atoms, or cyclic alkyl having 3 to 6 C atoms, $R^{In2}$ and $R^{In3}$ alternatively denote halogen, preferably F,

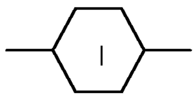

denotes

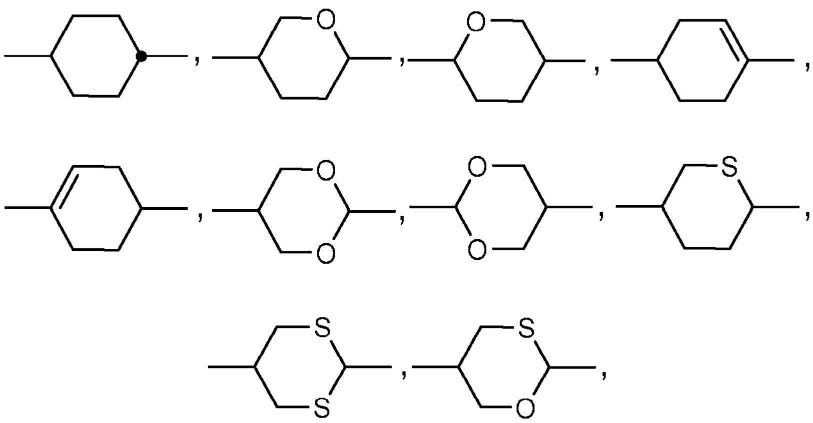

i denotes 0, 1 or 2.

Preferred compounds of the formula In are the compounds of the formulae In-1 to In-16 indicated below:

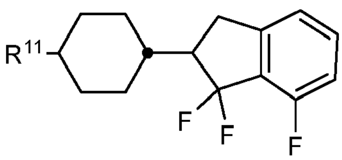

In-1

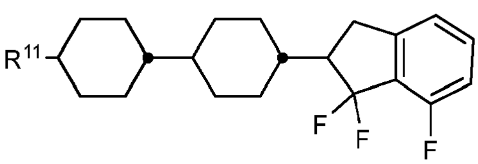

In-2

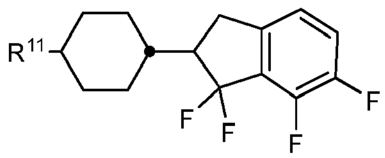

In-3

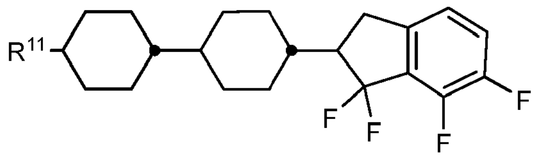

In-4

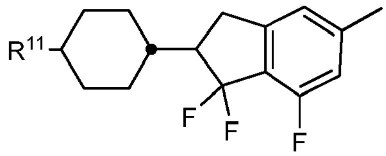

In-5

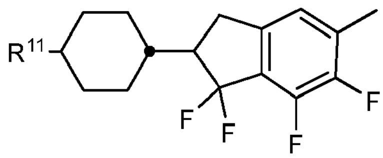

In-6

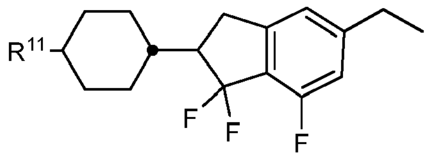

In-7

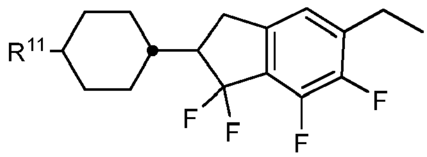

In-8

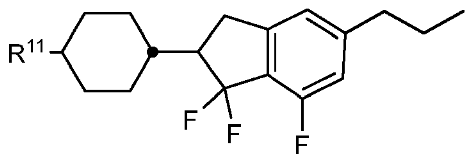

In-9

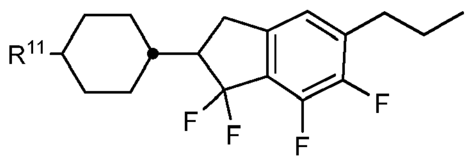

In-10

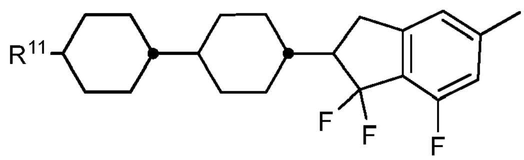

In-11

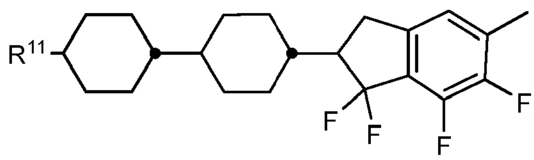

In-12

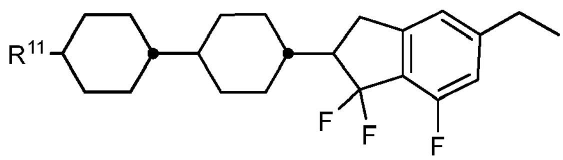

In-13

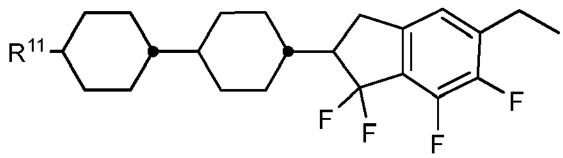

In-14

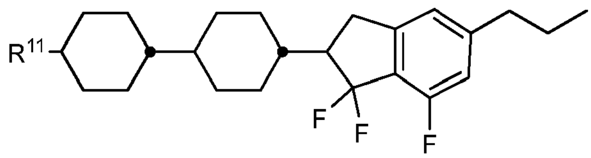

In-15

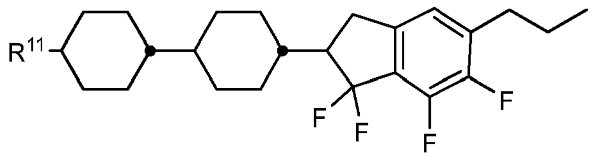

In-16

Particular preference is given to the compounds of the formulae In-1, In-2, In-3 and In-4.

The compounds of the formula In and the sub-formulae In-1 to In-16 are preferably employed in the LC media according to the invention in concentrations ≥ 5 % by weight, in particular 5 to 30 % by weight and very particularly preferably 5 to 25 % by weight.

d) Preferred mixtures additionally comprise one or more compounds of the formulae L-1 to L-11,

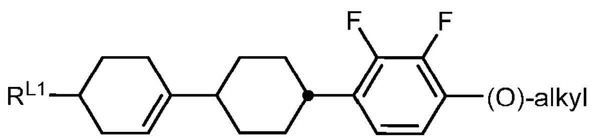

L-1

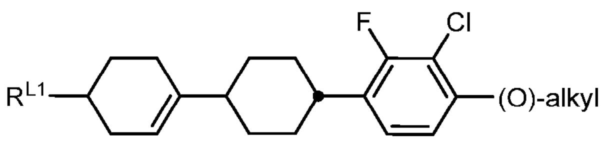

L-2

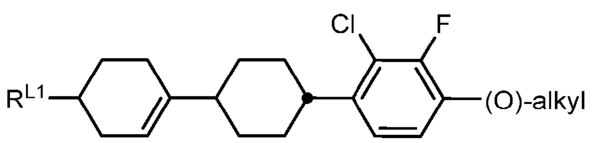

L-3

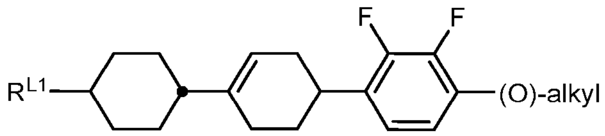

L-4

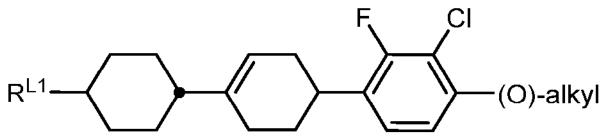

L-5

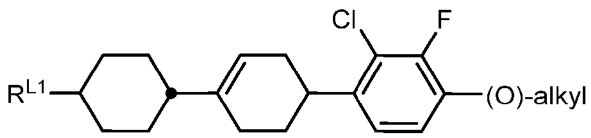

L-6

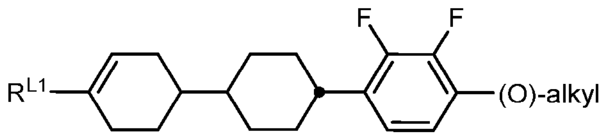

L-7

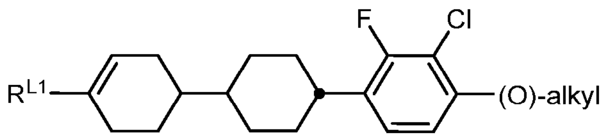

L-8

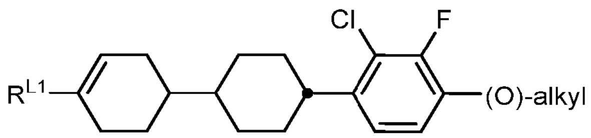

L-9

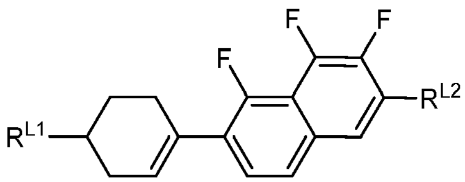

L-10

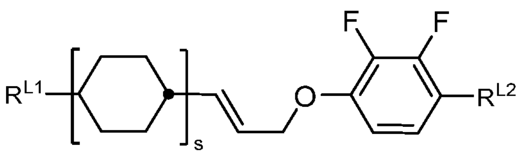

L-11

in which

$R^{L1}$ and $R^{L2}$ each, independently of one another, have the meanings indicated for $R^{21}$ in formula IIA above, and alkyl denotes an alkyl radical having 1 to 6 C atoms. The parameter s denotes 1 or 2.

The compounds of the formulae L-1 to L-9 are preferably employed in concentrations of 5 to 15 % by weight, in particular 5 to 12 % by weight and very particularly preferably 8 to 10 % by weight.

Preferably, the medium according to the invention comprises a compound selected from the group of compounds of the formulae ST-1 to ST-18, very preferably of the formula ST-3:

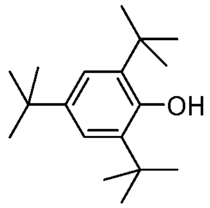

ST-1

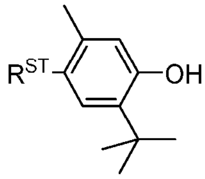

ST-2

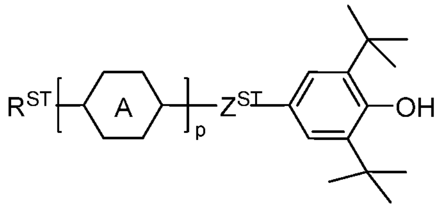

ST-3

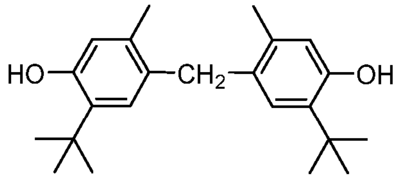

ST-4

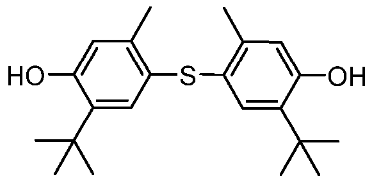

ST-5

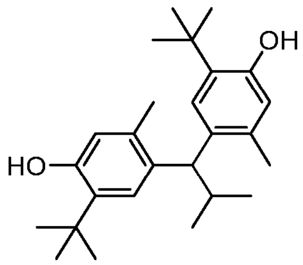

ST-6

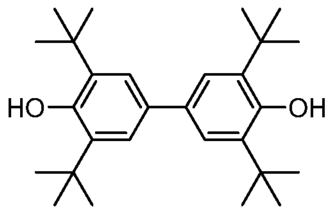

ST-7

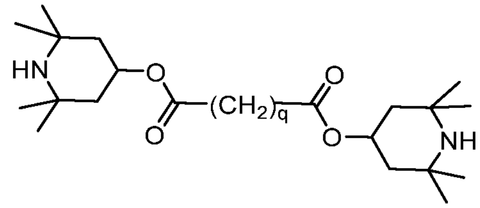

ST-8

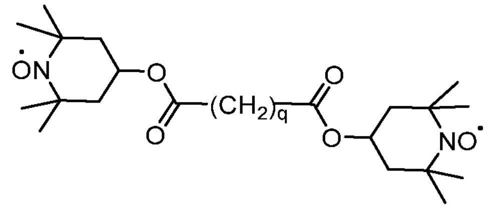

ST-9

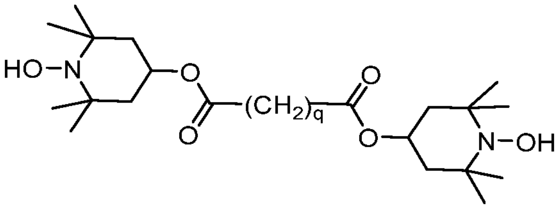

ST-10

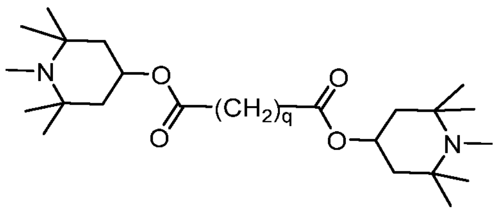

ST-11

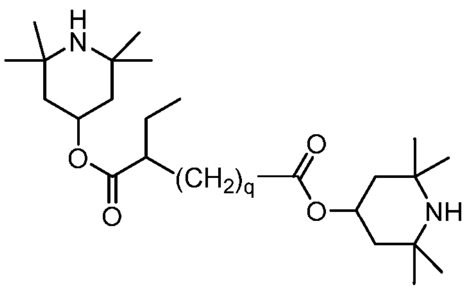

ST-12a

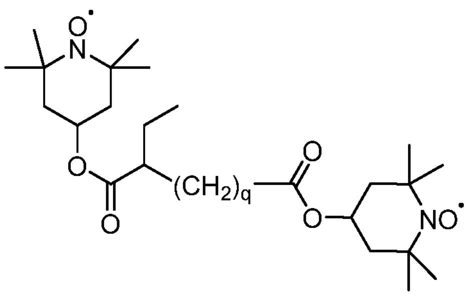

ST-12b

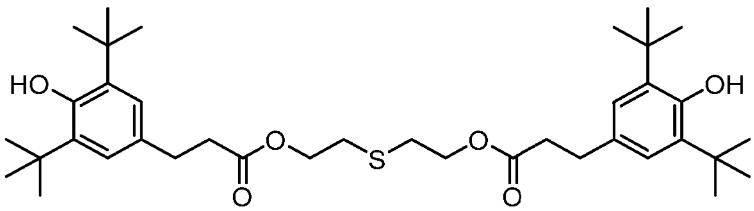

ST-13

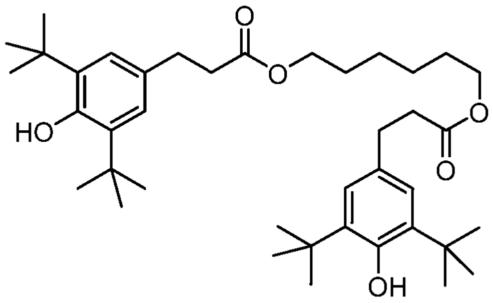

ST-14

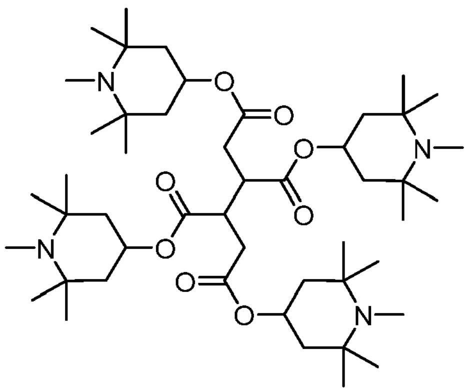

ST-15

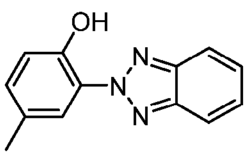

ST-16

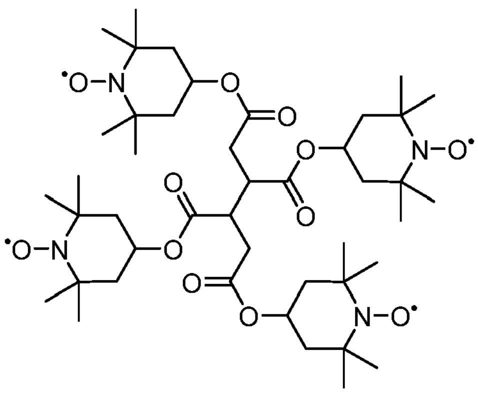

ST-17

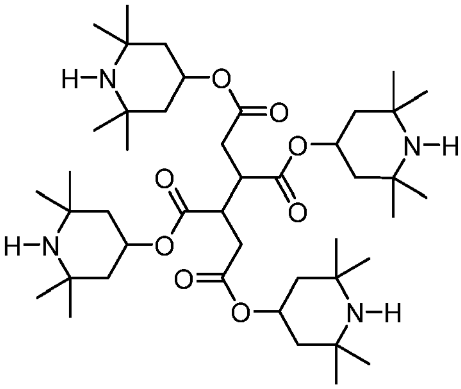

ST-18

in which

$R^{ST}$ denotes H, an alkyl or alkoxy radical having 1 to 15 C atoms, where, in addition, one or more $CH_2$ groups in these radicals may each be replaced, independently of one another by -C≡C-, $-CF_2O-$, $-OCF_2-$, -CH=CH-,

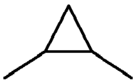 , 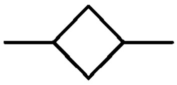 , 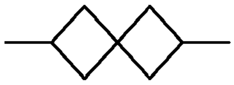 ,

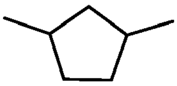 , 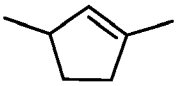 , 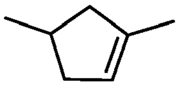 , 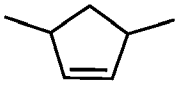 ,

- O-, -CO-O-, -O-CO- in such a way that O atoms are not linked directly to one another, and in which, in addition, one or more H atoms may be replaced by halogen,

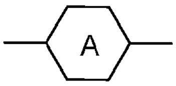 ,

on each occurrence, identically or differently, denotes

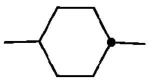

or

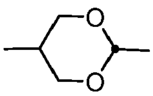 ,

$Z^{ST}$ each, independently of one another, denote -CO-O-, -O-CO-, $-CF_2O-$, $-OCF_2-$, $-CH_2O-$, $-OCH_2-$, $-CH_2-$, $-CH_2CH_2-$, $-(CH_2)_4-$, -CH=CH-, $-CH_2O-$, $-C_2F_4-$, $-CH_2CF_2-$, $-CF_2CH_2-$, - CF=CF-, -CH=CF-, -CF=CH-, -CH=CH-, -C≡C- or a single bond,
$L^1$ and $L^2$ each, independently of one another, denote F, Cl, $CH_3$, $CF_3$ or $CHF_2$,
p denotes 0, 1 or 2,
q denotes 1, 2, 3, 4, 5, 6, 7, 8, 9 or 10.

Of the compounds of the formula ST, special preference is given to the compounds of the formulae

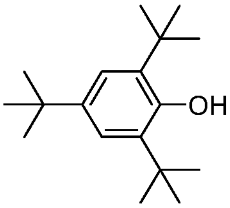

ST-1

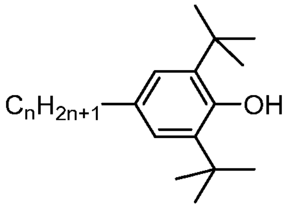

ST-2a

in which n = 1, 2, 3, 4, 5, 6 or 7, preferably n = 1 or 7

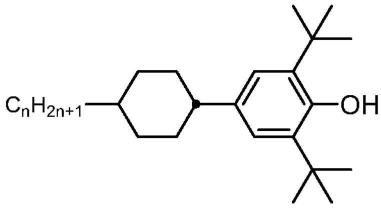

ST-3a

in which n = 1, 2, 3, 4, 5, 6 or 7, preferably n = 3

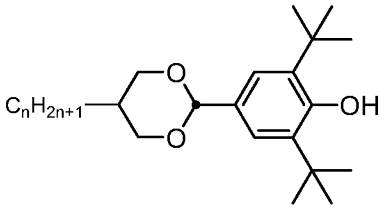

ST-3b

in which n = 1, 2, 3, 4, 5, 6 or 7, preferably n = 3

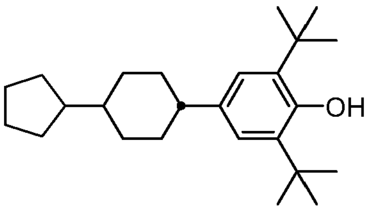

ST-3c

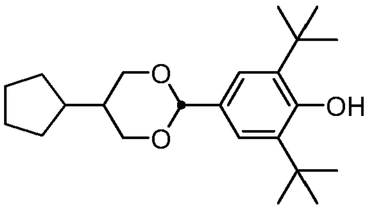

ST-3d

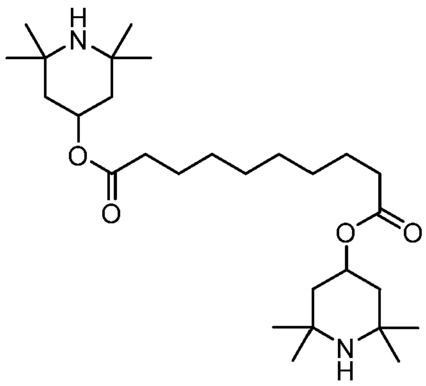

ST-8-1

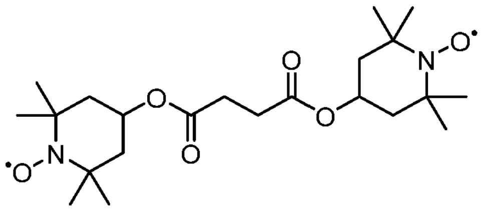

ST-9-1

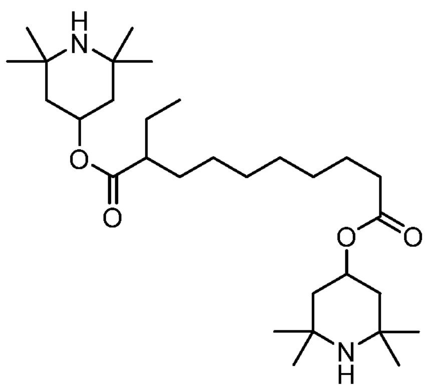

ST-12

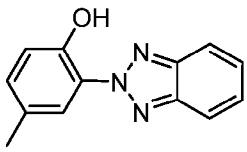

ST-16

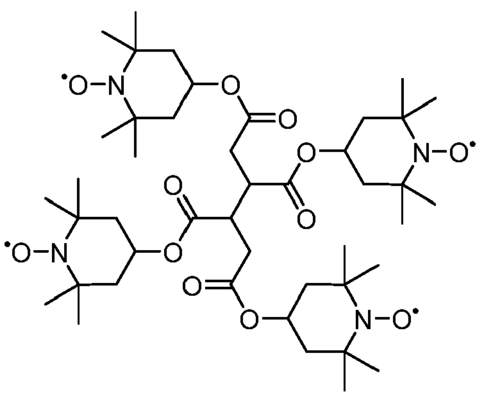

ST-17

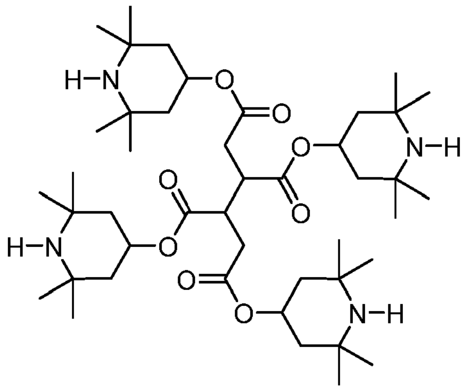

ST-18

In the compounds of the formulae ST-3a and ST-3b, n preferably denotes 3. In the compounds of the formula ST-2a, n preferably denotes 1 or 7.

Very particularly preferred mixtures according to the invention comprise one or more stabilizers from the group of the compounds of the formulae ST-2a-1, ST-2a-2, ST-3a-1, ST-3b-1, ST-8-1, ST-9-1 and ST-12:

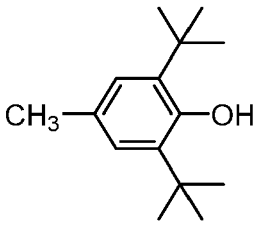

ST-2a-1

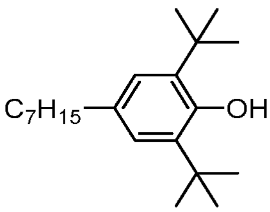

ST-2a-2

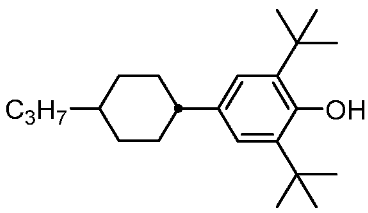

ST-3a-1

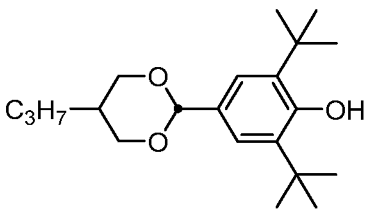

ST-3b-1

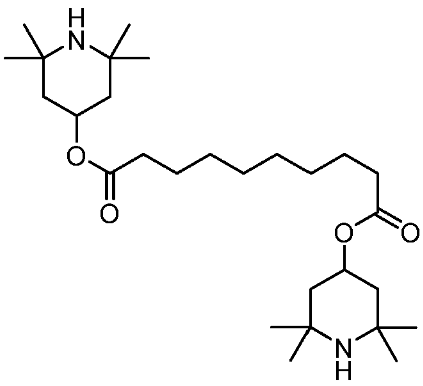

ST-8-1

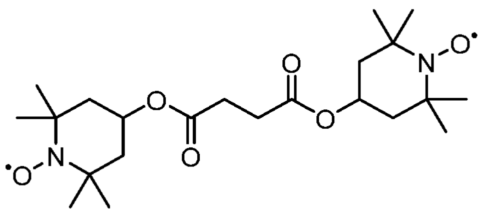

ST-9-1

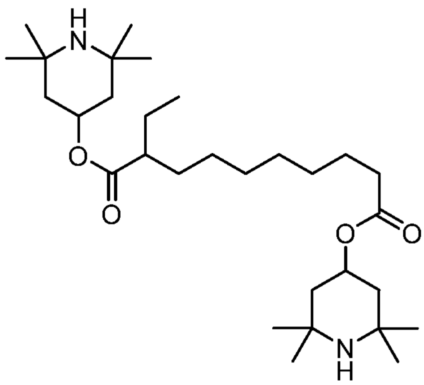

ST-12

Preferably, the medium comprises one or more compounds of the formula S

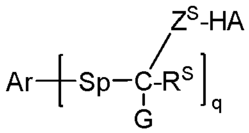

S

in which

Ar denotes a methylene group or an aromatic hydrocarbon group having 6 to 40 C atoms or a heteroaromatic hydrocarbon group having 4 to 40 C atoms; preferably an aromatic hydrocarbon group having 6 to 40 C atoms;
Sp denotes a spacer group;
$R^S$ denotes H, alkyl having 1 to 12 C atoms or alkenyl having 2 to 12 C atoms;
$Z^S$ denotes -O-, -C(O)O-, $-(CH_2)_z-$ or $-(CH_2)_zO-$, or a single bond;
HA denotes

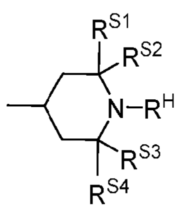

;

$R^H$ denotes H, O•, $CH_3$, OH or $OR^S$;
$R^{S1}$, $R^{S2}$, $R^{S3}$ and $R^{S4}$, identically or differently, denote alkyl having 1 to 6 C atoms, preferably having 1 to 3 C atoms, very preferably $CH_3$;
G denotes H or $R^S$ or a group $Z^S$-HA;
z is an integer from 1 to 6, and
q is 2, 3 or 4, preferably 3 or 4.

In formula S, aryl denotes an aromatic or heteroaromatic hydrocarbon group having 4 to 40 C atoms, comprising one, two, three or four aromatic rings including condensed rings that may be linked directly or via an alkylene linking group having 1 to 12 C atoms, in which one or more H atoms are optionally replaced with alkyl or alkoxy having 1 to 6 C atoms or alkenyl having 2 to 6 C atoms, or with CN, $CF_3$ or halogen, and in which one or more $CH_2$ groups may each, independently of one another, be replaced by -O-, -S-, -NH-, -N($C_1$-$C_4$-alkyl)-, -CO-, -CO-O-, -O-CO-, -O-CO-O-, -CH=CH- or -C≡C- in such a way that O or S atoms are not linked directly to one another.
Preferred aryl groups are benzene, naphthalene, anthracene, biphenyl, m-terphenyl, p-terphenyl, and (phenylalkyl)benzene in which alkyl is straight chain alkyl having 1 to 12 C atoms.
In a preferred embodiment, the medium according to the invention comprises a compound of the formula S in which the parameter q is 3 and G denotes a group $Z^S$-HA.
In another preferred embodiment, the medium according to the invention comprises a compound of the formula S in which the parameter q is 4 and G denotes H or $R^S$.
The compounds of formula S are preferably selected from the compounds of the formulae S-1, S-2 and S-3:

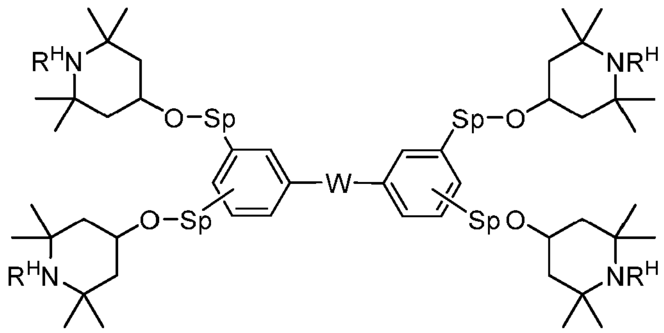

S-1

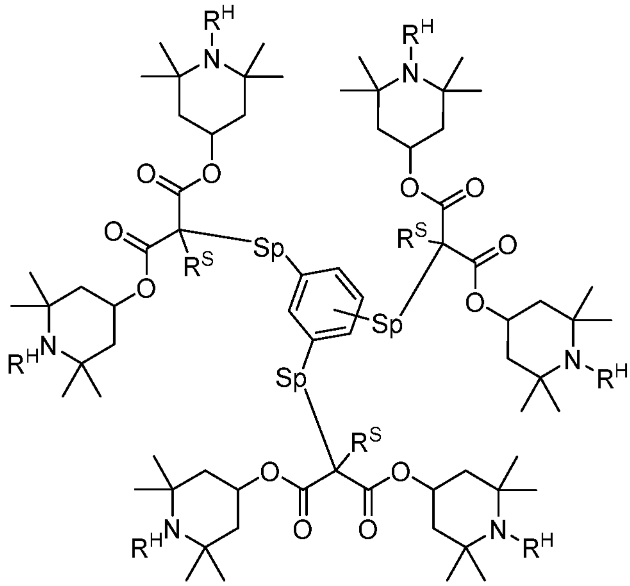

S-2

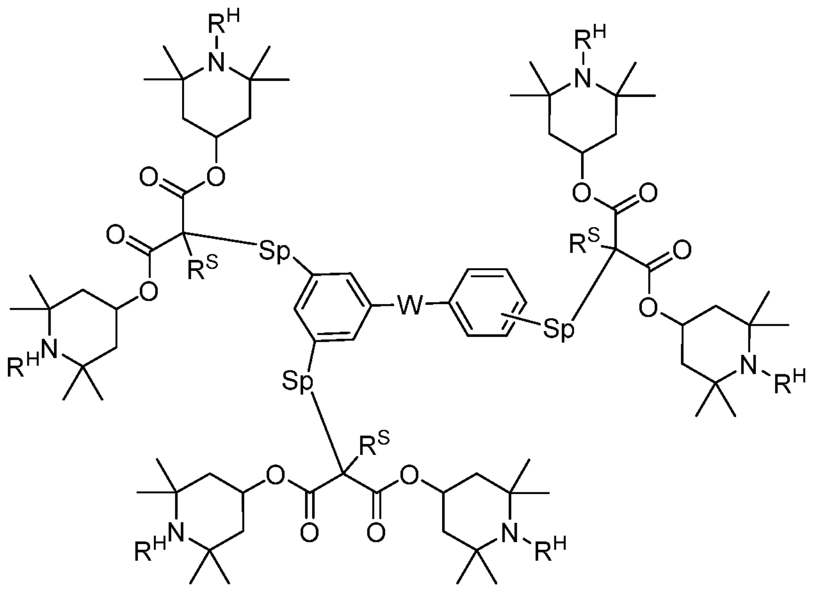

S-3

in which $R^H$ has the meanings given above and preferably denotes H or O·,

Sp on each occurrence, identically or differently, denotes a spacer group, and
W denotes linear or branched, optionally unsaturated alkylene having 1 to 12 C atoms, in which one or more non-adjacent $-CH_2-$ groups may be replaced with -O-.

Preferred compounds of formula S-1 are selected from the compounds of the formula S-1-1:

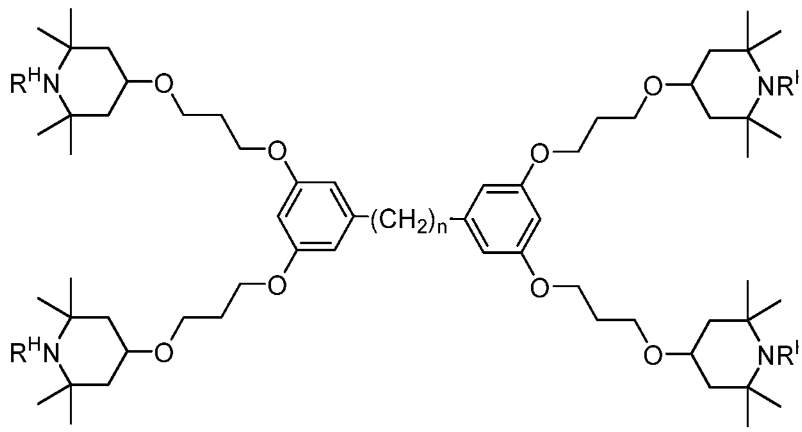

S-1-1

in which $R^H$ has the meanings given above and preferably denotes H or O·, and n is an integer from 0 to 12, preferably 5, 6, 7, 8 or 9, very preferably 7.

Very preferred compounds of formula S-1-1 are those of formula S-1-1-1:

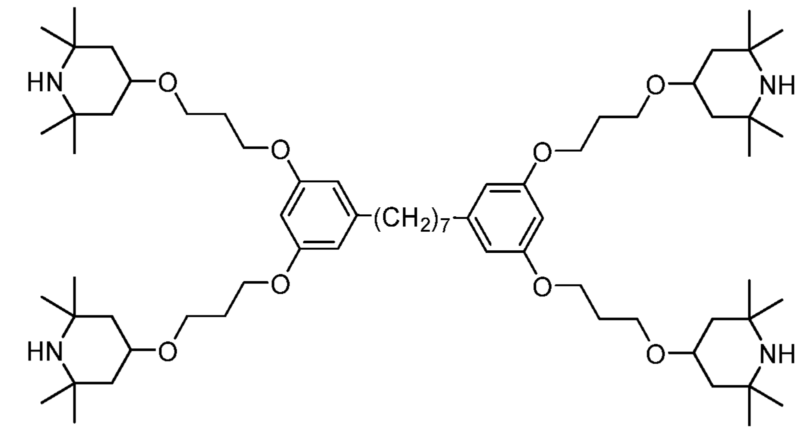

S-1-1-1

Preferred compounds of formula S-2 are selected from the compounds of the formula S-2-1:

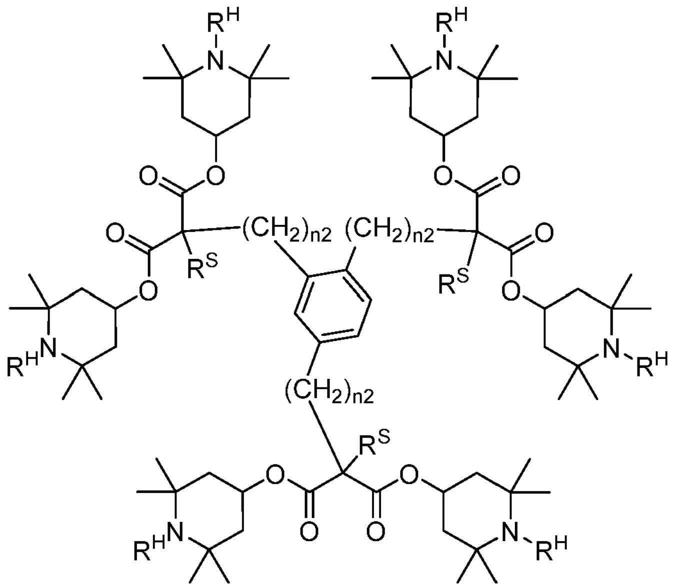

S-2-1

in which $R^H$ has the meanings given above and preferably denotes H or O·, and n2, on each occurrence identically or differently, preferably identically, is an integer from 1 to 12, preferably 2, 3, 4, 5, or 6, very preferably 3, and $R^S$ on each occurrence identically or differently, preferably identically, denotes alkyl having 1 to 6 C atoms, preferably n-butyl.

Very preferred compounds of formula H-2-1 are those of formula S-2-1-1:

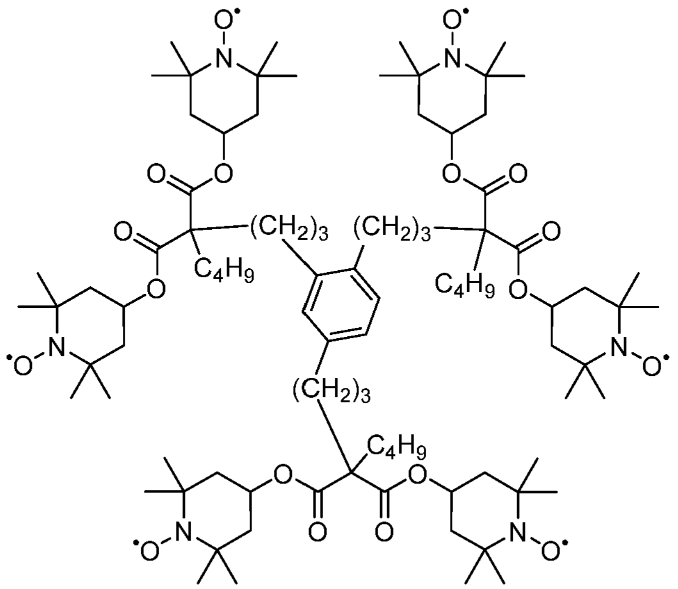

S-2-1-1

Preferred compounds of formula S-3 are selected from the compounds of the formula S-3-1:

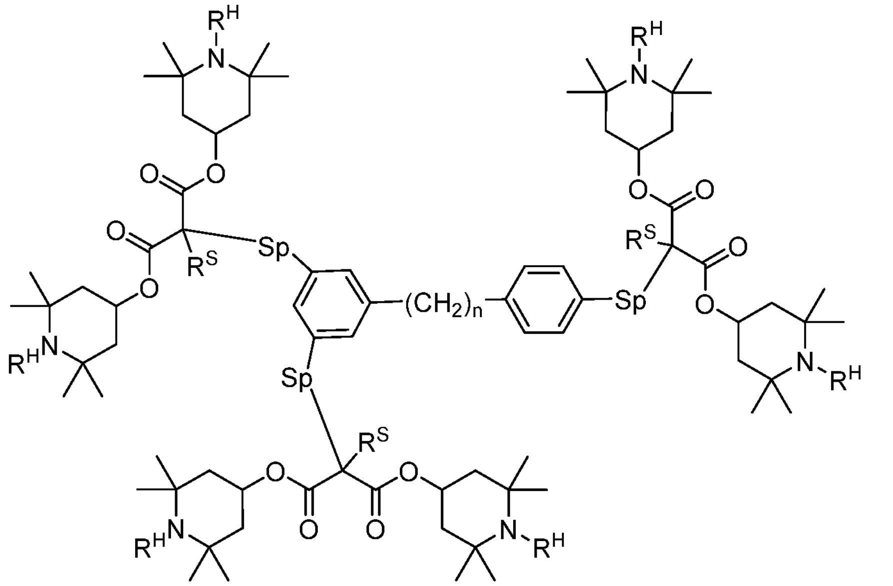

S-3-1

in which $R^H$ has the meanings given above and preferably denotes H or O·, and n is an integer from 0 to 12, preferably 5, 6, 7, 8 or 9, very preferably 7.

The compounds of the formulae S and ST-1 to ST-18 are preferably each present in the liquid-crystal mixtures according to the invention in amounts of 0.005 - 0.5%, based on the mixture.

If the mixtures according to the invention comprise two or more compounds from the group of the compounds of the formulae S and ST-1 to ST-18, the concentration correspondingly increases to 0.01 - 1% in the case of two compounds, based on the mixtures.

However, the total proportion of the compounds of the formulae S and ST-1 to ST-18, based on the mixture according to the invention, should not exceed 2% by weight based on the total mixture.

The liquid crystal medium according to the invention, herein also referred to as liquid crystal host mixture, is suitable for the use in polymer stabilised displays. To this end, the medium according to the invention optionally comprises one or more polymerisable compounds of formula P

$$P\text{-}Sp\text{-}A^1\text{-}(Z^1\text{-}A^2)_z\text{-}R \qquad P$$

in which independently of each other and on each occurrence identically or differently,

P denotes a polymerisable group,

Sp denotes a spacer group or a single bond,

A', $A^2$ denote an aromatic, heteroaromatic, alicyclic or heterocyclic group, preferably having 4 to 25 ring atoms, which may also contain fused rings, and which is unsubstituted, or mono- or polysubstituted by L,

$Z^1$ denotes -O-, -S-, -CO-, -CO-O-, -O-CO-, -O-CO-O-, $-OCH_2-$, $-CH_2O-$, $-SCH_2-$, $-CH_2S-$, $-CF_2O-$, $-OCF_2-$, $-CF_2S-$, $-SCF_2-$, $-(CH_2)_{n1}-$, $-CF_2CH_2-$, $-CH_2CF_2-$, $-(CF_2)_{n1}-$, -CH=CH-, -CF=CF-, -CH=CF-, -CF=CH-, -C≡C-, -CH=CH-CO-O-, -O-CO-CH=CH-, $-CH_2-CH_2-CO-O-$, $-O-CO-CH_2-CH_2-$, $-CR^0R^{00}-$, or a single bond,

$R^0$, $R^{00}$ denote H or alkyl having 1 to 12 C atoms,

R denotes H, L, or P-Sp-,

L denotes F, Cl, -CN, P-Sp- or straight chain, branched or cyclic alkyl having 1 to 25 C atoms, wherein one or more non-adjacent $CH_2$-groups are optionally replaced by -O-, -S-, - CO-, -CO-O-, -O-CO-, -O-CO-O- in such a manner that O- and/or S-atoms are not directly connected with each other, and wherein one or more H atoms are each optionally replaced by P-Sp-, F or Cl,

z is 0, 1, 2 or 3, and

n1 is 1, 2, 3 or 4.

The term "reliability" as used herein means the quality of the performance of the display during time and with different stress loads, such as light load, temperature, humidity, voltage, and comprises display effects such as image sticking (area and line image sticking), mura, yogore etc. which are known to the skilled person in the field of LC displays. As a standard parameter for categorising the reliability usually the voltage holding ration (VHR) value is used, which is a measure for maintaining a constant electrical voltage in a test display. Among other factors, a high VHR is a prerequisite for a high reliability of the LC medium.

Unless indicated otherwise, the term "PSA" is used hereinafter when referring to displays of the polymer sustained alignment type in general, and the term "PS" is used when referring to specific display modes, like PS-VA, PS-TN and the like.

As used herein, the terms "active layer" and "switchable layer" mean a layer in an electrooptical display, for example an LC display, that comprises one or more molecules having structural and optical anisotropy, like for example LC molecules, which change their orientation upon an external stimulus like an electric or magnetic field, resulting in a change of the transmission of the layer for polarized or unpolarized light.

As used herein, the terms "tilt" and "tilt angle" will be understood to mean a tilted alignment of the LC molecules of an LC medium relative to the surfaces of the cell in an LC display (here preferably a PSA display). The tilt angle here denotes the average angle (< 90°) between the longitudinal molecular axes of the LC molecules (LC director) and the surface of the plane-parallel outer plates which form the LC cell. A low value for the tilt angle (i.e., a large deviation from the 90° angle) corresponds to a large tilt here. A suitable method for measurement of the tilt angle is given in the examples. Unless indicated otherwise, tilt angle values disclosed above and below relate to this measurement method.

As used herein, the terms "reactive mesogen" and "RM" will be understood to mean a compound containing a mesogenic or liquid crystalline skeleton, and one or more functional groups attached thereto which are suitable for polymerisation and are also referred to as "polymerisable group" or "P".

Unless stated otherwise, the term "polymerisable compound" as used herein will be understood to mean a polymerisable monomeric compound.

As used herein, the term "low-molecular-weight compound" will be understood to mean to a compound that is monomeric and/or is not prepared by a polymerisation reaction, as opposed to a "polymeric compound" or a "polymer".

As used herein, the term "unpolymerisable compound" will be understood to mean a compound that does not contain a functional group that is suitable for polymerisation under the conditions usually applied for the polymerisation of the RMs.

The term "mesogenic group" as used herein is known to the person skilled in the art and described in the literature, and means a group which, due to the anisotropy of its attracting and repelling interactions, essentially contributes to causing a liquid-crystal (LC) phase in low-molecular-weight or polymeric substances. Compounds containing mesogenic groups (mesogenic compounds) do not necessarily have to have an LC phase themselves. It is also possible for mesogenic compounds to exhibit LC phase behaviour only after mixing with other compounds and/or after polymerisation. Typical mesogenic groups are, for example, rigid rod- or disc-shaped units. An overview of the terms and definitions used in connection with mesogenic, or LC compounds is given in Pure Appl. Chem. 2001, 73(5), 888 and C. Tschierske, G. Pelzl, S. Diele, Angew. Chem. 2004, 116, 6340-6368.

As used herein, the terms "optically active" and "chiral" are synonyms for materials that are able to induce a helical pitch in a nematic host material, also referred to as "chiral dopants".

The term "spacer group", above and below also referred to as "Sp", as used herein is known to the person skilled in the art and is described in the literature, see, for example, Pure Appl. Chem. 2001, 73(5), 888 and C. Tschierske, G. Pelzl, S. Diele, Angew. Chem. 2004, 116, 6340-6368. As used herein, the terms "spacer group" or "spacer" mean a flexible

group, for example an alkylene group, which connects the mesogenic group and the polymerisable group(s) in a polymerisable mesogenic compound.

Likewise, in the compounds of formula I, a spacer group connects a central hydrocarbon group with a photoactive, stabilising hindered amine functional group.

Above and below,

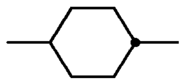

denotes a trans-1,4-cyclohexylene ring.

In a group

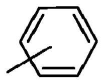

the single bond shown between the two ring atoms can be attached to any free position of the benzene ring.

Above and below "organic group" denotes a carbon or hydrocarbon group.

"Carbon group" denotes a mono- or polyvalent organic group containing at least one carbon atom, where this either contains no further atoms (such as, for example, -C≡C-) or optionally contains one or more further atoms, such as, for example, N, O, S, B, P, Si, Se, As, Te or Ge (for example carbonyl, etc.). The term "hydrocarbon group" denotes a carbon group which additionally contains one or more H atoms and optionally one or more heteroatoms, such as, for example, N, O, S, B, P, Si, Se, As, Te or Ge.

"Halogen" denotes F, Cl, Br or I, preferably F or Cl. -CO-, -C(=O)- and -C(O)- denote a carbonyl group, i.e.,

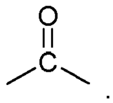

A carbon or hydrocarbon group can be a saturated or unsaturated group. Unsaturated groups are, for example, aryl, alkenyl or alkynyl groups. A carbon or hydrocarbon radical having more than 3 C atoms can be straight-chain, branched and/or cyclic and may also contain spiro links or condensed rings.

The terms "alkyl", "aryl", "heteroaryl", etc., also encompass polyvalent groups, for example alkylene, arylene, heteroarylene, etc.

The term "aryl" denotes an aromatic carbon group, or a group derived therefrom. The term "heteroaryl" denotes "aryl" as defined above, containing one or more heteroatoms, preferably selected from N, O, S, Se, Te, Si and Ge.

Preferred carbon and hydrocarbon groups are optionally substituted, straight-chain, branched or cyclic, alkyl, alkenyl, alkynyl, alkoxy, alkylcarbonyl, alkoxycarbonyl, alkylcarbonyloxy and alkoxycarbonyloxy having 1 to 40, preferably 1 to 20, very preferably 1 to 12, C atoms, optionally substituted aryl or aryloxy having 5 to 30, preferably 6 to 25, C atoms, or optionally substituted alkylaryl, arylalkyl, alkylaryloxy, arylalkyloxy, arylcarbonyl, aryloxycarbonyl, arylcarbonyloxy and aryloxycarbonyloxy having 5 to 30, preferably 6 to 25, C atoms, wherein one or more C atoms may also be replaced by hetero atoms, preferably selected from N, O, S, Se, Te, Si and Ge.

Further preferred carbon and hydrocarbon groups are $C_1$-$C_{20}$ alkyl, $C_2$-$C_{20}$ alkenyl, $C_2$-$C_{20}$ alkynyl, $C_3$-$C_{20}$ allyl, $C_4$-$C_{20}$ alkyldienyl, $C_4$-$C_{20}$ polyenyl, $C_6$-$C_{20}$ cycloalkyl, $C_4$-$C_{15}$ cycloalkenyl, $C_6$-$C_{30}$ aryl, $C_6$-$C_{30}$ alkylaryl, $C_6$-$C_{30}$ arylalkyl, $C_6$-$C_{30}$ alkylaryloxy, $C_6$-$C_{30}$ arylalkyloxy, $C_2$-$C_{30}$ heteroaryl, $C_2$-$C_{30}$ heteroaryloxy.

Particular preference is given to $C_1$-$C_{12}$ alkyl, $C_2$-$C_{12}$ alkenyl, $C_2$-$C_{12}$ alkynyl, $C_6$-$C_{25}$ aryl and $C_2$-$C_{25}$ heteroaryl.

Further preferred carbon and hydrocarbon groups are straight-chain, branched or cyclic alkyl having 1 to 20, preferably 1 to 12, C atoms, which are unsubstituted or mono- or polysubstituted by F, Cl, Br, I or CN and in which one or more non-adjacent $CH_2$ groups may each be replaced, independently of one another, by $-C(R^x)=C(R^x)-$, -C≡-, $-N(R^x)-$, -O-, -S-, -CO-, -CO-O-, -O-CO-, -O-CO-O- in such a way that O and/or S atoms are not linked directly to one another.

$R^x$ preferably denotes H, F, Cl, CN, a straight-chain, branched or cyclic alkyl chain having 1 to 25 C atoms, in which, in addition, one or more non-adjacent C atoms may be replaced by -O-, -S-, -CO-, -CO-O-, -O-CO-, -O-CO-O- and in which one or more H atoms may be replaced by F or Cl, or denotes an optionally substituted aryl or aryloxy group with 6 to 30 C atoms, or an optionally substituted heteroaryl or heteroaryloxy group with 2 to 30 C atoms.

Preferred alkyl groups are, for example, methyl, ethyl, n-propyl, isopropyl, n-butyl, isobutyl, s-butyl, t-butyl, 2-methylbutyl, n-pentyl, s-pentyl, cyclopentyl, n-hexyl, cyclohexyl, 2-ethylhexyl, n-heptyl, cycloheptyl, n-octyl, cyclooctyl, n-nonyl, n-decyl, n-undecyl, n-dodecyl, dodecanyl, trifluoromethyl, perfluoro-n-butyl, 2,2,2-trifluoroethyl, perfluorooctyl,

perfluorohexyl, etc.

Preferred alkenyl groups are, for example, ethenyl, propenyl, butenyl, pentenyl, cyclopentenyl, hexenyl, cyclohexenyl, heptenyl, cycloheptenyl, octenyl, cyclooctenyl, etc.

Preferred alkynyl groups are, for example, ethynyl, propynyl, butynyl, pentynyl, hexynyl, octynyl, etc.

Preferred alkoxy groups are, for example, methoxy, ethoxy, 2-methoxyethoxy, n-propoxy, i-propoxy, n-butoxy, i-butoxy, s-butoxy, t-butoxy, 2-methylbutoxy, n-pentoxy, n-hexoxy, n-heptoxy, n-octoxy, n-nonoxy, n-decoxy, n-undecoxy, n-dodecoxy, etc.

Preferred amino groups are, for example, dimethylamino, methylamino, methylphenylamino, phenylamino, etc.

Aryl and heteroaryl groups can be monocyclic or polycyclic, i.e., they can contain one ring (such as, for example, phenyl) or two or more rings, which may also be fused (such as, for example, naphthyl) or covalently bonded (such as, for example, biphenyl), or contain a combination of fused and linked rings. Heteroaryl groups contain one or more heteroatoms, preferably selected from O, N, S and Se.

The (non-aromatic) alicyclic and heterocyclic groups encompass both saturated rings, i.e., those containing exclusively single bonds, and also partially unsaturated rings, i.e., those which may also contain multiple bonds. Heterocyclic rings contain one or more heteroatoms, preferably selected from Si, O, N, S and Se.

The (non-aromatic) alicyclic and heterocyclic groups can be monocyclic, i.e., contain only one ring (such as, for example, cyclohexane), or polycyclic, i.e., contain a plurality of rings (such as, for example, decahydronaphthalene or bicyclooctane). Particular preference is given to saturated groups. Preference is furthermore given to mono-, bi- or tricyclic groups having 5 to 25 ring atoms, which optionally contain fused rings and are optionally substituted. Preference is furthermore given to 5-, 6-, 7- or 8-membered carbocyclic groups, in which, in addition, one or more C atoms may be replaced by Si and/or one or more CH groups may be replaced by N and/or one or more non-adjacent $CH_2$ groups may be replaced by -O- and/or -S-.

Preferred substituents are, for example, solubility-promoting groups, such as alkyl or alkoxy, electron-withdrawing groups, such as fluorine, nitro or nitrile, or substituents for increasing the glass transition temperature (Tg) in the polymer, in particular bulky groups, such as, for example, t-butyl or optionally substituted aryl groups.

Preferred substituents, hereinafter also referred to as "$L^S$", are, for example, F, Cl, Br, I, - CN, $-NO_2$, -NCO, -NCS, -OCN, -SCN, $-C(=O)N(R^x)_2$, $-C(=O)Y^1$, $-C(=O)R^x$, $-N(R^x)_2$, straight-chain or branched alkyl, alkoxy, alkylcarbonyl, alkoxycarbonyl, alkylcarbonyloxy or alkoxycarbonyloxy each having 1 to 25 C atoms, in which one or more H atoms may optionally be replaced by F or Cl, optionally substituted silyl having 1 to 20 Si atoms, or optionally substituted aryl having 6 to 25, preferably 6 to 15, C atoms, wherein $R^x$ denotes H, F, Cl, CN, or straight chain, branched or cyclic alkyl having 1 to 25 C atoms, wherein one or more non-adjacent $CH_2$-groups are optionally replaced by -O-, -S-, -CO-, -CO-O-, -O-CO-, -O-CO-O- in such a manner that O- and/or S-atoms are not directly connected with each other, and wherein one or more H atoms are each optionally replaced by F, Cl, P- or P-Sp-, and

$Y^1$ denotes halogen.

"Substituted silyl or aryl" preferably means substituted by halogen, -CN, $R^0$, $-OR^0$, $-COR^0$, $-CO-O-R^0$, $-O-CO-R^0$ or $-O-CO-O-R^0$, wherein $R^0$ denotes H or alkyl with 1 to 20 C atoms.

Particularly preferred substituents L are, for example, F, Cl, CN, $NO_2$, $CH_3$, $C_2H_5$, $OCH_3$, $OC_2H_5$, $COCH_3$, $COC_2H_5$, $COOCH_3$, $COOC_2H_5$, $CF_3$, $OCF_3$, $OCHF_2$, $OC_2F_5$, furthermore phenyl.

$A^1$ and $A^2$ very preferably denote

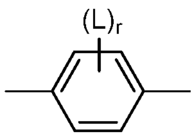

in which L has one of the meanings indicated above and r denotes 0, 1, 2, 3 or 4, in particular

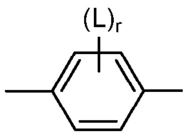

denotes

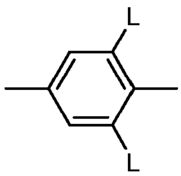 , 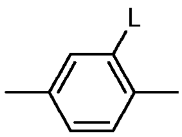 , 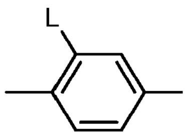 ,

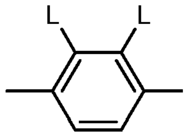 , 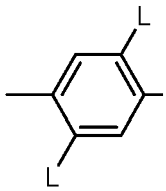 or 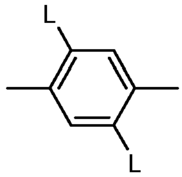 ,

The polymerisable group P is a group which is suitable for a polymerisation reaction, such as, for example, free-radical or ionic chain polymerisation, polyaddition or polycondensation, or for a polymer-analogous reaction, for example addition or condensation onto a main polymer chain. Particular preference is given to groups for chain polymerisation, in particular those containing a C=C double bond or -C≡C- triple bond, and groups which are suitable for polymerisation with ring opening, such as, for example, oxetane or epoxide groups.

Very preferred groups $-A^1-(Z-A^2)_z-$ in formula P are selected from the following formulae

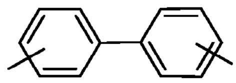
A1

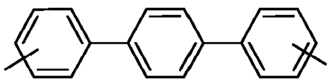
A2

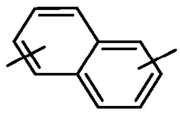
A3

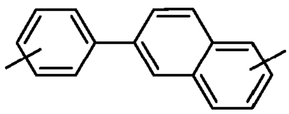
A4

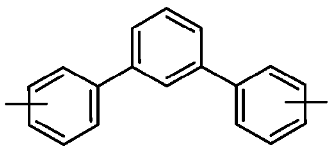
A5

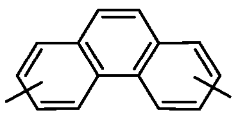
A6

wherein at least one benzene ring is substituted by at last one group L and the benzene rings are optionally further substituted by one or more groups L or P-Sp-.

Suitable and preferred compounds of formula P are selected from the following formulae:

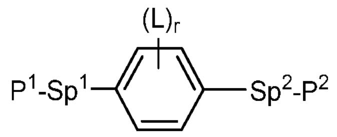
P1

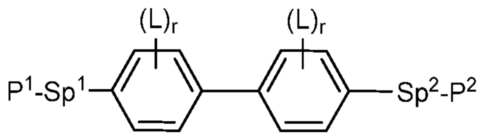
P2

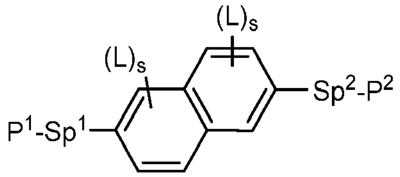
P3

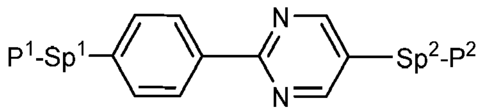
P4

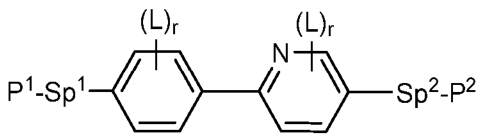
P5

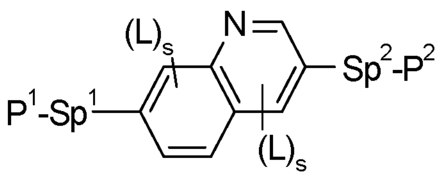
P6

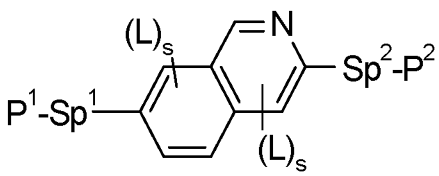
P7

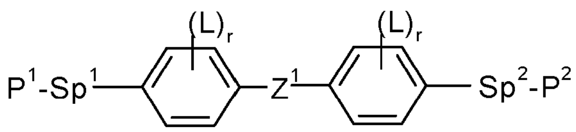
P8

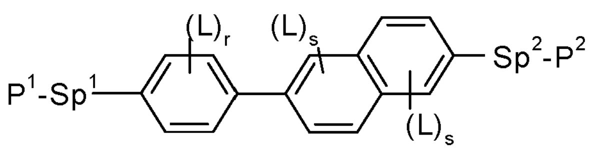
P9

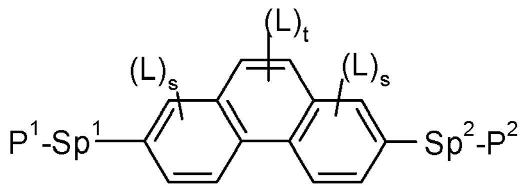

P10

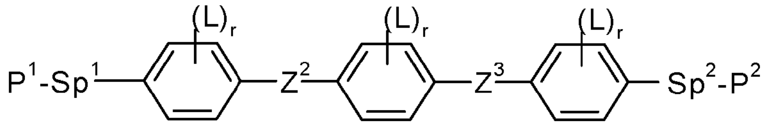

P11

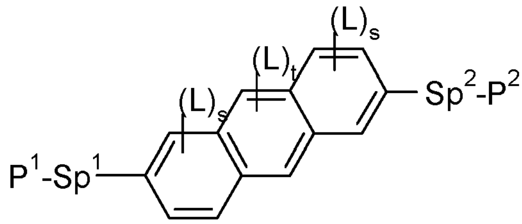

P12

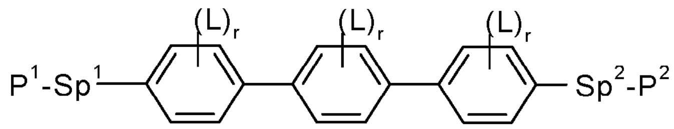

P13

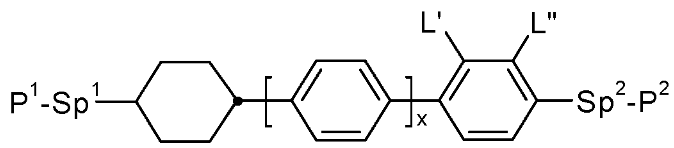

P14

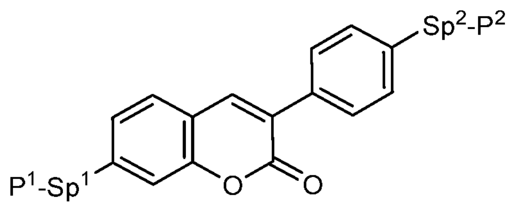

P15

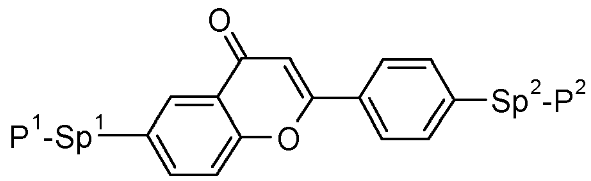

P16

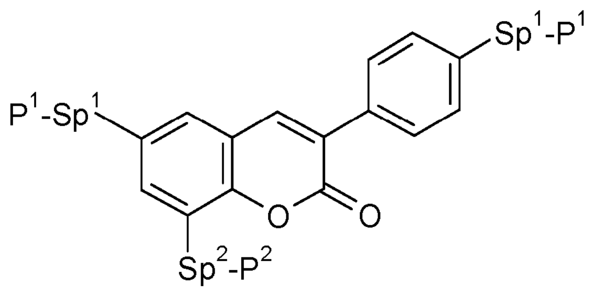

P17

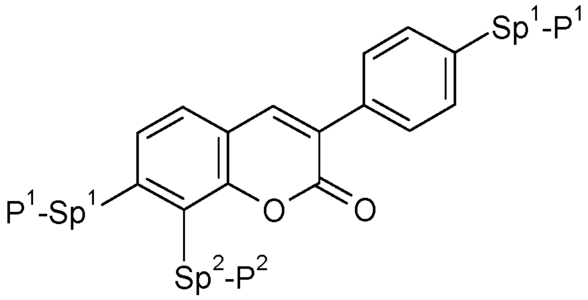

P18

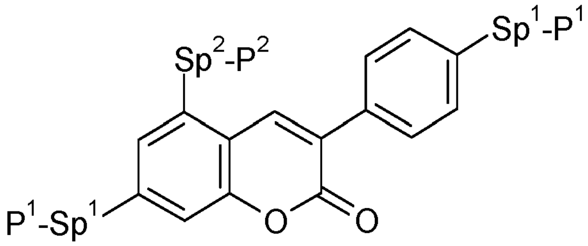

P19

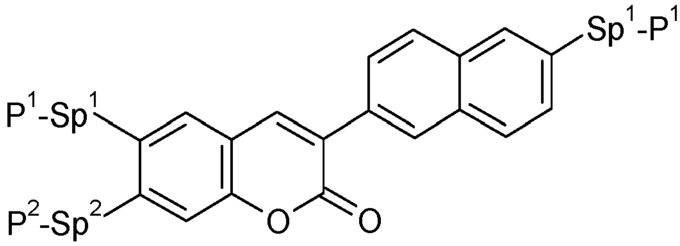

P20

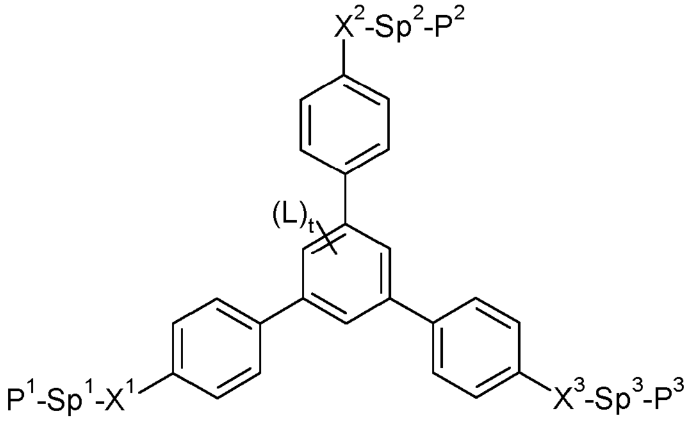

P21

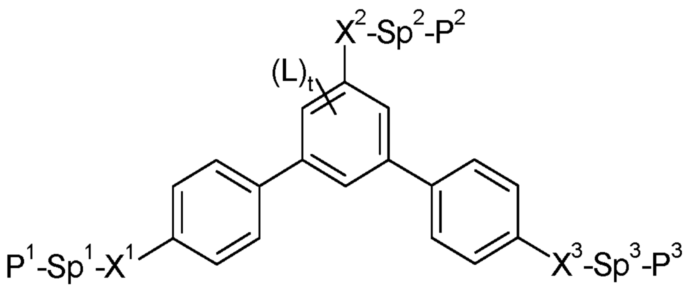

P22

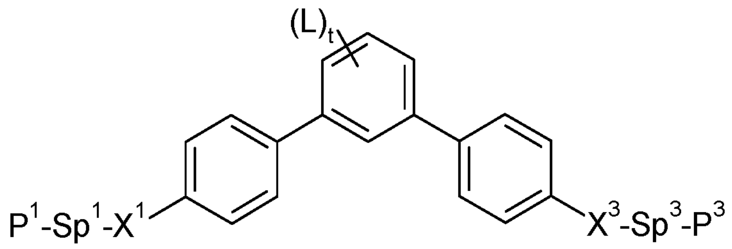
P23

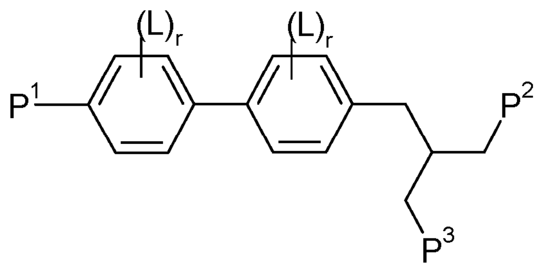
P24

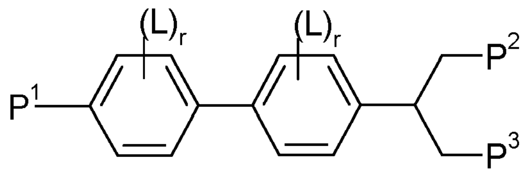
P25

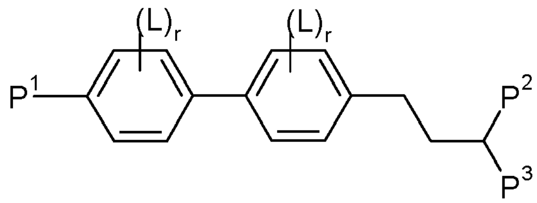
P26

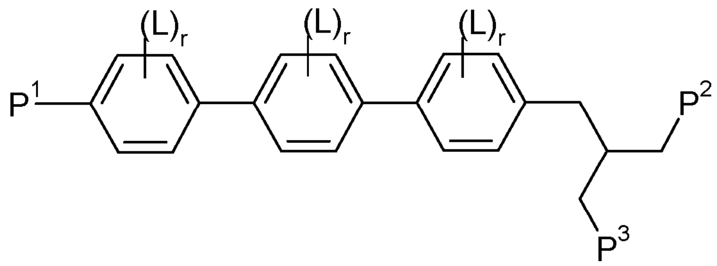
P27

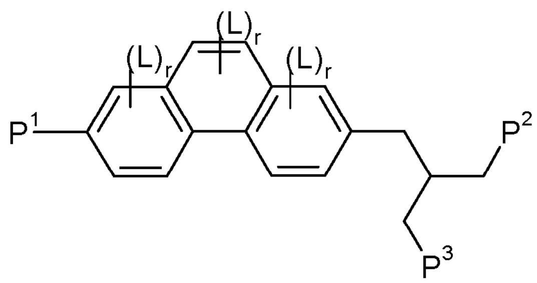
P28

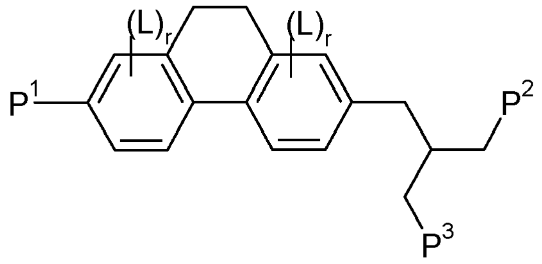

P29

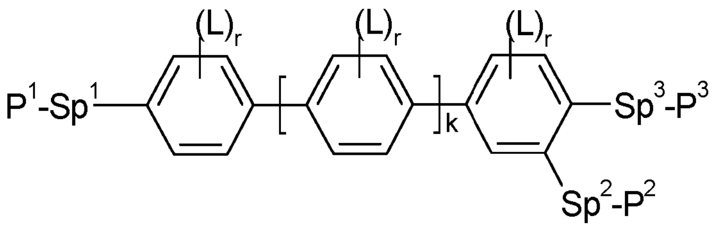

P30

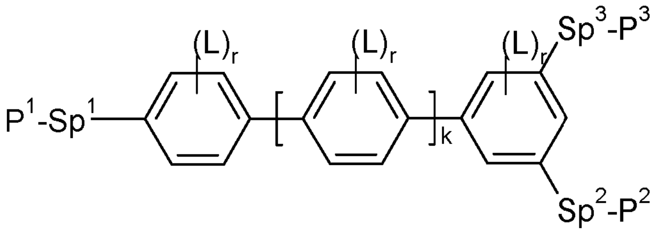

P31

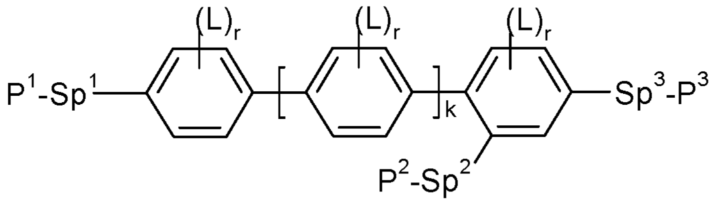

P32

in which the individual radicals have the following meanings:

$P^1$, $P^2$ and $P^3$ each, independently of one another, denote an acrylate or methacrylate group,

$Sp^1$, $Sp^2$ and $Sp^3$ each, independently of one another, denote a single bond or a spacer group having one of the meanings indicated above and below for Sp, and particularly preferably denote $-(CH_2)_{p1}-$, $-(CH_2)_{p1}-O-$, $-(CH_2)_{p1}-CO-O-$, $-(CH_2)_{p1}-O-CO-$ or $-(CH_2)_{p1}-O-CO-O-$, in which p1 is an integer from 1 to 12, where, in addition, one or more of the radicals $P^1-Sp^1-$, $P^2-Sp^2-$ and $P^3-Sp^3-$ may denote $R^{aa}$, with the proviso that at least one of the radicals $P^1-Sp^1-$, $P^2-Sp^2-$ and $P^3-Sp^3-$ present is different from $R^{aa}$,

$R^{aa}$ denotes H, F, Cl, CN or straight-chain or branched alkyl having 1 to 25 C atoms, in which, in addition, one or more non-adjacent $CH_2$ groups may each be replaced, independently of one another, by $-C(R^0)=C(R^{00})-$, $-C\equiv C-$, $-N(R^0)-$, -O-, -S-, -CO-, -CO-O-, -O-CO-, -O-CO-O- in such a way that O and/or S atoms are not linked directly to one another, and in which, in addition, one or more H atoms may be replaced by F, Cl, CN or $P^1-Sp^1-$, particularly preferably straight-chain or branched, optionally mono- or polyfluorinated alkyl, alkoxy, alkenyl, alkynyl, alkylcarbonyl, alkoxycarbonyl, alkylcarbonyloxy or alkoxycarbonyloxy having 1 to 12 C atoms (where the alkenyl and alkynyl radicals have at least two C atoms and the branched radicals have at least three C atoms),

$R^0$, $R^{00}$ each, independently of one another and identically or differently on each occurrence, denote H or alkyl having 1 to 12 C atoms,

$R^y$ and $R^z$ each, independently of one another, denote H, F, $CH_3$ or $CF_3$,

$X^1$, $X^2$ and $X^3$ each, independently of one another, denote -CO-O-, -O-CO- or a single bond,

$Z^1$ denotes -O-, -CO-, $-C(R^yR^z)-$ or $-CF_2CF_2-$,

$Z^2$ and $Z^3$ each, independently of one another, denote -CO-O-, -O-CO-, $-CH_2O-$, $-OCH_2-$, $-CF_2O-$, $-OCF_2-$ or $-(CH_2)_n-$, where n is 2, 3 or 4,

L on each occurrence, identically or differently, denotes F, Cl, CN or straight-chain or branched, optionally mono- or

polyfluorinated alkyl, alkoxy, alkenyl, alkynyl, alkylcarbonyl, alkoxycarbonyl, alkylcarbonyloxy or alkoxycarbonyloxy having 1 to 12 C atoms, preferably F,
L' and L" each, independently of one another, denote H, F or Cl,
k denotes 0 or 1,
r denotes 0, 1, 2, 3 or 4,
s denotes 0, 1, 2 or 3,
t denotes 0, 1 or 2,
x denotes 0 or 1.

Especially preferred are compounds of the formulae P2, P13, P17, P22, P23, P24, P30, P31 and P32.
Further preferred are trireaktive compounds P15 to P30, in particular P17, P18, P19, P22, P23, P24, P25, P26, P30, P31 and P32.
In the compounds of formulae P1 to P32 the group

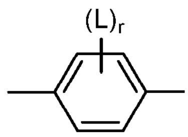

is preferably

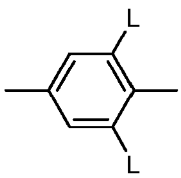, 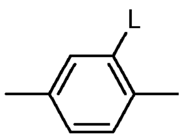, 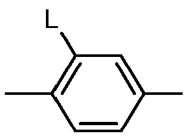,

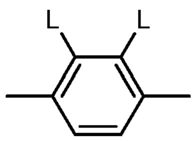, 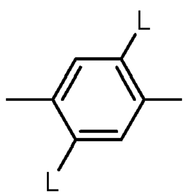 or 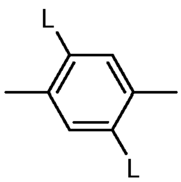,

wherein L on each occurrence, identically or differently, has one of the meanings given above or below, and is preferably F, Cl, CN, $NO_2$, $CH_3$, $C_2H_5$, $C(CH_3)_3$, $CH(CH_3)_2$, $CH_2CH(CH_3)C_2H_5$, $OCH_3$, $OC_2H_5$, $COCH_3$, $COC_2H_5$, $COOCH_3$, $COOC_2H_5$, $CF_3$, $OCF_3$, $OCHF_2$, $OC_2F_5$ or P-Sp-, very preferably F, Cl, CN, $CH_3$, $C_2H_5$, $OCH_3$, $COCH_3$, $OCF_3$ or P-Sp-, more preferably F, Cl, $CH_3$, $OCH_3$, $COCH_3$ oder $OCF_3$ , especially F or $CH_3$.
Very particularly preferred compounds of the formula P are selected from Table E below.
Particular preference is given to LC media comprising one, two or three polymerisable compounds of formula P.
Preferably the proportion of compounds of formula P in the LC medium is from >0 to < 5%, very preferably from >0 to < 1%, most preferably from 0.01 to 0.5%.
In a preferred embodiment, the medium according to the invention preferably comprises one or more compounds of formula S in a total concentration in the range of from 10 ppm to 2000 ppm, more preferably from 100 ppm to 1000 ppm, still more preferably from 150 ppm to 500 ppm, very preferably from 200 ppm to 400 ppm and in particular from 250 to 300 ppm.
In another preferred embodiment, the medium according to the invention preferably comprises one or more compounds of formula S in a total concentration in the range of from 1000 ppm to 5000 ppm, more preferably from more than 1000 ppm to 5000 ppm, still more preferably from 1200 ppm to 4500 ppm, very preferably from 2000 ppm to 4000 ppm and in particular from 2500 to 3500 ppm.
The medium according to the invention preferably has negative dielectric anisotropy.
The liquid crystal mixture according to the invention is nematic, preferably at a temperature of -20°C or less, preferably at -30°C or less, very preferably at -40°C or less.

It is advantageous for the liquid-crystalline medium according to the invention to preferably have a nematic phase from ≤ -20°C to ≥ 90°C, particularly preferably from ≤ -30°C to ≥ 100°C, very particularly preferably from ≤ -40°C to ≥ 100°C.

The expression "have a nematic phase" herein means on the one hand that no smectic phase and no crystallisation are observed at low temperatures at the corresponding temperature and on the other hand that clearing (phase transition to the isotropic phase) still does not occur on heating from the nematic phase. The investigation at low temperatures is carried out in a flow viscometer at the corresponding temperature and checked by storage in test cells having a layer thickness corresponding to the electro-optical use for at least 100 hours. If the storage stability at a temperature of -20°C in a corresponding test cell is 1000 h or more, the medium is referred to as stable at this temperature. At temperatures of -30°C and -40°C, the corresponding times are 500 h and 250 h respectively. At high temperatures, the clearing point is measured by conventional methods in capillaries.

In a preferred embodiment, the medium according to the invention has a clearing temperature of 90°C or more, preferably of 100°C or more.

In a particular preferred embodiment, the medium according to the invention has a clearing temperature of 100°C or more, and an optical anisotropy of 0.1 or less, preferably 0.09 or less at 20°C and 589 nm.

In a preferred embodiment, the liquid-crystal mixture according to the invention has a dielectric anisotropy $\Delta\varepsilon$ of -2.0 to -6.0, preferably of -2.2 to -5.0, in particular -2.3 to -4.3.

The rotational viscosity $\gamma_1$ at 20°C is preferably less than 250 mPa·s, more preferably less than 200 mPa·s, and most preferably less than 150 mPa·s.

The medium according to the invention comprises the compound of the formula I in a concentration in the range of from 0.1% to 10%, preferably from 1% to 9%, more preferably from 2% to 8%.

Preferred embodiments, taken alone or in combination with one another are the following. The medium preferably comprises:

- one or more compounds of formula IIA, preferably IIA-10, more preferably one or more compounds CCY-n-Om, in particular CCY-4-O2, CCY-3-O2, CCY-3-O3, CCY-3-O1 and/or CCY-5-O2, preferably in a total concentration in the range of from 3% to 25%, more preferably from 6% to 20%, particularly preferably from 8% to 18%;
- one or more compounds of formula IID, preferably selected from the compounds of the formulae IID-4 and IID-12, preferably in a total concentration in the range of from 2% to 40%, more preferably, from 15 % to 35%, particularly preferably from 20% to 30%,

  and/or
- one or more compounds of formula IID-4, preferably CLY-n-Om, in particular CLY-2-O4, CLY-3-O2 and/or CLY-3-O3, preferably in a total concentration in the range of from 3% to 38%, more preferably from 8 % to 25%;

  and/or
- one or more compounds of formula IID-12, preferably CLOY-n-Om, in particular CLOY-3-O2, preferably in a total concentration in the range of from 2% to 35%, more preferably, from 4 % to 30%, particularly preferably from 6% to 26%

  and/or
- less than 5% of one or more compounds of the formula IIB, more preferably less than 3%, very preferably less than 1%;

  and/or
- less than 5% of one or more compounds of the formula IIC, more preferably less than 3%, very preferably less than 1%;

  and/or
- one or more compounds of the formula III, preferably of the formula III-1 and/or III-6, in particular one or more compounds B(S)-nO-Om and/or COB(S)-n-Om, very particularly B(S)-2O-O4, B(S)-2O-O5, B(S)-2O-O6, and/or COB(S)-2-O4, preferably in a total concentration in the range of from 1% to 20%, more preferably from 1% to 17%;

  and/or
- one or more compounds of the formula III and/or PH-1, preferably of the formula III-1 and/or BP-3, more preferably of the formula III-2-6, in particular selected from B(S)-2O-O4, B(S)-2O-O5 and B(S)-2O-O6, preferably in a total concentration in the range of from 1% to 12%, more preferably from 2% to 11%;

  and/or
- one or more compounds of formula IV, in particular selected from CC-3-V, CC-3-V1, CC-3-2V1 and/or CC-4-V1, preferably in a total concentration in the range of from 20% to 70%, more preferably from 20% to 60%, particularly preferably from 25% to 55%;

  and/or
- one or more compounds of the formula IVa, more preferably of the formula IVa-2, in particular CP-3-O2, in a total concentration in the range of from 0.5% to 8%, more preferably from 1% to 6%, very preferably from 2% to 5%;

  and/or
- one or more compounds of the formula V, more preferably selected from the compounds of the formulae V-2-1 and V-2-2, in particular CCP-n-m and/or CCP-Vn-m and/or CPP-n-m, very particularly selected from the group consisting

of CCP-3-1, CCP-V-1, CCP-V2-1 and CPP-3-2, preferably in a total concentration in the range of from 1% to 20%, more preferably from 2% to 17%, very preferably from 3% to 14%;
and/or

one or more compounds of the formula CL, more preferably of the formula CL-3, very preferably selected form the compounds CLP-V-m, CLP-V-Om, CLP-n-m, and CLP-n-Om, in which n and m independently are 1, 2, 3, 4 or 5, preferably in a total concentration in the range of from 1% to 12%, more preferably from 2% to 10% and very preferably from 3% to 7%.

The liquid-crystal media according to the invention have high values for the voltage holding ratio in liquid-crystal cells.

In general, liquid-crystal media having a low addressing voltage or threshold voltage exhibit a lower voltage holding ratio than those having a higher addressing voltage or threshold voltage and vice versa.

As used herein, the term "dielectrically positive compounds" denotes compounds having a $\Delta\varepsilon > 1.5$, the term "dielectrically neutral compounds" denotes those having $-1.5 \leq \Delta\varepsilon \leq 1.5$ and the term "dielectrically negative compounds" denotes those having $\Delta\varepsilon < -1.5$. The dielectric anisotropy of the compounds is determined here by dissolving 10 % of the compounds in a liquid-crystalline host and determining the capacitance of the resultant mixture in at least one test cell in each case having a layer thickness of 20 $\mu$m with homeotropic and with homogeneous surface alignment at 1 kHz. The measurement voltage is typically 0.5 V to 1.0 V but is always lower than the capacitive threshold of the respective liquid-crystal mixture investigated.

All temperature values indicated for the present invention are in °C.

The mixtures according to the invention are suitable for all VA-TFT applications, such as, for example, VAN, MVA, (S)-PVA, ASV, PSA (polymer sustained VA) and PS-VA (polymer stabilized VA). They are furthermore suitable for IPS (in-plane switching) and FFS (fringe field switching) applications having negative $\Delta\varepsilon$, in particular UB-FFS.

It goes without saying for the person skilled in the art that the VA, IPS or FFS mixture according to the invention may also comprise compounds in which, for example, H, N, O, Cl and F have been replaced by the corresponding isotopes.

The compounds according to the present invention can be synthesized by or in analogy to known methods described in the literature (for example in the standard works such as Houben-Weyl, Methoden der Organischen Chemie [Methods of Organic Chemistry], Georg-Thieme-Verlag, Stuttgart), under reaction conditions which are known and suitable for said reactions. Use may also be made here of variants which are known per se but are not mentioned here. In particular, they can be prepared as described in or in analogy to the following reaction schemes. Further methods for preparing the inventive compounds can be taken from the examples.

Other mesogenic compounds which are not explicitly mentioned above can optionally and advantageously also be used in the media in accordance with the present invention. Such compounds are known to the person skilled in the art.

For the present invention and in the following examples, the structures of the liquid-crystal compounds are indicated by means of acronyms, with the transformation into chemical formulae taking place in accordance with Tables A.1 to A.3 below. All radicals $C_mH_{2m+1}$, $C_nH_{2n+1}$, and $C_lH_{2l+1}$ or $C_mH_{2m-1}$, $C_nH_{2n-1}$ and $C_lH_{2l-1}$ are straight-chain alkyl radicals or alkylene radicals, in each case having n, m and l C atoms respectively. Preferably n, m and l are independently of each other 1, 2, 3, 4, 5, 6, or 7. Table A.1 shows the codes for the ring elements of the nuclei of the compound, Table A.2 lists the bridging units, and Table A.3 lists the meanings of the symbols for the left- and right-hand end groups of the molecules. The acronyms are composed of the codes for the ring elements with optional linking groups, followed by a first hyphen and the codes for the left-hand end group, and a second hyphen and the codes for the right-hand end group. Table B shows illustrative structures of compounds together with their respective abbreviations.

**Table A.1: Ring elements**

| | | | |
|---|---|---|---|
| **C** | 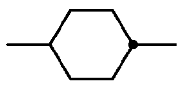 | | |
| **D** | 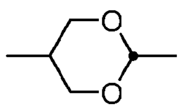 | **DI** | 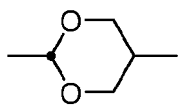 |
| **A** | 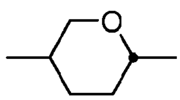 | **AI** | 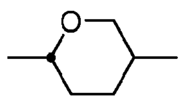 |
| **P** | 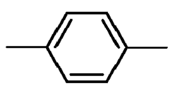 | | |

(continued)

| | | | |
|---|---|---|---|
| **G** | 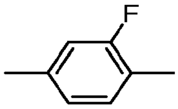 | **GI** | 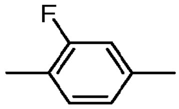 |
| **U** | 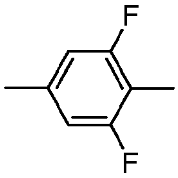 | **UI** | 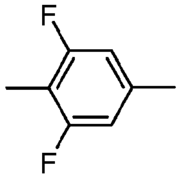 |
| **U(1)** | 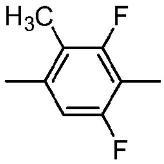 | **U(1)I** | 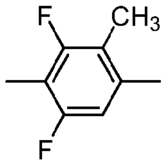 |
| **Y** | 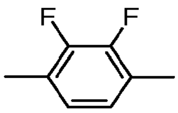 | | |
| **P(F, Cl)Y** | 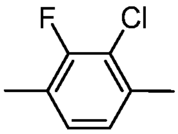 | **P(Cl,F)Y** | 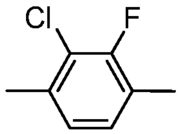 |
| **np** | 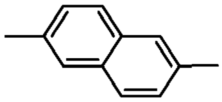 | | |
| **n3f** | 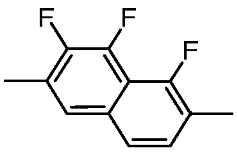 | **nN3fl** | 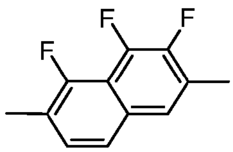 |
| **th** | 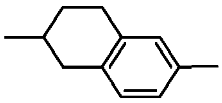 | **thI** | 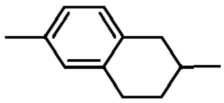 |
| **tH2f** | 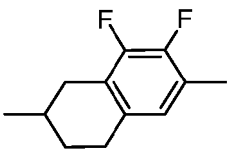 | **tH2fI** | 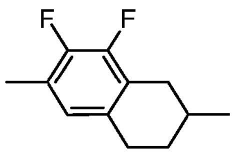 |
| **o2f** | 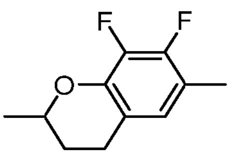 | **o2fI** | 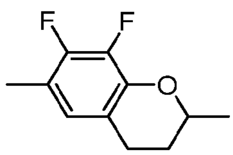 |
| **dh** | 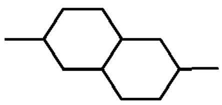 | | |
| **O** | 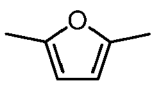 | **S** | 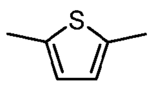 |

(continued)

| | | | |
|---|---|---|---|
| | | cpS | 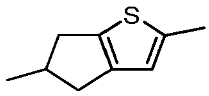 |
| K | 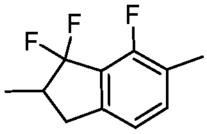 | Kl | 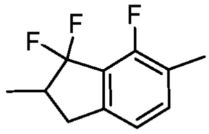 |
| L | 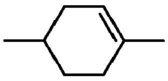 | Ll | 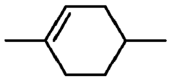 |
| F | 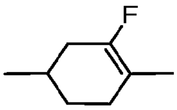 | Fl | 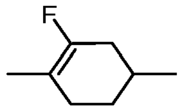 |
| B | 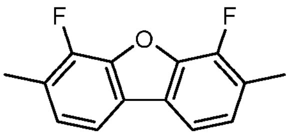 | B(S) | 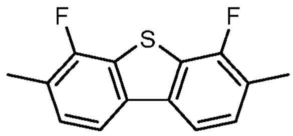 |
| Bh | 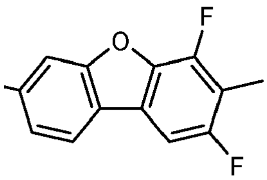 | Bh(S) | 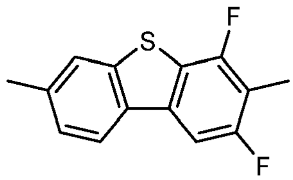 |
| Bf | 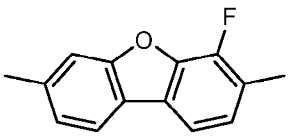 | Bf(S) | 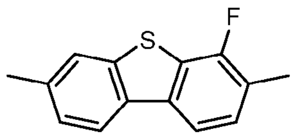 |
| Bfi | 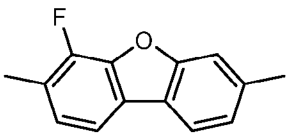 | Bfi(S) | 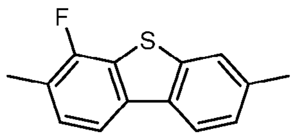 |
| B(P) | 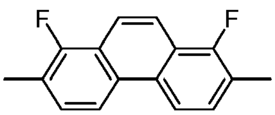 | B(A) | 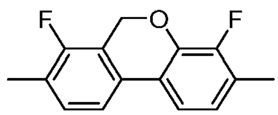 |

**Table A.2: Bridging units**

| | | | |
|---|---|---|---|
| **E** | $-CH_2-CH_2-$ | | |
| **V** | -CH=CH- | | |
| **T** | -C≡C- | | |
| **W** | $-CF_2-CF_2-$ | | |
| **B** | -CF=CF- | | |
| **Z** | -CO-O- | **ZI** | -O-CO- |
| **X** | -CF=CH- | **XI** | -CH=CF- |
| **O** | $-CH_2-O-$ | **OI** | $-O-CH_2-$ |
| **Q** | $-CF_2-O-$ | **QI** | $-O-CF_2-$ |

**Table A.3: End groups**

| On the left individually or in combination | | On the right individually or in combination | |
|---|---|---|---|
| **-n-** | $C_nH_{2n+1}$- | **-n** | -$C_nH_{2n+1}$ |
| **-nO-** | $C_nH_{2n+1}$-O- | **-On** | -O- $C_nH_{2n+1}$ |
| **-V-** | $CH_2$=CH- | **-V** | -CH=$CH_2$ |
| **-nV-** | $C_nH_{2n+1}$-CH=CH- | **-nV** | -$C_nH_{2n}$-CH=$CH_2$ |
| **-Vn-** | $CH_2$=CH- $C_nH_{2n}$- | **-Vn** | -CH=CH-$C_nH_{2n+1}$ |
| **-nVm-** | $C_nH_{2n+1}$-CH=CH-$C_mH_{2m}$- | **-nVm** | - $C_nH_{2n}$-CH=CH-$C_mH_{2m+1}$ |
| **-N-** | N≡C- | **-N** | -C≡N |
| **-S-** | S=C=N- | **-S** | -N=C=S |
| **-F-** | F- | **-F** | -F |
| **-CL-** | Cl- | **-CL** | -Cl |
| **-M-** | $CFH_2$- | **-M** | -$CFH_2$ |
| **-D-** | $CF_2H$- | **-D** | -$CF_2H$ |
| **-T-** | $CF_3$- | **-T** | -$CF_3$ |
| **-MO-** | $CFH_2O$ - | **-OM** | -$OCFH_2$ |
| **-DO-** | $CF_2HO$ - | **-OD** | -$OCF_2H$ |
| **-TO-** | $CF_3O$ - | **-OT** | -$OCF_3$ |
| **-A-** | H-C≡C- | **-A** | -C≡C-H |
| **-nA-** | $C_nH_{2n+1}$-C≡C- | **-An** | -C≡C-$C_nH_{2n+1}$ |
| **-NA-** | N≡C-C≡C- | **-AN** | -C≡C-C≡N |
| **-(cn)-** | 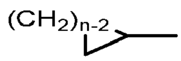 | **-(cn)** | 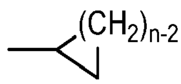 |
| **-(cn)m-** | 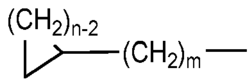 | **-m(cn)** | 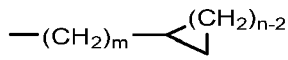 |
| **-(c5-1en)m-** | 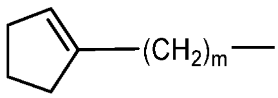 | **-m(c5-1en)** | 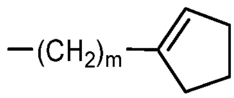 |
| **-(c5-2en)m-** | 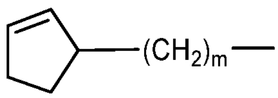 | **-m(c5-2en)** | 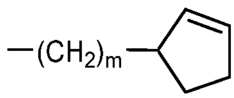 |
| **-(c5-3en)m-** | 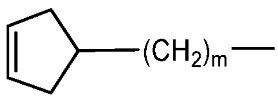 | **-m(c5-3en)** | 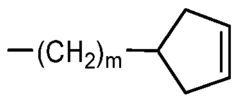 |
| **On the left only in combination** | | **On the right only in combination** | |
| **-...n...-** | -$C_nH_2$n- | **-...n...** | -$C_nH_{2n}$- |
| **-...M...-** | -CFH- | **-...M...** | -CFH- |
| **-...D...-** | -$CF_2$- | **-...D...** | -$CF_2$- |
| **-...V...-** | -CH=CH- | **-...V...** | -CH=CH- |
| **-...Z...-** | -CO-O- | **-...z...** | -CO-O- |
| **-...ZI...-** | -O-CO- | **-...ZI...** | -O-CO- |
| **-...K...-** | -CO- | **-...K...** | -CO- |
| **-...W...-** | -CF=CF- | **-...W...** | -CF=CF- |

in which n and m are each integers, and the three dots "..." are placeholders for other abbreviations from this table.

Apart from the compounds of formula I, IIA, IIB, IIC, IID, IIE and/or IIF, IVa, IVb and V, the mixtures according to the invention optionally comprise one or more compounds of the compounds mentioned below.

The following abbreviations are used:

(n, m, k and l are, independently of one another, each an integer, preferably 1 to 9 preferably 1 to 7, k and l possibly may be also 0 and preferably are 0 to 4, more preferably 0 or 2 and most preferably 2, n preferably is 1, 2, 3, 4 or 5, in the

combination "-nO-" it preferably is 1, 2, 3 or 4, preferably 2 or 4, m preferably is 1, 2, 3, 4 or 5, in the combination "-Om" it preferably is 1, 2, 3 or 4, more preferably 2 or 4. The combination "-IVm" preferably is "2V1".)

**Table B**

In Table B, n, m, k and l are, independently of one another, each an integer, preferably 1 to 9 preferably 1 to 7, k and l may also be 0 and are preferably 0 to 4, more preferably 0 or 2 and most preferably 2, n is preferably 1, 2, 3, 4 or 5 or, in the combination "-nO-", n is preferably 1, 2, 3 or 4, very preferably 2 or 4, m is preferably 1, 2, 3, 4 or 5 or, in the combination "-Om", m is preferably 1, 2, 3 or 4, more preferably 2 or 4. The combination "-nVm" preferably is "2V1". $(O)C_mH_{2m+1}$ means $C_mH_{2m+1}$ or $OC_mH_{2m+1}$.

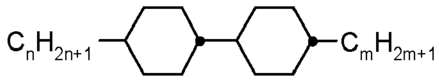

**CC-n-m**

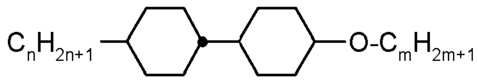

**CC-n-Om**

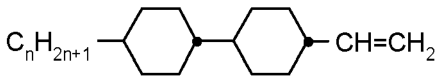

**CC-n-V**

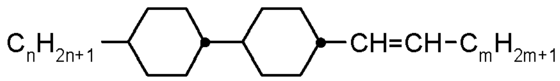

**CC-n-Vm**

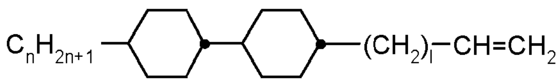

**CC-n-IV**

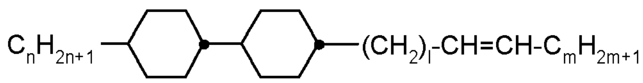

**CC-n-IVm**

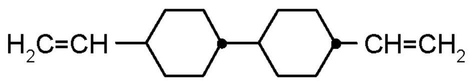

**CC-V-V**

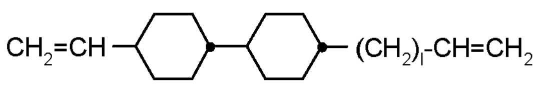

**CC-V-IV**

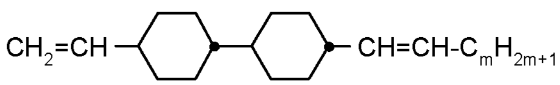

**CC-V-Vm**

(continued)

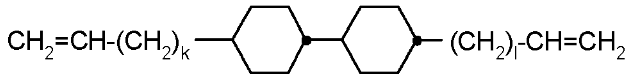

**CC-Vk-lV**

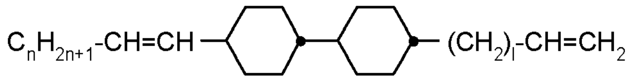

**CC-nV-lV**

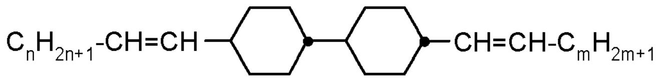

**CC-nV-Vm**

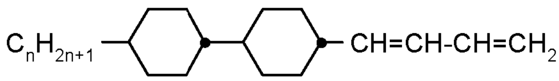

**CC-n-VV**

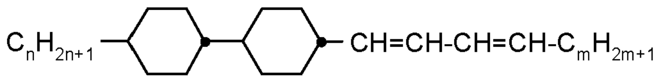

**CC-n-VVm**

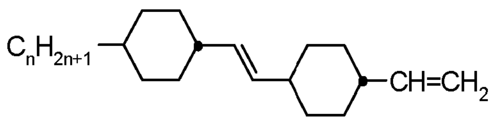

**CVC-n-V**

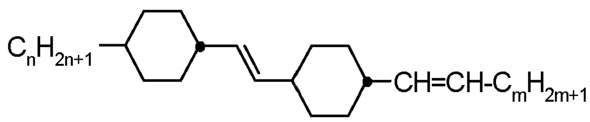

**CVC-n-Vm**

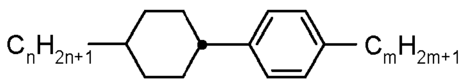

**CP-n-m**

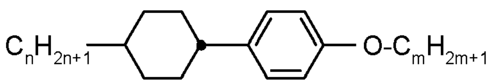

**CP-n-Om**

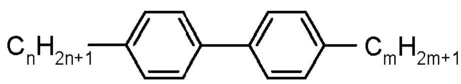

**PP-n-m**

(continued)

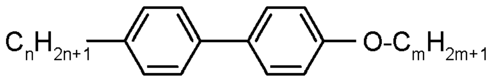

**PP-n-Om**

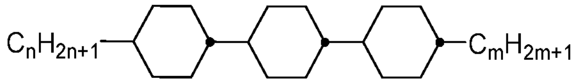

**CCC-n-m**

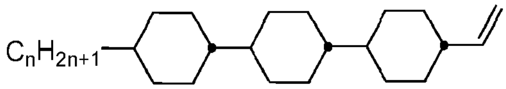

**CCC-n-V**

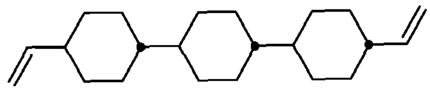

**CCC-V-V**

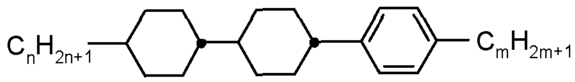

**CCP-n-m**

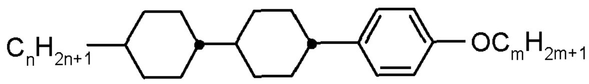

**CCP-n-Om**

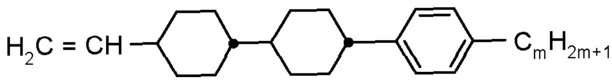

**CCP-V-m**

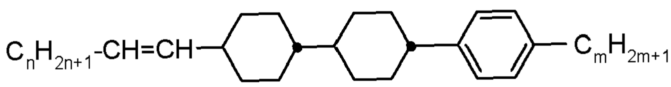

**CCP-nV-m**

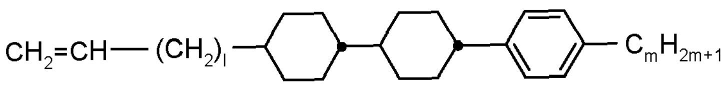

**CCP-Vl-m**

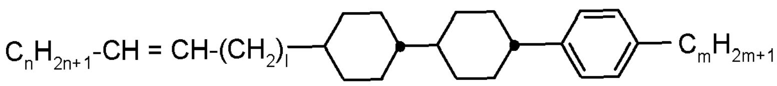

**CCP-nVl-m**

(continued)

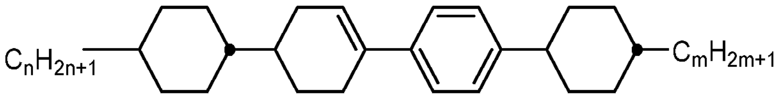

**CLPC-n-m**

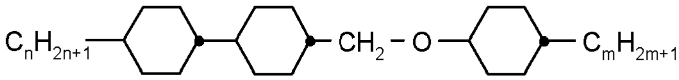

**CCOC-n-m**

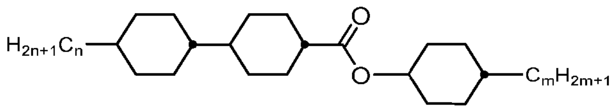

**CCZC-n-m**

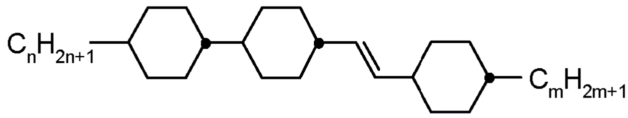

**CCVC-n-m**

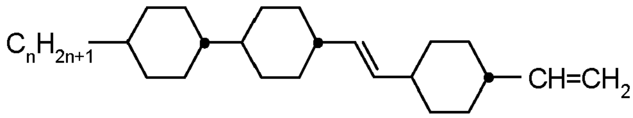

**CCVC-n-V**

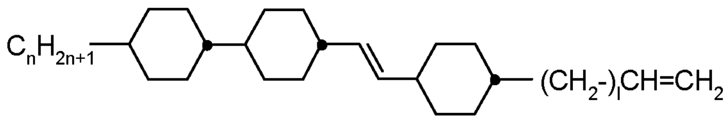

**CCVC-n-IV**

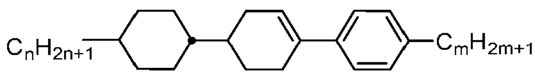

**CLP-n-m**

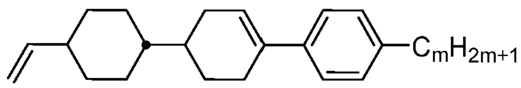

**CLP-V-n**

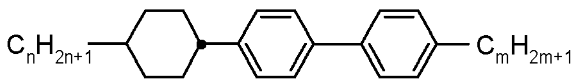

**CPP-n-m**

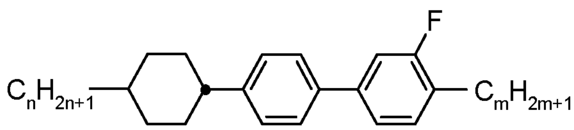

**CPG-n-m**

(continued)

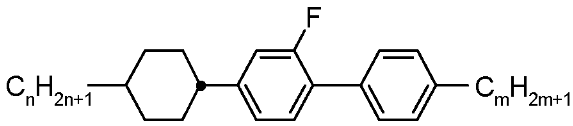

CGP-n-m

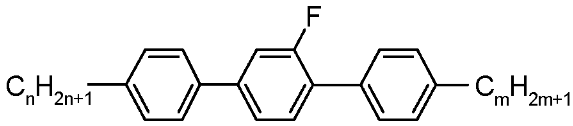

PGP-n-m

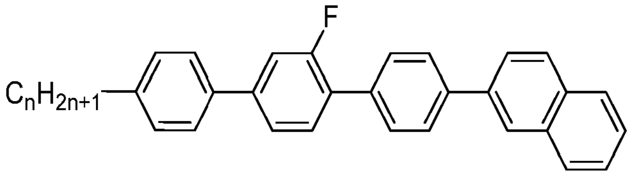

PGP-n-Naph

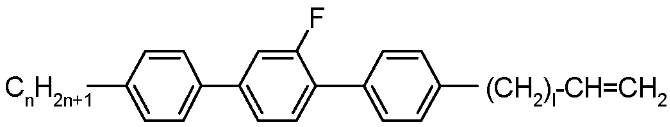

PGP-n-IV

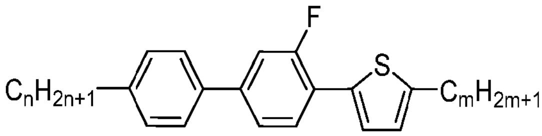

PGS-n-m

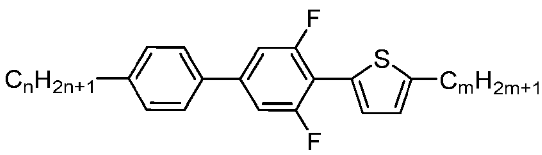

PUS-n-m

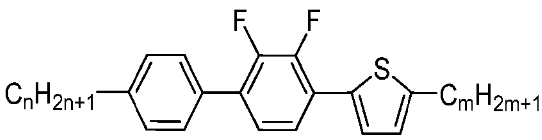

PYS-n-m

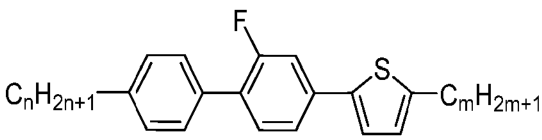

PGIS-n-m

(continued)

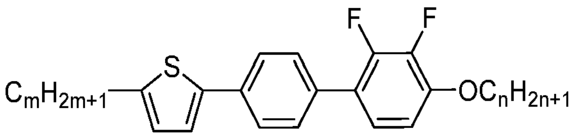

**SPY-m-On**

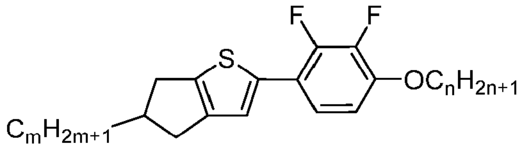

**cpSY-m-On**

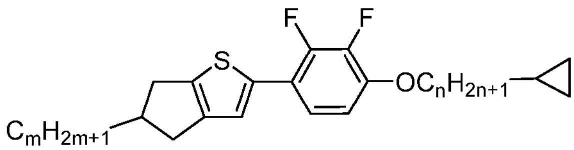

**cpSY-m-On(c3)**

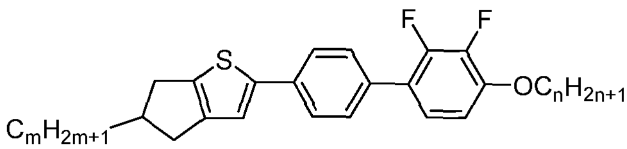

**cpSPY-m-On**

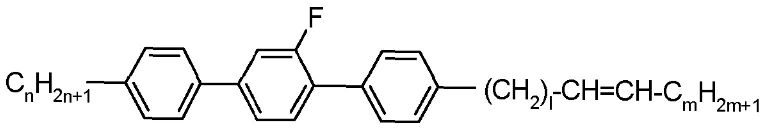

**PGP-n-lVm**

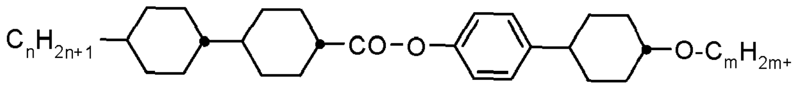

**CCZPC-n-m**

1

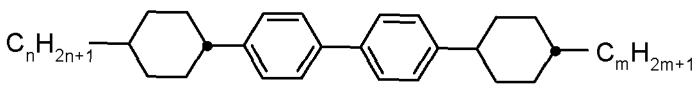

**CPPC-n-m**

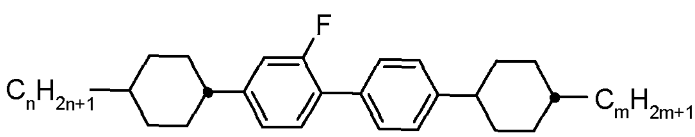

**CGPC-n-m**

(continued)

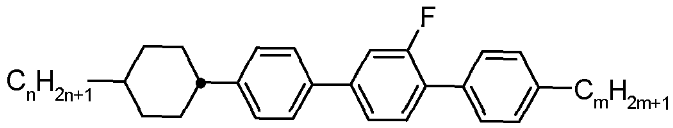

CPGP-n-m

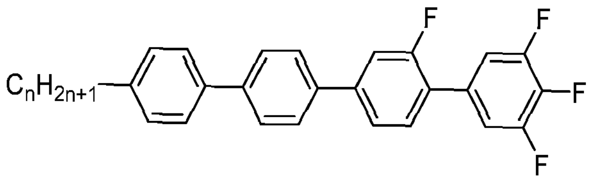

PPGU-n-F

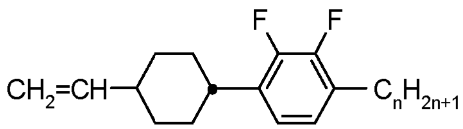

CY-V-n

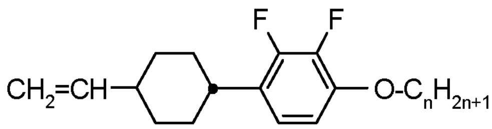

CY-V-On

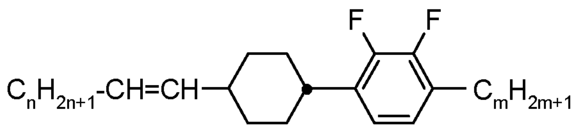

CY-nV-m

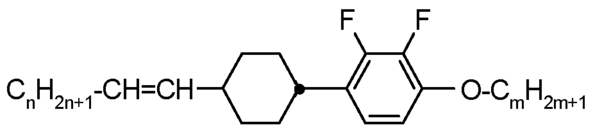

CY-nV-Om

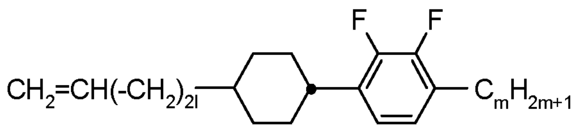

CY-Vl-m

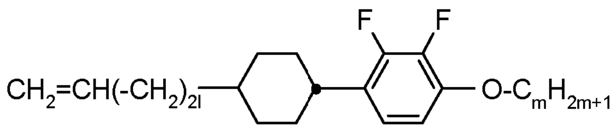

CY-Vl-Om

(continued)

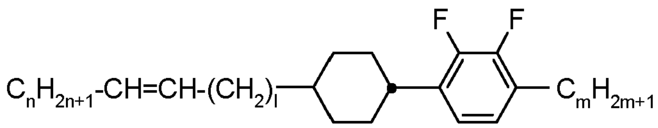

**CY-nVI-m**

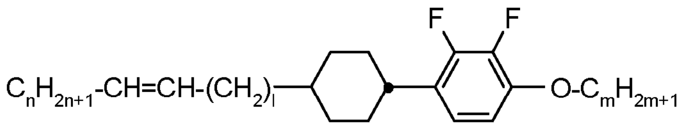

**CY-nVI-Om**

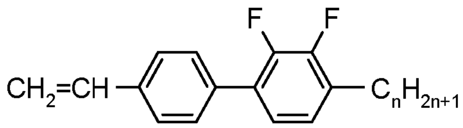

**PY-V-n**

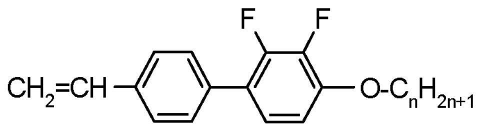

**PY-V-On**

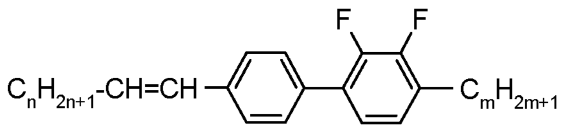

**PY-nV-m**

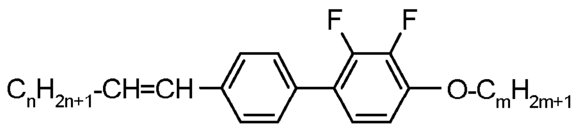

**PY-nV-Om**

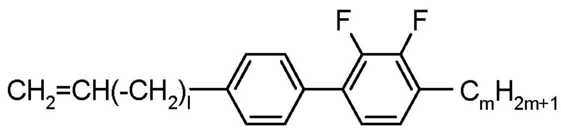

**PY-VI-m**

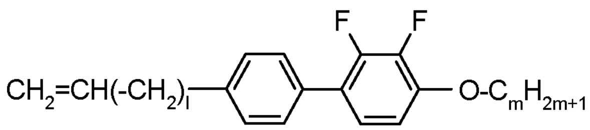

**PY-VI-Om**

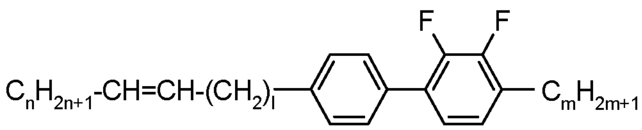

**PY-nVI-m**

(continued)

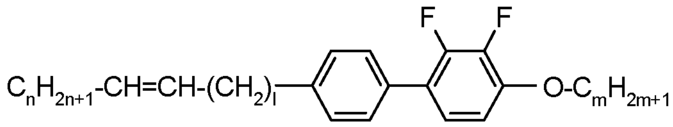

**PY-nVI-Om**

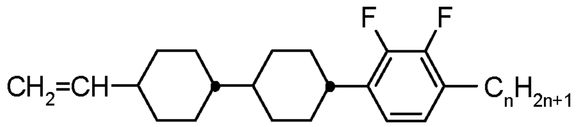

**CCY-V-n**

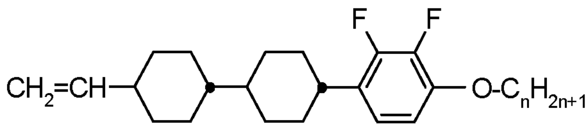

**CCY-V-On**

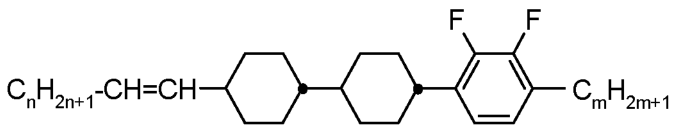

**CCY-nV-m**

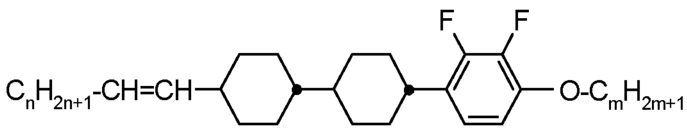

**CCY-nV-Om**

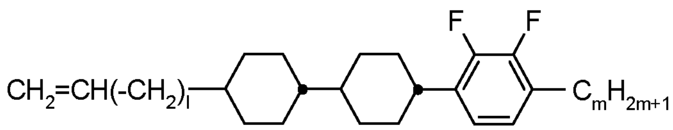

**CCY-VI-m**

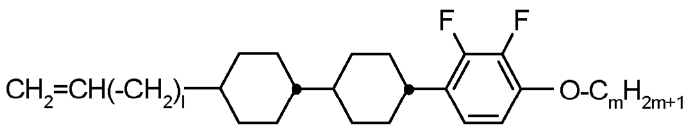

**CCY-VI-Om**

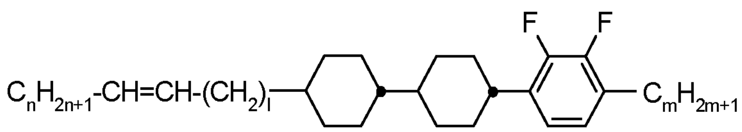

**CCY-nVI-m**

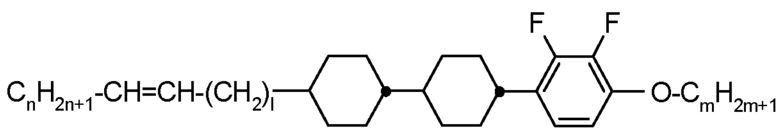

**CCY-nVI-Om**

(continued)

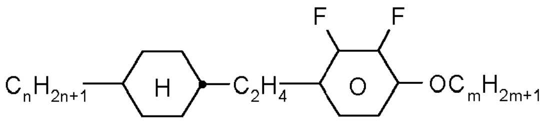

**CEY-n-Om**

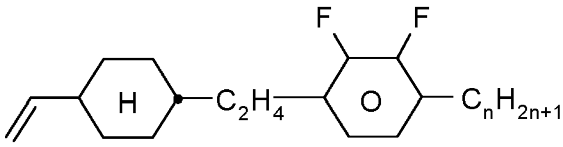

**CEY-V-n**

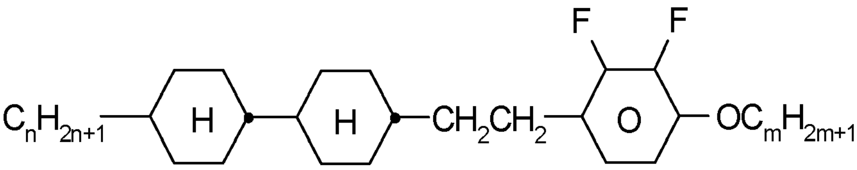

**CCEY-n-Om**

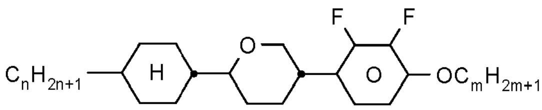

**CAIY-n-Om**

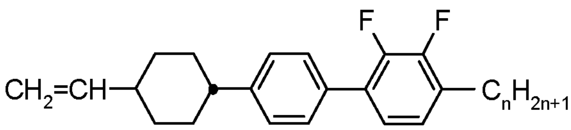

**CPY-V-n**

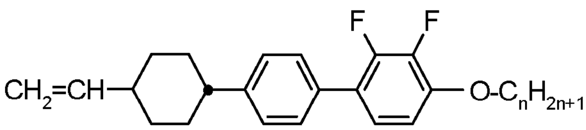

**CPY-V-On**

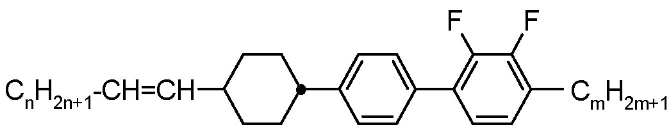

**CPY-nV-m**

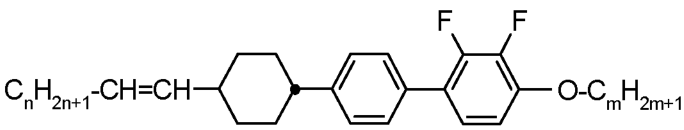

**CPY-nV-Om**

(continued)

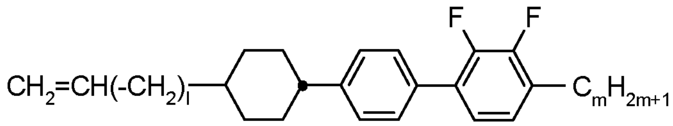

**CPY-VI-m**

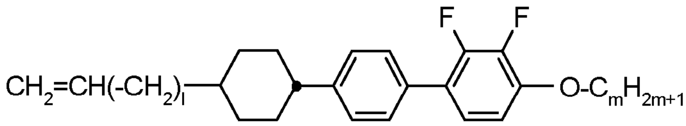

**CPY-VI-Om**

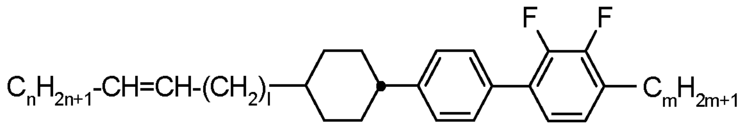

**CPY-nVI-k**

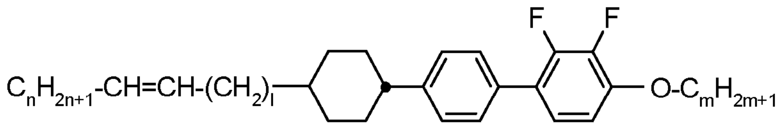

**CPY-nVI-Om**

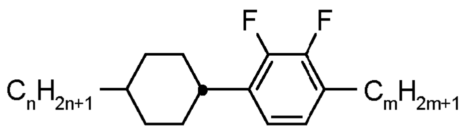

**CY-n-m**

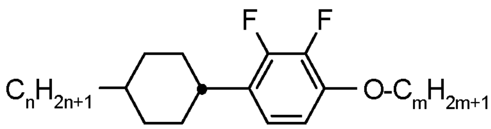

**CY-n-Om**

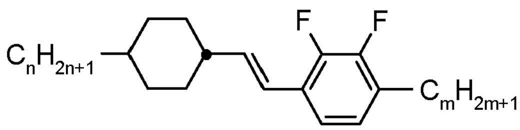

**CVY-n-m**

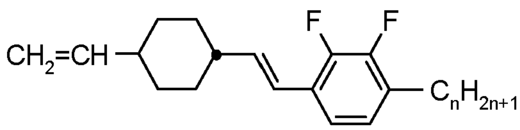

**CVY-V-n**

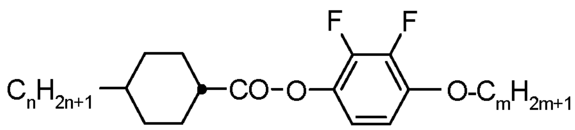

**CZY-n-Om**

(continued)

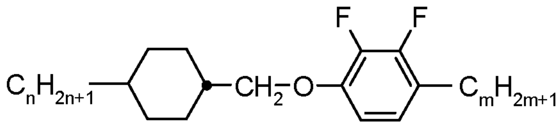

**COY-n-m**

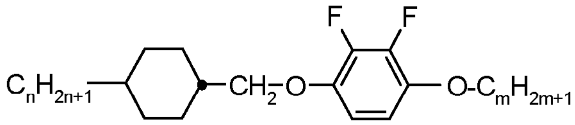

**COY-n-Om**

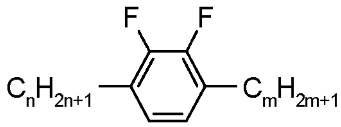

**Y-n-m**

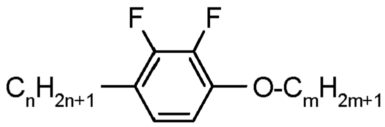

**Y-n-Om**

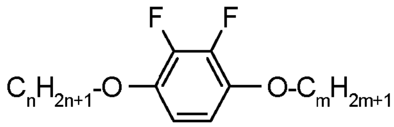

**Y-nO-Om**

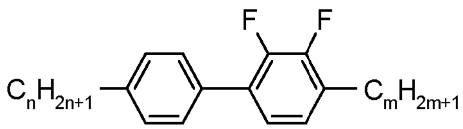

**PY-n-m**

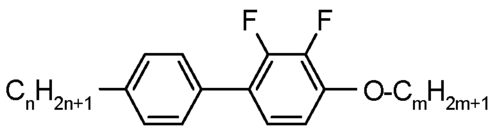

**PY-n-Om**

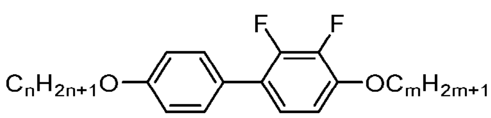

**PY-nO-Om**

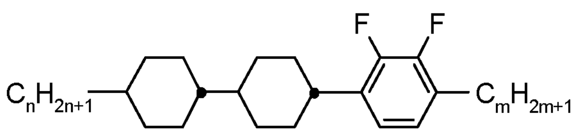

**CCY-n-m**

(continued)

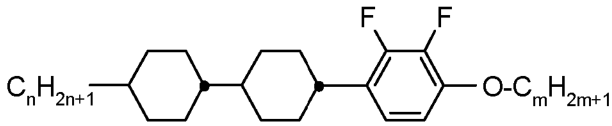

**CCY-n-Om**

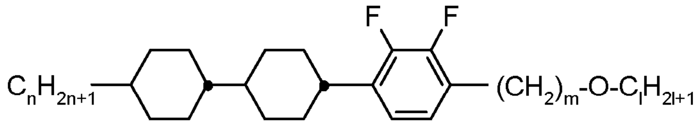

**CCY-n-mOl**

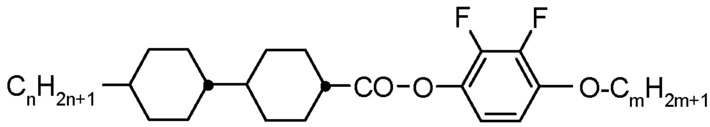

**CCZY-n-Om**

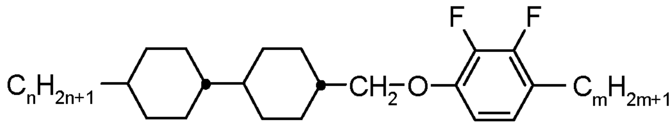

**CCOY-n-m**

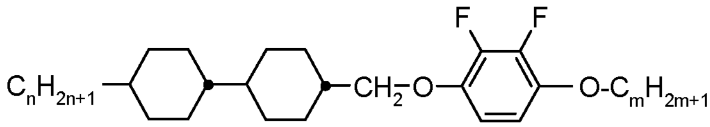

**CCOY-n-Om**

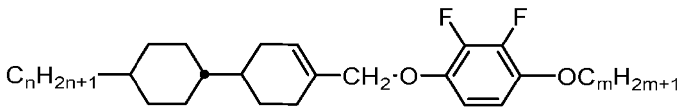

**CLOY-n-Om**

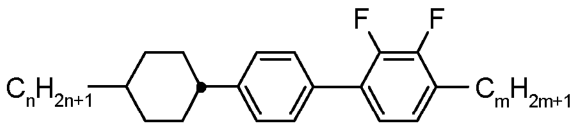

**CPY-n-m**

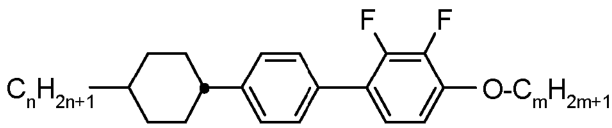

**CPY-n-Om**

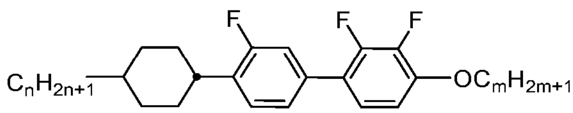

**CGIY-n-Om**

(continued)

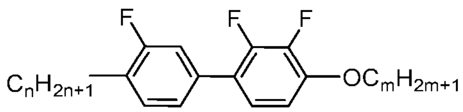

**GIY-n-Om**

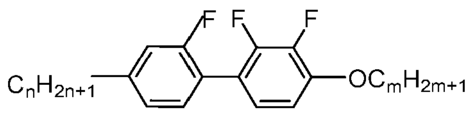

**GY-n-Om**

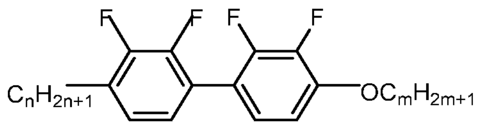

**YY-n-Om**

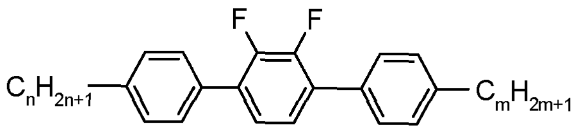

**PYP-n-m**

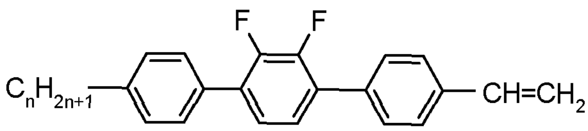

**PYP-n-V**

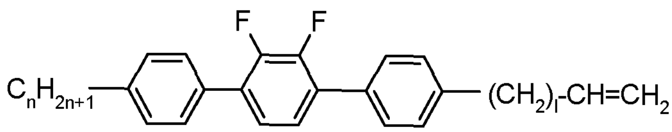

**PYP-n-IV**

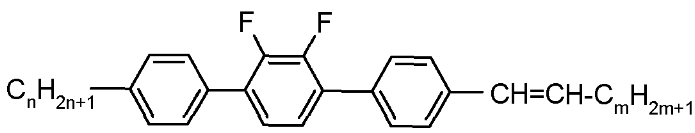

**PYP-n-Vm**

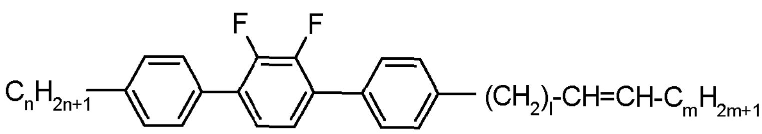

**PYP-n-IVm**

(continued)

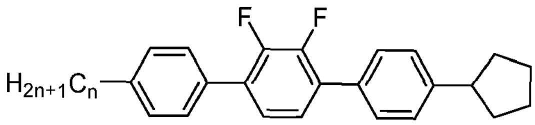

**PYP-n-(c5)**

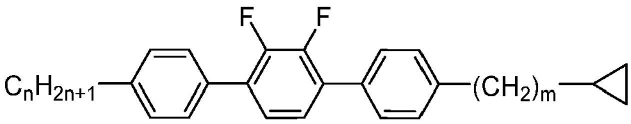

**PYP-n-m(c3)**

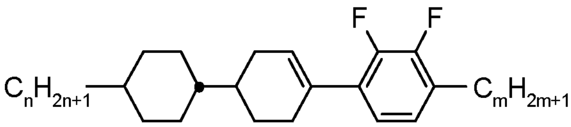

**CLY-n-m**

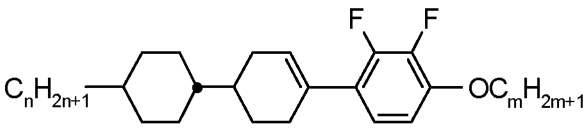

**CLY-n-Om**

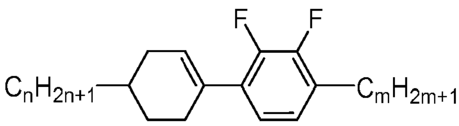

**LY-n-m**

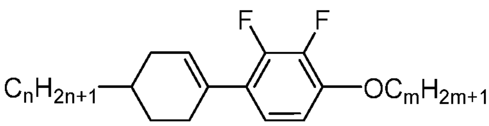

**LY-n-Om**

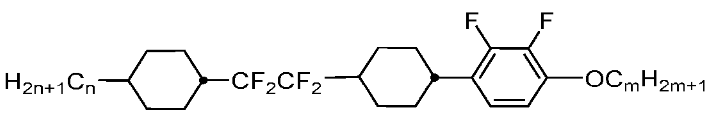

**CWCY-n-Om**

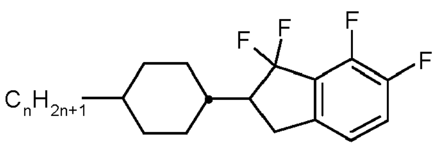

**CK-n-F**

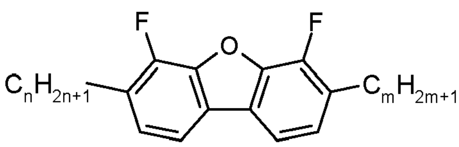

**B-n-m**

(continued)

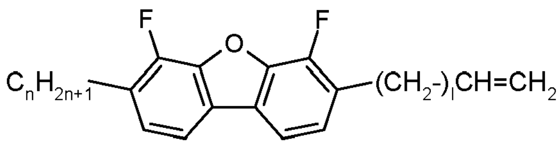

**B-n-IV**

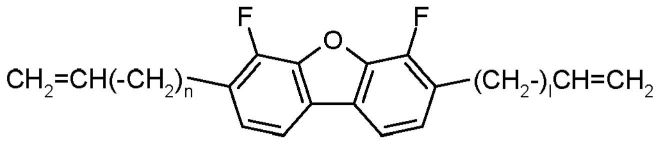

**B-Vn-IV**

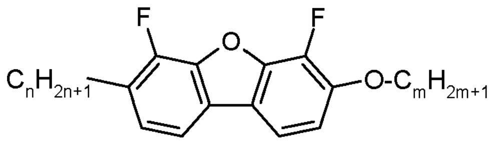

**B-n-Om**

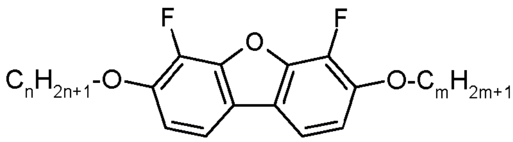

**B-nO-Om**

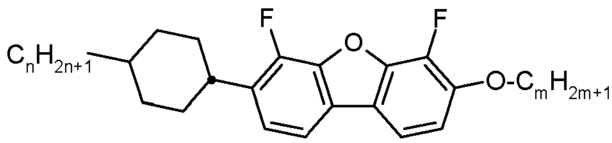

**CB-n-Om**

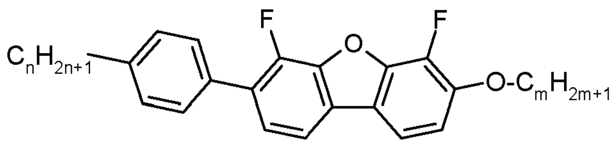

**PB-n-Om**

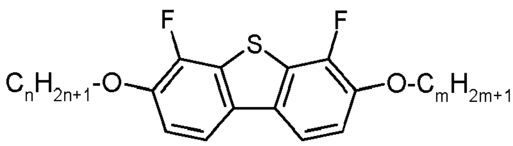

**B(S)-nO-Om**

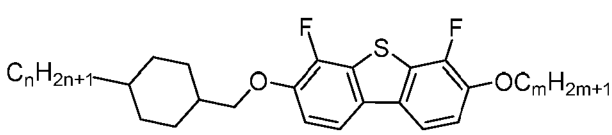

**COB(S)-n-Om**

(continued)

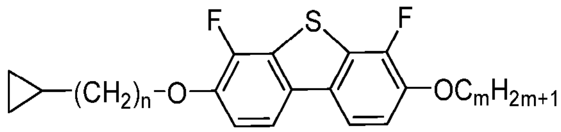

**B(S)-(c3)nO-Om**

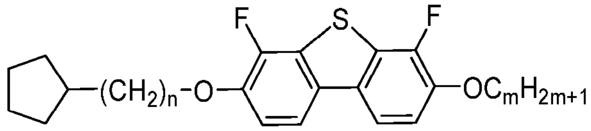

**B(S)-(c5)nO-Om**

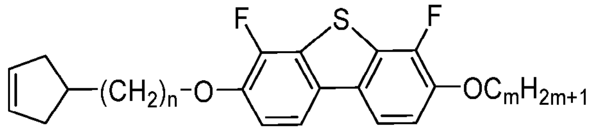

**B(S)-(c5-3en)nO-Om**

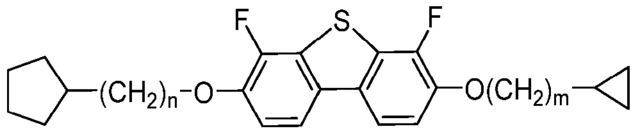

**B(S)-(c5)nO-Om(c3)**

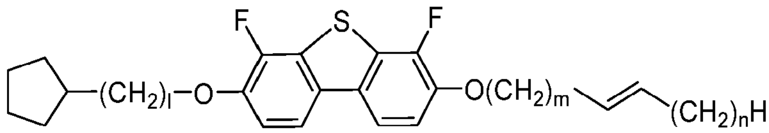

**B(S)-(c5)lO-OmVn**

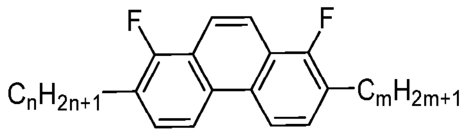

**B(P)-n-m**

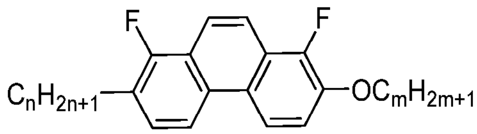

**B(P)-n-Om**

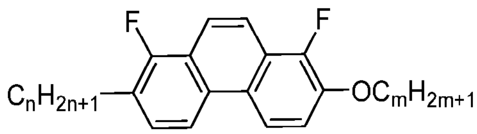

**B(P)-n-Om**

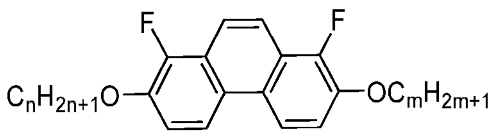

**B(P)-nO-Om**

(continued)

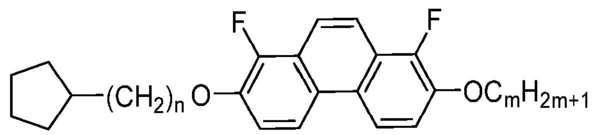

**B(P)-(c5)nO-Om**

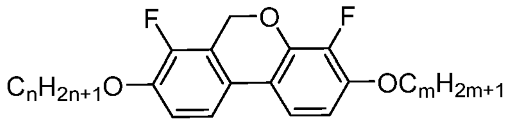

**B(A)-nO-Om**

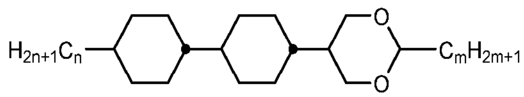

**CCD-n-m**

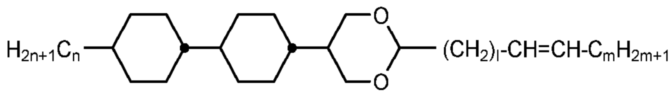

**CCD-n-IVm**

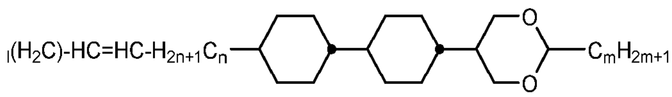

**CCD-nVI-m**

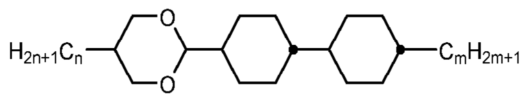

**DCC-n-m**

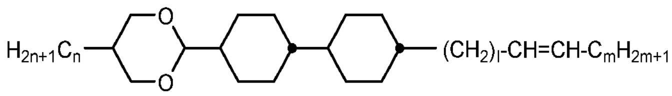

**DCC-n-IVm**

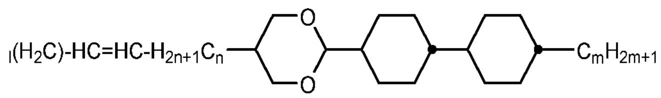

**DCC-nVI-m**

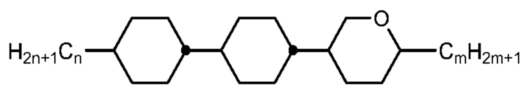

**CCA-n-m**

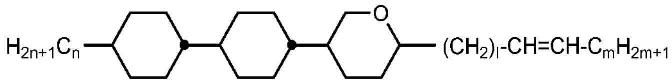

**CCA-n-IVm**

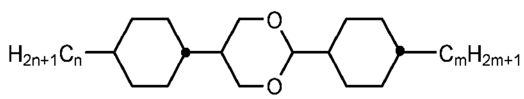

**CDC-n-m**

(continued)

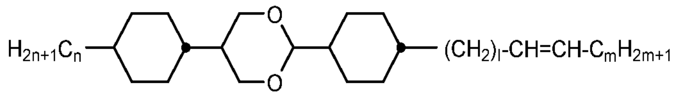

**CDC-n-IVm**

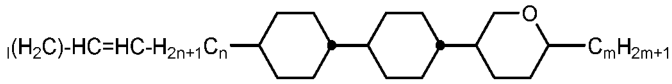

**CCA-nVI-m**

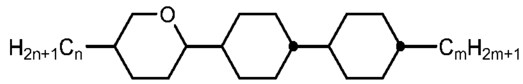

**ACC-n-m**

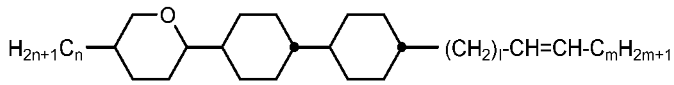

**ACC-n-IVm**

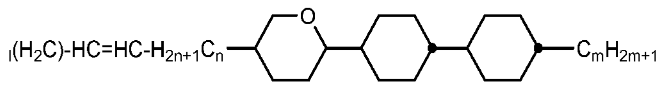

**ACC-nVI-m**

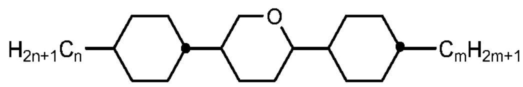

**CAC-n-m**

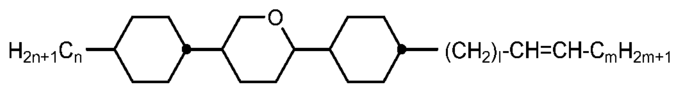

**CAC-n-IVm**

In a preferred embodiment of the present invention, the LC media according to the invention comprise one or more compounds selected from the group consisting of compounds from Table B.

**Table C**

Table C shows possible chiral dopants which can be added to the LC media according to the invention.

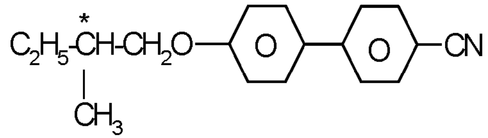

C 15

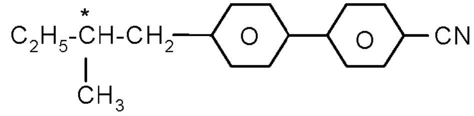

CB 15

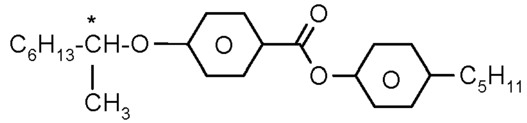

CM 21

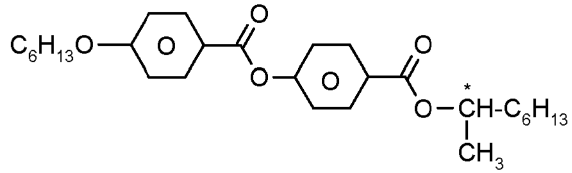

R/S-811

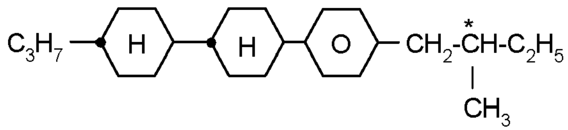

CM 44

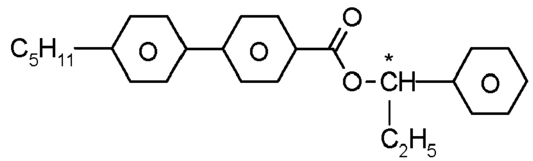

CM 45

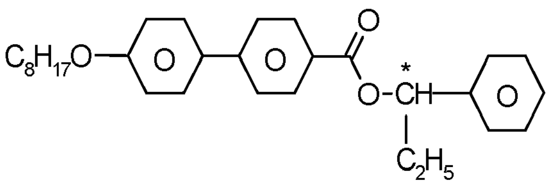

CM 47

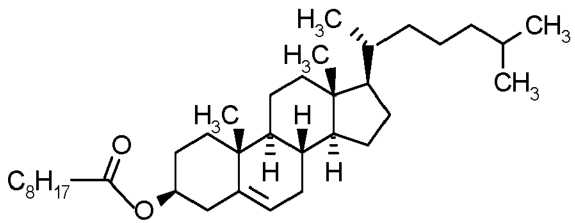

CN

(continued)

Table C shows possible chiral dopants which can be added to the LC media according to the invention.

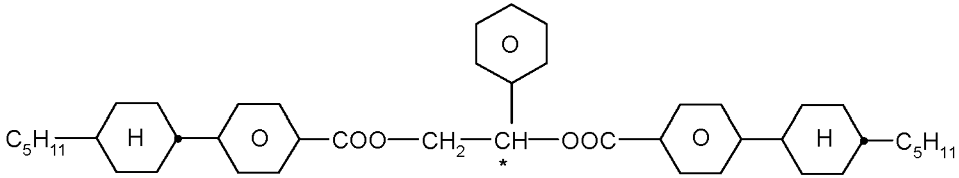

R/S-1011

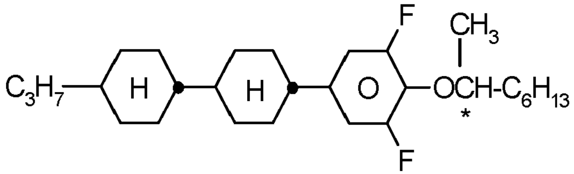

R/S-2011

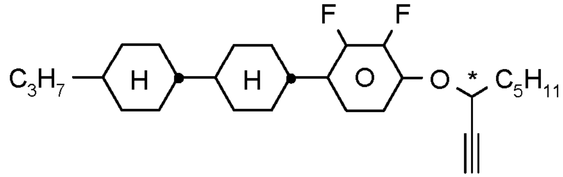

R/S-3011

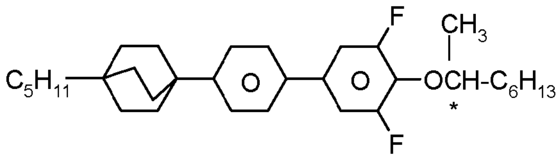

R/S-4011

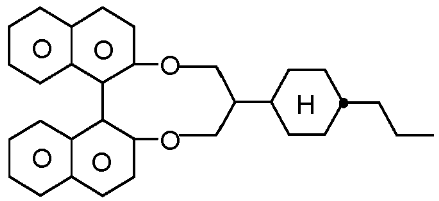

R/S-5011

The LC media preferably comprise 0 to 10% by weight, in particular 0.01 to 5% by weight, particularly preferably 0.1 to 3% by weight, of dopants. The LC media preferably comprise one or more dopants selected from the group consisting of compounds from Table C.

**Table D**

Table D shows possible stabilisers which can be added to the LC media according to the invention. Therein n denotes an integer from 1 to 12, preferably 1, 2, 3, 4, 5, 6, 7 or 8, and terminal methyl groups are not shown.

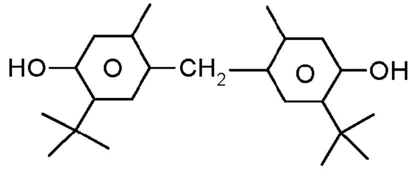

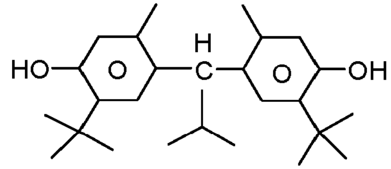

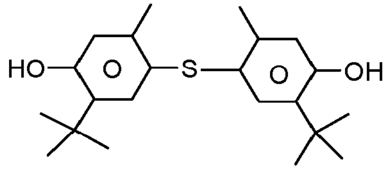

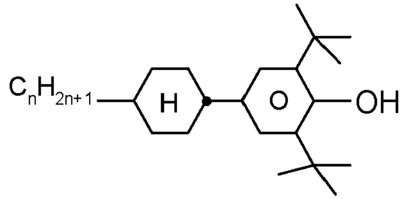

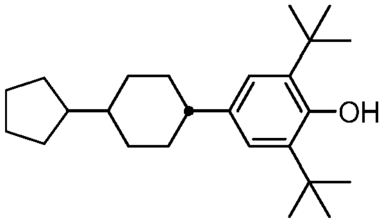

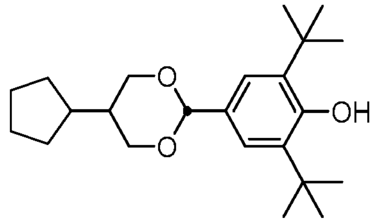

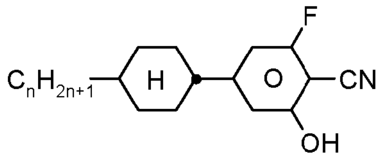

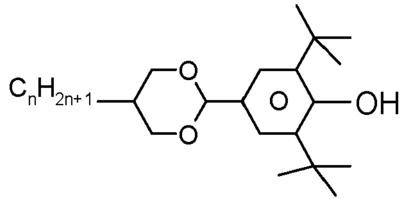

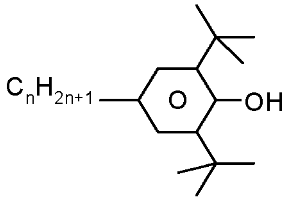

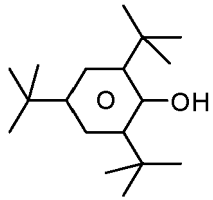

(continued)

Table D shows possible stabilisers which can be added to the LC media according to the invention. Therein n denotes an integer from 1 to 12, preferably 1, 2, 3, 4, 5, 6, 7 or 8, and terminal methyl groups are not shown.

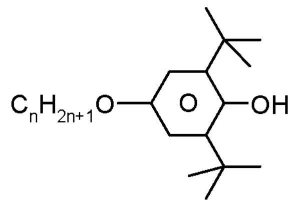

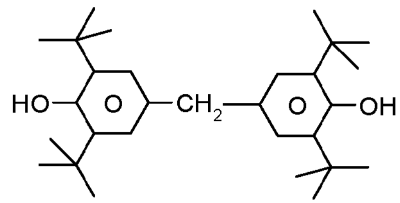

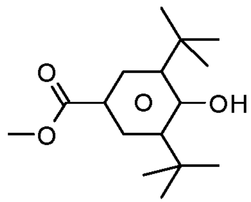

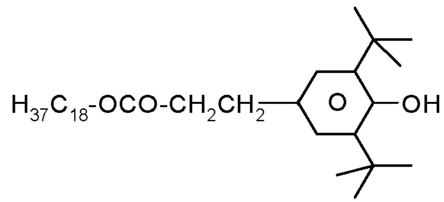

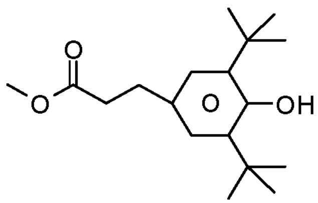

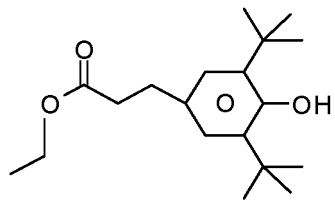

(continued)

Table D shows possible stabilisers which can be added to the LC media according to the invention. Therein n denotes an integer from 1 to 12, preferably 1, 2, 3, 4, 5, 6, 7 or 8, and terminal methyl groups are not shown.

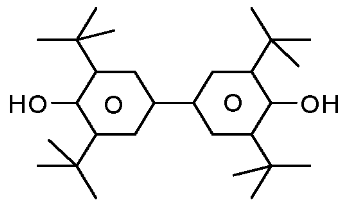

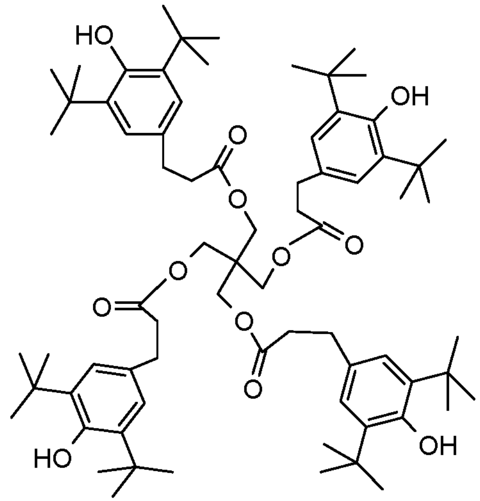

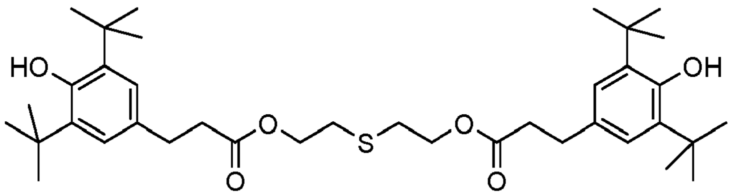

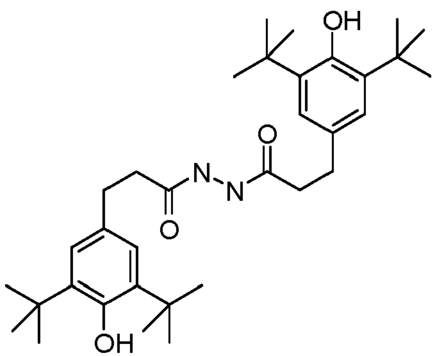

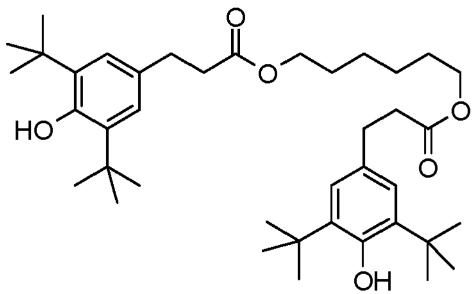

(continued)

Table D shows possible stabilisers which can be added to the LC media according to the invention. Therein n denotes an integer from 1 to 12, preferably 1, 2, 3, 4, 5, 6, 7 or 8, and terminal methyl groups are not shown.

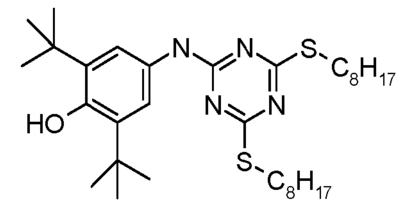

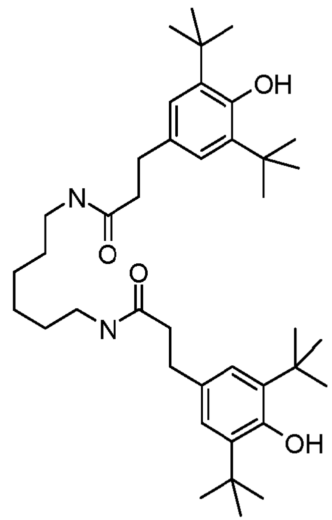

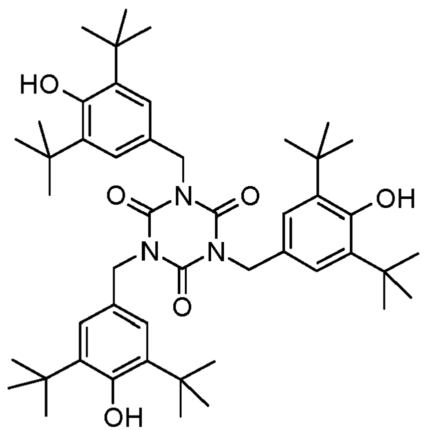

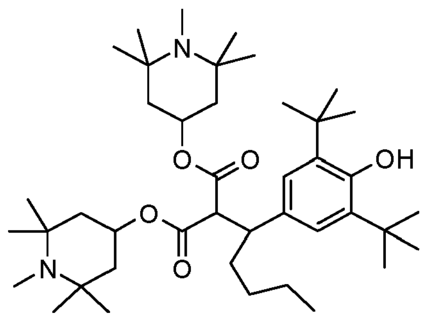

(continued)

Table D shows possible stabilisers which can be added to the LC media according to the invention. Therein n denotes an integer from 1 to 12, preferably 1, 2, 3, 4, 5, 6, 7 or 8, and terminal methyl groups are not shown.

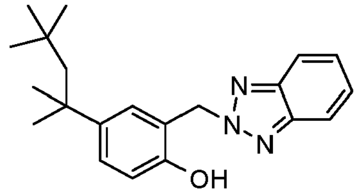

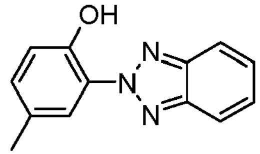

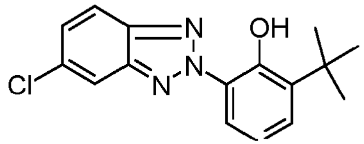

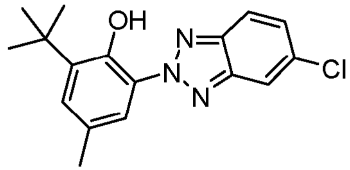

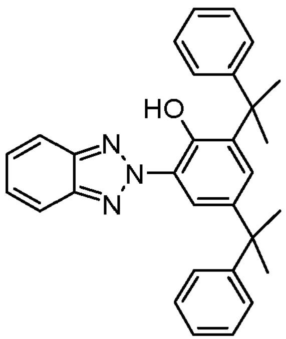

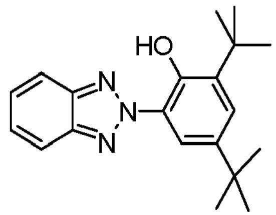

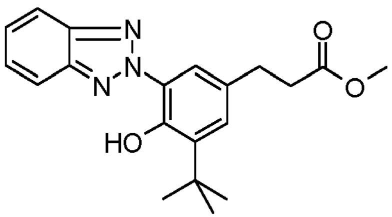

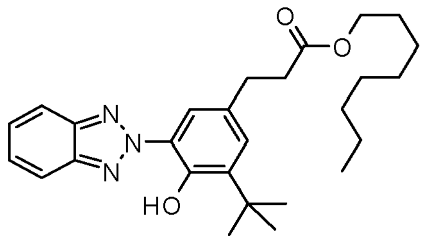

(continued)

Table D shows possible stabilisers which can be added to the LC media according to the invention. Therein n denotes an integer from 1 to 12, preferably 1, 2, 3, 4, 5, 6, 7 or 8, and terminal methyl groups are not shown.

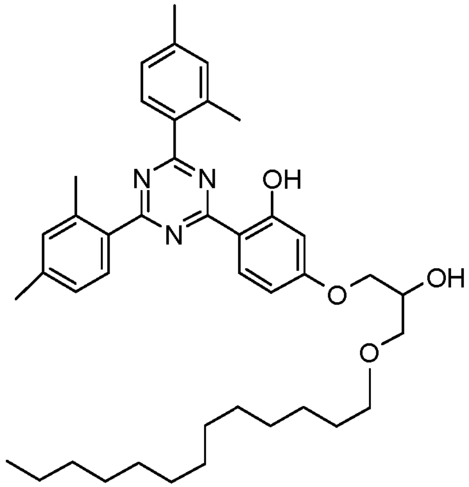

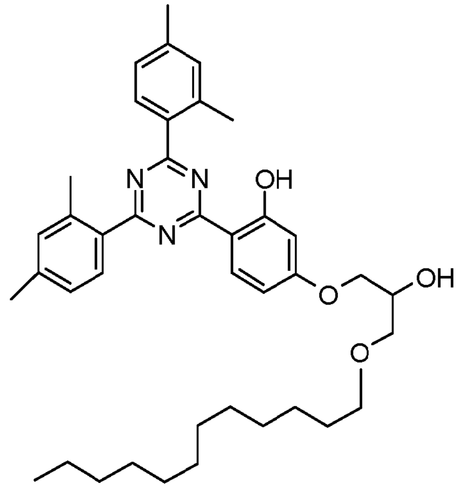

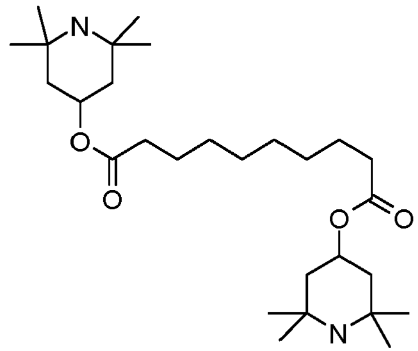

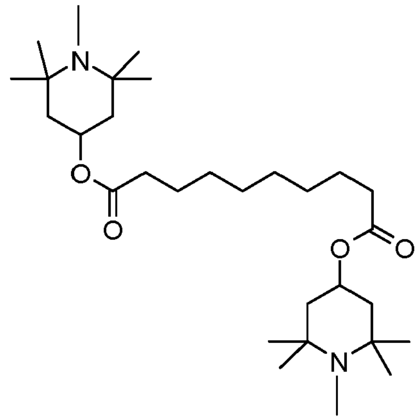

(continued)

Table D shows possible stabilisers which can be added to the LC media according to the invention. Therein n denotes an integer from 1 to 12, preferably 1, 2, 3, 4, 5, 6, 7 or 8, and terminal methyl groups are not shown.

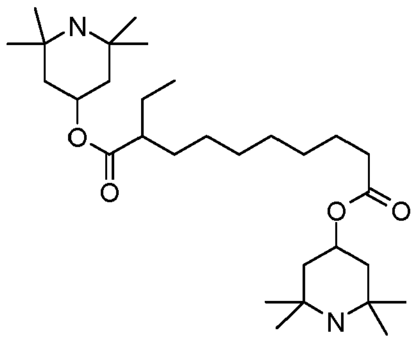

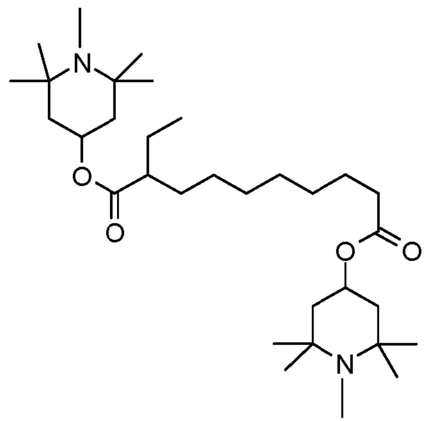

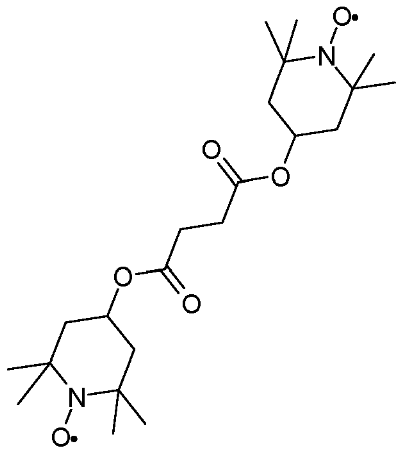

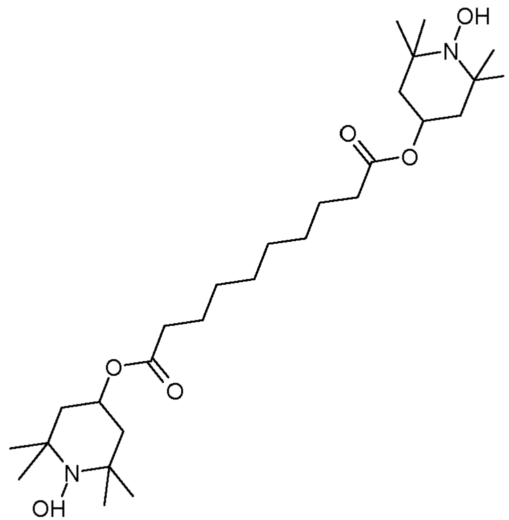

(continued)

Table D shows possible stabilisers which can be added to the LC media according to the invention. Therein n denotes an integer from 1 to 12, preferably 1, 2, 3, 4, 5, 6, 7 or 8, and terminal methyl groups are not shown.

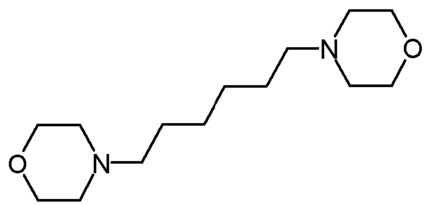

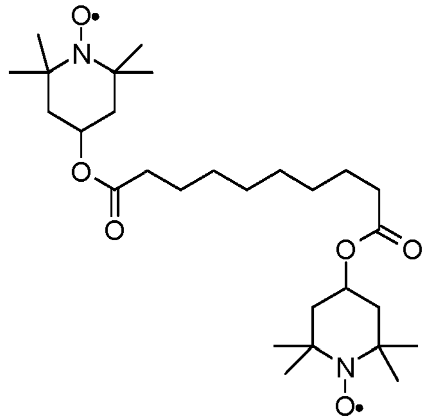

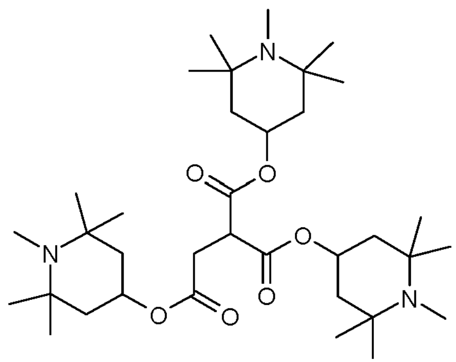

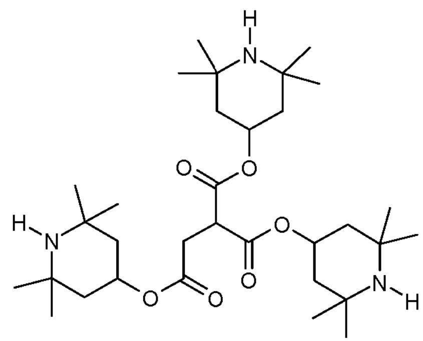

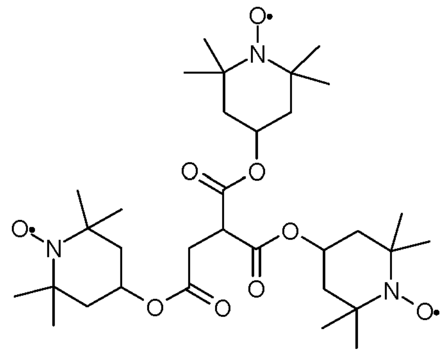

(continued)

Table D shows possible stabilisers which can be added to the LC media according to the invention. Therein n denotes an integer from 1 to 12, preferably 1, 2, 3, 4, 5, 6, 7 or 8, and terminal methyl groups are not shown.

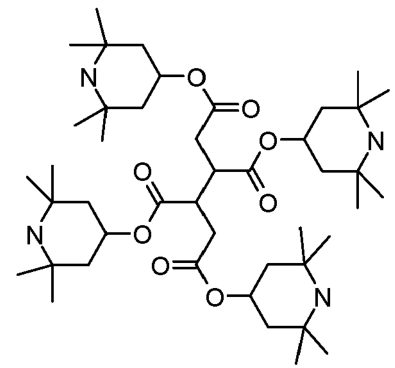

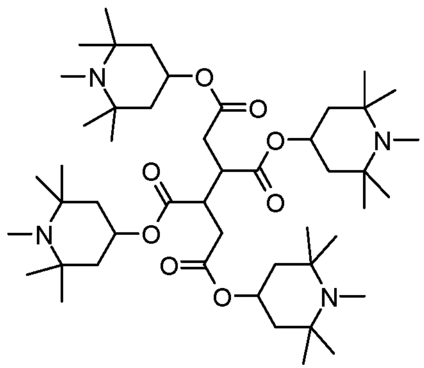

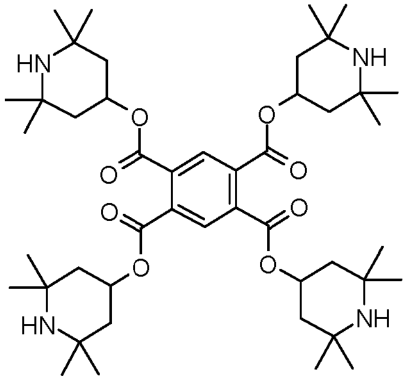

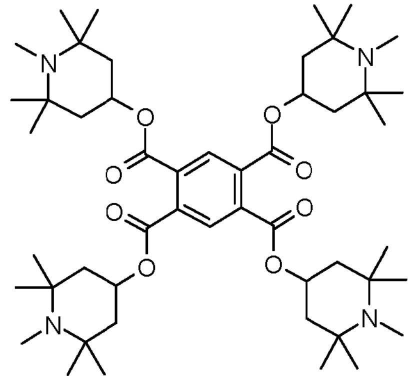

(continued)

Table D shows possible stabilisers which can be added to the LC media according to the invention. Therein n denotes an integer from 1 to 12, preferably 1, 2, 3, 4, 5, 6, 7 or 8, and terminal methyl groups are not shown.

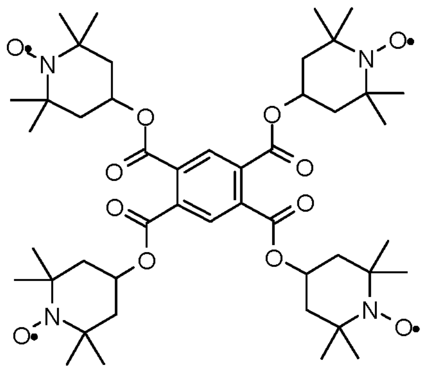

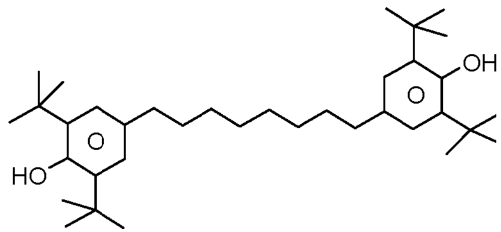

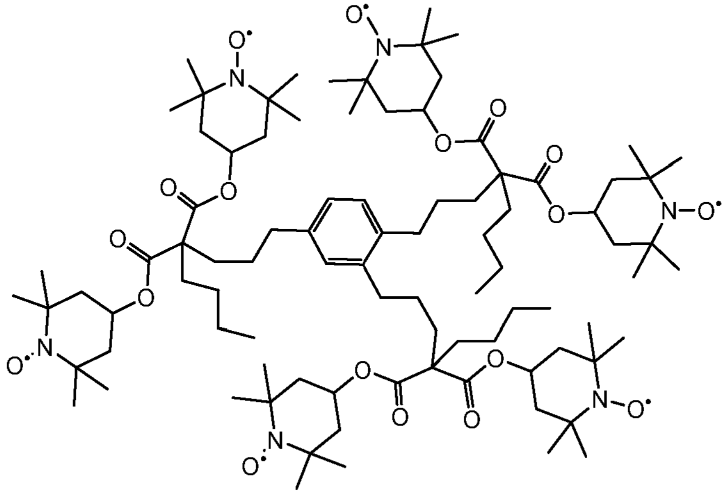

The LC media preferably comprise 0 to 10% by weight, in particular 1 ppm to 5% by weight, particularly preferably 1 ppm to 1% by weight, of stabilisers. The LC media preferably comprise one or more stabilisers selected from the group consisting of compounds from Table D.

**Table E**

Table E shows illustrative reactive mesogenic compounds which can be used in the LC media in accordance with the present invention.

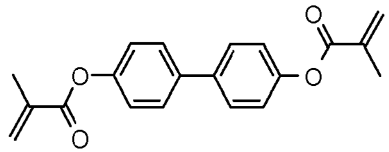

RM-1

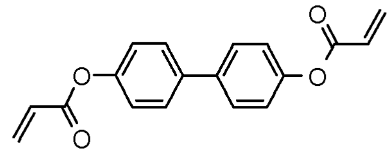

RM-2

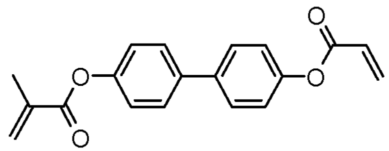

RM-3

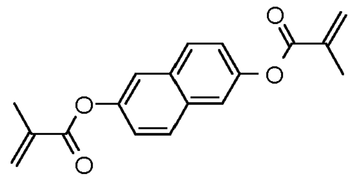

RM-4

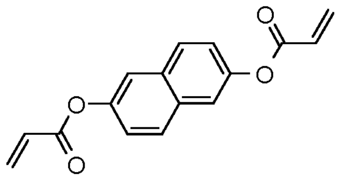

RM-5

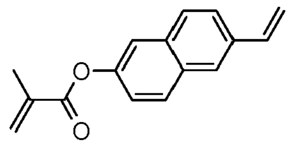

RM-6

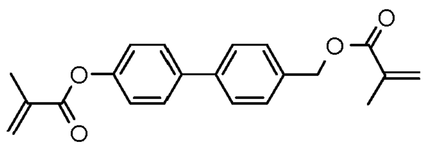

RM-7

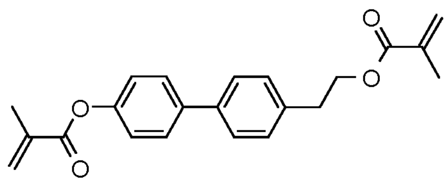

RM-8

(continued)

Table E shows illustrative reactive mesogenic compounds which can be used in the LC media in accordance with the present invention.

| | |
|---|---|
| 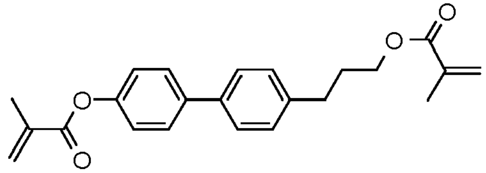 RM-9 | 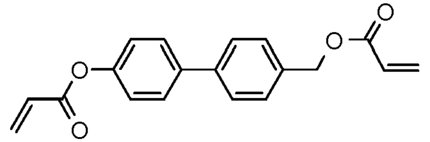 RM-10 |
| 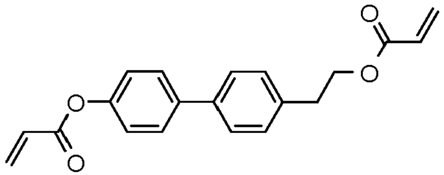 RM-11 | 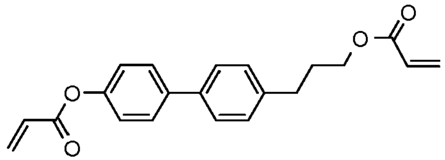 RM-12 |
| 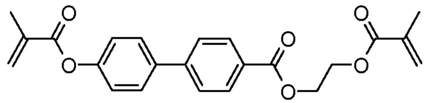 RM-13 | 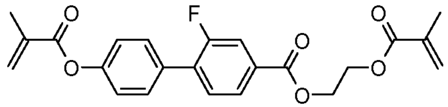 RM-14 |
| 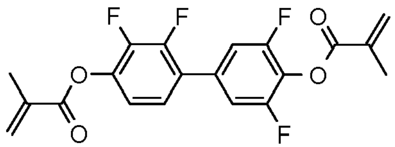 RM-15 | 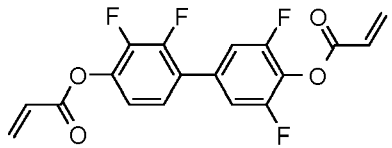 RM-16 |

Table E shows illustrative reactive mesogenic compounds which can be used in the LC media in accordance with the present invention.

(continued)

| | |
|---|---|
| 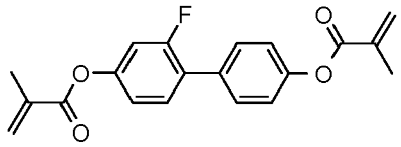 RM-17 | 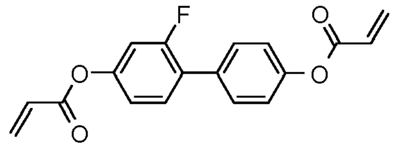 RM-18 |
| 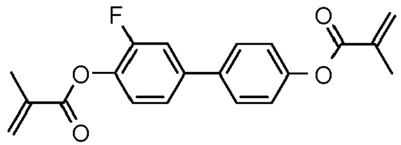 RM-19 | 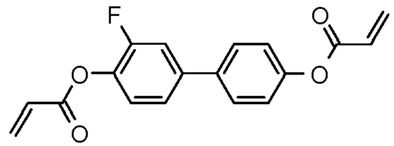 RM-20 |
| 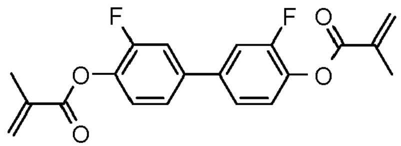 RM-21 | 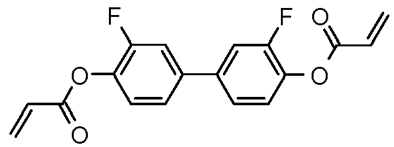 RM-22 |
| 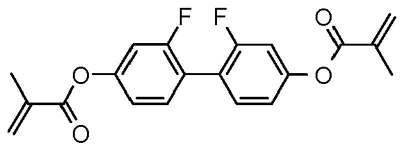 RM-23 | 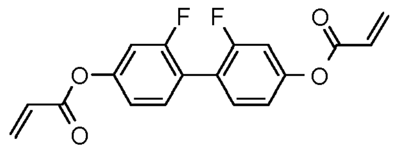 RM-24 |

(continued)

Table E shows illustrative reactive mesogenic compounds which can be used in the LC media in accordance with the present invention.

| | |
|---|---|
| 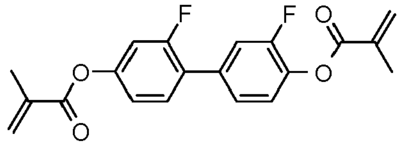<br>RM-25 | 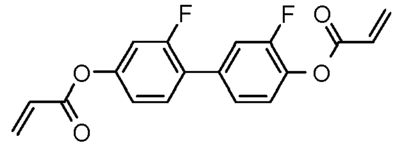<br>RM-26 |
| 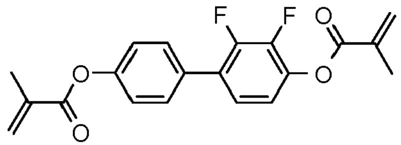<br>RM-27 | 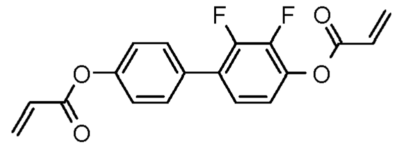<br>RM-28 |
| 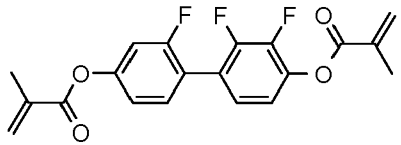<br>RM-29 | 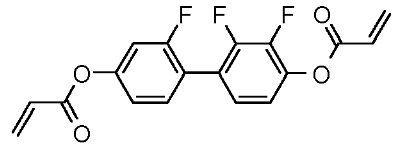<br>RM-30 |
| 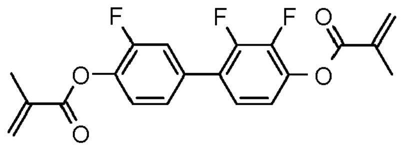<br>RM-31 | 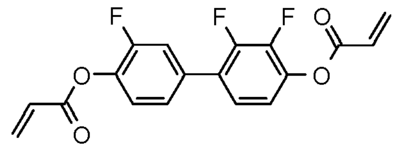<br>RM-32 |

(continued)

Table E shows illustrative reactive mesogenic compounds which can be used in the LC media in accordance with the present invention.

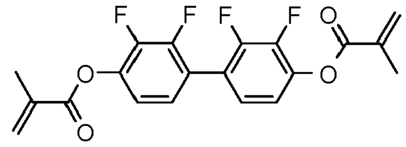

RM-33

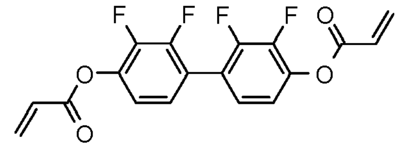

RM-34

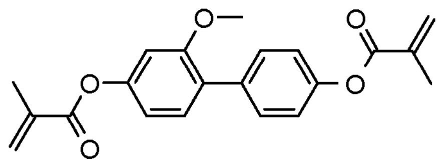

RM-35

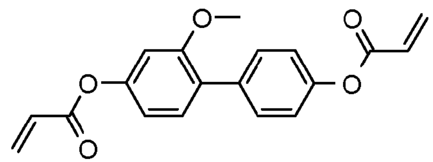

RM-36

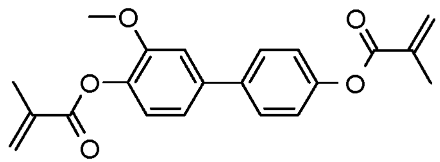

RM-37

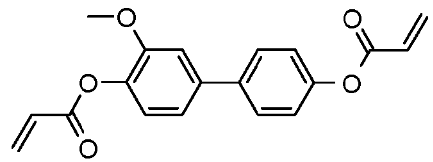

RM-38

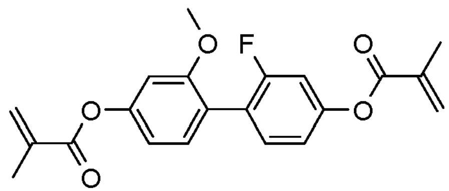

RM-39

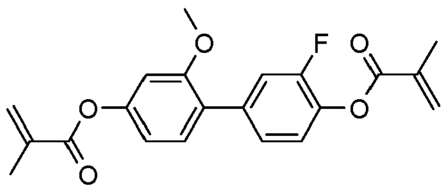

RM-40

Table E shows illustrative reactive mesogenic compounds which can be used in the LC media in accordance with the present invention.

(continued)

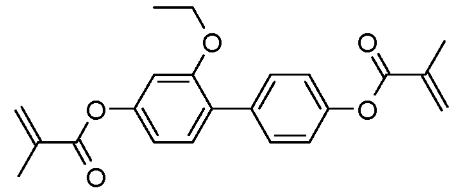

RM-41

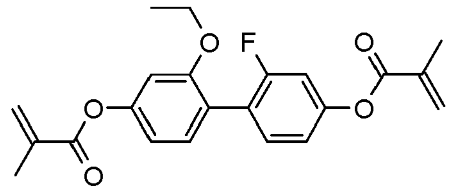

RM-42

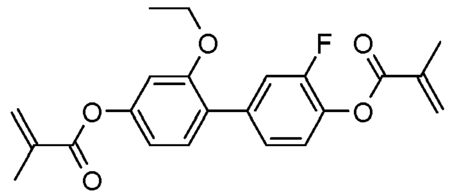

RM-43

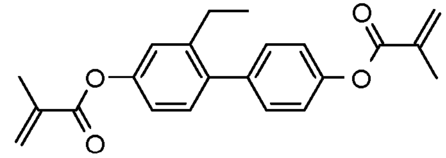

RM-44

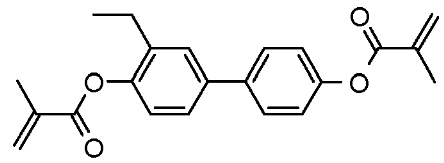

RM-45

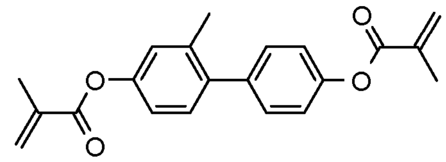

RM-46

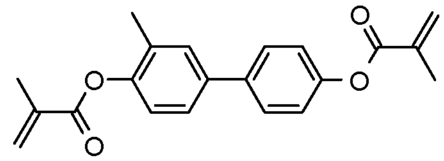

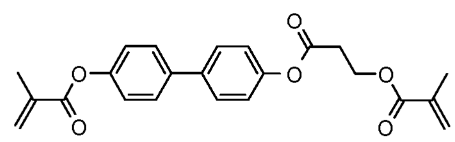

(continued)

Table E shows illustrative reactive mesogenic compounds which can be used in the LC media in accordance with the present invention.

| | |
|---|---|
| RM-47<br>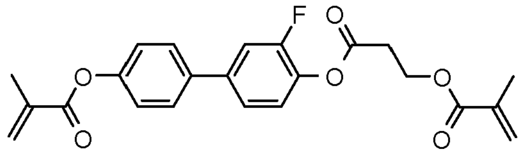 | RM-48 |
| RM-49<br>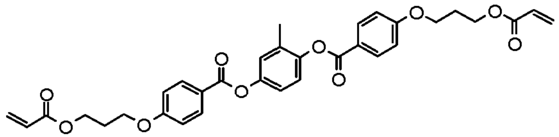 | |
| RM-50<br>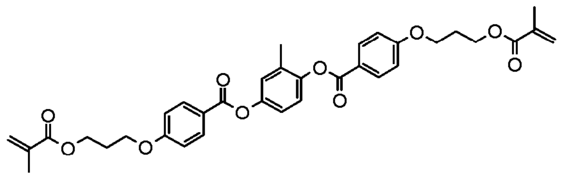 | |
| RM-51<br>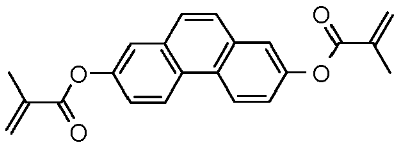 | 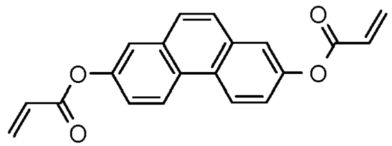 |
| RM-52 | RM-53 |

(continued)

Table E shows illustrative reactive mesogenic compounds which can be used in the LC media in accordance with the present invention.

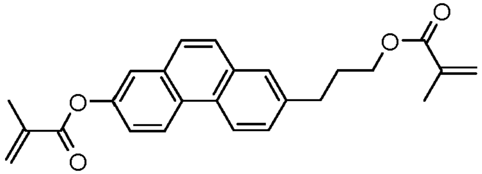

RM-54

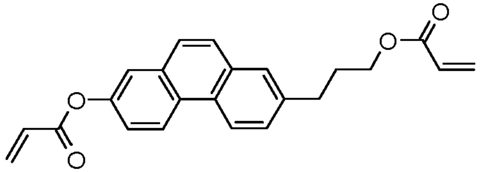

RM-55

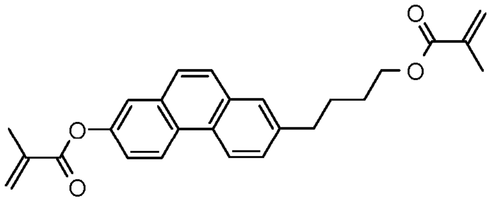

RM-56

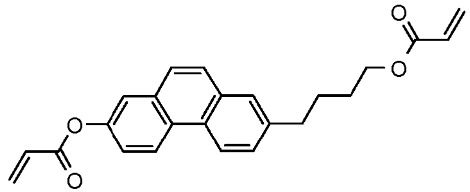

RM-57

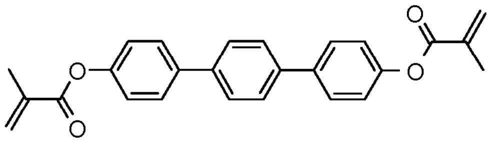

RM-58

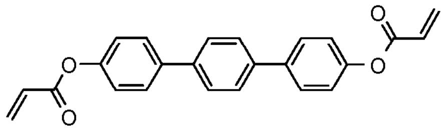

RM-59

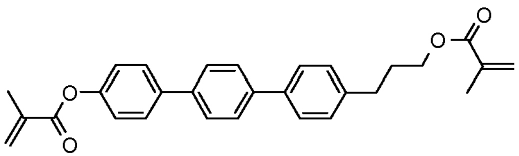

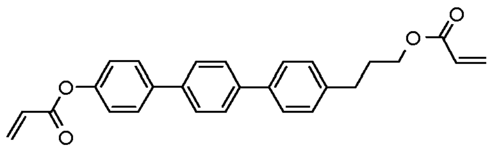

(continued)

Table E shows illustrative reactive mesogenic compounds which can be used in the LC media in accordance with the present invention.

| | |
|---|---|
| RM-60 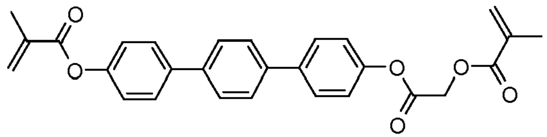 | RM-61 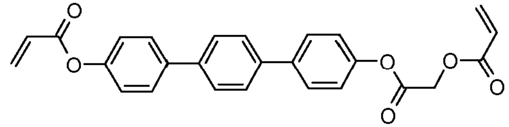 |
| RM-62 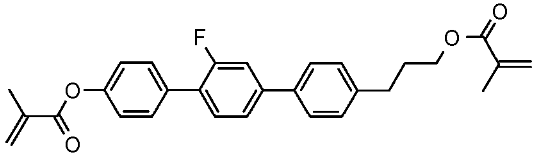 | RM-63 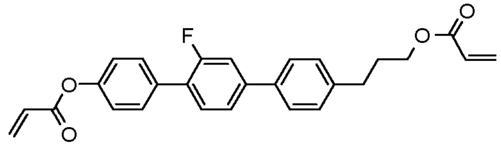 |
| RM-64 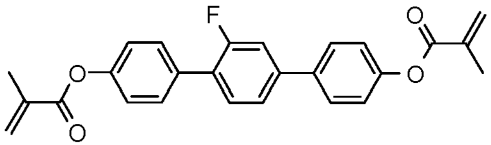 | RM-65 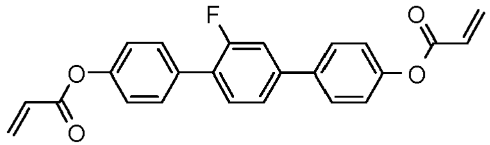 |
| RM-66 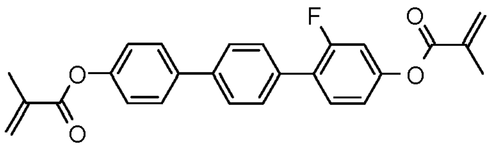 | RM-67 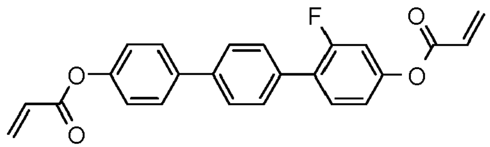 |
| RM-68 | RM-69 |

(continued)

Table E shows illustrative reactive mesogenic compounds which can be used in the LC media in accordance with the present invention.

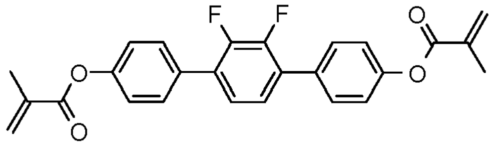

RM-70

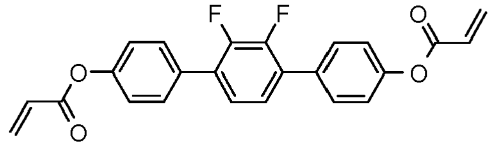

RM-71

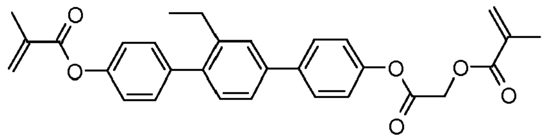

RM-72

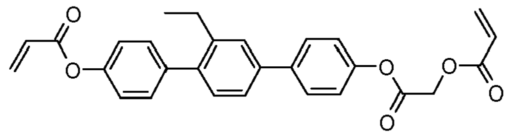

RM-73

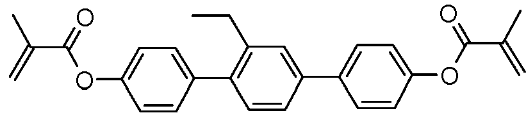

RM-74

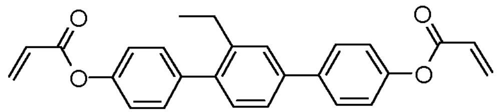

RM-75

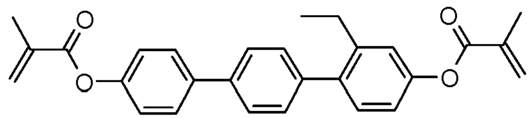

RM-76

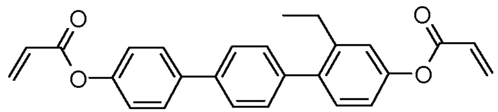

RM-77

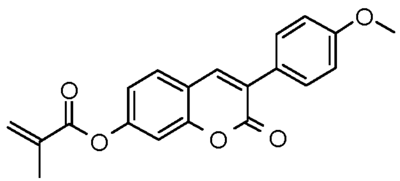

RM-78

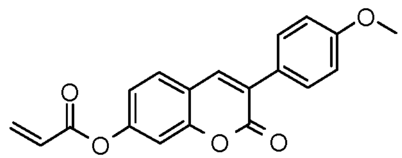

RM-79

(continued)

Table E shows illustrative reactive mesogenic compounds which can be used in the LC media in accordance with the present invention.

| | |
|---|---|
| 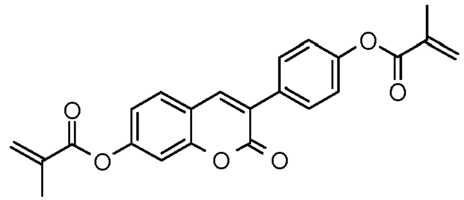 RM-80 | 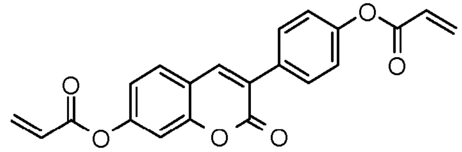 RM-81 |
| 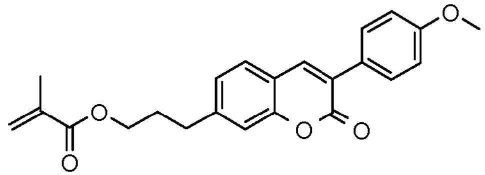 RM-82 | 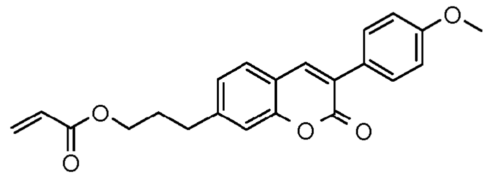 RM-83 |
| 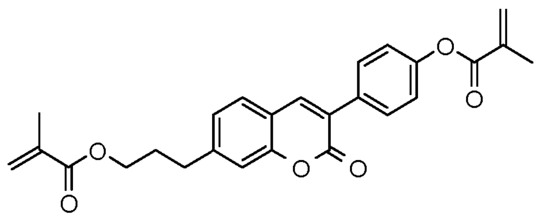 RM-84 | 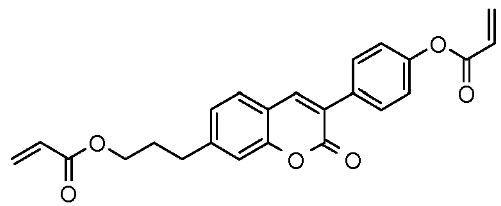 RM-85 |
| 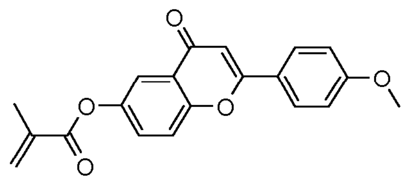 RM-86 | 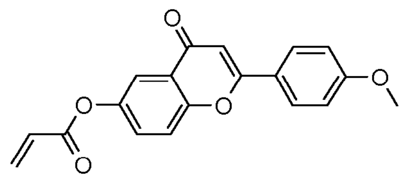 RM-87 |

(continued)

Table E shows illustrative reactive mesogenic compounds which can be used in the LC media in accordance with the present invention.

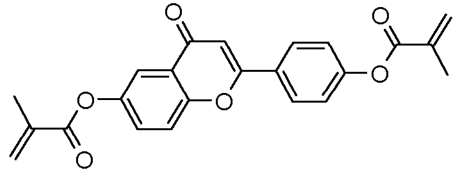

RM-88

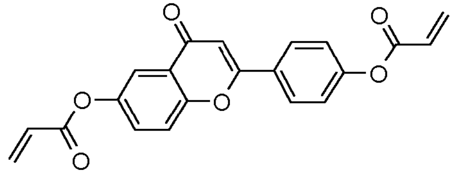

RM-89

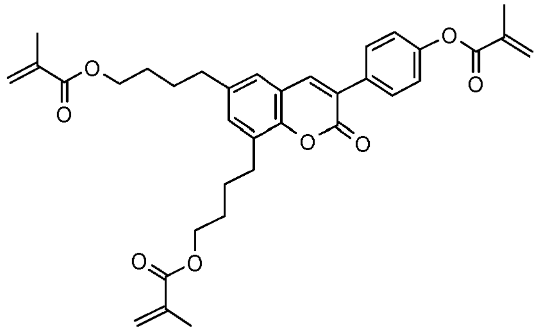

RM-90

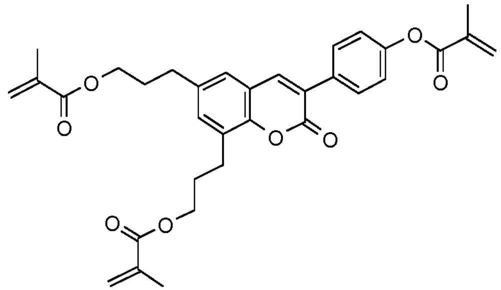

RM-91

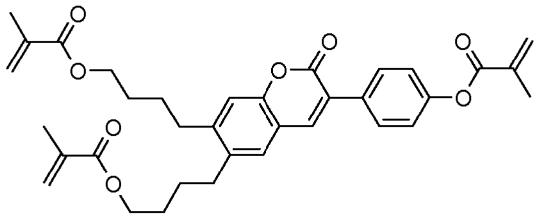

RM-92

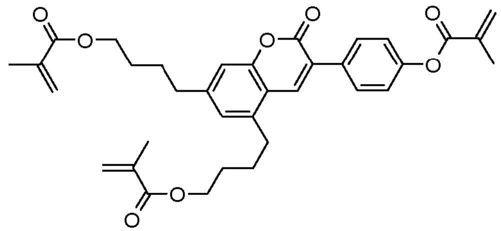

RM-93

(continued)

Table E shows illustrative reactive mesogenic compounds which can be used in the LC media in accordance with the present invention.

| | |
|---|---|
| 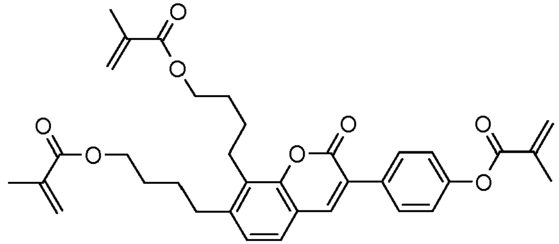 | 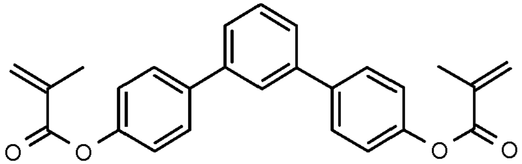 |
| RM-94 | RM-95 |
| 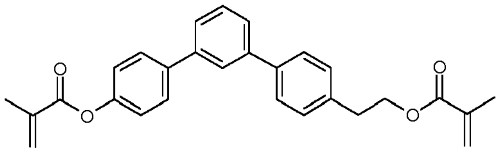 | 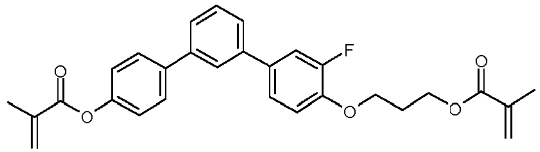 |
| RM-96 | RM-97 |
| 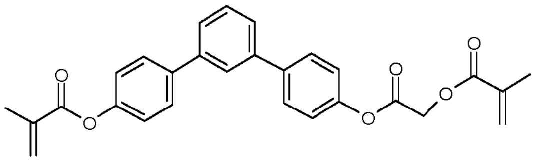 | 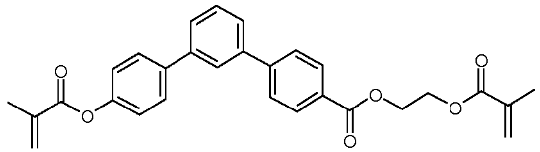 |
| RM-98 | RM-99 |
| 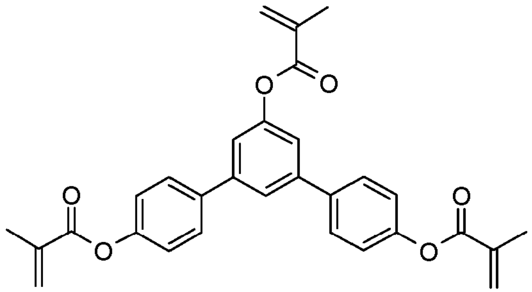 | |
| RM-100 | |

(continued)

Table E shows illustrative reactive mesogenic compounds which can be used in the LC media in accordance with the present invention.

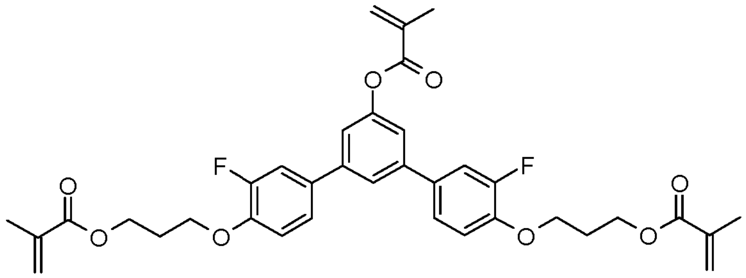

RM-101

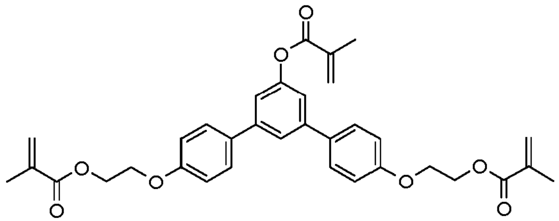

RM-102

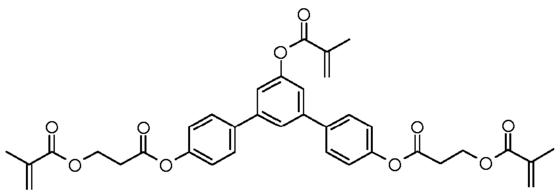

RM-103

Table E shows illustrative reactive mesogenic compounds which can be used in the LC media in accordance with the present invention.

(continued)

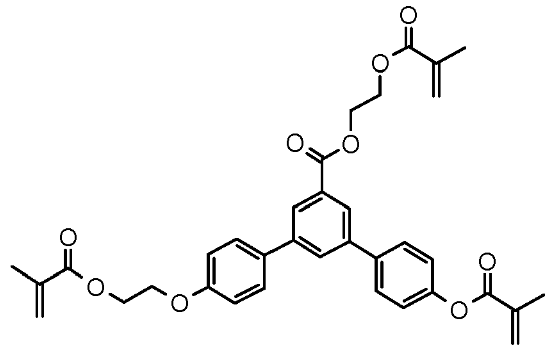

RM-104

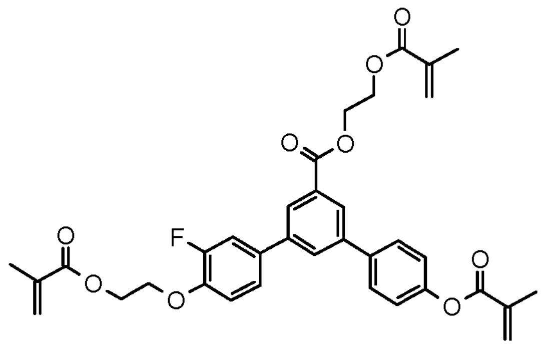

RM-105

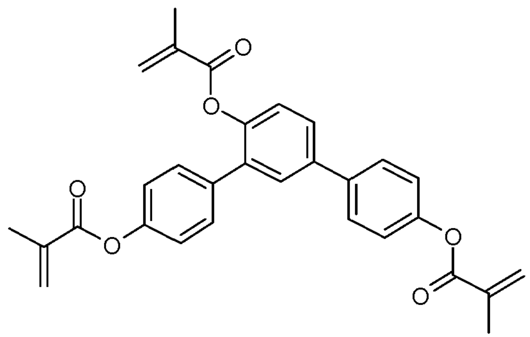

RM-106

(continued)

Table E shows illustrative reactive mesogenic compounds which can be used in the LC media in accordance with the present invention.

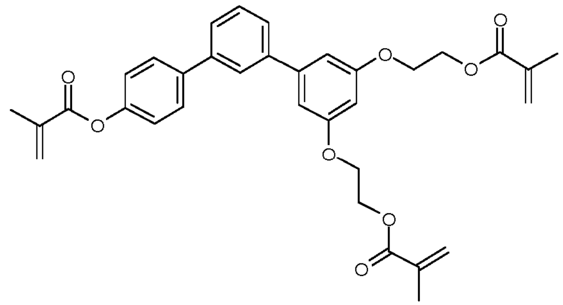

RM-107

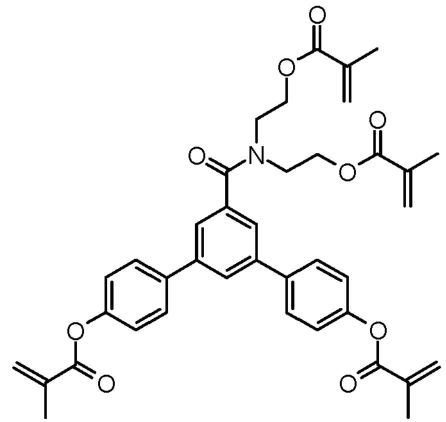

RM-108

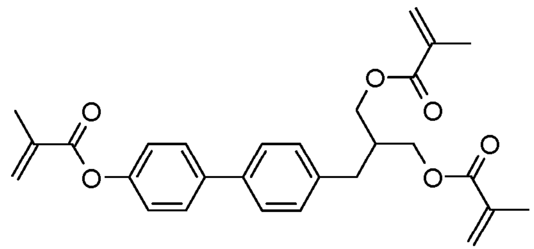

RM-109

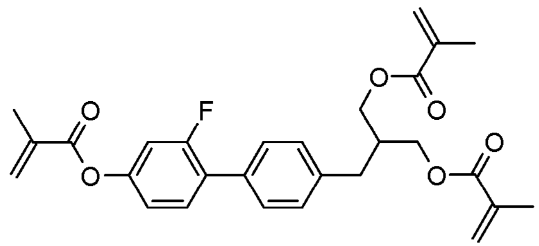

RM-110

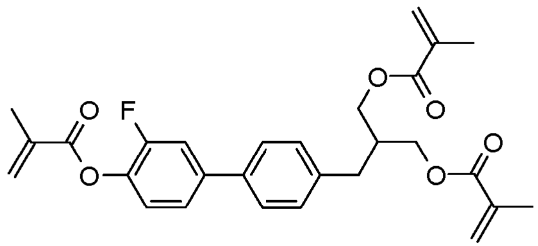

RM-111

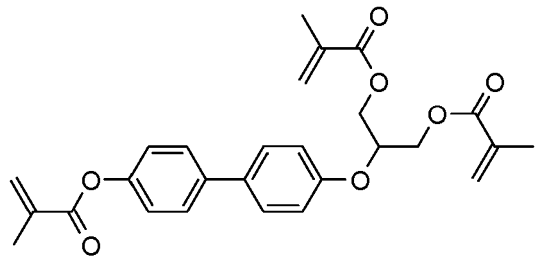

RM-112

(continued)

Table E shows illustrative reactive mesogenic compounds which can be used in the LC media in accordance with the present invention.

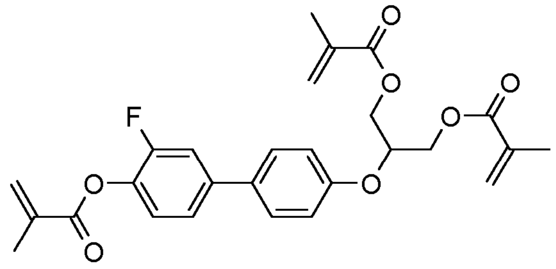

RM-113

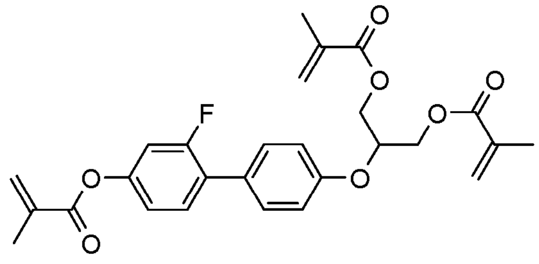

RM-114

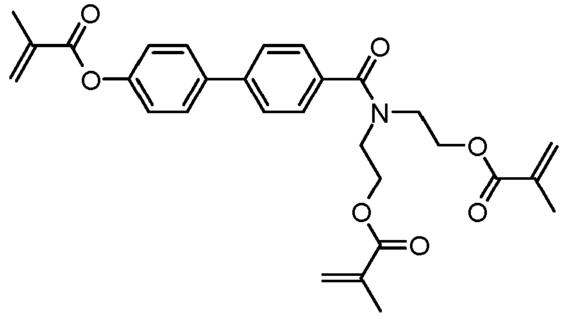

RM-115

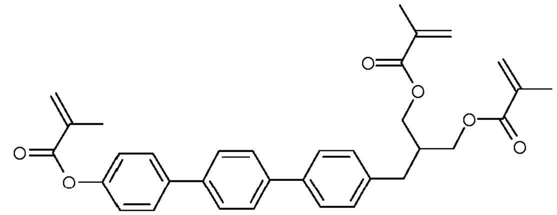

RM-116

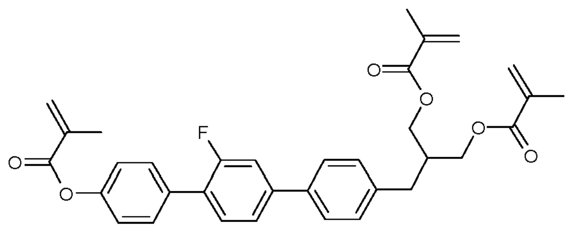

RM-117

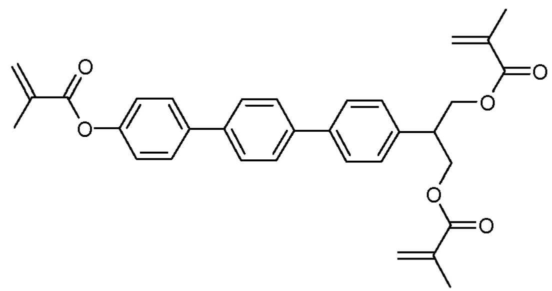

RM-118

(continued)

Table E shows illustrative reactive mesogenic compounds which can be used in the LC media in accordance with the present invention.

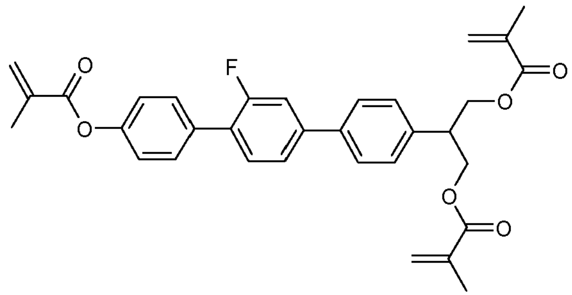

RM-119

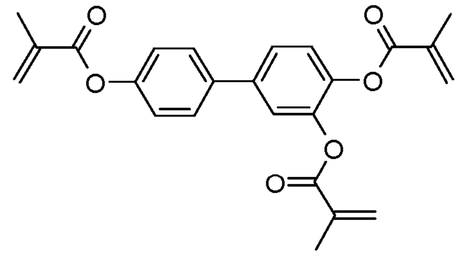

RM-120

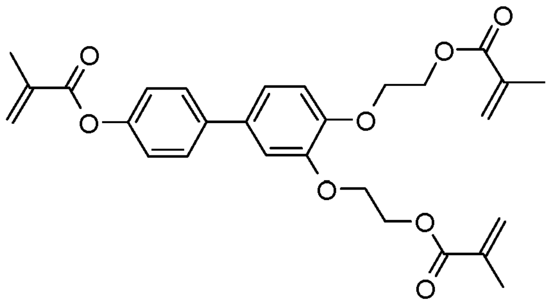

RM-121

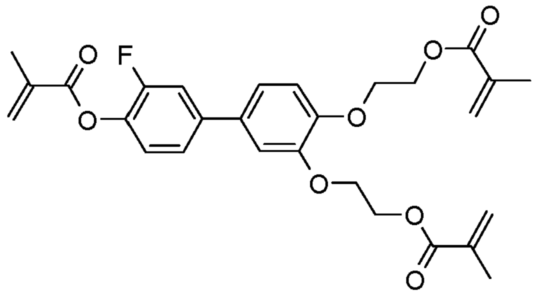

RM-122

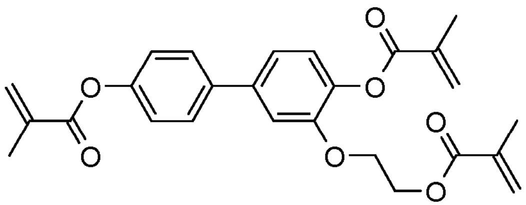

RM-123

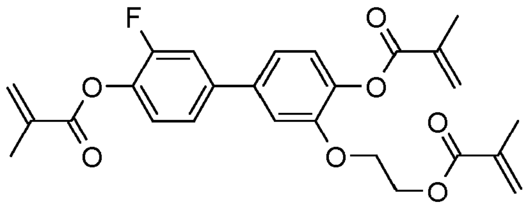

RM-124

Table E shows illustrative reactive mesogenic compounds which can be used in the LC media in accordance with the present invention.

(continued)

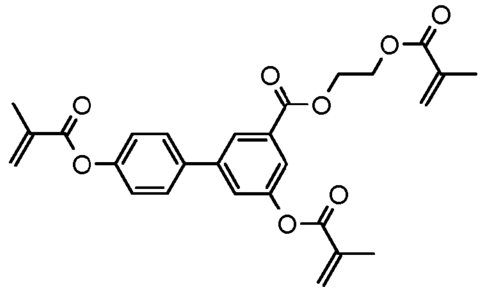

RM-125

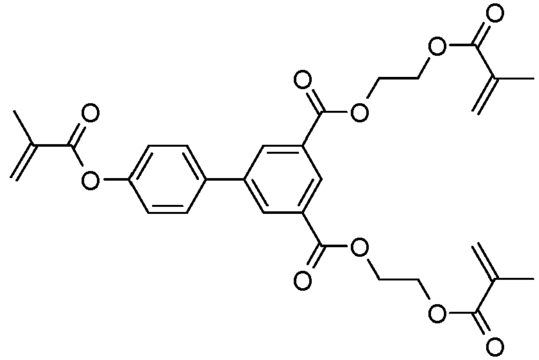

RM-126

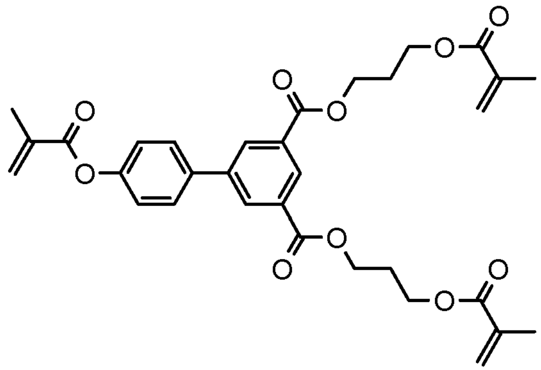

RM-127

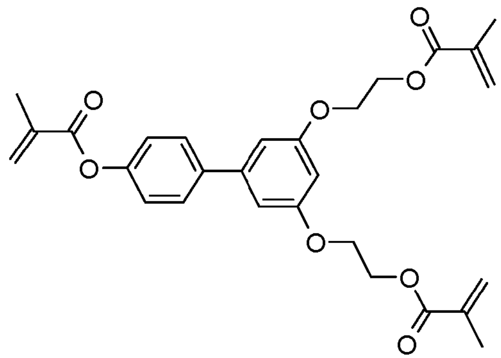

RM-128

(continued)

Table E shows illustrative reactive mesogenic compounds which can be used in the LC media in accordance with the present invention.

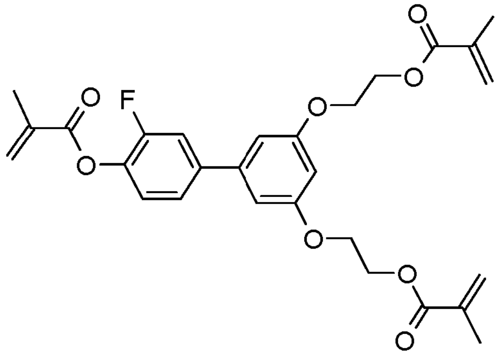

RM-129

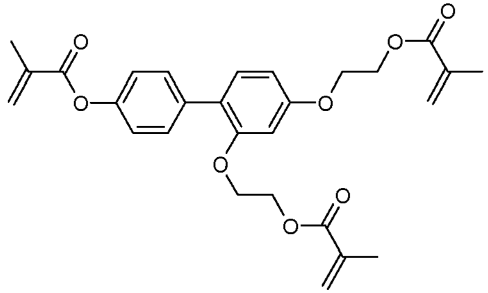

RM-130

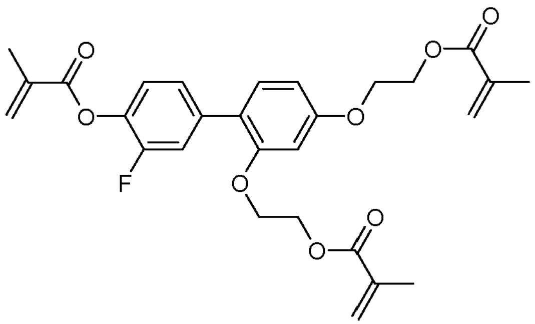

RM-131

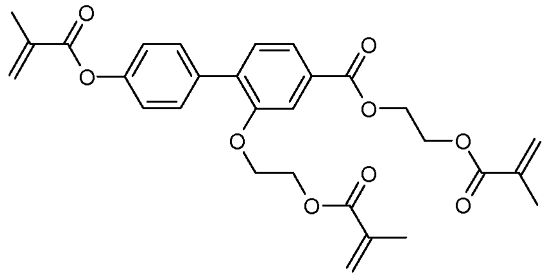

RM-132

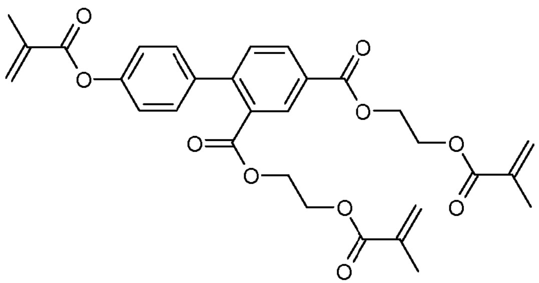

RM-133

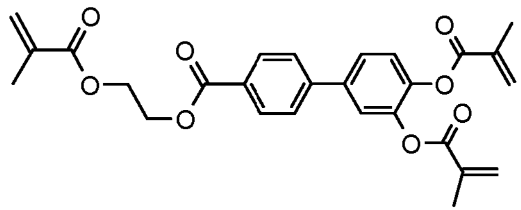

RM-134

Table E shows illustrative reactive mesogenic compounds which can be used in the LC media in accordance with the present invention.

(continued)

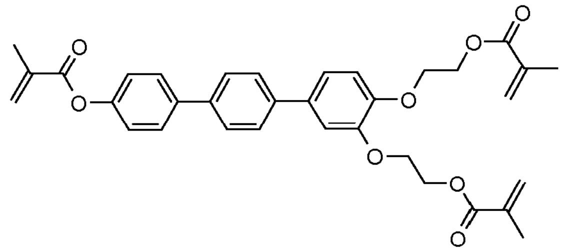

RM-135

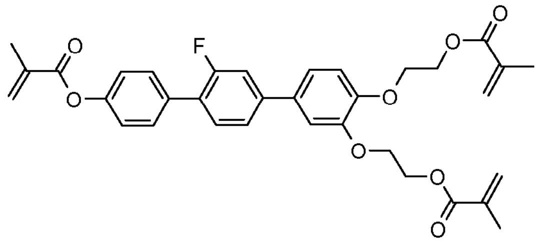

RM-136

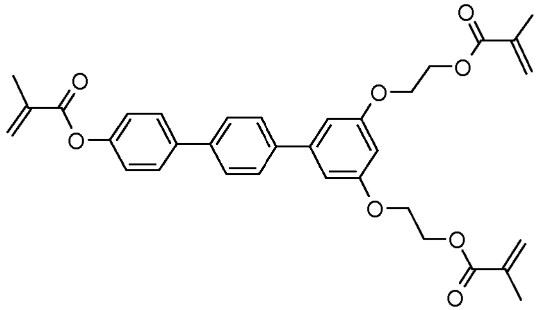

RM-137

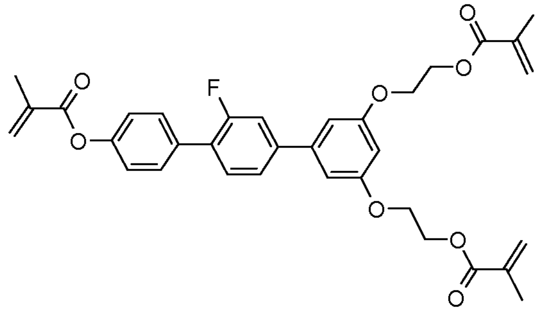

RM-138

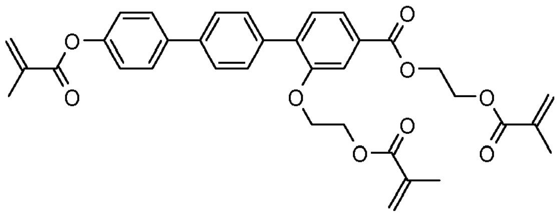

RM-139

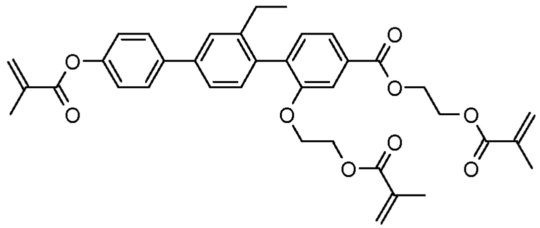

RM-140

(continued)

Table E shows illustrative reactive mesogenic compounds which can be used in the LC media in accordance with the present invention.

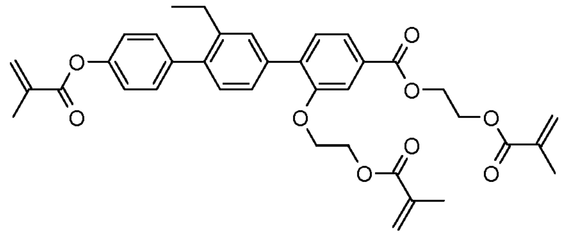

RM-141

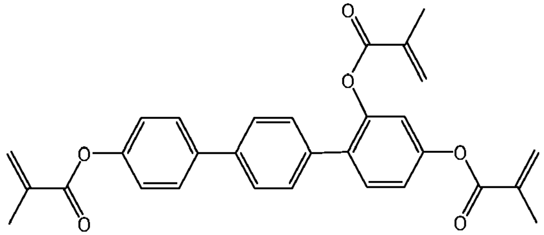

RM-142

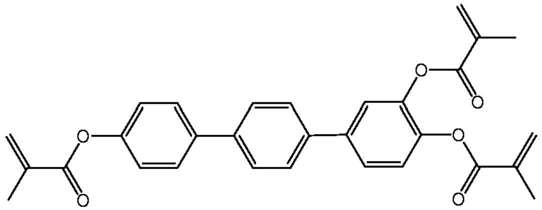

RM-143

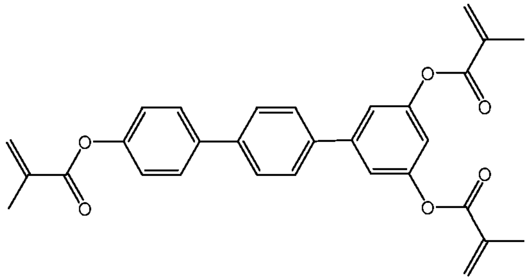

RM-144

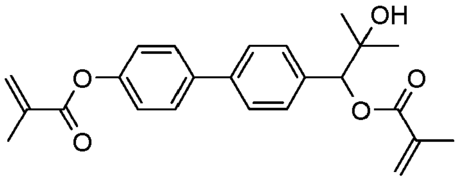

RM-145

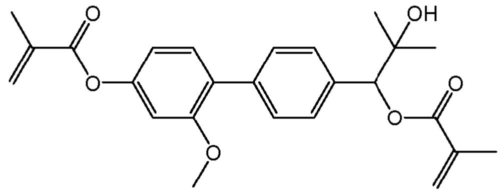

RM-146

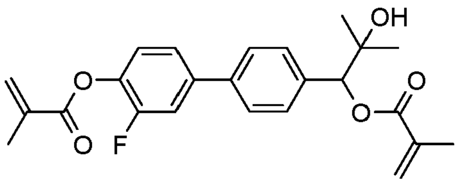

RM-147

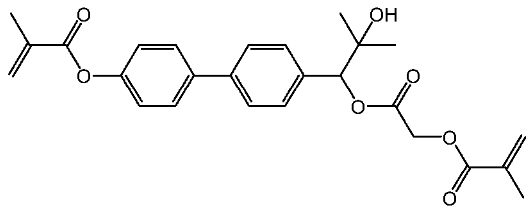

RM-148

(continued)

Table E shows illustrative reactive mesogenic compounds which can be used in the LC media in accordance with the present invention.

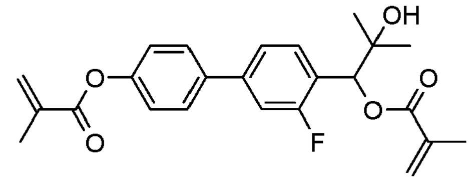

RM-149

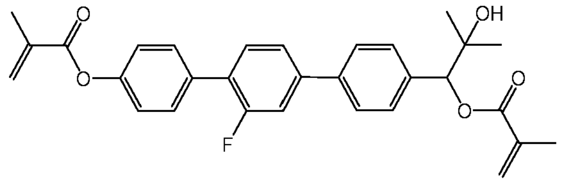

RM-150

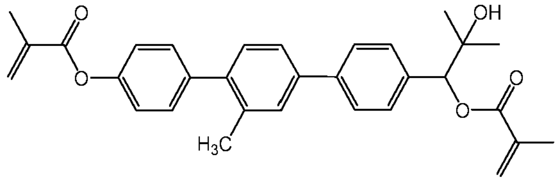

RM-151

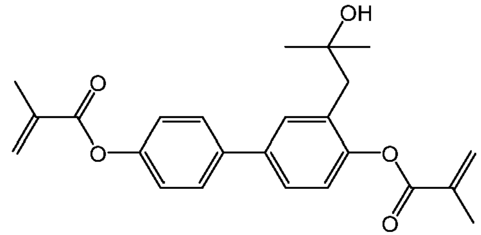

RM-152

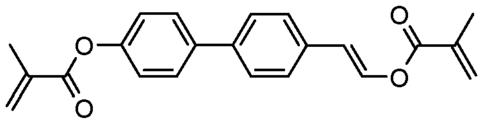

RM-153

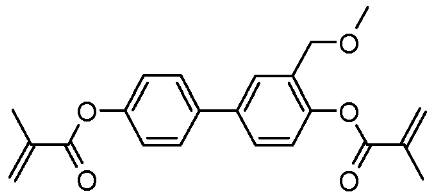

RM-154

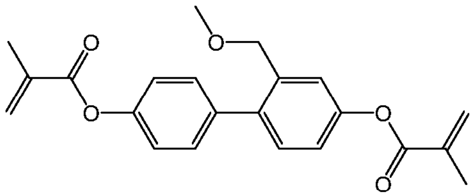

RM-155

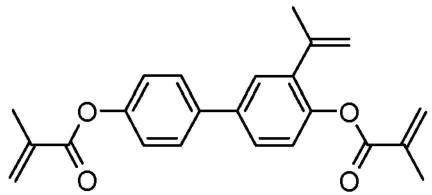

RM-156

(continued)

Table E shows illustrative reactive mesogenic compounds which can be used in the LC media in accordance with the present invention.

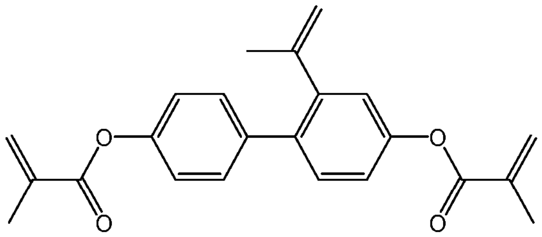

RM-157

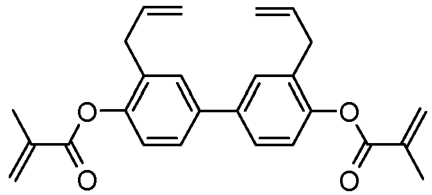

RM-158

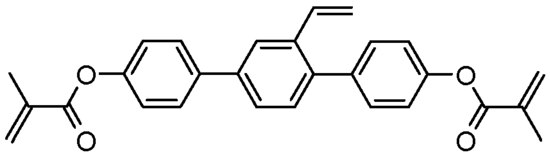

RM-159

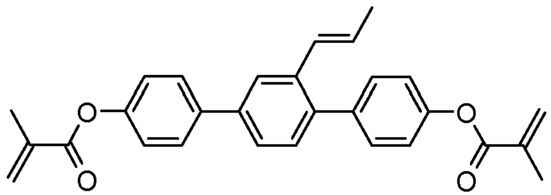

RM-160

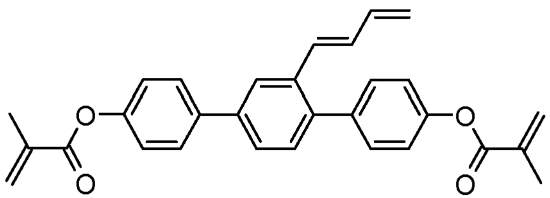

RM-161

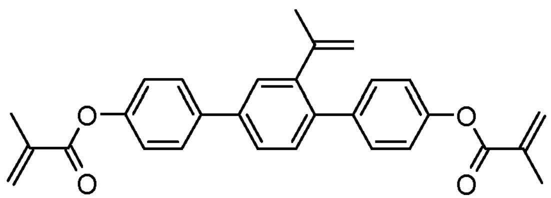

RM-162

(continued)

Table E shows illustrative reactive mesogenic compounds which can be used in the LC media in accordance with the present invention.

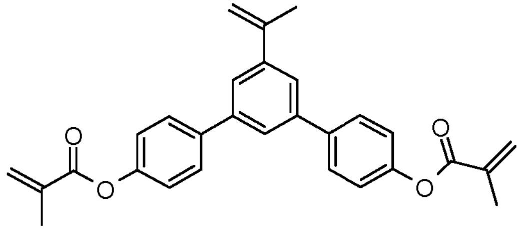

RM-163

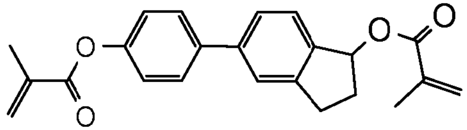

RM-164

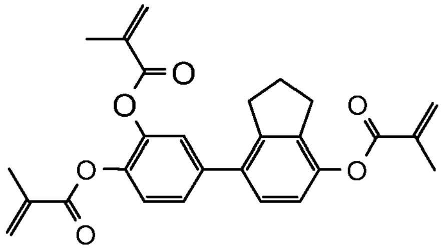

RM-165

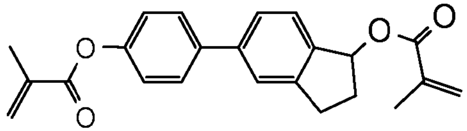

RM-166

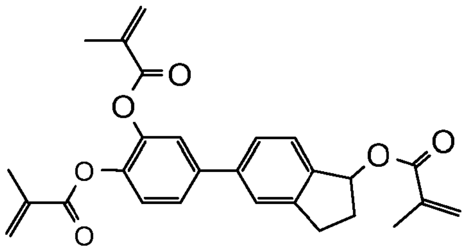

RM-167

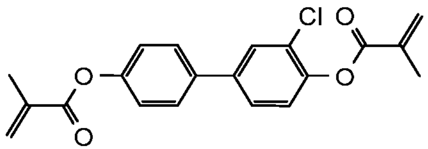

RM-168

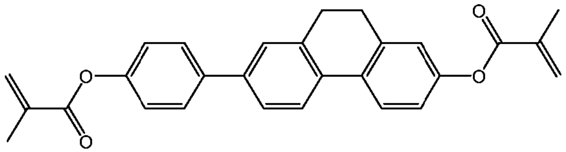

RM-169

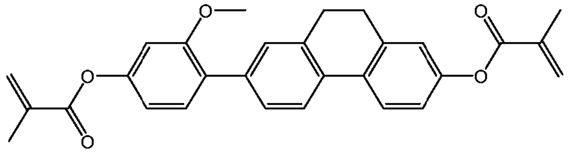

RM-170

(continued)

Table E shows illustrative reactive mesogenic compounds which can be used in the LC media in accordance with the present invention.

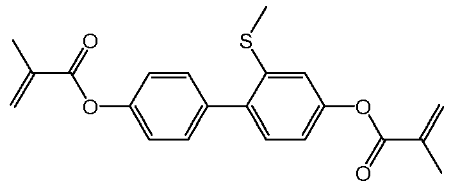

RM-171

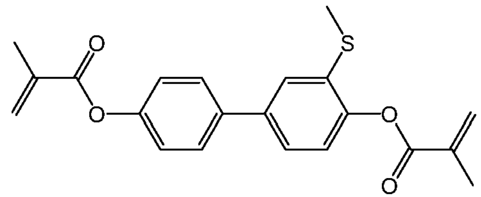

RM-172

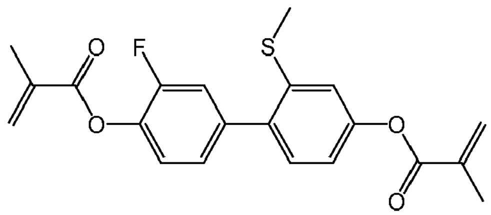

RM-173

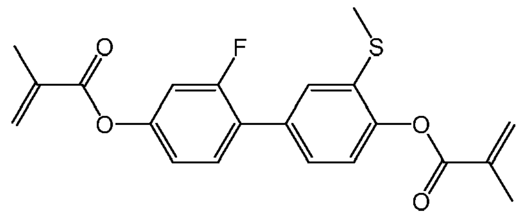

RM-174

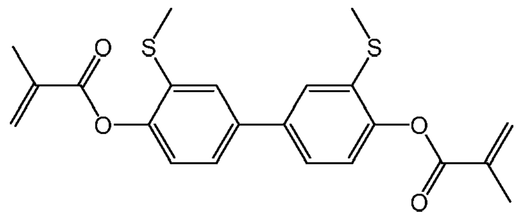

RM-175

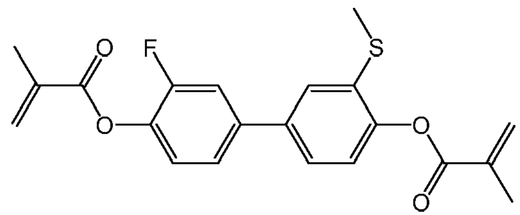

RM-176

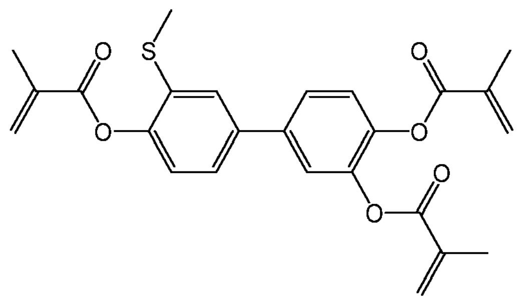

RM-177

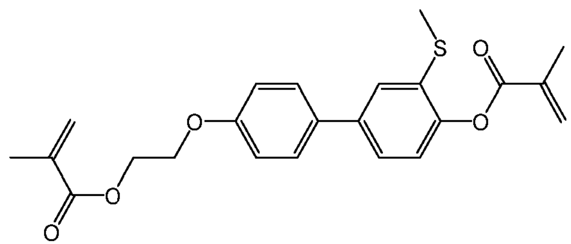

RM-178

(continued)

Table E shows illustrative reactive mesogenic compounds which can be used in the LC media in accordance with the present invention.

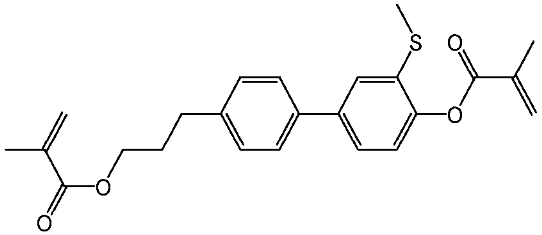

RM-179

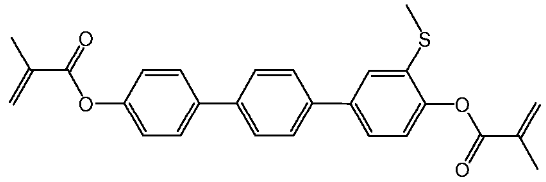

RM-180

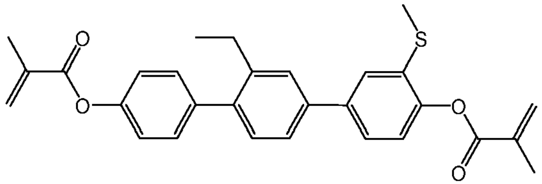

RM-181

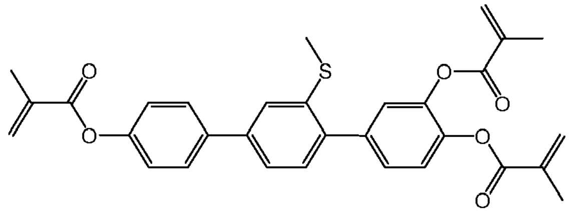

RM-182

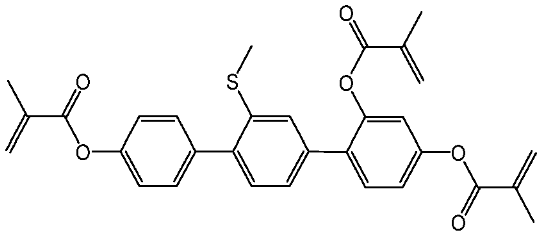

RM-183

In a preferred embodiment, the mixtures according to the invention comprise one or more polymerizable compounds, preferably selected from the polymerizable compounds of the formulae RM-1 to RM-182. Of these, compounds RM-1, RM-4, RM-8, RM-17, RM-19, RM-35, RM-37, RM-39, RM-40, RM-41, RM-48, RM-52, RM-54, RM-57, RM-58, RM-64, RM-74, RM-76, RM-88, RM-91, RM-102, RM-103, RM-109, RM-116, RM-117, RM-120, RM-121, RM-122, RM-139, RM-140, RM-142, RM-143, RM-145, RM-146, RM-147, RM-149, RM-156 to RM-163, RM-169, RM-170 and RM-171 to RM-183 are particularly preferred.

Examples

The present invention is illustrated in detail by the following non-restrictive working examples.
The following abbreviations and symbols are used:

| | |
|---|---|
| $V_0$ | threshold voltage, capacitive [V] at 20°C, |
| $n_e$ | extraordinary refractive index at 20°C and 589 nm, |
| $n_o$ | ordinary refractive index at 20°C and 589 nm, |
| $\Delta n$ | optical anisotropy at 20°C and 589 nm, |
| $\varepsilon_\perp$ | dielectric permittivity perpendicular to the director at 20°C and 1 kHz, |
| $\varepsilon_\parallel$ | dielectric permittivity parallel to the director at 20°C and 1 kHz, |
| $\Delta\varepsilon$ | dielectric anisotropy at 20°C and 1 kHz, |
| cl.p., T(N,I) | clearing point [°C], |
| $\gamma_1$ | rotational viscosity at 20°C [mPa·s], |
| $K_1$ | elastic constant, "splay" deformation at 20°C [pN], |
| $K_2$ | elastic constant, "twist" deformation at 20°C [pN], |
| $K_3$ | elastic constant, "bend" deformation at 20°C [pN], |
| $K_{avg}$ | average eleastic constant at 20°C [pN] defined here as |

$$K_{avg} \equiv (^3/_2\ K_1 + K_3) / 3 \approx (K_1 + K_2 + K_3) / 3,$$

| | |
|---|---|
| LTS | low-temperature stability of the phase, determined in test cells, |
| VHR | voltage holding ratio. |

Unless explicitly noted otherwise, all concentrations in the present application are quoted in per cent by weight and relate to the corresponding mixture as a whole, comprising all solid or liquid-crystalline components, without solvents.
Unless explicitly noted otherwise, all temperature values indicated in the present application, such as, for example, for the melting point T(C,N), the transition from the smectic (S) to the nematic (N) phase T(S,N) and the clearing point T(N,I), are quoted in degrees Celsius (°C). M.p. denotes melting point, cl.p. = clearing point. Furthermore, C = crystalline state, N = nematic phase, S = smectic phase and I = isotropic phase. The data between these symbols represent the transition temperatures.
All physical properties are and have been determined in accordance with "Merck Liquid Crystals, Physical Properties of Liquid Crystals", Status Nov. 1997, Merck KGaA, Germany, and apply for a temperature of 20°C, and $\Delta n$ is determined at 589 nm and $\Delta\varepsilon$ at 1 kHz, unless explicitly indicated otherwise in each case.
The term "threshold voltage" for the present invention relates to the capacitive threshold ($V_0$), also known as the Freedericks threshold, unless explicitly indicated otherwise. In the examples, the optical threshold may also, as generally usual, be quoted for 10% relative contrast ($V_{10}$).
Unless stated otherwise, the process of polymerising the polymerisable compounds in the PSA displays as described above and below is carried out at a temperature where the LC medium exhibits a liquid crystal phase, preferably a nematic phase, and most preferably is carried out at room temperature.
Unless stated otherwise, methods of preparing test cells and measuring their electrooptical and other properties are carried out by the methods as described hereinafter or in analogy thereto.
The display used for measurement of the capacitive threshold voltage consists of two plane-parallel glass outer plates with a distance of 25 μm, each of which has on the inside an electrode layer and an unrubbed polyimide alignment layer on top, which effect homeotropic alignment of the liquid-crystal molecules.
The transmission measurements are performed in test cells with fishbone electrode layout (from Merck Ltd., Japan; 1 pixel fishbone electrode (ITO, 10x10 mm, 47.7° angle of fishbone with 3μm line/3μm space), 3.2 μm cell gap, AF-glass, tilt angle 1°).
The storage stability in the bulk ($LTS_{bulk}$) of the media according to the invention at a given temperature T is determined by visual inspection. 2 g of the media of interest are filled into a closed glass vessel (bottle) of appropriate size placed in a refrigerator at a predetermined temperature. The bottles are checked at defined time intervals for the

occurrence of smectic phases or crystallisation. For every material and at each temperature two bottles are stored. If crystallisation or the appearance of a smectic phase is observed in at least one of the two correspondent bottles the test is terminated and the time of the last inspection before the one at which the occurrence of a higher ordered phase is observed is recorded as the respective storage stability.

## Mixture Examples

The quantities in the tables are given in percent by weight.

### Mixture Example M1

| | | | |
|---|---|---|---|
| B(S)-2O-O4 | 4.0 | cl.p. [°C]: | 119.8 |
| B(S)-2O-O5 | 1.5 | $\Delta n$ [589 nm, 20°C]: | 0.0904 |
| CCD-3-3 | 7.0 | $\varepsilon_{\parallel}$ [1 kHz, 20°C]: | 3.2 |
| CC-3-V | 6.0 | $\varepsilon_{\perp}$ [1 kHz, 20°C]: | 6.0 |
| CC-3-V1 | 12.0 | $\Delta\varepsilon$ [1 kHz, 20°C]: | -2.8 |
| CC-4-V1 | 10.0 | $\gamma_1$ [mPa·s, 20°C]: | 196 |
| CC-3-O3 | 2.0 | K1 [pN, 20°C]: | 27.9 |
| CC-3-5 | 12.0 | K3 [pN, 20°C]: | 27.0 |
| CCP-3-1 | 10.0 | | |
| CCY-3-O2 | 11.0 | | |
| CLOY-3-O2 | 12.1 | | |
| CLY-3-O2 | 10.0 | | |
| CLY-5-O2 | 2.4 | | |
| Σ | 100.0 | | |

To the mixture M1 are added 400 ppm of the stabiliser ST-3b-1.

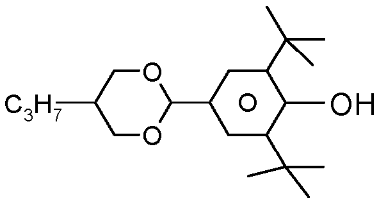

ST-3b-1

### Mixture Example M2

| | | | |
|---|---|---|---|
| B(S)-2O-O4 | 4.0 | cl.p. [°C]: | 104.6 |
| B(S)-2O-O5 | 5.0 | $\Delta n$ [589 nm, 20°C]: | 0.0916 |
| B(S)-2O-O6 | 1.0 | $\varepsilon_{\parallel}$ [1 kHz, 20°C]: | 3.2 |
| CCD-3-3 | 5.0 | $\varepsilon_{\perp}$ [1 kHz, 20°C]: | 6.1 |
| CC-3-V | 7.0 | $\Delta\varepsilon$ [1 kHz, 20°C]: | -2.9 |
| CC-3-V1 | 12.0 | $\gamma_1$ [mPa·s, 20°C]: | 165 |
| CC-3-2V1 | 14.0 | | |
| CC-3-5 | 12.0 | | |
| CCP-3-1 | 15.0 | | |
| CLOY-3-O2 | 25.0 | | |
| Σ | 100.0 | | |

To the mixture M2 are added 400 ppm of the stabiliser ST-3b-1.

Mixture Example M3

| | | | |
|---|---|---|---|
| B(S)-2O-O5 | 5.0 | cl.p. [°C]: | 103.5 |
| CC-3-V | 12.0 | $n_e$ [589 nm, 20°C]: | 1.5650 |
| CC-3-V1 | 14.0 | $n_o$ [589 nm, 20°C]: | 1.4800 |
| CC-4-V1 | 12.0 | $\Delta n$ [589 nm, 20°C]: | 0.0850 |
| CCD-5-2 | 3.0 | $\varepsilon_{\parallel}$ [1 kHz, 20°C]: | 3.0 |
| CC-3-O3 | 8.0 | $\varepsilon_{\perp}$ [1 kHz, 20°C]: | 5.3 |
| CC-3-5 | 5.0 | $\Delta\varepsilon$ [1 kHz, 20°C]: | -2.3 |
| CCP-3-1 | 9.0 | $\gamma_1$ [mPa·s, 20°C]: | 139 |
| CCP-3-3 | 0.75 | $K_1$ [pN, 20°C]: | 22.8 |
| CCY-3-O2 | 9.0 | $K_3$ [pN, 20°C]: | 23.3 |
| CLOY-3-O2 | 12.25 | | |
| CLY-3-O2 | 9.0 | | |
| CP-3-O2 | 1.0 | | |
| Σ | 100.0 | | |

To the mixture M3 are added 150 ppm of the stabiliser ST-3a-1.

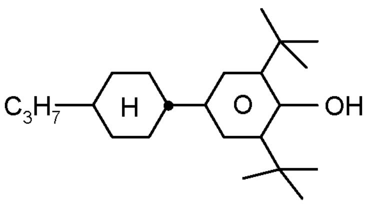

ST-3a-1

Mixture Example M4

| | | | |
|---|---|---|---|
| B(S)-2O-O5 | 5.0 | cl.p. [°C]: | 104 |
| CC-3-V | 12.75 | $n_e$ [589 nm, 20°C]: | 1.5629 |
| CC-3-V1 | 14.0 | $n_o$ [589 nm, 20°C]: | 1.4792 |
| CC-4-V1 | 12.0 | $\Delta n$ [589 nm, 20°C]: | 0.0837 |
| CCD-3-3 | 5.0 | $\varepsilon_{\parallel}$ [1 kHz, 20°C]: | 3.1 |
| CC-3-O3 | 8.0 | $\varepsilon_{\perp}$ [1 kHz, 20°C]: | 5.4 |
| CC-3-5 | 5.0 | $\Delta\varepsilon$ [1 kHz, 20°C]: | -2.3 |
| CCP-3-1 | 7.25 | $\gamma_1$ [mPa·s, 20°C]: | 138 |
| CCY-3-O2 | 9.0 | $K_1$ [pN, 20°C]: | 23.1 |
| CLOY-3-O2 | 12.0 | $K_3$ [pN, 20°C]: | 23.6 |
| CLY-3-O2 | 9.0 | | |
| CP-3-O2 | 1.0 | | |
| Σ | 100.0 | | |

To the mixture M4 are added 50 ppm of the stabiliser S-2-1-1.

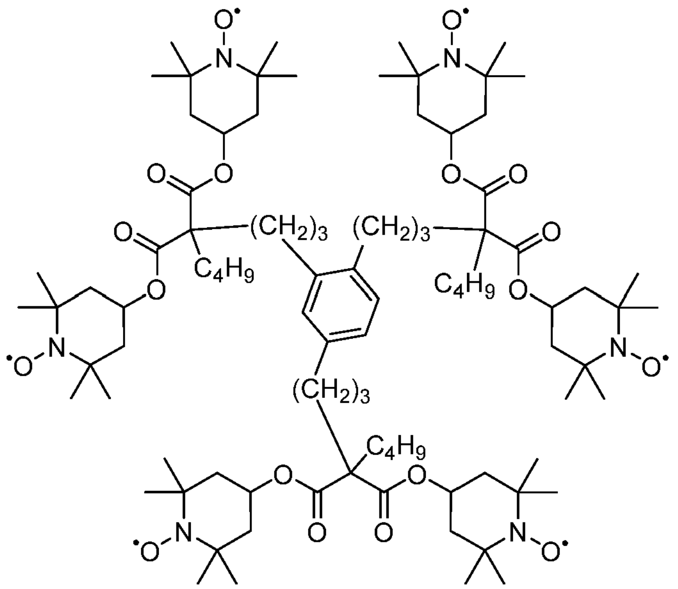

S-2-1-1

Mixture Example M5

| | | | |
|---|---|---|---|
| B(S)-2O-O5 | 5.0 | cl.p. [°C]: | 102 |
| CC-3-V | 13.75 | $n_e$ [589 nm, 20°C]: | 1.5619 |
| CC-3-V1 | 14.0 | $n_o$ [589 nm, 20°C]: | 1.4788 |
| CC-4-V1 | 12.0 | $\Delta n$ [589 nm, 20°C]: | 0.0831 |
| CCD-5-2 | 5.0 | $\varepsilon_{\parallel}$ [1 kHz, 20°C]: | 3.2 |
| CC-3-O3 | 8.0 | $\varepsilon_{\perp}$ [1 kHz, 20°C]: | 5.6 |
| CC-3-5 | 5.0 | $\Delta\varepsilon$ [1 kHz, 20°C]: | -2.4 |
| CCP-3-1 | 5.5 | $\gamma_1$ [mPa·s, 20°C]: | 138 |
| CCY-3-O2 | 10.0 | $K_1$ [pN, 20°C]: | 23.0 |
| CLOY-3-O2 | 11.75 | $K_3$ [pN, 20°C]: | 23.3 |
| CLY-3-O2 | 9.0 | | |
| CP-3-O2 | 1.0 | | |
| Σ | 100.0 | | |

To the mixture M5 are added 100 ppm of the stabiliser ST-8-1.

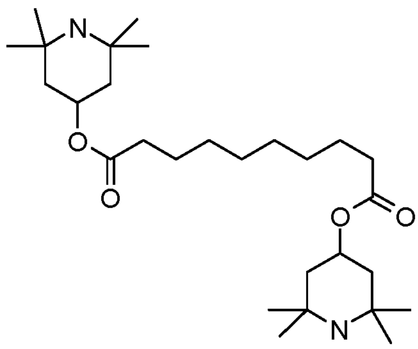

ST-8-1

Mixture Example M6

| | | | |
|---|---|---|---|
| B(S)-2O-O5 | 5.0 | cl.p. [°C]: | 104.5 |
| CC-3-V | 14.5 | $n_e$ [589 nm, 20°C]: | 1.5677 |
| CC-3-V1 | 14.0 | $n_o$ [589 nm, 20°C]: | 1.4803 |
| CC-4-V1 | 12.0 | Δn [589 nm, 20°C]: | 0.0874 |
| CCD-5-2 | 5.0 | $\varepsilon_{\parallel}$ [1 kHz, 20°C]: | 3.1 |
| CC-3-O3 | 8.0 | $\varepsilon_{\perp}$ [1 kHz, 20°C]: | 5.6 |
| CC-3-5 | 5.0 | Δε [1 kHz, 20°C]: | -2.5 |
| CCP-3-1 | 4.5 | $\gamma_1$ [mPa·s, 20°C]: | 132 |
| CCY-3-O2 | 10.0 | $K_1$ [pN, 20°C]: | 23.1 |
| CLOY-3-O2 | 6.0 | $K_3$ [pN, 20°C]: | 21.4 |
| CLY-3-O2 | 9.0 | | |
| COB(S)-2-O4 | 6.0 | | |
| CP-3-O2 | 1.0 | | |
| Σ | 100.0 | | |

To the mixture M6 are added 50 ppm of the stabiliser ST-9-1.

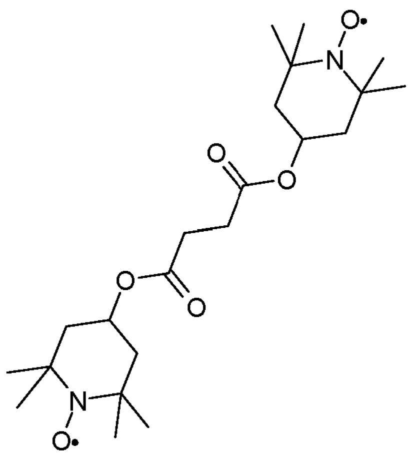

ST-9-1

Mixture Example M7

| | | | |
|---|---|---|---|
| B(S)-2O-O5 | 5.0 | cl.p. [°C]: | 105.5 |
| CC-3-V | 14.75 | $n_e$ [589 nm, 20°C]: | 1.5667 |
| CC-3-V1 | 14.25 | $n_o$ [589 nm, 20°C]: | 1.4798 |
| CC-4-V1 | 12.0 | Δn [589 nm, 20°C]: | 0.0869 |
| CCD-3-3 | 7.0 | $\varepsilon_{\parallel}$ [1 kHz, 20°C]: | 3.2 |
| CC-3-O3 | 8.0 | $\varepsilon_{\perp}$ [1 kHz, 20°C]: | 5.8 |
| CC-3-5 | 5.0 | Δε [1 kHz, 20°C]: | -2.6 |
| CCP-3-1 | 2.25 | $\gamma_1$ [mPa·s, 20°C]: | 133 |
| CCY-3-O2 | 9.0 | $K_1$ [pN, 20°C]: | 24.0 |
| CLOY-3-O2 | 6.75 | $K_3$ [pN, 20°C]: | 21.9 |
| CLY-3-O2 | 9.0 | | |
| COB(S)-2-O4 | 6.0 | | |
| CP-3-O2 | 1.0 | | |
| Σ | 100.0 | | |

To the mixture M7 are added 50 ppm of the stabiliser ST-12.

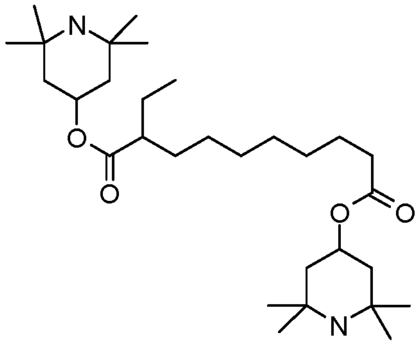

ST-12

Mixture Example M8

| | | | |
|---|---|---|---|
| B(S)-2O-O5 | 5.0 | cl.p. [°C]: | 105 |
| CC-3-V | 12.0 | $n_e$ [589 nm, 20°C]: | 1.5661 |
| CC-3-V1 | 14.0 | $n_o$ [589 nm, 20°C]: | 1.4802 |
| CC-4-V1 | 12.0 | Δn [589 nm, 20°C]: | 0.0859 |
| CCD-3-2 | 5.0 | $\varepsilon_\parallel$ [1 kHz, 20°C]: | 3.1 |
| CC-3-O3 | 8.0 | $\varepsilon_\perp$ [1 kHz, 20°C]: | 5.5 |
| CC-3-5 | 5.0 | Δε [1 kHz, 20°C]: | -2.4 |
| CCP-3-1 | 7.5 | $\gamma_1$ [mPa·s, 20°C]: | 140 |
| CCY-3-O2 | 9.0 | $K_1$ [pN, 20°C]: | 23.7 |
| CLOY-3-O2 | 10.25 | $K_3$ [pN, 20°C]: | 22.8 |
| CLY-3-O2 | 9.0 | | |
| COB(S)-2-O4 | 2.25 | | |
| CP-3-O2 | 1.0 | | |
| Σ | 100.0 | | |

To the mixture M8 are added 150 ppm of the stabiliser ST-3c.

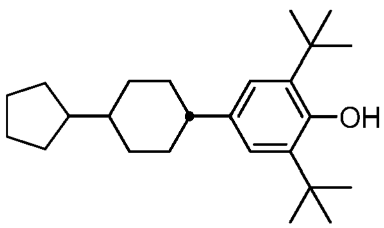

ST-3c

Mixture Example M9

| | | | |
|---|---|---|---|
| B(S)-2O-O4 | 2.0 | cl.p. [°C]: | 116 |
| CC-3-V | 3.25 | $n_e$ [589 nm, 20°C]: | 1.5727 |
| CC-3-V1 | 12.0 | $n_o$ [589 nm, 20°C]: | 1.4828 |
| CC-4-V1 | 10.0 | Δn [589 nm, 20°C]: | 0.0899 |
| CCD-5-2 | 3.0 | $\varepsilon_\parallel$ [1 kHz, 20°C]: | 3.1 |
| CC-3-5 | 12.0 | $\varepsilon_\perp$ [1 kHz, 20°C]: | 6.4 |

(continued)

| | | | |
|---|---|---|---|
| CCP-3-1 | 13.0 | Δε [1 kHz, 20°C]: | -3.3 |
| CCY-3-O2 | 10.0 | $\gamma_1$ [mPa·s, 20°C]: | 236 |
| CLOY-3-O2 | 23.75 | $K_1$ [pN, 20°C]: | 25.9 |
| CLY-3-O2 | 10.0 | $K_3$ [pN, 20°C]: | 28.7 |
| CP-3-O2 | 1.0 | | |
| Σ | 100.0 | | |

To the mixture M9 are added 100 ppm of the stabiliser ST-3d.

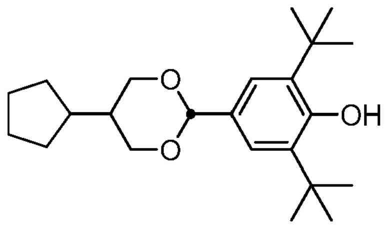

ST-3d

Mixture Example M10

| | | | |
|---|---|---|---|
| B(S)-2O-O4 | 4.0 | cl.p. [°C]: | 100.5 |
| B(S)-2O-O5 | 2.0 | $n_e$ [589 nm, 20°C]: | 1.5645 |
| CC-3-V | 17.75 | $n_o$ [589 nm, 20°C]: | 1.4800 |
| CC-3-V1 | 12.0 | Δn [589 nm, 20°C]: | 0.0845 |
| CC-4-V1 | 10.0 | $\varepsilon_{\parallel}$ [1 kHz, 20°C]: | 3.1 |
| CCD-5-2 | 3.0 | $\varepsilon_{\perp}$ [1 kHz, 20°C]: | 5.5 |
| CC-3-O3 | 8.0 | Δε [1 kHz, 20°C]: | -2.4 |
| CC-3-5 | 5.0 | $\gamma_1$ [mPa·s, 20°C]: | 127 |
| CCP-3-1 | 8.0 | $K_1$ [pN, 20°C]: | 21.8 |
| CCY-3-O2 | 10.0 | $K_3$ [pN, 20°C]: | 22.3 |
| CLOY-3-O2 | 10.25 | | |
| CLY-3-O2 | 9.0 | | |
| CP-3-O2 | 1.0 | | |
| Σ | 100.0 | | |

To the mixture M10 are added 100 ppm of the stabiliser ST-2a-2.

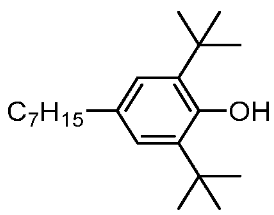

ST-2a-2

Mixture Example M11

| | | | |
|---|---|---|---|
| B(S)-2O-O4 | 0.5 | cl.p. [°C]: | 114.5 |

| | | | |
|---|---|---|---|
| CC-3-V | 4.25 | $n_e$ [589 nm, 20°C]: | 1.5695 |
| CC-3-V1 | 12.0 | $n_o$ [589 nm, 20°C]: | 1.4819 |
| CC-4-V1 | 10.0 | $\Delta n$ [589 nm, 20°C]: | 0.0876 |
| CCD-5-2 | 3.0 | $\varepsilon_{\parallel}$ [1 kHz, 20°C]: | 3.1 |
| CC-3-5 | 12.5 | $\varepsilon_{\perp}$ [1 kHz, 20°C]: | 6.2 |
| CCP-3-1 | 11.75 | $\Delta\varepsilon$ [1 kHz, 20°C]: | -3.1 |
| CCY-3-O2 | 10.0 | $\gamma_1$ [mPa·s, 20°C]: | 234 |
| CLOY-3-O2 | 25.0 | $K_1$ [pN, 20°C]: | 25.8 |
| CLY-3-O2 | 10.0 | $K_3$ [pN, 20°C]: | 28.6 |
| CP-3-O2 | 1.0 | | |
| Σ | 100.0 | | |

To the mixture M11 are added 100 ppm of the stabiliser ST-7.

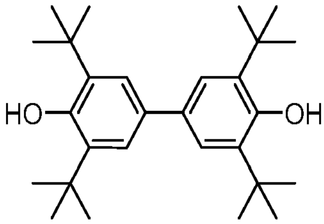

ST-7

Mixture Example M12

| | | | |
|---|---|---|---|
| B(S)-2O-O4 | 4.0 | cl.p. [°C]: | 101.5 |
| B(S)-2O-O5 | 1.25 | $n_e$ [589 nm, 20°C]: | 1.5626 |
| CC-3-V | 18.0 | $n_o$ [589 nm, 20°C]: | 1.4796 |
| CC-3-V1 | 12.0 | $\Delta n$ [589 nm, 20°C]: | 0.0830 |
| CC-4-V1 | 10.0 | $\varepsilon_{\parallel}$ [1 kHz, 20°C]: | 3.1 |
| CCD-3-3 | 5.0 | $\varepsilon_{\perp}$ [1 kHz, 20°C]: | 5.4 |
| CC-3-O3 | 8.0 | $\Delta\varepsilon$ [1 kHz, 20°C]: | -2.3 |
| CC-3-5 | 5.0 | $\gamma_1$ [mPa·s, 20°C]: | 129 |
| CCP-3-1 | 6.0 | $K_1$ [pN, 20°C]: | 22.7 |
| CCY-3-O2 | 10.0 | $K_3$ [pN, 20°C]: | 22.8 |
| CLOY-3-O2 | 10.75 | | |
| CLY-3-O2 | 9.0 | | |
| CP-3-O2 | 1.0 | | |
| Σ | 100.0 | | |

To the mixture M12 are added 100 ppm of the stabiliser ST-2a-1.

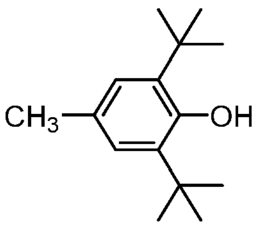

ST-2a-1

Mixture Example M13

| | | | |
|---|---|---|---|
| B(S)-2O-O4 | 4.0 | cl.p. [°C]: | 102 |
| B(S)-2O-O5 | 2.5 | $n_e$ [589 nm, 20°C]: | 1.5652 |
| CC-3-V | 16.25 | $n_o$ [589 nm, 20°C]: | 1.4797 |
| CC-3-V1 | 12.0 | $\Delta n$ [589 nm, 20°C]: | 0.0855 |
| CC-4-V1 | 10.0 | $\varepsilon_{\parallel}$ [1 kHz, 20°C]: | 3.1 |
| CCD-3-2 | 4.25 | $\varepsilon_{\perp}$ [1 kHz, 20°C]: | 5.5 |
| CC-3-O3 | 8.0 | $\Delta\varepsilon$ [1 kHz, 20°C]: | -2.4 |
| CC-3-5 | 5.0 | $\gamma_1$ [mPa·s, 20°C]: | 130 |
| CCP-3-1 | 8.0 | $K_1$ [pN, 20°C]: | 22.4 |
| CCY-3-O2 | 10.0 | $K_3$ [pN, 20°C]: | 22.5 |
| CLOY-3-O2 | 10.0 | | |
| CLY-3-O2 | 9.0 | | |
| CP-3-O2 | 1.0 | | |
| Σ | 100.0 | | |

To the mixture M13 are added 100 ppm of the stabiliser S-1-1-1.

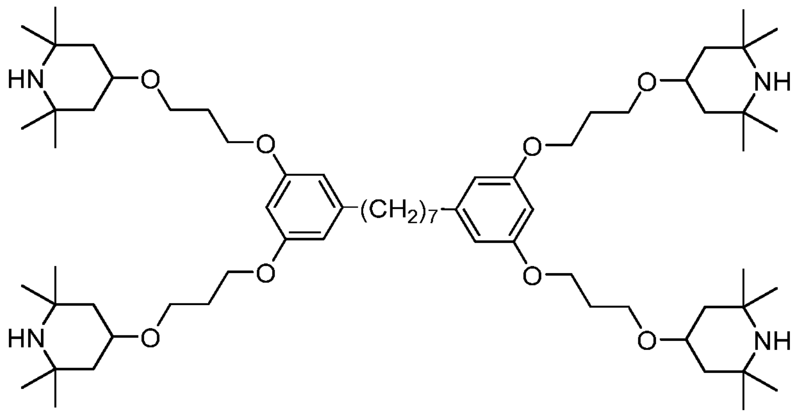

S-1-1-1

Mixture Example M14

| | | | |
|---|---|---|---|
| B(S)-2O-O4 | 0.5 | cl.p. [°C]: | 113.5 |
| CC-3-V | 5.0 | $n_e$ [589 nm, 20°C]: | 1.5680 |
| CC-3-V1 | 12.0 | $n_o$ [589 nm, 20°C]: | 1.4811 |
| CC-4-V1 | 10.0 | $\Delta n$ [589 nm, 20°C]: | 0.0869 |
| CCD-3-2 | 3.0 | $\varepsilon_{\parallel}$ [1 kHz, 20°C]: | 3.1 |
| CC-3-5 | 12.5 | $\varepsilon_{\perp}$ [1 kHz, 20°C]: | 6.2 |
| CCP-3-1 | 11.0 | $\Delta\varepsilon$ [1 kHz, 20°C]: | -3.1 |
| CCY-3-O2 | 10.0 | $\gamma_1$ [mPa·s, 20°C]: | 225 |
| CLOY-3-O2 | 25.0 | $K_1$ [pN, 20°C]: | 25.6 |
| CLY-3-O2 | 10.0 | $K_3$ [pN, 20°C]: | 28.2 |
| CP-3-O2 | 1.0 | | |
| Σ | 100.0 | | |

To the mixture M14 are added 50 ppm of the stabiliser S-2-1-1.

Mixture Example M15

| | | | |
|---|---|---|---|
| B(S)-2O-O4 | 0.25 | cl.p. [°C]: | 115 |
| CC-3-V | 6.0 | $n_e$ [589 nm, 20°C]: | 1.5673 |
| CC-3-V1 | 11.25 | $n_o$ [589 nm, 20°C]: | 1.4810 |
| CC-4-V1 | 9.0 | Δn [589 nm, 20°C]: | 0.0863 |
| CCD-3-3 | 5.0 | $\varepsilon_{\parallel}$ [1 kHz, 20°C]: | 3.1 |
| CC-3-5 | 12.5 | $\varepsilon_{\perp}$ [1 kHz, 20°C]: | 6.2 |
| CCP-3-1 | 10.0 | Δε [1 kHz, 20°C]: | -3.1 |
| CCY-3-O2 | 10.0 | $\gamma_1$ [mPa·s, 20°C]: | 233 |
| CLOY-3-O2 | 25.0 | $K_1$ [pN, 20°C]: | 25.8 |
| CLY-3-O2 | 10.0 | $K_3$ [pN, 20°C]: | 28.8 |
| CP-3-O2 | 1.0 | | |
| Σ | 100.0 | | |

To the mixture M15 are added 100 ppm of the stabiliser ST-8-1.

Mixture Example M16

| | | | |
|---|---|---|---|
| B(S)-2O-O4 | 4.0 | cl.p. [°C]: | 110 |
| B(S)-2O-O5 | 1.0 | $n_e$ [589 nm, 20°C]: | 1.5615 |
| CC-3-V | 18.75 | $n_o$ [589 nm, 20°C]: | 1.4786 |
| CC-3-V1 | 12.0 | Δn [589 nm, 20°C]: | 0.0829 |
| CC-4-V1 | 10.0 | $\varepsilon_{\parallel}$ [1 kHz, 20°C]: | 3.1 |
| CCD-3-3 | 5.0 | $\varepsilon_{\perp}$ [1 kHz, 20°C]: | 5.5 |
| CC-3-O3 | 8.0 | Δε [1 kHz, 20°C]: | -2.4 |
| CC-3-5 | 5.0 | $\gamma_1$ [mPa·s, 20°C]: | 128 |
| CCP-3-1 | 4.25 | $K_1$ [pN, 20°C]: | 21.7 |
| CCY-3-O2 | 10.0 | $K_3$ [pN, 20°C]: | 22.6 |
| CLOY-3-O2 | 11.0 | | |
| CLY-3-O2 | 10.0 | | |
| CP-3-O2 | 1.0 | | |
| Σ | 100.0 | | |

To the mixture M16 are added 50 ppm of the stabiliser ST-9-1.

Mixture Example M17

| | | | |
|---|---|---|---|
| B(S)-2O-O4 | 0.75 | cl.p. [°C]: | 114 |
| CC-3-V | 5.5 | $n_e$ [589 nm, 20°C]: | 1.5670 |
| CC-3-V1 | 12.0 | $n_o$ [589 nm, 20°C]: | 1.4806 |
| CC-4-V1 | 10.0 | Δn [589 nm, 20°C]: | 0.0864 |

(continued)

| | | | |
|---|---|---|---|
| CCD-3-3 | 5.0 | $\varepsilon_{\parallel}$ [1 kHz, 20°C]: | 3.1 |
| CC-3-5 | 12.5 | $\varepsilon_{\perp}$ [1 kHz, 20°C]: | 6.3 |
| CCP-3-1 | 8.25 | $\Delta\varepsilon$ [1 kHz, 20°C]: | -3.2 |
| CCY-3-O2 | 10.0 | $\gamma_1$ [mPa·s, 20°C]: | 230 |
| CLOY-3-O2 | 25.0 | $K_1$ [pN, 20°C]: | 25.8 |
| CLY-3-O2 | 10.0 | $K_3$ [pN, 20°C]: | 28.4 |
| CP-3-O2 | 1.0 | | |
| Σ | 100.0 | | |

To the mixture M17 are added 50 ppm of the stabiliser ST-12.

Mixture Example M18

| | | | |
|---|---|---|---|
| B(S)-2O-O4 | 0.5 | cl.p. [°C]: | 113.5 |
| CC-3-V | 5.0 | $n_e$ [589 nm, 20°C]: | 1.5680 |
| CC-3-V1 | 12.0 | $n_o$ [589 nm, 20°C]: | 1.4813 |
| CC-4-V1 | 10.0 | $\Delta n$ [589 nm, 20°C]: | 0.0867 |
| CCD-5-2 | 4.0 | $\varepsilon_{\parallel}$ [1 kHz, 20°C]: | 3.1 |
| CC-3-5 | 12.5 | $\varepsilon_{\perp}$ [1 kHz, 20°C]: | 6.2 |
| CCP-3-1 | 10.0 | $\Delta\varepsilon$ [1 kHz, 20°C]: | -3.1 |
| CCY-3-O2 | 10.0 | $\gamma_1$ [mPa·s, 20°C]: | 231 |
| CLOY-3-O2 | 25.0 | $K_1$ [pN, 20°C]: | 25.9 |
| CLY-3-O2 | 10.0 | $K_3$ [pN, 20°C]: | 28.0 |
| CP-3-O2 | 1.0 | | |
| Σ | 100.0 | | |

To the mixture M18 are added 150 ppm of the stabiliser ST-3c.

Mixture Example M19

| | | | |
|---|---|---|---|
| B(S)-2O-O4 | 1.0 | cl.p. [°C]: | 113 |
| CC-3-V | 5.5 | $n_e$ [589 nm, 20°C]: | 1.5687 |
| CC-3-V1 | 12.0 | $n_o$ [589 nm, 20°C]: | 1.4814 |
| CC-4-V1 | 10.0 | $\Delta n$ [589 nm, 20°C]: | 0.0873 |
| CCD-3-3 | 3.0 | $\varepsilon_{\parallel}$ [1 kHz, 20°C]: | 3.1 |
| CC-3-5 | 12.5 | $\varepsilon_{\perp}$ [1 kHz, 20°C]: | 6.3 |
| CCP-3-1 | 10.0 | $\Delta\varepsilon$ [1 kHz, 20°C]: | -3.2 |
| CCY-3-O2 | 10.0 | $\gamma_1$ [mPa·s, 20°C]: | 227 |
| CLOY-3-O2 | 25.0 | $K_1$ [pN, 20°C]: | 26.1 |
| CLY-3-O2 | 10.0 | $K_3$ [pN, 20°C]: | 28.3 |
| CP-3-O2 | 1.0 | | |
| Σ | 100.0 | | |

To the mixture M19 are added 100 ppm of the stabiliser ST-3d.

Mixture Example M20

| | | | |
|---|---|---|---|
| B(S)-2O-O4 | 4.0 | cl.p. [°C]: | 100.5 |
| B(S)-2O-O5 | 3.4 | $n_e$ [589 nm, 20°C]: | 1.5662 |
| CC-3-V | 18.1 | $n_o$ [589 nm, 20°C]: | 1.4802 |
| CC-3-V1 | 12.0 | $\Delta n$ [589 nm, 20°C]: | 0.0860 |
| CC-4-V1 | 10.0 | $\varepsilon_{\parallel}$ [1 kHz, 20°C]: | 3.1 |
| CCD-3-3 | 3.0 | $\varepsilon_{\perp}$ [1 kHz, 20°C]: | 5.6 |
| CC-3-O3 | 8.0 | $\Delta\varepsilon$ [1 kHz, 20°C]: | -2.5 |
| CC-3-5 | 5.0 | $\gamma_1$ [mPa·s, 20°C]: | 123 |
| CCP-3-1 | 7.2 | $K_1$ [pN, 20°C]: | 22.2 |
| CCY-3-O2 | 10.0 | $K_3$ [pN, 20°C]: | 22.2 |
| CLOY-3-O2 | 8.3 | | |
| CLY-3-O2 | 10.0 | | |
| CP-3-O2 | 1.0 | | |
| Σ | 100.0 | | |

To the mixture M20 are added 100 ppm of the stabiliser ST-2a-2.

Mixture Example M21

| | | | |
|---|---|---|---|
| B(S)-2O-O4 | 4.0 | cl.p. [°C]: | 118.5 |
| B(S)-2O-O5 | 2.75 | $n_e$ [589 nm, 20°C]: | 1.5796 |
| CC-3-V | 2.0 | $n_o$ [589 nm, 20°C]: | 1.4834 |
| CC-3-V1 | 12.0 | $\Delta n$ [589 nm, 20°C]: | 0.0962 |
| CC-4-V1 | 10.0 | $\varepsilon_{\parallel}$ [1 kHz, 20°C]: | 3.2 |
| CCD-3-3 | 3.0 | $\varepsilon_{\perp}$ [1 kHz, 20°C]: | 6.8 |
| CC-3-O3 | 5.0 | $\Delta\varepsilon$ [1 kHz, 20°C]: | -3.6 |
| CC-3-5 | 8.0 | $\gamma_1$ [mPa·s, 20°C]: | 228 |
| CCP-3-1 | 12.0 | $K_1$ [pN, 20°C]: | 27.6 |
| CCY-3-O2 | 10.0 | $K_3$ [pN, 20°C]: | 27.7 |
| CLOY-3-O2 | 15.0 | | |
| CLY-3-O2 | 9.0 | | |
| CLY-4-O2 | 1.25 | | |
| CLY-5-O2 | 5.0 | | |
| CP-3-O2 | 1.0 | | |
| Σ | 100.0 | | |

To the mixture M21 are added 150 ppm of the stabiliser ST-3a-1.

Mixture Example M22

| | | | |
|---|---|---|---|
| B(S)-2O-O4 | 4.0 | cl.p. [°C]: | 117.5 |
| B(S)-2O-O5 | 3.0 | $n_e$ [589 nm, 20°C]: | 1.5771 |
| CC-3-V | 5.6 | $n_o$ [589 nm, 20°C]: | 1.4821 |
| CC-3-V1 | 12.0 | $\Delta n$ [589 nm, 20°C]: | 0.0950 |

(continued)

| | | | |
|---|---|---|---|
| CC-4-V1 | 8.0 | $\varepsilon_{\parallel}$ [1 kHz, 20°C]: | 3.2 |
| CCD-3-3 | 3.0 | $\varepsilon_{\perp}$ [1 kHz, 20°C]: | 6.7 |
| CC-3-O3 | 3.0 | $\Delta\varepsilon$ [1 kHz, 20°C]: | -3.5 |
| CC-3-5 | 12.0 | $\gamma_1$ [mPa·s, 20°C]: | 202 |
| CCP-3-1 | 8.0 | $K_1$ [pN, 20°C]: | 27.2 |
| CCY-3-O2 | 10.5 | $K_3$ [pN, 20°C]: | 26.4 |
| CLOY-3-O2 | 10.7 | | |
| CLY-3-O2 | 9.5 | | |
| CLY-4-O2 | 5.0 | | |
| CLY-5-O2 | 4.7 | | |
| CP-3-O2 | 1.0 | | |
| Σ | 100.0 | | |

To the mixture M22 are added 100 ppm of the stabiliser ST-3b-1.

Mixture Example M23

| | | | |
|---|---|---|---|
| B(S)-2O-O4 | 4.0 | cl.p. [°C]: | 105.5 |
| B(S)-2O-O5 | 5.0 | $n_e$ [589 nm, 20°C]: | 1.5717 |
| CC-3-V | 15.0 | $n_o$ [589 nm, 20°C]: | 1.4812 |
| CC-3-V1 | 12.0 | $\Delta n$ [589 nm, 20°C]: | 0.0905 |
| CC-4-V1 | 10.0 | $\varepsilon_{\parallel}$ [1 kHz, 20°C]: | 3.1 |
| CCD-3-2 | 3.0 | $\varepsilon_{\perp}$ [1 kHz, 20°C]: | 5.8 |
| CC-3-O3 | 8.0 | $\Delta\varepsilon$ [1 kHz, 20°C]: | -2.7 |
| CC-3-5 | 5.0 | $\gamma_1$ [mPa·s, 20°C]: | 130 |
| CCP-3-1 | 8.0 | $K_1$ [pN, 20°C]: | 23.9 |
| CCP-3-3 | 2.75 | $K_3$ [pN, 20°C]: | 22.1 |
| CCY-3-O2 | 10.0 | | |
| CLOY-3-O2 | 5.75 | | |
| CLY-3-O2 | 10.0 | | |
| COB(S)-2-O4 | 1.5 | | |
| Σ | 100.0 | | |

To the mixture M23 are added 50 ppm of the stabiliser ST-2a-2 and 500 ppm of the stabiliser ST-3a-1.

Mixture Example M24

| | | | |
|---|---|---|---|
| B(S)-2O-O4 | 3.0 | cl.p. [°C]: | 119.5 |
| B(S)-2O-O5 | 4.0 | $n_e$ [589 nm, 20°C]: | 1.5788 |
| CC-3-V | 2.75 | $n_o$ [589 nm, 20°C]: | 1.4828 |
| CC-3-V1 | 12.0 | $\Delta n$ [589 nm, 20°C]: | 0.0960 |
| CC-4-V1 | 9.75 | $\varepsilon_{\parallel}$ [1 kHz, 20°C]: | 3.2 |
| CCD-3-3 | 4.0 | $\varepsilon_{\perp}$ [1 kHz, 20°C]: | 6.9 |
| CC-3-O3 | 5.0 | $\Delta\varepsilon$ [1 kHz, 20°C]: | -3.7 |
| CC-3-5 | 8.0 | $\gamma_1$ [mPa·s, 20°C]: | 228 |

(continued)

| | | | |
|---|---|---|---|
| CCP-3-1 | 11.0 | $K_1$ [pN, 20°C]: | 28.2 |
| CCY-3-O2 | 10.0 | $K_3$ [pN, 20°C]: | 27.6 |
| CLOY-3-O2 | 15.0 | | |
| CLY-3-O2 | 9.0 | | |
| CLY-4-O2 | 1.5 | | |
| CLY-5-O2 | 5.0 | | |
| Σ | 100.0 | | |

To the mixture M24 are added 50 ppm of the stabiliser S-2-1-1.

Mixture Example M25

| | | | |
|---|---|---|---|
| B(S)-2O-O4 | 4.0 | cl.p. [°C]: | 117.5 |
| B(S)-2O-O5 | 5.0 | $n_e$ [589 nm, 20°C]: | 1.5794 |
| CC-3-V | 7.5 | $n_o$ [589 nm, 20°C]: | 1.4827 |
| CC-3-V1 | 12.0 | Δn [589 nm, 20°C]: | 0.0967 |
| CC-4-V1 | 6.0 | $\varepsilon_{\parallel}$ [1 kHz, 20°C]: | 3.2 |
| CCD-5-2 | 3.0 | $\varepsilon_{\perp}$ [1 kHz, 20°C]: | 6.8 |
| CC-3-O3 | 3.0 | Δε [1 kHz, 20°C]: | -3.6 |
| CC-3-5 | 12.0 | $\gamma_1$ [mPa·s, 20°C]: | 195 |
| CCP-3-1 | 9.0 | $K_1$ [pN, 20°C]: | 27.6 |
| CCY-3-O2 | 10.5 | $K_3$ [pN, 20°C]: | 25.7 |
| CLOY-3-O2 | 8.5 | | |
| CLY-3-O2 | 9.5 | | |
| CLY-4-O2 | 5.0 | | |
| CLY-5-O2 | 5.0 | | |
| Σ | 100.0 | | |

To the mixture M25 are added 150 ppm of the stabiliser ST-2a-1, 50 ppm of the stabiliser ST-2a-2 and 300 ppm of the stabiliser ST-3a-1.

Mixture Example M26

| | | | |
|---|---|---|---|
| B(S)-2O-O4 | 4.0 | cl.p. [°C]: | 119 |
| B(S)-2O-O5 | 1.5 | $n_e$ [589 nm, 20°C]: | 1.5791 |
| B(S)-2O-O6 | 3.5 | $n_o$ [589 nm, 20°C]: | 1.4826 |
| CC-3-V | 6.0 | Δn [589 nm, 20°C]: | 0.0965 |
| CC-3-V1 | 12.0 | $\varepsilon_{\parallel}$ [1 kHz, 20°C]: | 3.2 |
| CC-4-V1 | 8.0 | $\varepsilon_{\perp}$ [1 kHz, 20°C]: | 6.8 |
| CCD-3-3 | 4.0 | Δε [1 kHz, 20°C]: | -3.6 |
| CC-3-O3 | 3.0 | $\gamma_1$ [mPa·s, 20°C]: | 196 |
| CC-3-5 | 12.0 | $K_1$ [pN, 20°C]: | 28.5 |
| CCP-3-1 | 7.5 | $K_3$ [pN, 20°C]: | 26.9 |
| CCY-3-O2 | 10.5 | | |
| CLOY-3-O2 | 8.5 | | |
| CLY-3-O2 | 9.5 | | |
| CLY-4-O2 | 5.0 | | |

(continued)

| | |
|---|---|
| CLY-5-O2 | 5.0 |
| Σ | 100.0 |

To the mixture M26 are added 50 ppm of the stabiliser ST-9-1.

Mixture Example M27

| | | | |
|---|---|---|---|
| B(S)-2O-O4 | 4.0 | cl.p. [°C]: | 116.5 |
| B(S)-2O-O5 | 5.0 | $n_e$ [589 nm, 20°C]: | 1.5797 |
| CC-3-V | 5.5 | $n_o$ [589 nm, 20°C]: | 1.4832 |
| CC-3-V1 | 12.0 | Δn [589 nm, 20°C]: | 0.0965 |
| CC-4-V1 | 8.0 | $\varepsilon_{\parallel}$ [1 kHz, 20°C]: | 3.2 |
| CCD-3-2 | 3.0 | $\varepsilon_{\perp}$ [1 kHz, 20°C]: | 6.8 |
| CC-3-O3 | 3.0 | Δε [1 kHz, 20°C]: | -3.6 |
| CC-3-5 | 12.0 | $\gamma_1$ [mPa·s, 20°C]: | 198 |
| CCP-3-1 | 9.5 | $K_1$ [pN, 20°C]: | 27.7 |
| CCY-3-O2 | 10.5 | $K_3$ [pN, 20°C]: | 26.5 |
| CLOY-3-O2 | 10.5 | | |
| CLY-3-O2 | 9.5 | | |
| CLY-4-O2 | 3.0 | | |
| CLY-5-O2 | 4.5 | | |
| Σ | 100.0 | | |

To the mixture M27 are added 50 ppm of the stabiliser ST-12.

Mixture Example M28

| | | | |
|---|---|---|---|
| B(S)-2O-O4 | 4.0 | cl.p. [°C]: | 116.5 |
| B(S)-2O-O5 | 4.75 | $n_e$ [589 nm, 20°C]: | 1.5780 |
| CC-3-V | 7.0 | $n_o$ [589 nm, 20°C]: | 1.4823 |
| CC-3-V1 | 12.0 | Δn [589 nm, 20°C]: | 0.0957 |
| CC-4-V1 | 8.0 | $\varepsilon_{\parallel}$ [1 kHz, 20°C]: | 3.2 |
| CCD-5-2 | 3.0 | $\varepsilon_{\perp}$ [1 kHz, 20°C]: | 6.7 |
| CC-3-O3 | 3.0 | Δε [1 kHz, 20°C]: | -3.5 |
| CC-3-5 | 12.0 | $\gamma_1$ [mPa·s, 20°C]: | 189 |
| CCP-3-1 | 8.25 | $K_1$ [pN, 20°C]: | 27.6 |
| CCY-3-O2 | 10.5 | $K_3$ [pN, 20°C]: | 25.6 |
| CLOY-3-O2 | 8.5 | | |
| CLY-3-O2 | 9.5 | | |
| CLY-4-O2 | 4.5 | | |
| CLY-5-O2 | 5.0 | | |
| Σ | 100.0 | | |

To the mixture M28 are added 150 ppm of the stabiliser ST-3c.

Mixture Example M29

| | | | |
|---|---|---|---|
| CC-3-V1 | 13.0 | cl.p. [°C]: | 129.5 |
| CC-4-V1 | 12.25 | $n_e$ [589 nm, 20°C]: | 1.5796 |
| CCD-3-3 | 5.0 | $n_o$ [589 nm, 20°C]: | 1.4833 |
| CC-3-5 | 11.0 | Δn [589 nm, 20°C]: | 0.0963 |
| CCP-3-1 | 8.75 | $\varepsilon_{\parallel}$ [1 kHz, 20°C]: | 3.1 |
| CCY-3-O2 | 10.5 | $\varepsilon_{\perp}$ [1 kHz, 20°C]: | 6.7 |
| CCY-5-O2 | 0.5 | Δε [1 kHz, 20°C]: | -3.6 |
| CLOY-3-O2 | 10.0 | $\gamma_1$ [mPa·s, 20°C]: | |
| CLY-3-O2 | 9.0 | $K_1$ [pN, 20°C]: | |
| CLY-4-O2 | 5.0 | $K_3$ [pN, 20°C]: | |
| CLY-5-O2 | 5.0 | | |
| COB(S)-2-O4 | 8.0 | | |
| CP-3-O2 | 2.0 | | |
| Σ | 100.0 | | |

To the mixture M29 are added 100 ppm of the stabiliser ST-3d.

Mixture Example M30

| | | | |
|---|---|---|---|
| CC-3-V1 | 13.0 | cl.p. [°C]: | 126.5 |
| CC-4-V1 | 13.0 | $n_e$ [589 nm, 20°C]: | 1.5807 |
| CCD-5-2 | 3.0 | $n_o$ [589 nm, 20°C]: | 1.4837 |
| CC-3-5 | 11.0 | Δn [589 nm, 20°C]: | 0.0970 |
| CCP-3-1 | 10.0 | $\varepsilon_{\parallel}$ [1 kHz, 20°C]: | 3.1 |
| CCY-3-O2 | 10.0 | $\varepsilon_{\perp}$ [1 kHz, 20°C]: | 6.5 |
| CCY-5-O2 | 1.0 | Δε [1 kHz, 20°C]: | -3.4 |
| CLOY-3-O2 | 10.0 | $\gamma_1$ [mPa·s, 20°C]: | 229 |
| CLY-3-O2 | 8.0 | $K_1$ [pN, 20°C]: | 30.3 |
| CLY-4-O2 | 5.0 | $K_3$ [pN, 20°C]: | 34.0 |
| CLY-5-O2 | 5.0 | | |
| COB(S)-2-O4 | 8.5 | | |
| CP-3-O2 | 2.5 | | |
| Σ | 100.0 | | |

To the mixture M30 are added 100 ppm of the stabiliser ST-2a-2.

Mixture Example M31

| | | | |
|---|---|---|---|
| B(S)-2O-O4 | 4.0 | cl.p. [°C]: | 122 |
| B(S)-2O-O5 | 2.8 | $n_e$ [589 nm, 20°C]: | 1.5809 |
| CC-3-V1 | 12.0 | $n_o$ [589 nm, 20°C]: | 1.4842 |
| CC-4-V1 | 10.0 | Δn [589 nm, 20°C]: | 0.0967 |
| CCD-3-3 | 4.0 | $\varepsilon_{\parallel}$ [1 kHz, 20°C]: | 3.2 |
| CC-3-O3 | 1.6 | $\varepsilon_{\perp}$ [1 kHz, 20°C]: | 6.5 |

(continued)

| | | | |
|---|---|---|---|
| CC-3-5 | 11.0 | Δε [1 kHz, 20°C]: | -3.3 |
| CCP-3-1 | 16.0 | $\gamma_1$ [mPa·s, 20°C]: | 230 |
| CCY-3-O2 | 10.5 | $K_1$ [pN, 20°C]: | 28.7 |
| CLOY-3-O2 | 14.1 | $K_3$ [pN, 20°C]: | 29.2 |
| CLY-3-O2 | 9.0 | | |
| CLY-5-O2 | 3.0 | | |
| CP-3-O2 | 2.0 | | |
| Σ | 100.0 | | |

To the mixture M31 are added 150 ppm of the stabiliser ST-3a-1.

Mixture Example M32

| | | | |
|---|---|---|---|
| B(S)-2O-O5 | 1.8 | cl.p. [°C]: | 115.5 |
| CC-3-V | 2.8 | $n_e$ [589 nm, 20°C]: | 1.5711 |
| CC-3-V1 | 12.0 | $n_o$ [589 nm, 20°C]: | 1.4813 |
| CC-4-V1 | 9.8 | Δn [589 nm, 20°C]: | 0.0898 |
| CCD-5-2 | 3.0 | $\varepsilon_\parallel$ [1 kHz, 20°C]: | 3.2 |
| CC-3-5 | 12.5 | $\varepsilon_\perp$ [1 kHz, 20°C]: | 6.9 |
| CCP-3-1 | 7.8 | Δε [1 kHz, 20°C]: | -3.7 |
| CCY-3-O2 | 10.0 | $\gamma_1$ [mPa·s, 20°C]: | 257 |
| CCY-5-O2 | 4.3 | $K_1$ [pN, 20°C]: | 26.4 |
| CLOY-3-O2 | 25.0 | $K_3$ [pN, 20°C]: | 28.5 |
| CLY-3-O2 | 10.0 | | |
| CP-3-O2 | 1.0 | | |
| Σ | 100.0 | | |

To the mixture M32 are added 100 ppm of the stabiliser ST-3b-1.

Mixture Example M33

| | | | |
|---|---|---|---|
| B(S)-2O-O4 | 4.0 | cl.p. [°C]: | 116 |
| B(S)-2O-O5 | 5.0 | $n_e$ [589 nm, 20°C]: | 1.5801 |
| CC-3-V | 4.75 | $n_o$ [589 nm, 20°C]: | 1.4830 |
| CC-3-V1 | 12.0 | Δn [589 nm, 20°C]: | 0.0971 |
| CC-4-V1 | 8.0 | $\varepsilon_\parallel$ [1 kHz, 20°C]: | 3.2 |
| CCD-3-2 | 3.0 | $\varepsilon_\perp$ [1 kHz, 20°C]: | 6.7 |
| CC-3-O3 | 3.0 | Δε [1 kHz, 20°C]: | -3.5 |
| CC-3-5 | 12.0 | $\gamma_1$ [mPa·s, 20°C]: | 192 |
| CCP-3-1 | 9.5 | $K_1$ [pN, 20°C]: | 27.2 |
| CCY-3-O2 | 10.5 | $K_3$ [pN, 20°C]: | 26.1 |
| CLOY-3-O2 | 8.5 | | |
| CLY-3-O2 | 9.5 | | |
| CLY-4-O2 | 3.25 | | |
| CLY-5-O2 | 5.0 | | |

(continued)

| | |
|---|---|
| CP-3-O2 | 2.0 |
| Σ | 100.0 |

To the mixture M33 are added 100 ppm of the stabiliser S-1-1-1.

Mixture Example M34

| | | | |
|---|---|---|---|
| B(S)-2O-O4 | 4.0 | cl.p. [°C]: | 119 |
| B(S)-2O-O5 | 3.75 | $n_e$ [589 nm, 20°C]: | 1.5782 |
| CC-3-V | 5.0 | $n_o$ [589 nm, 20°C]: | 1.4827 |
| CC-3-V1 | 12.0 | $\Delta n$ [589 nm, 20°C]: | 0.0955 |
| CC-4-V1 | 8.0 | $\varepsilon_{\parallel}$ [1 kHz, 20°C]: | 3.2 |
| CCD-5-2 | 3.0 | $\varepsilon_{\perp}$ [1 kHz, 20°C]: | 6.7 |
| CC-3-O3 | 3.0 | $\Delta\varepsilon$ [1 kHz, 20°C]: | -3.5 |
| CC-3-5 | 12.0 | $\gamma_1$ [mPa·s, 20°C]: | 205 |
| CCP-3-1 | 9.25 | $K_1$ [pN, 20°C]: | 27.9 |
| CCY-3-O2 | 10.5 | $K_3$ [pN, 20°C]: | 26.6 |
| CCY-5-O2 | 1.25 | | |
| CLOY-3-O2 | 10.0 | | |
| CLY-3-O2 | 9.0 | | |
| CLY-4-O2 | 4.25 | | |
| CLY-5-O2 | 5.0 | | |
| Σ | 100.0 | | |

To the mixture M34 are added 50 ppm of the stabiliser ST-2a-2 and 500 ppm of the stabiliser ST-3a-1.

Mixture Example M35

| | | | |
|---|---|---|---|
| B(S)-2O-O4 | 4.0 | cl.p. [°C]: | 122 |
| B(S)-2O-O5 | 2.25 | $n_e$ [589 nm, 20°C]: | 1.5796 |
| CC-3-V | 2.25 | $n_o$ [589 nm, 20°C]: | 1.4831 |
| CC-3-V1 | 9.0 | $\Delta n$ [589 nm, 20°C]: | 0.0965 |
| CC-4-V1 | 9.0 | $\varepsilon_{\parallel}$ [1 kHz, 20°C]: | 3.2 |
| CCD-3-3 | 3.0 | $\varepsilon_{\perp}$ [1 kHz, 20°C]: | 6.9 |
| CC-3-O3 | 4.0 | $\Delta\varepsilon$ [1 kHz, 20°C]: | -3.7 |
| CC-3-5 | 11.5 | $\gamma_1$ [mPa·s, 20°C]: | 231 |
| CCP-3-1 | 11.0 | $K_1$ [pN, 20°C]: | 29.2 |
| CCY-3-O2 | 11.0 | $K_3$ [pN, 20°C]: | 28.7 |
| CCY-5-O2 | 0.5 | | |
| CLOY-3-O2 | 12.5 | | |
| CLY-3-O2 | 9.0 | | |
| CLY-4-O2 | 5.0 | | |
| CLY-5-O2 | 5.0 | | |
| CP-3-O2 | 1.0 | | |

(continued)

| | |
|---|---|
| Σ | 100.0 |

To the mixture M35 are added 100 ppm of the stabiliser ST-8-1.

Mixture Example M36

| | | | |
|---|---|---|---|
| B(S)-2O-O4 | 4.0 | cl.p. [°C]: | 119 |
| B(S)-2O-O5 | 3.25 | $n_e$ [589 nm, 20°C]: | 1.5788 |
| CC-3-V | 4.5 | $n_o$ [589 nm, 20°C]: | 1.4830 |
| CC-3-V1 | 12.0 | Δn [589 nm, 20°C]: | 0.0958 |
| CC-4-V1 | 8.0 | $\varepsilon_\parallel$ [1 kHz, 20°C]: | 3.2 |
| CCD-5-2 | 2.5 | $\varepsilon_\perp$ [1 kHz, 20°C]: | 6.7 |
| CC-3-O3 | 3.0 | Δε [1 kHz, 20°C]: | -3.5 |
| CC-3-5 | 12.0 | $\gamma_1$ [mPa·s, 20°C]: | 209 |
| CCP-3-1 | 11.0 | $K_1$ [pN, 20°C]: | 28.0 |
| CCY-3-O2 | 11.0 | $K_3$ [pN, 20°C]: | 26.9 |
| CLOY-3-O2 | 11.25 | | |
| CLY-3-O2 | 9.0 | | |
| CLY-4-O2 | 3.5 | | |
| CLY-5-O2 | 5.0 | | |
| Σ | 100.0 | | |

To the mixture M36 are added 50 ppm of the stabiliser ST-9-1.

Mixture Example M37

| | | | |
|---|---|---|---|
| B(S)-2O-O4 | 3.0 | cl.p. [°C]: | 119 |
| B(S)-2O-O5 | 4.5 | $n_e$ [589 nm, 20°C]: | 1.5787 |
| CC-3-V1 | 12.0 | $n_o$ [589 nm, 20°C]: | 1.4829 |
| CC-4-V1 | 10.0 | Δn [589 nm, 20°C]: | 0.0958 |
| CCD-3-3 | 4.0 | $\varepsilon_\parallel$ [1 kHz, 20°C]: | 3.2 |
| CC-3-O3 | 4.0 | $\varepsilon_\perp$ [1 kHz, 20°C]: | 6.8 |
| CC-3-5 | 11.5 | Δε [1 kHz, 20°C]: | -3.6 |
| CCP-3-1 | 11.0 | $\gamma_1$ [mPa·s, 20°C]: | 228 |
| CCY-3-O2 | 11.0 | $K_1$ [pN, 20°C]: | 29.2 |
| CLOY-3-O2 | 15.0 | $K_3$ [pN, 20°C]: | 28.4 |
| CLY-3-O2 | 9.0 | | |
| CLY-4-O2 | 1.0 | | |
| CLY-5-O2 | 3.0 | | |
| CP-3-O2 | 1.0 | | |
| Σ | 100.0 | | |

To the mixture M37 are added 50 ppm of the stabiliser ST-12.

Mixture Example M38

| | | | |
|---|---|---|---|
| B(S)-2O-O4 | 3.5 | cl.p. [°C]: | 123.5 |
| B(S)-2O-O5 | 3.75 | $n_e$ [589 nm, 20°C]: | 1.5794 |
| CC-3-V | 1.75 | $n_o$ [589 nm, 20°C]: | 1.4834 |
| CC-3-V1 | 10.0 | Δn [589 nm, 20°C]: | 0.0960 |
| CC-4-V1 | 9.0 | $\varepsilon_\parallel$ [1 kHz, 20°C]: | 3.2 |
| CCD-3-3 | 4.0 | $\varepsilon_\perp$ [1 kHz, 20°C]: | 6.9 |
| CC-3-O3 | 4.0 | Δε [1 kHz, 20°C]: | -3.7 |
| CC-3-5 | 11.5 | $\gamma_1$ [mPa·s, 20°C]: | 241 |
| CCP-3-1 | 10.75 | $K_1$ [pN, 20°C]: | 30.1 |
| CCY-3-O2 | 11.0 | $K_3$ [pN, 20°C]: | 29.7 |
| CCY-5-O2 | 4.0 | | |
| CLOY-3-O2 | 12.5 | | |
| CLY-3-O2 | 9.0 | | |
| CLY-4-O2 | 1.5 | | |
| CLY-5-O2 | 3.75 | | |
| Σ | 100.0 | | |

To the mixture M38 are added 150 ppm of the stabiliser ST-2a-1, 50 ppm of the stabiliser ST-2a-2 and 300 ppm of the stabiliser ST-3a-1.

Mixture Example M39

| | | | |
|---|---|---|---|
| B(S)-2O-O4 | 3.0 | cl.p. [°C]: | 120.5 |
| B(S)-2O-O5 | 4.0 | $n_e$ [589 nm, 20°C]: | 1.5783 |
| CC-3-V | 4.5 | $n_o$ [589 nm, 20°C]: | 1.4830 |
| CC-3-V1 | 12.0 | Δn [589 nm, 20°C]: | 0.0953 |
| CC-4-V1 | 8.0 | $\varepsilon_\parallel$ [1 kHz, 20°C]: | 3.2 |
| CCD-3-3 | 3.0 | $\varepsilon_\perp$ [1 kHz, 20°C]: | 6.7 |
| CC-3-O3 | 3.0 | Δε [1 kHz, 20°C]: | -3.5 |
| CC-3-5 | 12.0 | $\gamma_1$ [mPa·s, 20°C]: | 209 |
| CCP-3-1 | 10.0 | $K_1$ [pN, 20°C]: | 28.4 |
| CCY-3-O2 | 11.0 | $K_3$ [pN, 20°C]: | 27.3 |
| CCY-5-O2 | 1.0 | | |
| CLOY-3-O2 | 11.0 | | |
| CLY-3-O2 | 9.0 | | |
| CLY-4-O2 | 4.5 | | |
| CLY-5-O2 | 4.0 | | |
| Σ | 100.0 | | |

To the mixture M39 are added 100 ppm of the stabiliser ST-3d.

Mixture Example M40

| | | | |
|---|---|---|---|
| B(S)-2O-O4 | 4.0 | cl.p. [°C]: | 126 |
| B(S)-2O-O5 | 0.75 | $n_e$ [589 nm, 20°C]: | 1.5820 |
| B(S)-2O-O6 | 4.0 | $n_o$ [589 nm, 20°C]: | 1.4839 |

(continued)

| | | | |
|---|---|---|---|
| CC-3-V | 9.5 | Δn [589 nm, 20°C]: | 0.0981 |
| CC-3-V1 | 4.0 | $\varepsilon_{\parallel}$ [1 kHz, 20°C]: | 3.2 |
| CC-4-V1 | 8.0 | $\varepsilon_{\perp}$ [1 kHz, 20°C]: | 6.9 |
| CCD-3-3 | 3.0 | Δε [1 kHz, 20°C]: | -3.7 |
| CC-3-O3 | 3.0 | $\gamma_1$ [mPa·s, 20°C]: | 219 |
| CC-3-5 | 12.5 | $K_1$ [pN, 20°C]: | 30.2 |
| CCP-3-1 | 6.75 | $K_3$ [pN, 20°C]: | 28.8 |
| CCP-V2-1 | 1.0 | | |
| CCY-3-O2 | 11.0 | | |
| CCY-5-O2 | 4.0 | | |
| CLOY-3-O2 | 6.5 | | |
| CLPC-3-2 | 3.0 | | |
| CLY-3-O2 | 9.0 | | |
| CLY-4-O2 | 5.0 | | |
| CLY-5-O2 | 5.0 | | |
| Σ | 100.0 | | |

To the mixture M40 are added 100 ppm of the stabiliser ST-2a-2.

Mixture Example M41

| | | | |
|---|---|---|---|
| B(S)-2O-O4 | 4.0 | cl.p. [°C]: | 122.5 |
| B(S)-2O-O5 | 0.5 | $n_e$ [589 nm, 20°C]: | 1.5749 |
| CC-3-V | 4.75 | $n_o$ [589 nm, 20°C]: | 1.4819 |
| CC-3-V1 | 9.0 | Δn [589 nm, 20°C]: | 0.0930 |
| CC-4-V1 | 9.0 | $\varepsilon_{\parallel}$ [1 kHz, 20°C]: | 3.2 |
| CCD-3-3 | 4.0 | $\varepsilon_{\perp}$ [1 kHz, 20°C]: | 6.8 |
| CC-3-O3 | 4.0 | Δε [1 kHz, 20°C]: | -3.6 |
| CC-3-5 | 11.5 | $\gamma_1$ [mPa·s, 20°C]: | 233 |
| CCP-3-1 | 7.0 | $K_1$ [pN, 20°C]: | 28.7 |
| CCY-3-O2 | 11.0 | $K_3$ [pN, 20°C]: | 27.7 |
| CCY-5-O2 | 3.75 | | |
| CLOY-3-O2 | 12.5 | | |
| CLY-3-O2 | 9.0 | | |
| CLY-4-O2 | 5.0 | | |
| CLY-5-O2 | 5.0 | | |
| Σ | 100.0 | | |

To the mixture M41 are added 150 ppm of the stabiliser ST-3a-1.

Mixture Example M42

| | | | |
|---|---|---|---|
| B(S)-2O-O5 | 0.5 | cl.p. [°C]: | 114 |
| CC-3-V | 9.5 | $n_e$ [589 nm, 20°C]: | 1.5645 |
| CC-3-V1 | 12.0 | $n_o$ [589 nm, 20°C]: | 1.4803 |

(continued)

| | | | |
|---|---|---|---|
| CC-4-V1 | 7.75 | Δn [589 nm, 20°C]: | 0.0842 |
| CCD-3-3 | 4.0 | $\varepsilon_{\parallel}$ [1 kHz, 20°C]: | 3.0 |
| CC-3-O3 | 4.0 | $\varepsilon_{\perp}$ [1 kHz, 20°C]: | 5.4 |
| CC-3-5 | 11.5 | Δε [1 kHz, 20°C]: | -2.4 |
| CCP-3-1 | 10.0 | $\gamma_1$ [mPa·s, 20°C]: | 184 |
| CCY-3-O2 | 11.0 | $K_1$ [pN, 20°C]: | 25.5 |
| CLOY-3-O2 | 15.0 | $K_3$ [pN, 20°C]: | 26.8 |
| CLY-3-O2 | 9.0 | | |
| CLY-5-O2 | 4.75 | | |
| CP-3-O2 | 1.0 | | |
| Σ | 100.0 | | |

To the mixture M42 are added 100 ppm of the stabiliser ST-3b-1.

Mixture Example M43

| | | | |
|---|---|---|---|
| B(S)-2O-O5 | 1.7 | cl.p. [°C]: | 111.5 |
| CC-3-V | 10.9 | $n_e$ [589 nm, 20°C]: | 1.5641 |
| CC-3-V1 | 12.0 | $n_o$ [589 nm, 20°C]: | 1.4800 |
| CC-4-V1 | 8.0 | Δn [589 nm, 20°C]: | 0.0841 |
| CCD-3-3 | 4.0 | $\varepsilon_{\parallel}$ [1 kHz, 20°C]: | 3.1 |
| CC-3-O3 | 2.0 | $\varepsilon_{\perp}$ [1 kHz, 20°C]: | 5.7 |
| CC-3-5 | 12.0 | Δε [1 kHz, 20°C]: | -2.6 |
| CCP-3-1 | 7.8 | $\gamma_1$ [mPa·s, 20°C]: | 180 |
| CCY-3-O2 | 11.0 | $K_1$ [pN, 20°C]: | 24.4 |
| CCY-5-O2 | 4.6 | $K_3$ [pN, 20°C]: | 26.1 |
| CLOY-3-O2 | 15.0 | | |
| CLY-3-O2 | 9.0 | | |
| CP-3-O2 | 2.0 | | |
| Σ | 100.0 | | |

To the mixture M43 are added 100 ppm of the stabiliser S-1-1-1.

Mixture Example M44

| | | | |
|---|---|---|---|
| B(S)-2O-O4 | 4.0 | cl.p. [°C]: | 118.5 |
| B(S)-2O-O5 | 4.0 | $n_e$ [589 nm, 20°C]: | 1.5812 |
| B(S)-2O-O6 | 2.0 | $n_o$ [589 nm, 20°C]: | 1.4832 |
| CC-3-V | 7.0 | Δn [589 nm, 20°C]: | 0.0980 |
| CC-3-V1 | 12.0 | $\varepsilon_{\parallel}$ [1 kHz, 20°C]: | 3.2 |
| CC-4-V1 | 8.0 | $\varepsilon_{\perp}$ [1 kHz, 20°C]: | 6.8 |
| CCD-3-3 | 3.0 | Δε [1 kHz, 20°C]: | -3.6 |
| CC-3-O3 | 2.0 | $\gamma_1$ [mPa·s, 20°C]: | 194 |
| CC-3-5 | 12.0 | $K_1$ [pN, 20°C]: | 27.8 |
| CCP-3-1 | 8.0 | $K_3$ [pN, 20°C]: | 26.4 |
| CCY-3-O2 | 11.0 | | |
| CCY-5-O2 | 1.0 | | |

(continued)

| | |
|---|---|
| CLOY-3-O2 | 7.0 |
| CLY-3-O2 | 9.5 |
| CLY-4-O2 | 4.5 |
| CLY-5-O2 | 5.0 |
| Σ | 100.0 |

To the mixture M44 are added 50 ppm of the stabiliser S-2-1-1.

Mixture Example M45

| | | | |
|---|---|---|---|
| B(S)-2O-O4 | 4.0 | cl.p. [°C]: | 116.5 |
| CC-3-V | 8.6 | $n_e$ [589 nm, 20°C]: | 1.5731 |
| CC-3-V1 | 12.0 | $n_o$ [589 nm, 20°C]: | 1.4836 |
| CC-4-V1 | 8.0 | $\Delta n$ [589 nm, 20°C]: | 0.0895 |
| CCD-3-3 | 3.0 | $\varepsilon_\parallel$ [1 kHz, 20°C]: | 2.9 |
| CC-3-O3 | 2.0 | $\varepsilon_\perp$ [1 kHz, 20°C]: | 4.9 |
| CC-3-5 | 12.0 | $\Delta\varepsilon$ [1 kHz, 20°C]: | -2.0 |
| CCP-3-1 | 11.0 | $\gamma_1$ [mPa·s, 20°C]: | 160 |
| CCP-3-3 | 5.0 | $K_1$ [pN, 20°C]: | 26.4 |
| CCY-3-O2 | 11.0 | $K_3$ [pN, 20°C]: | 25.9 |
| CLOY-3-O2 | 8.8 | | |
| CLP-V-1 | 3.6 | | |
| CLY-3-O2 | 9.0 | | |
| CP-3-O2 | 2.0 | | |
| Σ | 100.0 | | |

To the mixture M45 are added 50 ppm of the stabiliser ST-2a-2 and 500 ppm of the stabiliser ST-3a-1.

Mixture Example M46

| | | | |
|---|---|---|---|
| B(S)-2O-O4 | 3.9 | cl.p. [°C]: | 115 |
| CC-3-V | 9.0 | $n_e$ [589 nm, 20°C]: | 1.5740 |
| CC-3-V1 | 12.0 | $n_o$ [589 nm, 20°C]: | 1.4838 |
| CC-4-V1 | 8.0 | $\Delta n$ [589 nm, 20°C]: | 0.0902 |
| CCD-5-2 | 2.0 | $\varepsilon_\parallel$ [1 kHz, 20°C]: | 2.9 |
| CC-3-O3 | 2.0 | $\varepsilon_\perp$ [1 kHz, 20°C]: | 4.9 |
| CC-3-5 | 12.0 | $\Delta\varepsilon$ [1 kHz, 20°C]: | -2.0 |
| CCP-3-1 | 11.0 | $\gamma_1$ [mPa·s, 20°C]: | 157 |
| CCP-3-3 | 4.0 | $K_1$ [pN, 20°C]: | 25.8 |
| CCY-3-O2 | 11.0 | $K_3$ [pN, 20°C]: | 25.4 |
| CLOY-3-O2 | 9.1 | | |
| CLP-V-1 | 5.0 | | |

(continued)

| | |
|---|---|
| CLY-3-O2 | 9.0 |
| CP-3-O2 | 2.0 |
| Σ | 100.0 |

To the mixture M46 are added 50 ppm of the stabiliser ST-9-1.

Mixture Example M47

| | | | |
|---|---|---|---|
| B(S)-2O-O5 | 1.4 | cl.p. [°C]: | 117.5 |
| CC-3-V | 2.7 | $n_e$ [589 nm, 20°C]: | 1.5706 |
| CC-3-V1 | 12.0 | $n_o$ [589 nm, 20°C]: | 1.4812 |
| CC-4-V1 | 7.8 | Δn [589 nm, 20°C]: | 0.0894 |
| CCD-3-3 | 3.0 | $\varepsilon_{\parallel}$ [1 kHz, 20°C]: | 3.2 |
| CC-3-O3 | 2.0 | $\varepsilon_{\perp}$ [1 kHz, 20°C]: | 6.9 |
| CC-3-5 | 12.5 | Δε [1 kHz, 20°C]: | -3.7 |
| CCP-3-1 | 8.4 | $\gamma_1$ [mPa·s, 20°C]: | 266 |
| CCY-3-O2 | 10.8 | $K_1$ [pN, 20°C]: | 26.9 |
| CCY-5-O2 | 4.6 | $K_3$ [pN, 20°C]: | 29.2 |
| CLOY-3-O2 | 24.8 | | |
| CLY-3-O2 | 10.0 | | |
| Σ | 100.0 | | |

To the mixture M47 are added 50 ppm of the stabiliser ST-12.

Mixture Example M48

| | | | |
|---|---|---|---|
| B(S)-2O-O4 | 4.0 | cl.p. [°C]: | 119 |
| B(S)-2O-O5 | 3.6 | $n_e$ [589 nm, 20°C]: | 1.5787 |
| CC-3-V | 5.0 | $n_o$ [589 nm, 20°C]: | 1.4828 |
| CC-3-V1 | 12.0 | Δn [589 nm, 20°C]: | 0.0959 |
| CC-4-V1 | 8.0 | $\varepsilon_{\parallel}$ [1 kHz, 20°C]: | 3.2 |
| CCD-5-V | 3.0 | $\varepsilon_{\perp}$ [1 kHz, 20°C]: | 6.7 |
| CC-3-O3 | 3.0 | Δε [1 kHz, 20°C]: | -3.5 |
| CC-3-5 | 12.0 | $\gamma_1$ [mPa·s, 20°C]: | 206 |
| CCP-3-1 | 10.0 | $K_1$ [pN, 20°C]: | 27.6 |
| CCY-3-O2 | 11.0 | $K_3$ [pN, 20°C]: | 26.8 |
| CLOY-3-O2 | 11.0 | | |
| CLY-3-O2 | 9.0 | | |
| CLY-4-O2 | 3.8 | | |
| CLY-5-O2 | 4.6 | | |
| Σ | 100.0 | | |

To the mixture M48 are added 150 ppm of the stabiliser ST-3c.

Mixture Example M49

| | | | |
|---|---|---|---|
| B(S)-2O-O4 | 4.0 | cl.p. [°C]: | 114.5 |
| B(S)-2O-O5 | 5.0 | $n_e$ [589 nm, 20°C]: | 1.5827 |
| B(S)-2O-O6 | 1.25 | $n_o$ [589 nm, 20°C]: | 1.4852 |
| CC-3-V | 14.0 | $\Delta n$ [589 nm, 20°C]: | 0.0975 |
| CC-3-V1 | 18.0 | $\varepsilon_{\parallel}$ [1 kHz, 20°C]: | 3.1 |
| CCD-3-3 | 4.0 | $\varepsilon_{\perp}$ [1 kHz, 20°C]: | 5.7 |
| CC-3-5 | 9.0 | $\Delta\varepsilon$ [1 kHz, 20°C]: | -2.6 |
| CCP-3-1 | 13.0 | $\gamma_1$ [mPa·s, 20°C]: | 155 |
| CCY-3-O2 | 11.0 | $K_1$ [pN, 20°C]: | 25.3 |
| CLOY-3-O2 | 5.0 | $K_3$ [pN, 20°C]: | 25.7 |
| CLP-V-1 | 3.75 | | |
| CLY-3-O2 | 10.0 | | |
| CP-3-O2 | 2.0 | | |
| Σ | 100.0 | | |

To the mixture M49 are added 100 ppm of the stabiliser ST-3d.

Mixture Example M50

| | | | |
|---|---|---|---|
| B(S)-2O-O4 | 4.0 | cl.p. [°C]: | 122.5 |
| B(S)-2O-O5 | 3.3 | $n_e$ [589 nm, 20°C]: | 1.5777 |
| CC-3-V | 2.3 | $n_o$ [589 nm, 20°C]: | 1.4824 |
| CC-3-V1 | 12.0 | $\Delta n$ [589 nm, 20°C]: | 0.0953 |
| CC-4-V1 | 8.0 | $\varepsilon_{\parallel}$ [1 kHz, 20°C]: | 3.3 |
| CCD-3-3 | 3.0 | $\varepsilon_{\perp}$ [1 kHz, 20°C]: | 7.1 |
| CCD-5-2 | 3.0 | $\Delta\varepsilon$ [1 kHz, 20°C]: | -3.8 |
| CC-3-O3 | 3.0 | $\gamma_1$ [mPa·s, 20°C]: | 238 |
| CC-3-5 | 12.0 | $K_1$ [pN, 20°C]: | 30.1 |
| CCP-3-1 | 7.4 | $K_3$ [pN, 20°C]: | 29.5 |
| CCY-3-O2 | 11.0 | | |
| CCY-5-O2 | 2.5 | | |
| CLOY-3-O2 | 12.5 | | |
| CLY-3-O2 | 9.0 | | |
| CLY-4-O2 | 3.1 | | |
| CLY-5-O2 | 3.9 | | |
| Σ | 100.0 | | |

To the mixture M50 are added 100 ppm of the stabiliser ST-2a-2.

Mixture Example M51

| | | | |
|---|---|---|---|
| B(S)-2O-O4 | 4.0 | cl.p. [°C]: | 110 |

(continued)

| | | | |
|---|---|---|---|
| B(S)-2O-O5 | 2.5 | $n_e$ [589 nm, 20°C]: | 1.5715 |
| CC-3-V | 9.1 | $n_o$ [589 nm, 20°C]: | 1.4814 |
| CC-3-V1 | 12.0 | Δn [589 nm, 20°C]: | 0.0901 |
| CC-4-V1 | 8.0 | $\varepsilon_{\parallel}$ [1 kHz, 20°C]: | 3.1 |
| CCD-3-3 | 4.0 | $\varepsilon_{\perp}$ [1 kHz, 20°C]: | 6.0 |
| CC-3-O3 | 2.0 | Δε [1 kHz, 20°C]: | -2.9 |
| CC-3-5 | 12.5 | $\gamma_1$ [mPa·s, 20°C]: | 174 |
| CCP-3-1 | 9.4 | $K_1$ [pN, 20°C]: | 24.7 |
| CCY-3-O2 | 11.0 | $K_3$ [pN, 20°C]: | 25.3 |
| CLOY-3-O2 | 14.5 | | |
| CLY-3-O2 | 9.0 | | |
| CP-3-O2 | 2.0 | | |
| Σ | 100.0 | | |

To the mixture M51 are added 150 ppm of the stabiliser ST-2a-1, 50 ppm of the stabiliser ST-2a-2 and 300 ppm of the stabiliser ST-3a-1.

Mixture Example M52

| | | | |
|---|---|---|---|
| B(S)-2O-O4 | 2.0 | cl.p. [°C]: | 115 |
| CC-3-V | 9.25 | $n_e$ [589 nm, 20°C]: | 1.5664 |
| CC-3-V1 | 12.0 | $n_o$ [589 nm, 20°C]: | 1.4806 |
| CC-4-V1 | 8.0 | Δn [589 nm, 20°C]: | 0.0858 |
| CCD-3-3 | 4.0 | $\varepsilon_{\parallel}$ [1 kHz, 20°C]: | 3.0 |
| CC-3-O3 | 2.0 | $\varepsilon_{\perp}$ [1 kHz, 20°C]: | 5.5 |
| CC-3-5 | 12.0 | Δε [1 kHz, 20°C]: | -2.5 |
| CCP-3-1 | 11.0 | $\gamma_1$ [mPa·s, 20°C]: | 184 |
| CCY-3-O2 | 11.0 | $K_1$ [pN, 20°C]: | 25.5 |
| CCY-5-O2 | 4.0 | $K_3$ [pN, 20°C]: | 26.7 |
| CLOY-3-O2 | 12.75 | | |
| CLY-3-O2 | 10.0 | | |
| CP-3-O2 | 2.0 | | |
| Σ | 100.0 | | |

To the mixture M52 are added 100 ppm of the stabiliser ST-3b-1.

Mixture Example M53

| | | | |
|---|---|---|---|
| B(S)-2O-O4 | 3.5 | cl.p. [°C]: | 114.5 |
| CC-3-V | 12.0 | $n_e$ [589 nm, 20°C]: | 1.5670 |
| CC-3-V1 | 12.0 | $n_o$ [589 nm, 20°C]: | 1.4811 |
| CC-4-V1 | 8.0 | Δn [589 nm, 20°C]: | 0.0859 |
| CCD-3-3 | 4.0 | $\varepsilon_{\parallel}$ [1 kHz, 20°C]: | 3.0 |
| CC-3-O3 | 2.0 | $\varepsilon_{\perp}$ [1 kHz, 20°C]: | 5.5 |
| CC-3-5 | 12.0 | Δε [1 kHz, 20°C]: | -2.5 |

(continued)

| | | | |
|---|---|---|---|
| CCP-3-1 | 11.0 | $\gamma_1$ [mPa·s, 20°C]: | 172 |
| CCY-3-O2 | 11.0 | $K_1$ [pN, 20°C]: | 25.3 |
| CCY-5-O2 | 3.0 | $K_3$ [pN, 20°C]: | 26.1 |
| CLOY-3-O2 | 11.5 | | |
| CLY-3-O2 | 10.0 | | |
| Σ | 100.0 | | |

To the mixture M53 are added 100 ppm of the stabiliser S-1-1-1.

Mixture Example M54

| | | | |
|---|---|---|---|
| B(S)-2O-O4 | 2.0 | cl.p. [°C]: | 115 |
| CC-3-V | 8.75 | $n_e$ [589 nm, 20°C]: | 1.5682 |
| CC-3-V1 | 12.0 | $n_o$ [589 nm, 20°C]: | 1.4820 |
| CC-4-V1 | 8.0 | Δn [589 nm, 20°C]: | 0.0862 |
| CCD-3-3 | 3.0 | $\varepsilon_\parallel$ [1 kHz, 20°C]: | 3.0 |
| CC-3-O3 | 2.0 | $\varepsilon_\perp$ [1 kHz, 20°C]: | 5.3 |
| CC-3-5 | 12.0 | Δε [1 kHz, 20°C]: | -2.3 |
| CCP-3-1 | 12.0 | $\gamma_1$ [mPa·s, 20°C]: | 177 |
| CCP-3-3 | 3.0 | $K_1$ [pN, 20°C]: | 25.5 |
| CCY-3-O2 | 11.0 | $K_3$ [pN, 20°C]: | 26.8 |
| CCY-5-O2 | 1.0 | | |
| CLOY-3-O2 | 13.25 | | |
| CLY-3-O2 | 10.0 | | |
| CP-3-O2 | 2.0 | | |
| Σ | 100.0 | | |

To the mixture M54 are added 50 ppm of the stabiliser S-2-1-1.

Mixture Example M55

| | | | |
|---|---|---|---|
| B(S)-2O-O4 | 4.0 | cl.p. [°C]: | 117 |
| B(S)-2O-O5 | 1.25 | $n_e$ [589 nm, 20°C]: | 1.5785 |
| CC-3-V | 2.0 | $n_o$ [589 nm, 20°C]: | 1.4830 |
| CC-3-V1 | 12.0 | Δn [589 nm, 20°C]: | 0.0955 |
| CC-4-V1 | 8.0 | $\varepsilon_\parallel$ [1 kHz, 20°C]: | 3.2 |
| CCD-3-3 | 3.0 | $\varepsilon_\perp$ [1 kHz, 20°C]: | 7.0 |
| CC-3-5 | 12.0 | Δε [1 kHz, 20°C]: | -3.8 |
| CCP-3-1 | 11.0 | $\gamma_1$ [mPa·s, 20°C]: | 251 |
| CCP-3-3 | 1.5 | $K_1$ [pN, 20°C]: | 26.7 |
| CCY-3-O2 | 11.0 | $K_3$ [pN, 20°C]: | 29.1 |
| CLOY-3-O2 | 22.25 | | |
| CLY-3-O2 | 10.0 | | |

(continued)

| | |
|---|---|
| CP-3-O2 | 2.0 |
| Σ | 100.0 |

To the mixture M55 are added 100 ppm of the stabiliser ST-8-1.

Mixture Example M56

| | | | |
|---|---|---|---|
| B(S)-2O-O4 | 1.7 | cl.p. [°C]: | 116.5 |
| CC-3-V | 13.1 | $n_e$ [589 nm, 20°C]: | 1.5670 |
| CC-3-V1 | 12.0 | $n_o$ [589 nm, 20°C]: | 1.4811 |
| CC-4-V1 | 8.0 | $\Delta n$ [589 nm, 20°C]: | 0.0859 |
| CCD-3-3 | 3.0 | $\varepsilon_{\parallel}$ [1 kHz, 20°C]: | 3.0 |
| CC-3-5 | 12.0 | $\varepsilon_{\perp}$ [1 kHz, 20°C]: | 5.3 |
| CCP-3-1 | 11.0 | $\Delta\varepsilon$ [1 kHz, 20°C]: | -2.3 |
| CCP-3-3 | 1.5 | $\gamma_1$ [mPa·s, 20°C]: | 172 |
| CCY-3-O2 | 11.0 | $K_1$ [pN, 20°C]: | 25.5 |
| CCY-5-O2 | 1.2 | $K_3$ [pN, 20°C]: | 26.5 |
| CLOY-3-O2 | 11.5 | | |
| CLY-3-O2 | 10.0 | | |
| CLY-5-O2 | 4.0 | | |
| Σ | 100.0 | | |

To the mixture M56 are added 50 ppm of the stabiliser ST-2a-2 and 500 ppm of the stabiliser ST-3a-1.

Mixture Example M57

| | | | |
|---|---|---|---|
| B(S)-2O-O4 | 1.7 | cl.p. [°C]: | 116 |
| CC-3-V | 9.4 | $n_e$ [589 nm, 20°C]: | 1.5669 |
| CC-3-V1 | 12.0 | $n_o$ [589 nm, 20°C]: | 1.4811 |
| CC-4-V1 | 8.0 | $\Delta n$ [589 nm, 20°C]: | 0.0858 |
| CCD-3-3 | 3.0 | $\varepsilon_{\parallel}$ [1 kHz, 20°C]: | 3.0 |
| CC-3-O3 | 2.0 | $\varepsilon_{\perp}$ [1 kHz, 20°C]: | 5.3 |
| CC-3-5 | 12.0 | $\Delta\varepsilon$ [1 kHz, 20°C]: | -2.3 |
| CCP-3-1 | 11.0 | $\gamma_1$ [mPa·s, 20°C]: | 176 |
| CCP-3-3 | 2.0 | $K_1$ [pN, 20°C]: | 25.6 |
| CCY-3-O2 | 11.0 | $K_3$ [pN, 20°C]: | 26.6 |
| CCY-5-O2 | 2.6 | | |
| CLOY-3-O2 | 11.3 | | |
| CLY-3-O2 | 10.0 | | |
| CLY-5-O2 | 2.0 | | |
| CP-3-O2 | 2.0 | | |
| Σ | 100.0 | | |

To the mixture M57 are added 50 ppm of the stabiliser ST-12.

Mixture Example M58

| | | | |
|---|---|---|---|
| B(S)-2O-O4 | 2.1 | cl.p. [°C]: | 117.5 |
| CC-3-V | 8.4 | $n_e$ [589 nm, 20°C]: | 1.5666 |
| CC-3-V1 | 12.0 | $n_o$ [589 nm, 20°C]: | 1.4810 |
| CC-4-V1 | 8.0 | Δn [589 nm, 20°C]: | 0.0856 |
| CCD-3-3 | 3.0 | $\varepsilon_\parallel$ [1 kHz, 20°C]: | 3.0 |
| CCD-5-2 | 3.0 | $\varepsilon_\perp$ [1 kHz, 20°C]: | 5.3 |
| CC-3-O3 | 2.0 | Δε [1 kHz, 20°C]: | -2.3 |
| CC-3-5 | 12.0 | $\gamma_1$ [mPa·s, 20°C]: | 187 |
| CCP-3-1 | 11.0 | $K_1$ [pN, 20°C]: | 26.0 |
| CCY-3-O2 | 11.0 | $K_3$ [pN, 20°C]: | 26.8 |
| CCY-5-O2 | 4.0 | | |
| CLOY-3-O2 | 11.5 | | |
| CLY-3-O2 | 10.0 | | |
| CP-3-O2 | 2.0 | | |
| Σ | 100.0 | | |

To the mixture M58 are added 150 ppm of the stabiliser ST-3c.

Mixture Example M59

| | | | |
|---|---|---|---|
| B(S)-2O-O4 | 1.75 | cl.p. [°C]: | 117 |
| CC-3-V | 8.75 | $n_e$ [589 nm, 20°C]: | 1.5664 |
| CC-3-V1 | 12.0 | $n_o$ [589 nm, 20°C]: | 1.4809 |
| CC-4-V1 | 8.0 | Δn [589 nm, 20°C]: | 0.0855 |
| CCD-3-3 | 5.0 | $\varepsilon_\parallel$ [1 kHz, 20°C]: | 3.0 |
| CC-3-O3 | 2.0 | $\varepsilon_\perp$ [1 kHz, 20°C]: | 5.4 |
| CC-3-5 | 12.0 | Δε [1 kHz, 20°C]: | -2.4 |
| CCP-3-1 | 11.0 | $\gamma_1$ [mPa·s, 20°C]: | 185 |
| CCY-3-O2 | 11.0 | $K_1$ [pN, 20°C]: | 25.9 |
| CCY-5-O2 | 4.0 | $K_3$ [pN, 20°C]: | 27.0 |
| CLOY-3-O2 | 12.5 | | |
| CLY-3-O2 | 10.0 | | |
| CP-3-O2 | 2.0 | | |
| Σ | 100.0 | | |

To the mixture M59 are added 100 ppm of the stabiliser ST-3d.

Mixture Example M60

| | | | |
|---|---|---|---|
| B(S)-2O-O4 | 4.0 | cl.p. [°C]: | 120 |
| B(S)-2O-O5 | 1.5 | $n_e$ [589 nm, 20°C]: | 1.5716 |
| CC-3-V | 6.0 | $n_o$ [589 nm, 20°C]: | 1.4815 |
| CC-3-V1 | 12.0 | Δn [589 nm, 20°C]: | 0.0901 |
| CC-4-V1 | 10.0 | $\varepsilon_\parallel$ [1 kHz, 20°C]: | 3.1 |

(continued)

| | | | |
|---|---|---|---|
| CCD-3-3 | 7.0 | $\varepsilon_\perp$ [1 kHz, 20°C]: | 5.9 |
| CC-3-O3 | 2.0 | $\Delta\varepsilon$ [1 kHz, 20°C]: | -2.8 |
| CC-3-5 | 12.0 | $\gamma_1$ [mPa·s, 20°C]: | 196 |
| CCP-3-1 | 10.0 | $K_1$ [pN, 20°C]: | 28.7 |
| CCY-3-O2 | 11.0 | $K_3$ [pN, 20°C]: | 27.2 |
| CLOY-3-O2 | 12.1 | | |
| CLY-3-O2 | 10.0 | | |
| CLY-5-O2 | 2.4 | | |
| Σ | 100.0 | | |

To the mixture M60 are added 100 ppm of the stabiliser ST-2a-2.

Mixture Example M61

| | | | |
|---|---|---|---|
| B(S)-2O-O4 | 3.5 | cl.p. [°C]: | 117 |
| CC-3-V | 7.5 | $n_e$ [589 nm, 20°C]: | 1.5681 |
| CC-3-V1 | 12.0 | $n_o$ [589 nm, 20°C]: | 1.4811 |
| CC-4-V1 | 10.0 | $\Delta n$ [589 nm, 20°C]: | 0.0870 |
| CCD-3-3 | 7.0 | $\varepsilon_\parallel$ [1 kHz, 20°C]: | 3.1 |
| CC-3-O3 | 2.0 | $\varepsilon_\perp$ [1 kHz, 20°C]: | 5.8 |
| CC-3-5 | 12.0 | $\Delta\varepsilon$ [1 kHz, 20°C]: | -2.7 |
| CCP-3-1 | 8.7 | $\gamma_1$ [mPa·s, 20°C]: | 196 |
| CCY-3-O2 | 11.0 | $K_1$ [pN, 20°C]: | 27.1 |
| CLOY-3-O2 | 15.0 | $K_3$ [pN, 20°C]: | 27.1 |
| CLY-3-O2 | 10.0 | | |
| CLY-5-O2 | 1.3 | | |
| Σ | 100.0 | | |

To the mixture M61 are added 150 ppm of the stabiliser ST-3a-1.

Mixture Example M62

| | | | |
|---|---|---|---|
| B(S)-2O-O4 | 4.0 | cl.p. [°C]: | 113.5 |
| B(S)-2O-O5 | 2.5 | $n_e$ [589 nm, 20°C]: | 1.5709 |
| CC-3-V | 7.2 | $n_o$ [589 nm, 20°C]: | 1.4815 |
| CC-3-V1 | 12.0 | $\Delta n$ [589 nm, 20°C]: | 0.0894 |
| CC-4-V1 | 10.0 | $\varepsilon_\parallel$ [1 kHz, 20°C]: | 3.2 |
| CCD-3-3 | 7.0 | $\varepsilon_\perp$ [1 kHz, 20°C]: | 6.0 |
| CC-3-O3 | 2.0 | $\Delta\varepsilon$ [1 kHz, 20°C]: | -2.8 |
| CC-3-5 | 12.5 | $\gamma_1$ [mPa·s, 20°C]: | 176 |
| CCP-3-1 | 7.7 | $K_1$ [pN, 20°C]: | 26.4 |
| CCY-3-O2 | 11.0 | $K_3$ [pN, 20°C]: | 25.9 |
| CLOY-3-O2 | 12.1 | | |
| CLY-3-O2 | 10.0 | | |

(continued)

| | |
|---|---|
| CP-3-O2 | 2.0 |
| Σ | 100.0 |

To the mixture M62 are added 100 ppm of the stabiliser ST-3b-1.

Mixture Example M63

| | | | |
|---|---|---|---|
| B(S)-2O-O4 | 4.0 | cl.p. [°C]: | 104.5 |
| B(S)-2O-O5 | 5.0 | $n_e$ [589 nm, 20°C]: | 1.5745 |
| B(S)-2O-O6 | 1.0 | $n_o$ [589 nm, 20°C]: | 1.4833 |
| CC-3-2V1 | 14.0 | $\Delta n$ [589 nm, 20°C]: | 0.0912 |
| CC-3-V1 | 12.0 | $\varepsilon_{\parallel}$ [1 kHz, 20°C]: | 3.2 |
| CC-3-V | 7.0 | $\varepsilon_{\perp}$ [1 kHz, 20°C]: | 6.2 |
| CC-3-5 | 12.0 | $\Delta\varepsilon$ [1 kHz, 20°C]: | -3.0 |
| CCP-3-1 | 15.0 | $\gamma_1$ [mPa·s, 20°C]: | 185 |
| CCD-3-3 | 5.0 | $K_1$ [pN, 20°C]: | 26.7 |
| CLOY-3-O2 | 25.0 | $K_3$ [pN, 20°C]: | 27.3 |
| Σ | 100.0 | | |

To the mixture M63 are added 100 ppm of the stabiliser S-1-1-1.

Mixture Example M64

| | | | |
|---|---|---|---|
| B(S)-2O-O5 | 1.7 | cl.p. [°C]: | 111.0 |
| CC-3-V | 10.9 | | |
| CC-3-V1 | 12.0 | | |
| CC-4-V1 | 8.0 | | |
| CCD-V-1 | 4.0 | | |
| CC-3-O3 | 2.0 | | |
| CC-3-5 | 12.0 | | |
| CCP-3-1 | 7.8 | | |
| CCY-3-O2 | 11.0 | | |
| CCY-5-O2 | 4.6 | | |
| CLOY-3-O2 | 15.0 | | |
| CLY-3-O2 | 9.0 | | |
| CP-3-O2 | 2.0 | | |
| Σ | 100.0 | | |

To the mixture M64 are added 150 ppm of the stabiliser ST-2a-1, 50 ppm of the stabiliser ST-2a-2 and 300 ppm of the stabiliser ST-3a-1.

Mixture Example M65

| | | | |
|---|---|---|---|
| B(S)-2O-O5 | 1.7 | cl.p. [°C]: | 112.0 |
| CC-3-V | 10.9 | Δn [589 nm, 20°C]: | 0.0837 |
| CC-3-V1 | 12.0 | $\varepsilon_{\parallel}$ [1 kHz, 20°C]: | 3.1 |
| CC-4-V1 | 8.0 | $\varepsilon_{\perp}$ [1 kHz, 20°C]: | 5.7 |
| CCA-3-3 | 4.0 | Δε [1 kHz, 20°C]: | -2.6 |
| CC-3-O3 | 2.0 | | |
| CC-3-5 | 12.0 | | |
| CCP-3-1 | 7.8 | | |
| CCY-3-O2 | 11.0 | | |
| CCY-5-O2 | 4.6 | | |
| CLOY-3-O2 | 15.0 | | |
| CLY-3-O2 | 9.0 | | |
| CP-3-O2 | 2.0 | | |
| Σ | 100.0 | | |

To the mixture M65 are added 100 ppm of the stabiliser ST-8-1.

Mixture Example M66

| | | | |
|---|---|---|---|
| B(S)-2O-O4 | 4.0 | cl.p. [°C]: | 119.5 |
| B(S)-2O-O5 | 3.6 | Δn [589 nm, 20°C]: | 0.0955 |
| CC-3-V | 5.0 | $\varepsilon_{\parallel}$ [1 kHz, 20°C]: | 3.2 |
| CC-3-V1 | 12.0 | $\varepsilon_{\perp}$ [1 kHz, 20°C]: | 6.7 |
| CC-4-V1 | 8.0 | Δε [1 kHz, 20°C]: | -3.5 |
| CCA-5-V | 3.0 | | |
| CC-3-O3 | 3.0 | | |
| CC-3-5 | 12.0 | | |
| CCP-3-1 | 10.0 | | |
| CCY-3-O2 | 11.0 | | |
| CLOY-3-O2 | 11.0 | | |
| CLY-3-O2 | 9.0 | | |
| CLY-4-O2 | 3.8 | | |
| CLY-5-O2 | 4.6 | | |
| Σ | 100.0 | | |

To the mixture M66 are added 50 ppm of the stabiliser ST-9-1.

Mixture Example M67

| | | | |
|---|---|---|---|
| B(S)-2O-O5 | 1.7 | cl.p. [°C]: | 108.5 |
| CC-3-V | 10.9 | | |
| CC-3-V1 | 12.0 | | |
| CC-4-V1 | 8.0 | | |
| CCA-V-1 | 4.0 | | |
| CC-3-O3 | 2.0 | | |
| CC-3-5 | 12.0 | | |
| CCP-3-1 | 7.8 | | |

(continued)

| | |
|---|---|
| CCY-3-O2 | 11.0 |
| CCY-5-O2 | 4.6 |
| CLOY-3-O2 | 15.0 |
| CLY-3-O2 | 9.0 |
| CP-3-O2 | 2.0 |
| Σ | 100.0 |

To the mixture M67 are added 50 ppm of the stabiliser ST-2a-2 and 500 ppm of the stabiliser ST-3a-1.

Mixture Example M68

| | | | |
|---|---|---|---|
| B(S)-2O-O5 | 1.7 | cl.p. [°C]: | 110.5 |
| CC-3-V | 10.9 | Δn [589 nm, 20°C]: | 0.0839 |
| CC-3-V1 | 12.0 | $\varepsilon_{\parallel}$ [1 kHz, 20°C]: | 3.1 |
| CC-4-V1 | 8.0 | $\varepsilon_{\perp}$ [1 kHz, 20°C]: | 6.0 |
| CCD-3-3 | 4.0 | Δε [1 kHz, 20°C]: | -2.9 |
| CC-3-O3 | 2.0 | $\gamma_1$ [mPa·s, 20°C]: | 181 |
| CC-3-5 | 12.0 | $K_1$ [pN, 20°C]: | 24.2 |
| CCP-3-1 | 7.8 | $K_3$ [pN, 20°C]: | 26.1 |
| CCY-3-O2 | 11.0 | | |
| CCOY-3-O2 | 4.6 | | |
| CLOY-3-O2 | 15.0 | | |
| CLY-3-O2 | 9.0 | | |
| CP-3-O2 | 2.0 | | |
| Σ | 100.0 | | |

To the mixture M68 are added 150 ppm of the stabiliser ST-3c.

Mixture Example M69

| | | | |
|---|---|---|---|
| B(S)-2O-O5 | 1.7 | cl.p. [°C]: | 103.0 |
| CC-3-V | 10.9 | Δn [589 nm, 20°C]: | 0.0826 |
| CC-3-V1 | 12.0 | $\varepsilon_{\parallel}$ [1 kHz, 20°C]: | 3.1 |
| CC-4-V1 | 8.0 | $\varepsilon_{\perp}$ [1 kHz, 20°C]: | 6.0 |
| CCD-3-3 | 4.0 | Δε [1 kHz, 20°C]: | -2.9 |
| CC-3-O3 | 2.0 | $\gamma_1$ [mPa·s, 20°C]: | 163 |
| CC-3-5 | 12.0 | $K_1$ [pN, 20°C]: | 22.6 |
| CCP-3-1 | 7.8 | $K_3$ [pN, 20°C]: | 24.1 |
| CCY-3-O2 | 11.0 | | |
| COY-3-O2 | 4.6 | | |
| CLOY-3-O2 | 15.0 | | |
| CLY-3-O2 | 9.0 | | |
| CP-3-O2 | 2.0 | | |
| Σ | 100.0 | | |

To the mixture M69 are added 100 ppm of the stabiliser ST-3d.

Mixture Example M70

| | | | |
|---|---|---|---|
| B(S)-2O-O5 | 1.7 | cl.p. [°C]: | 102.5 |
| CC-3-V | 10.9 | Δn [589 nm, 20°C]: | 0.0823 |
| CC-3-V1 | 12.0 | $\varepsilon_{\parallel}$ [1 kHz, 20°C]: | 3.1 |
| CC-4-V1 | 8.0 | $\varepsilon_{\perp}$ [1 kHz, 20°C]: | 5.8 |
| CCD-3-3 | 4.0 | Δε [1 kHz, 20°C]: | -2.7 |
| CC-3-O3 | 2.0 | $\gamma_1$ [mPa·s, 20°C]: | 162 |
| CC-3-5 | 12.0 | $K_1$ [pN, 20°C]: | 22.6 |
| CCP-3-1 | 7.8 | $K_3$ [pN, 20°C]: | 24.3 |
| CCY-3-O2 | 11.0 | | |
| CEY-3-O2 | 4.6 | | |
| CLOY-3-O2 | 15.0 | | |
| CLY-3-O2 | 9.0 | | |
| CP-3-O2 | 2.0 | | |
| Σ | 100.0 | | |

To the mixture M70 are added 100 ppm of the stabiliser ST-2a-2.

Mixture Example M71

| | | | |
|---|---|---|---|
| B(S)-2O-O5 | 1.7 | cl.p. [°C]: | 110.0 |
| CC-3-V | 10.9 | Δn [589 nm, 20°C]: | 0.0842 |
| CC-3-V1 | 12.0 | $\varepsilon_{\parallel}$ [1 kHz, 20°C]: | 3.1 |
| CC-4-V1 | 8.0 | $\varepsilon_{\perp}$ [1 kHz, 20°C]: | 5.8 |
| CCD-3-3 | 4.0 | Δε [1 kHz, 20°C]: | -2.7 |
| CC-3-O3 | 2.0 | $\gamma_1$ [mPa·s, 20°C]: | 180 |
| CC-3-5 | 12.0 | $K_1$ [pN, 20°C]: | 24.6 |
| CCP-3-1 | 7.8 | $K_3$ [pN, 20°C]: | 26.5 |
| CCY-3-O2 | 11.0 | | |
| CCEY-3-O2 | 4.6 | | |
| CLOY-3-O2 | 15.0 | | |
| CLY-3-O2 | 9.0 | | |
| CP-3-O2 | 2.0 | | |
| Σ | 100.0 | | |

To the mixture M71 are added 150 ppm of the stabiliser ST-3a-1.

Mixture Example M72

| | | | |
|---|---|---|---|
| B(P)-2O-O3 | 1.7 | cl.p. [°C]: | 112 |
| CC-3-V | 10.9 | Δn [589 nm, 20°C]: | 0.0846 |
| CC-3-V1 | 12.0 | $\varepsilon_{\parallel}$ [1 kHz, 20°C]: | 3.1 |
| CC-4-V1 | 8.0 | $\varepsilon_{\perp}$ [1 kHz, 20°C]: | 5.6 |
| CCD-3-3 | 4.0 | Δε [1 kHz, 20°C]: | -2.5 |
| CC-3-O3 | 2.0 | $\gamma_1$ [mPa·s, 20°C]: | 181 |

(continued)

| | | | |
|---|---|---|---|
| CC-3-5 | 12.0 | $K_1$ [pN, 20°C]: | 24.3 |
| CCP-3-1 | 7.8 | $K_3$ [pN, 20°C]: | 26.0 |
| CCY-3-O2 | 11.0 | | |
| CCY-5-O2 | 4.6 | | |
| CLOY-3-O2 | 15.0 | | |
| CLY-3-O2 | 9.0 | | |
| CP-3-O2 | 2.0 | | |
| Σ | 100.0 | | |

To the mixture M72 are added 100 ppm of the stabiliser ST-3b-1.

Mixture Example M73

| | | | |
|---|---|---|---|
| B(P)-2O-O4 | 1.7 | cl.p. [°C]: | 112 |
| CC-3-V | 10.9 | Δn [589 nm, 20°C]: | 0.0845 |
| CC-3-V1 | 12.0 | $\varepsilon_{\parallel}$ [1 kHz, 20°C]: | 3.1 |
| CC-4-V1 | 8.0 | $\varepsilon_{\perp}$ [1 kHz, 20°C]: | 5.6 |
| CCD-3-3 | 4.0 | Δε [1 kHz, 20°C]: | -2.5 |
| CC-3-O3 | 2.0 | $\gamma_1$ [mPa·s, 20°C]: | 181 |
| CC-3-5 | 12.0 | $K_1$ [pN, 20°C]: | 24.4 |
| CCP-3-1 | 7.8 | $K_3$ [pN, 20°C]: | 26.1 |
| CCY-3-O2 | 11.0 | | |
| CCY-5-O2 | 4.6 | | |
| CLOY-3-O2 | 15.0 | | |
| CLY-3-O2 | 9.0 | | |
| CP-3-O2 | 2.0 | | |
| Σ | 100.0 | | |

To the mixture M73 are added 100 ppm of the stabiliser S-1-1-1.

Mixture Example M74

| | | | |
|---|---|---|---|
| B(A)-2O-O2 | 1.7 | cl.p. [°C]: | 111.5 |
| CC-3-V | 10.9 | Δn [589 nm, 20°C]: | 0.0831 |
| CC-3-V1 | 12.0 | $\varepsilon_{\parallel}$ [1 kHz, 20°C]: | 3.1 |
| CC-4-V1 | 8.0 | $\varepsilon_{\perp}$ [1 kHz, 20°C]: | 5.6 |
| CCD-3-3 | 4.0 | Δε [1 kHz, 20°C]: | -2.5 |
| CC-3-O3 | 2.0 | $\gamma_1$ [mPa·s, 20°C]: | 181 |
| CC-3-5 | 12.0 | $K_1$ [pN, 20°C]: | 24.2 |
| CCP-3-1 | 7.8 | $K_3$ [pN, 20°C]: | 26.2 |
| CCY-3-O2 | 11.0 | | |
| CCY-5-O2 | 4.6 | | |
| CLOY-3-O2 | 15.0 | | |
| CLY-3-O2 | 9.0 | | |
| CP-3-O2 | 2.0 | | |
| Σ | 100.0 | | |

To the mixture M74 are added 50 ppm of the stabiliser S-2-1-1.

Mixture Example M75

| | | | |
|---|---|---|---|
| B(S)-4O-O5 | 1.7 | cl.p. [°C]: | 111.5 |
| CC-3-V | 10.9 | Δn [589 nm, 20°C]: | 0.0839 |
| CC-3-V1 | 12.0 | $\varepsilon_{\parallel}$ [1 kHz, 20°C]: | 3.1 |
| CC-4-V1 | 8.0 | $\varepsilon_{\perp}$ [1 kHz, 20°C]: | 5.7 |
| CCD-3-3 | 4.0 | Δε [1 kHz, 20°C]: | -2.6 |
| CC-3-O3 | 2.0 | $\gamma_1$ [mPa·s, 20°C]: | 180 |
| CC-3-5 | 12.0 | $K_1$ [pN, 20°C]: | 24.2 |
| CCP-3-1 | 7.8 | $K_3$ [pN, 20°C]: | 25.9 |
| CCY-3-O2 | 11.0 | | |
| CCY-5-O2 | 4.6 | | |
| CLOY-3-O2 | 15.0 | | |
| CLY-3-O2 | 9.0 | | |
| CP-3-O2 | 2.0 | | |
| Σ | 100.0 | | |

To the mixture M75 are added 100 ppm of the stabiliser ST-8-1.

Mixture Example M76

| | | | |
|---|---|---|---|
| B(S)-4O-O1(c5) | 1.7 | cl.p. [°C]: | 111.5 |
| CC-3-V | 10.9 | Δn [589 nm, 20°C]: | 0.0838 |
| CC-3-V1 | 12.0 | $\varepsilon_{\parallel}$ [1 kHz, 20°C]: | 3.1 |
| CC-4-V1 | 8.0 | $\varepsilon_{\perp}$ [1 kHz, 20°C]: | 5.7 |
| CCD-3-3 | 4.0 | Δε [1 kHz, 20°C]: | -2.6 |
| CC-3-O3 | 2.0 | $\gamma_1$ [mPa·s, 20°C]: | 182 |
| CC-3-5 | 12.0 | $K_1$ [pN, 20°C]: | 24.3 |
| CCP-3-1 | 7.8 | $K_3$ [pN, 20°C]: | 25.9 |
| CCY-3-O2 | 11.0 | | |
| CCY-5-O2 | 4.6 | | |
| CLOY-3-O2 | | | 15.0 |
| CLY-3-O2 | | | 9.0 |
| CP-3-O2 | | | 2.0 |
| Σ | | | 100.0 |

wherein B(S)-4O-O1(c5) is

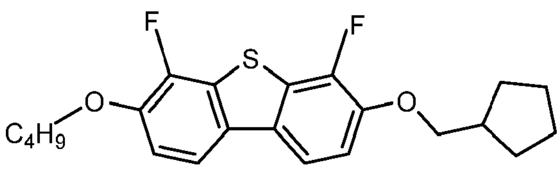

B(S)-4O-O1(c5)

To the mixture M76 are added 50 ppm of the stabiliser ST-9-1.

Mixture Example M77

| | | | |
|---|---|---|---|
| B(S)-2O-O1(c5) | 1.7 | cl.p. [°C]: | 111.5 |
| CC-3-V | 10.9 | Δn [589 nm, 20°C]: | 0.0840 |
| CC-3-V1 | 12.0 | $\varepsilon_{\parallel}$ [1 kHz, 20°C]: | 3.1 |
| CC-4-V1 | 8.0 | $\varepsilon_{\perp}$ [1 kHz, 20°C]: | 5.7 |
| CCD-3-3 | 4.0 | Δε [1 kHz, 20°C]: | -2.6 |
| CC-3-O3 | 2.0 | $\gamma_1$ [mPa·s, 20°C]: | 182 |
| CC-3-5 | 12.0 | $K_1$ [pN, 20°C]: | 24.4 |
| CCP-3-1 | 7.8 | $K_3$ [pN, 20°C]: | 26.1 |
| CCY-3-O2 | 11.0 | | |
| CCY-5-O2 | 4.6 | | |
| CLOY-3-O2 | 15.0 | | |
| CLY-3-O2 | 9.0 | | |
| CP-3-O2 | 2.0 | | |
| Σ | 100.0 | | |

wherein B(S)-2O-O1(c5) is

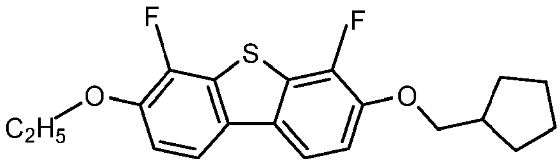

B(S)-2O-O1(c5)

To the mixture M77 are added 50 ppm of the stabiliser ST-12.

Mixture Example M78

| | | | |
|---|---|---|---|
| B(S)-1V1O-O1(c5) | 1.7 | cl.p. [°C]: | 111.5 |
| CC-3-V | 10.9 | Δn [589 nm, 20°C]: | 0.0841 |
| CC-3-V1 | 12.0 | $\varepsilon_{\parallel}$ [1 kHz, 20°C]: | 3.1 |
| CC-4-V1 | 8.0 | $\varepsilon_{\perp}$ [1 kHz, 20°C]: | 5.7 |
| CCD-3-3 | 4.0 | Δε [1 kHz, 20°C]: | -2.6 |
| CC-3-O3 | 2.0 | $\gamma_1$ [mPa·s, 20°C]: | 183 |
| CC-3-5 | 12.0 | $K_1$ [pN, 20°C]: | 24.4 |
| CCP-3-1 | 7.8 | $K_3$ [pN, 20°C]: | 26.1 |
| CCY-3-O2 | 11.0 | | |
| CCY-5-O2 | 4.6 | | |
| CLOY-3-O2 | 15.0 | | |
| CLY-3-O2 | 9.0 | | |
| CP-3-O2 | 2.0 | | |
| Σ | 100.0 | | |

wherein B(S)-1V1O-O1(c5) is

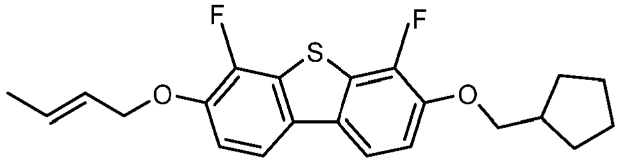

B(S)-1V1O-O1(c5)

To the mixture M78 are added 150 ppm of the stabiliser ST-3c.

Mixture Example M79

| | | | |
|---|---|---|---|
| B(S)-2O-O5 | 1.7 | cl.p. [°C]: | 108.5 |
| CC-3-V | 10.9 | $\Delta n$ [589 nm, 20°C]: | 0.0827 |
| CC-3-V1 | 12.0 | $\varepsilon_{\parallel}$ [1 kHz, 20°C]: | 3.1 |
| CC-4-V1 | 8.0 | $\varepsilon_{\perp}$ [1 kHz, 20°C]: | 5.9 |
| CCD-3-3 | 4.0 | $\Delta\varepsilon$ [1 kHz, 20°C]: | -2.8 |
| CC-3-O3 | 2.0 | $\gamma_1$ [mPa·s, 20°C]: | 182 |
| CC-3-5 | 12.0 | $K_1$ [pN, 20°C]: | 23.6 |
| CCP-3-1 | 7.8 | $K_3$ [pN, 20°C]: | 25.8 |
| CCY-3-O2 | 11.0 | | |
| CAIY-3-O2 | 4.6 | | |
| CLOY-3-O2 | 15.0 | | |
| CLY-3-O2 | 9.0 | | |
| CP-3-O2 | 2.0 | | |
| Σ | 100.0 | | |

To the mixture M79 are added 150 ppm of the stabiliser ST-2a-1, 50 ppm of the stabiliser ST-2a-2 and 300 ppm of the stabiliser ST-3a-1.

Mixture Example M80

| | | | |
|---|---|---|---|
| B(S)-2O-O5 | 1.7 | cl.p. [°C]: | 113 |
| CC-3-V | 10.9 | $\Delta n$ [589 nm, 20°C]: | 0.0845 |
| CC-3-V1 | 12.0 | $\varepsilon_{\parallel}$ [1 kHz, 20°C]: | 3.1 |
| CC-4-V1 | 8.0 | $\varepsilon_{\perp}$ [1 kHz, 20°C]: | 5.7 |
| CCD-3-3 | 4.0 | $\Delta\varepsilon$ [1 kHz, 20°C]: | -2.6 |
| CC-3-O3 | 2.0 | $\gamma_1$ [mPa·s, 20°C]: | |
| CC-3-5 | 12.0 | $K_1$ [pN, 20°C]: | |
| CCP-1V2-1 | 7.8 | $K_3$ [pN, 20°C]: | |
| CCY-3-O2 | 11.0 | | |
| CCY-5-O2 | 4.6 | | |
| CLOY-3-O2 | | | 15.0 |
| CLY-3-O2 | | | 9.0 |
| CP-3-O2 | | | 2.0 |
| Σ | | | 100.0 |

To the mixture M80 are added 100 ppm of the stabiliser ST-2a-2.

Mixture Example M81

| | | | |
|---|---|---|---|
| B(S)-2O-O5 | 1.7 | cl.p. [°C]: | 106.5 |
| CC-3-V | 10.9 | Δn [589 nm, 20°C]: | 0.0905 |
| CC-3-V1 | 12.0 | $\varepsilon_{\parallel}$ [1 kHz, 20°C]: | 3.1 |
| CC-4-V1 | 8.0 | $\varepsilon_{\perp}$ [1 kHz, 20°C]: | 5.7 |
| CCD-3-3 | 4.0 | Δε [1 kHz, 20°C]: | -2.6 |
| CC-3-O3 | 2.0 | $\gamma_1$ [mPa·s, 20°C]: | 173 |
| CC-3-5 | 7.0 | $K_1$ [pN, 20°C]: | 23.1 |
| CCP-3-1 | 7.8 | $K_3$ [pN, 20°C]: | 24.9 |
| CCY-3-O2 | 11.0 | | |
| CCY-5-O2 | 4.6 | | |
| CLOY-3-O2 | 15.0 | | |
| CLY-3-O2 | 9.0 | | |
| CP-3-O2 | 2.0 | | |
| PP-1-3 | 5.0 | | |
| Σ | 100.0 | | |

To the mixture M81 are added 150 ppm of the stabiliser ST-3a-1.

Mixture Example M82

| | | | |
|---|---|---|---|
| B(S)-2O-O5 | 1.7 | cl.p. [°C]: | 106.5 |
| CC-3-V | 10.9 | Δn [589 nm, 20°C]: | 0.0898 |
| CC-3-V1 | 12.0 | $\varepsilon_{\parallel}$ [1 kHz, 20°C]: | 3.1 |
| CC-4-V1 | 8.0 | $\varepsilon_{\perp}$ [1 kHz, 20°C]: | 5.7 |
| CCD-3-3 | 4.0 | Δε [1 kHz, 20°C]: | -2.6 |
| CC-3-O3 | 2.0 | $\gamma_1$ [mPa·s, 20°C]: | 175 |
| CC-3-5 | 7.0 | $K_1$ [pN, 20°C]: | 23.0 |
| CCP-3-1 | 7.8 | $K_3$ [pN, 20°C]: | 25.0 |
| CCY-3-O2 | 11.0 | | |
| CCY-5-O2 | 4.6 | | |
| CLOY-3-O2 | 15.0 | | |
| CLY-3-O2 | 9.0 | | |
| CP-3-O2 | 2.0 | | |
| PP-1-5 | 5.0 | | |
| Σ | 100.0 | | |

To the mixture M82 are added 100 ppm of the stabiliser ST-3b-1.

Mixture Example M83

| | | | |
|---|---|---|---|
| B(S)-2O-O5 | 1.7 | cl.p. [°C]: | 94.5 |
| CC-3-V | 10.9 | Δn [589 nm, 20°C]: | 0.0807 |
| CC-3-V1 | 12.0 | $\varepsilon_{\parallel}$ [1 kHz, 20°C]: | 3.1 |
| CC-4-V1 | 8.0 | $\varepsilon_{\perp}$ [1 kHz, 20°C]: | 5.7 |

(continued)

| | | | |
|---|---|---|---|
| CCD-3-3 | 4.0 | Δε [1 kHz, 20°C]: | -2.6 |
| CC-3-O3 | 2.0 | $\gamma_1$ [mPa·s, 20°C]: | 148 |
| CC-3-5 | 12.0 | $K_1$ [pN, 20°C]: | 20.6 |
| CCP-3-1 | 7.8 | $K_3$ [pN, 20°C]: | 22.1 |
| CCY-3-O2 | 11.0 | | |
| CCY-5-O2 | 4.6 | | |
| CLOY-3-O2 | 15.0 | | |
| LY-3-O2 | 9.0 | | |
| CP-3-O2 | 2.0 | | |
| Σ | 100.0 | | |

To the mixture M83 are added 100 ppm of the stabiliser S-1-1-1.

Mixture Example M84

| | | | |
|---|---|---|---|
| B(S)-2O-O5 | 1.7 | cl.p. [°C]: | 96.5 |
| CC-3-V | 10.9 | Δn [589 nm, 20°C]: | 0.0822 |
| CC-3-V1 | 12.0 | $\varepsilon_{\parallel}$ [1 kHz, 20°C]: | 3.1 |
| CC-4-V1 | 8.0 | $\varepsilon_{\perp}$ [1 kHz, 20°C]: | 5.7 |
| CCD-3-3 | 4.0 | Δε [1 kHz, 20°C]: | -2.6 |
| CC-3-O3 | 2.0 | $\gamma_1$ [mPa·s, 20°C]: | 163 |
| CC-3-5 | 12.0 | $K_1$ [pN, 20°C]: | 21.9 |
| CCP-3-1 | 7.8 | $K_3$ [pN, 20°C]: | 22.5 |
| CCY-3-O2 | 11.0 | | |
| CCY-5-O2 | 4.6 | | |
| CLOY-3-O2 | 15.0 | | |
| LY-(c5)-O2 | 9.0 | | |
| CP-3-O2 | 2.0 | | |
| Σ | 100.0 | | |

wherein LY-(c5)-O2 is

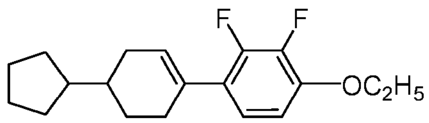

LY-(c5)-O2

To the mixture M84 are added 50 ppm of the stabiliser S-2-1-1.

Mixture Example M85

| | | | |
|---|---|---|---|
| B(S)-2O-O5 | 1.7 | cl.p. [°C]: | 100 |
| CC-3-V | 10.9 | Δn [589 nm, 20°C]: | 0.0821 |
| CC-3-V1 | 12.0 | $\varepsilon_{\parallel}$ [1 kHz, 20°C]: | 3.1 |
| CC-4-V1 | 8.0 | $\varepsilon_{\perp}$ [1 kHz, 20°C]: | 6.2 |
| CCD-3-3 | 4.0 | Δε [1 kHz, 20°C]: | -3.1 |
| CC-3-O3 | 2.0 | $\gamma_1$ [mPa·s, 20°C]: | 160 |
| CC-3-5 | 12.0 | $K_1$ [pN, 20°C]: | 22.1 |

(continued)

| | | | |
|---|---|---|---|
| CCP-3-1 | 7.8 | $K_3$ [pN, 20°C]: | 23.1 |
| CCY-3-O2 | 6.0 | | |
| CCOY-2-O2 | 4.6 | | |
| CLOY-3-O2 | 15.0 | | |
| CLY-3-O2 | 9.0 | | |
| CP-3-O2 | 2.0 | | |
| COY-3-O2 | 5.0 | | |
| Σ | 100.0 | | |

To the mixture M85 are added 100 ppm of the stabiliser ST-8-1.

Mixture Example M86

| | | | |
|---|---|---|---|
| B(S)-2O-O5 | 1.7 | cl.p. [°C]: | 113.5 |
| CC-3-V | 10.9 | Δn [589 nm, 20°C]: | 0.0873 |
| CC-3-V1 | 12.0 | $\varepsilon_{\parallel}$ [1 kHz, 20°C]: | 3.1 |
| CC-4-V1 | 8.0 | $\varepsilon_{\perp}$ [1 kHz, 20°C]: | 5.8 |
| CCD-3-3 | 4.0 | Δε [1 kHz, 20°C]: | -2.7 |
| CC-3-O3 | 2.0 | $\gamma_1$ [mPa·s, 20°C]: | 190 |
| CC-3-5 | 12.0 | | |
| CCP-3-1 | 7.8 | | |
| CCY-3-O2 | 11.0 | | |
| CCY-5-O2 | 4.6 | | |
| CLOY-3-O2 | 15.0 | | |
| CLY-3-O2 | 9.0 | | |
| PYP-2-(c5) | 2.0 | | |
| Σ | 100.0 | | |

To the mixture M86 are added 50 ppm of the stabiliser ST-9-1.

Mixture Example M87

| | | | |
|---|---|---|---|
| B(S)-2O-O5 | 1.7 | cl.p. [°C]: | 113 |
| CC-3-V | 10.9 | Δn [589 nm, 20°C]: | 0.0871 |
| CC-3-V1 | 12.0 | $\varepsilon_{\parallel}$ [1 kHz, 20°C]: | 3.1 |
| CC-4-V1 | 8.0 | $\varepsilon_{\perp}$ [1 kHz, 20°C]: | 5.8 |
| CCD-3-3 | 4.0 | Δε [1 kHz, 20°C]: | -2.7 |
| CC-3-O3 | 2.0 | $\gamma_1$ [mPa·s, 20°C]: | 190 |
| CC-3-5 | 12.0 | | |
| CCP-3-1 | 7.8 | | |
| CCY-3-O2 | 11.0 | | |
| CCY-5-O2 | 4.6 | | |
| CLOY-3-O2 | 15.0 | | |
| CLY-3-O2 | 9.0 | | |
| PYP-2-1 (c3) | 2.0 | | |
| Σ | 100.0 | | |

To the mixture M87 are added 50 ppm of the stabiliser ST-12.

Mixture Example M88

| | | | |
|---|---|---|---|
| B(S)-2O-O4 | 4.0 | cl.p. [°C]: | 119.0 |
| B(S)-2O-O5 | 3.6 | Δn [589 nm, 20°C]: | 0.0958 |
| CC-3-V | 5.0 | $\varepsilon_{\parallel}$ [1 kHz, 20°C]: | 3.2 |
| CC-3-V1 | 12.0 | $\varepsilon_{\perp}$ [1 kHz, 20°C]: | 6.8 |
| CC-4-V1 | 8.0 | Δε [1 kHz, 20°C]: | -3.6 |
| CCD-5-V | 3.0 | $\gamma_1$ [mPa·s, 20°C]: | 207 |
| CC-3-O3 | 3.0 | $K_1$ [pN, 20°C]: | 27.5 |
| CC-3-5 | 12.0 | $K_3$ [pN, 20°C]: | 26.7 |
| CCP-3-1 | 10.0 | | |
| CCY-3-O2 | 10.0 | | |
| CCOY-3-O2 | 1.0 | | |
| CLOY-3-O2 | 11.0 | | |
| CLY-3-O2 | 9.0 | | |
| CLY-4-O2 | 3.8 | | |
| CLY-5-O2 | 4.6 | | |
| Σ | 100.0 | | |

To the mixture M88 are added 150 ppm of the stabiliser ST-3c.

Mixture Example M89

| | | | |
|---|---|---|---|
| B(S)-2O-O4 | 4.0 | cl.p. [°C]: | 117.0 |
| B(S)-2O-O5 | 3.6 | Δn [589 nm, 20°C]: | 0.0955 |
| CC-3-V | 5.0 | $\varepsilon_{\parallel}$ [1 kHz, 20°C]: | 3.2 |
| CC-3-V1 | 12.0 | $\varepsilon_{\perp}$ [1 kHz, 20°C]: | 6.8 |
| CC-4-V1 | 8.0 | Δε [1 kHz, 20°C]: | -3.6 |
| CCD-5-V | 3.0 | $\gamma_1$ [mPa·s, 20°C]: | 202 |
| CC-3-O3 | 3.0 | $K_1$ [pN, 20°C]: | 27.1 |
| CC-3-5 | 12.0 | $K_3$ [pN, 20°C]: | 26.3 |
| CCP-3-1 | 10.0 | | |
| CCY-3-O2 | 10.0 | | |
| COY-3-O2 | 1.0 | | |
| CLOY-3-O2 | 11.0 | | |
| CLY-3-O2 | 9.0 | | |
| CLY-4-O2 | 3.8 | | |
| CLY-5-O2 | 4.6 | | |
| Σ | 100.0 | | |

To the mixture M89 are added 100 ppm of the stabiliser ST-3d.

Mixture Example M90

| | | | |
|---|---|---|---|
| B(S)-2O-O4 | 4.0 | cl.p. [°C]: | 117.0 |
| B(S)-2O-O5 | 3.6 | $\Delta n$ [589 nm, 20°C]: | 0.0954 |
| CC-3-V | 5.0 | $\varepsilon_{\parallel}$ [1 kHz, 20°C]: | 3.2 |
| CC-3-V1 | 12.0 | $\varepsilon_{\perp}$ [1 kHz, 20°C]: | 6.7 |
| CC-4-V1 | 8.0 | $\Delta\varepsilon$ [1 kHz, 20°C]: | -3.5 |
| CCD-5-V | 3.0 | $\gamma_1$ [mPa·s, 20°C]: | 201 |
| CC-3-O3 | 3.0 | $K_1$ [pN, 20°C]: | 27.1 |
| CC-3-5 | 12.0 | $K_3$ [pN, 20°C]: | 26.3 |
| CCP-3-1 | 10.0 | | |
| CCY-3-O2 | | | 10.0 |
| CEY-3-O2 | | | 1.0 |
| CLOY-3-O2 | | | 11.0 |
| CLY-3-O2 | | | 9.0 |
| CLY-4-O2 | | | 3.8 |
| CLY-5-O2 | | | 4.6 |
| Σ | | | 100.0 |

To the mixture M90 are added 100 ppm of the stabiliser ST-2a-2.

Mixture Example M91

| | | | |
|---|---|---|---|
| B(S)-2O-O4 | 4.0 | cl.p. [°C]: | 119.0 |
| B(S)-2O-O5 | 3.6 | $\Delta n$ [589 nm, 20°C]: | 0.0958 |
| CC-3-V | 5.0 | $\varepsilon_{\parallel}$ [1 kHz, 20°C]: | 3.2 |
| CC-3-V1 | 12.0 | $\varepsilon_{\perp}$ [1 kHz, 20°C]: | 6.7 |
| CC-4-V1 | 8.0 | $\Delta\varepsilon$ [1 kHz, 20°C]: | -3.5 |
| CCD-5-V | 3.0 | $\gamma_1$ [mPa·s, 20°C]: | 207 |
| CC-3-O3 | 3.0 | $K_1$ [pN, 20°C]: | 27.6 |
| CC-3-5 | 12.0 | $K_3$ [pN, 20°C]: | 26.8 |
| CCP-3-1 | 10.0 | | |
| CCY-3-O2 | 10.0 | | |
| CCEY-3-O2 | 1.0 | | |
| CLOY-3-O2 | 11.0 | | |
| CLY-3-O2 | 9.0 | | |
| CLY-4-O2 | 3.8 | | |
| CLY-5-O2 | 4.6 | | |
| Σ | 100.0 | | |

To the mixture M91 are added 150 ppm of the stabiliser ST-3a-1.

Mixture Example M92

| | | | |
|---|---|---|---|
| B(S)-2O-O4 | 4.0 | cl.p. [°C]: | 118.5 |
| B(S)-2O-O5 | 3.6 | $\Delta n$ [589 nm, 20°C]: | 0.0955 |
| CC-3-V | 5.0 | $\varepsilon_{\parallel}$ [1 kHz, 20°C]: | 3.2 |
| CC-3-V1 | 12.0 | $\varepsilon_{\perp}$ [1 kHz, 20°C]: | 6.8 |
| CC-4-V1 | 8.0 | $\Delta\varepsilon$ [1 kHz, 20°C]: | -3.6 |

(continued)

| | | | |
|---|---|---|---|
| CCD-5-V | 3.0 | $\gamma_1$ [mPa·s, 20°C]: | 207 |
| CC-3-O3 | 3.0 | $K_1$ [pN, 20°C]: | 27.4 |
| CC-3-5 | 12.0 | $K_3$ [pN, 20°C]: | 26.7 |
| CCP-3-1 | 10.0 | | |
| CCY-3-O2 | 10.0 | | |
| CAIY-3-O2 | 1.0 | | |
| CLOY-3-O2 | 11.0 | | |
| CLY-3-O2 | 9.0 | | |
| CLY-4-O2 | 3.8 | | |
| CLY-5-O2 | 4.6 | | |
| Σ | 100.0 | | |

To the mixture M92 are added 100 ppm of the stabiliser ST-3b-1.

Mixture Example M93

| | | | |
|---|---|---|---|
| B(S)-2O-O4 | 4.0 | cl.p. [°C]: | 118.5 |
| B(S)-2O-O5 | 3.0 | $\Delta n$ [589 nm, 20°C]: | 0.0961 |
| B(P)-2O-O3 | 0.6 | $\varepsilon_{\parallel}$ [1 kHz, 20°C]: | 3.2 |
| CC-3-V | 5.0 | $\varepsilon_{\perp}$ [1 kHz, 20°C]: | 6.7 |
| CC-3-V1 | 12.0 | $\Delta\varepsilon$ [1 kHz, 20°C]: | -3.5 |
| CC-4-V1 | 8.0 | $\gamma_1$ [mPa·s, 20°C]: | 206 |
| CCD-5-V | 3.0 | $K_1$ [pN, 20°C]: | 27.5 |
| CC-3-O3 | 3.0 | $K_3$ [pN, 20°C]: | 26.8 |
| CC-3-5 | 12.0 | | |
| CCP-3-1 | 10.0 | | |
| CCY-3-O2 | 11.0 | | |
| CLOY-3-O2 | 11.0 | | |
| CLY-3-O2 | 9.0 | | |
| CLY-4-O2 | 3.8 | | |
| CLY-5-O2 | 4.6 | | |
| Σ | 100.0 | | |

To the mixture M93 are added 100 ppm of the stabiliser S-1-1-1.

Mixture Example M94

| | | | |
|---|---|---|---|
| B(S)-2O-O4 | 4.0 | cl.p. [°C]: | 106.0 |
| B(S)-2O-O5 | 5.0 | $\Delta n$ [589 nm, 20°C]: | 0.0910 |
| B(S)-2O-O6 | 1.0 | $\varepsilon_{\parallel}$ [1 kHz, 20°C]: | 3.2 |
| CC-3-2V1 | 14.0 | $\varepsilon_{\perp}$ [1 kHz, 20°C]: | 6.2 |
| CC-3-V1 | 12.0 | $\Delta\varepsilon$ [1 kHz, 20°C]: | -3.0 |
| CC-3-V | 7.0 | $\gamma_1$ [mPa·s, 20°C]: | 188 |
| CC-3-5 | 12.0 | $K_1$ [pN, 20°C]: | 26.4 |
| CCP-3-1 | 15.0 | $K_3$ [pN, 20°C]: | 27.5 |
| CCD-5-V | 5.0 | | |

(continued)

| | |
|---|---|
| CLOY-3-O2 | 25.0 |
| Σ | 100.0 |

To the mixture M94 are added 50 ppm of the stabiliser S-2-1-1.

Mixture Example M95

| | | | |
|---|---|---|---|
| B(S)-2O-O4 | 4.0 | cl.p. [°C]: | 104.0 |
| B(S)-2O-O5 | 5.0 | | |
| B(S)-2O-O6 | 1.0 | | |
| CC-3-2V1 | 14.0 | | |
| CC-3-V1 | 12.0 | | |
| CC-3-V | 7.0 | | |
| CC-3-5 | 12.0 | | |
| CCP-3-1 | 15.0 | | |
| CCD-V-1 | 5.0 | | |
| CLOY-3-O2 | 25.0 | | |
| Σ | 100.0 | | |

To the mixture M95 are added 100 ppm of the stabiliser ST-8-1.

Mixture Example M96

| | | | |
|---|---|---|---|
| B(S)-2O-O4 | 4.0 | cl.p. [°C]: | 101.0 |
| B(S)-2O-O5 | 5.0 | | |
| B(S)-2O-O6 | 1.0 | | |
| CC-3-2V1 | 14.0 | | |
| CC-3-V1 | 12.0 | | |
| CC-3-V | 7.0 | | |
| CC-3-5 | 12.0 | | |
| CCP-3-1 | 15.0 | | |
| CCA-V-1 | 5.0 | | |
| CLOY-3-O2 | 25.0 | | |
| Σ | 100.0 | | |

To the mixture M96 are added 50 ppm of the stabiliser ST-9-1.

Mixture Example M97

| | | | |
|---|---|---|---|
| B(S)-2O-O4 | 4.0 | **cl.p.** [°C]: | 107.5 |
| B(S)-2O-O5 | 5.0 | Δn [589 nm, 20°C]: | 0.0906 |
| B(S)-2O-O6 | 1.0 | $\varepsilon_{\parallel}$ [1 kHz, 20°C]: | 3.2 |
| CC-3-2V1 | 14.0 | $\varepsilon_{\perp}$ [1 kHz, 20°C]: | 6.2 |
| CC-3-V1 | 12.0 | Δε [1 kHz, 20°C]: | -3.0 |

(continued)

| | |
|---|---|
| CC-3-V | 7.0 |
| CC-3-5 | 12.0 |
| CCP-3-1 | 15.0 |
| CCA-5-V | 5.0 |
| CLOY-3-O2 | 25.0 |
| Σ | 100.0 |

To the mixture M97 are added 50 ppm of the stabiliser ST-12.

Mixture Example M98

| | | | |
|---|---|---|---|
| B(S)-2O-O4 | 4.0 | cl.p. [°C]: | 106.0 |
| B(S)-2O-O5 | 5.0 | Δn [589 nm, 20°C]: | 0.0907 |
| B(S)-2O-O6 | 1.0 | $\varepsilon_{\parallel}$ [1 kHz, 20°C]: | 3.2 |
| CC-3-2V1 | 14.0 | $\varepsilon_{\perp}$ [1 kHz, 20°C]: | 6.2 |
| CC-3-V1 | 12.0 | Δε [1 kHz, 20°C]: | -3.0 |
| CC-3-V | 7.0 | | |
| CC-3-5 | 12.0 | | |
| CCP-3-1 | 15.0 | | |
| CCA-3-3 | 5.0 | | |
| CLOY-3-O2 | 25.0 | | |
| Σ | 100.0 | | |

To the mixture M98 are added 150 ppm of the stabiliser ST-3c.

Mixture Example M99

| | | | |
|---|---|---|---|
| B(S)-2O-O5 | 1.7 | cl.p. [°C]: | 110.5 |
| CC-3-V | 10.9 | | |
| CC-3-V1 | 12.0 | | |
| CC-4-V1 | 8.0 | | |
| CCD-V-1 | 4.0 | | |
| CC-3-O3 | 2.0 | | |
| CC-3-5 | 12.0 | | |
| CCP-3-1 | 7.8 | | |
| CCY-3-O2 | 11.0 | | |
| CCOY-3-O2 | 4.6 | | |
| CLOY-3-O2 | 15.0 | | |
| CLY-3-O2 | 9.0 | | |
| CP-3-O2 | 2.0 | | |
| Σ | 100.0 | | |

To the mixture M99 are added 100 ppm of the stabiliser ST-3d.

Mixture Example M100

| | | | |
|---|---|---|---|
| B(S)-2O-O5 | 1.7 | cl.p. [°C]: | 102.5 |
| CC-3-V | 10.9 | | |
| CC-3-V1 | 12.0 | | |
| CC-4-V1 | 8.0 | | |
| CCD-V-1 | 4.0 | | |
| CC-3-O3 | 2.0 | | |
| CC-3-5 | 12.0 | | |
| CCP-3-1 | 7.8 | | |
| CCY-3-O2 | 11.0 | | |
| COY-3-O2 | 4.6 | | |
| CLOY-3-O2 | 15.0 | | |
| CLY-3-O2 | 9.0 | | |
| CP-3-O2 | 2.0 | | |
| Σ | 100.0 | | |

To the mixture M100 are added 100 ppm of the stabiliser ST-2a-2.

Mixture Example M101

| | | | |
|---|---|---|---|
| B(S)-2O-O5 | 1.7 | cl.p. [°C]: | 102.5 |
| CC-3-V | 10.9 | | |
| CC-3-V1 | 12.0 | | |
| CC-4-V1 | 8.0 | | |
| CCD-V-1 | 4.0 | | |
| CC-3-O3 | 2.0 | | |
| CC-3-5 | 12.0 | | |
| CCP-3-1 | 7.8 | | |
| CCY-3-O2 | 11.0 | | |
| CEY-3-O2 | 4.6 | | |
| CLOY-3-O2 | 15.0 | | |
| CLY-3-O2 | 9.0 | | |
| CP-3-O2 | 2.0 | | |
| Σ | | | 100.0 |

To the mixture M101 are added 150 ppm of the stabiliser ST-3a-1.

Mixture Example M102

| | | | |
|---|---|---|---|
| B(S)-2O-O5 | 1.7 | cl.p. [°C]: | 110.5 |
| CC-3-V | 10.9 | | |
| CC-3-V1 | 12.0 | | |
| CC-4-V1 | 8.0 | | |
| CCD-V-1 | 4.0 | | |
| CC-3-O3 | 2.0 | | |

(continued)

| | |
|---|---|
| CC-3-5 | 12.0 |
| CCP-3-1 | 7.8 |
| CCY-3-O2 | 11.0 |
| CCEY-3-O2 | 4.6 |
| CLOY-3-O2 | 15.0 |
| CLY-3-O2 | 9.0 |
| CP-3-O2 | 2.0 |
| Σ | 100.0 |

To the mixture M102 are added 100 ppm of the stabiliser ST-3b-1.

Mixture Example M103

| | | | |
|---|---|---|---|
| B(S)-2O-O5 | 1.7 | cl.p. [°C]: | 108.5 |
| CC-3-V | 10.9 | | |
| CC-3-V1 | 12.0 | | |
| CC-4-V1 | 8.0 | | |
| CCD-V-1 | 4.0 | | |
| CC-3-O3 | 2.0 | | |
| CC-3-5 | 12.0 | | |
| CCP-3-1 | 7.8 | | |
| CCY-3-O2 | 11.0 | | |
| CAIY-3-O2 | 4.6 | | |
| CLOY-3-O2 | 15.0 | | |
| CLY-3-O2 | 9.0 | | |
| CP-3-O2 | 2.0 | | |
| Σ | 100.0 | | |

To the mixture M103 are added 100 ppm of the stabiliser S-1-1-1.

Mixture Example M104

| | | | |
|---|---|---|---|
| B(P)-2O-O3 | 1.7 | cl.p. [°C]: | 111.5 |
| CC-3-V | 10.9 | | |
| CC-3-V1 | 12.0 | | |
| CC-4-V1 | 8.0 | | |
| CCD-V-1 | 4.0 | | |
| CC-3-O3 | 2.0 | | |
| CC-3-5 | 12.0 | | |
| CCP-3-1 | 7.8 | | |
| CCY-3-O2 | 11.0 | | |
| CCY-5-O2 | | | 4.6 |
| CLOY-3-O2 | | | 15.0 |
| CLY-3-O2 | | | 9.0 |
| CP-3-O2 | | | 2.0 |
| Σ | | | 100.0 |

To the mixture M104 are added 50 ppm of the stabiliser S-2-1-1.

Mixture Example M105

| | | | |
|---|---|---|---|
| B(S)-2O-O5 | 1.7 | cl.p. [°C]: | 111.5 |
| CC-3-V | 10.9 | Δn [589 nm, 20°C]: | 0.0835 |
| CC-3-V1 | 12.0 | $\varepsilon_{\parallel}$ [1 kHz, 20°C]: | 3.1 |
| CC-4-V1 | 8.0 | $\varepsilon_{\perp}$ [1 kHz, 20°C]: | 6.0 |
| CCA-3-3 | 4.0 | Δε [1 kHz, 20°C]: | -2.9 |
| CC-3-O3 | 2.0 | | |
| CC-3-5 | 12.0 | | |
| CCP-3-1 | 7.8 | | |
| CCY-3-O2 | 11.0 | | |
| CCOY-3-O2 | 4.6 | | |
| CLOY-3-O2 | 15.0 | | |
| CLY-3-O2 | 9.0 | | |
| CP-3-O2 | 2.0 | | |
| Σ | 100.0 | | |

To the mixture M105 are added 100 ppm of the stabiliser ST-8-1.

Mixture Example M106

| | | | |
|---|---|---|---|
| B(S)-2O-O5 | 1.7 | cl.p. [°C]: | 103.5 |
| CC-3-V | 10.9 | Δn [589 nm, 20°C]: | 0.0822 |
| CC-3-V1 | 12.0 | $\varepsilon_{\parallel}$ [1 kHz, 20°C]: | 3.1 |
| CC-4-V1 | 8.0 | $\varepsilon_{\perp}$ [1 kHz, 20°C]: | 6.0 |
| CCA-3-3 | 4.0 | Δε [1 kHz, 20°C]: | -2.9 |
| CC-3-O3 | 2.0 | | |
| CC-3-5 | 12.0 | | |
| CCP-3-1 | 7.8 | | |
| CCY-3-O2 | 11.0 | | |
| COY-3-O2 | 4.6 | | |
| CLOY-3-O2 | 15.0 | | |
| CLY-3-O2 | 9.0 | | |
| CP-3-O2 | 2.0 | | |
| Σ | 100.0 | | |

To the mixture M106 are added 50 ppm of the stabiliser ST-9-1.

Mixture Example M107

| | | | |
|---|---|---|---|
| B(S)-2O-O5 | 1.7 | cl.p. [°C]: | 112.0 |
| CC-3-V | 10.9 | Δn [589 nm, 20°C]: | 0.0838 |
| CC-3-V1 | 12.0 | $\varepsilon_{\parallel}$ [1 kHz, 20°C]: | 3.1 |
| CC-4-V1 | 8.0 | $\varepsilon_{\perp}$ [1 kHz, 20°C]: | 5.8 |

(continued)

| | | | |
|---|---|---|---|
| CCA-3-3 | 4.0 | Δε [1 kHz, 20°C]: | -2.7 |
| CC-3-O3 | 2.0 | | |
| CC-3-5 | 12.0 | | |
| CCP-3-1 | 7.8 | | |
| CCY-3-O2 | 11.0 | | |
| CCEY-3-O2 | 4.6 | | |
| CLOY-3-O2 | 15.0 | | |
| CLY-3-O2 | 9.0 | | |
| CP-3-O2 | 2.0 | | |
| Σ | 100.0 | | |

To the mixture M107 are added 50 ppm of the stabiliser ST-12.

Mixture Example M108

| | | | |
|---|---|---|---|
| B(S)-2O-O5 | 1.7 | cl.p. [°C]: | 103.5 |
| CC-3-V | 10.9 | Δn [589 nm, 20°C]: | 0.0820 |
| CC-3-V1 | 12.0 | $\varepsilon_{\parallel}$ [1 kHz, 20°C]: | 3.1 |
| CC-4-V1 | 8.0 | $\varepsilon_{\perp}$ [1 kHz, 20°C]: | 5.8 |
| CCA-3-3 | 4.0 | Δε [1 kHz, 20°C]: | -2.7 |
| CC-3-O3 | 2.0 | | |
| CC-3-5 | 12.0 | | |
| CCP-3-1 | 7.8 | | |
| CCY-3-O2 | 11.0 | | |
| CEY-3-O2 | 4.6 | | |
| CLOY-3-O2 | 15.0 | | |
| CLY-3-O2 | 9.0 | | |
| CP-3-O2 | 2.0 | | |
| Σ | 100.0 | | |

To the mixture M108 are added 150 ppm of the stabiliser ST-3c.

Mixture Example M109

| | | | |
|---|---|---|---|
| B(S)-2O-O5 | 1.7 | cl.p. [°C]: | 109.5 |
| CC-3-V | 10.9 | Δn [589 nm, 20°C]: | 0.0824 |
| CC-3-V1 | 12.0 | $\varepsilon_{\parallel}$ [1 kHz, 20°C]: | 3.1 |
| CC-4-V1 | 8.0 | $\varepsilon_{\perp}$ [1 kHz, 20°C]: | 5.9 |
| CCA-3-3 | 4.0 | Δε [1 kHz, 20°C]: | -2.8 |
| CC-3-O3 | 2.0 | | |
| CC-3-5 | 12.0 | | |
| CCP-3-1 | 7.8 | | |
| CCY-3-O2 | 11.0 | | |
| CAIY-3-O2 | 4.6 | | |
| CLOY-3-O2 | 15.0 | | |
| CLY-3-O2 | 9.0 | | |

(continued)

| | |
|---|---|
| CP-3-O2 | 2.0 |
| Σ | 100.0 |

To the mixture M109 are added 100 ppm of the stabiliser ST-3d.

Mixture Example M110

| | | | |
|---|---|---|---|
| B(P)-2O-O3 | 1.7 | cl.p. [°C]: | 112.5 |
| CC-3-V | 10.9 | Δn [589 nm, 20°C]: | 0.0842 |
| CC-3-V1 | 12.0 | $\varepsilon_{\parallel}$ [1 kHz, 20°C]: | 3.1 |
| CC-4-V1 | 8.0 | $\varepsilon_{\perp}$ [1 kHz, 20°C]: | 5.6 |
| CCA-3-3 | 4.0 | Δε [1 kHz, 20°C]: | -2.5 |
| CC-3-O3 | 2.0 | | |
| CC-3-5 | 12.0 | | |
| CCP-3-1 | 7.8 | | |
| CCY-3-O2 | 11.0 | | |
| CCY-5-O2 | 4.6 | | |
| CLOY-3-O2 | 15.0 | | |
| CLY-3-O2 | 9.0 | | |
| CP-3-O2 | 2.0 | | |
| Σ | 100.0 | | |

To the mixture M110 are added 100 ppm of the stabiliser ST-2a-2.

Mixture Example M111

| | | | |
|---|---|---|---|
| B(S)-2O-O4 | 4.0 | cl.p. [°C]: | 119.5 |
| B(S)-2O-O5 | 3.6 | Δn [589 nm, 20°C]: | 0.0954 |
| CC-3-V | 5.0 | $\varepsilon_{\parallel}$ [1 kHz, 20°C]: | 3.2 |
| CC-3-V1 | 12.0 | $\varepsilon_{\perp}$ [1 kHz, 20°C]: | 6.8 |
| CC-4-V1 | 8.0 | Δε [1 kHz, 20°C]: | -3.6 |
| CCA-5-V | 3.0 | | |
| CC-3-O3 | 3.0 | | |
| CC-3-5 | 12.0 | | |
| CCP-3-1 | 10.0 | | |
| CCY-3-O2 | 10.0 | | |
| CCOY-3-O2 | 1.0 | | |
| CLOY-3-O2 | 11.0 | | |
| CLY-3-O2 | 9.0 | | |
| CLY-4-O2 | 3.8 | | |
| CLY-5-O2 | 4.6 | | |
| Σ | 100.0 | | |

To the mixture M111 are added 150 ppm of the stabiliser ST-3a-1.

Mixture Example M112

| | | | |
|---|---|---|---|
| B(S)-2O-O4 | 4.0 | cl.p. [°C]: | 119.5 |
| B(S)-2O-O5 | 3.6 | $\Delta n$ [589 nm, 20°C]: | 0.0954 |
| CC-3-V | 5.0 | $\varepsilon_{\parallel}$ [1 kHz, 20°C]: | 3.2 |
| CC-3-V1 | 12.0 | $\varepsilon_{\perp}$ [1 kHz, 20°C]: | 6.7 |
| CC-4-V1 | 8.0 | $\Delta\varepsilon$ [1 kHz, 20°C]: | -3.5 |
| CCA-5-V | 3.0 | | |
| CC-3-O3 | 3.0 | | |
| CC-3-5 | 12.0 | | |
| CCP-3-1 | 10.0 | | |
| CCY-3-O2 | 10.0 | | |
| CCEY-3-O2 | | | 1.0 |
| CLOY-3-O2 | | | 11.0 |
| CLY-3-O2 | | | 9.0 |
| CLY-4-O2 | | | 3.8 |
| CLY-5-O2 | | | 4.6 |
| Σ | | | 100.0 |

To the mixture M112 are added 100 ppm of the stabiliser ST-3b-1.

Mixture Example M113

| | | | |
|---|---|---|---|
| B(S)-2O-O4 | 4.0 | cl.p. [°C]: | 118.0 |
| B(S)-2O-O5 | 3.6 | $\Delta n$ [589 nm, 20°C]: | 0.0952 |
| CC-3-V | 5.0 | $\varepsilon_{\parallel}$ [1 kHz, 20°C]: | 3.2 |
| CC-3-V1 | 12.0 | $\varepsilon_{\perp}$ [1 kHz, 20°C]: | 6.8 |
| CC-4-V1 | 8.0 | $\Delta\varepsilon$ [1 kHz, 20°C]: | -3.6 |
| CCA-5-V | 3.0 | | |
| CC-3-O3 | 3.0 | | |
| CC-3-5 | 12.0 | | |
| CCP-3-1 | 10.0 | | |
| CCY-3-O2 | 10.0 | | |
| COY-3-O2 | 1.0 | | |
| CLOY-3-O2 | 11.0 | | |
| CLY-3-O2 | 9.0 | | |
| CLY-4-O2 | 3.8 | | |
| CLY-5-O2 | 4.6 | | |
| Σ | 100.0 | | |

To the mixture M113 are added 100 ppm of the stabiliser S-1-1-1.

Mixture Example M114

| | | | |
|---|---|---|---|
| B(S)-2O-O4 | 4.0 | cl.p. [°C]: | 118.0 |
| B(S)-2O-O5 | 3.6 | $\Delta n$ [589 nm, 20°C]: | 0.0950 |

(continued)

| | | | |
|---|---|---|---|
| CC-3-V | 5.0 | $\varepsilon_{\parallel}$ [1 kHz, 20°C]: | 3.2 |
| CC-3-V1 | 12.0 | $\varepsilon_{\perp}$ [1 kHz, 20°C]: | 6.7 |
| CC-4-V1 | 8.0 | $\Delta\varepsilon$ [1 kHz, 20°C]: | -3.5 |
| CCA-5-V | 3.0 | | |
| CC-3-O3 | 3.0 | | |
| CC-3-5 | 12.0 | | |
| CCP-3-1 | 10.0 | | |
| CCY-3-O2 | 10.0 | | |
| CEY-3-O2 | 1.0 | | |
| CLOY-3-O2 | 11.0 | | |
| CLY-3-O2 | 9.0 | | |
| CLY-4-O2 | 3.8 | | |
| CLY-5-O2 | 4.6 | | |
| Σ | 100.0 | | |

To the mixture M114 are added 50 ppm of the stabiliser S-2-1-1.

Mixture Example M115

| | | | |
|---|---|---|---|
| B(S)-2O-O4 | 4.0 | cl.p. [°C]: | 119.0 |
| B(S)-2O-O5 | 3.6 | $\Delta n$ [589 nm, 20°C]: | 0.0951 |
| CC-3-V | 5.0 | $\varepsilon_{\parallel}$ [1 kHz, 20°C]: | 3.2 |
| CC-3-V1 | 12.0 | $\varepsilon_{\perp}$ [1 kHz, 20°C]: | 6.8 |
| CC-4-V1 | 8.0 | $\Delta\varepsilon$ [1 kHz, 20°C]: | -3.6 |
| CCA-5-V | 3.0 | | |
| CC-3-O3 | 3.0 | | |
| CC-3-5 | 12.0 | | |
| CCP-3-1 | 10.0 | | |
| CCY-3-O2 | 10.0 | | |
| CAIY-3-O2 | 1.0 | | |
| CLOY-3-O2 | 11.0 | | |
| CLY-3-O2 | 9.0 | | |
| CLY-4-O2 | 3.8 | | |
| CLY-5-O2 | 4.6 | | |
| Σ | 100.0 | | |

To the mixture M115 are added 100 ppm of the stabiliser ST-8-1.

Mixture Example M116

| | | | |
|---|---|---|---|
| B(S)-2O-O4 | 4.0 | cl.p. [°C]: | 120.5 |
| B(P)-2O-O3 | 3.6 | | |
| CC-3-V | 5.0 | | |
| CC-3-V1 | 12.0 | | |
| CC-4-V1 | 8.0 | | |
| CCA-5-V | 3.0 | | |
| CC-3-O3 | 3.0 | | |

(continued)

| | |
|---|---|
| CC-3-5 | 12.0 |
| CCP-3-1 | 10.0 |
| CCY-3-O2 | 11.0 |
| CLOY-3-O2 | 11.0 |
| CLY-3-O2 | 9.0 |
| CLY-4-O2 | 3.8 |
| CLY-5-O2 | 4.6 |
| Σ | 100.0 |

To the mixture M116 are added 50 ppm of the stabiliser ST-9-1.

Mixture Example M117

| | | | |
|---|---|---|---|
| B(S)-2O-O5 | 1.7 | cl.p. [°C]: | 100.0 |
| CC-3-V | 10.9 | | |
| CC-3-V1 | 12.0 | | |
| CC-4-V1 | 8.0 | | |
| CCA-V-1 | 4.0 | | |
| CC-3-O3 | 2.0 | | |
| CC-3-5 | 12.0 | | |
| CCP-3-1 | 7.8 | | |
| CCY-3-O2 | 11.0 | | |
| COY-3-O2 | 4.6 | | |
| CLOY-3-O2 | 15.0 | | |
| CLY-3-O2 | 9.0 | | |
| CP-3-O2 | | | 2.0 |
| Σ | | | 100.0 |

To the mixture M117 are added 50 ppm of the stabiliser ST-12.

Mixture Example M118

| | | | |
|---|---|---|---|
| B(S)-2O-O5 | 1.7 | cl.p. [°C]: | 108.0 |
| CC-3-V | 10.9 | | |
| CC-3-V1 | 12.0 | | |
| CC-4-V1 | 8.0 | | |
| CCA-V-1 | 4.0 | | |
| CC-3-O3 | 2.0 | | |
| CC-3-5 | 12.0 | | |
| CCP-3-1 | 7.8 | | |
| CCY-3-O2 | 11.0 | | |
| COY-3-O2 | 4.6 | | |
| CLOY-3-O2 | 15.0 | | |
| CLY-3-O2 | 9.0 | | |
| CP-3-O2 | 2.0 | | |
| Σ | 100.0 | | |

To the mixture M118 are added 150 ppm of the stabiliser ST-3c.

Mixture Example M119

| | | | |
|---|---|---|---|
| B(S)-2O-O5 | 1.7 | cl.p. [°C]: | 101.0 |
| CC-3-V | 10.9 | | |
| CC-3-V1 | 12.0 | | |
| CC-4-V1 | 8.0 | | |
| CCA-V-1 | 4.0 | | |
| CC-3-O3 | 2.0 | | |
| CC-3-5 | 12.0 | | |
| CCP-3-1 | 7.8 | | |
| CCY-3-O2 | 11.0 | | |
| CEY-3-O2 | 4.6 | | |
| CLOY-3-O2 | 15.0 | | |
| CLY-3-O2 | 9.0 | | |
| CP-3-O2 | 2.0 | | |
| Σ | 100.0 | | |

To the mixture M119 are added 100 ppm of the stabiliser ST-3d.

Mixture Example M120

| | | | |
|---|---|---|---|
| B(S)-2O-O5 | 1.7 | cl.p. [°C]: | 101.0 |
| CC-3-V | 10.9 | | |
| CC-3-V1 | 12.0 | | |
| CC-4-V1 | 8.0 | | |
| CCA-V-1 | 4.0 | | |
| CC-3-O3 | 2.0 | | |
| CC-3-5 | 12.0 | | |
| CCP-3-1 | 7.8 | | |
| CCY-3-O2 | | | 11.0 |
| CEY-3-O2 | | | 4.6 |
| CLOY-3-O2 | | | 15.0 |
| CLY-3-O2 | | | 9.0 |
| CP-3-O2 | | | 2.0 |
| Σ | | | 100.0 |

To the mixture M120 are added 100 ppm of the stabiliser ST-2a-2.

Mixture Example M121

| | | | |
|---|---|---|---|
| B(S)-2O-O5 | 1.7 | cl.p. [°C]: | 108.0 |
| CC-3-V | 10.9 | | |
| CC-3-V1 | 12.0 | | |
| CC-4-V1 | 8.0 | | |

(continued)

| | |
|---|---|
| CCA-V-1 | 4.0 |
| CC-3-O3 | 2.0 |
| CC-3-5 | 12.0 |
| CCP-3-1 | 7.8 |
| CCY-3-O2 | 11.0 |
| CCEY-3-O2 | 4.6 |
| CLOY-3-O2 | 15.0 |
| CLY-3-O2 | 9.0 |
| CP-3-O2 | 2.0 |
| Σ | 100.0 |

To the mixture M121 are added 150 ppm of the stabiliser ST-3a-1.

Mixture Example M122

| | | | |
|---|---|---|---|
| B(S)-2O-O5 | 1.7 | cl.p. [°C]: | 106.0 |
| CC-3-V | 10.9 | | |
| CC-3-V1 | 12.0 | | |
| CC-4-V1 | 8.0 | | |
| CCA-V-1 | 4.0 | | |
| CC-3-O3 | 2.0 | | |
| CC-3-5 | 12.0 | | |
| CCP-3-1 | 7.8 | | |
| CCY-3-O2 | 11.0 | | |
| CAIY-3-O2 | 4.6 | | |
| CLOY-3-O2 | 15.0 | | |
| CLY-3-O2 | 9.0 | | |
| CP-3-O2 | 2.0 | | |
| Σ | 100.0 | | |

To the mixture M122 are added 100 ppm of the stabiliser ST-3b-1.

Mixture Example M123

| | | | |
|---|---|---|---|
| B(P)-2O-O3 | 1.7 | cl.p. [°C]: | 109.0 |
| CC-3-V | 10.9 | | |
| CC-3-V1 | 12.0 | | |
| CC-4-V1 | 8.0 | | |
| CCA-V-1 | | | 4.0 |
| CC-3-O3 | | | 2.0 |
| CC-3-5 | | | 12.0 |
| CCP-3-1 | | | 7.8 |
| CCY-3-O2 | | | 11.0 |
| CCY-5-O2 | | | 4.6 |
| CLOY-3-O2 | | | 15.0 |
| CLY-3-O2 | | | 9.0 |
| CP-3-O2 | | | 2.0 |

(continued)

| | |
|---|---|
| Σ | 100.0 |

To the mixture M123 are added 100 ppm of the stabiliser S-1-1-1.

Mixture Example M124

| | | | |
|---|---|---|---|
| B(S)-2O-O4 | 4.0 | cl.p. [°C]: | 106.0 |
| B(S)-2O-O5 | 5.0 | | |
| B(S)-2O-O6 | 1.0 | | |
| CC-3-2V1 | 14.0 | | |
| CC-3-V1 | 12.0 | | |
| CC-3-V | 7.0 | | |
| CC-3-5 | 12.0 | | |
| CCP-3-1 | 15.0 | | |
| CCD-(c5)-3 | 5.0 | | |
| CLOY-3-O2 | 25.0 | | |
| Σ | 100.0 | | |

wherein CCD-(c5)-3 is

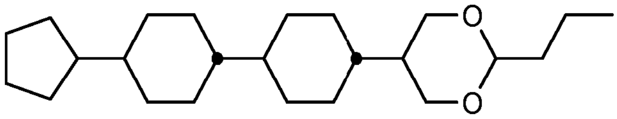

CCD-(c5)-3

To the mixture M124 are added 50 ppm of the stabiliser S-2-1-1.

Mixture Example M125

| | | | |
|---|---|---|---|
| B(S)-2O-O4 | 4.0 | cl.p. [°C]: | 105.0 |
| B(S)-2O-O5 | 5.0 | | |
| B(S)-2O-O6 | 1.0 | | |
| CC-3-2V1 | 14.0 | | |
| CC-3-V1 | 12.0 | | |
| CC-3-V | 7.0 | | |
| CC-3-5 | 12.0 | | |
| CCP-3-1 | 15.0 | | |
| CCA-(c5)-3 | 5.0 | | |
| CLOY-3-O2 | 25.0 | | |
| Σ | 100.0 | | |

wherein CCA-(c5)-3 is

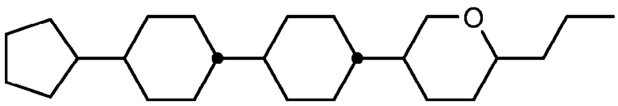

CCA-(c5)-3

To the mixture M125 are added 100 ppm of the stabiliser ST-8-1.

Mixture Example M126

| | | | |
|---|---|---|---|
| B(S)-2O-O4 | 4.0 | cl.p. [°C]: | 118.5 |
| B(S)-2O-O1(c3) | 3.6 | | |
| CC-3-V | 5.0 | | |
| CC-3-V1 | 12.0 | | |
| CC-4-V1 | 8.0 | | |
| CCD-5-V | 3.0 | | |
| CC-3-O3 | 3.0 | | |
| CC-3-5 | 12.0 | | |
| CCP-3-1 | 10.0 | | |
| CCY-3-O2 | 11.0 | | |
| CLOY-3-O2 | 11.0 | | |
| CLY-3-O2 | 9.0 | | |
| CLY-4-O2 | 3.8 | | |
| CLY-5-O2 | 4.6 | | |
| Σ | 100.0 | | |

wherein B(S)-2O-O1(c3) is

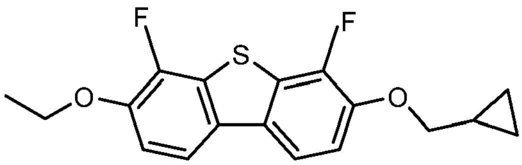

B(S)-2O-O1(c3)

To the mixture M126 are added 50 ppm of the stabiliser S-2-1-1.

Mixture Example M127

| | | | |
|---|---|---|---|
| B(S)-2O-O4 | 4.0 | cl.p. [°C]: | 119.0 |
| B(S)-2O-O1(c4) | 3.6 | | |
| CC-3-V | 5.0 | | |
| CC-3-V1 | 12.0 | | |
| CC-4-V1 | 8.0 | | |
| CCD-5-V | 3.0 | | |
| CC-3-O3 | 3.0 | | |
| CC-3-5 | 12.0 | | |
| CCP-3-1 | 10.0 | | |
| CCY-3-O2 | 11.0 | | |
| CLOY-3-O2 | 11.0 | | |
| CLY-3-O2 | 9.0 | | |
| CLY-4-O2 | 3.8 | | |
| CLY-5-O2 | 4.6 | | |
| Σ | 100.0 | | |

wherein B(S)-2O-O1(c4) is

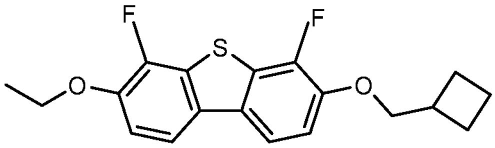

B(S)-2O-O1(c4)

To the mixture M127 are added 50 ppm of the stabiliser ST-2a-2 and 500 ppm of the stabiliser ST-3a-1.

Mixture Example M128

| | | | |
|---|---|---|---|
| B(S)-2O-O5 | 0.6 | cl.p. [°C]: | 102.5 |
| CC-3-V1 | 4.6 | | |
| CC-4-V1 | 16.8 | | |
| CC-3-O3 | 10 | | |
| CC-3-5 | 12 | | |
| CCY-3-O2 | 10 | | |
| CCD-3-3 | 1 | | |
| CCY-5-O2 | 10.5 | | |
| CCZC-3-3 | 1.5 | | |
| CCZC-3-5 | 1.2 | | |
| CLOY-3-O2 | 14.9 | | |
| CLY-3-O2 | 1.3 | | |
| CLY-4-O2 | 1.1 | | |
| CLY-5-O2 | 4.2 | | |
| CWCY-3-O2 | 5 | | |
| Y-4O-O4 | 5.3 | | |
| Σ | 100.0 | | |

To the mixture M128 are added 150 ppm of the stabiliser ST-2a-1, 50 ppm of the stabiliser ST-2a-2 and 300 ppm of the stabiliser ST-3a-1.

Mixture Example M129

| | | | |
|---|---|---|---|
| B(S)-2O-O4 | 4.0 | cl.p. [°C]: | 118.5 |
| B(S)-2O-O5 | 4.5 | $n_e$ [589 nm, 20°C]: | 1.5773 |
| CC-3-V | 6.5 | $n_o$ [589 nm, 20°C]: | 1.4820 |
| CC-3-V1 | 12.0 | Δn [589 nm, 20°C]: | 0.0953 |
| CC-4-V1 | 8.0 | $\varepsilon_\parallel$ [1 kHz, 20°C]: | 3.2 |
| CC-3-O3 | 3.0 | $\varepsilon_\perp$ [1 kHz, 20°C]: | 6.7 |
| CC-3-5 | 12.0 | Δε [1 kHz, 20°C]: | -3.5 |
| CCP-3-1 | 7.0 | $\gamma_1$ [mPa·s, 20°C]: | 199 |
| CCY-3-O2 | 10.5 | $K_1$ [pN, 20°C]: | 28.6 |
| CLOY-3-O2 | 8.5 | $K_3$ [pN, 20°C]: | 26.1 |
| CLY-3-O2 | 9.5 | | |
| CLY-4-O2 | 5.0 | | |
| CLY-5-O2 | 5.0 | | |
| DCC-5-3 | 4.5 | | |
| Σ | 100.0 | | |

To the mixture M129 are added 100 ppm of the stabiliser ST-3d.

Mixture Example M130

| | | | |
|---|---|---|---|
| B(S)-2O-O4 | 4.0 | cl.p. [°C]: | 119.5 |
| B(S)-2O-O5 | 4.5 | | |
| CC-3-V | 6.5 | | |
| CC-3-V1 | 12.0 | | |
| CC-4-V1 | 8.0 | | |
| CC-3-O3 | 3.0 | | |
| CC-3-5 | 12.0 | | |
| CCP-3-1 | 7.0 | | |
| CCY-3-O2 | 10.5 | | |
| CLOY-3-O2 | 8.5 | | |
| CLY-3-O2 | 9.5 | | |
| CLY-4-O2 | 5.0 | | |
| CLY-5-O2 | 5.0 | | |
| ACC-5-3 | 4.5 | | |
| Σ | 100.0 | | |

To the mixture M130 are added 100 ppm of the stabiliser ST-2a-2.

Mixture Example M131

| | | | |
|---|---|---|---|
| B(S)-2O-O4 | 4.0 | cl.p. [°C]: | 115 |
| B(S)-2O-O5 | 5.0 | $n_e$ [589 nm, 20°C]: | 1.5795 |
| CC-3-V | 5.0 | $n_o$ [589 nm, 20°C]: | 1.4826 |
| CC-3-V1 | 12.0 | Δn [589 nm, 20°C]: | 0.0969 |
| CC-4-V1 | 8.0 | $\varepsilon_\parallel$ [1 kHz, 20°C]: | 3.2 |
| CC-3-O3 | 3.0 | $\varepsilon_\perp$ [1 kHz, 20°C]: | 6.7 |
| CC-3-5 | 12.0 | Δε [1 kHz, 20°C]: | -3.5 |
| CCP-3-1 | 8.25 | $\gamma_1$ [mPa·s, 20°C]: | 192 |
| CCY-3-O2 | 10.5 | $K_1$ [pN, 20°C]: | 27.2 |
| CLOY-3-O2 | 8.5 | $K_3$ [pN, 20°C]: | 25.8 |
| CLY-3-O2 | 9.5 | | |
| CLY-4-O2 | 4.25 | | |
| CLY-5-O2 | 5.0 | | |
| DCC-1-5 | 3.0 | | |
| CP-3-O2 | 2.0 | | |
| Σ | 100.0 | | |

To the mixture M131 are added 150 ppm of the stabiliser ST-3a-1.

Mixture Example M132

| | | | |
|---|---|---|---|
| B(S)-2O-O4 | 4.0 | cl.p. [°C]: | 117.5 |

(continued)

| | | | |
|---|---|---|---|
| B(S)-2O-O5 | 5.0 | $n_e$ [589 nm, 20°C]: | 1.5804 |
| CC-3-V | 5.5 | $n_o$ [589 nm, 20°C]: | 1.4833 |
| CC-3-V1 | 12.0 | Δn [589 nm, 20°C]: | 0.0971 |
| CC-4-V1 | 8.0 | $\varepsilon_{\parallel}$ [1 kHz, 20°C]: | 3.2 |
| CC-3-O3 | 3.0 | $\varepsilon_{\perp}$ [1 kHz, 20°C]: | 6.8 |
| CC-3-5 | 12.0 | Δε [1 kHz, 20°C]: | -3.5 |
| CCP-3-1 | 9.0 | $\gamma_1$ [mPa·s, 20°C]: | 193 |
| CCY-3-O2 | 10.5 | $K_1$ [pN, 20°C]: | |
| CLOY-3-O2 | 8.5 | $K_3$ [pN, 20°C]: | |
| CLY-3-O2 | 9.5 | | |
| CLY-4-O2 | 5.0 | | |
| CLY-5-O2 | 5.0 | | |
| DCC-3-V | 3.0 | | |
| Σ | 100.0 | | |

To the mixture M132 are added 100 ppm of the stabiliser ST-3b-1.

Mixture Example M133

| | | | |
|---|---|---|---|
| B(S)-2O-O4 | 4.0 | cl.p. [°C]: | 118.5 |
| B(S)-2O-O5 | 5.0 | | |
| CC-3-V | 5.5 | | |
| CC-3-V1 | 12.0 | | |
| CC-4-V1 | 8.0 | | |
| CC-3-O3 | 3.0 | | |
| CC-3-5 | 12.0 | | |
| CCP-3-1 | 9.0 | | |
| CCY-3-O2 | 10.5 | | |
| CLOY-3-O2 | 8.5 | | |
| CLY-3-O2 | 9.5 | | |
| CLY-4-O2 | 5.0 | | |
| CLY-5-O2 | 5.0 | | |
| ACC-3-V | 3.0 | | |
| Σ | 100.0 | | |

To the mixture M133 are added 100 ppm of the stabiliser S-1-1-1.

Mixture Example M134

| | | | |
|---|---|---|---|
| B(S)-2O-O4 | 4.0 | cl.p. [°C]: | 117 |
| B(S)-2O-O5 | 4.3 | $n_e$ [589 nm, 20°C]: | 1.5796 |
| CC-3-V | 5.0 | $n_o$ [589 nm, 20°C]: | 1.4831 |
| CC-3-V1 | 12.0 | Δn [589 nm, 20°C]: | 0.0965 |
| CC-4-V1 | 8.0 | $\varepsilon_{\parallel}$ [1 kHz, 20°C]: | 3.2 |
| CC-3-O3 | 3.0 | $\varepsilon_{\perp}$ [1 kHz, 20°C]: | 6.6 |
| CC-3-5 | 12.0 | Δε [1 kHz, 20°C]: | -3.5 |
| CCP-3-1 | 8.2 | $\gamma_1$ [mPa·s, 20°C]: | 197 |

(continued)

| | | | |
|---|---|---|---|
| CCY-3-O2 | 10.5 | $K_1$ [pN, 20°C]: | 27.5 |
| CLOY-3-O2 | 8.5 | $K_3$ [pN, 20°C]: | 25.8 |
| CLY-3-O2 | 9.5 | | |
| CLY-4-O2 | 5.0 | | |
| CLY-5-O2 | 5.0 | | |
| DCC-5-3 | 3.0 | | |
| CP-3-O2 | 2.0 | | |
| Σ | 100.0 | | |

To the mixture M134 are added 50 ppm of the stabiliser ST-2a-2 and 500 ppm of the stabiliser ST-3a-1.

Mixture Example M135

| | | | |
|---|---|---|---|
| B(S)-2O-O4 | 4.0 | cl.p. [°C]: | 117.5 |
| B(S)-2O-O5 | 4.1 | $n_e$ [589 nm, 20°C]: | 1.5787 |
| CC-3-V | 4.8 | $n_o$ [589 nm, 20°C]: | 1.4824 |
| CC-3-V1 | 12.0 | $\Delta n$ [589 nm, 20°C]: | 0.0963 |
| CC-4-V1 | 8.0 | $\varepsilon_{\parallel}$ [1 kHz, 20°C]: | 3.2 |
| CC-3-O3 | 3.0 | $\varepsilon_{\perp}$ [1 kHz, 20°C]: | 6.6 |
| CC-3-5 | 12.0 | $\Delta\varepsilon$ [1 kHz, 20°C]: | -3.4 |
| CCP-3-1 | 8.6 | $\gamma_1$ [mPa·s, 20°C]: | 198 |
| CCY-3-O2 | 10.5 | $K_1$ [pN, 20°C]: | 27.4 |
| CLOY-3-O2 | 8.5 | $K_3$ [pN, 20°C]: | 26.0 |
| CLY-3-O2 | 9.5 | | |
| CLY-4-O2 | 5.0 | | |
| CLY-5-O2 | 5.0 | | |
| DCC-3-5 | 3.0 | | |
| CP-3-O2 | 2.0 | | |
| Σ | 100.0 | | |

To the mixture M135 are added 100 ppm of the stabiliser ST-8-1.

Mixture Example M136

| | | | |
|---|---|---|---|
| B(S)-2O-O4 | 4.0 | cl.p. [°C]: | 115.5 |
| B(S)-2O-O5 | 5.0 | $n_e$ [589 nm, 20°C]: | 1.5806 |
| CC-3-V | 4.5 | $n_o$ [589 nm, 20°C]: | 1.4830 |
| CC-3-V1 | 12.0 | $\Delta n$ [589 nm, 20°C]: | 0.0976 |
| CC-4-V1 | 8.0 | $\varepsilon_{\parallel}$ [1 kHz, 20°C]: | 3.2 |
| CC-3-O3 | 3.0 | $\varepsilon_{\perp}$ [1 kHz, 20°C]: | 6.7 |
| CC-3-5 | 12.0 | $\Delta\varepsilon$ [1 kHz, 20°C]: | -3.5 |
| CCP-3-1 | 8.75 | $\gamma_1$ [mPa·s, 20°C]: | 191 |
| CCY-3-O2 | 10.5 | $K_1$ [pN, 20°C]: | 27.2 |
| CLOY-3-O2 | 8.5 | $K_3$ [pN, 20°C]: | 25.9 |
| CLY-3-O2 | 9.5 | | |
| CLY-4-O2 | 4.25 | | |
| CLY-5-O2 | 5.0 | | |

(continued)

| | |
|---|---|
| DCC-3-V | 3.0 |
| CP-3-O2 | 2.0 |
| Σ | 100.0 |

To the mixture M136 are added 50 ppm of the stabiliser ST-9-1.

Mixture Example M137

| | | | |
|---|---|---|---|
| B(S)-2O-O4 | 4.0 | cl.p. [°C]: | 117 |
| B(S)-2O-O5 | 4.3 | $n_e$ [589 nm, 20°C]: | 1.5788 |
| CC-3-V | 5.0 | $n_o$ [589 nm, 20°C]: | 1.4824 |
| CC-3-V1 | 12.0 | Δn [589 nm, 20°C]: | 0.0964 |
| CC-4-V1 | 8.0 | $\varepsilon_\parallel$ [1 kHz, 20°C]: | 3.2 |
| CC-3-O3 | 3.0 | $\varepsilon_\perp$ [1 kHz, 20°C]: | 6.8 |
| CC-3-5 | 12.0 | Δε [1 kHz, 20°C]: | -3.5 |
| CCP-3-1 | 8.2 | $\gamma_1$ [mPa·s, 20°C]: | 200 |
| CCY-3-O2 | 10.5 | $K_1$ [pN, 20°C]: | 27.8 |
| CLOY-3-O2 | 8.5 | $K_3$ [pN, 20°C]: | 26.4 |
| CLY-3-O2 | 9.5 | | |
| CLY-4-O2 | 5.0 | | |
| CLY-5-O2 | 5.0 | | |
| DCC-5-3 | 3.0 | | |
| CP-3-O2 | 2.0 | | |
| Σ | 100.0 | | |

To the mixture M137 are added 50 ppm of the stabiliser ST-12.

Mixture Example M138

| | | | |
|---|---|---|---|
| B(S)-2O-O4 | 4.0 | cl.p. [°C]: | 121 |
| B(S)-2O-O5 | 2.8 | $n_e$ [589 nm, 20°C]: | 1.5804 |
| CC-3-V1 | 12.0 | $n_o$ [589 nm, 20°C]: | 1.4841 |
| CC-4-V1 | 10.0 | Δn [589 nm, 20°C]: | 0.0963 |
| CC-3-O3 | 2.7 | $\varepsilon_\parallel$ [1 kHz, 20°C]: | 3.1 |
| CC-3-5 | 11.0 | $\varepsilon_\perp$ [1 kHz, 20°C]: | 6.3 |
| CCP-3-1 | 16.0 | Δε [1 kHz, 20°C]: | -3.2 |
| CCY-3-O2 | 10.5 | $\gamma_1$ [mPa·s, 20°C]: | 222 |
| CLOY-3-O2 | 12.8 | $K_1$ [pN, 20°C]: | 28.7 |
| CLY-3-O2 | 9.0 | $K_3$ [pN, 20°C]: | 28.4 |
| CLY-5-O2 | 4.2 | | |
| DCC-3-5 | 3.0 | | |
| CP-3-O2 | 2.0 | | |
| Σ | 100.0 | | |

To the mixture M138 are added 150 ppm of the stabiliser ST-2a-1, 50 ppm of the stabiliser ST-2a-2 and 300 ppm of the stabiliser ST-3a-1.

Mixture Example M139

| | | | |
|---|---|---|---|
| CC-3-V | 0.3 | cl.p. [°C]: | 123 |
| CC-3-V1 | 13.0 | $n_e$ [589 nm, 20°C]: | 1.5787 |
| CC-4-V1 | 13.0 | $n_o$ [589 nm, 20°C]: | 1.4839 |
| CC-3-5 | 11.0 | $\Delta n$ [589 nm, 20°C]: | 0.0948 |
| CCP-3-1 | 13.0 | $\varepsilon_\parallel$ [1 kHz, 20°C]: | 3.1 |
| CCY-3-O2 | 10.0 | $\varepsilon_\perp$ [1 kHz, 20°C]: | 6.3 |
| CLOY-3-O2 | 14.0 | $\Delta\varepsilon$ [1 kHz, 20°C]: | -3.2 |
| CLY-3-O2 | 8.0 | $\gamma_1$ [mPa·s, 20°C]: | 228 |
| CLY-4-O2 | 5.0 | $K_1$ [pN, 20°C]: | 29.5 |
| COB(S)-2-O4 | 7.7 | $K_3$ [pN, 20°C]: | 29.3 |
| DCC-1-5 | | | 3.0 |
| CP-3-O2 | | | 2.0 |
| Σ | | | 100.0 |

To the mixture M139 are added 100 ppm of the stabiliser ST-3d.

Mixture Example M140

| | | | |
|---|---|---|---|
| B(S)-2O-O4 | 4.0 | cl.p. [°C]: | 116.5 |
| B(S)-2O-O5 | 4.3 | $n_e$ [589 nm, 20°C]: | 1.5799 |
| CC-3-V | 4.6 | $n_o$ [589 nm, 20°C]: | 1.4833 |
| CC-3-V1 | 12.0 | $\Delta n$ [589 nm, 20°C]: | 0.0966 |
| CC-4-V1 | 8.0 | $\varepsilon_\parallel$ [1 kHz, 20°C]: | 3.2 |
| CC-3-O3 | 3.0 | $\varepsilon_\perp$ [1 kHz, 20°C]: | 6.7 |
| CC-3-5 | 12.0 | $\Delta\varepsilon$ [1 kHz, 20°C]: | -3.5 |
| CCP-3-1 | 8.1 | $\gamma_1$ [mPa·s, 20°C]: | 193 |
| CCY-3-O2 | 11.0 | $K_1$ [pN, 20°C]: | 27.9 |
| CLOY-3-O2 | 8.5 | $K_3$ [pN, 20°C]: | 26.1 |
| CLY-3-O2 | 9.5 | | |
| CLY-4-O2 | 5.0 | | |
| CLY-5-O2 | 5.0 | | |
| DCC-2-3 | 3.0 | | |
| CP-3-O2 | 2.0 | | |
| Σ | 100.0 | | |

To the mixture M140 are added 100 ppm of the stabiliser ST-2a-2.

Mixture Example M141

| | | | |
|---|---|---|---|
| B(S)-2O-O5 | 5.0 | cl.p. [°C]: | 108.1 |
| CC-3-V | 15.0 | $n_e$ [589 nm, 20°C]: | 1.5738 |
| CC-3-V1 | 14.25 | $n_o$ [589 nm, 20°C]: | 1.4823 |
| CC-4-V1 | 4.0 | $\Delta n$ [589 nm, 20°C]: | 0.0915 |
| CC-3-O3 | 7.25 | $\varepsilon_\parallel$ [1 kHz, 20°C]: | 3.1 |

(continued)

| | | | |
|---|---|---|---|
| CC-3-5 | 5.0 | $\varepsilon_\perp$ [1 kHz, 20°C]: | 5.6 |
| CCP-3-1 | 8.0 | $\Delta\varepsilon$ [1 kHz, 20°C]: | -2.5 |
| CCP-3-3 | 8.0 | $\gamma_1$ [mPa·s, 20°C]: | 137 |
| CCY-3-O2 | 9.0 | $K_1$ [pN, 20°C]: | 23.8 |
| CLOY-3-O2 | 5.5 | $K_3$ [pN, 20°C]: | 22.4 |
| CLY-3-O2 | 8.0 | | |
| COB(S)-2-O4 | 6.0 | | |
| DCC-5-3 | 3.0 | | |
| CP-3-O2 | 1.0 | | |
| Y-4O-O4 | 1.0 | | |
| Σ | 100.0 | | |

To the mixture M141 are added 150 ppm of the stabiliser ST-3a-1.

Mixture Example M142

| | | | |
|---|---|---|---|
| B(S)-2O-O5 | 5.25 | cl.p. [°C]: | 106.9 |
| CC-3-V | 23.0 | $n_e$ [589 nm, 20°C]: | 1.5735 |
| CC-3-V1 | 14.0 | $n_o$ [589 nm, 20°C]: | 1.4826 |
| CC-3-O3 | 1.5 | $\Delta n$ [589 nm, 20°C]: | 0.0909 |
| CC-3-5 | 5.0 | $\varepsilon_\parallel$ [1 kHz, 20°C]: | 3.1 |
| CCP-3-1 | 8.0 | $\varepsilon_\perp$ [1 kHz, 20°C]: | 5.6 |
| CCP-3-3 | 8.0 | $\Delta\varepsilon$ [1 kHz, 20°C]: | -2.4 |
| CCY-3-O2 | 8.0 | $\gamma_1$ [mPa·s, 20°C]: | 135 |
| CLOY-3-O2 | 5.75 | $K_1$ [pN, 20°C]: | 22.7 |
| CLY-3-O2 | 8.0 | $K_3$ [pN, 20°C]: | 22.2 |
| COB(S)-2-O4 | 6.0 | | |
| DCC-5-3 | 5.0 | | |
| CP-3-O2 | 1.0 | | |
| Y-4O-O4 | 1.5 | | |
| Σ | 100.0 | | |

To the mixture M142 are added 100 ppm of the stabiliser ST-3b-1.

Mixture Example M143

| | | | |
|---|---|---|---|
| B(S)-2O-O4 | 4.0 | cl.p. [°C]: | 117.5 |
| B(S)-2O-O5 | 4.0 | $n_e$ [589 nm, 20°C]: | 1.5779 |
| B(S)-2O-O6 | 1.5 | $n_o$ [589 nm, 20°C]: | 1.4819 |
| CC-3-V | 6.5 | $\Delta n$ [589 nm, 20°C]: | 0.0960 |
| CC-3-V1 | 12.0 | $\varepsilon_\parallel$ [1 kHz, 20°C]: | 3.2 |
| CC-4-V1 | 8.0 | $\varepsilon_\perp$ [1 kHz, 20°C]: | 6.9 |
| CC-3-O3 | 3.0 | $\Delta\varepsilon$ [1 kHz, 20°C]: | -3.7 |
| CC-3-5 | 12.0 | $\gamma_1$ [mPa·s, 20°C]: | 200 |
| CCP-3-1 | 5.5 | $K_1$ [pN, 20°C]: | 28.5 |
| CCY-3-O2 | 10.5 | $K_3$ [pN, 20°C]: | 26.4 |
| CDC-3-5 | 5.0 | | |

(continued)

| | |
|---|---|
| CLOY-3-O2 | 8.5 |
| CLY-3-O2 | 9.5 |
| CLY-4-O2 | 5.0 |
| CLY-5-O2 | 5.0 |
| Σ | 100.0 |

To the mixture M143 are added 100 ppm of the stabiliser S-1-1-1.

Mixture Example M144

| | | | |
|---|---|---|---|
| B(S)-2O-O4 | 4.0 | cl.p. [°C]: | 118.5 |
| B(S)-2O-O5 | 4.0 | | |
| B(S)-2O-O6 | 1.5 | | |
| CC-3-V | 6.5 | | |
| CC-3-V1 | 12.0 | | |
| CC-4-V1 | 8.0 | | |
| CC-3-O3 | 3.0 | | |
| CC-3-5 | 12.0 | | |
| CCP-3-1 | 5.5 | | |
| CCY-3-O2 | 10.5 | | |
| CAC-3-5 | 5.0 | | |
| CLOY-3-O2 | | | 8.5 |
| CLY-3-O2 | | | 9.5 |
| CLY-4-O2 | | | 5.0 |
| CLY-5-O2 | | | 5.0 |
| Σ | | | 100.0 |

To the mixture M144 are added 50 ppm of the stabiliser S-2-1-1.

Mixture Example M145

| | | | |
|---|---|---|---|
| B(S)-2O-O4 | 4.0 | cl.p. [°C]: | 116 |
| B(S)-2O-O5 | 4.8 | $n_e$ [589 nm, 20°C]: | 1.5782 |
| CC-3-V | 5.3 | $n_o$ [589 nm, 20°C]: | 1.4818 |
| CC-3-V1 | 12.0 | Δn [589 nm, 20°C]: | 0.0964 |
| CC-4-V1 | 8.0 | $\varepsilon_\parallel$ [1 kHz, 20°C]: | 3.2 |
| CC-3-O3 | 3.0 | $\varepsilon_\perp$ [1 kHz, 20°C]: | 6.8 |
| CC-3-5 | 12.0 | Δε [1 kHz, 20°C]: | -3.6 |
| CCP-3-1 | 6.3 | $\gamma_1$ [mPa·s, 20°C]: | 195 |
| CCY-3-O2 | 10.5 | $K_1$ [pN, 20°C]: | 27.4 |
| CDC-3-5 | 4.1 | $K_3$ [pN, 20°C]: | 25.7 |
| CLOY-3-O2 | 8.5 | | |
| CLY-3-O2 | 9.5 | | |
| CLY-4-O2 | 5.0 | | |
| CLY-5-O2 | 5.0 | | |

(continued)

| | |
|---|---|
| CP-3-O2 | 2.0 |
| Σ | 100.0 |

To the mixture M145 are added 50 ppm of the stabiliser ST-2a-2 and 500 ppm of the stabiliser ST-3a-1.

Mixture Example M146

| | | | |
|---|---|---|---|
| B(S)-2O-O4 | 4.0 | cl.p. [°C]: | 119 |
| B(S)-2O-O5 | 2.75 | $n_e$ [589 nm, 20°C]: | 1.5790 |
| CC-3-V1 | 12.0 | $n_o$ [589 nm, 20°C]: | 1.4836 |
| CC-4-V1 | 10.0 | $\Delta n$ [589 nm, 20°C]: | 0.0954 |
| CC-3-O3 | 3.0 | $\varepsilon_{\parallel}$ [1 kHz, 20°C]: | 3.1 |
| CC-3-5 | 11.0 | $\varepsilon_{\perp}$ [1 kHz, 20°C]: | 6.4 |
| CCP-3-1 | 16.0 | $\Delta\varepsilon$ [1 kHz, 20°C]: | -3.2 |
| CCY-3-O2 | 10.5 | $\gamma_1$ [mPa·s, 20°C]: | 223 |
| CDC-3-5 | 3.25 | $K_1$ [pN, 20°C]: | 28.0 |
| CLOY-3-O2 | 15.0 | $K_3$ [pN, 20°C]: | 28.4 |
| CLY-3-O2 | 9.0 | | |
| CLY-5-O2 | 1.5 | | |
| CP-3-O2 | 2.0 | | |
| Σ | 100.0 | | |

To the mixture M146 are added 50 ppm of the stabiliser ST-9-1.

Mixture Example M147

| | | | |
|---|---|---|---|
| B(S)-2O-O4 | 4.0 | cl.p. [°C]: | 118.5 |
| B(S)-2O-O5 | 4.25 | $n_e$ [589 nm, 20°C]: | 1.5785 |
| CC-3-V | 3.5 | $n_o$ [589 nm, 20°C]: | 1.4818 |
| CC-3-V1 | 12.0 | $\Delta n$ [589 nm, 20°C]: | 0.0967 |
| CC-4-V1 | 8.0 | $\varepsilon_{\parallel}$ [1 kHz, 20°C]: | 3.2 |
| CC-3-O3 | 3.0 | $\varepsilon_{\perp}$ [1 kHz, 20°C]: | 6.9 |
| CC-3-5 | 12.5 | $\Delta\varepsilon$ [1 kHz, 20°C]: | -3.7 |
| CCP-3-1 | 5.0 | $\gamma_1$ [mPa·s, 20°C]: | 209 |
| CCY-3-O2 | 11.0 | $K_1$ [pN, 20°C]: | 28.9 |
| CDC-3-5 | 5.0 | $K_3$ [pN, 20°C]: | 27.4 |
| CLOY-3-O2 | 8.5 | | |
| CLY-3-O2 | 9.0 | | |
| CLY-3-03 | 2.25 | | |
| CLY-4-O2 | 5.0 | | |
| CLY-5-O2 | 5.0 | | |
| CP-3-O2 | 2.0 | | |
| Σ | 100.0 | | |

To the mixture M147 are added 50 ppm of the stabiliser ST-2a-2 and 500 ppm of the stabiliser ST-3a-1.

Mixture Example M148

A polymerizable mixture is prepared by adding 0.3% of the polymerizable compound RM-1 to the Mixture Example M1.

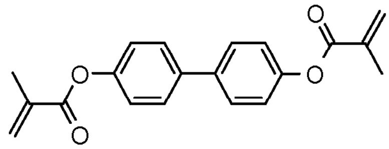

RM-1

Mixture Example M149

A polymerizable mixture is prepared by adding 0.3% of the polymerizable compound RM-17 to the Mixture Example M2.

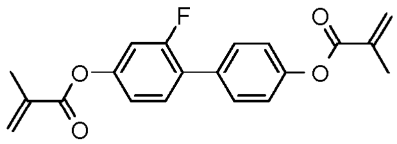

RM-17

Mixture Example M150

A polymerizable mixture is prepared by adding 0.3% of the polymerizable compound RM-19 to the Mixture Example M3.

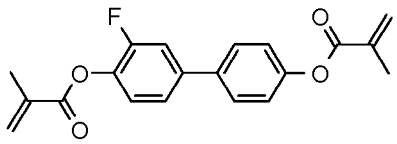

RM-19

Mixture Example M151

A polymerizable mixture is prepared by adding 0.3% of the polymerizable compound RM-35 to the Mixture Example M4.

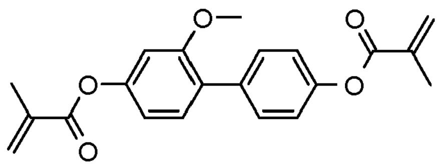

RM-35

Mixture Example M152

A polymerizable mixture is prepared by adding 0.4% of the polymerizable compound RM-64 to the Mixture Example M5.

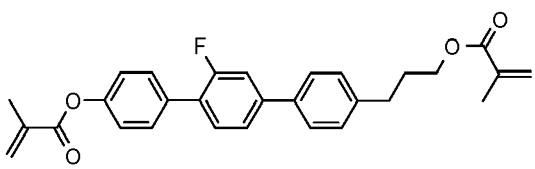

RM-64

Mixture Example M153

A polymerizable mixture is prepared by adding 0.3% of the polymerizable compound RM-171 to the Mixture Example M6.

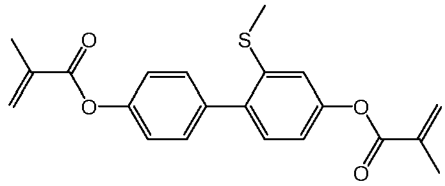

RM-171

Mixture Example M154

A polymerizable mixture is prepared by adding 0.3% of the polymerizable compound RM-172 to the Mixture Example M7.

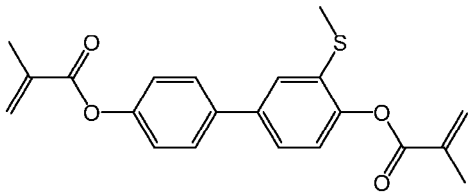

RM-172

Mixture Example M155

| | | | |
|---|---|---|---|
| B(S)-2O-O4 | 4.0 | cl.p. [°C]: | 116.9 |
| B(S)-2O-O5 | 1.5 | Δn [589 nm, 20°C]: | 0.0909 |
| CC-3-V | 6.0 | $\varepsilon_{\parallel}$ [1 kHz, 20°C]: | 3.2 |
| CC-3-V1 | 12.0 | $\varepsilon_{\perp}$ [1 kHz, 20°C]: | 6.2 |
| CC-4-V1 | 10.0 | Δε [1 kHz, 20°C]: | -3.0 |
| CCD-3-3 | 5.5 | $\gamma_1$ [mPa·s, 20°C]: | 192 |
| CC-3-5 | 12.0 | $K_1$ [pN, 20°C]: | 26.4 |
| CCP-3-1 | 12.0 | $K_3$ [pN, 20°C]: | 26.2 |
| CCY-3-O2 | 11.0 | $V_0$ [V, 20°C]: | 3.13 |
| CCY-5-O2 | 2.4 | | |
| CLOY-3-O2 | 12.1 | | |
| CLY-3-O2 | 10.0 | | |
| Y-4O-O4 | 1.5 | | |
| Σ | 100.0 | | |

To 99.96 wt% of the mixture M155 are added 0.04 wt% of the stabiliser ST-3b-1.

Mixture Example M156

| | | | |
|---|---|---|---|
| B(S)-2O-O4 | 3.3 | Cl.p. [°C]: | 116.2 |
| B(S)-2O-O5 | 3.5 | Δn [589 nm, 20°C]: | 0.0914 |
| CC-3-V | 7.2 | $\varepsilon_{\parallel}$ [1 kHz, 20°C]: | 3.2 |
| CC-3-V1 | 12.0 | $\varepsilon_{\perp}$ [1 kHz, 20°C]: | 6.2 |
| CC-4-V1 | 12.0 | Δε [1 kHz, 20°C]: | -3.0 |

(continued)

| | | | |
|---|---|---|---|
| CC-3-5 | 12.0 | $\gamma_1$ [mPa s, 20°C]: | 188 |
| CCD-3-3 | 5.5 | $K_1$ [pN, 20°C]: | 26.9 |
| CCP-3-1 | 9.5 | $K_3$ [pN, 20°C]: | 26.3 |
| CCY-3-O2 | 11.0 | $V_0$ [V, 20°C]: | 3.13 |
| CLOY-3-O2 | 13.0 | | |
| CLY-3-O2 | 11.0 | | |
| Σ | 100.0 | | |

To 99.96 wt% of the mixture M156 are added 0.04 wt% of the stabiliser ST-3b-1.

Mixture Example M157

| | | | |
|---|---|---|---|
| B(S)-2O-O4 | 4.0 | Cl.p. [°C]: | 117.8 |
| B(S)-2O-O5 | 2.0 | Δn [589 nm, 20°C]: | 0.0901 |
| CC-3-V | 9.5 | $\varepsilon_\parallel$ [1 kHz, 20°C]: | 3.2 |
| CC-3-V1 | 12.0 | $\varepsilon_\perp$ [1 kHz, 20°C]: | 6.1 |
| CC-4-V1 | 10.0 | Δε [1 kHz, 20°C]: | -2.9 |
| CC-3-5 | 12.0 | $\gamma_1$ [mPa s, 20°C]: | 183 |
| CCD-3-3 | 5.5 | $K_1$ [pN, 20°C]: | 26.0 |
| CCP-3-1 | 9.5 | $K_3$ [pN, 20°C]: | 25.9 |
| CCY-3-O2 | 11.0 | $V_0$ [V, 20°C]: | 3.16 |
| CLOY-3-O2 | 13.0 | | |
| CLY-3-O2 | 11.0 | | |
| CY-3-O2 | 0.5 | | |
| Σ | 100.0 | | |

To 99.96 wt% of the mixture M157 are added 0.04 wt% of the stabiliser ST-3b-1.

Mixture Example M158

| | | | |
|---|---|---|---|
| B(S)-2O-O4 | 3.65 | Cl.p. [°C]: | 115.5 |
| B(S)-2O-O5 | 2.75 | Δn [589 nm, 20°C]: | 0.0910 |
| CC-3-V | 8.35 | $\varepsilon_\parallel$ [1 kHz, 20°C]: | 3.2 |
| CC-3-V1 | 12.0 | $\varepsilon_\perp$ [1 kHz, 20°C]: | 6.1 |
| CC-4-V1 | 11.0 | Δε [1 kHz, 20°C]: | -2.9 |
| CC-3-5 | 12.0 | $\gamma_1$ [mPa s, 20°C]: | 185 |
| CCD-3-3 | 5.5 | $K_1$ [pN, 20°C]: | 26.4 |
| CCP-3-1 | 9.5 | $K_3$ [pN, 20°C]: | 26.0 |
| CCY-3-O2 | 11.0 | $V_0$ [V, 20°C]: | 3.14 |
| CLOY-3-O2 | 13.0 | | |
| CLY-3-O2 | 11.0 | | |
| CY-3-O2 | 0.25 | | |
| Σ | 100.0 | | |

To 99.96 wt% of the mixture M158 are added 0.04 wt% of the stabiliser ST-3b-1.

Mixture Example M159

| | | | |
|---|---|---|---|
| B(S)-2O-O4 | 4.0 | Cl.p. [°C]: | 117.1 |
| B(S)-2O-O5 | 4.0 | $\Delta n$ [589 nm, 20°C]: | 0.0926 |
| CC-3-V | 9.5 | $\varepsilon_{\parallel}$ [1 kHz, 20°C]: | 3.1 |
| CC-3-V1 | 12.0 | $\varepsilon_{\perp}$ [1 kHz, 20°C]: | 6.0 |
| CC-4-V1 | 10.0 | $\Delta\varepsilon$ [1 kHz, 20°C]: | -2.9 |
| CC-3-5 | 12.0 | $\gamma_1$ [mPa s, 20°C]: | 178 |
| CCD-3-3 | 5.5 | $K_1$ [pN, 20°C]: | 26.9 |
| CCP-3-1 | 10.0 | $K_3$ [pN, 20°C]: | 25.7 |
| CCY-3-O2 | 11.0 | $V_0$ [V, 20°C]: | 3.15 |
| CLOY-3-O2 | 9.0 | | |
| CLY-3-O2 | 10.0 | | |
| CLY-5-O2 | 3.0 | | |
| Σ | 100.0 | | |

To 99.96 wt% of the mixture M159 are added 0.04 wt% of the stabiliser ST-3b-1.

Mixture Example M160

| | | | |
|---|---|---|---|
| B(S)-2O-O4 | 3.0 | Cl.p. [°C]: | 114.5 |
| B(S)-2O-O5 | 3.0 | $\Delta n$ [589 nm, 20°C]: | 0.0906 |
| B(S)-2O-O6 | 1.6 | $\varepsilon_{\parallel}$ [1 kHz, 20°C]: | 3.2 |
| CC-3-V | 7.8 | $\varepsilon_{\perp}$ [1 kHz, 20°C]: | 6.2 |
| CC-3-V1 | 12.0 | $\Delta\varepsilon$ [1 kHz, 20°C]: | -3.0 |
| CC-4-V1 | 11.5 | $\gamma_1$ [mPa s, 20°C]: | 182 |
| CCD-3-3 | 5.5 | $K_1$ [pN, 20°C]: | 26.6 |
| CC-3-4 | 1.0 | $K_3$ [pN, 20°C]: | 25.4 |
| CC-3-5 | 12.0 | $V_0$ [V, 20°C]: | 3.05 |
| CCOC-3-3 | 2.0 | | |
| CCP-3-1 | 6.2 | | |
| CCY-3-O2 | 11.0 | | |
| CLOY-3-O2 | 12.4 | | |
| CLY-3-O2 | 11.0 | | |
| Σ | 100.0 | | |

To 99.96 wt% of the mixture M160 are added 0.04 wt% of the stabiliser ST-3b-1.

Mixture Example M161

| | | | |
|---|---|---|---|
| B(S)-2O-O4 | 3.9 | Cl.p. [°C]: | 115.3 |
| B(S)-2O-O5 | 2.5 | $\Delta n$ [589 nm, 20°C]: | 0.0912 |
| B(S)-2O-O6 | 0.5 | $\varepsilon_{\parallel}$ [1 kHz, 20°C]: | 3.2 |
| CC-3-V | 8.1 | $\varepsilon_{\perp}$ [1 kHz, 20°C]: | 6.2 |
| CC-3-V1 | 12.0 | $\Delta\varepsilon$ [1 kHz, 20°C]: | -3.0 |
| CC-4-V1 | 10.5 | $\gamma_1$ [mPa s, 20°C]: | 191 |

(continued)

| | | | |
|---|---|---|---|
| CCD-3-3 | 5.0 | $K_1$ [pN, 20°C]: | 26.6 |
| CC-3-5 | 12.0 | $K_3$ [pN, 20°C]: | 26.1 |
| CCOC-3-3 | 1.5 | $V_0$ [V, 20°C]: | 3.07 |
| CCP-3-1 | 8.7 | | |
| CCY-3-O2 | 10.5 | | |
| CCY-5-O2 | 0.5 | | |
| CLOY-3-O2 | 13.8 | | |
| CLY-2-O4 | 0.5 | | |
| CLY-3-O2 | 10.0 | | |
| Σ | 100.0 | | |

To 99.96 wt% of the mixture M161 are added 0.04 wt% of the stabiliser ST-3b-1.

Mixture Example M162

| | | | |
|---|---|---|---|
| B(S)-2O-O4 | 4.0 | Cl.p. [°C]: | 114.2 |
| B(S)-2O-O5 | 2.5 | Δn [589 nm, 20°C]: | 0.0910 |
| CC-3-V | 9.0 | $\varepsilon_{\parallel}$ [1 kHz, 20°C]: | 3.2 |
| CC-3-V1 | 12.0 | $\varepsilon_{\perp}$ [1 kHz, 20°C]: | 6.2 |
| CC-4-V1 | 10.0 | Δε [1 kHz, 20°C]: | -3.0 |
| CCD-3-3 | 5.0 | $\gamma_1$ [mPa s, 20°C]: | 188 |
| CC-3-5 | 12.0 | $K_1$ [pN, 20°C]: | 26.0 |
| CCP-3-1 | 10.0 | $K_3$ [pN, 20°C]: | 26.1 |
| CCY-3-O2 | 10.5 | $V_0$ [V, 20°C]: | 3.10 |
| CLOY-3-O2 | 15.0 | | |
| CLY-3-O2 | 10.0 | | |
| Σ | 100.0 | | |

To 99.96 wt% of the mixture M162 are added 0.04 wt% of the stabiliser ST-3b-1.

Mixture Example M163

| | | | |
|---|---|---|---|
| B(S)-2O-O4 | 4.0 | Cl.p. [°C]: | 123.7 |
| B(S)-2O-O5 | 5.0 | Δn [589 nm, 20°C]: | 0.0987 |
| CC-3-V | 6.5 | $\varepsilon_{\parallel}$ [1 kHz, 20°C]: | 3.2 |
| CC-3-V1 | 10.5 | $\varepsilon_{\perp}$ [1 kHz, 20°C]: | 6.5 |
| CC-4-V1 | 10.0 | Δε [1 kHz, 20°C]: | -3.3 |
| CCD-3-3 | 4.5 | $\gamma_1$ [mPa s, 20°C]: | 192 |
| CC-3-5 | 12.5 | $K_1$ [pN, 20°C]: | 30.0 |
| CCP-3-1 | 9.0 | $K_3$ [pN, 20°C]: | 30.7 |
| CCY-3-O2 | 10.0 | $V_0$ [V, 20°C]: | 3.22 |
| CLOY-3-O2 | 5.0 | | |
| CLP-V-1 | 1.0 | | |
| CLY-3-O2 | 10.0 | | |
| CLY-4-O2 | 6.0 | | |

(continued)

| | |
|---|---|
| CLY-5-O2 | 6.0 |
| Σ | 100.0 |

To 99.96 wt% of the mixture M163 are added 0.04 wt% of the stabiliser ST-3b-1.

Mixture Example M164

| | | | |
|---|---|---|---|
| B(S)-2O-O4 | 4.0 | Cl.p. [°C]: | 123.3 |
| B(S)-2O-O5 | 5.0 | Δn [589 nm, 20°C]: | 0.0999 |
| B(S)-2O-O6 | 1.5 | $\varepsilon_{\parallel}$ [1 kHz, 20°C]: | 3.2 |
| CC-3-V | 6.0 | $\varepsilon_{\perp}$ [1 kHz, 20°C]: | 6.8 |
| CC-3-V1 | 10.5 | Δε [1 kHz, 20°C]: | -3.6 |
| CC-4-V1 | 10.0 | $\gamma_1$ [mPa s, 20°C]: | 196 |
| CCD-3-3 | 4.5 | $K_1$ [pN, 20°C]: | 30.7 |
| CC-3-5 | 12.5 | $K_3$ [pN, 20°C]: | 34.3 |
| CCP-3-1 | 7.0 | $V_0$ [V, 20°C]: | 3.27 |
| CCP-V2-1 | 2.0 | LTS bulk [h, -20°C]: | 120 |
| CCY-3-O2 | 10.0 | | |
| CLOY-3-O2 | 5.0 | | |
| CLY-3-O2 | 10.0 | | |
| CLY-4-O2 | 6.0 | | |
| CLY-5-O2 | 6.0 | | |
| Σ | 100.0 | | |

To 99.96 wt% of the mixture M164 are added 0.04 wt% of the stabiliser ST-3b-1.

Mixture Example M165

| | | | |
|---|---|---|---|
| B(S)-2O-O4 | 4.0 | Cl.p. [°C]: | 124.3 |
| B(S)-2O-O5 | 5.0 | Δn [589 nm, 20°C]: | 0.1007 |
| B(S)-2O-O6 | 3.0 | $\varepsilon_{\parallel}$ [1 kHz, 20°C]: | 3.2 |
| CC-3-V | 6.0 | $\varepsilon_{\perp}$ [1 kHz, 20°C]: | 6.6 |
| CC-3-V1 | 10.5 | Δε [1 kHz, 20°C]: | -3.4 |
| CC-4-V1 | 8.0 | $\gamma_1$ [mPa s, 20°C]: | 198 |
| CCD-3-3 | 5.0 | $K_1$ [pN, 20°C]: | 30.8 |
| CC-3-5 | 12.5 | $K_3$ [pN, 20°C]: | 33.1 |
| CCOC-3-3 | 1.0 | $V_0$ [V, 20°C]: | 3.28 |
| CCP-3-1 | 10.5 | LTS bulk [h, -20°C]: | 216 |
| CCP-V2-1 | 2.0 | | |
| CCY-3-O2 | 11.0 | | |
| CLOY-3-O2 | 4.5 | | |
| CLY-3-O2 | 11.0 | | |
| CLY-5-O2 | 6.0 | | |
| Σ | 100.0 | | |

To 99.96 wt% of the mixture M165 are added 0.04 wt% of the stabiliser ST-3b-1.

Mixture Example M166

| | | | |
|---|---|---|---|
| B(S)-2O-O4 | 4.0 | Cl.p. [°C]: | 124.3 |
| B(S)-2O-O5 | 5.0 | $\Delta n$ [589 nm, 20°C]: | 0.1005 |
| B(S)-2O-O6 | 3.0 | $\varepsilon_{\parallel}$ [1 kHz, 20°C]: | 3.2 |
| CC-3-V | 5.5 | $\varepsilon_{\perp}$ [1 kHz, 20°C]: | 6.6 |
| CC-3-V1 | 10.5 | $\Delta\varepsilon$ [1 kHz, 20°C]: | -3.4 |
| CC-4-V1 | 8.4 | $\gamma_1$ [mPa s, 20°C]: | 199 |
| CCD-3-3 | 4.6 | $K_1$ [pN, 20°C]: | 31.0 |
| CC-3-5 | 12.5 | $K_3$ [pN, 20°C]: | 33.4 |
| CCOC-3-3 | 1.8 | $V_0$ [V, 20°C]: | 3.30 |
| CCP-3-1 | 10.5 | | |
| CCP-V2-1 | 2.0 | | |
| CCY-3-O2 | 10.5 | | |
| CLOY-3-O2 | 4.7 | | |
| CLY-3-O2 | 11.0 | | |
| CLY-5-O2 | 6.0 | | |
| Σ | 100.0 | | |

To 99.96 wt% of the mixture M166 are added 0.04 wt% of the stabiliser ST-3b-1.

Mixture Example M167

| | | | |
|---|---|---|---|
| B(S)-2O-O4 | 4.0 | Cl.p. [°C]: | 124.6 |
| B(S)-2O-O5 | 5.0 | $\Delta n$ [589 nm, 20°C]: | 0.1001 |
| B(S)-2O-O6 | 3.0 | $\varepsilon_{\parallel}$ [1 kHz, 20°C]: | 3.2 |
| CC-3-V | 5.0 | $\varepsilon_{\perp}$ [1 kHz, 20°C]: | 6.6 |
| CC-3-V1 | 10.5 | $\Delta\varepsilon$ [1 kHz, 20°C]: | -3.5 |
| CC-4-V1 | 10.0 | $\gamma_1$ [mPa s, 20°C]: | 199 |
| CCD-3-3 | 5.0 | $K_1$ [pN, 20°C]: | 31.0 |
| CC-3-5 | 12.5 | $K_3$ [pN, 20°C]: | 34.2 |
| CCP-3-1 | 11.7 | $V_0$ [V, 20°C]: | 3.32 |
| CCY-3-O2 | 10.0 | | |
| CCY-5-O2 | 4.3 | | |
| CLOY-3-O2 | 4.0 | | |
| CLY-3-O2 | 10.0 | | |
| CLY-5-O2 | 5.0 | | |
| Σ | 100.0 | | |

To 99.96 wt% of the mixture M167 are added 0.04 wt% of the stabiliser ST-3b-1.

Mixture Example M168

| | | | |
|---|---|---|---|
| B(S)-2O-O4 | 4.0 | **Cl.p.** [°C]: | 125.0 |
| B(S)-2O-O5 | 5.0 | $\Delta n$ [589 nm, 20°C]: | 0.1005 |
| B(S)-2O-O6 | 3.1 | $\varepsilon_{\parallel}$ [1 kHz, 20°C]: | 3.2 |

(continued)

| | | | |
|---|---|---|---|
| CC-3-V | 5.9 | $\varepsilon_\perp$ [1 kHz, 20°C]: | 6.6 |
| CC-3-V1 | 10.5 | $\Delta\varepsilon$ [1 kHz, 20°C]: | -3.4 |
| CC-4-V1 | 8.5 | $\gamma_1$ [mPa s, 20°C]: | 199 |
| CCD-3-3 | 5.0 | $K_1$ [pN, 20°C]: | 30.9 |
| CC-3-5 | 12.0 | $K_3$ [pN, 20°C]: | 32.3 |
| CCOC-3-3 | 1.0 | $V_0$ [V, 20°C]: | 3.24 |
| CCP-3-1 | 10.5 | | |
| CCP-V2-1 | 2.0 | | |
| CCY-3-O2 | 10.5 | | |
| CCY-5-O2 | 2.5 | | |
| CLOY-3-O2 | 4.0 | | |
| CLY-3-O2 | 10.5 | | |
| CLY-5-O2 | 5.0 | | |
| Σ | 100.0 | | |

To 99.96 wt% of the mixture M168 are added 0.04 wt% of the stabiliser ST-3b-1.

Mixture Example M169

| | | | |
|---|---|---|---|
| B(S)-2O-O4 | 4.0 | Cl.p. [°C]: | 120.4 |
| B(S)-2O-O5 | 4.5 | $\Delta n$ [589 nm, 20°C]: | 0.0989 |
| B(S)-2O-O6 | 1.0 | $\varepsilon_\parallel$ [1 kHz, 20°C]: | 3.3 |
| CC-3-V | 5.0 | $\varepsilon_\perp$ [1 kHz, 20°C]: | 7.3 |
| CC-3-V1 | 11.0 | $\Delta\varepsilon$ [1 kHz, 20°C]: | -4.0 |
| CC-4-V1 | 8.5 | $\gamma_1$ [mPa s, 20°C]: | 211 |
| CCD-3-3 | 4.5 | $K_1$ [pN, 20°C]: | 30.7 |
| CC-3-O3 | 3.0 | $K_3$ [pN, 20°C]: | 33.2 |
| CC-3-5 | 12.5 | $V_0$ [V, 20°C]: | 3.01 |
| CCP-3-1 | 4.0 | | |
| CCY-3-O2 | 10.5 | | |
| CLOY-3-O2 | 7.5 | | |
| CLY-3-O2 | 10.5 | | |
| CLY-3-O3 | 0.5 | | |
| CLY-4-O2 | 6.0 | | |
| CLY-5-O2 | 6.0 | | |
| COB(S)-2-O4 | 1.0 | | |
| Σ | 100.0 | | |

To 99.965 wt% of the mixture M169 are added 0.035 wt% of the stabiliser ST-3a-1.

Mixture Example M170

| | | | |
|---|---|---|---|
| B(S)-2O-O4 | 4.0 | **Cl.p.** [°C]: | 115.3 |
| B(S)-2O-O5 | 4.5 | $\Delta n$ [589 nm, 20°C]: | 0.1024 |
| B(S)-2O-O6 | 3.5 | $\varepsilon_\parallel$ [1 kHz, 20°C]: | 3.4 |
| CC-3-V | 7.0 | $\varepsilon_\perp$ [1 kHz, 20°C]: | 8.3 |
| CC-3-V1 | 10.5 | $\Delta\varepsilon$ [1 kHz, 20°C]: | -4.9 |

(continued)

| | | | |
|---|---|---|---|
| CC-4-V1 | 5.0 | $\gamma_1$ [mPa s, 20°C]: | 215 |
| CCD-3-3 | 2.5 | $K_1$ [pN, 20°C]: | 29.0 |
| CC-3-O3 | 5.0 | $K_3$ [pN, 20°C]: | 28.3 |
| CC-3-5 | 12.5 | $V_0$ [V, 20°C]: | 2.53 |
| CCY-3-O2 | 10.5 | | |
| CLOY-3-O2 | 8.0 | | |
| CLY-3-O2 | 10.5 | | |
| CLY-3-O3 | 3.5 | | |
| CLY-4-O2 | 6.0 | | |
| CLY-5-O2 | 6.0 | | |
| COB(S)-2-O4 | 1.0 | | |
| Σ | 100.0 | | |

To 99.965 wt% of the mixture M170 are added 0.035 wt% of the stabiliser ST-3a-1.

Mixture Example M171

| | | | |
|---|---|---|---|
| B(S)-2O-O4 | 4.0 | Cl.p. [°C]: | 115.8 |
| B(S)-2O-O5 | 4.5 | $\Delta n$ [589 nm, 20°C]: | 0.1027 |
| B(S)-2O-O6 | 3.5 | $\varepsilon_{\parallel}$ [1 kHz, 20°C]: | 3.4 |
| CC-3-V | 8.0 | $\varepsilon_{\perp}$ [1 kHz, 20°C]: | 8.2 |
| CC-3-V1 | 10.5 | $\Delta\varepsilon$ [1 kHz, 20°C]: | -4.8 |
| CC-4-V1 | 5.0 | $\gamma_1$ [mPa s, 20°C]: | 207 |
| CCD-3-3 | 4.0 | $K_1$ [pN, 20°C]: | 29.5 |
| CC-3-O3 | 5.0 | $K_3$ [pN, 20°C]: | 28.7 |
| CC-3-5 | 12.5 | $V_0$ [V, 20°C]: | 2.58 |
| CCY-3-O2 | 11.0 | | |
| CLOY-3-O2 | 6.5 | | |
| CLY-3-O2 | 10.5 | | |
| CLY-4-O2 | 6.0 | | |
| CLY-5-O2 | 6.0 | | |
| COB(S)-2-O4 | 3.0 | | |
| Σ | 100.0 | | |

To 99.965 wt% of the mixture M171 are added 0.035 wt% of the stabiliser ST-3a-1.

Mixture Example M172

| | | | |
|---|---|---|---|
| B(S)-2O-O4 | 4.0 | Cl.p. [°C]: | 115.6 |
| B(S)-2O-O5 | 4.5 | $\Delta n$ [589 nm, 20°C]: | 0.1022 |
| B(S)-2O-O6 | 3.5 | $\varepsilon_{\parallel}$ [1 kHz, 20°C]: | 3.4 |
| CC-3-V | 8.5 | $\varepsilon_{\perp}$ [1 kHz, 20°C]: | 8.0 |
| CC-3-V1 | 10.5 | $\Delta\varepsilon$ [1 kHz, 20°C]: | -4.6 |
| CC-4-V1 | 5.0 | $\gamma_1$ [mPa s, 20°C]: | 203 |
| CCD-3-3 | 5.0 | $K_1$ [pN, 20°C]: | 30.5 |
| CC-3-O3 | 5.0 | $K_3$ [pN, 20°C]: | 33.0 |
| CC-3-5 | 12.5 | $V_0$ [V, 20°C]: | 2.81 |

(continued)

| | |
|---|---|
| CCY-3-O2 | 10.5 |
| CLOY-3-O2 | 5.0 |
| CLY-3-O2 | 10.5 |
| CLY-4-O2 | 6.0 |
| CLY-5-O2 | 6.0 |
| COB(S)-2-O4 | 3.5 |
| Σ | 100.0 |

To 99.965 wt% of the mixture M172 are added 0.035 wt% of the stabiliser ST-3a-1.

Mixture Example M173

| | | | |
|---|---|---|---|
| ACC-2-3 | 5.0 | cl.p. [°C]: | 117.4 |
| B(S)-2O-O4 | 2.5 | $n_e$ [589 nm, 20°C]: | 1.5732 |
| CC-3-V | 3.5 | $n_o$ [589 nm, 20°C]: | 1.4829 |
| CC-3-V1 | 12.0 | $\Delta n$ [589 nm, 20°C]: | 0.0903 |
| CC-4-V1 | 10.0 | $\varepsilon_{\parallel}$ [1 kHz, 20°C]: | 3.1 |
| CC-3-5 | 12.0 | $\varepsilon_{\perp}$ [1 kHz, 20°C]: | 6.6 |
| CCP-3-1 | 11.75 | $\Delta\varepsilon$ [1 kHz, 20°C]: | -3.5 |
| CCY-3-O2 | 10.0 | $\gamma_1$ [mPa·s, 20°C]: | 239 |
| CLOY-3-O2 | 23.25 | $K_1$ [pN, 20°C]: | 28.0 |
| CLY-3-O2 | 10.0 | $K_3$ [pN, 20°C]: | 28.3 |
| Σ | 100.0 | | |

To the mixture M173 are added 150 ppm of the stabiliser ST-2a-1, 50 ppm of the stabiliser ST-2a-2 and 300 ppm of the stabiliser ST-3a-1.

Mixture Example M174

| | | | |
|---|---|---|---|
| ACC-2-3 | 3.0 | cl.p. [°C]: | 117.5 |
| B(S)-2O-O4 | 1.75 | $n_e$ [589 nm, 20°C]: | 1.5712 |
| CC-3-V | 2.75 | $n_o$ [589 nm, 20°C]: | 1.4820 |
| CC-3-V1 | 12.0 | $\Delta n$ [589 nm, 20°C]: | 0.0892 |
| CC-4-V1 | 10.0 | $\varepsilon_{\parallel}$ [1 kHz, 20°C]: | 3.1 |
| CC-3-5 | 12.5 | $\varepsilon_{\perp}$ [1 kHz, 20°C]: | 6.4 |
| CCP-3-1 | 13.5 | $\Delta\varepsilon$ [1 kHz, 20°C]: | -3.3 |
| CCY-3-O2 | 10.0 | $\gamma_1$ [mPa·s, 20°C]: | 241 |
| CLOY-3-O2 | 24.5 | $K_1$ [pN, 20°C]: | 27.1 |
| CLY-3-O2 | 10.0 | $K_3$ [pN, 20°C]: | 28.7 |
| Σ | 100.0 | | |

To the mixture M174 are added 50 ppm of the stabiliser S-2-1-1.

Mixture Example M175

| | | | |
|---|---|---|---|
| ACC-2-3 | 3.0 | cl.p. [°C]: | 106 |
| CC-3-V1 | 10.0 | $n_e$ [589 nm, 20°C]: | 1.5601 |
| CC-4-V1 | 14.5 | $n_o$ [589 nm, 20°C]: | 1.4762 |
| CC-3-O3 | 8.0 | $\Delta n$ [589 nm, 20°C]: | 0.0839 |
| CC-3-5 | 5.0 | $\varepsilon_{\parallel}$ [1 kHz, 20°C]: | 3.3 |
| CCY-3-O2 | 9.0 | $\varepsilon_{\perp}$ [1 kHz, 20°C]: | 7.3 |
| CCY-5-O2 | 3.0 | $\Delta\varepsilon$ [1 kHz, 20°C]: | -4.0 |
| CCZC-3-3 | 3.0 | $\gamma_1$ [mPa·s, 20°C]: | 203 |
| CCZC-3-5 | 3.5 | $K_1$ [pN, 20°C]: | 23.1 |
| CLOY-3-O2 | 15.0 | $K_3$ [pN, 20°C]: | 22.4 |
| CLY-3-O2 | 9.0 | | |
| CLY-4-O2 | 5.0 | | |
| CLY-5-O2 | | | 5.0 |
| CY-5-O2 | | | 1.5 |
| Y-4O-O4 | | | 5.5 |
| Σ | | | 100.0 |

To the mixture M175 are added 100 ppm of the stabiliser S-1-1-1.

<u>Mixture Example M176</u>

| | | | |
|---|---|---|---|
| ACC-2-3 | 5.0 | cl.p. [°C]: | 104.5 |
| CC-3-V1 | 10.0 | $n_e$ [589 nm, 20°C]: | 1.5611 |
| CC-4-V1 | 13.5 | $n_o$ [589 nm, 20°C]: | 1.4768 |
| CC-3-O3 | 7.5 | $\Delta n$ [589 nm, 20°C]: | 0.0843 |
| CC-3-5 | 5.0 | $\varepsilon_{\parallel}$ [1 kHz, 20°C]: | 3.4 |
| CCY-3-O2 | 9.0 | $\varepsilon_{\perp}$ [1 kHz, 20°C]: | 7.5 |
| CCY-5-O2 | 3.0 | $\Delta\varepsilon$ [1 kHz, 20°C]: | -4.1 |
| CCZC-3-3 | 2.25 | $\gamma_1$ [mPa·s, 20°C]: | 199 |
| CCZC-3-5 | 2.5 | $K_1$ [pN, 20°C]: | 23.3 |
| CLOY-3-O2 | 15.0 | $K_3$ [pN, 20°C]: | 22.2 |
| CLY-3-O2 | 9.0 | | |
| CLY-4-O2 | 5.0 | | |
| CLY-5-O2 | 5.0 | | |
| CY-5-O2 | 2.0 | | |
| Y-4O-O4 | 6.25 | | |
| Σ | 100.0 | | |

To the mixture M176 are added 100 ppm of the stabiliser ST-2a-2.

<u>Mixture Example M177</u>

| | | | |
|---|---|---|---|
| ACC-2-3 | 4.0 | cl.p. [°C]: | 102.9 |
| CC-3-V1 | 10.0 | $n_e$ [589 nm, 20°C]: | 1.5609 |
| CC-4-V1 | 12.5 | $n_o$ [589 nm, 20°C]: | 1.4764 |
| CC-3-O3 | 8.0 | $\Delta n$ [589 nm, 20°C]: | 0.0845 |
| CC-3-5 | 5.0 | $\varepsilon_{\parallel}$ [1 kHz, 20°C]: | 3.4 |

(continued)

| | | | |
|---|---|---|---|
| CCY-3-O2 | 9.0 | $\varepsilon_\perp$ [1 kHz, 20°C]: | 7.6 |
| CCY-5-O2 | 3.0 | $\Delta\varepsilon$ [1 kHz, 20°C]: | -4.2 |
| CCZC-3-3 | 3.75 | $\gamma_1$ [mPa·s, 20°C]: | 199 |
| CCZC-3-5 | 1.5 | $K_1$ [pN, 20°C]: | 22.8 |
| CLOY-3-O2 | 15.0 | $K_3$ [pN, 20°C]: | 22.1 |
| CLY-3-O2 | 9.0 | | |
| CLY-4-O2 | 5.0 | | |
| CLY-5-O2 | 5.0 | | |
| CY-5-O2 | 3.0 | | |
| Y-4O-O4 | 6.25 | | |
| Σ | 100.0 | | |

To the mixture M177 are added 150 ppm of the stabiliser ST-2a-1, 50 ppm of the stabiliser ST-2a-2 and 300 ppm of the stabiliser ST-3a-1.

Mixture Example M178

| | | | |
|---|---|---|---|
| B(S)-2O-O4 | 4.0 | cl.p. [°C]: | 118.5 |
| B(S)-2O-O5 | 2.0 | $n_e$ [589 nm, 20°C]: | 1.5889 |
| B(S)-2O-O6 | 4.0 | $n_o$ [589 nm, 20°C]: | 1.4865 |
| CPP-3-2 | 2.0 | $\Delta n$ [589 nm, 20°C]: | 0.1024 |
| CC-3-V | 7.5 | $\varepsilon_\parallel$ [1 kHz, 20°C]: | 3.2 |
| CC-3-V1 | 8.0 | $\varepsilon_\perp$ [1 kHz, 20°C]: | 7.2 |
| CC-4-V1 | 6.0 | $\Delta\varepsilon$ [1 kHz, 20°C]: | -4.0 |
| ACC-2-3 | 3.0 | $\gamma_1$ [mPa·s, 20°C]: | 226 |
| CC-3-4 | 2.5 | $K_1$ [pN, 20°C]: | 27.8 |
| CC-3-5 | 8.0 | $K_3$ [pN, 20°C]: | 26.3 |
| CCP-3-1 | 6.0 | | |
| CCP-V2-1 | 8.5 | | |
| CCY-3-O2 | 9.0 | | |
| CLOY-3-O2 | 16.5 | | |
| CLY-3-O2 | 8.0 | | |
| CLY-5-O2 | 5.0 | | |
| Σ | 100.0 | | |

To the mixture M178 are added 50 ppm of the stabiliser S-2-1-1.

Mixture Example M179

| | | | |
|---|---|---|---|
| ACC-2-3 | 3.0 | cl.p. [°C]: | 121.8 |
| B(S)-2O-O4 | 3.0 | $n_e$ [589 nm, 20°C]: | 1.5778 |
| B(S)-2O-O5 | 2.75 | $n_o$ [589 nm, 20°C]: | 1.4826 |
| CC-3-V | 3.5 | $\Delta n$ [589 nm, 20°C]: | 0.0952 |
| CC-3-V1 | 8.25 | $\varepsilon_\parallel$ [1 kHz, 20°C]: | 3.1 |
| CC-4-V1 | 9.0 | $\varepsilon_\perp$ [1 kHz, 20°C]: | 7.1 |
| CC-3-O3 | 4.0 | $\Delta\varepsilon$ [1 kHz, 20°C]: | -3.9 |
| CC-3-5 | 12.0 | | |

(continued)

| | |
|---|---|
| CCP-3-1 | 8.5 |
| CCY-3-O2 | 10.0 |
| CCY-5-O2 | 2.0 |
| CLOY-3-O2 | 12.5 |
| CLY-3-O2 | 9.0 |
| CLY-3-O3 | 4.0 |
| CLY-4-O2 | 4.0 |
| CLY-5-O2 | 4.5 |
| Σ | 100.0 |

To the mixture M179 are added 100 ppm of the stabiliser ST-8-1.

Mixture Example M180

| | | | |
|---|---|---|---|
| B(S)-2O-O4 | 4.0 | cl.p. [°C]: | 121 |
| B(S)-2O-O5 | 4.0 | $n_e$ [589 nm, 20°C]: | 1.5845 |
| B(S)-2O-O6 | 3.0 | $n_o$ [589 nm, 20°C]: | 1.4836 |
| CAC-3-3 | 5.0 | $\Delta n$ [589 nm, 20°C]: | 0.1009 |
| CC-3-V | 5.8 | | |
| CC-3-V1 | | | 9.5 |
| CC-4-V1 | | | 8.0 |
| CC-3-O3 | | | 2.5 |
| CC-3-5 | | | 12.1 |
| CCP-3-1 | | | 8.5 |
| CCY-3-O2 | | | 11.1 |
| CLOY-3-O2 | | | 7.5 |
| CLY-3-O2 | | | 9.5 |
| CLY-4-O2 | | | 4.0 |
| CLY-5-O2 | | | 3.0 |
| COB(S)-2-O4 | | | 2.5 |
| Σ | | | 100.0 |

To 99.96 wt% of the mixture M180 are added 0.04 wt% of the stabiliser ST-3b-1.

Mixture Example M181

| | | | |
|---|---|---|---|
| B(S)-2O-O4 | 4.0 | cl.p. [°C]: | 120 |
| B(S)-2O-O5 | 4.0 | $n_e$ [589 nm, 20°C]: | 1.5849 |
| B(S)-2O-O6 | 3.0 | $n_o$ [589 nm, 20°C]: | 1.4837 |
| CAC-3-3 | 3.0 | $\Delta n$ [589 nm, 20°C]: | 0.1012 |
| CC-3-V | 6.4 | $\varepsilon_{\parallel}$ [1 kHz, 20°C]: | 3.2 |
| CC-3-V1 | 9.5 | $\varepsilon_{\perp}$ [1 kHz, 20°C]: | 7.3 |
| CC-4-V1 | 8.0 | $\Delta\varepsilon$ [1 kHz, 20°C]: | -4.1 |
| CC-3-O3 | 2.5 | $\gamma_1$ [mPa·s, 20°C]: | 196 |
| CC-3-5 | 12.5 | $K_1$ [pN, 20°C]: | 30.4 |
| CCP-3-1 | 8.6 | $K_3$ [pN, 20°C]: | 33.2 |
| CCY-3-O2 | 11.0 | | |

(continued)

| | |
|---|---|
| CCY-5-O2 | 1.0 |
| CLOY-3-O2 | 6.5 |
| CLY-3-O2 | 9.5 |
| CLY-4-O2 | 4.0 |
| CLY-5-O2 | 4.0 |
| COB(S)-2-O4 | 2.5 |
| Σ | 100.0 |

To the mixture M181 are added 100 ppm of the stabiliser ST-2a-2.

Mixture Example M182

| | | | |
|---|---|---|---|
| B(S)-2O-O4 | 4.0 | cl.p. [°C]: | 119.5 |
| B(S)-2O-O5 | 4.0 | $n_e$ [589 nm, 20°C]: | 1.5853 |
| B(S)-2O-O6 | 3.0 | $n_o$ [589 nm, 20°C]: | 1.4838 |
| CAC-3-3 | 4.0 | Δn [589 nm, 20°C]: | 0.1015 |
| CC-3-V | 4.5 | $\varepsilon_\parallel$ [1 kHz, 20°C]: | 3.2 |
| CC-3-V1 | 9.5 | $\varepsilon_\perp$ [1 kHz, 20°C]: | 7.2 |
| CC-4-V1 | 8.0 | Δε [1 kHz, 20°C]: | -4.0 |
| CC-3-O3 | 2.5 | $\gamma_1$ [mPa·s, 20°C]: | 201 |
| CC-3-5 | 12.5 | $K_1$ [pN, 20°C]: | 30.5 |
| CCP-3-1 | 8.5 | $K_3$ [pN, 20°C]: | 32.7 |
| CCY-3-O2 | 11.0 | | |
| CCY-5-O2 | | | 1.0 |
| CLOY-3-O2 | | | 6.75 |
| CLY-3-O2 | | | 9.25 |
| CLY-4-O2 | | | 4.0 |
| CLY-5-O2 | | | 3.0 |
| COB(S)-2-O4 | | | 2.5 |
| CP-3-O2 | | | 2.0 |
| Σ | | | 100.0 |

To the mixture M182 are added 50 ppm of the stabiliser S-2-1-1.

Mixture Example M183

| | | | |
|---|---|---|---|
| B(S)-2O-O4 | 4.0 | cl.p. [°C]: | 118 |
| B(S)-2O-O5 | 4.0 | $n_e$ [589 nm, 20°C]: | 1.5843 |
| B(S)-2O-O6 | 3.0 | $n_o$ [589 nm, 20°C]: | 1.4835 |
| CAC-3-3 | 3.0 | Δn [589 nm, 20°C]: | 0.1008 |
| CC-3-V | 5.25 | $\varepsilon_\parallel$ [1 kHz, 20°C]: | 3.2 |
| CC-3-V1 | 9.5 | $\varepsilon_\perp$ [1 kHz, 20°C]: | 7.1 |
| CC-4-V1 | 8.0 | Δε [1 kHz, 20°C]: | -4.0 |
| CC-3-O3 | 2.5 | $\gamma_1$ [mPa·s, 20°C]: | 200 |
| CC-3-5 | 12.5 | $K_1$ [pN, 20°C]: | 28.3 |
| CCP-3-1 | 8.5 | $K_3$ [pN, 20°C]: | 26.7 |
| CCY-3-O2 | 11.0 | | |

(continued)

| | |
|---|---|
| CCY-5-O2 | 1.0 |
| CCZC-3-3 | 1.0 |
| CLOY-3-O2 | 7.0 |
| CLY-3-O2 | 9.5 |
| CLY-4-O2 | 0.75 |
| CLY-5-O2 | 5.0 |
| COB(S)-2-O4 | 2.5 |
| CP-3-O2 | 2.0 |
| Σ | 100.0 |

To the mixture M183 are added 100 ppm of the stabiliser S-1-1-1.

Mixture Example M184

| | | | |
|---|---|---|---|
| B(S)-2O-O4 | 4.0 | cl.p. [°C]: | 118 |
| B(S)-2O-O5 | 4.0 | $n_e$ [589 nm, 20°C]: | 1.5846 |
| B(S)-2O-O6 | 3.0 | $n_o$ [589 nm, 20°C]: | 1.4836 |
| CAC-3-3 | 3.0 | Δn [589 nm, 20°C]: | 0.1010 |
| CC-3-V | 5.25 | $\varepsilon_\parallel$ [1 kHz, 20°C]: | 3.2 |
| CC-3-V1 | 9.5 | $\varepsilon_\perp$ [1 kHz, 20°C]: | 7.1 |
| CC-4-V1 | 8.0 | Δε [1 kHz, 20°C]: | -3.9 |
| CC-3-O3 | 2.5 | $\gamma_1$ [mPa·s, 20°C]: | 196 |
| CC-3-5 | 12.5 | $K_1$ [pN, 20°C]: | 29.0 |
| CCP-3-1 | 8.5 | $K_3$ [pN, 20°C]: | 28.6 |
| CCY-3-O2 | 11.0 | | |
| CCY-5-O2 | 1.0 | | |
| CCC-3-V | 1.0 | | |
| CLOY-3-O2 | | | 7.0 |
| CLY-3-O2 | | | 9.5 |
| CLY-4-O2 | | | 0.75 |
| CLY-5-O2 | | | 5.0 |
| COB(S)-2-O4 | | | 2.5 |
| CP-3-O2 | | | 2.0 |
| Σ | | | 100.0 |

To the mixture M184 are added 150 ppm of the stabiliser ST-2a-1, 50 ppm of the stabiliser ST-2a-2 and 300 ppm of the stabiliser ST-3a-1.

Mixture Example M185

| | | | |
|---|---|---|---|
| B(S)-2O-O4 | 4.0 | cl.p. [°C]: | 118.5 |
| B(S)-2O-O5 | 4.0 | $n_e$ [589 nm, 20°C]: | 1.5851 |
| B(S)-2O-O6 | 3.0 | $n_o$ [589 nm, 20°C]: | 1.4842 |
| CAC-3-3 | 3.0 | Δn [589 nm, 20°C]: | 0.1009 |
| CC-3-V | 4.25 | $\varepsilon_\parallel$ [1 kHz, 20°C]: | 3.2 |
| CC-3-V1 | 10.0 | $\varepsilon_\perp$ [1 kHz, 20°C]: | 7.0 |
| CC-4-V1 | 8.0 | Δε [1 kHz, 20°C]: | -3.9 |

(continued)

| | | | |
|---|---|---|---|
| CC-3-O3 | 2.5 | $\gamma_1$ [mPa·s, 20°C]: | 198 |
| CC-3-5 | 12.5 | $K_1$ [pN, 20°C]: | 29.2 |
| CCP-3-1 | 9.0 | $K_3$ [pN, 20°C]: | 28.6 |
| CCP-V2-1 | 0.75 | | |
| CCY-3-O2 | 11.0 | | |
| CLOY-3-O2 | 7.0 | | |
| CLY-3-O2 | 9.5 | | |
| CLY-4-O2 | 3.5 | | |
| CLY-5-O2 | 5.0 | | |
| COB(S)-2-O4 | 1.0 | | |
| CP-3-02 | 2.0 | | |
| Σ | 100.0 | | |

To the mixture M185 are added 100 ppm of the stabiliser ST-8-1.

Mixture Example M186

| | | | |
|---|---|---|---|
| B(S)-2O-O4 | 4.0 | cl.p. [°C]: | 119 |
| B(S)-2O-O5 | 4.0 | $n_e$ [589 nm, 20°C]: | 1.5851 |
| B(S)-2O-O6 | 3.0 | $n_o$ [589 nm, 20°C]: | 1.4841 |
| CAC-3-3 | 3.0 | Δn [589 nm, 20°C]: | 0.1010 |
| CC-3-V | 4.0 | | |
| CC-3-V1 | 10.0 | | |
| CC-4-V1 | 8.0 | | |
| CCD-3-3 | 2.25 | | |
| CC-3-O3 | 2.5 | | |
| CC-3-5 | 12.5 | | |
| CCP-3-1 | 9.0 | | |
| CCY-3-O2 | 11.0 | | |
| CLOY-3-O2 | 7.0 | | |
| CLY-3-O2 | 10.0 | | |
| CLY-4-O2 | 5.0 | | |
| COB(S)-2-O4 | 2.75 | | |
| CP-3-O2 | 2.0 | | |
| Σ | 100.0 | | |

To the mixture M186 are added 100 ppm of the stabiliser ST-2a-2.

Mixture Example M187

| | | | |
|---|---|---|---|
| CC-3-V | 5.2 | cl.p. [°C]: | 115.5 |
| CC-3-V1 | 11.0 | $n_e$ [589 nm, 20°C]: | 1.5668 |
| CC-4-V1 | 9.0 | $n_o$ [589 nm, 20°C]: | 1.4809 |
| CCC-3-V | 2.0 | Δn [589 nm, 20°C]: | 0.0859 |
| CAC-3-3 | 3.5 | $\varepsilon_{\parallel}$ [1 kHz, 20°C]: | 3.0 |
| CC-3-5 | 12.5 | $\varepsilon_{\perp}$ [1 kHz, 20°C]: | 6.2 |
| CCP-3-1 | 9.0 | Δε [1 kHz, 20°C]: | -3.1 |

(continued)

| | | | |
|---|---|---|---|
| CCY-3-O2 | 11.0 | $\gamma_1$ [mPa·s, 20°C]: | 227 |
| CCY-5-O2 | 0.8 | $K_1$ [pN, 20°C]: | 26.7 |
| CLOY-3-O2 | 24.7 | $K_3$ [pN, 20°C]: | 28.3 |
| CLY-3-O2 | 9.3 | | |
| CP-3-O2 | 2.0 | | |
| Σ | 100.0 | | |

To the mixture M187 are added 50 ppm of the stabiliser S-2-1-1.

Mixture Example M188

| | | | |
|---|---|---|---|
| B(S)-2O-O4 | 4.0 | cl.p. [°C]: | 119 |
| B(S)-2O-O5 | 5.0 | $n_e$ [589 nm, 20°C]: | 1.5850 |
| B(S)-2O-O6 | 2.9 | $n_o$ [589 nm, 20°C]: | 1.4838 |
| CC-3-V | 1.3 | $\Delta n$ [589 nm, 20°C]: | 0.1012 |
| CC-3-V1 | 11.0 | $\varepsilon_{\parallel}$ [1 kHz, 20°C]: | 3.2 |
| CC-4-V1 | 9.0 | $\varepsilon_{\perp}$ [1 kHz, 20°C]: | 7.1 |
| CCC-V-V | 2.0 | $\Delta\varepsilon$ [1 kHz, 20°C]: | -4.0 |
| CAC-3-3 | 2.0 | | |
| CC-3-O3 | 3.0 | | |
| CC-3-5 | 12.5 | | |
| CCP-3-1 | 9.5 | | |
| CCY-3-O2 | 11.0 | | |
| CLOY-3-O2 | 7.8 | | |
| CLY-3-O2 | 9.5 | | |
| CLY-4-O2 | 2.7 | | |
| CLY-5-O2 | 4.8 | | |
| CP-3-O2 | 2.0 | | |
| Σ | 100.0 | | |

To the mixture M188 are added 100 ppm of the stabiliser ST-8-1.

Mixture Example M189

| | | | |
|---|---|---|---|
| B(S)-2O-O4 | 4.0 | cl.p. [°C]: | 119.5 |
| B(S)-2O-O5 | 5.0 | $n_e$ [589 nm, 20°C]: | 1.5854 |
| B(S)-2O-O6 | 2.8 | $n_o$ [589 nm, 20°C]: | 1.4841 |
| CC-3-V | 1.6 | $\Delta n$ [589 nm, 20°C]: | 0.1013 |
| CC-3-V1 | 11.0 | $\varepsilon_{\parallel}$ [1 kHz, 20°C]: | 3.2 |
| CC-4-V1 | 9.0 | $\varepsilon_{\perp}$ [1 kHz, 20°C]: | 7.0 |
| CAC-3-3 | 2.0 | $\Delta\varepsilon$ [1 kHz, 20°C]: | -3.9 |
| CC-3-O3 | 3.0 | | |
| CC-3-5 | 12.5 | | |
| CCP-3-1 | 9.5 | | |
| CCY-3-O2 | 11.0 | | |
| CLOY-3-O2 | 7.0 | | |
| CLY-3-O2 | 9.5 | | |

(continued)

| | |
|---|---|
| CLY-4-O2 | 3.1 |
| CLY-5-O2 | 5.0 |
| CVCC-V-V | 2.0 |
| CP-3-O2 | 2.0 |
| Σ | 100.0 |

To the mixture M189 are added 100 ppm of the stabiliser ST-2a-2.

Mixture Example M190

| | | | |
|---|---|---|---|
| B(S)-2O-O4 | 4.0 | cl.p. [°C]: | 118.5 |
| B(S)-2O-O5 | 5.0 | $n_e$ [589 nm, 20°C]: | 1.5858 |
| B(S)-2O-O6 | 4.0 | $n_o$ [589 nm, 20°C]: | 1.4845 |
| CC-3-V | 1.3 | Δn [589 nm, 20°C]: | 0.1013 |
| CC-3-V1 | 12.0 | | |
| CC-4-V1 | 8.0 | | |
| CAC-3-3 | 2.3 | | |
| CCEC-3-1 | 3.0 | | |
| CC-3-O3 | 3.0 | | |
| CC-3-5 | 12.5 | | |
| CCP-3-1 | 9.5 | | |
| CCY-3-O2 | 11.0 | | |
| CLOY-3-O2 | 6.8 | | |
| CLY-3-O2 | 9.5 | | |
| CLY-4-O2 | 5.0 | | |
| CLY-5-O2 | 1.1 | | |
| CP-3-O2 | 2.0 | | |
| Σ | 100.0 | | |

To the mixture M190 are added 100 ppm of the stabiliser S-1-1-1.

Mixture Example M191

| | | | |
|---|---|---|---|
| CC-3-V | 28.0 | cl.p. [°C]: | 80 |
| CCY-3-O1 | 10.0 | $\varepsilon_{\parallel}$ [1 kHz, 20°C]: | 3.9 |
| CCY-3-O2 | 2.0 | $\varepsilon_{\perp}$ [1 kHz, 20°C]: | 8.2 |
| CCY-4-O2 | 2.0 | Δε [1 kHz, 20°C]: | -4.3 |
| CLY-3-O2 | 7.0 | | |
| CLY-3-O3 | 3.0 | | |
| CPY-2-O2 | 6.0 | | |
| CPY-3-O2 | 9.0 | | |
| CY-3-O2 | 13.0 | | |
| PY-3-O2 | 8.0 | | |
| PY-1-O4 | 7.0 | | |
| CAC-3-3 | 5.0 | | |
| Σ | 100.0 | | |

To the mixture M191 are added 150 ppm of the stabiliser ST-2a-1, 50 ppm of the stabiliser ST-2a-2 and 300 ppm of the stabiliser ST-3a-1.

Mixture Example M192

| | | | |
|---|---|---|---|
| B(S)-2O-O4 | 4.0 | cl.p. [°C]: | 120 |
| B(S)-2O-O5 | 4.0 | $n_e$ [589 nm, 20°C]: | 1.5845 |
| B(S)-2O-O6 | 3.0 | $n_o$ [589 nm, 20°C]: | 1.4835 |
| CC-3-V | 6.0 | Δn [589 nm, 20°C]: | 0.1010 |
| CC-3-V1 | 9.5 | $\varepsilon_{\parallel}$ [1 kHz, 20°C]: | 3.3 |
| CC-4-V1 | 8.0 | $\varepsilon_{\perp}$ [1 kHz, 20°C]: | 7.3 |
| CCD-3-V | 3.0 | Δε [1 kHz, 20°C]: | -4.0 |
| CC-3-O3 | 2.5 | $\gamma_1$ [mPa·s, 20°C]: | 202 |
| CC-3-5 | 12.5 | $K_1$ [pN, 20°C]: | 29.1 |
| CCP-3-1 | 8.75 | $K_3$ [pN, 20°C]: | 29.6 |
| CCY-3-O2 | 11.0 | | |
| CCY-5-O2 | 0.75 | | |
| CLOY-3-O2 | 7.5 | | |
| CLY-3-O2 | 9.5 | | |
| CLY-4-O2 | 5.0 | | |
| CLY-5-O2 | 4.0 | | |
| COB(S)-2-O4 | 1.0 | | |
| Σ | 100.0 | | |

To the mixture M192 are added 50 ppm of the stabiliser S-2-1-1.

Mixture Example M193

| | | | |
|---|---|---|---|
| B(S)-2O-O4 | 4.0 | cl.p. [°C]: | 120.5 |
| B(S)-2O-O5 | 4.0 | $n_e$ [589 nm, 20°C]: | 1.5835 |
| B(S)-2O-O6 | 3.0 | $n_o$ [589 nm, 20°C]: | 1.4830 |
| CC-3-V | 6.75 | Δn [589 nm, 20°C]: | 0.1005 |
| CC-3-V1 | 9.5 | $\varepsilon_{\parallel}$ [1 kHz, 20°C]: | 3.3 |
| CC-4-V1 | 8.0 | $\varepsilon_{\perp}$ [1 kHz, 20°C]: | 7.4 |
| CCD-3-3 | 3.0 | Δε [1 kHz, 20°C]: | -4.1 |
| CCD-3-V | 3.0 | | |
| CC-3-O3 | 2.5 | | |
| CC-3-5 | 12.5 | | |
| CCP-3-1 | 5.25 | | |
| CCY-3-O2 | 11.0 | | |
| CLOY-3-O2 | 6.5 | | |
| CLY-3-O2 | 9.5 | | |
| CLY-4-O2 | 5.0 | | |
| CLY-5-O2 | 4.0 | | |
| COB(S)-2-O4 | 2.5 | | |
| Σ | | | 100.0 |

To the mixture M193 are added 100 ppm of the stabiliser ST-8-1.

Mixture Example M194

| | | | |
|---|---|---|---|
| B(S)-2O-O4 | 4.0 | cl.p. [°C]: | 119 |
| B(S)-2O-O5 | 4.0 | $n_e$ [589 nm, 20°C]: | 1.5848 |
| B(S)-2O-O6 | 3.0 | $n_o$ [589 nm, 20°C]: | 1.4838 |
| CC-3-V | 6.25 | $\Delta n$ [589 nm, 20°C]: | 0.1010 |
| CC-3-V1 | 9.5 | $\varepsilon_{\parallel}$ [1 kHz, 20°C]: | 3.3 |
| CC-4-V1 | 8.0 | $\varepsilon_{\perp}$ [1 kHz, 20°C]: | 7.3 |
| CCD-3-V | 3.0 | $\Delta\varepsilon$ [1 kHz, 20°C]: | -4.0 |
| CC-3-O3 | 2.5 | $\gamma_1$ [mPa·s, 20°C]: | 200 |
| CC-3-5 | 12.5 | $K_1$ [pN, 20°C]: | 29.7 |
| CCP-3-1 | 8.75 | $K_3$ [pN, 20°C]: | 29.6 |
| CCY-3-O2 | 11.0 | | |
| CLOY-3-O2 | 7.5 | | |
| CLY-3-O2 | 9.5 | | |
| CLY-4-O2 | 5.0 | | |
| CLY-5-O2 | 4.0 | | |
| COB(S)-2-O4 | 1.5 | | |
| Σ | 100.0 | | |

To the mixture M194 are added 100 ppm of the stabiliser ST-2a-2.

Mixture Example M195

| | | | |
|---|---|---|---|
| B(S)-2O-O4 | 4.0 | cl.p. [°C]: | 120 |
| B(S)-2O-O5 | 4.0 | $n_e$ [589 nm, 20°C]: | 1.5846 |
| B(S)-2O-O6 | 3.0 | $n_o$ [589 nm, 20°C]: | 1.4836 |
| CC-3-V | 6.25 | $\Delta n$ [589 nm, 20°C]: | 0.1010 |
| CC-3-V1 | 9.5 | $\varepsilon_{\parallel}$ [1 kHz, 20°C]: | 3.3 |
| CC-4-V1 | 8.0 | $\varepsilon_{\perp}$ [1 kHz, 20°C]: | 7.2 |
| CCD-3-V | 3.0 | $\Delta\varepsilon$ [1 kHz, 20°C]: | -3.9 |
| CC-3-O3 | 2.5 | $\gamma_1$ [mPa·s, 20°C]: | 200 |
| CC-3-5 | 12.5 | $K_1$ [pN, 20°C]: | 29.4 |
| CCP-3-1 | 9.0 | $K_3$ [pN, 20°C]: | 30.0 |
| CCY-3-O2 | 11.0 | | |
| CLOY-3-O2 | 6.75 | | |
| CLY-3-O2 | 9.5 | | |
| CLY-4-O2 | 5.0 | | |
| CLY-5-O2 | 5.0 | | |
| COB(S)-2-O4 | 1.0 | | |
| Σ | 100.0 | | |

To 99.96 wt% of the mixture M195 are added 0.04 wt% of the stabiliser ST-3b-1.

Mixture Example M196

| | | | |
|---|---|---|---|
| B(S)-2O-O4 | 4.0 | cl.p. [°C]: | 120.5 |
| B(S)-2O-O5 | 4.0 | $n_e$ [589 nm, 20°C]: | 1.5844 |
| B(S)-2O-O6 | 3.0 | $n_o$ [589 nm, 20°C]: | 1.4835 |
| CC-3-V | 6.4 | $\Delta n$ [589 nm, 20°C]: | 0.1009 |
| CC-3-V1 | 9.5 | $\varepsilon_{\parallel}$ [1 kHz, 20°C]: | 3.3 |
| CC-4-V1 | 8.0 | $\varepsilon_{\perp}$ [1 kHz, 20°C]: | 7.3 |
| CCD-3-V | 5.0 | $\Delta\varepsilon$ [1 kHz, 20°C]: | -4.0 |
| CC-3-O3 | 2.5 | $\gamma_1$ [mPa·s, 20°C]: | 202 |
| CC-3-5 | 12.5 | $K_1$ [pN, 20°C]: | 30.7 |
| CCP-3-1 | 7.0 | $K_3$ [pN, 20°C]: | 39.6 |
| CCY-3-O2 | 11.0 | | |
| CLOY-3-O2 | 6.6 | | |
| CLY-3-O2 | 9.5 | | |
| CLY-4-O2 | 5.0 | | |
| CLY-5-O2 | 4.0 | | |
| COB(S)-2-O4 | 2.0 | | |
| Σ | 100.0 | | |

To the mixture M196 are added 100 ppm of the stabiliser ST-8-1.

Mixture Example M197

| | | | |
|---|---|---|---|
| B(S)-2O-O4 | 4.0 | cl.p. [°C]: | 119.5 |
| B(S)-2O-O5 | 4.0 | $n_e$ [589 nm, 20°C]: | 1.5854 |
| B(S)-2O-O6 | 3.0 | $n_o$ [589 nm, 20°C]: | 1.4843 |
| CC-3-V | 6.25 | $\Delta n$ [589 nm, 20°C]: | 0.1011 |
| CC-3-V1 | 9.5 | $\varepsilon_{\parallel}$ [1 kHz, 20°C]: | 3.3 |
| CC-4-V1 | 8.0 | $\varepsilon_{\perp}$ [1 kHz, 20°C]: | 7.3 |
| CCD-3-V | 3.0 | $\Delta\varepsilon$ [1 kHz, 20°C]: | -4.0 |
| CC-3-O3 | 2.5 | $\gamma_1$ [mPa·s, 20°C]: | 199 |
| CC-3-5 | 12.5 | $K_1$ [pN, 20°C]: | 29.4 |
| CCP-3-1 | 8.75 | $K_3$ [pN, 20°C]: | 29.6 |
| CCY-3-O2 | 11.0 | | |
| CLOY-3-O2 | 7.5 | | |
| CLY-3-O2 | 9.5 | | |
| CLY-4-O2 | 5.0 | | |
| CLY-5-O2 | 4.0 | | |
| COB(S)-2-O4 | 1.5 | | |
| Σ | 100.0 | | |

To the mixture M197 are added 50 ppm of the stabiliser S-2-1-1.

Mixture Example M198

| | | | |
|---|---|---|---|
| B(S)-2O-O4 | 4.0 | cl.p. [°C]: | 119 |
| B(S)-2O-O5 | 4.0 | $n_e$ [589 nm, 20°C]: | 1.5847 |
| B(S)-2O-O6 | 3.0 | $n_o$ [589 nm, 20°C]: | 1.4834 |

(continued)

| | | | |
|---|---|---|---|
| CC-3-V | 6.5 | Δn [589 nm, 20°C]: | 0.1013 |
| CC-3-V1 | 9.5 | $\varepsilon_{\parallel}$ [1 kHz, 20°C]: | 3.3 |
| CC-4-V1 | 8.0 | $\varepsilon_{\perp}$ [1 kHz, 20°C]: | 7.4 |
| CCD-3-V | 4.0 | Δε [1 kHz, 20°C]: | -4.1 |
| CC-3-O3 | 2.5 | $\gamma_1$ [mPa·s, 20°C]: | 198 |
| CC-3-5 | 12.5 | $K_1$ [pN, 20°C]: | 29.4 |
| CCP-3-1 | 7.5 | $K_3$ [pN, 20°C]: | 32.7 |
| CCY-3-O2 | 11.0 | | |
| CLOY-3-O2 | 7.5 | | |
| CLY-3-O2 | 9.5 | | |
| CLY-4-O2 | 5.0 | | |
| CLY-5-O2 | 3.0 | | |
| COB(S)-2-O4 | 2.5 | | |
| Σ | 100.0 | | |

To the mixture M198 are added 100 ppm of the stabiliser S-1-1-1.

Mixture Example M199

| | | | |
|---|---|---|---|
| B(S)-2O-O4 | 4.0 | cl.p. [°C]: | 118.5 |
| B(S)-2O-O5 | 4.0 | $n_e$ [589 nm, 20°C]: | 1.5837 |
| B(S)-2O-O6 | 3.0 | $n_o$ [589 nm, 20°C]: | 1.4829 |
| CC-3-V | 6.25 | Δn [589 nm, 20°C]: | 0.1008 |
| CC-3-V1 | 9.5 | $\varepsilon_{\parallel}$ [1 kHz, 20°C]: | 3.4 |
| CC-4-V1 | 8.0 | $\varepsilon_{\perp}$ [1 kHz, 20°C]: | 7.3 |
| CCD-3-3 | 3.0 | Δε [1 kHz, 20°C]: | -4.0 |
| CCD-3-V | 3.0 | $\gamma_1$ [mPa·s, 20°C]: | 199 |
| CC-3-O3 | 1.75 | $K_1$ [pN, 20°C]: | 28.9 |
| CC-3-5 | 12.5 | $K_3$ [pN, 20°C]: | 28.5 |
| CCP-3-1 | 6.0 | | |
| CCY-3-O2 | 11.0 | | |
| CLOY-3-O2 | 7.0 | | |
| CLY-3-O2 | 9.5 | | |
| CLY-4-O2 | 4.0 | | |
| CLY-5-O2 | 3.0 | | |
| COB(S)-2-O4 | 2.5 | | |
| CP-3-O2 | 2.0 | | |
| Σ | 100.0 | | |

To the mixture M199 are added 100 ppm of the stabiliser ST-2a-2.

Mixture Example M200

| | | | |
|---|---|---|---|
| B(S)-2O-O4 | 4.0 | cl.p. [°C]: | 118.5 |
| B(S)-2O-O5 | 4.0 | $n_e$ [589 nm, 20°C]: | 1.5853 |
| B(S)-2O-O6 | 3.0 | $n_o$ [589 nm, 20°C]: | 1.4840 |
| CC-3-V | 4.5 | Δn [589 nm, 20°C]: | 0.1013 |

(continued)

| | | | |
|---|---|---|---|
| CC-3-V1 | 9.5 | $\varepsilon_{\parallel}$ [1 kHz, 20°C]: | 3.3 |
| CC-4-V1 | 8.0 | $\varepsilon_{\perp}$ [1 kHz, 20°C]: | 7.3 |
| CCD-3-V | 5.0 | $\Delta\varepsilon$ [1 kHz, 20°C]: | -3.9 |
| CC-3-O3 | 2.5 | $\gamma_1$ [mPa·s, 20°C]: | 199 |
| CC-3-5 | 12.5 | $K_1$ [pN, 20°C]: | 29.1 |
| CCP-3-1 | 9.0 | $K_3$ [pN, 20°C]: | 32.2 |
| CCY-3-O2 | 11.0 | | |
| CLOY-3-O2 | | | 8.25 |
| CLY-3-O2 | | | 9.5 |
| CLY-4-O2 | | | 4.75 |
| COB(S)-2-O4 | | | 2.5 |
| CP-3-O2 | | | 2.0 |
| Σ | | | 100.0 |

To the mixture M200 are added 150 ppm of the stabiliser ST-2a-1, 50 ppm of the stabiliser ST-2a-2 and 300 ppm of the stabiliser ST-3a-1.

Mixture Example M201

| | | | |
|---|---|---|---|
| B(S)-2O-O4 | 4.0 | cl.p. [°C]: | 120 |
| B(S)-2O-O5 | 4.0 | $n_e$ [589 nm, 20°C]: | 1.5849 |
| B(S)-2O-O6 | 3.0 | $n_o$ [589 nm, 20°C]: | 1.4836 |
| CC-3-V | 5.5 | $\Delta n$ [589 nm, 20°C]: | 0.1013 |
| CC-3-V1 | 10.0 | | |
| CC-4-V1 | 8.0 | | |
| CCD-3-3 | 2.0 | | |
| CCD-3-V | 3.0 | | |
| CC-3-O3 | 2.5 | | |
| CC-3-5 | 12.5 | | |
| CCP-3-1 | 9.0 | | |
| CCY-3-O2 | 11.0 | | |
| CLOY-3-O2 | 7.5 | | |
| CLY-3-O2 | 10.0 | | |
| CLY-4-O2 | 5.0 | | |
| COB(S)-2-O4 | 3.0 | | |
| Σ | 100.0 | | |

To the mixture M201 are added 100 ppm of the stabiliser ST-8-1.

Mixture Example M202

| | | | |
|---|---|---|---|
| B(S)-2O-O4 | 4.0 | cl.p. [°C]: | 121 |
| B(S)-2O-O5 | 4.0 | $n_e$ [589 nm, 20°C]: | 1.5843 |
| B(S)-2O-O6 | 3.0 | $n_o$ [589 nm, 20°C]: | 1.4834 |
| CC-3-V | 4.25 | $\Delta n$ [589 nm, 20°C]: | 0.1009 |
| CC-3-V1 | 9.5 | | |
| CC-4-V1 | 8.0 | | |

(continued)

| | | |
|---|---|---|
| CCD-3-V | 3.0 | |
| CCC-3-V | 3.0 | |
| CC-3-O3 | 2.5 | |
| CC-3-5 | 12.5 | |
| CCP-3-1 | 6.0 | |
| CCY-3-O2 | 11.0 | |
| CLOY-3-O2 | 6.75 | |
| CLY-3-O2 | 9.5 | |
| CLY-4-O2 | 5.0 | |
| CLY-5-O2 | 5.0 | |
| COB(S)-2-O4 | 1.0 | |
| CP-3-O2 | 2.0 | |
| Σ | | 100.0 |

To the mixture M202 are added 50 ppm of the stabiliser S-2-1-1.

Mixture Example M203

| | | | |
|---|---|---|---|
| CC-3-V | 5.2 | cl.p. [°C]: | 115.5 |
| CC-3-V1 | 11.0 | $n_e$ [589 nm, 20°C]: | 1.5675 |
| CC-4-V1 | 9.0 | $n_o$ [589 nm, 20°C]: | 1.4810 |
| CCC-3-V | 2.0 | $\Delta n$ [589 nm, 20°C]: | 0.0865 |
| CCD-3-V | 3.5 | $\varepsilon_{\parallel}$ [1 kHz, 20°C]: | 3.1 |
| CC-3-5 | 12.5 | $\varepsilon_{\perp}$ [1 kHz, 20°C]: | 6.2 |
| CCP-3-1 | 9.0 | $\Delta\varepsilon$ [1 kHz, 20°C]: | -3.1 |
| CCY-3-O2 | 11.0 | $\gamma_1$ [mPa·s, 20°C]: | 232 |
| CCY-5-O2 | 0.8 | $K_1$ [pN, 20°C]: | 25.9 |
| CLOY-3-O2 | 24.7 | $K_3$ [pN, 20°C]: | 28.5 |
| CLY-3-O2 | 9.3 | | |
| CP-3-O2 | 2.0 | | |
| Σ | 100.0 | | |

To 99.96 wt% of the mixture M203 are added 0.04 wt% of the stabiliser ST-3b-1.

Mixture Example M204

| | | | |
|---|---|---|---|
| B(S)-2O-O4 | 4.0 | cl.p. [°C]: | 115.5 |
| B(S)-2O-O5 | 4.5 | $n_e$ [589 nm, 20°C]: | 1.5862 |
| B(S)-2O-O6 | 3.5 | $n_o$ [589 nm, 20°C]: | 1.4832 |
| CC-3-V | 8.7 | $\Delta n$ [589 nm, 20°C]: | 0.1030 |
| CC-3-V1 | 12.0 | $\varepsilon_{\parallel}$ [1 kHz, 20°C]: | 3.4 |
| CCC-3-V | 2.6 | $\varepsilon_{\perp}$ [1 kHz, 20°C]: | 8.2 |
| CCD-3-V | 2.0 | $\Delta\varepsilon$ [1 kHz, 20°C]: | -4.8 |
| CC-3-O3 | 4.0 | $\gamma_1$ [mPa·s, 20°C]: | 215 |
| CC-3-5 | 12.5 | $K_1$ [pN, 20°C]: | 27.8 |
| CCY-3-O2 | 11.0 | $K_3$ [pN, 20°C]: | 25.7 |
| CCY-5-O2 | 2.0 | | |

(continued)

| | |
|---|---|
| CLOY-3-O2 | 8.0 |
| CLY-3-O2 | 10.5 |
| CLY-4-O2 | 6.0 |
| CLY-5-O2 | 4.7 |
| COB(S)-2-O4 | 2.0 |
| CP-3-O2 | 2.0 |
| Σ | 100.0 |

To 99.965 wt% of the mixture M204 are added 0.035 wt% of the stabiliser ST-3a-1.

Mixture Example M205

| | | | |
|---|---|---|---|
| B(S)-2O-O4 | 4.0 | cl.p. [°C]: | 119 |
| B(S)-2O-O5 | 5.0 | $n_e$ [589 nm, 20°C]: | 1.5855 |
| B(S)-2O-O6 | 2.9 | $n_o$ [589 nm, 20°C]: | 1.4840 |
| CC-3-V | 1.3 | Δn [589 nm, 20°C]: | 0.1015 |
| CC-3-V1 | 11.0 | $\varepsilon_{\parallel}$ [1 kHz, 20°C]: | 3.2 |
| CC-4-V1 | 9.0 | $\varepsilon_{\perp}$ [1 kHz, 20°C]: | 7.1 |
| CCC-V-V | 2.0 | Δε [1 kHz, 20°C]: | -3.9 |
| CCD-3-V | 2.0 | $K_1$ [pN, 20°C]: | 30.9 |
| CC-3-O3 | 3.0 | $K_3$ [pN, 20°C]: | 45.2 |
| CC-3-5 | 12.5 | | |
| CCP-3-1 | 9.5 | | |
| CCY-3-O2 | 11.0 | | |
| CLOY-3-O2 | 7.8 | | |
| CLY-3-O2 | 9.5 | | |
| CLY-4-O2 | 2.7 | | |
| CLY-5-O2 | 4.8 | | |
| CP-3-O2 | 2.0 | | |
| Σ | 100.0 | | |

To the mixture M205 are added 100 ppm of the stabiliser ST-2a-2.

Mixture Example M206

| | | | |
|---|---|---|---|
| B(S)-2O-O4 | 4.0 | cl.p. [°C]: | 119.5 |
| B(S)-2O-O5 | 5.0 | $n_e$ [589 nm, 20°C]: | 1.5854 |
| B(S)-2O-O6 | 2.8 | $n_o$ [589 nm, 20°C]: | 1.4839 |
| CC-3-V | 1.6 | Δn [589 nm, 20°C]: | 0.1015 |
| CC-3-V1 | 11.0 | $\varepsilon_{\parallel}$ [1 kHz, 20°C]: | 3.2 |
| CC-4-V1 | 9.0 | $\varepsilon_{\perp}$ [1 kHz, 20°C]: | 7.0 |
| CCD-3-V | 2.0 | Δε [1 kHz, 20°C]: | -3.8 |
| CC-3-O3 | 3.0 | $K_1$ [pN, 20°C]: | 30.2 |
| CC-3-5 | 12.5 | $K_3$ [pN, 20°C]: | 37.5 |
| CCP-3-1 | 9.5 | | |
| CCY-3-O2 | 11.0 | | |
| CLOY-3-O2 | 7.0 | | |

(continued)

| | |
|---|---|
| CLY-3-O2 | 9.5 |
| CLY-4-O2 | 3.1 |
| CLY-5-O2 | 5.0 |
| CVCC-V-V | 2.0 |
| CP-3-O2 | 2.0 |
| Σ | 100.0 |

To the mixture M206 are added 100 ppm of the stabiliser ST-8-1.

Mixture Example M207

| | | | |
|---|---|---|---|
| B(S)-2O-O4 | 4.0 | cl.p. [°C]: | 118.5 |
| B(S)-2O-O5 | 5.0 | $n_e$ [589 nm, 20°C]: | 1.5860 |
| B(S)-2O-O6 | 4.0 | $n_o$ [589 nm, 20°C]: | 1.4843 |
| CC-3-V | 1.3 | Δn [589 nm, 20°C]: | 0.1017 |
| CC-3-V1 | 12.0 | | |
| CC-4-V1 | 8.0 | | |
| CCD-3-V | 2.3 | | |
| CCEC-3-1 | 3.0 | | |
| CC-3-O3 | 3.0 | | |
| CC-3-5 | | | 12.5 |
| CCP-3-1 | | | 9.5 |
| CCY-3-O2 | | | 11.0 |
| CLOY-3-O2 | | | 6.8 |
| CLY-3-O2 | | | 9.5 |
| CLY-4-O2 | | | 5.0 |
| CLY-5-O2 | | | 1.1 |
| CP-3-O2 | | | 2.0 |
| Σ | | | 100.0 |

To the mixture M207 are added 100 ppm of the stabiliser S-1-1-1.

Mixture Example M208

| | | | |
|---|---|---|---|
| B(S)-20-04 | 4.0 | cl.p. [°C]: | 118.5 |
| B(S)-2O-O5 | 4.0 | $n_e$ [589 nm, 20°C]: | 1.5849 |
| B(S)-2O-O6 | 3.0 | $n_o$ [589 nm, 20°C]: | 1.4837 |
| CC-3-V | 6.5 | Δn [589 nm, 20°C]: | 0.1012 |
| CC-3-V1 | 9.5 | $\varepsilon_{\parallel}$ [1 kHz, 20°C]: | 3.3 |
| CC-4-V1 | 8.0 | $\varepsilon_{\perp}$ [1 kHz, 20°C]: | 7.3 |
| CCD-3-V | 3.0 | Δε [1 kHz, 20°C]: | -4.1 |
| CC-3-O3 | 2.5 | $\gamma_1$ [mPa·s, 20°C]: | 198 |
| CC-3-5 | 12.5 | $K_1$ [pN, 20°C]: | 29.4 |
| CCP-3-1 | 8.25 | $K_3$ [pN, 20°C]: | 29.3 |
| CCY-3-O2 | 11.0 | | |
| CLOY-3-O2 | 7.5 | | |
| CLY-3-O2 | 9.5 | | |

(continued)

| | |
|---|---|
| CLY-4-O2 | 5.0 |
| CLY-5-O2 | 4.0 |
| COB(S)-2-O4 | 1.75 |
| Σ | 100.0 |

To the mixture M208 are added 50 ppm of the stabiliser S-2-1-1.

Mixture Example M209

| | | | |
|---|---|---|---|
| B(S)-2O-O4 | 4.0 | cl.p. [°C]: | 119 |
| B(S)-2O-O5 | 4.0 | $n_e$ [589 nm, 20°C]: | 1.5856 |
| B(S)-2O-O6 | 3.0 | $n_o$ [589 nm, 20°C]: | 1.4844 |
| CC-3-V | 6.0 | Δn [589 nm, 20°C]: | 0.1012 |
| CC-3-V1 | 9.5 | $\varepsilon_{\parallel}$ [1 kHz, 20°C]: | 3.3 |
| CC-4-V1 | 8.0 | $\varepsilon_{\perp}$ [1 kHz, 20°C]: | 7.3 |
| CCD-3-V | 3.0 | Δε [1 kHz, 20°C]: | -4.0 |
| CC-3-O3 | 2.5 | $\gamma_1$ [mPa·s, 20°C]: | 201 |
| CC-3-5 | 12.5 | $K_1$ [pN, 20°C]: | 29.4 |
| CCP-3-1 | 9.0 | $K_3$ [pN, 20°C]: | 30.6 |
| CCY-3-O2 | 11.0 | | |
| CLOY-3-O2 | 7.5 | | |
| CLY-3-O2 | 9.5 | | |
| CLY-4-O2 | 5.0 | | |
| CLY-5-O2 | 4.0 | | |
| COB(S)-2-O4 | | | 1.5 |
| Σ | | | 100.0 |

To 99.96 wt% of the mixture M209 are added 0.04 wt% of the stabiliser ST-3b-1.

Mixture Example M210

| | | | |
|---|---|---|---|
| B(S)-20-04 | 4.0 | cl.p. [°C]: | 120 |
| B(S)-2O-O5 | 4.0 | $n_e$ [589 nm, 20°C]: | 1.5854 |
| B(S)-2O-O6 | 3.0 | $n_o$ [589 nm, 20°C]: | 1.4839 |
| CC-3-V | 5.5 | Δn [589 nm, 20°C]: | 0.1015 |
| CC-3-V1 | 9.5 | $\varepsilon_{\parallel}$ [1 kHz, 20°C]: | 3.3 |
| CC-4-V1 | 8.0 | $\varepsilon_{\perp}$ [1 kHz, 20°C]: | 7.3 |
| CCD-3-V | 3.0 | Δε [1 kHz, 20°C]: | -4.0 |
| CC-3-3 | 3.0 | $\gamma_1$ [mPa·s, 20°C]: | 203 |
| CC-3-5 | 12.5 | $K_1$ [pN, 20°C]: | 29.8 |
| CCP-3-1 | 8.75 | $K_3$ [pN, 20°C]: | 30.7 |
| CCY-3-O2 | 11.0 | | |
| CLOY-3-O2 | 7.5 | | |
| CLY-3-O2 | 9.5 | | |
| CLY-4-O2 | 5.0 | | |
| CLY-5-O2 | 4.0 | | |

(continued)

| | |
|---|---|
| COB(S)-2-O4 | 1.75 |
| Σ | 100.0 |

To the mixture M210 are added 100 ppm of the stabiliser ST-8-1.

Mixture Example M211

| | | | |
|---|---|---|---|
| B(S)-20-04 | 4.0 | cl.p. [°C]: | 118 |
| B(S)-2O-O5 | 4.0 | $n_e$ [589 nm, 20°C]: | 1.5844 |
| B(S)-2O-O6 | 3.0 | $n_o$ [589 nm, 20°C]: | 1.4839 |
| CC-3-V | 5.0 | Δn [589 nm, 20°C]: | 0.1005 |
| CC-3-V1 | 9.5 | $\varepsilon_{\parallel}$ [1 kHz, 20°C]: | 3.3 |
| CC-4-V1 | 8.0 | $\varepsilon_{\perp}$ [1 kHz, 20°C]: | 7.2 |
| CCD-3-3 | 3.0 | Δε [1 kHz, 20°C]: | -3.9 |
| CCD-3-V | 2.0 | $\gamma_1$ [mPa·s, 20°C]: | 196 |
| CC-3-O3 | 2.5 | $K_1$ [pN, 20°C]: | 29.6 |
| CC-3-5 | 12.5 | $K_3$ [pN, 20°C]: | 31.2 |
| CCP-3-1 | 8.5 | | |
| CCY-3-O2 | 11.0 | | |
| CLOY-3-O2 | 7.5 | | |
| CLY-3-O2 | 9.5 | | |
| CLY-4-O2 | 5.0 | | |
| CLY-5-O2 | 0.5 | | |
| COB(S)-2-O4 | 2.5 | | |
| CP-3-O2 | 2.0 | | |
| Σ | 100.0 | | |

To the mixture M211 are added 100 ppm of the stabiliser ST-2a-2.

Mixture Example M212

| | | | |
|---|---|---|---|
| B(S)-20-04 | 4.0 | cl.p. [°C]: | 120.5 |
| B(S)-2O-O5 | 4.0 | $n_e$ [589 nm, 20°C]: | 1.5843 |
| B(S)-2O-O6 | 2.5 | $n_o$ [589 nm, 20°C]: | 1.4838 |
| CC-3-V | 6.5 | Δn [589 nm, 20°C]: | 0.1005 |
| CC-3-V1 | 9.5 | $\varepsilon_{\parallel}$ [1 kHz, 20°C]: | 3.2 |
| CC-4-V1 | 8.0 | $\varepsilon_{\perp}$ [1 kHz, 20°C]: | 7.1 |
| CCD-3-V1 | 3.5 | Δε [1 kHz, 20°C]: | -3.9 |
| CC-3-O3 | 2.5 | $\gamma_1$ [mPa·s, 20°C]: | 204 |
| CC-3-5 | 12.5 | $K_1$ [pN, 20°C]: | 29.2 |
| CCP-3-1 | 9.0 | $K_3$ [pN, 20°C]: | 28.0 |
| CCY-3-O2 | 11.0 | | |
| CLOY-3-O2 | 7.25 | | |
| CLY-3-O2 | 9.5 | | |
| CLY-4-O2 | 4.75 | | |
| CLY-5-O2 | 4.0 | | |

(continued)

| | |
|---|---|
| COB(S)-2-O4 | 1.5 |
| Σ | 100.0 |

To the mixture M212 are added 100 ppm of the stabiliser S-1-1-1.

Mixture Example M213

| | | | |
|---|---|---|---|
| B(S)-20-04 | 4.0 | cl.p. [°C]: | 121.5 |
| B(S)-2O-O5 | 4.0 | $n_e$ [589 nm, 20°C]: | 1.5852 |
| B(S)-2O-O6 | 3.0 | $n_o$ [589 nm, 20°C]: | 1.4837 |
| CC-3-V | 6.5 | Δn [589 nm, 20°C]: | 0.1015 |
| CC-3-V1 | 9.5 | $\varepsilon_{\parallel}$ [1 kHz, 20°C]: | 3.2 |
| CC-4-V1 | 8.0 | $\varepsilon_{\perp}$ [1 kHz, 20°C]: | 7.1 |
| CCD-3-V1 | 3.25 | Δε [1 kHz, 20°C]: | -3.9 |
| CC-3-O3 | 2.5 | $\gamma_1$ [mPa·s, 20°C]: | 204 |
| CC-3-5 | 12.5 | $K_1$ [pN, 20°C]: | 29.5 |
| CCP-3-1 | 9.0 | $K_3$ [pN, 20°C]: | 28.9 |
| CCY-3-O2 | 11.0 | | |
| CLOY-3-O2 | 6.0 | | |
| CLY-3-O2 | 9.5 | | |
| CLY-4-O2 | 4.75 | | |
| CLY-5-O2 | 5.0 | | |
| COB(S)-2-O4 | 1.5 | | |
| Σ | 100.0 | | |

To 99.96 wt% of the mixture M213 are added 0.04 wt% of the stabiliser ST-3b-1.

Mixture Example M214

| | | | |
|---|---|---|---|
| B(S)-2O-O4 | 4.0 | cl.p. [°C]: | 122.5 |
| B(S)-2O-O5 | 4.0 | $n_e$ [589 nm, 20°C]: | 1.5849 |
| B(S)-2O-O6 | 3.0 | $n_o$ [589 nm, 20°C]: | 1.4833 |
| CC-3-V | 4.5 | Δn [589 nm, 20°C]: | 0.1016 |
| CC-3-V1 | 9.5 | $\varepsilon_{\parallel}$ [1 kHz, 20°C]: | 3.2 |
| CC-4-V1 | 8.0 | $\varepsilon_{\perp}$ [1 kHz, 20°C]: | 7.2 |
| CCD-3-V1 | 3.25 | Δε [1 kHz, 20°C]: | -4.0 |
| CC-3-O3 | 2.5 | | |
| CC-3-5 | 12.5 | | |
| CCP-3-1 | 6.0 | | |
| CCC-3-V | 3.0 | | |
| CCY-3-O2 | 11.0 | | |
| CLOY-3-O2 | 6.0 | | |
| CLY-3-O2 | 9.5 | | |
| CLY-4-O2 | 4.75 | | |
| CLY-5-O2 | 5.0 | | |
| COB(S)-2-O4 | 1.5 | | |

(continued)

| | |
|---|---|
| CP-3-O2 | 2.0 |
| Σ | 100.0 |

To the mixture M214 are added 150 ppm of the stabiliser ST-2a-1, 50 ppm of the stabiliser
ST-2a-2 and 300 ppm of the stabiliser ST-3a-1.

Mixture Example M215

| | | | |
|---|---|---|---|
| CC-3-V | 5.2 | cl.p. [°C]: | 116.5 |
| CC-3-V1 | 11.0 | $n_e$ [589 nm, 20°C]: | 1.5681 |
| CC-4-V1 | 9.0 | $n_o$ [589 nm, 20°C]: | 1.4813 |
| CCC-3-V | 2.0 | Δn [589 nm, 20°C]: | 0.0868 |
| CCD-3-V1 | 3.5 | $\varepsilon_\parallel$ [1 kHz, 20°C]: | 3.1 |
| CC-3-5 | 12.5 | $\varepsilon_\perp$ [1 kHz, 20°C]: | 6.2 |
| CCP-3-1 | 9.0 | Δε [1 kHz, 20°C]: | -3.1 |
| CCY-3-O2 | 11.0 | $\gamma_1$ [mPa·s, 20°C]: | 237 |
| CCY-5-O2 | 0.8 | $K_1$ [pN, 20°C]: | 26.1 |
| CLOY-3-O2 | 24.7 | $K_3$ [pN, 20°C]: | 29.2 |
| CLY-3-O2 | 9.3 | | |
| CP-3-O2 | 2.0 | | |
| Σ | 100.0 | | |

To the mixture M215 are added 100 ppm of the stabiliser ST-2a-2.

Mixture Example M216

| | | | |
|---|---|---|---|
| B(S)-2O-O4 | 4.0 | cl.p. [°C]: | 114.5 |
| B(S)-2O-O5 | 5.0 | $n_e$ [589 nm, 20°C]: | 1.5857 |
| B(S)-2O-O6 | 4.0 | $n_o$ [589 nm, 20°C]: | 1.4827 |
| CC-3-V | 3.5 | Δn [589 nm, 20°C]: | 0.1030 |
| CC-3-V1 | 12.0 | $\varepsilon_\parallel$ [1 kHz, 20°C]: | 3.3 |
| CC-4-V1 | 6.0 | $\varepsilon_\perp$ [1 kHz, 20°C]: | 8.2 |
| CCC-3-V | 3.0 | Δε [1 kHz, 20°C]: | -4.8 |
| CCD-3-V1 | 2.0 | $\gamma_1$ [mPa·s, 20°C]: | 211 |
| CC-3-O3 | 5.0 | $K_1$ [pN, 20°C]: | 29.1 |
| CC-3-5 | 12.5 | $K_3$ [pN, 20°C]: | 30.0 |
| CCY-3-O2 | 11.0 | | |
| CLOY-3-O2 | 10.1 | | |
| CLY-3-O2 | | | 10.5 |
| CLY-4-O2 | | | 5.0 |
| CLY-5-O2 | | | 2.9 |
| COB(S)-2-O4 | | | 1.5 |
| CP-3-O2 | | | 2.0 |
| Σ | | | 100.0 |

To the mixture M216 are added 50 ppm of the stabiliser S-2-1-1.

Mixture Example M217

| | | | |
|---|---|---|---|
| B(S)-20-04 | 4.0 | cl.p. [°C]: | 118 |
| B(S)-2O-O5 | 4.0 | $n_e$ [589 nm, 20°C]: | 1.5848 |
| B(S)-2O-O6 | 3.0 | $n_o$ [589 nm, 20°C]: | 1.4837 |
| CC-3-V | 6.5 | $\Delta n$ [589 nm, 20°C]: | 0.1011 |
| CC-3-V1 | 9.5 | $\varepsilon_{\parallel}$ [1 kHz, 20°C]: | 3.2 |
| CC-4-V1 | 8.0 | $\varepsilon_{\perp}$ [1 kHz, 20°C]: | 7.3 |
| CCD-V-3 | 4.0 | $\Delta\varepsilon$ [1 kHz, 20°C]: | -4.1 |
| CC-3-O3 | 2.5 | $\gamma_1$ [mPa·s, 20°C]: | 197 |
| CC-3-5 | 12.5 | $K_1$ [pN, 20°C]: | 30.2 |
| CCP-3-1 | 8.4 | $K_3$ [pN, 20°C]: | 36.3 |
| CCY-3-O2 | 11.0 | | |
| CLOY-3-O2 | 7.5 | | |
| CLY-3-O2 | 9.5 | | |
| CLY-4-O2 | 4.0 | | |
| CLY-5-O2 | 3.1 | | |
| COB(S)-2-O4 | 2.5 | | |
| Σ | 100.0 | | |

To the mixture M217 are added 100 ppm of the stabiliser ST-8-1.

Mixture Example M218

| | | | |
|---|---|---|---|
| B(S)-20-04 | 4.0 | cl.p. [°C]: | 119.5 |
| B(S)-2O-O5 | 4.0 | $n_e$ [589 nm, 20°C]: | 1.5853 |
| B(S)-2O-O6 | 3.0 | $n_o$ [589 nm, 20°C]: | 1.4837 |
| CC-3-V | 5.5 | $\Delta n$ [589 nm, 20°C]: | 0.1016 |
| CC-3-V1 | 9.5 | | |
| CC-4-V1 | 8.0 | | |
| CCD-V-3 | 5.0 | | |
| CC-3-O3 | 2.5 | | |
| CC-3-5 | 12.5 | | |
| CCP-3-1 | 8.5 | | |
| CCY-3-O2 | 11.0 | | |
| CLOY-3-O2 | 7.5 | | |
| CLY-3-O2 | 9.5 | | |
| CLY-4-O2 | 3.0 | | |
| CLY-5-O2 | 4.0 | | |
| COB(S)-2-O4 | 2.5 | | |
| Σ | 100.0 | | |

To the mixture M218 are added 100 ppm of the stabiliser S-1-1-1.

Mixture Example M219

| | | | |
|---|---|---|---|
| B(S)-20-04 | 4.0 | cl.p. [°C]: | 118.5 |
| B(S)-2O-O5 | 4.0 | $n_e$ [589 nm, 20°C]: | 1.5843 |
| B(S)-2O-O6 | 3.0 | $n_o$ [589 nm, 20°C]: | 1.4837 |
| CC-3-V | 6.5 | Δn [589 nm, 20°C]: | 0.1006 |
| CC-3-V1 | 9.5 | $\varepsilon_{\parallel}$ [1 kHz, 20°C]: | 3.3 |
| CC-4-V1 | 8.0 | $\varepsilon_{\perp}$ [1 kHz, 20°C]: | 7.3 |
| CCD-3-3 | 2.0 | Δε [1 kHz, 20°C]: | -4.1 |
| CCD-V-3 | 2.0 | $\gamma_1$ [mPa·s, 20°C]: | 197 |
| CC-3-O3 | 2.5 | $K_1$ [pN, 20°C]: | 30.2 |
| CC-3-5 | 12.5 | $K_3$ [pN, 20°C]: | 33.1 |
| CCP-3-1 | 8.4 | | |
| CCY-3-O2 | 11.0 | | |
| CLOY-3-O2 | 7.5 | | |
| CLY-3-O2 | 9.5 | | |
| CLY-4-O2 | 4.0 | | |
| CLY-5-O2 | 3.1 | | |
| COB(S)-2-O4 | 2.5 | | |
| Σ | 100.0 | | |

To the mixture M219 are added 100 ppm of the stabiliser ST-2a-2.

Mixture Example M220

| | | | |
|---|---|---|---|
| B(S)-20-04 | 4.0 | cl.p. [°C]: | 117.5 |
| B(S)-2O-O5 | 4.0 | $n_e$ [589 nm, 20°C]: | 1.5855 |
| B(S)-2O-O6 | 3.0 | $n_o$ [589 nm, 20°C]: | 1.4842 |
| CC-3-V | 5.0 | Δn [589 nm, 20°C]: | 0.1013 |
| CC-3-V1 | 9.5 | $\varepsilon_{\parallel}$ [1 kHz, 20°C]: | 3.3 |
| CC-4-V1 | 8.0 | $\varepsilon_{\perp}$ [1 kHz, 20°C]: | 7.2 |
| CCD-3-3 | 2.0 | Δε [1 kHz, 20°C]: | -4.0 |
| CCD-V-3 | 2.0 | $\gamma_1$ [mPa·s, 20°C]: | 199 |
| CC-3-O3 | 2.5 | $K_1$ [pN, 20°C]: | 29.4 |
| CC-3-5 | 12.5 | $K_3$ [pN, 20°C]: | 28.4 |
| CCP-3-1 | 8.5 | | |
| CCY-3-O2 | 11.0 | | |
| CLOY-3-O2 | 7.0 | | |
| CLY-3-O2 | 6.5 | | |
| CLY-4-O2 | 5.0 | | |
| CLY-5-O2 | 5.0 | | |
| COB(S)-2-O4 | 2.5 | | |
| CP-3-O2 | 2.0 | | |
| Σ | 100.0 | | |

To the mixture M220 are added 50 ppm of the stabiliser S-2-1-1.

Mixture Example M221

| | | | |
|---|---|---|---|
| B(S)-2O-O4 | 4.0 | cl.p. [°C]: | 116.5 |
| B(S)-2O-O5 | 4.0 | $n_e$ [589 nm, 20°C]: | 1.5850 |
| B(S)-2O-O6 | 3.0 | $n_o$ [589 nm, 20°C]: | 1.4837 |
| CC-3-V | 5.5 | $\Delta n$ [589 nm, 20°C]: | 0.1013 |
| CC-3-V1 | 9.5 | $\varepsilon_{\parallel}$ [1 kHz, 20°C]: | 3.2 |
| CC-4-V1 | 8.0 | $\varepsilon_{\perp}$ [1 kHz, 20°C]: | 7.2 |
| CCD-V-3 | 4.0 | $\Delta\varepsilon$ [1 kHz, 20°C]: | -4.0 |
| CC-3-O3 | 2.5 | $\gamma_1$ [mPa·s, 20°C]: | 194 |
| CC-3-5 | 12.5 | $K_1$ [pN, 20°C]: | 28.5 |
| CCP-3-1 | 8.5 | $K_3$ [pN, 20°C]: | 27.6 |
| CCY-3-O2 | 11.0 | | |
| CLOY-3-O2 | 7.5 | | |
| CLY-3-O2 | 9.5 | | |
| CLY-4-O2 | 1.5 | | |
| CLY-5-O2 | 4.5 | | |
| COB(S)-2-O4 | 2.5 | | |
| CP-3-O2 | 2.0 | | |
| Σ | 100.0 | | |

To the mixture M221 are added 150 ppm of the stabiliser ST-2a-1, 50 ppm of the stabiliser ST-2a-2 and 300 ppm of the stabiliser ST-3a-1.

Mixture Example M222

| | | | |
|---|---|---|---|
| B(S)-20-04 | 4.0 | cl.p. [°C]: | 118 |
| B(S)-2O-O5 | 4.0 | $n_e$ [589 nm, 20°C]: | 1.5849 |
| B(S)-2O-O6 | 3.0 | $n_o$ [589 nm, 20°C]: | 1.4840 |
| CC-3-V | 4.0 | $\Delta n$ [589 nm, 20°C]: | 0.1009 |
| CC-3-V1 | 9.5 | $\varepsilon_{\parallel}$ [1 kHz, 20°C]: | 3.3 |
| CC-4-V1 | 8.0 | $\varepsilon_{\perp}$ [1 kHz, 20°C]: | 7.3 |
| CCD-V-3 | 5.0 | $\Delta\varepsilon$ [1 kHz, 20°C]: | -4.0 |
| CC-3-O3 | 2.25 | $\gamma_1$ [mPa·s, 20°C]: | 203 |
| CC-3-5 | 12.5 | $K_1$ [pN, 20°C]: | 29.9 |
| CCP-3-1 | 8.5 | $K_3$ [pN, 20°C]: | 31.7 |
| CCY-3-O2 | 11.0 | | |
| CLOY-3-O2 | 8.5 | | |
| CLY-3-O2 | 9.5 | | |
| CLY-4-O2 | 3.25 | | |
| CLY-5-O2 | 4.0 | | |
| COB(S)-2-O4 | 1.0 | | |
| CP-3-O2 | 2.0 | | |
| Σ | 100.0 | | |

To the mixture M222 are added 100 ppm of the stabiliser ST-8-1.

Mixture Example M223

| | | | |
|---|---|---|---|
| B(S)-2O-O4 | 4.0 | cl.p. [°C]: | 117 |
| B(S)-2O-O5 | 4.0 | $n_e$ [589 nm, 20°C]: | 1.5853 |
| B(S)-2O-O6 | 3.0 | $n_o$ [589 nm, 20°C]: | 1.4841 |
| CC-3-V | 2.5 | Δn [589 nm, 20°C]: | 0.1012 |
| CC-3-V1 | 10.5 | $\varepsilon_{\parallel}$ [1 kHz, 20°C]: | 3.2 |
| CC-4-V1 | 8.5 | $\varepsilon_{\perp}$ [1 kHz, 20°C]: | 7.2 |
| CCD-V-3 | 5.0 | Δε [1 kHz, 20°C]: | -4.0 |
| CC-3-O3 | 2.5 | $\gamma_1$ [mPa·s, 20°C]: | 203 |
| CC-3-5 | 12.5 | $K_1$ [pN, 20°C]: | 29.6 |
| CCP-3-1 | 10.5 | $K_3$ [pN, 20°C]: | 32.3 |
| CCY-3-O2 | 11.0 | | |
| CLOY-3-O2 | 10.25 | | |
| CLY-3-O2 | 9.5 | | |
| CLY-5-O2 | 1.75 | | |
| COB(S)-2-O4 | 2.5 | | |
| CP-3-O2 | 2.0 | | |
| Σ | 100.0 | | |

To the mixture M223 are added 100 ppm of the stabiliser ST-2a-2.

Mixture Example M224

| | | | |
|---|---|---|---|
| B(S)-20-04 | 3.5 | cl.p. [°C]: | 116.5 |
| B(S)-2O-O5 | 4.0 | $n_e$ [589 nm, 20°C]: | 1.5834 |
| B(S)-2O-O6 | 3.0 | $n_o$ [589 nm, 20°C]: | 1.4834 |
| CC-3-V | 8.5 | Δn [589 nm, 20°C]: | 0.1000 |
| CC-3-V1 | 9.5 | $\varepsilon_{\parallel}$ [1 kHz, 20°C]: | 3.2 |
| CC-4-V1 | 8.0 | $\varepsilon_{\perp}$ [1 kHz, 20°C]: | 7.2 |
| CCD-V-3 | 3.0 | Δε [1 kHz, 20°C]: | -4.0 |
| CC-3-O3 | 2.0 | $\gamma_1$ [mPa·s, 20°C]: | 194 |
| CC-3-5 | 12.0 | $K_1$ [pN, 20°C]: | 28.1 |
| CCP-3-1 | 8.5 | $K_3$ [pN, 20°C]: | 26.1 |
| CCY-3-O2 | 11.0 | | |
| CCY-5-O2 | 1.0 | | |
| CLOY-3-O2 | 8.0 | | |
| CLY-3-O2 | 9.5 | | |
| CLY-4-O2 | 3.0 | | |
| CLY-5-O2 | 3.0 | | |
| COB(S)-2-O4 | 2.5 | | |
| Σ | 100.0 | | |

To the mixture M224 are added 100 ppm of the stabiliser S-1-1-1.

Mixture Example M225

| | | | |
|---|---|---|---|
| B(S)-2O-O4 | 4.0 | cl.p. [°C]: | 118 |
| B(S)-2O-O5 | 4.0 | $n_e$ [589 nm, 20°C]: | 1.5847 |

(continued)

| | | | |
|---|---|---|---|
| B(S)-2O-O6 | 3.0 | $n_o$ [589 nm, 20°C]: | 1.4838 |
| CC-3-V | 8.0 | Δn [589 nm, 20°C]: | 0.1009 |
| CC-3-V1 | 9.5 | $\varepsilon_{\parallel}$ [1 kHz, 20°C]: | 3.2 |
| CC-4-V1 | 8.0 | $\varepsilon_{\perp}$ [1 kHz, 20°C]: | 7.3 |
| CCD-V-3 | 4.0 | Δε [1 kHz, 20°C]: | -4.0 |
| CC-3-O3 | 1.5 | $\gamma_1$ [mPa·s, 20°C]: | 197 |
| CC-3-5 | 12.0 | $K_1$ [pN, 20°C]: | 28.7 |
| CCP-3-1 | 8.5 | $K_3$ [pN, 20°C]: | 28.1 |
| CCY-3-O2 | 11.0 | | |
| CCY-5-O2 | 1.0 | | |
| CLOY-3-O2 | 7.5 | | |
| CLY-3-O2 | 9.5 | | |
| CLY-4-O2 | 3.0 | | |
| CLY-5-O2 | 3.0 | | |
| COB(S)-2-O4 | 2.5 | | |
| Σ | 100.0 | | |

To 99.96 wt% of the mixture M225 are added 0.04 wt% of the stabiliser ST-3b-1.

Mixture Example M226

| | | | |
|---|---|---|---|
| B(S)-20-04 | 1.5 | cl.p. [°C]: | 121.5 |
| B(S)-2O-O5 | 4.0 | $n_e$ [589 nm, 20°C]: | 1.5853 |
| B(S)-2O-O6 | 4.0 | $n_o$ [589 nm, 20°C]: | 1.4844 |
| CC-3-V | 6.5 | Δn [589 nm, 20°C]: | 0.1009 |
| CC-3-V1 | 10.0 | | |
| CC-4-V1 | 8.0 | | |
| ACC-3-3 | 3.0 | | |
| CC-3-O3 | 3.0 | | |
| CC-3-5 | 12.0 | | |
| CCP-3-1 | 9.0 | | |
| CCY-3-O2 | 11.0 | | |
| CLOY-3-O2 | 4.5 | | |
| CLY-3-O2 | 9.5 | | |
| CLY-4-O2 | 5.0 | | |
| CLY-5-O2 | 5.0 | | |
| COB(S)-2-O4 | 4.0 | | |
| Σ | 100.0 | | |

To the mixture M226 are added 50 ppm of the stabiliser S-2-1-1.

Mixture Example M227

| | | | |
|---|---|---|---|
| B(S)-20-04 | 4.0 | cl.p. [°C]: | 120.5 |
| B(S)-2O-O5 | 3.0 | $n_e$ [589 nm, 20°C]: | 1.5834 |
| B(S)-2O-O6 | 4.0 | $n_o$ [589 nm, 20°C]: | 1.4844 |
| CC-3-V | 6.25 | Δn [589 nm, 20°C]: | 0.1019 |

(continued)

| | | | |
|---|---|---|---|
| CC-3-V1 | 9.5 | $\varepsilon_{\parallel}$ [1 kHz, 20°C]: | 3.2 |
| CC-4-V1 | 8.0 | $\varepsilon_{\perp}$ [1 kHz, 20°C]: | 7.0 |
| ACC-3-3 | 3.0 | $\Delta\varepsilon$ [1 kHz, 20°C]: | -3.9 |
| CC-3-O3 | 2.0 | $\gamma_1$ [mPa·s, 20°C]: | 196 |
| CC-3-5 | 12.0 | $K_1$ [pN, 20°C]: | 29.6 |
| CCP-3-1 | 8.5 | $K_3$ [pN, 20°C]: | 29.3 |
| CCY-3-O2 | 11.0 | | |
| CCY-5-O2 | 2.0 | | |
| CLOY-3-O2 | 3.5 | | |
| CLY-3-O2 | 9.5 | | |
| CLY-4-O2 | 5.0 | | |
| CLY-5-O2 | 5.0 | | |
| COB(S)-2-O4 | 1.75 | | |
| CP-3-O2 | 2.0 | | |
| Σ | 100.0 | | |

To the mixture M227 are added 100 ppm of the stabiliser ST-2a-2.

Mixture Example M228

| | | | |
|---|---|---|---|
| B(S)-20-04 | 4.0 | cl.p. [°C]: | 121.5 |
| B(S)-2O-O5 | 3.0 | $n_e$ [589 nm, 20°C]: | 1.5867 |
| B(S)-2O-O6 | 4.0 | $n_o$ [589 nm, 20°C]: | 1.4856 |
| CC-3-V | 12.0 | $\Delta n$ [589 nm, 20°C]: | 0.1011 |
| CC-3-V1 | 9.5 | $\varepsilon_{\parallel}$ [1 kHz, 20°C]: | 3.2 |
| CC-4-V1 | 1.5 | $\varepsilon_{\perp}$ [1 kHz, 20°C]: | 6.9 |
| ACC-3-2 | 3.0 | $\Delta\varepsilon$ [1 kHz, 20°C]: | -3.7 |
| CC-3-5 | 12.0 | $\gamma_1$ [mPa·s, 20°C]: | 195 |
| CCP-3-1 | 8.0 | $K_1$ [pN, 20°C]: | 28.7 |
| CCP-V2-1 | 6.5 | $K_3$ [pN, 20°C]: | 26.7 |
| CCY-3-O2 | 11.0 | | |
| CLOY-3-O2 | 6.0 | | |
| CLY-3-O2 | 9.5 | | |
| CLY-4-O2 | 5.0 | | |
| CLY-5-O2 | 5.0 | | |
| Σ | 100.0 | | |

To the mixture M228 are added 100 ppm of the stabiliser S-1-1-1.

Mixture Example M229

| | | | |
|---|---|---|---|
| B(P)-20-04 | 4.0 | Cl.p. [°C]: | 117.5 |
| B(S)-2O-O5 | 1.5 | $\Delta n$ [589 nm, 20°C]: | 0.0919 |
| CC-3-V | 6.0 | $\varepsilon_{\parallel}$ [1 kHz, 20°C]: | 3.2 |
| CC-3-V1 | 12.0 | $\varepsilon_{\perp}$ [1 kHz, 20°C]: | 6.0 |
| CC-4-V1 | 10.0 | $\Delta\varepsilon$ [1 kHz, 20°C]: | -2.8 |
| CCD-3-3 | 5.5 | $\gamma_1$ [mPa s, 20°C]: | 194 |

(continued)

| | | | |
|---|---|---|---|
| CC-3-5 | 12.0 | $K_1$ [pN, 20°C]: | 26.3 |
| CCP-3-1 | 12.0 | $K_3$ [pN, 20°C]: | 26.0 |
| CCY-3-O2 | 11.0 | | |
| CCY-5-O2 | 2.4 | | |
| CLOY-3-O2 | 12.1 | | |
| CLY-3-O2 | 10.0 | | |
| Y-4O-O4 | 1.5 | | |
| Σ | 100.0 | | |

To the mixture M229 are added 50 ppm of the stabiliser S-2-1-1.

Mixture Example M230

| | | | |
|---|---|---|---|
| B(A)-2O-O2 | 4.0 | Cl.p. [°C]: | 116.5 |
| B(S)-2O-O5 | 1.5 | Δn [589 nm, 20°C]: | 0.0913 |
| CC-3-V | 6.0 | $\varepsilon_\parallel$ [1 kHz, 20°C]: | 3.2 |
| CC-3-V1 | 12.0 | $\varepsilon_\perp$ [1 kHz, 20°C]: | 6.3 |
| CC-4-V1 | 10.0 | Δε [1 kHz, 20°C]: | -3.1 |
| CCD-3-3 | 5.5 | $\gamma_1$ [mPa s, 20°C]: | 194 |
| CC-3-5 | 12.0 | $K_1$ [pN, 20°C]: | 25.2 |
| CCP-3-1 | 12.0 | $K_3$ [pN, 20°C]: | 26.4 |
| CCY-3-O2 | 11.0 | | |
| CCY-5-O2 | 2.4 | | |
| CLOY-3-O2 | 12.1 | | |
| CLY-3-O2 | 10.0 | | |
| Y-4O-O4 | 1.5 | | |
| Σ | 100.0 | | |

To the mixture M230 are added 100 ppm of the stabiliser ST-2a-2.

Mixture Example M231

| | | | |
|---|---|---|---|
| B(S)-2O-O1 (c5) | 4.0 | Cl.p. [°C]: | 116 |
| B(S)-4O-O1 (c5) | 1.5 | Δn [589 nm, 20°C]: | 0.0906 |
| CC-3-V | 6.0 | $\varepsilon_\parallel$ [1 kHz, 20°C]: | 3.2 |
| CC-3-V1 | 12.0 | $\varepsilon_\perp$ [1 kHz, 20°C]: | 6.3 |
| CC-4-V1 | 10.0 | Δε [1 kHz, 20°C]: | -3.1 |
| CCD-3-3 | 5.5 | $\gamma_1$ [mPa s, 20°C]: | 199 |
| CC-3-5 | 12.0 | $K_1$ [pN, 20°C]: | 26.2 |
| CCP-3-1 | 12.0 | $K_3$ [pN, 20°C]: | 25.9 |
| CCY-3-O2 | 11.0 | | |
| CCY-5-O2 | 2.4 | | |
| CLOY-3-O2 | 12.1 | | |
| CLY-3-O2 | 10.0 | | |
| Y-4O-O4 | 1.5 | | |
| Σ | 100.0 | | |

To the mixture M231 are added 150 ppm of the stabiliser ST-2a-1, 50 ppm of the stabiliser ST-2a-2 and 300 ppm of the stabiliser ST-3a-1.

Mixture Example M232

| | | | |
|---|---|---|---|
| B(S)-4O-O5 | 4.0 | Cl.p. [°C]: | 116.5 |
| B(S)-2O-O5 | 1.5 | $\Delta n$ [589 nm, 20°C]: | 0.0904 |
| CC-3-V | 6.0 | $\varepsilon_{\parallel}$ [1 kHz, 20°C]: | 3.2 |
| CC-3-V1 | 12.0 | $\varepsilon_{\perp}$ [1 kHz, 20°C]: | 6.2 |
| CC-4-V1 | 10.0 | $\Delta\varepsilon$ [1 kHz, 20°C]: | -3.0 |
| CCD-3-3 | 5.5 | $\gamma_1$ [mPa s, 20°C]: | 192 |
| CC-3-5 | 12.0 | $K_1$ [pN, 20°C]: | 25.7 |
| CCP-3-1 | 12.0 | $K_3$ [pN, 20°C]: | 25.6 |
| CCY-3-O2 | 11.0 | | |
| CCY-5-O2 | 2.4 | | |
| CLOY-3-O2 | 12.1 | | |
| CLY-3-O2 | 10.0 | | |
| Y-4O-O4 | 1.5 | | |
| Σ | 100.0 | | |

To 99.96 wt% of the mixture M232 are added 0.04 wt% of the stabiliser ST-3b-1.

Mixture Example M233

| | | | |
|---|---|---|---|
| B(S)-2O-O4 | 4.0 | Cl.p. [°C]: | 113.5 |
| B(S)-2O-O5 | 1.5 | $\Delta n$ [589 nm, 20°C]: | 0.0902 |
| CC-3-V | 6.0 | $\varepsilon_{\parallel}$ [1 kHz, 20°C]: | 3.2 |
| CC-V-V1 | 12.0 | $\varepsilon_{\perp}$ [1 kHz, 20°C]: | 6.2 |
| CC-4-V1 | 10.0 | $\Delta\varepsilon$ [1 kHz, 20°C]: | -3.0 |
| CCD-3-3 | 5.5 | $\gamma_1$ [mPa s, 20°C]: | 179 |
| CC-3-5 | 12.0 | $K_1$ [pN, 20°C]: | 24.1 |
| CCP-3-1 | 12.0 | $K_3$ [pN, 20°C]: | 24.6 |
| CCY-3-O2 | 11.0 | | |
| CCY-5-O2 | 2.4 | | |
| CLOY-3-O2 | 12.1 | | |
| CLY-3-O2 | 10.0 | | |
| Y-4O-O4 | 1.5 | | |
| Σ | 100.0 | | |

wherein CC-V-V1 is

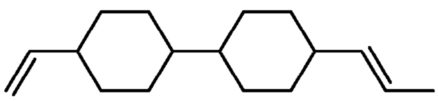

CC-V-V1

To 99.965 wt% of the mixture M233 are added 0.035 wt% of the stabiliser ST-3a-1.

Mixture Example M234

| | | | |
|---|---|---|---|
| B(S)-2O-O4 | 4.0 | Cl.p. [°C]: | 110.5 |
| B(S)-2O-O5 | 1.5 | Δn [589 nm, 20°C]: | 0.0891 |
| CC-3-V | 6.0 | $\varepsilon_{\parallel}$ [1 kHz, 20°C]: | 3.2 |
| CC-1-2V1 | 12.0 | $\varepsilon_{\perp}$ [1 kHz, 20°C]: | 6.2 |
| CC-4-V1 | 10.0 | Δε [1 kHz, 20°C]: | -3.0 |
| CCD-3-3 | 5.5 | $\gamma_1$ [mPa s, 20°C]: | 183 |
| CC-3-5 | 12.0 | $K_1$ [pN, 20°C]: | 24.7 |
| CCP-3-1 | 12.0 | $K_3$ [pN, 20°C]: | 23.8 |
| CCY-3-O2 | 11.0 | | |
| CCY-5-O2 | 2.4 | | |
| CLOY-3-O2 | 12.1 | | |
| CLY-3-O2 | 10.0 | | |
| Y-4O-O4 | 1.5 | | |
| Σ | 100.0 | | |

wherein CC-1-2V1 is

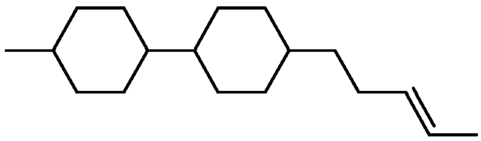

CC-1-2V1

To the mixture M234 are added 100 ppm of the stabiliser ST-2a-2.

Mixture Example M235

| | | | |
|---|---|---|---|
| B(S)-2O-O4 | 4.0 | Cl.p. [°C]: | 114 |
| B(S)-2O-O5 | 1.5 | Δn [589 nm, 20°C]: | 0.0897 |
| CC-3-V | 6.0 | $\varepsilon_{\parallel}$ [1 kHz, 20°C]: | 3.2 |
| CC-3-V1 | 12.0 | $\varepsilon_{\perp}$ [1 kHz, 20°C]: | 6.7 |
| CC-4-V1 | 10.0 | Δε [1 kHz, 20°C]: | -3.5 |
| CCD-3-3 | 5.5 | $\gamma_1$ [mPa s, 20°C]: | 202 |
| CC-3-5 | 12.0 | $K_1$ [pN, 20°C]: | 25.8 |
| CCP-3-1 | 12.0 | $K_3$ [pN, 20°C]: | 25.8 |
| CCOY-3-O2 | 11.0 | | |
| CCY-5-O2 | 2.4 | | |
| CLOY-3-O2 | 12.1 | | |
| CLY-3-O2 | 10.0 | | |
| Y-4O-O4 | 1.5 | | |
| Σ | 100.0 | | |

To the mixture M235 are added 50 ppm of the stabiliser S-2-1-1.

Mixture Example M236

| | | | |
|---|---|---|---|
| B(S)-2O-O4 | 4.0 | Cl.p. [°C]: | 114 |
| B(S)-2O-O5 | 1.5 | Δn [589 nm, 20°C]: | 0.0923 |
| CC-3-V | 6.0 | $\varepsilon_{\parallel}$ [1 kHz, 20°C]: | 3.2 |
| CC-3-V1 | 12.0 | $\varepsilon_{\perp}$ [1 kHz, 20°C]: | 6.2 |

(continued)

| | | | |
|---|---|---|---|
| CC-4-V1 | 10.0 | Δε [1 kHz, 20°C]: | -3.0 |
| CCD-3-3 | 5.5 | $\gamma_1$ [mPa s, 20°C]: | 193 |
| CC-3-5 | 12.0 | $K_1$ [pN, 20°C]: | 26.4 |
| CCP-1-2V1 | 12.0 | $K_3$ [pN, 20°C]: | 26.0 |
| CCY-3-O2 | 11.0 | | |
| CCY-5-O2 | 2.4 | | |
| CLOY-3-O2 | 12.1 | | |
| CLY-3-O2 | 10.0 | | |
| Y-4O-O4 | 1.5 | | |
| Σ | 100.0 | | |

wherein CCP-1-2V1 is

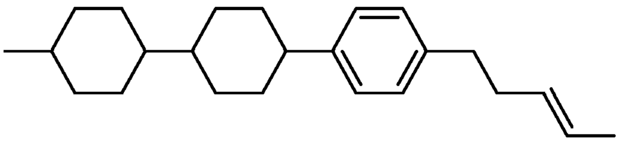

CCP-1-2V1

To the mixture M236 are added 150 ppm of the stabiliser ST-2a-1, 50 ppm of the stabiliser ST-2a-2 and 300 ppm of the stabiliser ST-3a-1.

<u>Mixture Example M237</u>

| | | | |
|---|---|---|---|
| B(S)-2O-O4 | 4.0 | Cl.p. [°C]: | 116 |
| B(S)-2O-O5 | 1.5 | Δn [589 nm, 20°C]: | 0.0913 |
| CC-3-V | 6.0 | $\varepsilon_{\parallel}$ [1 kHz, 20°C]: | 3.2 |
| CC-3-V1 | 12.0 | $\varepsilon_{\perp}$ [1 kHz, 20°C]: | 6.3 |
| CC-4-V1 | 10.0 | Δε [1 kHz, 20°C]: | -3.1 |
| CCD-3-3 | 5.5 | $\gamma_1$ [mPa s, 20°C]: | 184 |
| CC-3-5 | 12.0 | $K_1$ [pN, 20°C]: | 25.0 |
| CCP-3-1 | 12.0 | $K_3$ [pN, 20°C]: | 24.8 |
| CCY-V-O2 | 11.0 | | |
| CCY-5-O2 | 2.4 | | |
| CLOY-3-O2 | 12.1 | | |
| CLY-3-O2 | 10.0 | | |
| Y-4O-O4 | 1.5 | | |
| Σ | 100.0 | | |

To 99.96 wt% of the mixture M237 are added 0.04 wt% of the stabiliser ST-3b-1.

<u>Mixture Example M238</u>

| | | | |
|---|---|---|---|
| B(S)-2O-O4 | 4.0 | Cl.p. [°C]: | 113.5 |
| B(S)-2O-O5 | 1.5 | Δn [589 nm, 20°C]: | 0.1004 |
| CC-3-V | 6.0 | $\varepsilon_{\parallel}$ [1 kHz, 20°C]: | 3.2 |
| CC-3-V1 | 12.0 | $\varepsilon_{\perp}$ [1 kHz, 20°C]: | 6.4 |
| CC-4-V1 | 10.0 | Δε [1 kHz, 20°C]: | -3.2 |
| CCD-3-3 | 5.5 | $\gamma_1$ [mPa s, 20°C]: | 180 |

(continued)

| | | | |
|---|---|---|---|
| CC-3-5 | 12.0 | $K_1$ [pN, 20°C]: | 24.7 |
| CCP-3-1 | 12.0 | $K_3$ [pN, 20°C]: | 23.8 |
| CPY-V-O2 | 11.0 | | |
| CPY-V-O4 | 2.4 | | |
| CLOY-3-O2 | 12.1 | | |
| CLY-3-O2 | 10.0 | | |
| Y-4O-O4 | 1.5 | | |
| Σ | 100.0 | | |

To 99.965 wt% of the mixture M238 are added 0.035 wt% of the stabiliser ST-3a-1.

Mixture Example M239

| | | | |
|---|---|---|---|
| B(S)-2O-O4 | 4.0 | Cl.p. [°C]: | 119.5 |
| B(S)-2O-O5 | 1.5 | Δn [589 nm, 20°C]: | 0.0923 |
| CC-3-V | 6.0 | $\varepsilon_{\parallel}$ [1 kHz, 20°C]: | 3.2 |
| CC-3-V1 | 12.0 | $\varepsilon_{\perp}$ [1 kHz, 20°C]: | 6.2 |
| CC-4-V1 | 10.0 | Δε [1 kHz, 20°C]: | -3.0 |
| CCD-3-3 | 5.5 | $\gamma_1$ [mPa s, 20°C]: | 203 |
| CC-3-5 | 12.0 | $K_1$ [pN, 20°C]: | 27.4 |
| CCP-3-1 | 12.0 | $K_3$ [pN, 20°C]: | 27.1 |
| CCY-3-O2 | 11.0 | | |
| CCY-5-O2 | 2.4 | | |
| CLOY-3-O2 | 12.1 | | |
| CLY-3-O2 | 10.0 | | |
| LY-(c5)-O2 | 1.5 | | |
| Σ | 100.0 | | |

To the mixture M239 are added 100 ppm of the stabiliser ST-2a-2.

Mixture Example M240

| | | | |
|---|---|---|---|
| B(S)-20-04 | 4.0 | Cl.p. [°C]: | 106.5 |
| B(S)-2O-O5 | 1.5 | Δn [589 nm, 20°C]: | 0.1017 |
| CC-3-V | 6.0 | $\varepsilon_{\parallel}$ [1 kHz, 20°C]: | 3.2 |
| CC-3-V1 | 12.0 | $\varepsilon_{\perp}$ [1 kHz, 20°C]: | 6.1 |
| PP-1-3 | 5.0 | Δε [1 kHz, 20°C]: | -2.9 |
| PP-1-5 | 5.0 | $\gamma_1$ [mPa s, 20°C]: | 179 |
| CCD-3-3 | 5.5 | $K_1$ [pN, 20°C]: | 24.2 |
| CC-3-5 | 12.0 | $K_3$ [pN, 20°C]: | 24.2 |
| CCP-3-1 | 12.0 | | |
| CCY-3-O2 | 11.0 | | |
| CCY-5-O2 | 2.4 | | |
| CLOY-3-O2 | 12.1 | | |
| CLY-3-O2 | 10.0 | | |

(continued)

| | |
|---|---|
| Y-4O-O4 | 1.5 |
| Σ | 100.0 |

To the mixture M240 are added 50 ppm of the stabiliser S-2-1-1.

Mixture Example M241

| | | | |
|---|---|---|---|
| B(S)-2O-O4 | 4.0 | Cl.p. [°C]: | 112.5 |
| B(S)-2O-O5 | 1.5 | Δn [589 nm, 20°C]: | 0.0922 |
| CC-3-V | 6.0 | $\varepsilon_{\parallel}$ [1 kHz, 20°C]: | 3.2 |
| CC-3-V1 | 12.0 | $\varepsilon_{\perp}$ [1 kHz, 20°C]: | 6.3 |
| CC-4-V1 | 10.0 | Δε [1 kHz, 20°C]: | -3.1 |
| CCD-3-3 | 5.5 | $\gamma_1$ [mPa s, 20°C]: | 179 |
| CC-3-5 | 12.0 | $K_1$ [pN, 20°C]: | 25.3 |
| CCP-3-1 | 12.0 | $K_3$ [pN, 20°C]: | 25.0 |
| CCY-3-O2 | 11.0 | | |
| PY-V2-O2 | 2.4 | | |
| CLOY-3-O2 | 12.1 | | |
| CLY-3-O2 | 10.0 | | |
| Y-4O-O4 | 1.5 | | |
| Σ | 100.0 | | |

To the mixture M241 are added 150 ppm of the stabiliser ST-2a-1, 50 ppm of the stabiliser ST-2a-2 and 300 ppm of the stabiliser ST-3a-1.

Mixture Example M242

| | | | |
|---|---|---|---|
| B(S)-2O-O4 | 4.0 | Cl.p. [°C]: | 115.5 |
| B(S)-2O-O5 | 1.5 | Δn [589 nm, 20°C]: | 0.0942 |
| CC-3-V | 6.0 | $\varepsilon_{\parallel}$ [1 kHz, 20°C]: | 3.2 |
| CC-3-V1 | 12.0 | $\varepsilon_{\perp}$ [1 kHz, 20°C]: | 6.3 |
| CC-4-V1 | 10.0 | Δε [1 kHz, 20°C]: | -3.1 |
| CCD-3-3 | 5.5 | $\gamma_1$ [mPa s, 20°C]: | 195 |
| CC-3-5 | 12.0 | $K_1$ [pN, 20°C]: | 26.1 |
| CCP-3-1 | 12.0 | $K_3$ [pN, 20°C]: | 25.8 |
| CCY-3-O2 | 11.0 | | |
| YG-2O-O4 | 2.4 | | |
| CLOY-3-O2 | 12.1 | | |
| CLY-3-O2 | 10.0 | | |
| YG-4O-O2 | 1.5 | | |
| Σ | | | 100.0 |

To the mixture M242 are added 100 ppm of the stabiliser ST-2a-2.

Mixture Example M243

| | | | |
|---|---|---|---|
| B(S)-2O-O1 (c4) | 4.0 | Cl.p. [°C]: | 116.5 |
| B(S)-2O-O5 | 1.5 | Δn [589 nm, 20°C]: | 0.0910 |
| CC-3-V | 6.0 | $\varepsilon_{\parallel}$ [1 kHz, 20°C]: | 3.2 |
| CC-3-V1 | 12.0 | $\varepsilon_{\perp}$ [1 kHz, 20°C]: | 6.2 |
| CC-4-V1 | 10.0 | Δε [1 kHz, 20°C]: | -3.0 |
| CCD-3-3 | 5.5 | $\gamma_1$ [mPa s, 20°C]: | 199 |
| CC-3-5 | 12.0 | $K_1$ [pN, 20°C]: | 25.9 |
| CCP-3-1 | 12.0 | $K_3$ [pN, 20°C]: | 26.0 |
| CCY-3-O2 | 11.0 | | |
| CCY-5-O2 | 2.4 | | |
| CLOY-3-O2 | 12.1 | | |
| CLY-3-O2 | 10.0 | | |
| Y-4O-O4 | 1.5 | | |
| Σ | 100.0 | | |

To 99.96 wt% of the mixture M243 are added 0.04 wt% of the stabiliser ST-3b-1.

Mixture Example M244

| | | | |
|---|---|---|---|
| B(S)-2O-O4 | 4.0 | Cl.p. [°C]: | 112 |
| B(S)-2O-O5 | 1.5 | Δn [589 nm, 20°C]: | 0.0835 |
| CC-3-V | 6.0 | $\varepsilon_{\parallel}$ [1 kHz, 20°C]: | 3.2 |
| CC-3-V1 | 12.0 | $\varepsilon_{\perp}$ [1 kHz, 20°C]: | 6.7 |
| CC-4-V1 | 10.0 | Δε [1 kHz, 20°C]: | -3.5 |
| CCD-3-3 | 5.5 | $\gamma_1$ [mPa s, 20°C]: | 208 |
| CC-3-5 | 12.0 | $K_1$ [pN, 20°C]: | 25.1 |
| CCP-3-1 | 12.0 | $K_3$ [pN, 20°C]: | 25.3 |
| CCY-3-O2 | 11.0 | | |
| CCY-5-O2 | 2.4 | | |
| CLOY-3-O2 | 12.1 | | |
| CCOY-3-O(c5) | 10.0 | | |
| Y-4O-O4 | 1.5 | | |
| Σ | 100.0 | | |

wherein CCOY-3-O(c5) is

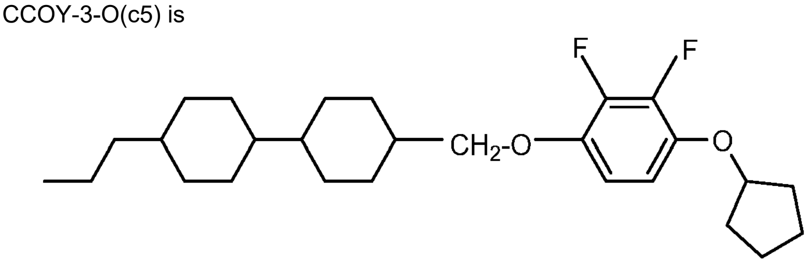

CCOY-3-O(c5)

To 99.965 wt% of the mixture M244 are added 0.035 wt% of the stabiliser ST-3a-1.

Mixture Example M245

| | | | |
|---|---|---|---|
| B(S)-2O-O4 | 4.0 | Cl.p. [°C]: | 113.5 |

(continued)

| | | | |
|---|---|---|---|
| B(S)-2O-O5 | 1.5 | Δn [589 nm, 20°C]: | 0.0873 |
| CC-3-V | 6.0 | $\varepsilon_{\parallel}$ [1 kHz, 20°C]: | 3.2 |
| CC-3-V1 | 12.0 | $\varepsilon_{\perp}$ [1 kHz, 20°C]: | 6.4 |
| CC-4-V1 | 10.0 | Δε [1 kHz, 20°C]: | -3.2 |
| CCD-3-3 | 5.5 | $\gamma_1$ [mPa s, 20°C]: | 217 |
| CC-3-5 | 12.0 | $K_1$ [pN, 20°C]: | 24.7 |
| CCP-3-1 | 12.0 | $K_3$ [pN, 20°C]: | 25.1 |
| CCY-3-O2 | 11.0 | | |
| CCY-5-O2 | 2.4 | | |
| CLOY-3-O2 | 12.1 | | |
| CCOY-3-O(c4) | 10.0 | | |
| Y-4O-O4 | 1.5 | | |
| Σ | 100.0 | | |

wherein CCOY-3-O(c4) is

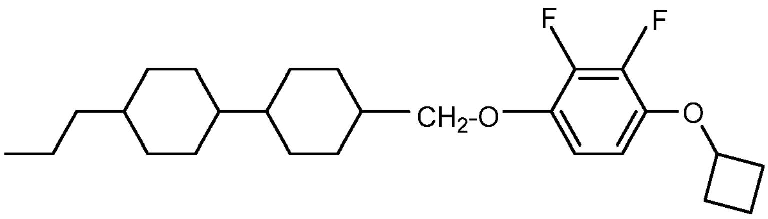

CCOY-3-O(c4)

To the mixture M245 are added 100 ppm of the stabiliser ST-8-1.

Mixture Example M246

| | | | |
|---|---|---|---|
| B(S)-2O-O4 | 4.0 | Cl.p. [°C]: | 113.5 |
| B(S)-2O-O5 | 1.5 | Δn [589 nm, 20°C]: | 0.0870 |
| CC-3-V | 6.0 | $\varepsilon_{\parallel}$ [1 kHz, 20°C]: | 3.2 |
| CC-3-V1 | 12.0 | $\varepsilon_{\perp}$ [1 kHz, 20°C]: | 6.4 |
| CC-4-V1 | 10.0 | Δε [1 kHz, 20°C]: | -3.2 |
| CCD-3-3 | 5.5 | $\gamma_1$ [mPa s, 20°C]: | 218 |
| CC-3-5 | 12.0 | $K_1$ [pN, 20°C]: | 23.8 |
| CCP-3-1 | 12.0 | $K_3$ [pN, 20°C]: | 24.5 |
| CCY-3-O2 | 11.0 | | |
| CCY-5-O2 | 2.4 | | |
| CLOY-3-O2 | 12.1 | | |
| CCOY-3-O(c3) | 10.0 | | |
| Y-4O-O4 | 1.5 | | |
| Σ | 100.0 | | |

wherein CCOY-3-O(c3) is

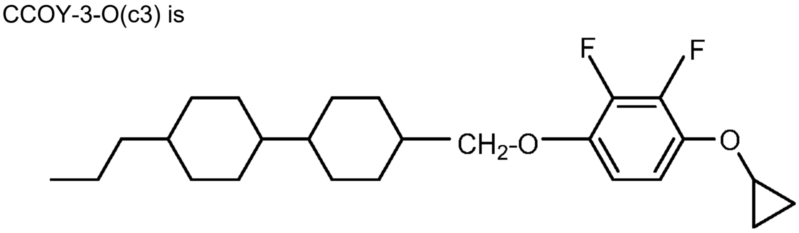

CCOY-3-O(c3)

To the mixture M246 are added 50 ppm of the stabiliser S-2-1-1.

Mixture Example M247

| | | | |
|---|---|---|---|
| B(S)-2O-O4 | 4.0 | Cl.p. [°C]: | 117.5 |
| B(S)-2O-O5 | 1.5 | $\Delta n$ [589 nm, 20°C]: | 0.0912 |
| CC-3-V | 6.0 | $\varepsilon_{\parallel}$ [1 kHz, 20°C]: | 3.2 |
| CC-3-V1 | 12.0 | $\varepsilon_{\perp}$ [1 kHz, 20°C]: | 6.2 |
| CC-4-V1 | 10.0 | $\Delta\varepsilon$ [1 kHz, 20°C]: | -3.0 |
| CCD-3-3 | 5.5 | $\gamma_1$ [mPa s, 20°C]: | 207 |
| CC-3-5 | 12.0 | $K_1$ [pN, 20°C]: | 26.5 |
| CCP-3-1 | 12.0 | $K_3$ [pN, 20°C]: | 26.5 |
| CCY-3-O2 | 11.0 | | |
| CCY-5-O2 | 2.4 | | |
| CLOY-(c5)-O2 | 12.1 | | |
| CLY-3-O2 | 10.0 | | |
| Y-4O-O4 | 1.5 | | |
| Σ | 100.0 | | |

wherein CLOY-(c5)-O2 is

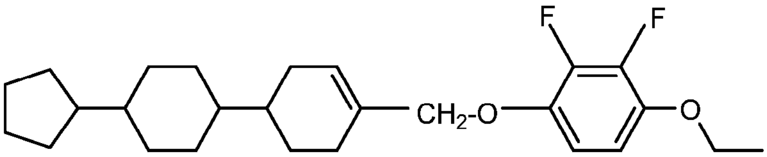

CLOY-(c5)-O2

To the mixture M247 are added 150 ppm of the stabiliser ST-2a-1, 50 ppm of the stabiliser ST-2a-2 and 300 ppm of the stabiliser ST-3a-1.

Mixture Example M248

| | | | |
|---|---|---|---|
| B(S)-2O-O4 | 4.0 | Cl.p. [°C]: | 117.5 |
| B(S)-2O-O5 | 1.5 | $\Delta n$ [589 nm, 20°C]: | 0.0913 |
| CC-3-V | 6.0 | $\varepsilon_{\parallel}$ [1 kHz, 20°C]: | 3.2 |
| CC-3-V1 | 12.0 | $\varepsilon_{\perp}$ [1 kHz, 20°C]: | 6.2 |
| CC-4-V1 | 10.0 | $\Delta\varepsilon$ [1 kHz, 20°C]: | -3.0 |
| CCD-3-3 | 5.5 | $\gamma_1$ [mPa s, 20°C]: | 205 |
| CC-3-5 | 12.0 | $K_1$ [pN, 20°C]: | 27.3 |
| CCP-3-1 | 12.0 | $K_3$ [pN, 20°C]: | 26.4 |
| CCY-3-O2 | 11.0 | | |
| CCY-5-O2 | 2.4 | | |
| CLOY-3-O2 | 12.1 | | |
| CLY-(c5)-O2 | 10.0 | | |
| Y-4O-O4 | 1.5 | | |
| Σ | 100.0 | | |

wherein CLY-(c5)-O2 is

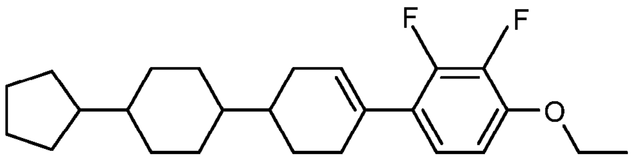

CLY-(c5)-O2

To 99.96 wt% of the mixture M248 are added 0.04 wt% of the stabiliser ST-3b-1.

Mixture Example M249

| | | | |
|---|---|---|---|
| B(S)-2O-O4 | 4.0 | Cl.p. [°C]: | 118 |
| B(S)-2O-O5 | 1.5 | $\Delta n$ [589 nm, 20°C]: | 0.0951 |
| CC-3-V | 6.0 | $\varepsilon_{\parallel}$ [1 kHz, 20°C]: | 3.2 |
| CC-3-V1 | 12.0 | $\varepsilon_{\perp}$ [1 kHz, 20°C]: | 6.2 |
| CC-4-V1 | 10.0 | $\Delta\varepsilon$ [1 kHz, 20°C]: | -3.0 |
| CCD-3-3 | 5.5 | $\gamma_1$ [mPa s, 20°C]: | 207 |
| CC-3-5 | 12.0 | $K_1$ [pN, 20°C]: | 26.3 |
| CPP-3-2V1 | 12.0 | $K_3$ [pN, 20°C]: | 25.4 |
| CCY-3-O2 | 11.0 | | |
| CCY-5-O2 | 2.4 | | |
| CLOY-3-O2 | 12.1 | | |
| CLY-3-O2 | 10.0 | | |
| Y-4O-O4 | 1.5 | | |
| Σ | 100.0 | | |

wherein CPP-3-2V1 is

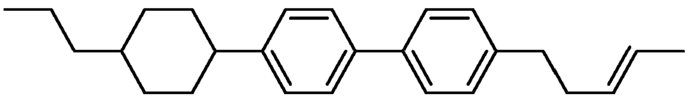

CPP-3-2V1

To the mixture M249 are added 100 ppm of the stabiliser ST-2a-2.

Mixture Example M250

| | | | |
|---|---|---|---|
| B(P)-(c5)1O-O2 | 4.0 | Cl.p. [°C]: | 117 |
| B(S)-2O-O5 | 1.5 | $\Delta n$ [589 nm, 20°C]: | 0.0921 |
| CC-3-V | 6.0 | $\varepsilon_{\parallel}$ [1 kHz, 20°C]: | 3.2 |
| CC-3-V1 | 12.0 | $\varepsilon_{\perp}$ [1 kHz, 20°C]: | 6.0 |
| CC-4-V1 | 10.0 | $\Delta\varepsilon$ [1 kHz, 20°C]: | -2.8 |
| CCD-3-3 | 5.5 | $\gamma_1$ [mPa s, 20°C]: | 198 |
| CC-3-5 | 12.0 | $K_1$ [pN, 20°C]: | 26.3 |
| CCP-3-1 | 12.0 | $K_3$ [pN, 20°C]: | 26.0 |
| CCY-3-O2 | 11.0 | | |
| CCY-5-O2 | 2.4 | | |
| CLOY-3-O2 | 12.1 | | |
| CLY-3-O2 | 10.0 | | |
| Y-4O-O4 | 1.5 | | |
| Σ | 100.0 | | |

To 99.965 wt% of the mixture M250 are added 0.035 wt% of the stabiliser ST-3a-1.

Mixture Example M251

| | | | |
|---|---|---|---|
| B(P)-(c4)1O-O2 | 4.0 | Cl.p. [°C]: | 117 |
| B(S)-2O-O5 | 1.5 | Δn [589 nm, 20°C]: | 0.0920 |
| CC-3-V | 6.0 | $\varepsilon_{\parallel}$ [1 kHz, 20°C]: | 3.2 |
| CC-3-V1 | 12.0 | $\varepsilon_{\perp}$ [1 kHz, 20°C]: | 6.0 |
| CC-4-V1 | 10.0 | Δε [1 kHz, 20°C]: | -2.8 |
| CCD-3-3 | 5.5 | $\gamma_1$ [mPa s, 20°C]: | 199 |
| CC-3-5 | 12.0 | $K_1$ [pN, 20°C]: | 25.8 |
| CCP-3-1 | 12.0 | $K_3$ [pN, 20°C]: | 26.0 |
| CCY-3-O2 | 11.0 | | |
| CCY-5-O2 | 2.4 | | |
| CLOY-3-O2 | 12.1 | | |
| CLY-3-O2 | 10.0 | | |
| Y-4O-O4 | 1.5 | | |
| Σ | 100.0 | | |

To the mixture M251 are added 50 ppm of the stabiliser S-2-1-1.

Mixture Example M252

| | | | |
|---|---|---|---|
| B(A)-(c5)1O-O2 | 4.0 | Cl.p. [°C]: | 116 |
| B(S)-2O-O5 | 1.5 | Δn [589 nm, 20°C]: | 0.0913 |
| CC-3-V | 6.0 | $\varepsilon_{\parallel}$ [1 kHz, 20°C]: | 3.2 |
| CC-3-V1 | 12.0 | $\varepsilon_{\perp}$ [1 kHz, 20°C]: | 6.2 |
| CC-4-V1 | 10.0 | Δε [1 kHz, 20°C]: | -3.0 |
| CCD-3-3 | 5.5 | $\gamma_1$ [mPa s, 20°C]: | 198 |
| CC-3-5 | 12.0 | $K_1$ [pN, 20°C]: | 25.2 |
| CCP-3-1 | 12.0 | $K_3$ [pN, 20°C]: | 26.4 |
| CCY-3-O2 | 11.0 | | |
| CCY-5-O2 | 2.4 | | |
| CLOY-3-O2 | 12.1 | | |
| CLY-3-O2 | 10.0 | | |
| Y-4O-O4 | 1.5 | | |
| Σ | 100.0 | | |

To the mixture M252 are added 150 ppm of the stabiliser ST-2a-1, 50 ppm of the stabiliser ST-2a-2 and 300 ppm of the stabiliser ST-3a-1.

Mixture Example M253

| | | | |
|---|---|---|---|
| B(A)-(c4)1O-O2 | 4.0 | Cl.p. [°C]: | 116 |
| B(S)-2O-O5 | 1.5 | Δn [589 nm, 20°C]: | 0.0913 |
| CC-3-V | 6.0 | $\varepsilon_{\parallel}$ [1 kHz, 20°C]: | 3.2 |

(continued)

| | | | |
|---|---|---|---|
| CC-3-V1 | 12.0 | $\varepsilon_\perp$ [1 kHz, 20°C]: | 6.2 |
| CC-4-V1 | 10.0 | $\Delta\varepsilon$ [1 kHz, 20°C]: | -3.0 |
| CCD-3-3 | 5.5 | $\gamma_1$ [mPa s, 20°C]: | 200 |
| CC-3-5 | 12.0 | $K_1$ [pN, 20°C]: | 24.9 |
| CCP-3-1 | 12.0 | $K_3$ [pN, 20°C]: | 26.3 |
| CCY-3-O2 | 11.0 | | |
| CCY-5-O2 | 2.4 | | |
| CLOY-3-O2 | 12.1 | | |
| CLY-3-O2 | 10.0 | | |
| Y-4O-O4 | 1.5 | | |
| Σ | 100.0 | | |

To 99.96 wt% of the mixture M253 are added 0.04 wt% of the stabiliser ST-3b-1.

Mixture Example M254

| | | | |
|---|---|---|---|
| B(S)-2O-O4 | 4.0 | Cl.p. [°C]: | 116 |
| B(S)-2O-O5 | 1.5 | $\Delta n$ [589 nm, 20°C]: | 0.0925 |
| CC-3-V | 6.0 | $\varepsilon_\parallel$ [1 kHz, 20°C]: | 3.2 |
| CC-3-V1 | 12.0 | $\varepsilon_\perp$ [1 kHz, 20°C]: | 6.3 |
| CC-4-V1 | 10.0 | $\Delta\varepsilon$ [1 kHz, 20°C]: | -3.1 |
| CCD-3-3 | 5.5 | $\gamma_1$ [mPa s, 20°C]: | 190 |
| CC-3-5 | 12.0 | $K_1$ [pN, 20°C]: | 26.0 |
| CCP-3-1 | 12.0 | $K_3$ [pN, 20°C]: | 25.9 |
| CCY-3-O2 | 11.0 | | |
| APY-3-O2 | 2.4 | | |
| CLOY-3-O2 | 12.1 | | |
| CLY-3-O2 | 10.0 | | |
| Y-4O-O4 | 1.5 | | |
| Σ | 100.0 | | |

To the mixture M254 are added 100 ppm of the stabiliser ST-2a-2.

Mixture Example M255

| | | | |
|---|---|---|---|
| B(S)-2O-O4 | 4.0 | Cl.p. [°C]: | 115.5 |
| B(S)-2O-O5 | 1.5 | $\Delta n$ [589 nm, 20°C]: | 0.0901 |
| CC-3-V | 6.0 | $\varepsilon_\parallel$ [1 kHz, 20°C]: | 3.2 |
| CC-3-V1 | 12.0 | $\varepsilon_\perp$ [1 kHz, 20°C]: | 6.3 |
| CC-4-V1 | 10.0 | $\Delta\varepsilon$ [1 kHz, 20°C]: | -3.1 |
| CCD-3-3 | 5.5 | $\gamma_1$ [mPa s, 20°C]: | 193 |
| CC-3-5 | 12.0 | $K_1$ [pN, 20°C]: | 25.9 |
| CCP-3-1 | 12.0 | $K_3$ [pN, 20°C]: | 26.0 |
| CCY-3-O2 | 11.0 | | |
| CAIY-3-O2 | 2.4 | | |
| CLOY-3-O2 | 12.1 | | |
| CLY-3-O2 | 10.0 | | |

(continued)

| | |
|---|---|
| Y-4O-O4 | 1.5 |
| Σ | 100.0 |

To 99.965 wt% of the mixture M255 are added 0.035 wt% of the stabiliser ST-3a-1.

Mixture Example M256

| | | | |
|---|---|---|---|
| B(S)-1V1O-O1(c5) | 4.0 | Cl.p. [°C]: | 116.5 |
| B(S)-2O-O5 | 1.5 | Δn [589 nm, 20°C]: | 0.0909 |
| CC-3-V | 6.0 | $\varepsilon_{\parallel}$ [1 kHz, 20°C]: | 3.2 |
| CC-3-V1 | 12.0 | $\varepsilon_{\perp}$ [1 kHz, 20°C]: | 6.2 |
| CC-4-V1 | 10.0 | Δε [1 kHz, 20°C]: | -3.0 |
| CCD-3-3 | 5.5 | $\gamma_1$ [mPa s, 20°C]: | 199 |
| CC-3-5 | 12.0 | $K_1$ [pN, 20°C]: | 26.4 |
| CCP-3-1 | 12.0 | $K_3$ [pN, 20°C]: | 26.0 |
| CCY-3-O2 | | | 11.0 |
| CCY-5-O2 | | | 2.4 |
| CLOY-3-O2 | | | 12.1 |
| CLY-3-O2 | | | 10.0 |
| Y-4O-O4 | | | 1.5 |
| Σ | | | 100.0 |

To the mixture M256 are added 50 ppm of the stabiliser S-2-1-1.

Mixture Example M257

| | | | |
|---|---|---|---|
| B(S)-2O-O4 | 4.0 | Cl.p. [°C]: | 114 |
| B(S)-2O-O5 | 1.5 | Δn [589 nm, 20°C]: | 0.0904 |
| CC-3-V | 6.0 | $\varepsilon_{\parallel}$ [1 kHz, 20°C]: | 3.2 |
| CC-3-V1 | 12.0 | $\varepsilon_{\perp}$ [1 kHz, 20°C]: | 6.3 |
| CC-4-V1 | 10.0 | Δε [1 kHz, 20°C]: | -3.1 |
| CCD-3-3 | 5.5 | $\gamma_1$ [mPa s, 20°C]: | 196 |
| CC-3-5 | 12.0 | $K_1$ [pN, 20°C]: | 26.6 |
| CCP-3-1 | 12.0 | $K_3$ [pN, 20°C]: | 26.7 |
| CCEY-3-O2 | 11.0 | | |
| CCY-5-O2 | 2.4 | | |
| CLOY-3-O2 | 12.1 | | |
| CLY-3-O2 | 10.0 | | |
| Y-4O-O4 | 1.5 | | |
| Σ | 100.0 | | |

To the mixture M257 are added 150 ppm of the stabiliser ST-2a-1, 50 ppm of the stabiliser ST-2a-2 and 300 ppm of the stabiliser ST-3a-1.

Mixture Example M258

| | | | |
|---|---|---|---|
| B(S)-2O-O4 | 4.0 | Cl.p. [°C]: | 119 |
| B(S)-2O-O5 | 1.5 | $\Delta n$ [589 nm, 20°C]: | 0.0916 |
| CC-3-V | 6.0 | $\varepsilon_{\parallel}$ [1 kHz, 20°C]: | 3.2 |
| CC-3-V1 | 12.0 | $\varepsilon_{\perp}$ [1 kHz, 20°C]: | 6.2 |
| CC-4-V1 | 10.0 | $\Delta\varepsilon$ [1 kHz, 20°C]: | -3.0 |
| CCD-3-3 | 5.5 | $\gamma_1$ [mPa s, 20°C]: | 199 |
| CC-3-5 | 12.0 | $K_1$ [pN, 20°C]: | 27.1 |
| CCP-3-1 | 12.0 | $K_3$ [pN, 20°C]: | 27.1 |
| CCY-3-O2 | 11.0 | | |
| CCY-5-O2 | 2.4 | | |
| CLOY-3-O2 | 12.1 | | |
| CLY-3-O2 | 10.0 | | |
| CEY-3-O2 | 1.5 | | |
| Σ | 100.0 | | |

To 99.96 wt% of the mixture M258 are added 0.04 wt% of the stabiliser ST-3b-1.

Mixture Example M259

| | | | |
|---|---|---|---|
| B(S)-2O-O4 | 4.0 | Cl.p. [°C]: | 118 |
| B(S)-2O-O5 | 1.5 | $\Delta n$ [589 nm, 20°C]: | 0.0920 |
| CC-3-V | 6.0 | $\varepsilon_{\parallel}$ [1 kHz, 20°C]: | 3.2 |
| CC-3-V1 | 12.0 | $\varepsilon_{\perp}$ [1 kHz, 20°C]: | 6.0 |
| CC-4-V1 | 10.0 | $\Delta\varepsilon$ [1 kHz, 20°C]: | -2.8 |
| CCD-3-3 | 5.5 | $\gamma_1$ [mPa s, 20°C]: | 191 |
| CC-3-5 | 12.0 | $K_1$ [pN, 20°C]: | 26.6 |
| CCP-3-1 | 12.0 | $K_3$ [pN, 20°C]: | 26.2 |
| CCY-3-O2 | 11.0 | | |
| CLP-3-O1 | 2.4 | | |
| CLOY-3-O2 | 12.1 | | |
| CLY-3-O2 | 10.0 | | |
| Y-4O-O4 | 1.5 | | |
| Σ | 100.0 | | |

To 99.965 wt% of the mixture M259 are added 0.035 wt% of the stabiliser ST-3a-1.

Mixture Example M260

| | | | |
|---|---|---|---|
| B(S)-2O-O4 | 4.0 | Cl.p. [°C]: | 119 |
| B(S)-2O-O5 | 1.5 | $\Delta n$ [589 nm, 20°C]: | 0.0917 |
| CC-3-V | 6.0 | $\varepsilon_{\parallel}$ [1 kHz, 20°C]: | 3.2 |
| CC-3-V1 | 12.0 | $\varepsilon_{\perp}$ [1 kHz, 20°C]: | 6.3 |
| CC-4-V1 | 10.0 | $\Delta\varepsilon$ [1 kHz, 20°C]: | -3.1 |
| CCD-3-3 | 5.5 | $\gamma_1$ [mPa s, 20°C]: | 200 |
| CC-3-5 | 12.0 | $K_1$ [pN, 20°C]: | 27.1 |
| CCP-3-1 | 12.0 | $K_3$ [pN, 20°C]: | 27.0 |
| CCY-3-O2 | 11.0 | | |

(continued)

| | |
|---|---|
| CCY-5-O2 | 2.4 |
| CLOY-3-O2 | 12.1 |
| CLY-3-O2 | 10.0 |
| COY-3-O2 | 1.5 |
| Σ | 100.0 |

To the mixture M260 are added 100 ppm of the stabiliser ST-2a-2.

Mixture Example M261

| | | | |
|---|---|---|---|
| B(S)-2O-O4 | 4.0 | Cl.p. [°C]: | 116.5 |
| B(S)-4O-O1(c5en) | 1.5 | Δn [589 nm, 20°C]: | 0.0905 |
| CC-3-V | 6.0 | $\varepsilon_{\parallel}$ [1 kHz, 20°C]: | 3.2 |
| CC-3-V1 | 12.0 | $\varepsilon_{\perp}$ [1 kHz, 20°C]: | 6.2 |
| CC-4-V1 | 10.0 | Δε [1 kHz, 20°C]: | -3.0 |
| CCD-3-3 | 5.5 | $\gamma_1$ [mPa s, 20°C]: | 195 |
| CC-3-5 | 12.0 | $K_1$ [pN, 20°C]: | 26.1 |
| CCP-3-1 | 12.0 | $K_3$ [pN, 20°C]: | 25.9 |
| CCY-3-O2 | 11.0 | | |
| CCY-5-O2 | 2.4 | | |
| CLOY-3-O2 | 12.1 | | |
| CLY-3-O2 | 10.0 | | |
| Y-4O-O4 | 1.5 | | |
| Σ | 100.0 | | |

wherein B(S)-4O-O1(c5en) is

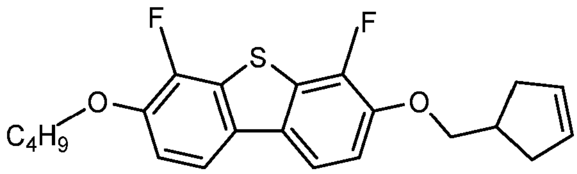

B(S)-4O-O1(c5en)

To the mixture M261 are added 150 ppm of the stabiliser ST-2a-1, 50 ppm of the stabiliser ST-2a-2 and 300 ppm of the stabiliser ST-3a-1.

Mixture Example M262

| | | | |
|---|---|---|---|
| B(S)-2O-O4 | 4.0 | Cl.p. [°C]: | 119 |
| B(S)-2O-O5 | 1.5 | Δn [589 nm, 20°C]: | 0.0930 |
| CC-3-V | 6.0 | $\varepsilon_{\parallel}$ [1 kHz, 20°C]: | 3.2 |
| CC-3-V1 | 12.0 | $\varepsilon_{\perp}$ [1 kHz, 20°C]: | 6.2 |
| CC-4-V1 | 10.0 | Δε [1 kHz, 20°C]: | -3.0 |
| CCD-3-3 | 5.5 | $\gamma_1$ [mPa s, 20°C]: | 199 |
| CC-3-5 | 12.0 | $K_1$ [pN, 20°C]: | 27.0 |
| CCP-3-1 | 12.0 | $K_3$ [pN, 20°C]: | 27.0 |
| CCY-3-O2 | 11.0 | | |
| CCY-5-O2 | 2.4 | | |

(continued)

| | |
|---|---|
| CLOY-3-O2 | 12.1 |
| CLY-3-O2 | 10.0 |
| PY-1-O2 | 1.5 |
| Σ | 100.0 |

To the mixture M262 are added 50 ppm of the stabiliser S-2-1-1.

Mixture Example M263

| | | | |
|---|---|---|---|
| B(S)-2O-O4 | 4.0 | Cl.p. [°C]: | 119 |
| B(S)-2O-O5 | 1.5 | Δn [589 nm, 20°C]: | 0.0927 |
| CC-3-V | 6.0 | $\varepsilon_{\parallel}$ [1 kHz, 20°C]: | 3.2 |
| CC-3-V1 | 12.0 | $\varepsilon_{\perp}$ [1 kHz, 20°C]: | 6.2 |
| CC-4-V1 | 10.0 | Δε [1 kHz, 20°C]: | -3.0 |
| CCD-3-3 | 5.5 | $\gamma_1$ [mPa s, 20°C]: | 198 |
| CC-3-5 | 12.0 | $K_1$ [pN, 20°C]: | 26.8 |
| CCP-3-1 | 12.0 | $K_3$ [pN, 20°C]: | 26.8 |
| CCY-3-O2 | 11.0 | | |
| CCY-5-O2 | 2.4 | | |
| CLOY-3-O2 | 12.1 | | |
| CLY-3-O2 | 10.0 | | |
| PY-2-O2 | 1.5 | | |
| Σ | 100.0 | | |

To 99.96 wt% of the mixture M263 are added 0.04 wt% of the stabiliser ST-3b-1.

Mixture Example M264

| | | | |
|---|---|---|---|
| B(S)-2O-O4 | 4.0 | Cl.p. [°C]: | 119 |
| B(S)-2O-O5 | 1.5 | Δn [589 nm, 20°C]: | 0.0928 |
| CC-3-V | 6.0 | $\varepsilon_{\parallel}$ [1 kHz, 20°C]: | 3.2 |
| CC-3-V1 | 12.0 | $\varepsilon_{\perp}$ [1 kHz, 20°C]: | 6.2 |
| CC-4-V1 | 10.0 | Δε [1 kHz, 20°C]: | -3.0 |
| CCD-3-3 | 5.5 | $\gamma_1$ [mPa s, 20°C]: | 200 |
| CC-3-5 | 12.0 | $K_1$ [pN, 20°C]: | 26.9 |
| CCP-3-1 | 12.0 | $K_3$ [pN, 20°C]: | 26.8 |
| CCY-3-O2 | 11.0 | | |
| CCY-5-O2 | 2.4 | | |
| CLOY-3-O2 | 12.1 | | |
| CLY-3-O2 | 10.0 | | |
| Y-4O-O4 | 1.0 | | |
| PGP-5-Naph | 0.5 | | |
| Σ | 100.0 | | |

To 99.965 wt% of the mixture M264 are added 0.035 wt% of the stabiliser ST-3a-1.

Mixture Example M265

| | | | |
|---|---|---|---|
| B(S)-2O-O4 | 4.0 | Cl.p. [°C]: | 117 |
| B(S)-2O-O5 | 1.5 | $\Delta n$ [589 nm, 20°C]: | 0.0951 |
| CC-3-V | 6.0 | $\varepsilon_{\parallel}$ [1 kHz, 20°C]: | 3.2 |
| CC-3-V1 | 12.0 | $\varepsilon_{\perp}$ [1 kHz, 20°C]: | 6.2 |
| CC-4-V1 | 10.0 | $\Delta\varepsilon$ [1 kHz, 20°C]: | -3.0 |
| CCD-3-3 | 5.5 | $\gamma_1$ [mPa s, 20°C]: | 189 |
| CC-3-5 | 12.0 | $K_1$ [pN, 20°C]: | 26.5 |
| CCP-3-1 | 12.0 | $K_3$ [pN, 20°C]: | 26.2 |
| CCY-3-O2 | 11.0 | | |
| PPY-3-O2 | 2.4 | | |
| CLOY-3-O2 | 12.1 | | |
| CLY-3-O2 | 10.0 | | |
| Y-4O-O4 | 1.5 | | |
| Σ | 100.0 | | |

To the mixture M265 are added 100 ppm of the stabiliser ST-8-1.

Mixture Example M266

| | | | |
|---|---|---|---|
| B(S)-2O-O4 | 4.0 | Cl.p. [°C]: | 77 |
| B(S)-2O-O5 | 4.0 | $\Delta n$ [589 nm, 20°C]: | 0.0989 |
| B(S)-2O-O6 | 3.5 | $\varepsilon_{\parallel}$ [1 kHz, 20°C]: | 3.5 |
| CC-3-V | 45.25 | $\varepsilon_{\perp}$ [1 kHz, 20°C]: | 6.8 |
| CC-3-V1 | 4.25 | $\Delta\varepsilon$ [1 kHz, 20°C]: | -3.3 |
| CLY-3-O3 | 4.0 | $\gamma_1$ [mPa s, 20°C]: | 83 |
| CLY-5-O2 | 5.0 | $K_1$ [pN, 20°C]: | 14.3 |
| CPY-2-O2 | 8.5 | $K_3$ [pN, 20°C]: | 14.4 |
| CPY-3-O2 | 9.0 | | |
| CY-3-O2 | 1.25 | | |
| CY-3-O4 | 6.25 | | |
| B(C)-4O-O4 | 3.25 | | |
| CCD-3-3 | 1.75 | | |
| Σ | 100.0 | | |

To the mixture M266 are added 150 ppm of the stabiliser ST-3a-1.

## Claims

1. A liquid crystal medium comprising one or more compounds of the formula I

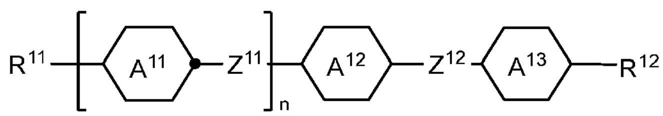

I

in which

$R^{11}$ and $R^{12}$ identically or differently, denote H, straight chain alkyl or alkoxy having 1 to 15 C atoms, straight chain alkenyl or alkenyloxy having 2 to 15 C atoms or branched alkyl, alkoxy, alkenyl, alkenyloxy each having 3 to 15 C atoms, where one or more $CH_2$ groups in
these radicals may each be replaced, independently of one another, by

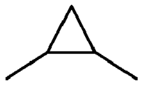 ,

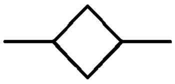 , 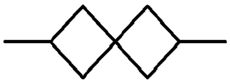 , 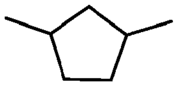 , 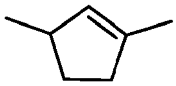 , 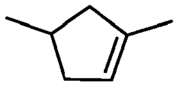 ,

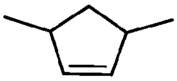

-CH=CH-, -C≡C-, $-CF_2O-$, $-OCF_2-$, -O-, -CO-O- or -O-CO- in such a way that O atoms are not linked directly to one another, and in which one or more H atoms may be replaced by halogen,
n denotes 0, 1, or 2,

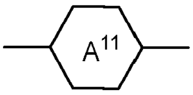 , 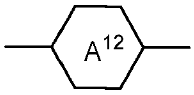 , and 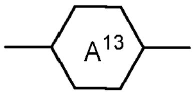

each independently denote a group selected from the following formulae:

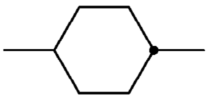 , 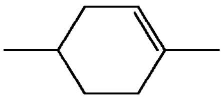 , 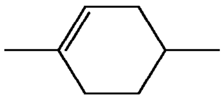 , 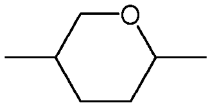 ,

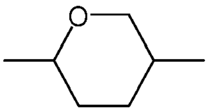 , 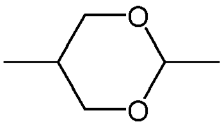 , 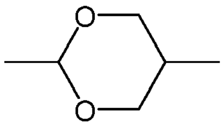 , 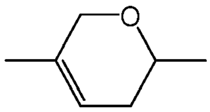 ,

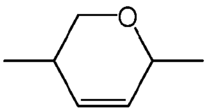

wherein at least one of

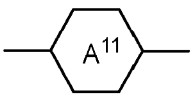 , 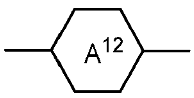 , and 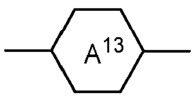

is

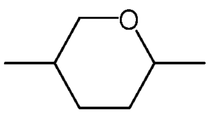 , or 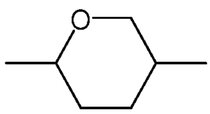 ,

or

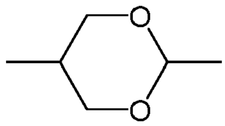, or 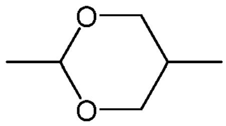,

$Z^{11}$ and $Z^{12}$ each independently denote a single bond, $-CH_2CH_2-$, $-CH_2-$, $-OCH_2-$, $-CH_2O-$, - O-, -CO-O-, -O-CO-, $-CF_2O-$, $-OCF_2-$, -CH=CH-, -CF=CF-, or -C≡C-,
in a case where n is 2, the two

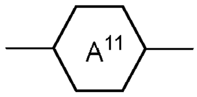

may be the same as or different from each other, and in a case where n is 2, the two $Z^{11}$ may be the same as or different from each other.

2. The liquid crystal medium according to claim 1, wherein the medium comprises one or more compounds selected from the group of compounds of the formulae IIA, IIB, IIC, IID, IIE, and IIF,

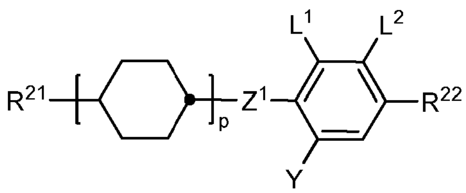
IIA

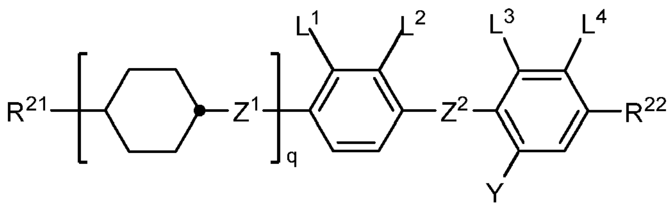
IIB

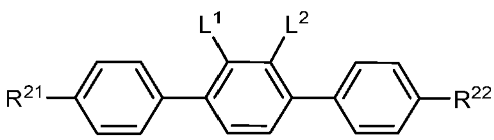
IIC

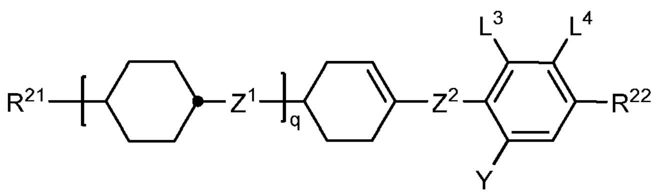
IID

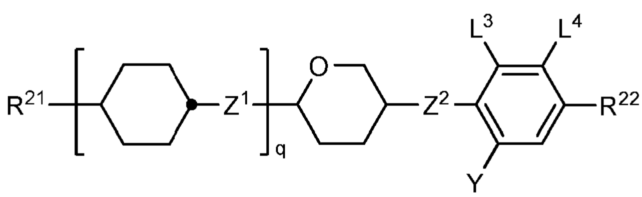
IIE

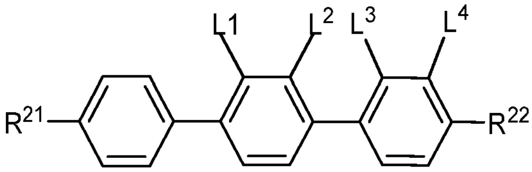

IIF

in which the individual radicals, on each occurrence identically or differently, and each, independently of one another, have the following meaning:

$R^{21}$, $R^{22}$ each independently denote H, an alkyl, alkoxy or alkenyl radical having up to 15 C atoms which is unsubstituted or monosubstituted by F, Cl, CN or $CF_3$ and where, in addition, one or more $CH_2$ groups in these radicals may be replaced by -O-, -S-,-C≡C-, $-CF_2O-$, - $OCF_2-$, -OC-O-, -O-CO-,

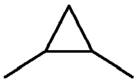 , 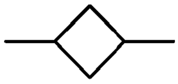 , 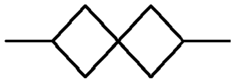 , 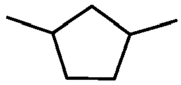 ,

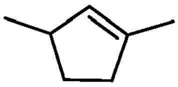 , 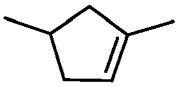 , 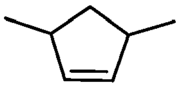 ,

in such a way that O- and/or S-atoms are not linked directly to one another,
$L^1$ to $L^4$ each independently denote H, F, Cl, $CF_3$ or $CHF_2$, wherein at least two of $L^1$ to $L^4$ denote F, Cl, $CF_3$ or $CHF_2$,
Y denotes H, F, Cl, $CF_3$, $CHF_2$ or $CH_3$,
$Z^1$, $Z^2$ each independently denote a single bond, $-CH_2CH_2-$, -CH=CH-, $-CF_2O-$, $-OCF_2-$, - $CH_2O-$, $-OCH_2-$, -COO-, -OCO-, $-C_2F_4-$, -CF=CF-, $-CH=CHCH_2O$,
p denotes 0, 1 or 2, and
q denotes 0 or 1,
wherein formula IIC and formula IIF are not identical.

**3.** The liquid crystal medium according to claim 1 or 2, wherein the medium comprises one, two or more compounds selected from the group of compounds of formula III

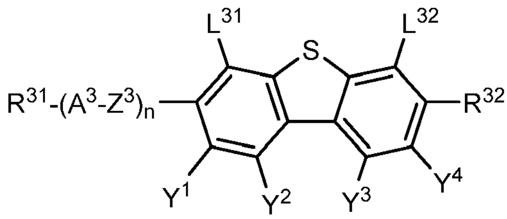

III

and/or formula IIIA

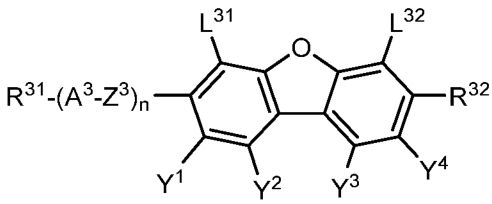

IIIA

and/or formula BC

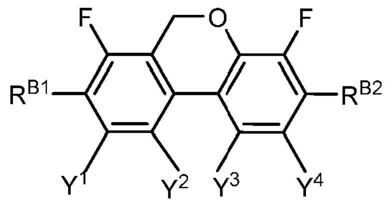

BC

and/or formula PH-1

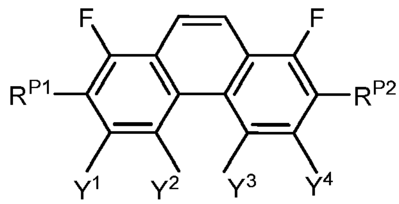

PH-1

in which

$R^{31}$, $R^{32}$, $R^{B1}$, $R^{B2}$, $R^{P1}$, and $R^{P2}$ each, independently of one another, denote H, an alkyl or alkoxy radical having 1 to 15 C atoms , where one or more $-CH_2-$ groups in these radicals may each be replaced, independently of one another, by

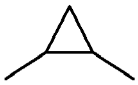 , 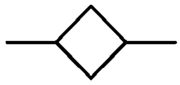 ,

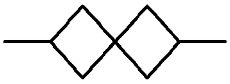 , 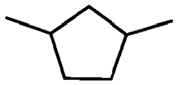 , 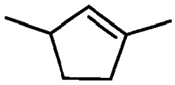 , 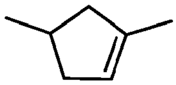 , 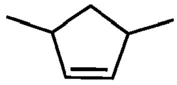 ,

-C≡C-, $-CF_2O-$, $-OCF_2-$, -CH=CH-, by -O-, -CO-O- or -O-CO- in such a way that O atoms are not linked directly to one another, and in which one or more H atoms may be replaced by halogen,
$A^3$ on each occurrence, independently of one another, denotes

a) a 1,4-cyclohexylene or 1,4-cyclohexenylene radical, in which one or two non-adjacent $CH_2$ groups may be replaced by -O- or -S-,
b) a 1,4-phenylene radical, in which one or two CH groups may be replaced by N, or
c) a radical selected from the group consisting of spiro[3.3]heptane-2,6-diyl, piperidine-1,4-diyl, 1,4-bicyclo [2.2.2]octylene, naphthalene-2,6-diyl, decahydronaphthalene-2,6-diyl, 1,2,3,4-tetrahydronaphthalene-2,6-diyl, phenanthrene-2,7-diyl and fluorene-2,7-diyl,

n denotes 0, 1 or 2,
$Z^3$ on each occurrence independently of one another denotes -CO-O-, -O-CO-, $-CF_2O-$ , - $OCF_2-$, $-CH_2O-$, $-OCH_2-$, $-CH_2-$, $-CH_2CH_2-$, $-(CH_2)_4-$, $-CH=CH-CH_2O-$, $-C_2F_4-$, $-CH_2CF_2-$, - $CF_2CH_2$ -, -CF=CF-, -CH=CF-, -CF=CH-, -CH=CH-, -C≡C- or a single bond,
$L^{31}$ and $L^{32}$, each, independently of one another, denote F, Cl, $CF_3$ or $CHF_2$, and
$Y^1$, $Y^2$, $Y^3$, $Y^4$, each, independently of one another, denote H, F, Cl, $CF_3$, $CHF_2$, $CH_3$ or $OCH_3$, wherein H can be replaced by Deuterium.

**4.** The liquid crystal medium according to one or more of claims 1 to 3, wherein the medium comprises one or more compounds selected from the group of compounds of the formulae III-1, III-6, and/or IIIA-1

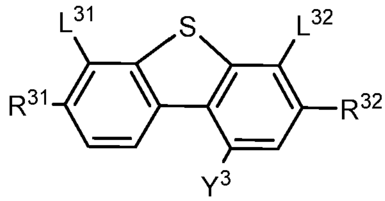

III-1

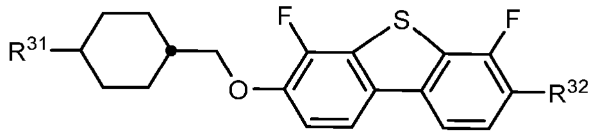

III-6

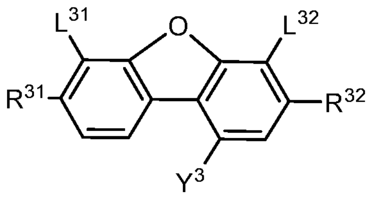

IIIA-1

in which the occurring groups have the same meanings as given under formula III and formula IIIA.

**5.** The liquid crystal medium according to one or more of claims 1 to 4, wherein the medium comprises one or more compounds of the formula IV,

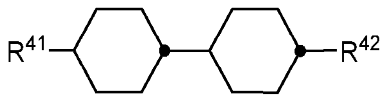

IV

in which

$R^{41}$ denotes an unsubstituted alkyl radical having 1 to 7 C atoms where, one or more $-CH_2$-groups in these radicals may each be replaced, independently of one another, by

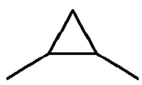

, 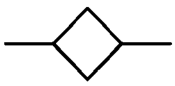 , 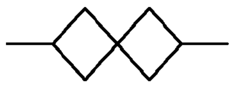 , 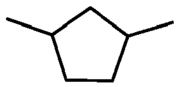 , 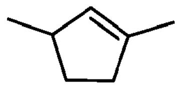 , 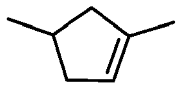 ,

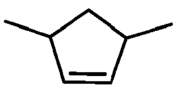 ,

-C≡C-, $-CF_2O-$, $-OCF_2-$, -CH=CH-, by -O-, -CO-O- or -O-CO- in such a way that O atoms are not linked directly to one another, and in which one or more H atoms may be replaced by halogen,
or an unsubstituted alkenyl radical having 2 to 7 C atoms,
$R^{42}$ denotes an unsubstituted alkyl radical having 1 to 7 C atoms, or cyclic alkyl having 3 to 6 C atoms, or an unsubstituted alkoxy radical having 1 to 6 C atoms, an unsubstituted alkenyl radical having 2 to 7 C atoms.

**6.** The liquid crystal medium according to one or more of claims 1 to 5, wherein the medium comprises one or more compounds of the formula IVa,

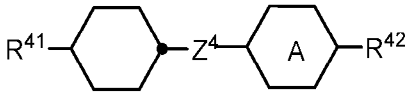

IVa

in which

$R^{41}$ and $R^{42}$ each, independently of one another, denote a straight-chain alkyl, alkoxy, alkenyl, alkoxyalkyl or alkoxy radical having up to 12 C atoms, or cyclic alkyl having 3 to 6 C atoms,

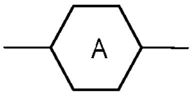

denotes

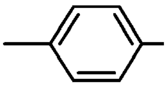

,

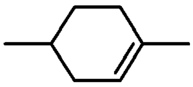

,

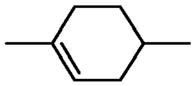

,

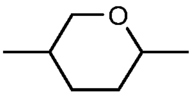

or

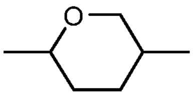

,

$Z^4$ denotes a single bond, $-CH_2CH_2-$, -CH=CH-, $-CF_2O-$, $-OCF_2-$, $-CH_2O-$, $-OCH_2-$, -COO-, - OCO-, $-C_2F_4-$, $-C_4H_8-$ or -CF=CF-.

**7.** The liquid crystal medium according to one or more of claims 1 to 6, wherein the medium comprises one or more compounds of the formula V

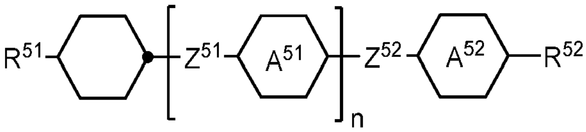

V

in which

$R^{51}$ and $R^{52}$ independently of one another, denote H, an alkyl, alkoxy or alkenyl radical having up to 15 C atoms which is unsubstituted, monosubstituted by F, Cl, CN or $CF_3$ or at least monosubstituted by halogen, where, in addition, one or more $CH_2$ groups in these radicals may be replaced by -O-, -S-, -C≡C-, $-CF_2O-$, $-OCF_2-$, -OC-O-, -O-CO-,

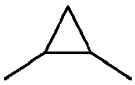

,

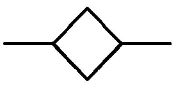

,

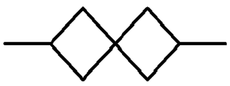

,

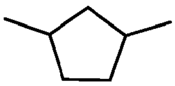

,

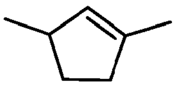

,

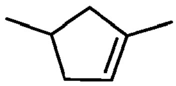

,

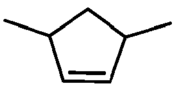

,

in such a way that O atoms are not linked directly to one another,

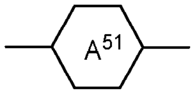 and 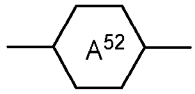 ,

identically or differently, denote

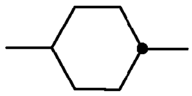 ,

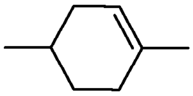 , 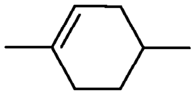 , 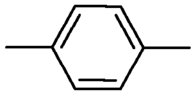 , 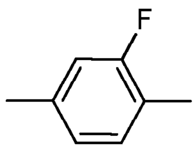 or 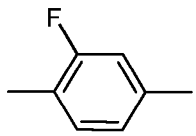 ,

$Z^{51}$, $Z^{52}$ each, independently of one another, denote $-CH_2-CH_2-$, $-CH_2-O-$, -CH=CH-, -C≡C-, -COO- or a single bond, and
n is 1 or 2,
where the compounds of the formula CL are excluded.

**8.** The liquid crystal medium according to any one of claims 1 to 7, wherein the medium comprises one or more compounds of the formulae VI-1 to VI-21.

**9.** The liquid crystal medium according to any one of claims 1 to 8, wherein the medium comprises one or more compounds of the formulae VII-1 to VII-9.

**10.** The liquid crystal medium according to one or more of claims 1 to 9, wherein the medium comprises one or more compounds of the formulae CR and PH-2.

**11.** The liquid crystal medium according to one or more of claims 1 to 10, wherein the medium comprises one or more compounds selected from the following group of compounds:

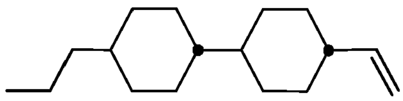

CC-3-V

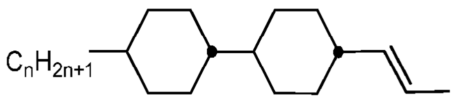

CC-n-V1, where n is 3, 4, or 5

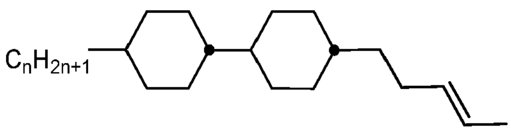

CC-n-2V1, where n is 1, 2, or 3;

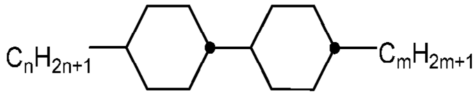

CC-n-m, where n is 2 or 3, m is 4 or 5

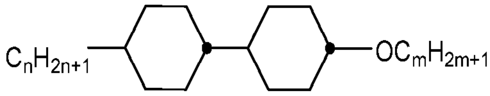

CC-n-Om, where n and m independently are 2 or 3

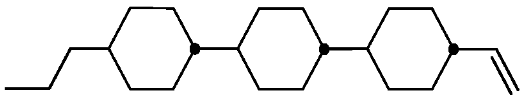

CCC-3-V

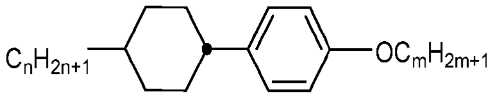

CP-n-Om, where n and m independently are 2 or 3

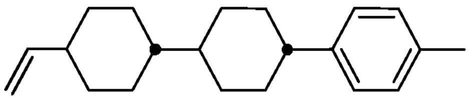

CCP-V-1

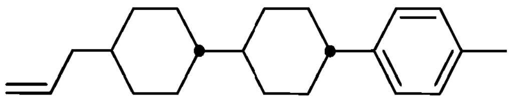

CCP-V1-1

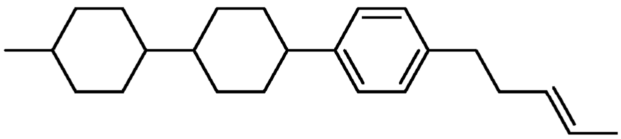

CCP-1-2V1

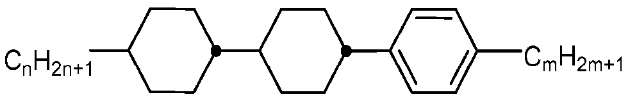

CCP-n-m, where n is 2 or 3, m is 1, 2, or 3

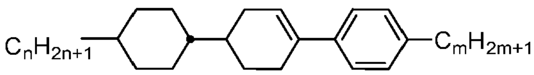

CLP-n-m, where n and m independently are 1, 2, 3, 4 or 5

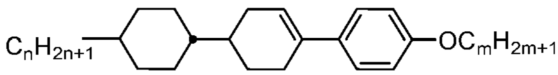

CLP-n-Om, where n and m independently are 1, 2, 3, 4 or 5

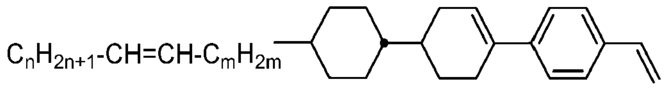

CLP-nVm-V, where n and m independently are 1, 2, 3, 4 or 5

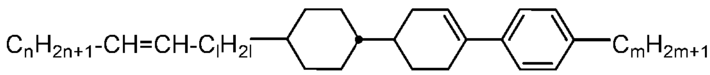

CLP-nVl-m, where n, l and m independently are 1, 2, 3, 4 or 5.

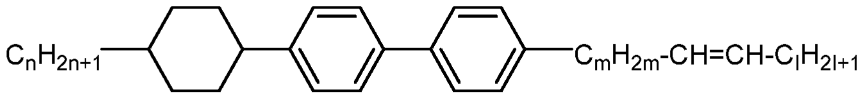

CPP-n-mVl, where n, l and m independently are 1, 2, 3, 4 or 5.

**12.** The liquid crystal medium according to one or more of claims 1 to 11, wherein the medium comprises one or more compounds selected from the following group of compounds:

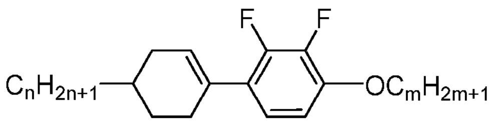

LY-n-Om, where n and m independently are 2 or 3

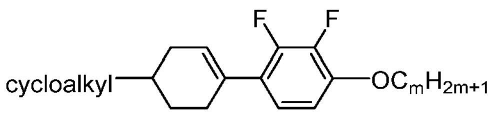

LY-cycloalkyl-Om, where cycloalkyl is cyclopropyl, cyclobutyl, or cyclopentyl, m is 2 or 3

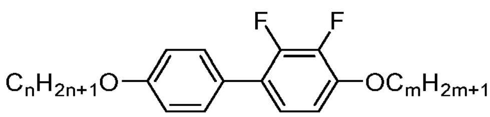

PY-n-Om, where n and m independently are 1, 2, 3, 4 or 5

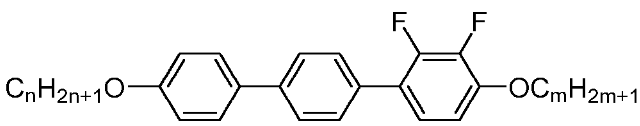

PPY-n-Om, where n and m independently are 1, 2, 3, 4 or 5

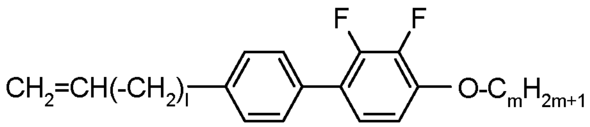

PY-Vl-Om, where I and m independently are 1, 2, 3, or 4.

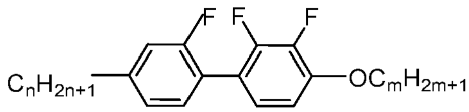

GY-n-Om, where n and m independently are 1, 2, 3, 4 or 5

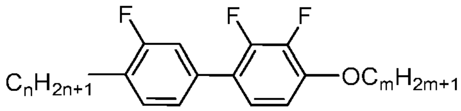

GIY-n-Om, where n and m independently are 1, 2, 3, 4 or 5

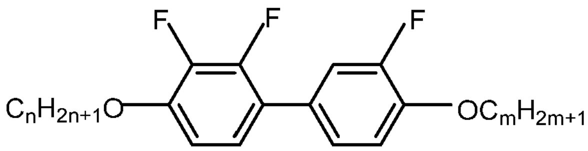

YG-nO-Om, where n and m independently are 1, 2, 3, 4 or 5

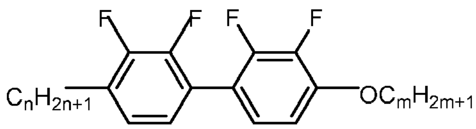

YY-n-Om, where n and m independently are 1, 2, 3, 4 or 5

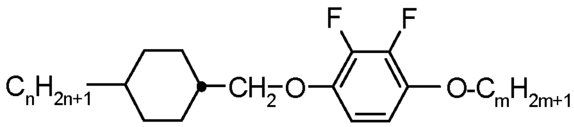

COY-n-Om, where n and m independently are 2 or 3

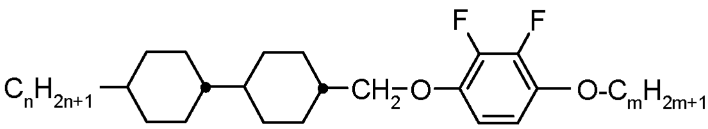

CCOY-n-Om, where n and m independently are 2 or 3

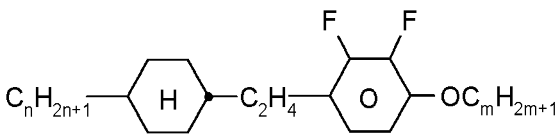

CEY-n-Om, where n and m independently are 2 or 3

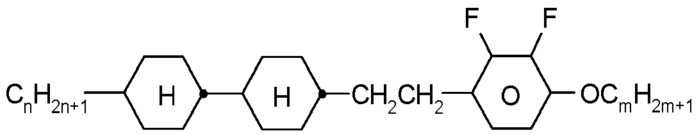

CCEY-n-Om, where n and m independently are 2 or 3

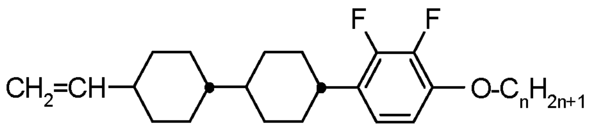

CCY-V-On, where n is 2 or 3

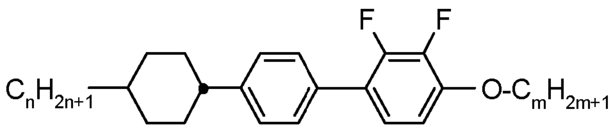

CPY-n-Om, where n and m independently are 2, 3 or 4

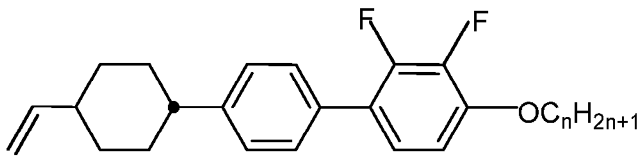

CPY-V-On, where n is 2, 3 or 4

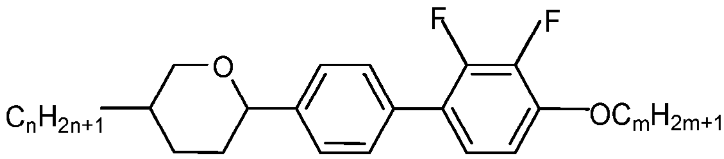

APY-n-Om, where n and m independently are 2, 3 or 4

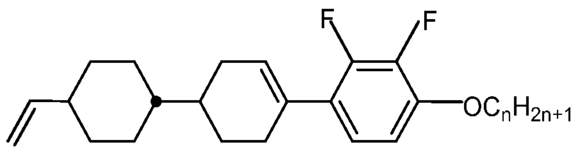

CLY-V-On, where n is 2 or 3

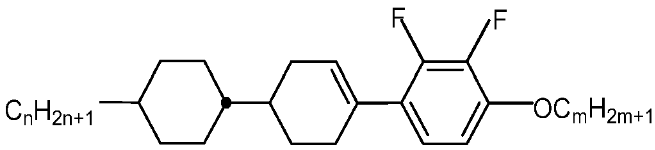

CLY-n-Om, where n is 2, 3, 4, or 5, m is 2, 3, or 4

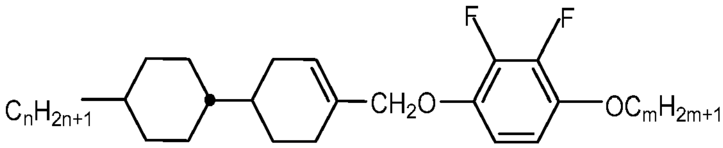

CLOY- n-Om, where n and m independently are 2 or 3

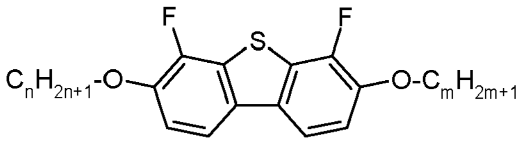

B(S)-nO-Om, where n is 2, 3, or 4, m is 4, 5, or 6

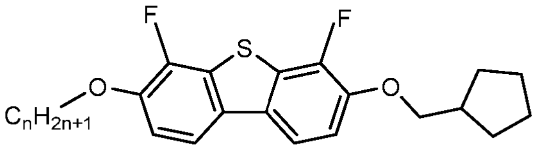

B(S)-nO-O1(c5), where n is 2 or 4

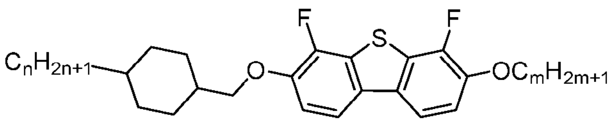

COB(S)-n-Om, where n is 2 or 3, m is 4 or 5.

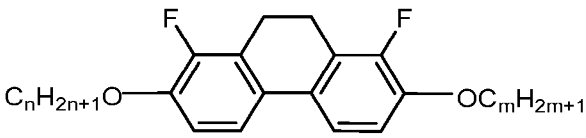

B(C)-nO-Om, where n and m independently are 2, 3, 4, 5.

**13.** The liquid crystal medium according to one or more of claims 1 to 12, wherein the medium additionally comprises one or more additives selected from the group consisting of stabilisers, dyes, chiral dopants, polymerization initiators and self-alignment additives.

**14.** A liquid crystal display comprising the liquid crystal medium according to any one of claims 1 to 13.

**15.** The display according to claim 14, wherein the display is a VA, IPS, FFS, PS-VA, PS-IPS, PS-FFS, UB-FFS or $UV^2A$ display.

**16.** A process of preparing a liquid crystal medium according to any one of claims 1 to 13, comprising the steps of mixing one or more compounds of formula I with one or more compounds of formulae II, III and/or IIIA, and optionally with further LC compounds and/or additives.

Europäisches Patentamt
European Patent Office
Office européen des brevets

# EUROPEAN SEARCH REPORT

Application Number
EP 25 16 2255

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | EP 4 261 267 A1 (MERCK PATENT GMBH [DE]) 18 October 2023 (2023-10-18)<br>* Mixture H50; paragraphs [0092], [0094], [0097], [0244], [0249]; claims; compounds ACC-2-3 * | 1-16<br>1-16 | INV.<br>C09K19/34<br>C09K19/06<br>C09K19/04<br>C09K19/30<br>C09K19/12 |
| X | EP 2 128 149 A1 (CHISSO CORP [JP]; CHISSO PETROCHEMICAL CORP [JP]) 2 December 2009 (2009-12-02)<br>* Composition Example 9; paragraph [0066]; claims; compounds 2-HdhH-3, 3-Hdh2H-2 * | 1,2,5-7, 11-16 | |
| Y | DE 198 18 461 A1 (MERCK PATENT GMBH [DE]) 12 November 1998 (1998-11-12)<br>* formulae I1 to I8, substructures I1a to I1d, I1b1 to I1d4 * | 1-16 | |
| Y | EP 0 732 330 A1 (HOFFMANN LA ROCHE [CH]) 18 September 1996 (1996-09-18)<br>* formulae I-A3, I-B1, I-B2; examples * | 1-16 | TECHNICAL FIELDS SEARCHED (IPC)<br>C09K |

The present search report has been drawn up for all claims

1

| Place of search | Date of completion of the search | Examiner |
|---|---|---|
| The Hague | 27 June 2025 | Schoenhentz, Jérôme |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.....................................................................
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 25 16 2255

This annex lists the patent family members relating to the patent documents cited in the above-mentioned European search report. The members are as contained in the European Patent Office EDP file on
The European Patent Office is in no way liable for these particulars which are merely given for the purpose of information.

27-06-2025

| Patent document cited in search report | Publication date | Patent family member(s) | Publication date |
|---|---|---|---|
| EP 4261267 A1 | 18-10-2023 | CN 116891750 A | 17-10-2023 |
| | | EP 4261267 A1 | 18-10-2023 |
| | | KR 20230145940 A | 18-10-2023 |
| | | TW 202405139 A | 01-02-2024 |
| | | US 2023323209 A1 | 12-10-2023 |
| EP 2128149 A1 | 02-12-2009 | CN 101035779 A | 12-09-2007 |
| | | CN 101560398 A | 21-10-2009 |
| | | EP 1798228 A1 | 20-06-2007 |
| | | EP 2128149 A1 | 02-12-2009 |
| | | JP 4997972 B2 | 15-08-2012 |
| | | JP 5488628 B2 | 14-05-2014 |
| | | JP 2012158593 A | 23-08-2012 |
| | | JP WO2006038522 A1 | 15-05-2008 |
| | | KR 20070074556 A | 12-07-2007 |
| | | KR 20120079486 A | 12-07-2012 |
| | | TW I373515 B | 01-10-2012 |
| | | US 2006071194 A1 | 06-04-2006 |
| | | WO 2006038522 A1 | 13-04-2006 |
| DE 19818461 A1 | 12-11-1998 | NONE | |
| EP 0732330 A1 | 18-09-1996 | EP 0732330 A1 | 18-09-1996 |
| | | HK 1011360 A1 | 09-07-1999 |
| | | JP H08253469 A | 01-10-1996 |
| | | KR 960034195 A | 22-10-1996 |
| | | US 5667721 A | 16-09-1997 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1170626 A2
- US 6861107 B
- US 7169449 B
- US 20040191428 A1
- US 20060066793 A1
- US 20060103804 A1


### Non-patent literature cited in the description


- **S.H. JUNG et al.** *Jpn. J. Appl. Phys.*, 2004, vol. 43 (3), 1028
- **S.H. LEE et al.** *Appl. Phys. Lett.*, 1998, vol. 73 (20), 2882-2883
- **S.H. LEE et al.** *Liquid Crystals*, 2012, vol. 39 (9), 1141-1148
- *Pure Appl. Chem.*, 2001, vol. 73 (5), 888
- **C. TSCHIERSKE** ; **G. PELZL** ; **S. DIELE**. *Angew. Chem.*, 2004, vol. 116, 6340-6368
- Merck Liquid Crystals, Physical Properties of Liquid Crystals. *Merck KGaA*, November 1997